(19) **Europäisches Patentamt / European Patent Office / Office européen des brevets**

(11) **EP 3 921 961 B1**

(12) **EUROPEAN PATENT SPECIFICATION**

(45) Date of publication and mention of the grant of the patent:
**10.06.2026 Bulletin 2026/24**

(21) Application number: **20782741.1**

(22) Date of filing: **02.04.2020**

(51) International Patent Classification (IPC):
*H04J 13/12* (2011.01)    *H04J 13/18* (2011.01)
*H04J 13/16* (2011.01)    *H04B 1/7097* (2011.01)

(52) Cooperative Patent Classification (CPC):
**H04J 13/18; H04B 1/7097; H04J 13/12;**
H04J 2013/165

(86) International application number:
**PCT/CN2020/083025**

(87) International publication number:
**WO 2020/200288 (08.10.2020 Gazette 2020/41)**

(54) **METHOD AND APPARATUS FOR GENERATING AND IMPLEMENTING SPECTRALLY-EFFICIENT ORTHOGONAL CODES FOR WIRELESS COMMUNICATIONS**

VERFAHREN UND VORRICHTUNG ZUR ERZEUGUNG UND IMPLEMENTIERUNG VON SPEKTRAL EFFIZIENTEN ORTHOGONALEN CODES FÜR DRAHTLOSE KOMMUNIKATION

PROCÉDÉ ET APPAREIL POUR GÉNÉRER ET METTRE EN OEUVRE DES CODES ORTHOGONAUX SPECTRALEMENT EFFICACES POUR LES COMMUNICATIONS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2019 US 201916373333**

(43) Date of publication of application:
**15.12.2021 Bulletin 2021/50**

(73) Proprietor: **Huawei Technologies Co., Ltd.**
**Shenzhen, Guangdong 518129 (CN)**

(72) Inventors:
- **HU, Lan**
  **Ottawa, Ontario K2J 4C3 (CA)**
- **KILAMBI, Sai Mohan**
  **Nepean, Ontario K2J 5Y5 (CA)**
- **WESSEL, David Neal**
  **Kanata, Ontario K2W 1C7 (CA)**
- **TONG, Wen**
  **Ottawa, Ontario K2C 4A7 (CA)**

(74) Representative: **Gill Jennings & Every LLP**
**The Broadgate Tower**
**20 Primrose Street**
**London EC2A 2ES (GB)**

(56) References cited:
WO-A2-00/19730    WO-A2-2004/023692
WO-A2-2010/107717    CN-A- 1 356 799
US-A1- 2009 296 666    US-A1- 2010 103 811
US-A1- 2015 063 424    US-A1- 2015 155 878

- VELAZQUEZ-GUTIERREZ JUAN M ET AL: "Sequence Sets in Wireless Communication Systems: A Survey", IEEE COMMUNICATIONS SURVEYS & TUTORIALS, vol. 19, no. 2, 2 June 2017 (2017-06-02), pages 1225 - 1248, XP011651808, DOI: 10.1109/COMST.2016.2639739
- SABBIR AHMED ET AL: "Selection of Spreading Codes for Reduced PAPR in MC-CDMA Systems", IEEE INTERNATIONAL SYMPOSIUM ON PERSONAL, INDOOR AND MOBILE RADIO COMMUNICATIONS. PIMRC, IEEE; PI, XX, 1 September 2007 (2007-09-01), pages 1 - 5, XP031168309, ISBN: 978-1-4244-1143-6

**(Cont. next page)**

- **JING LI ET AL: "Inter-Group Complementary Codes for Interference-Resistant CDMA Wireless Communications", IEEE TRANSACTIONS ON WIRELESS COMMUNICATIONS, IEEE SERVICE CENTER, PISCATAWAY, NJ, US, vol. 7, no. 1, 1 January 2008 (2008-01-01), pages 166 - 174, XP011381108, ISSN: 1536-1276, DOI: 10.1109/ TWC.2008.060414**

- **ZTE ET AL.: "Details on physical layer SR for NB-IoT", 3GPP TSG RAN WG1 MEETING #92 , R1-1801602, 2 March 2018 (2018-03-02), XP051397621, DOI: 20200620161252A**

## EP 3 921 961 B1

**Description**

**FIELD OF THE INVENTION**

The present invention generally relates to the field of wireless communications and, in particular, to a spectrally-efficient orthogonal code generation apparatus and method for wireless communication applications such as, CDMA, LTE, 4G, 5G, *etc.*

**BACKGROUND**

Typically, in multiple access-based wireless communications, numerous user devices transmit signals over a wireless communication channel to a receiver. The transmitted signals are configured to spread across a wide frequency spectrum using orthogonal codes and are superimposed, forming a combined signal that propagates over the wireless channel. Upon receipt, the receiving device performs a separation operation, utilizing the orthogonal codes, on the combined signal to recover one or more individual signals from the combined signal. By separating signals transmitted by different user devices, the different user devices may share the same communication channel without interference.

In general, one or more orthogonal codes may be utilized to provide spread spectrum-based communications, where one or more orthogonal codes are allocated to a user. By virtue of the orthogonality properties of the codes, different users may effectively communicate along the same wireless channel with minimal interference.

While orthogonality-based codes, such as, for example, Walsh-Hadamard Codes, Gold Codes, Kasami Codes, *etc.* codes as well as their generators are well known in the art, these codes and code generators do not consider the spectral bandwidth efficiency of these codes as a factor in code generation criteria. As such, the generated orthogonal codes may prove to be spectrally inefficient in practice, which results in limitations regarding data transmission rates.

The drawback noted may be further exacerbated by certain proposed enhancements to existing orthogonal code generators as well as next-generation orthogonal code generators. Such enhancements and designs suggest, for example, the use of variable length orthogonal codes, quasi orthogonal codes *etc.* Such codes still do not consider spectrum efficiency factors, potentially requiring demanding modifications to existing or next-generation hardware and software processing resources.

WO2010/107717 describes a set of orthogonal functions whose power spectral densities are all rectangular shape.

**SUMMARY**

The present invention is defined by the appended claims. Embodiments and aspects not falling within the scope of the claims are considered useful for understanding the invention. An object of the present disclosure is to provide a spectrally-efficient orthogonal code generation architecture for generating spectrally efficient orthogonal codes. The disclosure presented herein employs a code generation module configured to generate a candidate code group, wherein the candidate code group contains $2^L$ different codes for a given code length L. A frequency response calculation module configured to calculate frequency response of the codes within the candidate code group. A code grouping module configured to divide the codes within the candidate group into a unique frequency code group and a mixed frequency code group, based on frequency response of the codes within the candidate code group. A frequency code searching module configured to search the orthogonal codes within each frequency code group.

In accordance with the invention, the spectrally-efficient orthogonal code generation architecture performs grouping of the codes. For a number of frequency locations N, the codes having same number of frequency locations N and frequency components positioned at same frequency locations are grouped to form the unique frequency code groups. Further one or more code sets are formed within each unique frequency code group, the codes within code sets are orthogonal in nature.

In accordance with the invention, the spectrally-efficient orthogonal code generation architecture performs grouping of the codes. For a number of frequency locations N, the codes having same number of frequency locations N and frequency components positioned at same frequency locations, in addition to the codes having the number of frequency locations less than N with a condition that the positions of all the frequency components of such codes will overlap with some positions of frequency components of codes having N frequency locations are grouped to form the mixed frequency code groups. Further one or more code sets are formed within each unique frequency code group, the codes within code sets are orthogonal in nature.

In accordance with other aspects of the present disclosure, the spectrally-efficient orthogonal code generation architecture generates the codes within code sets that have zero un-shifted cross correlation, minimum value of maximum side lobe, and minimum value of total side lobe.

In accordance with other aspects of the present disclosure, spectrally-efficient orthogonal code generation architecture further generates an orthogonal code of length 2L within a code set by repeating the orthogonal code of length

3

L.

In accordance with the invention, spectrally-efficient orthogonal code generation architecture further stores an identifier information and the corresponding orthogonal code in a database forming a orthogonal code list, wherein the identifier information can be at least one of the following, a number of code sets in the unique frequency code group, a number of codes in a code set, a number of frequency components in each code, a number of overlapped frequency positions, a location of frequency component of each code, a length of each code.

In accordance with the invention, there is provided a method of generating spectrally efficient orthogonal codes. The disclosure presented herein operates to generate a candidate code group, wherein the candidate code group contains $2^L$ different codes for a given code length L and calculates a frequency response of the codes within the candidate code group. The candidate group is divided into two categories of frequency code groups, based on frequency response of the codes within the candidate code group. The frequency code groups are then searched for orthogonal codes.

In accordance with the invention, the method of generating a spectrally-efficient orthogonal code includes grouping of the codes. For a number of frequency locations N, the codes having same number of frequency locations N and frequency components positioned at same frequency locations are grouped to form the unique frequency code groups. Further one or more code sets are formed within each unique frequency code group, the codes within code sets are orthogonal in nature.

In accordance with the invention, the method of generating a spectrally-efficient orthogonal code includes grouping of the codes. For a number of frequency locations N, the codes having same number of frequency locations N and frequency components positioned at same frequency locations, in addition to the codes having the number of frequency locations less than N with a condition that the positions of all the frequency components of such codes will overlap with some positions of frequency components of codes having N frequency locations are grouped to form the mixed frequency code groups. Further one or more code sets are formed within each unique frequency code group, the codes within code sets are orthogonal in nature.

In accordance with other aspects of the present disclosure, the method of generating a spectrally-efficient orthogonal code includes generation of codes within code sets that have zero un-shifted cross correlation, minimum value of maximum side lobe, and minimum value of total side lobe.

In accordance with other aspects of the present disclosure, the method of generating a spectrally-efficient orthogonal code further generates an orthogonal code of length 2L within a code set by repeating the orthogonal code of length L.

In accordance with the invention, the method of generating a spectrally-efficient orthogonal code further stores an identifier information and the corresponding orthogonal code in a database forming a orthogonal code list, wherein the identifier information can be at least one of the following, a number of code sets in the unique frequency code group, a number of codes in a code set, a number of frequency components in each code, a number of overlapped frequency positions, a location of frequency component of each code, a length of each code.

In accordance with other aspects of the present disclosure, there is provided a method for wireless communication system. The disclosure presented herein operates to encode an input signal. The encoded input signal is then spread using a suitable orthogonal code selected from a list of orthogonal codes. The orthogonal codes used for spreading are generated by generating a candidate code group, wherein the candidate code group contains $2^L$ different codes for a given code length L and calculates a frequency response of the codes within the candidate code group. The candidate group is divided into two categories of frequency code groups, based on frequency response of the codes within the candidate code group. The frequency code groups are then searched for orthogonal codes. The spread signal is then modulated and transmitted.

In accordance with other aspects of the present disclosure, the method for wireless communication system includes grouping of codes. For a number of frequency locations N, the codes having same number of frequency locations N and frequency components positioned at same frequency locations are grouped to form the unique frequency code groups. Further one or more code sets are formed within each unique frequency code group, the codes within code sets are orthogonal in nature.

In accordance with other aspects of the present disclosure, the method for wireless communication system includes grouping of codes. For a number of frequency locations N, the codes having same number of frequency locations N and frequency components positioned at same frequency locations, in addition to the codes having the number of frequency locations less than N with a condition that the positions of all the frequency components of such codes will overlap with some positions of frequency components of codes having N frequency locations are grouped to form the mixed frequency code groups. Further one or more code sets are formed within each unique frequency code group, the codes within code sets are orthogonal in nature.

In accordance with other aspects of the present disclosure, the method for wireless communication system further stores an identifier information and the corresponding orthogonal code in a database forming a orthogonal code list, wherein the identifier information can be at least one of the following, a number of code sets in the unique frequency code group, a number of codes in a code set, a number of frequency components in each code, a number of overlapped frequency positions, a location of frequency component of each code, a length of each code.

**In** accordance with other aspects of the present disclosure, a wireless communications system employing a signal encoding module configured to encode a plurality of received analog signals into a single encoded analog composite signal in accordance with a code based upon a set of codes selected from a list ,wherein, a set of values between a pair of round brackets represents the code and the plurality of codes in between a pair of braces represents the set of codes. An analog-to-digital conversion module configured to convert the single encoded analog composite signal into a single encoded digital composite signal. A signal decoding module configured to decode the single encoded digital composite signal into a plurality of digital signals representing the plurality of received analog signals, in accordance with a code based upon a set of codes selected from the code list

## BRIEF DESCRIPTION OF THE FIGURES

The features and advantages of the present disclosure will become apparent from the following detailed description, taken in combination with the appended drawings, in which:

FIG. 1 depicts a functional block diagram of a conventional transmitter architecture used in spread-spectrum based communication system;

FIG. 2 depicts a functional block diagram of a conventional receiver architecture used in spread-spectrum based communication system;

FIG. 3A depicts a high-level functional block diagram of spectrally efficient orthogonal code generation architecture, in accordance with various embodiments of the present disclosure;

FIG. 3B depicts a high-level functional block diagram of a representative code grouping module, in accordance with various embodiments of the present disclosure;

FIG. 3C depicts a high-level functional block diagram of a representative unique frequency code searching module, in accordance with various embodiments of the present disclosure;

FIG. 3D depicts a high-level functional block diagram of a representative mixed frequency code searching module, in accordance with various embodiments of the present disclosure; and

FIG. 4 depicts a functional flow diagram of spectrally efficient orthogonal code generation processing, in accordance with various embodiments of the present disclosure;

FIG. 5 depicts an exemplary high-level functional block diagram of spectrally efficient orthogonal code generation architecture, in accordance with various embodiments of the present disclosure;

FIG. 6 depicts an exemplary high-level functional block diagram of spectrum spreading architecture, in accordance with various embodiments of the present disclosure;

FIG.7 depicts a high-level functional block diagram of a transmitter, in accordance with various embodiments of the present disclosure;

FIG.8 depicts a high-level functional block diagram of a receiver, in accordance with various embodiments of the present disclosure;

FIG.9 depicts a high-level functional block diagram of a wireless receiver, in accordance with various embodiments of the present disclosure.

It is to be understood that throughout the appended drawings and corresponding descriptions, like features are identified by like reference characters. Furthermore, it is also to be understood that the drawings and ensuing descriptions are intended for illustrative purposes only and that such disclosures are not intended to limit the scope of the claims.

## DETAILED DESCRIPTION

As used herein, the term "about" or "approximately" refers to a +/-10% variation from the nominal value. It is to be understood that such a variation is always included in a given value provided herein, whether or not it is specifically referred to.

Unless otherwise defined, all technical and scientific terms used herein have the same meaning as commonly understood by one of ordinary skill in the art to which the described embodiments appertain.

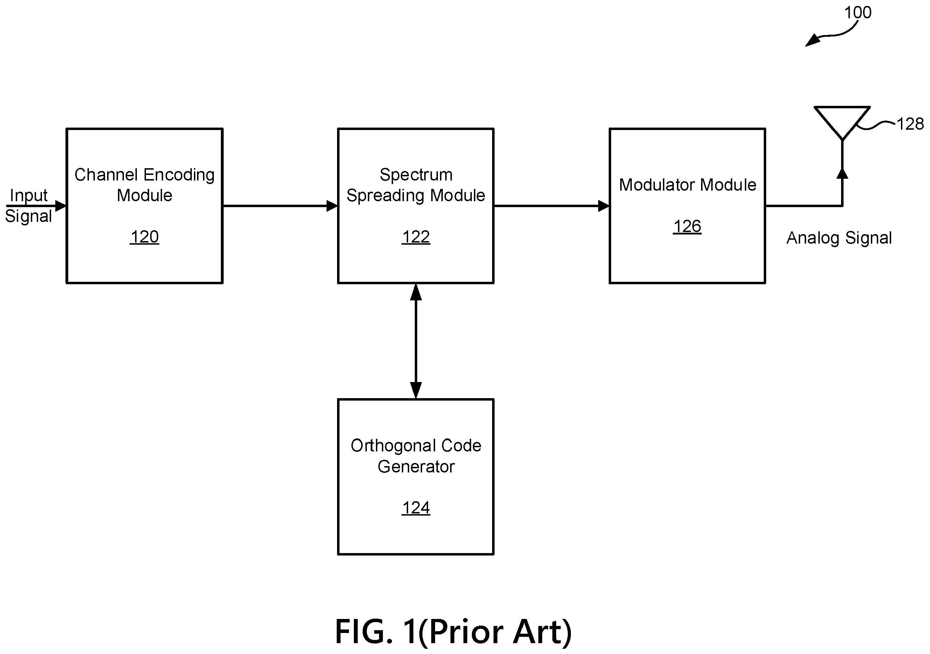

FIG. 1(Prior Art) illustrates a functional block diagram of a conventional transmitter architecture **100** used in a spread-spectrum based communication system directed to processing input signal and transmitting the processed signal over a wireless communication channel to a receiver. The conventional transmitter architecture **100** includes a channel encoding module **120**, a spectrum spreading module **122**, an orthogonal code generator **124**, a modulator module **126** and a transmitter antenna **128**. Other elements may be implemented but not illustrated for purposes of tractability.

As illustrated by FIG. 1, conventional transmitter architecture **100** receives an input signal into channel encoding module **120**. The channel encoding module **120** encodes the input signal and outputs the encoded signal to a spectrum spreading module **122**. The channel encoding module **120** may use any of the existing encoding techniques, such as, for example, but not limited to block codes, convolutional codes, turbo codes etc.

Assuming that the input signal is a digital signal (analog signals may be correspondingly processed), then the input signal may be a stream of symbols. If symbols are expressed in binary form, then each symbol has a bit value of 1 or 0. However, for ease of discussion, symbol values of 1 and -1 are used unless otherwise indicated.

The spectrum spreading module **122** receives the encoded signal from channel encoding module **120** and is configured to spread the spectrum of encoded signal according to an orthogonal code generated by orthogonal code generator **124**. The spreading of spectrum is executed by mixing the encoded signal with an orthogonal code.

The modulator module **126** receives the spread signal from spectrum spreading module **122** and modulates the spread signal onto a carrier signal to output the modulated signal for transmission. An analog signal is thereafter transmitted via a transmitter antenna **128** to the wireless communication channel. The modulator **126** may use any of the existing modulation techniques, such as, for example, but not limited to PSK, FSK, ASK, OOK, QAM etc.

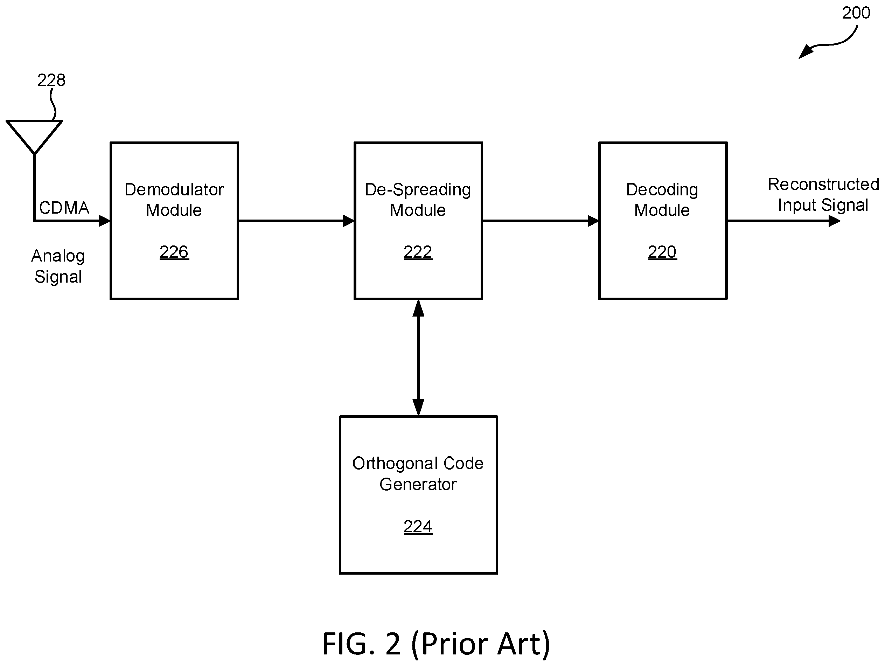

FIG. 2(Prior Art) illustrates a functional block diagram of a conventional receiver architecture **200** used in spread-spectrum based communication system directed to processing received analog signal from transmitter antenna **128,** to reconstruct the input signal. The conventional receiver architecture **200** includes a channel decoding module **220**, a spectrum de-spreading module **222,** an orthogonal code generator **224,** a de-modulator module **226** and a receiver antenna **228**. Other elements may be present but not illustrated for purposes of tractability.

As illustrated by FIG. 2, conventional receiver architecture **200** receives an analog signal by receiver antenna **228** that has been transmitted by transmitter antenna **128**. The demodulator module **226** demodulates the received analog signal. The demodulation of received analog signal is executed by mixing the received analog signal with a suitable carrier signal.

The spectrum de-spreading module **222** receives the demodulated signal from demodulator module **226** and is configured to de-spread the spectrum of demodulated signal according to an orthogonal code generated by orthogonal code generator **224**. The de-spreading of spectrum is carried out for example, by mixing the de-modulated signal with orthogonal code.

The channel decoding module **220** receives the de-spread signal from spectrum de-spreading module **222.** The channel decoding module **220** decode the de-spread signal to reconstruct the input signal. The channel decoding module **220** may use any of the existing decoding techniques such as, for example, but not limited to maximum likelihood decoder, Viterbi decoder etc.

The orthogonal code generator **124, 224** generates orthogonal codes such as Walsh-Hadamard Codes, Gold Codes, Kasami Codes, etc. based on various orthogonal code generation techniques. Each of the orthogonal code generation techniques has limitations to data transmission rate due to the fundamental assumptions related to the algorithms relied upon the generation of codes based only on orthogonality criteria rather than considering spectrum efficiency in conjunction with the orthogonality of generated codes.

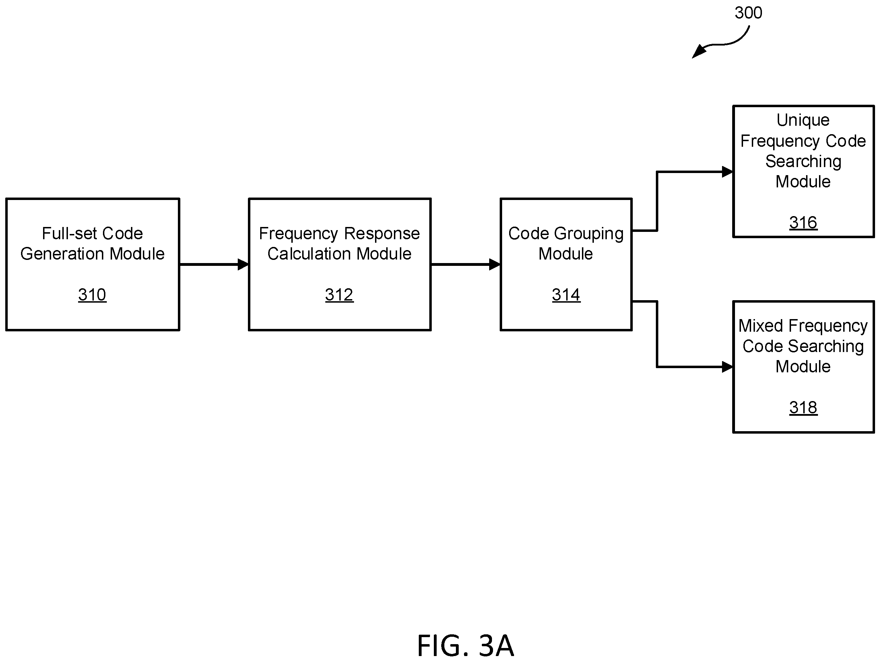

FIG. 3A depicts a functional block diagram of spectrally efficient orthogonal code generation architecture **300,** in accordance with various embodiments of the present disclosure. As shown, orthogonal code generator **300** employs a full-set code generation module **310**, frequency response calculation module **312,** code grouping module **314,** unique frequency code searching module **316,** and mixed frequency code searching module **318.**

As will be understood in view of the ensuing descriptions and, in accordance with various embodiments of the present disclosure, the implementation of frequency response calculation module **312** and code grouping module **314** operate to assist the orthogonal code generator to generate spectrally efficient orthogonal codes, where the generated orthogonal codes may have fully or partially overlapping frequency positions. This allows the use of frequency spectrum more efficiently and thereby, improving the data transmission rate as well.

Moreover, consistent with various embodiments of the present disclosure, it will be appreciated that some or all of the notable elements of spectrally efficient orthogonal code generation architecture **300,** such as, for example, full-set code generation module **310**, frequency response calculation module **312,** code grouping module **314,** unique frequency code searching module **316** and mixed frequency code searching module **318,** may be implemented by software constructs to facilitate integration with existing transmitter and receiver architectures.

Full-Set code generation module **310** receives a request from, such as, for example, a processor or a controller to generate codes of a specific length L. Full-Set code generation module **310** is further configured to generate and supply candidate code group that contains all possible combinations of codes for a given code length L, such as, for example, the total number of possible codes is $2^L$. The candidate code group generated by full-Set code generation module **310** is then supplied to frequency response calculation module **312** for calculation of frequency response of each code in candidate code group.

Frequency response calculation module **312** receives the candidate code group generated by full-Set code generation module **310** and calculates frequency response of every code present in candidate code group for a given length L. In doing so, the frequency response calculation module **312** calculates number of frequency locations and the corresponding frequency positions present in each code of candidate code group. Further, frequency response calculation module **312,** by supplying the frequency response of every code, number of frequency locations and the corresponding frequency positions present in each code of candidate code group to code grouping module **314,** assists the code grouping module **314** to analyze and group the codes within candidate code group on the basis of their frequency responses. Frequency response calculation module **312** may use any of the existing techniques to calculate frequency responses such as, for example, but not limited to DFT, FFT etc.

As discussed above regarding one or both of the orthogonal code generator **124** and **224** generates orthogonal codes based only on orthogonality criteria. However, as illustrated in FIG. 3A, spectrally efficient orthogonal code generation architecture **300** generates orthogonal codes that are not only orthogonal but spectrum efficient as well.

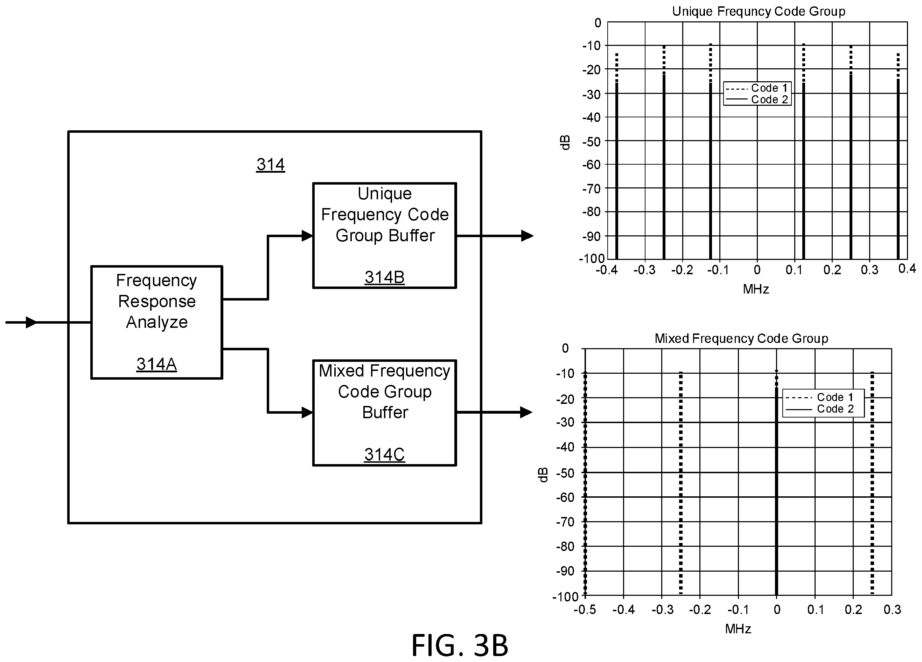

To this end, FIG. 3B depicts a high-level functional block diagram of code grouping module **314,** in accordance with various embodiments of the present disclosure. As shown, code grouping module **314** performs a code grouping operation based on calculated frequency responses of codes in candidate code group. The code grouping module **314** divides the codes into two categories of groups, namely unique frequency code groups and mixed frequency code groups. The code grouping module **314** then provides the unique frequency code groups and mixed frequency code groups.to unique frequency code searching module **316** and mixed frequency code searching **318** respectively, to form the orthogonal code sets within each frequency code group.

As shown in FIG. 3B, the code grouping operation in code grouping module **314** may be implemented by a frequency response analyzer **314A.** Frequency responses of codes in candidate code group are received by frequency response analyzer **314A.** The frequency response analyzer **314A** then analyzes the number of frequency locations and positions present in frequency response of each code present in candidate code group. Based on number of frequency locations and positions, frequency response analyzer **314A** divides the codes in two categories of groups, namely unique frequency code groups and mixed frequency code groups.

According to the invention, while grouping the codes into unique frequency code group, the frequency response analyzer **314A** upon detecting the codes having single frequency component and the position of frequency component is same in two or more codes in candidate code group, then the codes are grouped together to form unique single frequency group. The frequency response analyzer **314A** will continue searching for all the codes in candidate code group having same number frequency components posited at same locations, to group them together. After grouping all the codes having same number of frequency components posited at same locations, the groups are supplied to unique frequency code group buffer **314B** for further processing by unique frequency code searching module **316.**

Furthermore, according to the invention, during the grouping of the codes into mixed frequency group, the frequency response analyzer **314A** sets the initial number of frequency locations N equal to 2 and then searches for the codes having maximum N frequency locations. In doing so, the frequency response analyzer **314A** will group those codes who have N number frequency components posited at same locations. In addition, the frequency response analyzer **314A** will also group those codes that have the number of frequency locations less than N with a condition that the positions of all frequency components of such codes will overlap with some positions of frequency components of codes having N frequency locations. As an example, consider a code with two frequency components such as $f_1$ and $f_2$. The frequency response analyzer **314A** will group all the codes having exactly two frequency components $f_1$ and $f_2$ to form a mixed frequency code group $MG_1$. In addition, the frequency response analyzer **314A** will also group the codes with single frequency component either $f_1$ or $f_2$ to form mixed frequency code group $MG_1$

Once all the codes for a given value of N are grouped, the frequency response analyzer **314A** will increase the value of N by one and repeat the above process until all codes are grouped. After grouping all the codes, the groups are supplied to mixed frequency code group buffer **314C** for further processing by mixed frequency code searching module **318.**

It is to be understood that the frequency response analyzer **314A** supplies unique frequency code groups and mixed frequency code groups to separate buffers **314B** and **314C.** However these code groups may be supplied to a common buffer for temporary storage of unique frequency code groups and mixed frequency code groups. The buffers may embody any suitable memory storage elements. Frequency response analyzer **314A** is further capable of transferring unique frequency code groups and mixed frequency code groups directly to unique frequency code searching module **316**

and mixed frequency code searching module **318,** respectively, for further processing without storing them into any buffer.

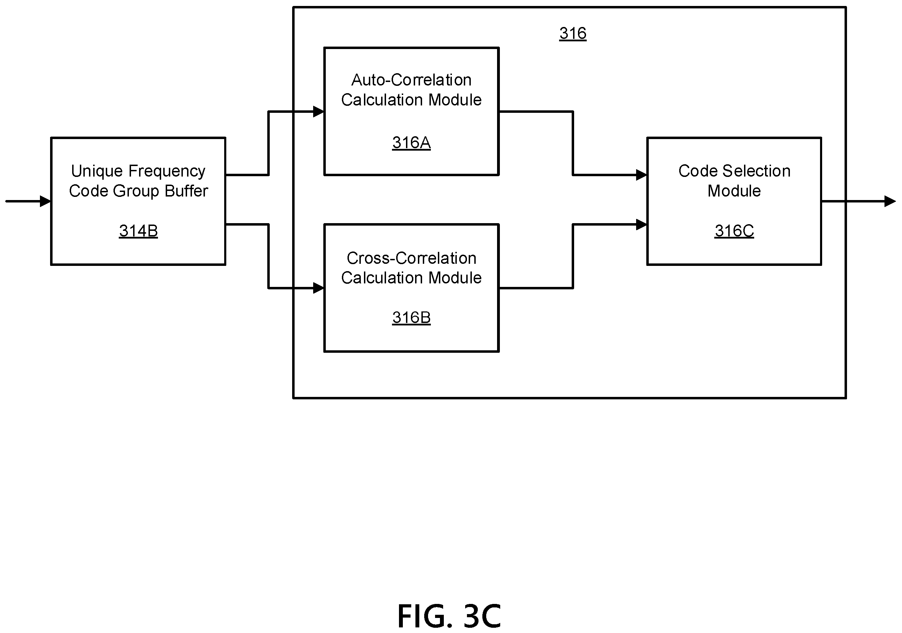

As indicated by FIG. 3B, the unique frequency code groups outputted by unique frequency code group buffer **314B** are supplied to unique frequency code searching module **316.** As shown in FIG. 3C, unique frequency code searching module **316** operates to search the orthogonal codes in unique frequency code groups and form orthogonal code sets within each unique frequency code group. The codes within code sets have same frequency response and are orthogonal in nature. Thus, the sharing of frequency positions by different orthogonal codes allows the use of frequency spectrum more efficiently and thereby, improving the data transmission rate.

Consistent with the disclosed embodiments, the unique frequency code searching may be achieved by analyzing the auto-correlation, cross-correlation, auto-correlation side lobes, cross-correlation side lobes, total side lobes of auto-correlation and total side lobes of cross-correlation of various codes within same frequency group having same frequency response. By way of an illustrative example, codes X and Y are selected from same unique frequency code group and are given by:

$$X = (x_0, x_1, \ldots, x_{n-1}), Y = (y_0, y_1, \ldots, y_{n-1}); \qquad \forall\, (x, y) \in (-1, 1)$$

As shown in FIG. 3C, the auto-correlation of selected code $X$ with its un-shifted version is computed by auto-correlation calculation module **316A** and results in a weight W which is the auto-correlation peak of the selected code $X$. The resultant weight W is given by:

$$\mathrm{W} = \sum_{i=0}^{n-1} x_i\, x_i$$

Auto-correlation calculation module 316A further computes the side lobes, total side lobe and maximum side lobe of auto-correlation of code X. The side lobes of the auto-correlation of code X are given by:

$$s_{aut,j} = \sum_{i=0,\mathrm{j}\neq \mathrm{i}}^{n-1} x_i\, x_{i-j}, \qquad j = 0, 1, 2, \ldots M - 1$$

The total side lobe of the auto-cross correlation of code $X$ is given by:

$$S_{aut,t} = \sum_{j=0}^{M-1} \left| s_{aut,j} \right|$$

The maximum side lobe of the auto-cross correlation of code $X$ is given by:

$$s_{aut,max} = \max\left\{ \left| s_{aut,0} \right|, \left| s_{aut,1} \right|, \ldots \left| s_{aut,M-1} \right| \right\}$$

As shown in FIG. 3C, the cross-correlation of selected code $X$ and code Y, with their un-shifted versions is computed by cross-correlation calculation module **316B** and is given by:

$$c = \sum_{i=0}^{n-1} x_i\, y_i$$

Cross-correlation calculation module 316B further computes the side lobes, total side lobe and maximum side lobe of cross-correlation of code $X$ and code $Y$. The side lobes of the cross-correlation of code $X$ and code Y are given by:

$$s_{cross,j} = \sum_{i=0,i\neq j}^{n-1} x_i y_{i-j}$$

The total side lobe of the cross-cross correlation of code $X$ and code $Y$ is given by:

$$S_{cross,t} = \sum_{j=0}^{M-1} |s_{cross,j}|$$

The maximum side lobe of the cross-cross correlation of code $X$ and code $Y$ is given by:

$$s_{cross,max} = \max \{|s_{cross,0}|, |s_{cross,1}|, \dots, |s_{cross,M-1}|\}$$

The computed values $s_{aut,max}$, $s_{cross,max}$, $s_{aut,max}$ and $s_{cross,max}$ are supplied to code selection module **316C**. Code selection module **316C** further selects overall maximum side lobe of correlation of code $X$ and code $Y$ as one the maximum value of $s_{aut,max}$ or $s_{cross,max}$ and is given by:

$$s_{max} = \max \{s_{aut,max}, s_{cross,max}\}$$

Also, code selection module **316C** computes overall total side lobe of correlation of code X and code Y by adding $S_{aut,t}$ and $S_{cross,t}$ and is given by:

$$s = s_{aut,t} + s_{cross,t}$$

It is to be understood that auto-correlation calculation module **316A** and cross-correlation calculation module **316B** will compute the auto-correlation, cross-correlation, side lobes of auto-correlation, side lobes of cross-correlation, total side lobes of auto-correlation and total side lobes of cross-correlation of all the codes within each unique frequency code group. Also, auto-correlation calculation module **316A** and cross-correlation calculation module **316B** supplies the computed values to code selection module **316C.**

The code selection module **316C** further operates to select the spectrally efficient orthogonal codes from each unique frequency code group and forms orthogonal code sets within each unique frequency code group. The codes within a code set have same number of frequency components posited at same locations and are orthogonal in nature making the codes spectrally efficient and thereby, improving the data transmission rate.

In some embodiments, code selection module **316C** will set a target number of codes in orthogonal code set. The target number of codes may be for example, equal to two. Code selection module **316C** will then analyze the un-sifted version of cross-correlations between all the codes within each unique frequency code group as supplied by cross-correlation calculation module **316B** and the computed values of overall maximum and total side lobe of correlation of all the code within each unique frequency code group. Code selection module **316C** will then select the spectrally efficient orthogonal codes satisfying the condition of having zero un-shifted version of cross-correlation between the codes within each frequency group, minimum value of maximum side lobe level $s_{max}$ and minimum value of total side lobe level s. If code selection module **316C** finds a suitable code, the target number of codes is increased by one and the selection process is then repeated with updated target number of codes until the number of codes in orthogonal code set is equal to target number of codes.

As discussed above, the final output of unique frequency code searching module **316** for a given code length L will be various orthogonal code sets within each unique frequency code group. The orthogonal code sets may then be stored in any suitable memory element. Each code in a code set has same frequency response and is orthogonal in nature. Moreover, unique frequency code searching module **316** is further configured to output other information regarding the unique frequency code group, such as, for example, a number of code sets in a unique frequency code group, number of codes in a code set, number of frequency components in each code, location of frequency component of each code, length of each code, *etc.*

Table 1 Illustrates exemplary orthogonal code sets for unique frequency code group, with a single frequency component, outputted by unique frequency code searching module **316,** in accordance with the various operational embodiments provided above of the present disclosure. It will be further appreciated that a set of values between a pair of round brackets represents a code and plurality of codes in between a pair of braces represents an orthogonal code set.

Table 1

{(-1,-1,1,1),(-1,1,1,-1)},{(-1,-1,1,1),(1,-1,-1,1)},{(-1,1,1,-1),(1,1,-1,-1)},{(1,-1,-1,1),(1,1,-1,-1)}

The depicted orthogonal code sets, as shown in table 1, are base code sets with code length equal to 4. The unique frequency code searching module 316 is further capable of outputting orthogonal code sets for single frequency code group with code length of 8 by repeating the codes in base code sets. The unique frequency code searching module **316** is also capable of outputting orthogonal code sets for single frequency code group with code length of 16 by repeating the codes in base code sets for four times and so on. It will be appreciated that unique frequency code searching module **316** is capable of performing the above operation for all unique frequency code groups.

For instance, a code with length 4 (-1,-1,1,1) in table 1 with single frequency component may also be represented by a code with length 8 with single frequency component as (-1,-1,1,1,-1,-1,1,1), by a code with length 16 with single frequency component as (-1,-1,1,1,-1,-1,1,1,-1,-1,1,1,-1,-1,1,1) and so on.

Table 2 Illustrates another exemplary subset of an orthogonal code sets for a unique frequency code group, with two frequency components, outputted by a unique frequency code searching module 316, in accordance with various embodiments of the present disclosure. It will be further appreciated that a set of values between a pair of round brackets represents a code and plurality of codes in between a pair of braces represents an orthogonal code set.

Table 2

{(-1,-1,-1,-1,1,1,1,1),(-1,-1,1,1,1,1,-1,-1),(-1,1,-1,1,1,-1,1,-1),(-1,1,1,-1,1,-1,-1,1)},{(-1,-1,-1,-1,1,1,1,1),(-1,-1,1,1,1,1,-1,-1),(-1,1,-1,1,1,-1,1,-1),(1,-1,-1,1,-1,1,1,-1)},{(-1,-1,-1,-1,1,1,1,1),(-1,-1,1,1,1,1,-1,-1),(-1,1,1,-1,1,-1,-1,1),(1,-1,1,-1,-1,1,-1,1)},{(-1,-1,-1,-1,1,1,1,1),(-1,-1,1,1,1,1,-1,-1),(1,-1,-1,1,-1,1,1,-1),(1,-1,1,-1,-1,1,-1,1)},{(-1,-1,-1,-1,1,1,1,1),(-1,1,-1,1,1,-1,1,-1),(-1,1,1,-1,1,-1,-1,1),(1,1,-1,-1,-1,-1,1,1)},{(-1,-1,-1,-1,1,1,1,1),(-1,1,-1,1,1,-1,1,-1),(1,-1,-1,1,-1,1,1,-1),(1,1,-1,-1,-1,-1,1,1)},{(-1,-1,-1,-1,1,1,1,1),(-1,1,1,-1,1,-1,-1,1),(1,-1,1,-1,-1,1,-1,1),(1,1,-1,-1,-1,-1,1,1)},{(-1,-1,-1,-1,1,1,1,1),(1,-1,-1,1,-1,1,1,-1),(1,-1,1,-1,-1,1,-1,1),(1,1,-1,-1,-1,-1,1,1)},{(-1,-1,-1,1,1,1,1,-1),(-1,-1,1,-1,1,1,-1,1),(-1,1,1,-1,-1,1,1,-1),(-1,1,1,1,1,-1,-1,-1)},{(-1,-1,-1,1,1,1,1,-1),(-1,-1,1,-1,1,1,-1,1),(-1,1,1,-1,-1,1,1,-1),(1,-1,-1,-1,-1,1,1,1)},{(-1,-1,-1,1,1,1,1,-1),(-1,-1,1,-1,1,1,-1,1),(-1,1,1,1,1,-1,-1,-1),(1,-1,1,1,-1,1,-1,-1)},{(-1,-1,-1,1,1,1,1,-1),(-1,-1,1,-1,1,1,-1,1),(1,-1,-1,-1,-1,1,1,1),(1,-1,1,1,-1,1,-1,-1)},{(-1,-1,-1,1,1,1,1,-1),(-1,1,-1,-1,1,-1,1,1),(-1,1,1,1,1,-1,-1,-1),(1,1,-1,1,-1,-1,1,-1)},{(-1,-1,-1,1,1,1,1,-1),(-1,1,-1,-1,1,-1,1,1),(1,-1,-1,-1,-1,1,1,1),(1,1,-1,1,-1,-1,1,-1)},{(-1,-1,-1,1,1,1,1,-1),(-1,1,1,1,1,-1,-1,-1),(1,-1,1,1,-1,1,-1,-1),(1,1,-1,1,-1,-1,1,-1)},{(-1,-1,1,1,-1,1,1,-1,1),(-1,1,1,-1,

1,1,-1,1,1),(-1,1,1,1,1,-1,-1,-1),(1,1,1,-1,-1,-1,-1,1)},{(-1,-1,1,-1,1,1,-1,1),(-1,1,1,-1,1,1,-1,-1,1,1),(1,-1,-1,-1,-1,1,1,1),(1,1,1,-1,-1,-1,-1,1)},{(-1,-1,1,-1,1,1,-1,1),(-1,1,1,1,1,-1,-1,-1),(1,-1,1,1,-1,1,-1,-1),(1,1,1,-1,-1,-1,-1,1)},{(-1,-1,1,1,-1,1,1,-1),(1,-1,-1,-1,-1,1,1,1),(1,-1,1,1,-1,1,-1,-1),(1,1,1,-1,-1,-1,-1,1)},{(-1,-1,1,1,1,1,1,-1,-1),(-1,1,-1,1,1,-1,1,-1),(-1,1,1,-1,1,-1,-1,1),(1,1,1,1,-1,-1,-1,-1)},{(-1,-1,1,1,1,1,-1,-1),(-1,1,-1,1,1,-1,1,-1),(1,-1,-1,1,-1,1,1,-1),(1,1,1,1,-1,-1,-1,-1)},{(-1,-1,1,1,1,1,-1,-1),(-1,1,1,-1,1,-1,-1,1),(1,-1,1,-1,-1,1,-1,1),(1,1,1,1,-1,-1,-1,-1)},{(-1,-1,1,1,1,1,-1,-1),(1,-1,-1,1,-1,1,1,-1),(1,-1,1,-1,-1,1,-1,1),(1,1,1,1,-1,-1,-1,-1)},{(-1,1,-1,1,1,-1,1,-1),(-1,1,1,1,1,-1,-1,-1),(1,1,-1,1,-1,-1,1,-1),(1,1,1,-1,-1,-1,-1,1)},{(-1,1,-1,-1,1,-1,1,1),(-1,1,1,1,1,-1,-1,-1),(1,1,-1,1,-1,-1,1,-1),(1,1,1,-1,-1,-1,-1,1)},{(-1,1,-1,1,1,-1,1,-1),(1,-1,-1,1,-1,1,1,-1),(1,1,-1,-1,-1,-1,1,1),(1,1,1,1,-1,-1,-1,-1)},{(-1,1,1,-1,1,-1,-1,1),(1,-1,1,-1,-1,1,-1,1),(1,1,-1,-1,-1,-1,1,1),(1,1,1,1,-1,-1,-1,-1)},{(-1,1,1,1,1,-1,-1,-1),(1,-1,1,1,-1,1,-1,-1),(1,1,-1,1,-1,-1,1,-1),(1,1,1,-1,-1,-1,-1,1)},{(1,-1,-1,-1,-1,1,1,1,1),(1,-1,1,1,-1,1,-1,-1),(1,1,-1,1,-1,-1,1,-1),(1,1,1,-1,-1,-1,-1,1)},{(1,-1,-1,1,-1,1,1,-1),(1,-1,1,-1,-1,1,-1,1),(1,1,-1,-1,-1,-1,1,1),(1,1,1,1,-1,-1,-1,-1)}}

The orthogonal code sets, as shown in table 2 are base code sets with code length of 8. The unique frequency code searching module **316** is further capable of outputting orthogonal code sets for double frequency code group with code length of 16 by repeating the codes in base code sets. The unique frequency code searching module **316** is also capable of outputting orthogonal code sets for double frequency code group with code length of 32 by repeating the codes in base code sets for four times and so on. It will be appreciated that unique frequency code searching module **316** is capable of performing the above operation for all unique frequency code groups.

For instance, a code with length 8 (-1,-1,-1,-1,1,1,1,1) in table 2 with two frequency components may also be represented by a code with length 16 with two frequency components as (-1,-1,-1,-1,1,1,1,1,-1,-1,-1,-1,1,1,1,1), by a code with length 32 with two frequency components as (-1,-1,-1,-1,1,1,1,1,-1,-1,-1,-1,1,1,1,1,-1,-1,-1,-1,1,1,1,1,-1,-1,-1,-1,1,1,1,1) and so on.

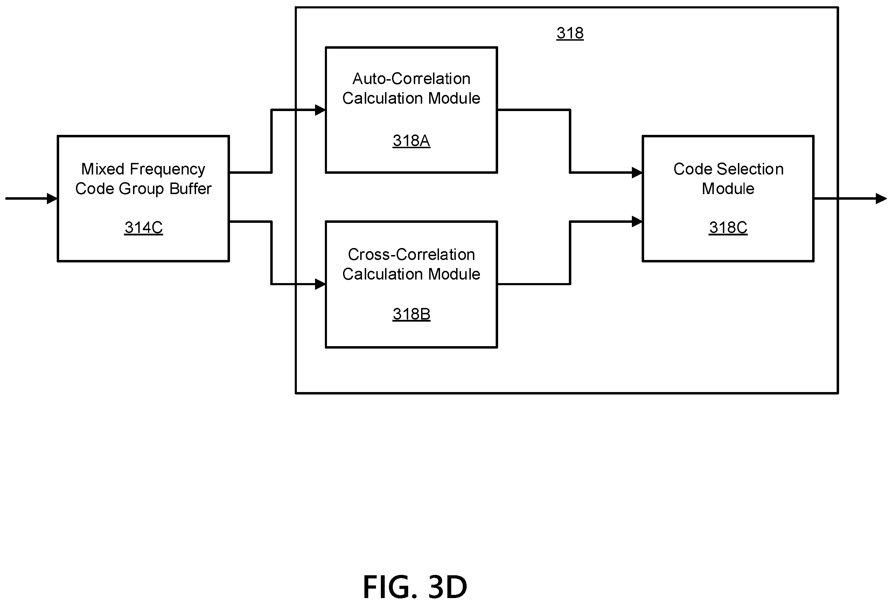

As indicated by FIG. 3B, the mixed frequency code groups outputted by mixed frequency code group buffer **314C** are supplied to mixed frequency code searching module **318.** As shown in FIG. 3D, mixed frequency code searching module **318** operates to search the orthogonal codes in mixed frequency code groups and form orthogonal code sets within each mixed frequency code group. The codes within code sets have fully or partially overlapping frequency positions, and are orthogonal in nature. Thus, the sharing of frequency positions by different orthogonal codes allows the more efficient use of the operating frequency spectrum to thereby improve data transmission rates.

Consistent with the disclosed embodiments, the mixed frequency code searching may be achieved by analyzing the auto-correlation, cross-correlation, side lobes of auto-correlation, side lobes of cross-correlation, total side lobes of auto-correlation and total side lobes of cross-correlation of various codes within same frequency group having fully or partially overlapping frequency positions.

It is to be understood that auto-correlation calculation module **318A** and cross-correlation calculation module **318B** will compute the auto-correlation, cross-correlation, side lobes of auto-correlation, side lobes of cross-correlation, total side lobes of auto-correlation and total side lobes of cross-correlation of all the codes within each mixed frequency code group in a similar manner as these values are computed auto-correlation calculation module **316A** and cross-correlation calculation module **316B.** Also, auto-correlation calculation module **318A** and cross-correlation calculation module **318B** supplies the computed values to code selection module **318C**

The code selection module **318C** further operates to select the spectrally efficient orthogonal codes from each mixed frequency code group and forms orthogonal code sets within each mixed frequency code group. The codes within a code set have same number of frequency locations, some overlapping frequency positions and are orthogonal in nature making the codes spectrally efficient and thereby, improving the data transmission rate.

It is to be appreciated that code selection module **318C** operates on mixed frequency code group in similar manner as code selection module **316C** operates on unique frequency code group. It will be further appreciated that unique frequency code searching module **316** and mixed frequency code searching module **318** may also be operated by single frequency code searching module performing unique frequency orthogonal code searching and mixed frequency orthogonal code searching.

As discussed above, the final output of mixed frequency code searching module **318** for a given code length L will be various orthogonal code sets within each mixed frequency code group. The orthogonal code sets may be then stored in any memory element known in the art. Further mixed frequency code searching module **318** is also capable of outputting other information regarding mixed frequency code group for example, number of code sets in a mixed frequency code group, number codes in a code set, number of overlapped frequency positions of each code, location of frequency component of each code and length of each code etc.

Table 3 illustrates an exemplary subset of orthogonal code sets for mixed frequency code group, with three frequency components, outputted by mixed frequency code searching module 318, in accordance with various embodiments of the present disclosure. It will be further appreciated that a set of values between a pair of round brackets represents a code and plurality of codes in between a pair of braces represents an orthogonal code set.

Table 3

{(-1,-1,-1,1,1,-1,1,1),(-1,-1,1,1,-1,-1,1,1,1),(-1,1,1,-1,-1,1,1,1,1,-1),(-1,1,1,1,1,-1,-1,1,1,-1),(-1,-1,1,1,1,1,-1,-1),(-1,1,1,1,-1,1,1,-1,-1,1)}, {(-1,-1,-1,1,1,1,-1,1,1),(-1,-1,1,1,-1,-1,1,1,1),(-1,1,1,-1,-1,1,1,1,1,-1),(-1,1,1,1,1,-1,-1,1,-1),(-1,-1,1,1,1,1,1,-1,-1),(1,-1,-1,1,1,-1,1,1,-1)}, {(-1,-1,-1,1,1,-1,1,1),(-1,-1,1,1,-1,-1,1,1,1),(-1,1,1,-1,-1,1,1,1,1,-1),(-1,1,1,1,1,-1,-1,1,-1),(-1,1,1,1,-1,1,-1,-1,1),(1,1,-1,-1,-1,-1,1,1,1)}, {(-1,-1,-1,1,1,-1,1,1),(-1,-1,1,1,-1,-1,1,1,1),(-1,1,1,-1,-1,1,1,1,1,-1),(-1,1,1,1,1,-1,-1,1,-1),(1,-1,-1,1,1,-1,1,1,-1),(1,1,-1,-1,-1,-1,1,1,1)}, {(-1,-1,-1,1,1,-1,1,1),(-1,-1,1,1,-1,-1,1,1,1),(-1,1,1,-1,-1,1,1,1,1,-1),(1,-1,-1,-1,1,1,-1,1,-1),(-1,-1,1,1,1,1,1,-1,-1),(-1,1,1,1,-1,1,1,-1,-1,1)}, {(-1,-1,-1,1,1,-1,1,1),(-1,-1,1,1,-1,-1,1,1,1),(-1,1,1,-1,-1,1,1,1,1,-1),(1,-1,-1,-1,1,1,-1,1,-1),(-1,-1,1,1,1,1,1,-1,-1),(1,-1,-1,1,1,-1,1,1,-1)}, {(-1,-1,-1,1,1,-1,1,1),(-1,-1,1,1,-1,-1,1,1,1),(-1,1,1,-1,-1,1,1,1,1,-1),(1,-1,-1,-1,1,1,-1,1,-1),(-1,1,1,1,-1,1,-1,1,-1,1),(1,1,-1,-1,-1,-1,1,1,1)}, {(-1,-1,-1,1,1,-1,1,1),(-1,-1,1,1,-1,-1,1,1,1),(-1,1,1,-1,-1,1,1,1,1,-1),(1,-1,-1,1,1,-1,1,1,-1),(1,-1,-1,1,1,-1,1,1,-1),(1,1,-1,-1,-1,-1,1,1,1)}, {(-1,-1,-1,1,1,-1,1,1),(-1,-1,1,1,-1,-1,1,1,1),(-1,1,1,1,1,-1,-1,1,-1),(1,-1,1,1,1,-1,-1,-1,1),(-1,-1,1,1,1,1,1,-1,-1),(-1,1,1,1,-1,1,-1,-1,1)}, {(-1,-1,-1,1,1,-1,1,1),(-1,-1,1,1,-1,-1,1,1,1),(-1,1,1,1,1,-1,-1,1,-1),(1,-1,1,1,1,-1,-1,-1,1),(-1,-1,1,1,1,1,1,-1,-1),(1,-1,-1,1,1,-1,1,1,-1)}, {(-1,-1,-1,1,1,-1,1,1),(-1,-1,1,1,-1,-1,1,1,1),(-1,1,1,1,1,-1,-1,1,-1),(1,-1,-1,1,1,-1,1,1,-1),(-1,1,1,1,-1,1,-1,-1,1),(1,1,-1,-1,-1,-1,1,1,1)}, {(-1,-1,-1,1,1,-1,1,1),(-1,-1,1,1,-1,-1,1,1,1),(-1,1,1,1,1,-1,-1,1,-1),(1,-1,-1,1,1,-1,1,1,-1),(-1,-1,1,1,1,1,1,-1,-1),(-1,1,1,1,-1,1,-1,-1,1)}, {(-1,-1,-1,1,1,-1,1,1),(-1,-1,1,1,-1,-1,1,1,1),(1,-1,-1,1,1,-1,1,1,-1),(1,-1,1,1,1,-1,-1,-1,1),(-1,-1,1,1,1,1,1,-1,-1),(1,-1,-1,1,1,-1,1,1,-1)}, {(-1,-1,-1,1,1,-1,1,1),(-1,-1,1,1,-1,-1,1,1,1),(1,-1,-1,-1,1,1,-1,1,-1),(1,-1,1,1,1,-1,-1,-1,1),(-1,1,1,1,-1,1,-1,-1,1),(1,1,-1,-1,-1,-1,1,1,1)}, {(-1,-1,-1,1,1,-1,1,1),(-1,-1,1,1,-1,-1,1,1,1),(1,-1,-1,-1,1,1,-1,1,-1),(1,-1,1,1,1,-1,-1,-1,1),(1,-1,1,1,-1,1,-1,1,-1),(1,1,-1,-1,-1,-1,1,1,1)}, {(-1,-1,-1,1,1,-1,1,1),(-1,-1,1,1,1,-1,1,1,-1),(-1,1,1,-1,-1,1,1,1,1,-1),(-1,1,1,1,-1,-1,-1,1,1,1),(-1,-1,1,1,1,1,-1,-1,1),(-1,1,1,1,1,-1,-1,-1,1)}, {(-1,-1,-1,1,1,-1,1,1),(-1,-1,1,1,-1,-1,1,1,1),(-1,1,1,-1,-1,1,1,1,1,-1),(-1,-1,1,1,-1,-1,1,1,1,-1),(1,-1,-1,-1,-1,1,1,1,1)}, {(-1,-1,-1,1,1,-1,1,1),(-1,-1,1,1,1,-1,1,1,-1),(-1,1,1,1,-1,-1,-1,1,-1),(-1,1,1,1,-1,-1,-1,1,-1),(-1,1,1,1,1,1,-1,-1,-1),(1,1,-1,-1,-1,-1,1,1,-1)}, {(-1,-1,-1,1,1,-1,1,1),(-1,-1,1,1,-1,-1,1,1,1),(-1,1,1,-1,-1,1,1,1,1,-1),(-1,1,1,1,-1,-1,1,1,1),(1,-1,-1,-1,-1,1,1,1,1),(1,1,-1,1,-1,-1,1,1,-1)}, {(-1,-1,-1,1,1,-1,1,1),(-1,-1,1,1,-1,-1,1,1,1),(-1,1,1,-1,-1,-1,1,1,1,-1),(1,-1,-1,1,1,1,1,-1,-1),(-1,-1,1,1,-1,1,1,1,-1,-1),(-1,1,1,1,1,1,-1,-1,-1,-1)}, {(-1,-1,-1,1,1,-1,1,1),(-1,-1,1,1,-1,1,1,1,-1),(-1,1,1,1,-1,-1,1,1,1,-1),(1,-1,-1,1,1,1,1,-1,-1),(-1,-1,1,1,-1,1,1,1,-1,-1),(-1,1,1,1,1,1,-1,-1,-1)}, {(-1,-1,-1,1,1,-1,1,1),(-1,-1,1,1,-1,-1,1,1,-1),(-1,1,1,1,-1,-1,-1,1,1),(1,-1,1,1,1,-1,-1,-1,1),(-1,1,1,1,-1,-1,1,1,1),(1,-1,-1,-1,-1,-1,1,1,1,1)}, {(-1,-1,-1,1,1,-1,1,1),(-1,-1,1,1,-1,1,1,1,-1),(-1,1,1,-1,-1,1,1,1,1,-1),(1,-1,-1,1,1,1,1,-1,-1),(-1,1,1,1,1,1,-1,-1,-1),(1,1,-1,-1,-1,-1,1,1,1)}, {(-1,-1,-1,1,1,-1,1,1),(-1,-1,1,1,-1,1,1,1,-1),(-1,1,1,1,-1,-1,1,1,1,-1),(1,-1,1,1,1,1,-1,-1,-1),(-1,1,1,1,1,1,-1,-1,-1),(1,1,-1,1,-1,-1,1,1,-1)}, {(-1,-1,-1,1,1,-1,1,1),(-1,-1,1,1,-1,1,1,1,-1),(-1,1,1,-1,-1,-1,1,1,1),(1,-1,1,1,1,-1,-1,-1,1),(-1,-1,1,1,-1,1,1,-1,-1,1),(-1,1,1,1,1,-1,-1,-1,-1)}, {(-1,-1,-1,1,1,-1,1,1),(-1,-1,1,1,-1,1,1,1,-1),(-1,1,1,-1,-1,-1,1,1,1),(1,-1,1,1,1,-1,-1,-1,1),(-1,-1,1,1,-1,1,1,1,-1,-1),(-1,1,1,1,1,-1,-1,-1,1)}, {(-1,-1,-1,1,1,-1,1,1),(-1,-1,1,1,-1,1,1,1,-1),(-1,1,1,-1,-1,-1,1,1,1),(1,-1,1,1,1,-1,-1,-1,1),(-1,-1,1,1,-1,1,1,1,-1),(-1,1,1,1,1,1,-1,-1,1)}, {(-1,-1,-1,1,1,-1,1,1),(-1,-1,1,1,-1,1,1,1,-1),(1,-1,1,1,1,1,-1,-1),(1,-1,1,1,-1,-1,-1,1,1),(-1,1,1,1,-1,-1,-1,1,-1,1),(1,1,-1,1,-1,-1,1,1,-1)}, {(-1,-1,-1,1,1,-1,1,1),(-1,-1,1,1,-1,1,1,1,-1),(1,-1,-1,1,1,1,1,-1,-1),(1,-1,1,1,-1,-1,-1,1,-1),(-1,1,1,1,-1,1,1,1,-1),(-1,1,1,1,1,1,-1,-1,-1)}, {(-1,-1,-1,1,1,-1,1,1),(-1,-1,1,1,-1,1,1,1,-1),(1,-1,-1,1,1,1,1,-1,-1),(1,-1,1,1,-1,-1,-1,1,-1),(-1,1,1,-1,1,1,1,-1,-1),(-1,1,1,1,1,-1,-1,-1,-1)}, {(-1,-1,-1,1,1,-1,1,1),(-1,-1,1,1,-1,1,1,1,-1),(1,-1,-1,1,1,1,1,-1,-1),(1,-1,1,1,-1,-1,-1,1,-1),(-1,-1,1,-1,1,1,1,-1,-1),(-1,1,1,1,1,1,-1,-1,-1)}, {(-1,-1,-1,1,1,-1,1,1),(-1,-1,1,1,-1,1,1,1,-1),(1,-1,1,1,1,-1,-1,-1),(1,-1,1,1,-1,-1,-1,1,-1),(-1,1,1,1,-1,-1,-1,1,1),(1,-1,-1,-1,-1,1,1,1,1)}, {(-1,-1,-1,1,1,-1,1,1),(-1,-1,1,1,-1,1,1,1,-1),(1,-1,1,1,1,-1,-1,1,-1),(1,-1,1,1,-1,-1,-1,1,-1),(-1,1,1,-1,1,1,1,-1,-1),(-1,1,1,1,1,1,-1,-1,-1,-1),(1,1,-1,1,-1,-1,1,1,-1)}, {(-1,-1,-1,1,1,-1,1,1),(-1,-1,1,1,-1,1,1,1,-1),(1,-1,-1,1,1,1,1,-1,-1),(1,-1,1,1,-1,-1,-1,1,-1),(1,-1,1,1,-1,-1,-1,1,-1),

1,1,1,1),(1,1,-1,1,-1,-1,1,-1)},    {(-1,-1,-1,1,1,-1,1,1),(-1,1,-1,-1,1,1,1,-1),(-1,1,1,-1,-1,-1,1,1),(1,1,-1,-1,1,-1,1,-1),(-1,-1,1,-1,1,1,-1,1),(-1,1,1,1,1,-1,-1,-1)},    {(-1,-1,-1,1,1,-1,1,1),(-1,1,-1,-1,1,1,1,-1),(-1,1,1,-1,-1,-1,1,1),(1,1,-1,-1,1,-1,-1,1),(-1,-1,1,-1,1,1,-1,1),(1,-1,-1,-1,-1,1,1,1)},    {(-1,-1,-1,1,1,-1,1,1),(-1,1,-1,-1,1,1,1,-1),(-1,1,1,-1,-1,-1,1,1),(1,1,-1,-1,1,-1,-1,1),(-1,1,1,1,1,-1,-1,-1),(1,1,-1,1,-1,-1,1,1,-1)},    {(-1,-1,-1,1,1,-1,1,1),(-1,1,-1,-1,1,1,1,-1),(-1,1,1,-1,-1,-1,1,1),(1,1,-1,-1,1,-1,-1,1),(1,-1,-1,-1,-1,1,1,1),(1,1,-1,1,-1,-1,1,1,-1)},    {(-1,-1,-1,1,1,-1,1,1),(-1,1,-1,-1,1,1,1,-1),(-1,1,1,1,1,-1,-1,1,-1),(1,1,-1,1,1,-1,-1,-1),(-1,-1,1,1,1,1,-1,-1),(-1,1,1,1,-1,-1,1,-1,1)},    {(-1,-1,-1,1,1,-1,1,1),(-1,1,-1,-1,1,1,1,-1),(-1,1,1,1,1,-1,-1,1,-1),(1,1,-1,1,1,-1,-1,-1),(-1,-1,1,1,1,1,-1,-1,-1,1),(1,-1,-1,1,1,-1,1,1,-1)},    {(-1,-1,-1,1,1,-1,1,1),(-1,1,-1,-1,1,1,1,-1),(-1,1,1,1,1,-1,-1,1,-1),(1,1,-1,1,1,-1,-1,-1),(-1,1,1,1,1,-1,-1,-1,1,1),(1,1,-1,-1,-1,-1,1,1,1)},    {(-1,-1,-1,1,1,-1,1,1),(-1,1,-1,-1,1,1,1,-1),(-1,1,1,1,1,-1,-1,1,-1),(1,1,-1,1,1,-1,-1,-1),(1,-1,-1,1,-1,1,1,1,-1),(1,1,-1,-1,-1,-1,1,1,1)},    {(-1,-1,-1,1,1,-1,1,1),(-1,1,-1,-1,1,1,1,-1),(1,-1,-1,-1,1,1,-1,1),(1,1,-1,1,1,-1,-1,-1),(-1,-1,1,1,1,1,-1,-1,-1),(-1,1,1,1,-1,1,-1,-1,1,1)},    {(-1,-1,-1,1,1,-1,1,1),(-1,1,-1,-1,1,1,1,-1),(1,-1,-1,-1,1,1,-1,1),(1,1,-1,1,1,-1,-1,-1),(-1,-1,1,1,1,1,-1,-1,-1,1),(1,-1,-1,1,1,-1,1,1,-1)},    {(-1,-1,-1,1,1,-1,1,1),(-1,1,-1,-1,1,1,1,-1),(1,-1,-1,-1,1,1,-1,1),(1,1,-1,1,1,-1,-1,-1),(-1,1,1,-1,1,-1,-1,1),(1,1,-1,-1,-1,-1,1,1,1)},    {(-1,-1,-1,1,1,-1,1,1),(-1,1,-1,-1,1,1,1,-1),(1,-1,-1,-1,1,1,-1,1),(1,1,-1,1,1,-1,-1,-1),(1,-1,-1,1,-1,1,1,1),(1,1,-1,-1,-1,-1,1,1,1,-1)},    {(-1,-1,-1,1,1,-1,1,1),(-1,1,-1,-1,1,1,1,-1),(1,-1,-1,1,1,1,1,-1),(1,1,-1,-1,1,-1,-1,-1),(-1,-1,1,-1,1,1,-1,1),(-1,1,1,1,1,-1,-1,-1)},    {(-1,-1,-1,1,1,-1,1,1),(-1,1,-1,-1,1,1,1,-1),(1,-1,-1,1,1,1,1,-1),(1,1,-1,-1,1,-1,-1,-1),(-1,1,1,-1,1,1,-1,1),(-1,1,1,1,1,-1,-1,-1,1)},    {(-1,-1,-1,1,1,-1,1,1),(-1,1,-1,-1,1,1,1,-1),(1,-1,1,1,1,1,-1,-1),(1,1,-1,-1,1,-1,-1,1),(-1,-1,1,-1,1,1,-1,1),(1,-1,-1,-1,-1,1,1,1,1)},    {(-1,-1,-1,1,1,-1,1,1),(-1,1,1,-1,-1,-1,1,1,1),(1,-1,1,1,1,1,-1,-1),(1,1,-1,-1,1,-1,-1,1),(-1,1,1,1,1,-1,-1,-1),(-1,1,1,1,1,-1,-1,1,-1)},    {(-1,-1,-1,1,1,-1,1,1),(-1,1,1,-1,-1,-1,1,1,1),(1,-1,1,1,1,1,-1,-1),(1,1,-1,-1,1,-1,-1,1),(-1,1,1,1,1,-1,-1,-1),(1,1,-1,1,-1,-1,1,1,-1)},    {(-1,-1,-1,1,1,-1,1,1),(-1,1,1,-1,-1,-1,1,1),(1,-1,1,1,1,1,-1,-1),(1,1,-1,-1,1,-1,-1,1),(1,-1,-1,-1,-1,1,1,1),(1,1,-1,1,-1,-1,1,1,-1)},    {(-1,-1,-1,1,1,-1,1,1),(-1,1,1,-1,-1,-1,1,1),(1,-1,1,1,1,1,-1,-1),(1,1,-1,-1,1,-1,-1,1),(-1,1,1,-1,1,-1,-1,1),(-1,1,1,1,1,-1,-1,-1)},    {(-1,-1,-1,1,1,-1,1,1),(-1,1,1,-1,-1,-1,1,1),(1,-1,1,1,1,-1,-1,-1,1),(1,1,-1,-1,1,-1,-1,1),(-1,1,1,-1,1,1,-1,1),(1,-1,-1,-1,-1,1,1,1)},    {(-1,-1,-1,1,1,-1,1,1),(-1,1,1,-1,-1,-1,1,1),(1,-1,1,1,1,-1,-1,-1,1),(1,1,-1,-1,1,-1,-1,1),(-1,1,1,1,1,-1,-1,-1),(1,1,-1,1,-1,-1,1,1,-1)},    {(-1,-1,-1,1,1,-1,1,1),(-1,1,1,1,1,-1,-1,1,1),(1,-1,1,1,1,-1,-1,-1,1),(1,1,-1,-1,1,-1,-1,1),(-1,-1,1,1,1,1,-1,-1,-1),(-1,1,1,1,-1,-1,1,-1,1)},    {(-1,-1,-1,1,1,-1,1,1),(-1,1,1,1,1,-1,-1,1,-1),(1,-1,1,1,1,-1,-1,-1,1),(1,1,-1,-1,1,-1,-1,1),(1,-1,-1,-1,-1,1,1,1)},    {(-1,-1,-1,1,1,-1,1,1),(-1,1,1,1,1,-1,-1,1,-1),(1,-1,1,1,1,-1,-1,-1,1),(1,1,-1,-1,1,-1,-1,1),(-1,1,1,1,-1,-1,1,-1),(1,1,-1,-1,-1,-1,1,1,1)},    {(-1,-1,-1,1,1,-1,1,1),(-1,1,1,1,1,-1,-1,1,-1),(1,-1,-1,1,1,1,1,-1),(1,1,-1,1,1,-1,-1,-1),(-1,-1,1,1,1,1,-1,-1,-1),(-1,1,1,1,-1,-1,1,-1,1)},    {(-1,-1,-1,1,1,-1,1,1),(-1,1,1,1,1,-1,-1,1,-1),(1,-1,-1,1,1,1,1,-1),(1,1,-1,1,1,-1,-1,-1),(-1,1,1,1,-1,-1,1,-1),(1,1,-1,-1,-1,-1,1,1,1)},    {(-1,-1,1,-1,1,1,-1,1,1),(-1,-1,1,1,1,1,-1,-1),(-1,1,1,1,-1,1,1,1,-1),(-1,-1,1,1,1,-1,-1,1,-1),(-1,-1,-1,1,1,1,1,-1),(-1,1,1,-1,-1,1,1,1)},    {(-1,-1,1,-1,-1,1,1,1),(-1,-1,1,1,1,1,-1,-1),(-1,1,1,-1,1,1,-1,1,-1),(-1,1,1,1,-1,1,1,-1),(-1,-1,1,1,1,1,-1,-1),(1,1,1,-1,-1,-1,-1,1)},    {(-1,-1,1,-1,-1,1,1,1),(-1,-1,1,1,1,1,-1,-1),(-1,1,1,-1,1,1,-1,-1),(-1,1,1,1,-1,-1,1,-1),(1,-1,1,1,1,-1,-1,-1,1,1),(1,1,1,-1,-1,-1,-1,1)},    {(-1,-1,1,-1,-1,1,1,1),(-1,-1,1,1,1,1,-1,-1),(-1,1,1,1,-1,-1,1,-1),(1,-1,-1,1,1,1,1,-1),(-1,-1,1,1,1,1,-1,-1),(-1,1,1,1,-1,-1,1,-1,-1)},    {(-1,-1,1,-1,-1,1,1,1),(-1,-1,1,1,1,1,-1,-1),(-1,1,1,1,-1,-1,1,-1),(1,-1,-1,1,1,-1,1,1,-1),(-1,-1,1,1,1,1,-1,-1,1),(1,-1,-1,1,1,-1,1,1,-1)},    {(-1,-1,1,-1,-1,1,1,1),(-1,-1,1,1,1,1,-1,-1),(1,-1,-1,-1,1,1,-1,1),(1,-1,-1,1,1,-1,1,1),(-1,1,1,-1,1,1,-1,1),(1,1,1,-1,-1,-1,-1,1)},    {(-1,-1,1,-1,-1,1,1,1),(-1,-1,1,1,1,1,-1,-1),(1,-1,1,1,1,1,-1,-1),(-1,1,1,1,-1,-1,1,-1),(1,-1,-1,1,1,-1,1,1),(-1,1,1,-1,-1,1,1,1)},    {(-1,-1,1,-1,-1,1,1,1),(-1,-1,1,1,1,1,-1,-1),(-1,1,1,1,-1,-1,1,-1),(1,-1,-1,1,1,-1,1,1),(-1,1,1,1,-1,-1,1,-1,1),(1,1,1,-1,-1,-1,-1,1)},    {(-1,-1,1,-1,-1,1,1,1),(-1,-1,1,1,1,1,-1,-1),(1,-1,-1,1,1,1,1,-1),(1,-1,-1,1,1,-1,1,1),(-1,-1,1,1,1,1,-1,-1),(-1,1,1,1,-1,-1,1,-1,-1)},    {(-1,-1,1,-1,-1,1,1,1),(-1,-1,1,1,1,1,-1,-1),(1,-1,-1,1,1,1,1,-1),(1,-1,-1,1,1,-1,1,1),(-1,-1,-1,1,1,1,1,-1),(1,-1,1,1,1,-1,1,1,-1)},    {(-1,-1,1,-1,-1,1,1,1),(-1,-1,1,1,1,1,-1,-1),(1,-1,-1,1,1,1,1,-1),(1,-1,1,1,1,-1,1,1),(-1,1,1,1,-1,-1,1,-1),(1,1,1,-1,-1,-1,-1,1)},    {(-1,-1,1,-1,-1,1,1,1),(-1,-1,1,1,1,1,-1,-1),(-1,1,1,1,-1,1,1,-1),(1,-1,-1,1,1,-1,1,1),(1,-1,1,1,1,-1,1,1,-1),(1,1,1,-1,-1,-1,-1,1)},    {(-1,-1,1,-1,-1,1,1,1),(-1,-1,1,1,1,1,-1,-1),(1,-1,-1,-1,1,1,-1,1),(1,-1,-1,1,1,-1,1,1),(-1,-1,-1,1,1,1,1,-1),(1,1,1,-1,-1,-1,-1,1)},    {(-1,-1,1,-1,-1,1,1,1),(-1,-1,1,1,1,1,-1,-1),(-1,1,1,1,-1,1,1,-1),(1,-1,-1,1,1,-1,1,1),(-1,1,1,-1,1,1,-1,1),(1,1,1,-1,-1,-1,-1,1)},    {(-1,-1,1,-1,-1,1,1,1),(-1,-1,1,1,1,1,-1,-1),(1,-1,-1,-1,1,1,-1,1),(1,-1,1,1,1,-1,1,1),(-1,1,1,-1,1,1,-1,1),(1,1,1,-1,-1,-1,-1,1)},    {(-1,-1,1,-1,-1,1,1,1),(-1,-1,1,1,1,1,-1,-1),(1,-1,-1,1,1,1,1,-1),(1,-1,-1,1,1,-1,1,1),(-1,1,1,-1,1,1,-1,1),(1,1,1,-1,-1,-1,-1,1)},    {(-1,-1,1,-1,-1,1,1,1),(-1,-1,1,1,1,1,-1,-1),(-1,1,1,1,-1,1,1,-1),(1,-1,-1,1,1,-1,1,1),(1,-1,1,1,1,-1,1,1),(1,1,1,-1,-1,-1,-1,1)},

1,1),(1,-1,-1,-1,1,1,-1,1),(1,-1,-1,1,1,-1,-1,1,1),(1,-1,1,1,1,-1,1,-1,-1),(1,1,1,-1,-1,-1,-1,1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(-1,-1,1,1,1,1,-1,-1),(-1,1,1,-1,1,-1,-1,1,1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(-1,-1,1,1,1,1,-1,-1),(1,-1,-1,1,-1,1,1,-1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(-1,1,1,-1,1,-1,-1,1),(1,1,-1,-1,-1,-1,1,1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(1,-1,-1,1,1,1,-1,-1),(1,-1,-1,1,1,-1,1,-1),(1,1,-1,-1,-1,-1,1,1)}, {(-1,-1,1,-1,-1,1,1,1),(-1,1,-1,-1,1,1,1,-1),(1,-1,-1,1,1,1,-1,-1),(1,1,1,-1,-1,1,-1,-1),(-1,-1,1,1,1,1,-1,-1),(-1,1,1,-1,1,-1,-1,1,1)}, {(-1,-1,1,-1,-1,1,1,1),(-1,1,-1,-1,1,1,1,-1),(1,-1,-1,1,1,1,-1,-1),(1,1,1,-1,-1,1,-1,-1),(-1,1,1,-1,-1,-1,1,1,-1),(-1,1,1,-1,1,-1,-1,1,1,-1)}, {(-1,-1,1,-1,-1,1,1,1),(-1,1,-1,-1,1,1,1,-1),(1,-1,-1,1,1,1,-1,-1),(1,1,1,-1,-1,1,-1,-1),(-1,1,1,-1,1,-1,-1,1),(1,1,-1,-1,-1,-1,1,1)}, {(-1,-1,1,-1,-1,1,1,1),(-1,1,-1,-1,1,1,1,-1),(1,-1,-1,1,1,1,-1,-1),(1,1,1,-1,-1,1,-1,-1),(1,-1,-1,1,-1,1,1,-1),(1,1,-1,-1,-1,-1,1,1)}, {(-1,-1,1,-1,-1,1,1,1),(-1,1,1,-1,1,1,-1,-1),(-1,1,1,1,-1,-1,1,-1),(1,1,-1,-1,-1,1,1,1,-1),(-1,-1,1,1,1,1,1,-1,-1),(-1,1,1,-1,-1,1,1,-1,1)}, {(-1,-1,1,-1,-1,1,1,1),(-1,1,1,-1,1,1,-1,-1),(-1,1,1,1,-1,-1,1,-1),(1,1,-1,-1,-1,1,1,1,-1),(-1,-1,1,1,1,1,1,-1,-1),(1,-1,1,1,1,-1,1,-1,-1)}, {(-1,-1,1,-1,-1,1,1,1),(-1,1,1,-1,1,1,-1,-1),(-1,1,1,1,-1,-1,1,-1),(1,1,-1,-1,-1,1,1,1,-1),(-1,1,1,-1,1,1,-1,-1,1),(1,1,1,-1,-1,-1,-1,-1,1,1)}, {(-1,-1,1,-1,-1,1,1,1),(-1,1,1,-1,1,1,-1,-1),(-1,1,1,1,-1,-1,1,-1),(1,1,-1,-1,-1,1,1,1,-1),(1,-1,1,1,1,-1,1,-1,-1),(1,1,1,-1,-1,-1,-1,1,1)}, {(-1,-1,1,-1,-1,1,1,1),(-1,1,1,-1,1,1,-1,-1),(-1,1,1,1,-1,-1,1,-1),(1,1,-1,-1,-1,1,1,1,-1),(-1,-1,1,1,1,1,1,-1,-1),(-1,1,1,-1,-1,1,1,-1,1,-1)}, {(-1,-1,1,-1,-1,1,1,1),(-1,1,1,-1,1,1,-1,-1),(1,-1,-1,1,1,-1,1,1,-1),(1,1,1,-1,-1,1,1,1,-1),(-1,-1,1,1,1,1,1,-1,-1),(1,-1,1,1,1,-1,1,-1,-1)}, {(-1,-1,1,-1,-1,1,1,1),(-1,1,1,-1,1,1,-1,-1),(1,-1,1,1,-1,-1,1,1,-1),(1,1,-1,-1,-1,1,1,1,-1),(-1,-1,1,1,1,1,1,-1,-1),(-1,1,1,-1,1,1,-1,-1,1)}, {(-1,-1,1,-1,-1,1,1,1),(-1,1,1,1,-1,-1,1,-1,-1),(1,-1,-1,1,1,-1,1,1,-1),(1,1,-1,-1,-1,1,1,1,-1),(-1,1,1,-1,1,1,-1,-1,1),(1,1,-1,-1,-1,-1,1,1)}, {(-1,-1,1,-1,-1,1,1,1),(-1,1,1,1,-1,-1,1,-1,-1),(1,-1,-1,1,1,-1,1,1,-1),(1,1,-1,-1,-1,1,1,1,-1),(-1,1,1,-1,1,1,-1,-1,1),(1,1,-1,-1,-1,-1,1,1)}, {(-1,-1,1,-1,-1,1,1,1),(-1,1,1,1,-1,-1,1,-1,-1),(1,-1,1,1,-1,-1,1,1,-1),(1,1,1,-1,-1,-1,1,1,1),(1,1,-1,-1,1,1,1,-1),(-1,-1,1,1,1,1,1,-1,-1),(-1,1,1,-1,1,1,-1,-1,1)}, {(-1,-1,1,-1,-1,1,1,1),(-1,1,1,1,1,-1,-1,1,-1),(-1,1,-1,-1,1,-1,1,1,1),(1,1,-1,-1,-1,1,1,1,-1),(-1,-1,1,1,1,1,1,-1,-1),(-1,1,1,-1,-1,1,1,1,-1)}, {(-1,-1,1,-1,-1,1,1,1),(-1,1,1,1,-1,-1,1,1,-1),(1,-1,1,1,-1,-1,1,1,-1),(1,1,1,-1,-1,-1,1,1,1),(1,1,-1,-1,1,1,1,-1),(-1,-1,1,1,1,1,1,-1,-1),(-1,1,1,-1,-1,-1,-1,1,1,1),(1,1,-1,-1,-1,-1,1,1,1)}, {(-1,-1,1,-1,-1,1,1,1),(-1,1,1,1,-1,-1,1,1,-1),(1,-1,1,1,-1,-1,1,1),(1,1,1,-1,-1,-1,1,1,1),(1,1,-1,-1,1,1,-1,-1),(1,-1,-1,1,1,-1,1,1,-1)}, {(-1,-1,1,-1,-1,1,1,1),(1,-1,-1,-1,1,1,1,-1),(1,-1,1,1,-1,-1,1,1,-1),(1,1,1,-1,-1,-1,-1,1,1),(1,1,-1,-1,1,1,-1,-1),(1,-1,-1,1,1,-1,1,1,-1)}, {(-1,-1,1,-1,-1,1,1,1),(1,-1,-1,-1,1,1,1,-1),(1,-1,1,1,-1,-1,1,1,-1),(1,1,1,-1,-1,-1,-1,1,1),(1,1,-1,-1,-1,-1,1,1),(-1,-1,1,1,1,1,-1,-1),(-1,1,1,-1,1,-1,-1,1,1)}, {(-1,-1,1,-1,-1,1,1,1),(1,-1,-1,-1,1,1,1,-1),(1,-1,1,1,-1,-1,1,1,-1),(1,1,1,-1,-1,-1,-1,1,1),(-1,-1,1,1,1,1,1,-1,-1),(-1,1,1,-1,-1,-1,-1,1,1)}, {(-1,-1,1,-1,-1,1,1,1),(1,-1,-1,-1,1,1,1,-1),(1,1,1,-1,-1,-1,1,1,1),(1,1,-1,-1,1,1,-1,-1),(-1,-1,1,1,1,1,1,-1,-1),(-1,1,1,-1,1,-1,-1,1,1)}, {(-1,-1,1,-1,-1,1,1,1),(1,-1,-1,1,1,-1,-1,1),(1,-1,1,1,-1,-1,1,1),(1,1,-1,-1,1,1,-1,-1),(-1,-1,1,1,1,1,1,-1,-1),(-1,1,1,-1,1,-1,-1,1,1)}, {(-1,-1,1,-1,-1,1,1,1),(1,-1,-1,1,1,-1,-1,1),(1,-1,1,1,-1,-1,1,1),(1,1,1,-1,-1,-1,1,1,1),(-1,-1,1,1,1,1,1,-1,-1),(1,-1,1,1,1,-1,1,-1,-1)}, {(-1,-1,1,-1,-1,1,1,1),(1,-1,-1,1,1,-1,-1,1),(1,-1,1,1,-1,-1,1,1),(1,1,1,-1,-1,-1,-1,1,1),(-1,-1,1,1,1,1,1,-1,-1),(1,-1,1,1,1,-1,1,-1,-1),(-1,1,1,-1,-1,-1,1,1)}, {(-1,-1,1,-1,-1,1,1,1),(1,-1,-1,1,1,-1,-1,1),(1,-1,-1,1,1,-1,-1,1),(1,1,-1,-1,1,1,-1,-1),(-1,-1,-1,1,1,1,1,1,-1),(-1,1,1,-1,-1,1,1,-1,1,-1),(1,1,1,-1,-1,-1,-1,1,1),(1,-1,-1,-1,-1,1,1,1,-1,-1),(1,-1,-1,1,1,-1,-1,1,1)}, {(-1,-1,1,1,-1,1,1,-1),(-1,-1,1,1,1,1,-1,-1,1),(-1,1,1,-1,-1,-1,1,1,-1),(-1,1,1,1,-1,-1,1,1,1),(-1,1,1,1,-1,-1,1,1,-1)}, {(-1,-1,1,1,-1,1,1,-1),(-1,-1,1,1,1,1,-1,-1,1),(-1,1,1,-1,-1,-1,1,1),(1,-1,1,-1,-1,1,1,-1),(-1,1,1,-1,-1,-1,1,1,1,1),(1,-1,1,-1,-1,-1,1,1,-1,-1)}, {(-1,-1,1,1,-1,1,1,-1),(-1,-1,1,1,1,1,-1,-1,1),(-1,1,1,-1,-1,-1,1,1,1),(-1,1,1,1,-1,-1,1,1,-1),(-1,1,1,-1,-1,-1,1,1,-1)}, {(-1,-1,1,1,-1,1,1,-1),(-1,-1,1,1,1,1,-1,-1,1),(-1,1,1,-1,-1,-1,1,1),(1,-1,-1,1,1,-1,-1,1,1),(-1,1,1,-1,1,1,-1,-1),(1,1,1,1,-1,-1,-1,-1,1),(1,-1,-1,-1,1,1,-1,-1,1)}, {(-1,-1,1,1,-1,1,1,-1),(-1,-1,1,1,1,1,-1,-1,1),(-1,1,1,-1,-1,-1,1,1),(1,-1,-1,1,1,-1,-1,1,1),(-1,1,1,-1,-1,-1,-1,1,1),(1,-1,1,-1,-1,-1,1,1,1),(1,-1,1,-1,-1,-1,1,1,-1),(1,1,1,1,-1,-1,-1,-1,1)}, {(-1,-1,1,1,-1,1,1,-1),(-1,-1,1,1,1,1,-1,-1,1),(-1,1,1,-1,-1,-1,1,1),(1,-1,-1,1,1,1,1,-1,-1),(-1,1,1,-1,-1,-1,-1,1,1),(1,-1,-1,1,1,-1,-1,1,1),(-1,-1,-1,1,1,1,1,1,1),(-1,1,1,-1,1,1,-1,-1,-1)}, {(-1,-1,1,1,-1,1,1,-1),(-1,-1,1,1,1,1,-1,-1,1),(-1,1,1,-1,-1,-1,1,1),(1,-1,-1,1,1,-1,-1,1,1),(-1,1,1,-1,-1,-1,-1,1,1),(1,-1,-1,1,1,-1,-1,1,1),(1,1,1,1,-1,-1,-1,-1,1)}, {(-1,-1,1,1,-1,1,1,-1),(-1,-1,1,1,1,1,-1,-1,1),(-1,1,1,-1,-1,-1,1,1),(1,-1,-1,1,1,-1,-1,1,1),(1,-1,1,1,-1,-1,1,-1,-1),(1,1,1,1,-1,-1,-1,-1)}, {(-1,-1,1,1,-1,1,1,-1),(-1,-1,1,1,1,1,-1,-1,1),(-1,1,1,-1,-1,-1,1,1),(1,-1,-1,1,1,-1,-1,1,1),(-1,-1,-1,1,1,1,1,1,1),(1,-1,1,-1,-1,-1,1,1),(1,1,1,1,-1,-1,-1,-1,1)}, {(-1,-1,1,1,-1,1,1,-1),(-1,-1,1,1,1,1,-1,-1,1),(-1,1,1,1,-1,-1,1,1),(-1,1,1,1,-1,-1,1,1,-1),(1,-1,-1,1,1,1,1,-1,-1),(1,1,1,1,1,-1,-1,-1,-1)}, {(-1,-1,1,1,-1,1,1,-1),(-1,-1,1,1,1,1,-1,-1,1),(-1,1,1,-1,1,1,-1,-1),(1,-1,1,1,1,-1,1,1,-1),(-1,-1,-1,-1,1,1,1,1,1),(-1,1,1,-1,1,1,-1,-1)}, {(-1,-1,1,1,-1,1,1,-1),(-1,1,1,1,1,-1,-1,1),(1,-1,-1,1,1,-1,-1,1,1),(1,-1,-1,1,1,1,-1,-1),(-1,-1,-1,-1,1,1,1,1,1),(-1,1,1,-1,1,1,1,-1,-1),(1,1,1,1,-1,-1,-1,-1)}

1,-1,-1,-1)}, {(-1,-1,1,1,-1,1,1,-1),(-1,-1,1,1,1,1,-1,-1,1),(1,-1,-1,1,1,-1,-1,1,1),(1,-1,-1,1,1,1,1,-1,-1),(1,-1,1,-1,-1,1,1,-1,1),(1,1,1,1,-1,-1,-1,-1)}, {(-1,-1,1,1,-1,1,1,-1),(-1,1,-1,-1,1,1,1,-1),(-1,1,1,-1,-1,-1,1,1),(1,1,1,-1,-1,1,1,-1,-1),(-1,-1,1,1,-1,1,1,-1,1),(-1,1,1,1,1,1,-1,-1,-1)}, {(-1,-1,1,1,-1,1,1,-1),(-1,1,1,-1,-1,1,1,1,-1),(-1,1,1,1,-1,-1,1,1,1),(1,1,1,1,-1,-1,1,1,-1,-1),(-1,-1,1,1,-1,1,1,-1,1),(1,-1,-1,-1,-1,1,1,1,1)}, {(-1,-1,1,1,-1,1,1,-1),(-1,1,1,-1,-1,1,1,1,1,-1),(-1,1,1,1,-1,-1,1,1,1,1),(1,1,1,-1,-1,1,1,-1,-1),(-1,1,1,1,1,1,-1,-1,-1,-1),(1,1,-1,1,1,-1,-1,1,1,-1)}, {(-1,-1,1,1,-1,1,1,-1),(-1,1,-1,-1,1,1,1,1,-1),(-1,1,1,1,-1,-1,-1,1,1,1),(1,1,1,-1,-1,1,1,-1,-1),(1,-1,-1,-1,-1,1,1,1,1),(1,1,-1,1,1,-1,1,1,-1)}, {(-1,-1,1,1,-1,1,1,-1),(-1,1,-1,-1,1,1,1,1,-1),(1,-1,-1,1,1,1,1,-1,-1),(1,1,1,-1,-1,1,1,-1,-1),(-1,-1,1,-1,1,1,1,-1,1),(-1,1,1,1,1,1,-1,-1,-1)}, {(-1,-1,1,1,-1,1,1,-1),(-1,1,-1,-1,1,1,1,1,-1),(1,-1,-1,1,1,1,1,-1,-1),(-1,1,1,-1,-1,1,1,-1,-1),(1,-1,-1,-1,-1,1,1,1,1),(1,1,-1,1,1,-1,-1,1,1,-1)}, {(-1,-1,1,1,-1,1,1,-1),(-1,1,-1,-1,1,1,1,1,-1),(1,-1,-1,1,1,1,1,-1,-1),(1,1,1,-1,-1,1,1,-1,-1),(1,-1,-1,-1,-1,1,1,1,1),(1,1,-1,1,1,-1,-1,1,1,-1)}, {(-1,-1,1,1,-1,1,1,-1),(-1,1,1,1,-1,-1,1,1,1),(-1,1,1,1,-1,1,1,-1,-1),(1,1,-1,-1,-1,1,1,1,-1),(-1,-1,-1,-1,1,1,1,1,1),(-1,1,1,-1,1,1,-1,1,-1)},

{(-1,-1,1,1,-1,1,1,-1),(-1,1,1,1,-1,-1,1,1,1),(-1,1,1,1,-1,1,1,-1,-1),(1,1,-1,-1,-1,1,1,1,-1),(-1,-1,-1,-1,1,1,1,1,1),(1,-1,1,-1,-1,1,-1,1)}, {(-1,-1,1,1,-1,1,1,-1),(-1,1,1,1,-1,-1,1,1,1),(-1,1,1,-1,1,1,1,-1,-1),(1,1,-1,-1,-1,1,1,1,-1),(1,1,1,1,-1,-1,-1,-1)}, {(-1,-1,1,1,-1,1,1,-1),(-1,1,1,1,-1,-1,1,1,1),(-1,1,1,1,-1,1,1,1,-1,-1),(1,1,-1,1,-1,1,1,1,-1),(1,-1,1,-1,-1,1,1,-1,-1),(1,1,1,1,-1,-1,-1,-1)}, {(-1,-1,1,1,-1,1,1,-1),(-1,1,1,1,-1,-1,1,1,1),(1,-1,-1,1,-1,1,1,1),(1,1,1,-1,-1,1,1,1,-1),(-1,-1,-1,-1,1,1,1,1,1),(-1,1,1,1,1,-1,-1,-1)}, {(-1,-1,1,1,-1,1,1,-1),(-1,1,1,1,-1,-1,1,1,1),(1,-1,-1,1,-1,-1,1,1,1),(1,1,1,-1,-1,1,1,1,-1),(-1,-1,-1,1,1,1,1,-1),(1,-1,1,1,-1,-1,1,-1,1)}, {(-1,-1,1,1,-1,1,1,-1),(-1,1,1,1,-1,-1,1,1,1),(1,-1,-1,1,-1,-1,1,1,1),(1,1,-1,-1,-1,1,1,-1),(-1,1,1,1,1,-1,-1,1,-1),(1,1,1,1,1,-1,-1,1,-1)},

{(-1,-1,1,1,-1,1,1,-1),(-1,1,1,1,-1,-1,1,1,1),(1,-1,-1,1,-1,-1,1,1,1),(1,1,-1,-1,-1,1,1,-1,-1),(-1,-1,1,-1,1,1,1,-1,-1,1),(1,1,1,1,-1,-1,-1,-1)}, {(-1,-1,1,1,-1,1,1,-1),(-1,1,1,1,-1,-1,1,1,1),(1,-1,-1,1,-1,-1,1,1,1),(1,1,-1,-1,-1,1,1,-1,-1),(1,-1,-1,-1,-1,1,1,1),(1,1,1,1,-1,-1,-1,-1)}, {(-1,-1,1,1,-1,1,1,-1),(-1,1,1,1,-1,-1,1,1,1),(1,-1,1,1,1,-1,1,1,-1),(1,1,1,1,-1,-1,1,1,-1,-1),(-1,-1,1,1,-1,1,1,-1,1),(-1,1,1,-1,1,1,-1,1,-1)}, {(-1,-1,1,1,-1,1,1,-1),(-1,1,1,1,-1,-1,1,1,1),(1,1,1,-1,-1,1,1,-1,-1),(-1,-1,1,1,-1,1,1,-1,1),(1,-1,-1,-1,-1,1,1,1,1)}, {(-1,-1,1,1,-1,1,1,-1),(-1,1,1,1,-1,-1,1,1,1),(1,-1,1,1,-1,-1,1,1),(1,1,1,-1,-1,1,1,-1,-1),(-1,1,1,1,1,-1,-1,-1),(1,1,-1,1,1,-1,-1,1,-1,-1)}, {(-1,-1,1,1,-1,1,1,-1),(-1,1,1,1,-1,-1,1,1,1),(1,-1,1,1,1,-1,-1,1,1),(1,1,1,1,-1,-1,1,1,-1,-1),(1,-1,-1,-1,-1,1,1,1,1),(1,1,-1,1,1,-1,-1,1,-1)},

{(-1,-1,1,1,1,-1,1,1,-1),(-1,1,1,1,-1,1,1,1,-1,-1),(1,-1,-1,1,1,1,1,-1,-1),(1,1,1,-1,-1,-1,1,1,1,-1),(-1,-1,-1,-1,1,1,1,1,1),(-1,1,1,-1,1,1,-1,1,-1)}, {(-1,-1,1,1,-1,1,1,-1),(-1,1,1,1,-1,1,1,1,-1),(1,-1,1,1,1,-1,-1,1,-1),(1,1,1,-1,-1,1,1,1,-1),(-1,-1,-1,-1,1,1,1,1),(1,-1,1,-1,-1,-1,1,1,-1)},

{(-1,-1,1,1,1,-1,1,1,-1),(-1,1,1,1,-1,1,1,1,-1,-1),(1,-1,1,1,1,1,-1,-1,-1),(1,1,1,-1,-1,1,1,-1,-1),(-1,1,1,-1,1,1,1,-1,-1),(1,1,1,1,1,-1,-1,-1,-1)}, {(-1,-1,1,1,-1,1,1,-1),(-1,1,1,1,-1,1,1,1,-1),(1,-1,1,1,1,-1,-1,1,-1),(1,1,1,-1,-1,-1,1,1,-1),(1,-1,1,-1,-1,-1,1,1,1),(1,1,1,1,-1,-1,-1,-1)}, {(-1,-1,1,1,1,-1,1,1,-1),(-1,1,1,1,-1,1,1,1,-1,-1),(1,-1,1,1,1,-1,-1,1,1),(1,1,-1,-1,1,1,-1,-1,-1),(-1,-1,-1,-1,1,1,1,1,1),(-1,1,-1,1,1,-1,-1,1,1)}, {(-1,-1,1,1,1,-1,1,-1,1),(-1,1,1,1,-1,1,1,-1,-1),(1,-1,-1,1,1,1,-1,-1,1),(-1,1,1,1,-1,1,1,-1,-1),(1,-1,1,-1,-1,-1,1,1,1,-1),(1,-1,1,-1,-1,-1,1,1,-1,1)}, {(-1,-1,1,1,1,-1,1,-1,1),(-1,1,1,1,-1,1,1,-1,-1),(1,-1,-1,-1,1,1,1,-1,-1),(1,1,1,-1,-1,1,1,-1,-1),(-1,1,1,1,1,1,-1,-1,-1),(-1,1,1,1,1,1,-1,-1,-1)}, {(-1,-1,1,1,1,-1,1,-1,1),(-1,1,1,-1,-1,-1,1,1,1),(-1,1,1,-1,1,1,1,-1,-1),(1,1,-1,-1,1,-1,-1,1),(1,1,1,1,-1,-1,1,-1),(-1,-1,-1,-1,1,1,1,1,1),(-1,1,1,-1,1,1,-1,1,-1)}, {(-1,-1,1,1,1,-1,1,-1,1),(-1,1,1,-1,1,1,1,-1,-1),(1,-1,-1,1,1,1,1,-1,-1),(1,1,-1,1,1,-1,1,1,-1),(-1,-1,-1,1,1,1,1,1,-1),(-1,1,1,-1,1,1,-1,1,-1)}, {(-1,-1,1,1,1,-1,1,-1,1),(-1,1,1,-1,1,1,1,-1,-1),(1,-1,-1,1,1,1,-1,1,-1),(1,1,-1,1,1,-1,-1,-1),(-1,-1,1,1,1,1,-1,-1,1),(-1,1,1,-1,1,1,-1,1,-1)}, {(-1,-1,1,1,1,-1,1,-1,1),(-1,1,1,-1,1,1,1,-1,-1),(-1,1,1,1,1,-1,-1,1,-1,-1),(1,1,-1,1,1,-1,-1,-1),(-1,-1,-1,-1,1,1,1,1),(1,1,1,-1,-1,-1,1,-1,1)},

{(-1,-1,1,1,1,-1,1,-1),(-1,1,1,-1,1,1,1,-1,-1),(-1,1,1,1,1,-1,-1,1,1,-1),(1,1,-1,1,1,-1,-1,-1,1),(1,-1,1,1,1,-1,1,-1,1,-1),(1,1,1,-1,-1,-1,-1,1,-1)}, {(-1,-1,1,1,1,-1,1,-1),(-1,1,1,1,-1,1,1,1,-1,-1),(1,-1,-1,1,1,1,-1,-1,1),(1,1,-1,-1,-1,1,1,1,-1,-1),(-1,-1,1,1,1,1,1,-1,-1),(-1,1,1,-1,1,1,-1,1,-1)}, {(-1,-1,1,1,1,-1,1,-1),(-1,1,1,-1,1,1,1,-1,-1),(-1,1,1,1,1,-1,-1,1,1,-1),(1,1,-1,1,1,-1,-1,-1),(-1,-1,1,1,1,1,-1,-1,1),(1,-1,1,-1,-1,-1,1,-1,1)}, {(-1,-1,1,1,1,-1,1,-1),(-1,1,1,1,-1,1,1,1,-1,-1),(1,-1,-1,1,1,1,-1,-1,1),(1,1,-1,-1,-1,-1,1,1),(-1,1,1,-1,1,1,-1,-1,1,-1,-1),(-1,1,1,1,1,1,1,-1,-1,-1)}, {(-1,-1,1,1,1,-1,1,-1),(-1,1,1,1,-1,1,1,1,-1,-1),(1,-1,-1,1,1,1,-1,-1,1,-1),(1,1,1,-1,-1,1,1,-1,-1),(-1,1,1,-1,1,1,-1,1,-1),(1,-1,-1,-1,1,1,1,1,-1)},

1,1,-1,1,1),(1,1,1,-1,-1,-1,-1,1)}, {(-1,-1,1,1,1,1,-1,-1,1),(-1,1,1,-1,1,1,1,-1,-1),(1,-1,-1,-1,1,1,1,-1,1),(1,1,-1,1,1,-1,-1,-1),(1,-1,1,1,1,-1,1,-1,-1),(1,1,1,-1,-1,-1,-1,1)}, {(-1,-1,1,1,1,1,-1,-1,1),(-1,1,1,-1,1,1,1,-1,-1),(1,-1,-1,1,1,1,1,-1,-1),(1,1,-1,-1,1,-1,-1,1),(-1,-1,-1,-1,1,1,1,1,1),(-1,1,1,-1,1,1,-1,1,-1)}, {(-1,-1,1,1,1,1,-1,-1,1),(-1,1,1,-1,1,1,1,-1,-1),(1,-1,-1,1,1,1,1,-1,-1),(1,1,-1,-1,1,-1,-1,1),(-1,-1,-1,-1,1,1,1,1,1),(1,-1,1,-1,-1,1,1,-1,1)}, {(-1,-1,1,1,1,1,-1,-1,1),(-1,1,1,1,-1,1,1,1,-1),(1,-1,-1,1,1,1,1,-1,-1),(1,1,-1,-1,1,1,-1,-1,1),(-1,1,-1,1,1,1,-1,1,1,-1),(1,1,1,1,1,-1,-1,-1,-1)}, {(-1,-1,1,1,1,1,-1,-1,1),(-1,1,1,1,-1,1,1,1,-1,-1),(1,-1,-1,1,1,1,1,-1,-1),(1,1,1,-1,-1,1,1,-1,-1,1),(1,-1,1,1,1,-1,-1,1,1,-1),(1,1,1,1,1,-1,-1,-1,-1)}, {(-1,-1,1,1,1,1,-1,-1,1),(-1,1,1,1,1,-1,1,1,-1),(1,-1,-1,1,-1,1,1,1),(1,1,-1,1,1,-1,-1,1),(-1,-1,1,1,1,1,1,-1),(-1,1,1,-1,1,1,-1,1,1)}, {(-1,-1,1,1,1,1,-1,-1,1),(-1,1,1,1,1,-1,1,1,-1),(1,-1,-1,1,-1,1,1,1),(1,1,-1,1,1,-1,-1,-1),(-1,-1,1,1,1,1,1,1,-1),(1,-1,1,1,1,-1,1,-1,-1)}, {(-1,-1,1,1,1,1,-1,-1,1),(-1,1,1,1,1,-1,1,1,-1),(1,-1,-1,1,-1,1,1,1),(1,1,-1,1,1,-1,-1,-1),(-1,1,1,-1,1,1,1,-1),(1,-1,1,1,-1,1,-1,-1)}, {(-1,-1,1,1,1,1,-1,-1,1),(-1,1,1,1,1,-1,1,1,-1),(1,-1,-1,1,-1,1,1,1),(1,1,-1,1,1,1,-1,-1,-1),(-1,1,1,1,-1,1,1,-1,-1),(1,1,1,-1,-1,-1,-1,1)}, {(-1,-1,1,1,1,1,-1,-1,1),(1,-1,-1,1,1,1,-1,1),(1,-1,-1,1,-1,1,1,1),(1,1,-1,1,1,1,-1,-1,-1),(-1,-1,-1,1,1,1,1,1,-1),(-1,1,-1,1,1,-1,1,1)}, {(-1,-1,1,1,1,1,-1,-1,1),(1,-1,-1,1,1,1,-1,1),(1,-1,-1,1,-1,1,1,1),(1,1,-1,1,1,1,-1,-1,-1),(1,-1,-1,1,-1,-1,1,1,1),(1,1,1,-1,-1,-1,-1,1)}, {(-1,-1,1,1,1,1,-1,-1,1),(1,-1,-1,1,1,1,-1,1),(1,-1,-1,1,-1,1,1,1),(1,1,-1,1,1,1,-1,-1,-1),(-1,1,-1,1,1,-1,1,-1),(1,1,1,1,-1,-1,-1,-1,1)}, {(-1,-1,1,1,1,1,-1,-1,1),(1,-1,-1,1,1,1,-1,1),(1,-1,-1,1,1,1,-1,-1),(1,1,-1,1,-1,1,-1,-1),(-1,-1,1,1,1,1,1,-1,-1),(1,-1,1,1,1,-1,-1,-1,1)}, {(-1,-1,1,1,1,1,-1,-1,1),(1,-1,-1,1,1,1,-1,1),(1,1,-1,1,-1,1,-1,-1),(-1,-1,1,1,1,1,1,-1,-1),(-1,1,1,-1,1,1,-1,1,-1)}, {(-1,1,1,-1,1,1,1,-1,-1,1),(1,-1,-1,1,1,1,-1,-1,1),(1,-1,1,1,1,1,-1,-1),(1,1,-1,1,1,-1,-1,1),(-1,-1,1,1,1,1,1,-1),(-1,1,1,1,-1,1,-1,-1,1)}, {(-1,1,1,-1,1,1,1,-1,-1,1),(1,-1,-1,1,1,1,-1,-1,1),(1,1,-1,1,1,-1,-1,1,-1),(1,1,1,-1,1,1,-1,-1,1),(-1,-1,1,1,1,1,1,-1,-1,1),(1,-1,-1,-1,1,1,1,1,1)}, {(-1,1,1,-1,1,1,1,-1,-1,1),(-1,1,1,1,-1,-1,1,1,1),(1,1,-1,1,-1,1,1,-1,-1),(1,1,1,-1,1,1,-1,-1,1),(-1,1,1,1,1,1,-1,-1,1),(1,1,-1,1,-1,-1,-1,1)}, {(-1,1,1,-1,-1,1,1,1,-1),(-1,1,1,1,-1,-1,1,1,1),(1,1,-1,1,-1,1,-1,1,1),(1,1,1,-1,1,-1,1,-1,-1),(-1,1,1,1,1,1,-1,-1,-1),(1,1,-1,1,-1,-1,-1,1)}, {(-1,1,1,-1,-1,1,1,1,-1),(-1,1,1,1,-1,-1,1,1,1),(1,1,-1,1,-1,1,1,-1,-1),(1,1,1,-1,1,-1,1,-1,-1),(-1,1,1,1,1,1,-1,-1,1),(1,-1,-1,-1,1,1,1,1,1)}, {(-1,1,1,-1,-1,1,1,1,-1),(1,-1,-1,1,1,1,1,-1,-1),(1,1,-1,1,1,-1,-1,1,-1),(1,1,1,-1,-1,1,1,-1,-1),(-1,1,1,-1,1,1,1,-1,-1),(1,-1,-1,-1,-1,1,1,1,1)}, {(-1,1,1,-1,-1,1,1,1,-1),(-1,1,1,1,-1,-1,1,1,1),(1,1,-1,1,1,-1,-1,1,-1),(1,1,1,-1,-1,1,1,-1,-1),(-1,1,1,-1,1,1,1,-1,-1),(1,-1,-1,-1,-1,-1,1,1,1)}, {(-1,1,1,-1,-1,1,1,1,-1),(1,-1,-1,1,1,1,1,-1),(1,1,-1,1,1,-1,-1,1,-1),(1,1,1,-1,-1,1,1,-1,-1),(-1,1,1,1,1,1,1,-1,-1),(-1,-1,1,1,1,1,1,-1,-1),(1,1,-1,1,-1,-1,1,-1)}, {(-1,1,1,-1,-1,1,1,1,-1),(1,-1,-1,1,1,1,1,-1),(1,1,-1,1,1,-1,-1,1,-1),(1,1,1,-1,-1,1,1,-1,-1),(-1,1,1,1,-1,1,1,-1,-1),(-1,-1,1,1,1,1,1,-1,1)}, {(-1,1,1,-1,-1,1,1,1,-1),(1,-1,-1,1,1,1,1,-1),(1,1,1,-1,-1,1,1,-1,-1),(1,1,1,-1,1,1,-1,-1,1),(-1,1,1,-1,-1,1,1,1,-1),(1,-1,-1,-1,-1,1,1,1)}, {(-1,1,1,-1,-1,1,1,1,-1),(1,-1,-1,1,1,1,1,-1),(1,1,-1,1,1,-1,1,-1,-1),(1,1,1,-1,-1,1,-1,-1),(-1,1,1,1,1,1,-1,-1),(1,1,-1,-1,-1,1,1,1)}, {(-1,1,1,-1,-1,1,1,1,-1),(1,-1,-1,1,1,1,1,-1),(1,1,-1,1,1,1,-1,-1),(1,1,1,-1,1,1,-1,-1),(-1,-1,1,1,1,1,1,-1,-1),(1,-1,-1,-1,1,1,1,1)}, {(-1,1,1,-1,-1,1,1,1,-1),(1,-1,-1,1,1,1,1,-1),(1,1,1,-1,-1,1,-1,-1),(1,1,1,-1,1,1,-1,-1,-1),(-1,-1,1,1,1,1,1,-1,-1),(1,-1,1,-1,-1,-1,1,1,1)}, {(-1,1,1,-1,-1,1,1,1,-1),(1,-1,-1,1,1,1,1,-1),(1,1,1,-1,-1,1,-1,-1),(1,1,1,-1,1,1,-1,-1,-1),(-1,1,1,1,1,1,-1,-1),(1,-1,1,-1,-1,1,1,1)}, {(-1,1,1,-1,-1,1,1,1,-1),(1,-1,-1,1,1,1,-1,1),(1,1,-1,-1,1,1,1,-1),(1,1,1,-1,-1,1,-1,-1),(-1,-1,-1,-1,1,1,1,1,1),(1,-1,1,-1,-1,1,1,-1)}, {(-1,1,1,-1,-1,-1,1,1,1),(-1,1,1,1,1,-1,1,1,-1),(1,1,-1,-1,1,-1,1,1,1),(1,1,-1,-1,1,-1,-1,-1),(-1,-1,-1,-1,1,1,1,1,1),(-1,1,1,-1,1,1,-1,1,-1)}, {(-1,1,1,-1,-1,-1,1,1,1),(-1,1,1,1,1,-1,1,1,-1),(1,1,-1,-1,1,-1,1,1,1),(1,1,-1,-1,1,-1,-1,-1),(-1,-1,-1,-1,1,1,1,1,1),(1,-1,1,-1,-1,1,1,-1)}, {(-1,1,1,-1,-1,-1,1,1,1),(-1,1,1,1,1,-1,1,1,-1),(1,1,-1,-1,1,-1,1,1,1),(1,1,-1,-1,1,-1,-1,-1),(-1,-1,1,1,1,1,-1,1,1),(1,-1,1,-1,-1,1,1,-1)}, {(-1,1,1,1,-1,-1,1,1,1),(-1,1,1,1,1,1,1,-1,-1),(1,1,-1,1,-1,1,1,1),(1,1,-1,1,-1,1,-1,-1),(-1,-1,-1,-1,1,1,1,1,1),(-1,1,1,-1,1,1,-1,1,-1)}, {(-1,1,1,1,-1,-1,1,1,1),(-1,1,1,1,1,1,1,-1,-1),(1,1,-1,1,-1,1,1,1),(1,1,-1,1,-1,1,-1,-1),(-1,-1,1,1,1,1,-1,1,1,1),(1,-1,1,-1,-1,1,1,-1)}, {(-1,1,1,1,-1,-1,1,1,1),(-1,1,1,1,1,1,1,-1,-1),(1,1,-1,-1,1,1,1,-1),(1,1,-1,-1,1,1,-1,-1),(-1,-1,-1,-1,1,1,1,1,1),(1,-1,1,-1,-1,1,-1,-1)}, {(-1,1,1,1,-1,-1,1,1,1),(-1,1,1,1,1,1,1,-1,-1),(1,1,-1,-1,1,1,1,-1),(1,1,-1,-1,1,1,-1,-1),(-1,-1,1,1,1,1,-1,1,1,1),(-1,-1,1,1,1,1,-1,1,1,1),(1,-1,1,-1,-1,1,-1,-1)}, {(-1,1,1,1,-1,-1,1,1,1),(-1,1,1,1,1,1,1,-1,-1),(1,1,-1,1,-1,-1,1,1,1),(1,1,-1,1,-1,-1,-1,-1),(-1,1,1,-1,1,1,1,-1,-1),(1,-1,1,1,1,-1,-1,-1,1)}, {(-1,1,1,1,-1,-1,1,1,1),(-1,1,1,1,1,1,1,-1,-1),(1,1,-1,1,-1,-1,1,1,1),(1,1,-1,1,-1,-1,-1,-1),(-1,-1,1,1,1,1,-1,1,1,1),(1,1,1,1,1,-1,-1,-1,-1)}, {(-1,1,1,1,-1,-1,1,1,1),(-1,1,1,1,1,1,1,-1,-1),(1,1,-1,-1,1,1,1,-1),(1,1,-1,-1,1,1,-1,-1),(-1,1,1,1,1,1,-1,-1),(1,-1,1,-1,-1,1,-1,-1)}, {(-1,1,1,1,-1,-1,1,1,1),(1,-1,-1,1,1,1,-1,-1),(1,1,-1,-1,1,1,1,-1),(1,1,-1,-1,1,-1,1,-1),(-1,-1,-1,-1,1,1,1,1,1),(1,-1,1,-1,-1,1,1,-1)}, {(-1,1,1,1,-1,-1,1,1,1),(1,-1,1,1,1,-1,-1,1),(1,1,-1,-1,1,1,1,-1),(1,1,-1,-1,1,-1,1,-1),(-1,-1,-1,-1,1,1,1,1,1),(1,-1,1,-1,-1,-1,1,1,-1)}, {(-1,1,1,1,-1,-1,1,1,1),(-1,1,1,1,-1,1,1,1,-1),(1,1,-1,-1,1,-1,1,1,1),(1,1,-1,1,-1,-1,1,-1),(-1,-1,1,1,1,1,-1,-1),(1,1,1,1,1,-1,-1,-1,-1)}, {(-1,1,1,1,-1,-1,1,1,1),(1,-1,1,1,-1,-1,1,1),(1,1,-1,-1,1,-1,1,1,1),(1,1,-1,1,-1,-1,1,-1),(-1,-1,-1,-1,1,1,1,1,1),(1,1,-1,1,-1,-1,-1,1)}, {(-1,1,1,1,-1,-1,1,1,1),(1,-1,1,1,1,-1,-1,1),(1,1,-1,-1,1,-1,1,1,1),(1,1,-1,1,-1,-1,1,-1),(-1,-1,-1,-1,1,1,1,1,1),(1,-1,1,1,-1,1,1,-1)}, {(-1,1,1,1,-1,-1,1,1,1),(1,-1,-1,1,-1,-1,1,1),(1,1,-1,-1,1,-1,1,1,1),(1,1,-1,1,-1,1,-1,-1),(-1,1,1,1,1,1,-1,-1,-1),(1,1,-1,1,-1,-1,-1,1)}, {(-1,1,1,1,-1,-1,1,1,1),(1,-1,1,1,-1,-1,1,1),(1,1,-1,-1,1,-1,1,1,1),(1,1,-1,1,-1,-1,1,-1),(-1,-1,1,1,1,1,-1,-1,-1),(1,1,-1,1,-1,-1,-1,1)}, {(-1,1,1,1,-1,-1,1,1,1),(1,-1,1,1,-1,-1,1,1),(1,1,-1,-1,1,-1,1,1,1),(1,1,1,-1,-1,1,1,-1,-1),(-1,-1,1,1,1,1,1,-1,-1),(1,1,-1,1,-1,-1,-1,1)}, {(-1,1,1,1,-1,-1,1,1,1),(1,-1,-1,1,-1,-1,1,1),(1,1,-1,-1,1,-1,1,1,1),(1,1,1,-1,-1,1,-1,-1),(-1,1,1,1,1,1,-1,-1,-1),(1,1,-1,1,-1,-1,-1,1)}, {(-1,1,1,1,-1,-1,1,1,1),(1,-1,-1,1,-1,-1,1,1),(1,1,-1,-1,1,-1,1,1,1),(1,1,1,-1,-1,1,-1,-1),(-1,1,1,1,1,1,1,-1,-1),(-1,1,1,-1,1,1,-1,1,1)}, {(-1,1,1,1,-1,-1,1,1,1),(1,-1,1,1,1,-1,-1,1),(1,1,-1,-1,1,-1,1,1,1),(1,1,1,-1,-1,1,-1,-1),(-1,1,1,1,1,1,-1,-1,-1),(1,-1,-1,-1,-1,1,1,1)}, {(-1,1,1,1,-1,-1,1,1,1),(1,-1,1,1,-1,-1,1,1),(1,1,-1,-1,1,-1,1,1,1),(1,1,1,-1,-1,1,-1,-1),(-1,1,1,1,1,1,-1,-1,-1),(1,1,-1,-1,-1,1,1,1)}, {(-1,1,1,1,-1,-1,1,1),(1,-1,1,1,1,-1,-1,1),(1,1,-1,-1,1,-1,1,1,1),(1,1,1,-1,-1,1,-1,-1),(-1,1,1,1,1,1,-1,-1),(1,1,-1,1,-1,-1,-1,1)}, {(-1,1,1,1,-1,-1,1,1),(1,-1,1,1,-1,-1,1,1),(1,1,-1,-1,1,-1,1,1),(1,1,1,-1,1,1,-1,-1,-1),(-1,-1,1,1,1,1,-1,-1),(1,1,-1,1,-1,-1,1,-1)}, {(-1,1,1,1,-1,-1,1,1),(1,-1,-1,1,-1,-1,1,1),(1,1,1,-1,-1,1,1,-1),(1,1,1,-1,1,1,-1,-1,-1),(1,-1,-1,-1,-1,1,1,1),(1,1,-1,1,-1,-1,1,-1)}, {(-1,1,1,-1,1,1,1,-1,-1),(-1,1,1,1,1,-1,1,1,-1),(1,1,-1,-1,-1,1,1,1),(1,1,-1,1,1,-1,-1,-1),(-1,-1,1,1,1,1,1,-1),(1,-1,1,1,1,-1,-1,-1)}, {(-1,1,1,1,-1,1,1,1,-1),(-1,1,1,1,1,-1,1,1,-1),(1,1,-1,-1,-1,1,1,1,-1),(1,1,-1,1,1,-1,-1,-1),(-1,-1,1,1,1,1,1,-1),(1,-1,-1,-1,-1,-1,1,1,-1,-1),(1,-1,1,-1,-1,-1,1,1,1,-1),(1,-
1,1,1,-1,1,-1,-1)}, {(-1,1,1,1,-1,1,1,1,-1,-1),(-1,1,1,1,1,-1,1,1,-1),(1,1,-1,-1,-1,1,1,1,-1),(1,1,-1,1,1,-1,-1,-1),(-1,1,-

1,-1,1,-1,1,1,1),(1,1,1,-1,-1,-1,-1,1)},    {(-1,1,1,-1,1,1,-1,-1),(-1,1,1,1,1,-1,-1,1,-1),(1,1,-1,-1,-1,1,1,-1),(1,1,-1,1,1,1,-1,-1,-1),(1,-1,1,1,1,-1,1,-1,-1),(1,1,1,1,-1,-1,-1,-1,1)},    {(-1,1,1,-1,1,1,-1,-1),(1,-1,-1,-1,1,1,-1,1),(1,1,-1,-1,1,1,1,-1),(1,1,-1,1,1,1,-1,-1,-1),(-1,-1,-1,1,1,1,1,1,-1),(-1,1,-1,-1,1,1,-1,1,1)},    {(-1,1,1,-1,1,1,-1,-1),(1,-1,-1,-1,1,1,1,-1,1),(1,1,-1,-1,1,1,1,-1),(1,1,-1,1,1,1,-1,-1,-1),(-1,-1,-1,1,1,1,1,1,-1),(1,-1,1,1,1,-1,1,-1,-1,-1)},    {(-1,1,1,-1,1,1,1,-1,-1),(1,-1,-1,-1,1,1,1,-1,1),(1,1,-1,-1,-1,1,1,1,-1),(1,1,-1,1,1,1,-1,-1,-1),(-1,1,1,-1,-1,1,1,-1,1,1),(1,1,1,1,-1,-1,-1,-1,1,1)},    {(-1,1,1,-1,1,1,-1,-1),(1,-1,-1,-1,1,1,1,-1,1),(1,1,-1,-1,-1,1,1,1,-1),(1,1,-1,1,1,1,-1,-1,-1),(1,-1,1,1,1,-1,1,1,-1),(1,1,1,-1,-1,-1,-1,1)},    {(-1,1,1,-1,1,1,-1,-1),(1,-1,-1,1,1,1,1,-1,-1),(1,1,-1,-1,-1,1,1,1,-1),(1,1,-1,-1,1,1,-1,-1),(-1,-1,-1,-1,1,1,1,1,1),(-1,1,1,-1,1,1,1,-1,1,-1)},    {(-1,1,1,-1,1,1,-1,-1),(1,-1,-1,1,1,1,1,-1,-1),(1,1,-1,-1,-1,1,1,1,-1),(1,1,-1,-1,1,1,-1,-1,1),(-1,-1,-1,-1,1,1,1,1,1),(1,-1,1,-1,-1,1,1,-1,-1,1)},    {(-1,1,1,-1,1,1,-1,-1),(1,-1,-1,1,1,1,1,-1,-1),(1,1,-1,-1,-1,1,1,1,-1),(1,1,-1,-1,1,1,-1,-1,1),(-1,1,-1,1,1,1,-1,1,1,-1),(1,1,1,1,-1,-1,-1,-1,1)},    {(-1,1,1,-1,1,1,-1,-1),(1,-1,-1,1,1,1,1,-1,-1),(1,1,-1,-1,-1,1,1,1,-1),(1,1,-1,1,1,1,-1,-1,1,-1),(1,-1,1,-1,-1,1,1,-1,1,-1),(1,1,1,1,1,-1,-1,-1,-1,1)},
{(-1,1,1,1,1,-1,-1,1,-1),(1,-1,-1,1,1,-1,1,1,1),(1,1,-1,-1,1,1,1,-1),(1,1,-1,1,1,1,-1,-1,-1),(-1,-1,-1,1,1,1,1,1,1,-1),(-1,1,1,-1,-1,1,1,-1,1,1,1)},    {(-1,1,1,1,1,-1,1,1,-1),(1,-1,-1,1,1,-1,1,1,1),(1,1,-1,-1,-1,1,1,1,-1),(1,1,-1,1,1,1,-1,-1,-1),(-1,-1,-1,1,1,1,1,1,1,-1),(1,-1,1,1,1,-1,1,1,-1,-1)},    {(-1,1,1,1,1,-1,-1,1,-1),(1,-1,-1,1,1,-1,1,1,1),(1,1,-1,-1,-1,1,1,1,-1),(1,1,-1,1,1,1,-1,-1,-1),(-1,1,1,-1,-1,1,1,-1,1,1),(1,1,1,1,-1,-1,-1,-1,1)},    {(-1,1,1,1,1,-1,-1,1,-1),(1,-1,1,1,1,-1,-1,1),(1,1,-1,-1,1,1,1,-1),(1,1,-1,1,1,1,-1,-1,-1),(1,-1,1,1,1,-1,1,1,-1),(-1,1,1,-1,-1,1,1,-1,1,-1,1)},    {(-1,1,1,1,1,-1,-1,1,-1),(1,-1,1,1,1,-1,-1,-1,1),(1,1,-1,-1,1,1,1,-1),(1,1,-1,1,1,1,-1,-1,-1),(-1,-1,1,1,1,1,1,-1,-1),(1,-1,-1,1,1,1,-1,1,1,-1)},
{(-1,1,1,1,1,-1,-1,1,-1),(1,-1,1,1,1,-1,-1,-1,1),(1,1,-1,1,1,1,-1,-1,-1),(1,1,1,-1,-1,1,1,-1,-1,-1),(-1,1,1,-1,1,1,-1,-1,-1,1),(1,1,-1,-1,-1,-1,1,1,1)},    {(-1,1,1,1,1,-1,-1,1,-1),(1,-1,1,1,1,-1,-1,-1,1),(1,1,-1,1,1,1,-1,-1,-1),(1,1,1,-1,-1,1,1,-1,-1,-1),(1,-1,-1,1,1,-1,1,1,-1),(1,1,-1,-1,-1,-1,1,1,1)},    {(1,-1,-1,-1,1,1,-1,1),(1,-1,-1,1,1,1,-1,1,1),(1,1,-1,-1,-1,1,1,1,-1),(1,1,-1,1,1,1,-1,-1,-1),(-1,-1,-1,1,1,1,1,1,-1),(-1,1,1,-1,-1,1,1,-1,1,1)},    {(1,-1,-1,-1,1,1,-1,1),(1,-1,-1,1,1,-1,1,1,1),(1,1,-1,-1,-1,1,1,1,-1),(1,1,-1,1,1,1,-1,-1,-1),(-1,-1,-1,1,1,1,1,1,1,-1),(1,-1,1,1,1,-1,1,1,-1,-1)},    {(1,-1,-1,-1,1,1,1,-1),(1,-1,-1,1,1,-1,1,1,1),(1,1,-1,-1,-1,1,1,1,-1),(1,1,-1,1,1,1,-1,-1,-1),(-1,-1,-1,1,1,1,1,1,1),(1,1,1,1,-1,-1,-1,-1,-1,1)},
{(1,-1,-1,-1,1,1,-1,1),(1,-1,-1,1,1,-1,1,1,1),(1,1,-1,-1,-1,1,1,1,-1),(1,1,-1,1,1,1,-1,-1,-1),(-1,1,1,1,-1,1,1,-1,-1,-1),(1,1,1,1,-1,-1,-1,-1,1)},    {(1,-1,-1,-1,1,1,-1,1),(1,-1,1,1,1,-1,-1,-1,1),(1,1,-1,1,1,1,-1,-1,-1),(1,1,1,1,-1,-1,1,1,-1,-1,-1),(-1,-1,-1,1,1,1,1,1,1,-1),(-1,1,1,-1,-1,1,1,-1,1,1)},    {(1,-1,-1,-1,1,1,-1,1),(1,-1,1,1,1,-1,-1,-1,1),(1,1,-1,-1,1,1,-1,-1),(-1,-1,1,1,1,1,1,-1,-1),(1,-1,-1,1,-1,1,1,1,-1)},    {(1,-1,-1,-1,1,1,-1,1),(1,-1,1,1,1,-1,-1,-1,1),(1,1,-1,-1,1,1,1,-1,-1,-1),(-1,1,1,-1,1,1,-1,-1,-1),(1,1,-1,-1,-1,-1,1,1,1)},    {(1,-1,-1,-1,1,1,-1,1),(1,-1,1,1,1,-1,-1,-1,1),(1,1,-1,1,1,1,-1,-1,-1),(1,1,1,-1,-1,1,1,-1,-1,-1),(-1,1,1,-1,1,1,-1,-1,-1),(1,1,-1,-1,-1,-1,1,1,1)},
{(1,-1,-1,1,-1,1,1,-1),(1,-1,1,1,1,1,-1,-1),(1,1,-1,-1,-1,1,1,1,-1),(1,1,-1,-1,1,1,-1,-1),(-1,-1,-1,-1,1,1,1,1,1),(-1,1,-1,1,1,1,-1,1,-1,-1)},    {(1,-1,-1,1,1,1,-1,-1),(1,-1,-1,1,1,1,-1,-1),(1,1,-1,-1,1,1,-1,-1),(1,1,-1,-1,1,1,-1,-1),(-1,1,-1,-1,1,1,1,1,1),(1,-1,1,-1,-1,1,1,-1,-1,1)},    {(1,-1,-1,1,1,1,-1,-1),(1,-1,-1,1,1,1,-1,-1),(1,1,-1,-1,1,1,-1,-1),(1,1,-1,-1,1,1,-1,1,-1),(-1,-1,1,1,1,1,1,-1,-1),(1,-1,-1,1,-1,1,1,1,-1)},    {(1,-1,-1,1,1,1,-1,-1),(1,-1,-1,1,1,1,-1,-1),(1,1,-1,-1,1,1,-1,-1),(1,1,-1,-1,1,1,-1,1,-1),(1,-1,-1,1,-1,1,1,1,-1),(-1,1,1,1,1,1,-1,-1,-1)},    {(1,-1,-1,1,-1,1,1,-1),(1,-1,1,1,1,-1,-1,-1,1),(1,1,-1,-1,-1,1,1,1,-1),(1,1,-1,-1,1,1,-1,-1),(-1,-1,-1,1,1,1,1,1,-1),(-1,1,-1,1,1,1,-1,1,1,-1)},
{(-1,-1,-1,-1,1,1,1,1,1),(-1,-1,1,1,1,1,1,-1,-1),(-1,1,-1,1,1,1,-1,-1,-1),(-1,1,1,-1,1,1,-1,-1,-1),(-1,-1,1,1,1,-1,-1,1,1,-1),(-1,1,1,1,-1,-1,1,1,1,-1)},    {(-1,-1,-1,-1,1,1,1,1,1),(-1,-1,1,1,1,1,1,-1,-1),(-1,1,-1,1,1,1,-1,-1,-1),(-1,1,1,-1,1,1,-1,-1,-1),(-1,1,1,1,-1,-1,1,1,-1),(1,-1,-1,1,1,1,-1,1,1,-1)},    {(-1,-1,-1,-1,1,1,1,1,1),(-1,-1,1,1,1,1,1,-1,-1),(-1,1,1,-1,1,1,-1,-1,-1),(-1,1,1,1,-1,1,1,-1,-1,-1),(-1,1,1,1,-1,-1,1,1,1,-1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,-1),(-1,1,1,1,-1,-1,1,1,-1),(1,1,-1,-1,-1,1,1,1,-1),(1,1,-1,-1,1,1,-1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,1,-1,1,1,-1),(-1,1,1,1,-1,-1,1,1,-1,-1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,1,-1,1,1,-1),(1,-1,-1,1,1,1,-1,-1,1),(1,1,-1,-1,1,1,-1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,-1,1,1,1,-1),(-1,1,1,1,-1,-1,1,1,1,-1),(1,1,-1,-1,1,1,1,-1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,-1,1,1,1,-1),(-1,1,1,1,-1,-1,1,1,1),(1,-1,-1,1,1,1,-1,-1,1,-1)},    {(-1,-1,-1,-1,1,1,1,1,1),(-1,-1,1,1,1,1,1,-1,-1),(-1,1,1,-1,1,1,-1,-1,-1),(1,-1,-1,1,-1,1,1,1,-1),(-1,1,1,1,-1,-1,1,1,1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,-1,1,1,1,-1),(-1,1,1,1,-1,-1,1,1,-1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,1),(1,-1,-1,1,-1,1,1,1,-1),(1,-1,-1,1,1,1,-1,-1,1),(1,1,-1,-1,1,1,-1,-1,-1)},    {(-1,-1,-1,-1,1,1,1,1,1),(-1,-1,1,1,1,1,1,-1,-1),(-1,1,1,-1,1,1,-1,-1,1),(1,-1,-1,1,-1,1,1,-1,1),(-1,1,1,1,-1,-1,1,1,-1),(-1,1,1,-1,-1,1,1,-1,1,1)},    {(-1,-1,-1,-1,1,1,1,1,1),(-1,-1,1,1,1,1,1,-1,-1),(1,-1,-1,1,1,-1,1,1,-1),(1,-1,1,-1,-1,1,1,1,-1),(-1,1,1,1,-1,-1,1,1,-1),(1,1,-1,-1,1,1,1,-1,-1,-1)},    {(-1,-1,-1,-1,1,1,1,1,1),(-1,-1,1,1,1,1,1,-1,-1),(1,-1,-1,1,1,-1,1,1,-1),(1,-1,1,-1,-1,1,1,1,-1),(-1,1,1,1,-1,-1,1,1,-1,-1),(1,1,-1,-1,1,1,1,-1,-1)},    {(-1,-1,-1,-1,1,1,1,1,1),(-1,-1,1,1,1,1,1,-1,-1),(1,-1,-1,1,1,-1,1,1,-1),(1,-1,1,-1,-1,1,1,-1,1),(1,-1,-1,1,1,-1,1,1,-1),(1,1,-1,-1,1,1,-1,-1,-1)},

EP 3 921 961 B1

1,1),(-1,1,1,-1,-1,1,1,-1),(1,1,-1,-1,1,1,-1,-1)}, {(-1,-1,-1,-1,1,1,1,1),(-1,-1,1,1,1,1,-1,-1),(1,-1,-1,1,-1,1,1,-1),(1,-1,1,-1,-1,1,-1,1),(1,-1,-1,1,1,-1,-1,1),(1,1,-1,-1,1,1,-1,-1)}, {(-1,-1,-1,-1,1,1,1,1),(-1,1,-1,1,1,-1,1,-1),(-1,1,1,-1,1,-1,-1,1),(1,1,-1,-1,-1,-1,1,1),(-1,-1,1,1,-1,-1,1,1),(-1,1,1,-1,-1,1,1,-1)}, {(-1,-1,-1,-1,1,1,1,1),(-1,1,-1,1,1,-1,1,-1),(-1,1,1,-1,1,-1,-1,1),(1,1,-1,-1,-1,-1,1,1),(-1,-1,1,1,-1,-1,1,1),(1,-1,-1,1,1,-1,-1,1)}, {(-1,-1,-1,-1,1,1,1,1),(-1,1,-1,1,1,-1,1,-1),(-1,1,1,-1,1,-1,-1,1),(1,1,-1,-1,-1,-1,1,1),(-1,-1,1,1,-1,-1,1,1),(1,1,-1,-1,1,1,-1,-1)}, {(-1,-1,-1,-1,1,1,1,1),(-1,1,-1,1,1,-1,1,-1),(-1,1,1,-1,1,-1,-1,1),(1,1,-1,-1,-1,-1,1,1),(1,-1,-1,1,1,-1,-1,1),(1,1,-1,-1,1,1,-1,-1)}, {(-1,-1,-1,-1,1,1,1,1),(-1,1,-1,1,1,-1,1,-1),(-1,1,1,-1,1,-1,-1,1),(1,-1,-1,1,-1,-1,1,1),(-1,-1,1,1,-1,-1,1,1),(-1,1,1,-1,1,-1,-1,1)}, {(-1,-1,-1,-1,1,1,1,1),(-1,1,-1,1,1,-1,1,-1),(-1,1,1,-1,1,-1,-1,1),(1,-1,-1,1,1,-1,-1,1),(1,1,-1,-1,-1,-1,1,1),(1,1,-1,-1,1,1,-1,-1)}, {(-1,-1,-1,-1,1,1,1,1),(-1,1,-1,1,1,-1,1,-1),(1,-1,-1,1,-1,1,1,-1),(1,1,-1,-1,-1,-1,1,1),(-1,-1,1,1,-1,-1,1,1),(1,-1,-1,1,1,-1,-1,1)}, {(-1,-1,-1,-1,1,1,1,1),(-1,1,-1,1,1,-1,1,-1),(1,-1,-1,1,-1,1,1,-1),(1,1,-1,-1,-1,-1,1,1),(-1,-1,1,1,-1,-1,1,1),(1,1,-1,-1,1,1,-1,-1)}, {(-1,-1,-1,-1,1,1,1,1),(-1,1,-1,1,1,-1,1,-1),(1,-1,-1,1,-1,1,1,-1),(1,1,-1,-1,-1,-1,1,1),(1,-1,-1,1,1,-1,-1,1),(1,1,-1,-1,1,1,-1,-1)}, {(-1,-1,-1,-1,1,1,1,1),(-1,1,1,-1,1,-1,-1,1),(1,-1,1,-1,-1,1,-1,1),(1,1,-1,-1,-1,-1,1,1),(-1,-1,1,1,-1,-1,1,1),(-1,-1,1,1,-1,-1,1,1),(-1,1,1,-1,-1,1,1,-1)}, {(-1,-1,-1,-1,1,1,1,1),(-1,1,1,-1,1,-1,-1,1),(1,-1,1,-1,-1,1,-1,1),(1,1,-1,-1,-1,-1,1,1),(-1,1,1,-1,-1,1,1,-1),(1,1,-1,-1,1,1,-1,-1)}, {(-1,-1,-1,-1,1,1,1,1),(-1,1,1,-1,1,-1,-1,1),(1,-1,1,-1,-1,1,-1,1),(1,1,-1,-1,-1,-1,1,1),(-1,-1,1,1,-1,-1,1,1),(1,-1,-1,1,1,-1,-1,1)}, {(-1,-1,-1,-1,1,1,1,1),(1,-1,-1,1,1,-1,1,-1),(1,-1,1,-1,-1,1,-1,1),(1,1,-1,-1,-1,-1,1,1),(-1,1,1,-1,-1,1,1,-1),(1,1,-1,-1,1,1,-1,-1)}, {(-1,-1,-1,-1,1,1,1,1),(1,-1,-1,1,1,-1,1,-1),(1,-1,1,-1,-1,1,-1,1),(1,1,-1,-1,-1,-1,1,1),(-1,-1,1,1,-1,-1,1,1),(1,-1,-1,1,1,-1,-1,1)}, {(-1,-1,-1,1,1,1,1,-1),(1,-1,-1,-1,-1,1,1,1),(1,1,-1,-1,-1,-1,1,1),(1,-1,1,1,1,-1,-1,1),(1,1,-1,-1,1,1,-1,-1)}, {(-1,-1,1,1,1,1,-1),(-1,-1,1,1,-1,1,1,-1),(-1,1,1,-1,-1,1,-1,1),(-1,1,1,1,1,-1,-1,-1),(-1,-1,1,1,1,-1,-1,1,1),(-1,1,1,1,-1,-1,1,1,-1)}, {(-1,-1,-1,1,1,1,1,-1),(-1,-1,1,1,1,1,-1,1),(-1,1,1,-1,-1,1,-1,1,1),(-1,1,1,1,1,-1,-1,-1),(-1,-1,1,1,1,-1,-1,1,1),(1,-1,-1,1,1,-1,-1,1)}, {(-1,-1,-1,1,1,1,1,-1),(-1,-1,1,1,-1,1,1,-1),(-1,1,-1,-1,1,1,-1,1),(-1,1,1,1,1,-1,-1,-1),(-1,-1,1,1,1,-1,-1,1),(1,1,-1,-1,1,1,-1,-1)}, {(-1,-1,-1,1,1,1,1,-1),(-1,-1,1,1,-1,1,1,-1),(-1,1,-1,-1,1,1,-1,1),(-1,1,1,1,1,1,-1,-1,-1),(1,-1,-1,1,1,-1,-1,1),(1,1,-1,-1,1,1,-1,-1)}, {(-1,-1,-1,1,1,1,1,-1),(-1,-1,1,1,-1,1,1,-1),(-1,1,-1,-1,1,-1,1,1),(1,-1,-1,-1,-1,1,1,1),(-1,-1,1,1,-1,-1,1,1),(-1,1,1,1,-1,-1,1,1,-1)}, {(-1,-1,-1,1,1,1,1,-1),(-1,-1,1,1,-1,1,1,-1),(-1,1,1,1,1,1,-1,-1,-1),(1,-1,-1,1,1,-1,1,-1,-1),(-1,-1,1,1,1,-1,-1,1,1),(1,-1,-1,1,1,-1,-1,1)}, {(-1,-1,-1,1,1,1,1,-1),(-1,-1,1,1,-1,1,1,-1),(-1,1,1,1,1,1,-1,-1,-1),(1,-1,1,1,1,-1,1,-1,-1),(-1,-1,1,1,1,-1,-1,1,1),(1,-1,-1,1,1,-1,-1,1)}, {(-1,-1,-1,1,1,1,1,-1),(-1,-1,1,1,-1,1,1,-1),(-1,1,1,1,1,1,-1,-1,-1),(1,-1,1,1,-1,1,-1,-1,-1),(-1,-1,1,1,1,-1,-1,1,1),(1,-1,-1,1,1,-1,-1,1)}, {(-1,-1,-1,1,1,1,1,-1),(-1,-1,1,1,-1,1,1,-1),(-1,1,1,1,1,1,-1,-1,-1),(1,-1,1,1,-1,-1,1,1),(-1,-1,1,1,-1,-1,1,1),(-1,1,1,-1,1,-1,-1,1)}, {(-1,-1,-1,1,1,1,1,-1),(-1,-1,1,1,-1,1,1,-1),(1,-1,-1,-1,-1,1,1,1),(1,-1,1,1,-1,1,-1,-1,-1),(1,-1,-1,1,1,-1,-1,1),(1,1,-1,-1,1,1,-1,-1)}, {(-1,-1,-1,1,1,1,1,-1),(-1,-1,1,1,-1,1,1,-1),(1,-1,-1,-1,-1,1,1,1),(1,-1,1,1,-1,-1,1,1),(-1,-1,1,1,-1,-1,1,1),(-1,1,1,-1,1,-1,-1,1)}, {(-1,-1,-1,1,1,1,1,-1),(-1,-1,1,1,-1,1,1,-1),(1,-1,-1,-1,-1,1,1,1),(1,-1,1,1,-1,-1,1,1),(-1,-1,1,1,-1,-1,1,1),(1,1,-1,-1,1,1,-1,-1)}, {(-1,-1,-1,1,1,1,1,-1),(-1,-1,1,1,-1,1,1,-1),(1,-1,-1,-1,-1,1,1,1),(1,-1,1,1,-1,-1,-1,1),(-1,1,1,1,-1,-1,1,1),(1,-1,-1,1,1,-1,-1,1)}, {(-1,-1,-1,1,1,1,1,-1),(-1,-1,1,1,-1,1,1,-1),(1,-1,-1,-1,-1,1,1,1),(1,-1,1,1,-1,-1,1,-1),(-1,-1,1,1,1,-1,-1,1,1),(1,1,-1,-1,1,1,-1,-1)}, {(-1,-1,-1,1,1,1,1,-1),(-1,-1,1,1,-1,1,1,-1),(-1,1,1,1,1,-1,-1,-1),(1,-1,-1,-1,-1,1,1,1),(1,-1,1,1,-1,-1,1,-1),(1,-1,-1,1,1,-1,-1,1),(1,1,-1,-1,1,1,-1,-1)}, {(-1,-1,-1,1,1,1,1,-1),(-1,-1,1,1,-1,1,1,-1),(-1,1,1,1,1,1,-1,-1,-1),(1,-1,-1,-1,-1,1,1,1),(-1,1,1,1,-1,-1,1,1),(-1,1,1,-1,-1,1,1,-1)}, {(-1,-1,-1,1,1,1,1,-1),(-1,-1,1,1,-1,1,1,-1),(1,-1,-1,-1,-1,1,1,1),(1,-1,1,1,-1,-1,-1,1),(1,1,-1,-1,1,1,-1,-1)}, {(-1,-1,-1,1,1,1,1,-1),(-1,-1,1,1,-1,1,1,-1),(1,-1,-1,-1,-1,1,1,1),(1,-1,1,1,-1,-1,1,-1),(-1,1,1,1,-1,-1,1,1),(1,1,-1,-1,1,1,-1,-1)}, {(-1,-1,-1,1,1,1,1,-1),(-1,-1,1,1,1,1,-1,-1,1),(-1,1,1,1,1,1,-1,-1,-1),(1,1,-1,-1,-1,-1,1,1),(-1,-1,1,1,1,-1,-1,1,1),(-1,1,1,-1,-1,1,1,-1)}, {(-1,-1,-1,1,1,1,1,-1),(-1,1,-1,-1,-1,1,1,1),(1,-1,1,1,-1,1,-1,-1,-1),(1,-1,-1,1,1,-1,-1,1),(1,1,-1,-1,1,1,-1,-1)}, {(-1,-1,-1,1,1,1,1,-1),(-1,1,1,1,1,1,-1,-1,-1),(-1,1,1,1,1,-1,-1,-1,1),(1,1,-1,-1,-1,-1,1,1),(-1,-1,1,1,1,-1,-1,1,1),(-1,1,1,1,-1,-1,-1,1,1,-1)}, {(-1,-1,-1,1,1,1,1,-1),(-1,1,1,1,1,-1,1,-1,-1),(1,-1,-1,-1,-1,1,1,1),(1,-1,1,1,-1,-1,1,-1,-1),(1,-1,-1,1,1,-1,-1,1),(1,1,-1,-1,1,1,-1,-1)}, {(-1,-1,-1,1,1,1,1,-1),(-1,1,1,-1,1,-1,-1,1),(-1,1,1,1,1,-1,-1,-1,1),(1,1,-1,-1,-1,-1,1,1),(-1,-1,1,1,1,-1,-1,1,1),(-1,1,1,-1,-1,1,1,-1)}, {(-1,-1,-1,1,1,1,1,-1),(-1,1,1,1,1,1,-1,-1,-1),(1,-1,-1,-1,-1,1,1,1),(1,-1,1,1,-1,-1,1,-1,-1),(-1,1,1,1,-1,-1,1,1),(1,-1,-1,1,1,-1,-1,1)}, {(-1,-1,-1,1,1,1,1,-1),(-1,1,1,1,1,1,-1,-1,-1),(1,1,-1,-1,-1,-1,1,1),(-1,-1,1,1,1,-1,-1,1,1),(1,1,-1,-1,-1,-1,1,1),(1,-1,1,-1,-1,1,-1,1),(1,-1,-1,1,1,-1,-1,1)}, {(-1,-1,-1,1,1,1,1,-1),(-1,1,1,1,1,1,-1,-1,-1),(-1,1,1,1,1,1,-1,-1,-1),(1,1,-1,-1,-1,-1,1,1),(-1,-1,1,1,1,-1,-1,1,1),(1,-1,1,-1,-1,1,-1,1)}, {(-1,-1,-1,1,1,1,1,-1),(-1,1,1,1,1,1,-1,-1,-1),(-1,1,1,1,1,-1,-1,-1,1),(1,1,-1,-1,-1,-1,1,1),(-1,-1,1,1,-1,-1,1,1),(1,-1,1,-1,-1,1,-1,1)}, {(-1,-1,-1,1,1,1,1,-1),(-1,1,1,1,1,1,-1,-1,-1),(1,-1,-1,-1,-1,1,1,1),(1,1,-1,1,-1,-1,-1,1,-1),(-1,1,1,1,-1,-1,1,1),(-1,1,1,-1,-1,1,1,-1)}, {(-1,-1,-1,1,1,1,1,-1),(-1,1,1,1,1,1,-1,-1,-1),(1,-1,-1,-1,-1,1,1,1),(1,1,-1,-1,-1,-1,1,1),(-1,-1,1,1,-1,-1,1,1),(1,-1,-1,1,1,-1,-1,1)}, {(-1,-1,-1,1,1,1,1,-1),(-1,1,1,1,1,1,-1,-1,-1),(1,-1,-1,-1,-1,1,1,1),(1,-1,1,1,-1,-1,1,-1,-1),(1,-1,-1,1,1,-1,-1,1),(1,1,-1,-1,1,1,-1,-1)}, {(-1,-1,-1,1,1,1,1,-1),(-1,1,1,1,1,1,-1,-1,-1),(1,-1,1,1,-1,-1,1,-1,-1),(1,-1,-1,1,1,-1,-1,1),(-1,1,1,1,-1,-1,1,1),(-1,1,1,-1,-1,1,1,-1)}, {(-1,-1,-1,1,1,1,1,-1),(-1,1,1,1,1,1,-1,-1,-1),(1,-1,1,1,-1,1,-1,-1,-1),(1,-1,-1,1,-1,-1,1,1),(1,-1,-1,1,1,-1,-1,1),(-1,1,1,-1,1,-1,-1,1)}, {(-1,-1,-1,1,1,1,1,-1),(-1,1,1,1,1,-1,-1,-1),(1,-1,1,1,-1,1,-1,-1,-1),(1,1,-1,-1,-1,-1,1,1),(-1,-1,1,1,-1,-1,1,1),(1,-1,-1,1,1,-1,-1,1)}, {(-1,-1,-1,1,1,1,1,-1),(-1,1,1,1,1,-1,-1,-1),(1,-1,-1,-1,-1,1,1,1),(1,1,-1,1,-1,-1,1,1),(-1,-1,1,1,-1,-1,1,1),(-1,1,1,-1,-1,1,1,-1)}, {(-1,-1,-1,1,1,1,1,-1),(1,-1,-1,-1,-1,1,1,1),(1,-1,1,1,-1,1,-1,-1,-1),(1,1,-1,-1,1,1,-1,-1)}, {(-1,-1,-1,1,1,1,1,-1),(1,-1,-1,-1,-1,1,1,1),(1,-1,1,1,-1,-1,1,-1,-1),(-1,1,1,1,-1,-1,1,1),(1,-1,-1,1,1,-1,-1,1)}, {(-1,-1,-1,1,1,1,1,-1),(1,-1,-1,-1,-1,1,1,1),(1,-1,1,1,-1,1,-1,-1,-1),(1,1,-1,1,-1,-1,1,1),(-1,-1,1,1,-1,-1,1,1),(-1,1,1,-1,-1,1,1,-1)},
{(-1,-1,-1,1,1,1,1,-1),(-1,1,1,1,1,1,-1,-1,-1),(1,-1,1,1,-1,1,-1,-1,-1),(1,1,-1,1,-1,-1,1,-1,-1),(1,-1,1,1,1,-1,-1,1,-1,-1),(1,1,-1,-1,1,1,-1,-1)}, {(-1,-1,-1,1,1,1,1,-1),(1,-1,-1,-1,-1,1,1,1),(1,-1,1,1,-1,1,-1,-1,-1),(1,1,-1,1,-1,-1,-1,1,1),(-1,-1,1,1,1,-1,-1,1,1),(-1,1,1,1,-1,-1,1,1,-1)}, {(-1,-1,-1,1,1,1,1,-1),(1,-1,-1,-1,-1,1,1,1),(1,-1,1,1,-1,1,-1,-1,-1),(1,1,-1,1,-1,-1,1,1,-1),(-1,-1,1,1,1,-1,-1,1,1),(1,-1,-1,1,1,-1,-1,1)}, {(-1,-1,-1,1,1,1,1,-1),(1,-1,-1,-1,-1,

1,1,1,1),(1,-1,1,1,-1,1,-1,-1),(1,1,-1,1,-1,-1,1,-1),(-1,1,1,-1,-1,1,1,-1),(1,1,-1,-1,1,1,-1,-1)}, {(-1,-1,-1,1,1,1,1,-1),(1,-1,-1,-1,-1,1,1,1),(1,-1,1,1,-1,1,-1,-1),(1,1,-1,1,-1,-1,1,-1),(1,-1,-1,1,1,-1,-1,1),(1,1,-1,-1,1,1,-1,-1)}, {(-1,-1,1,-1,1,1,-1,1),(-1,1,1,-1,-1,1,-1,1,1),(-1,1,1,1,1,1,-1,-1,-1),(1,1,1,-1,-1,-1,-1,1,1),(-1,-1,1,1,1,-1,1,1,1),(-1,1,1,1,-1,-1,1,1,-1)}, {(-1,-1,1,-1,1,1,-1,1),(-1,1,-1,-1,1,1,-1,1,1,1),(-1,1,1,1,1,1,-1,-1,-1),(1,1,1,-1,-1,-1,-1,1,1),(-1,-1,1,1,1,-1,-1,1,1,1),(1,-1,-1,1,1,1,-1,-1,1,1)}, {(-1,-1,1,1,-1,1,1,-1,1),(-1,1,1,-1,-1,1,1,-1,1,1,1),(-1,1,1,1,1,1,1,-1,-1,-1),(1,1,1,-1,-1,-1,-1,1,1),(-1,1,1,1,-1,-1,1,1,-1),(1,1,-1,-1,1,1,1,-1,-1)}, {(-1,-1,1,1,-1,1,1,-1,1),(-1,1,1,-1,-1,1,1,1,1,1),(-1,1,1,1,1,1,1,-1,-1,-1),(1,1,1,-1,-1,-1,-1,1,1),(1,-1,1,1,1,-1,-1,1,1),(1,1,-1,1,1,1,-1,-1)}, {(-1,-1,1,-1,1,1,1,1,1),(-1,1,1,-1,-1,1,1,1,1,1),(1,-1,1,-1,-1,1,1,1,1),(1,1,1,-1,-1,-1,-1,1,1),(-1,-1,1,1,1,-1,-1,1,1,1),(-1,1,1,1,-1,-1,1,1,1,1,-1)}, {(-1,-1,1,-1,1,1,1,1,1),(-1,1,1,-1,-1,1,1,1,1),(1,-1,-1,-1,-1,1,1,1,1),(1,1,1,-1,-1,-1,-1,1,1),(-1,-1,1,1,1,-1,-1,1,1,1),(1,-1,1,1,1,-1,-1,1,1,1)}, {(-1,-1,1,-1,1,1,1,1,1),(-1,1,1,-1,-1,1,1,1,1),(1,-1,-1,-1,-1,1,1,1,1),(1,1,1,-1,-1,-1,-1,1,1),(1,-1,1,1,-1,-1,1,1,-1),(1,1,-1,-1,1,1,1,-1,-1)}, {(-1,-1,1,-1,1,1,1,1,1),(-1,1,1,-1,-1,1,1,1,1),(1,-1,-1,-1,-1,1,1,1,1),(1,1,1,-1,-1,-1,-1,1,1),(1,-1,-1,1,1,-1,-1,1,1),(1,1,-1,-1,1,1,1,-1,-1)}, {(-1,-1,1,-1,1,1,1,1,1),(-1,1,1,1,1,1,-1,-1,-1),(1,-1,1,1,1,-1,1,-1,-1),(1,1,1,-1,-1,-1,-1,1,1),(-1,1,1,1,-1,-1,1,1,-1),(1,-1,-1,1,1,1,-1,-1,1)}, {(-1,-1,1,1,-1,1,1,-1,1),(-1,1,1,1,1,1,-1,-1,-1),(1,-1,1,1,-1,1,-1,-1,1),(1,1,1,-1,-1,-1,-1,1,1),(-1,1,1,1,-1,-1,1,1,-1),(1,1,-1,-1,1,1,1,-1,-1)}, {(-1,-1,1,-1,1,1,-1,1),(1,-1,-1,-1,-1,1,1,1,1),(1,-1,1,1,1,-1,1,-1,-1),(1,1,1,-1,-1,-1,-1,1,1),(-1,1,1,1,-1,-1,1,1,-1),(1,1,-1,-1,1,1,1,-1,-1)}, {(-1,-1,1,-1,1,1,-1,1),(-1,1,1,-1,-1,1,1,1),(1,-1,-1,-1,-1,1,1,1),(1,1,1,-1,-1,-1,-1,1),(1,1,1,-1,1,1,-1,-1)}, {(-1,-1,1,-1,1,1,-1,1),(-1,1,1,-1,-1,1,1,1),(1,-1,-1,-1,-1,1,1,1),(1,1,1,-1,-1,-1,-1,1),(1,1,-1,-1,1,1,-1,-1)}

1,-1,1,1,-1,-1,1)},     {(-1,1,-1,1,1,-1,1,-1),(1,-1,-1,1,-1,1,1,-1),(1,1,-1,-1,-1,-1,1,1),(1,1,1,1,-1,-1,-1,-1),(-1,1,1,-1,-1,1,1,-1),(1,1,-1,-1,1,1,-1,-1)},     {(-1,1,-1,1,1,-1,1,-1),(1,-1,-1,1,-1,1,1,-1),(1,1,-1,-1,-1,-1,1,1),(1,1,1,1,-1,-1,-1,-1),(1,-1,-1,1,1,-1,-1,1),(1,1,-1,-1,1,1,-1,-1)},     {(-1,1,1,-1,1,-1,-1,1),(1,-1,1,-1,-1,1,-1,1),(1,1,-1,-1,-1,-1,1,1),(1,1,1,1,-1,-1,-1,-1),(-1,-1,1,1,-1,-1,1,1),(-1,1,1,-1,-1,1,1,-1)},     {(-1,1,1,-1,1,-1,-1,1),(1,-1,1,-1,-1,1,-1,1),(1,1,-1,-1,-1,-1,1,1),(1,1,1,1,-1,-1,-1,-1),(-1,-1,1,1,-1,-1,1,1),(1,-1,-1,1,1,-1,-1,1)},     {(-1,1,1,-1,1,1,-1,-1,1),(1,-1,1,-1,-1,1,1,-1,1),(1,1,-1,-1,-1,-1,1,1),(1,1,1,1,-1,-1,-1,-1),(-1,1,1,-1,-1,1,1,-1),(1,1,-1,-1,1,1,-1,-1)},     {(-1,1,1,-1,1,-1,-1,1),(1,-1,1,-1,-1,1,-1,1),(1,1,-1,-1,-1,-1,1,1),(1,1,1,1,-1,-1,-1,-1),(1,-1,-1,1,1,-1,-1,1),(1,1,-1,-1,1,1,-1,-1)},     {(-1,1,1,1,1,-1,-1,-1),(1,-1,1,1,-1,1,-1,-1),(1,1,-1,1,-1,-1,1,-1),(1,1,1,-1,-1,-1,-1,1),(-1,-1,1,1,-1,-1,1,1),(-1,1,1,-1,-1,1,1,-1)},     {(-1,1,1,1,1,-1,-1,-1),(1,-1,1,1,-1,1,-1,-1),(1,1,-1,1,-1,-1,1,-1),(1,1,1,-1,-1,-1,-1,1),(-1,1,1,-1,-1,1,1,-1),(1,-1,-1,1,1,-1,-1,1)},     {(-1,1,1,1,1,-1,-1,-1),(1,-1,1,1,-1,1,-1,-1),(1,1,-1,1,-1,-1,1,-1),(1,1,1,-1,-1,-1,-1,1),(-1,1,1,-1,-1,1,1,-1),(1,1,-1,-1,1,1,-1,-1)},     {(-1,1,1,1,1,-1,-1,-1),(1,-1,1,1,-1,1,-1,-1),(1,1,-1,1,-1,-1,1,-1),(1,1,1,-1,-1,-1,-1,1),(-1,-1,1,1,-1,-1,1,1),(1,1,-1,-1,1,1,-1,-1)},     {(1,-1,-1,-1,-1,1,1,1),(1,-1,1,1,-1,1,-1,-1),(1,1,-1,1,-1,-1,1,-1),(1,1,1,-1,-1,-1,-1,1),(-1,-1,1,1,-1,-1,1,1),(-1,1,1,-1,-1,1,1,-1)},     {(1,-1,-1,-1,-1,1,1,1),(1,-1,1,1,-1,1,-1,-1),(1,1,-1,1,-1,-1,1,-1),(1,1,1,-1,-1,-1,-1,1),(-1,-1,1,1,-1,-1,1,1),(1,-1,-1,1,1,-1,-1,1)},     {(1,-1,-1,-1,-1,1,1,1),(1,-1,1,1,-1,1,-1,-1),(1,1,-1,1,-1,-1,1,-1),(1,1,1,-1,-1,-1,-1,1),(-1,1,1,-1,-1,1,1,-1),(1,1,-1,-1,1,1,-1,-1)},     {(1,-1,-1,-1,1,1,1,-1),(1,-1,1,1,-1,1,-1,-1),(1,1,-1,1,-1,-1,1,-1),(1,1,1,-1,-1,-1,-1,1),(1,-1,-1,1,1,-1,-1,1),(1,1,-1,-1,1,1,-1,-1)},     {(1,-1,-1,1,-1,1,1,-1),(1,-1,1,-1,-1,1,1,-1),(1,1,-1,-1,-1,-1,1,1),(1,1,1,1,-1,-1,-1,-1),(-1,1,1,-1,-1,1,1,-1),(1,1,-1,-1,1,1,-1,-1)},     {(1,-1,-1,1,-1,1,1,-1),(1,-1,1,-1,-1,1,1,-1),(1,1,-1,-1,-1,-1,1,1),(1,1,1,1,-1,-1,-1,-1),(-1,-1,1,1,-1,-1,1,1),(1,1,-1,-1,1,1,-1,-1)},     {(1,-1,-1,1,-1,1,1,-1),(1,-1,1,-1,-1,1,-1,1),(1,1,-1,-1,-1,-1,1,1),(1,1,1,1,-1,-1,-1,-1),(1,-1,-1,1,1,-1,-1,1),(1,1,-1,-1,1,1,-1,-1)}

The orthogonal code sets, as shown in table 3, are base code sets with code length of 8. The mixed frequency code searching module **318** is further capable of outputting orthogonal code sets for triple frequency code group with code length of 16 by repeating the codes in base code sets. The mixed frequency code searching module **318** is also capable of outputting orthogonal code sets for triple frequency code group with code length of 32 by repeating the codes in base code sets for four times and so on. It will be appreciated that mixed frequency code searching module **318** is capable of performing the above operation for all mixed frequency code groups.

For instance, a code with length 8 (-1,-1,-1,1,1,-1,1,1) in table 3 with three frequency components may also be represented by a code with length 16 with three frequency component as (-1,-1,-1,1,1,-1,1,1,-1,-1,-1,1,1,-1,1,1), by a code with length 32 with three frequency component as (-1,-1,-1,1,1,-1,1,1,-1,-1,-1,1,1,-1,1,1,-1,-1,-1,1,1,-1, 1, 1,-1,-1,-1, 1,1,-1,1,1) and so on.

Table 4 illustrates an exemplary subset of orthogonal code sets for mixed frequency code group, with four frequency components, outputted by mixed frequency code searching module 318, in accordance with various embodiments of the present disclosure. It will be further appreciated that a set of values between a pair of round brackets represents a code and plurality of codes in between a pair of braces represents an orthogonal code set.

Table 4

{(-1,-1,-1,1,-1,1,1,1), (-1,-1,1,-1,1,-1,1,1), (-1,1,-1,-1,1,1,-1,1), (-1,1,1,1,-1,-1,-1,1), (-1,-1,1,1,1,1,-1,-1), (-1,1,-1,1,1,-1,1,-1), (-1,-1,-1,-1,-1,-1,-1,-1), (-1,1,1,-1,-1,1,1,-1)}, {(-1,-1,-1,1,-1,1,1,1), (-1,-1,1,-1,1,-1,1,1), (-1,1,-1,-1,1,1,-1,1), (-1,1,1,1,-1,-1,-1,1), (-1,-1,1,1,1,1,-1,-1), (-1,1,-1,1,1,-1,1,-1), (-1,-1,-1,-1,-1,-1,-1,-1), (1,-1,-1,1,1,-1,-1,1)}, {(-1,-1,-1,1,-1,1,1,1), (-1,-1,1,-1,1,-1,1,1), (-1,1,-1,-1,1,1,-1,1), (-1,1,1,1,-1,-1,-1,1), (-1,-1,1,1,1,1,-1,-1), (-1,1,-1,1,1,-1,1,-1), (-1,1,1,-1,-1,1,1,-1), (1,1,1,1,1,1,1,1)}, {(-1,-1,-1,1,-1,1,1,1), (-1,-1,1,-1,1,-1,1,1), (-1,1,-1,-1,1,1,-1,1), (-1,1,1,1,-1,-1,-1,1), (-1,-1,1,1,1,1,-1,-1), (-1,1,-1,1,1,-1,1,-1), (1,-1,1,1,1,-1,-1,1), (1,1,1,1,1,1,1,1)}, {(-1,-1,-1,1,-1,1,1,1), (-1,-1,1,-1,1,-1,1,1), (-1,1,-1,-1,1,1,-1,1), (-1,1,1,1,1,-1,-1,1), (-1,-1,1,1,1,1,-1,-1), (1,-1,1,-1,-1,1,1,-1), (-1,-1,-1,-1,-1,-1,-1,-1), (-1,1,1,1,-1,-1,1,1,-1)}, {(-1,-1,-1,1,1,-1,1,1,1), (-1,-1,1,-1,1,-1,1,1), (-1,1,-1,-1,1,1,-1,1), (-1,1,1,1,-1,-1,-1,1), (-1,-1,1,1,1,1,-1,-1), (1,-1,1,-1,-1,1,1,-1), (-1,-1,-1,-1,-1,-1,-1,-1), (1,-1,-1,1,1,-1,-1,1)}, {(-1,-1,-1,1,-1,1,1,1), (-1,-1,1,-1,1,-1,1,1), (-1,1,-1,-1,1,1,-1,1), (-1,1,1,1,1,-1,-1,-1,1), (-1,-1,1,1,1,1,-1,-1), (1,-1,1,-1,-1,1,1,-1), (-1,1,1,-1,-1,1,1,-1), (1,1,1,1,1,1,1,1)}, {(-1,-1,-1,1,-1,1,1,1), (-1,-1,1,-1,1,-1,1,1), (-1,1,-1,-1,1,1,-1,1), (-1,1,1,1,1,-1,-1,-1,1), (-1,-1,1,1,1,1,-1,-1), (1,-1,1,-1,-1,1,1,-1), (1,-1,1,1,1,-1,-1,1), (1,1,1,1,1,1,1,1)}, {(-1,-1,-1,1,-1,1,1,1), (-1,-1,1,-1,1,-1,1,1), (-1,1,-1,-1,1,1,-1,1), (-1,1,1,1,1,-1,-1,-1,1), (-1,-1,1,1,1,1,-1,-1), (1,-1,1,-1,-1,1,1,-1), (1,-1,-1,1,1,-1,-1,1), (1,1,1,1,1,1,1,1)}, {(-1,-1,-1,1,-1,1,1,1), (-1,-1,1,-

1,1,-1,1,1), (-1,1,-1,-1,1,1,-1,1), (-1,1,1,1,-1,-1,-1,1), (-1,1,-1,1,1,-1,1,-1), (1,1,-1,-1,-1,-1,1,1), (-1,-1,-1,-1,-1,-1,-1,-1), (-1,1,1,-1,-1,1,1,-1)}, {(-1,-1,-1,1,-1,1,1,1), (-1,-1,1,1,-1,1,-1,1,1), (-1,1,1,-1,-1,1,1,-1), (-1,1,1,1,-1,-1,1,1), (-1,1,-1,1,1,-1,1,-1), (1,1,-1,-1,-1,-1,1,1), (-1,-1,-1,-1,-1,-1,-1), (1,-1,-1,1,1,-1,-1,1)}, {(-1,-1,-1,1,-1,1,1,1), (-1,-1,1,-1,1,-1,1,1), (-1,1,-1,-1,1,1,-1,1), (-1,1,1,1,-1,-1,-1,1), (-1,1,-1,1,1,-1,1,-1), (1,1,-1,-1,-1,1,1,1), (-1,1,1,-1,-1,1,1,-1), (1,1,1,1,1,1,1,1)}, {(-1,-1,-1,1,-1,1,1,1), (-1,-1,1,-1,1,-1,1,1), (-1,1,-1,-1,1,1,-1,1), (-1,1,1,1,-1,-1,-1,1), (-1,1,-1,1,1,-1,1,-1), (1,1,-1,-1,-1,-1,1,1), (1,-1,-1,1,1,-1,-1,1), (1,1,1,1,1,1,1,1)}, {(-1,-1,-1,1,-1,1,1,1), (-1,-1,1,-1,1,-1,1,1), (-1,1,-1,-1,1,1,-1,1), (-1,1,1,1,-1,-1,-1,1), (1,-1,1,1,-1,-1,1,1), (1,1,-1,-1,-1,-1,1,1), (-1,-1,-1,-1,-1,-1,-1,-1), (-1,1,1,-1,-1,1,1,-1)}, {(-1,-1,-1,1,-1,1,1,1), (-1,-1,1,-1,1,-1,1,1), (-1,1,1,-1,-1,1,1,-1), (-1,1,1,1,-1,-1,-1,1), (1,-1,1,-1,-1,1,1,-1), (1,1,-1,-1,-1,-1,1,1), (-1,-1,-1,-1,-1,-1,-1), (1,-1,-1,1,1,-1,-1,1)}, {(-1,-1,-1,1,-1,1,1,1), (-1,-1,1,-1,1,-1,1,1), (-1,1,1,-1,-1,1,1,-1), (-1,1,1,1,-1,-1,-1,1), (1,-1,1,-1,-1,1,1,-1), (1,1,-1,-1,-1,-1,1,1), (-1,1,1,-1,-1,1,1,-1), (1,1,1,1,1,1,1,1)}, {(-1,-1,-1,1,-1,1,1,1), (-1,-1,1,-1,1,-1,1,1), (-1,1,-1,-1,1,1,-1,1,1), (1,-1,1,-1,-1,1,1,-1), (1,1,-1,-1,-1,-1,1,1), (-1,1,1,-1,-1,1,1,-1), (1,1,1,1,1,1,1,1)}, {(-1,-1,-1,1,-1,1,1,1), (-1,-1,1,-1,1,-1,1,1), (-1,1,-1,-1,1,1,-1,1), (1,-1,-1,1,1,1,1,-1), (-1,-1,1,1,1,1,-1,-1), (-1,1,-1,1,1,-1,1,-1), (-1,-1,-1,-1,-1,-1,-1,-1), (-1,1,1,1,-1,-1,1,-1)}, {(-1,-1,-1,1,-1,1,1,1), (-1,-1,1,-1,1,-1,1,1), (-1,1,1,-1,-1,1,1,-1), (1,-1,-1,-1,1,1,1,1,-1), (-1,-1,1,1,1,1,-1,-1,1), (-1,1,-1,-1,-1,-1,-1,-1), (1,-1,-1,1,1,1,-1,-1,1)}, {(-1,-1,-1,1,-1,1,1,1), (-1,-1,1,-1,1,-1,1,1), (-1,1,-1,-1,1,1,-1,1), (1,-1,-1,1,1,1,1,-1), (-1,-1,1,1,1,1,-1,-1), (-1,1,-1,1,1,-1,1,-1), (-1,1,1,-1,-1,1,1,-1), (-1,1,1,-1,-1,1,1,-1)}, {(-1,-1,-1,1,-1,1,1,1), (-1,-1,1,-1,1,-1,1,1), (-1,1,-1,-1,1,1,-1,1), (1,-1,-1,1,1,1,1,-1), (-1,-1,1,1,1,1,-1,-1), (-1,1,-1,1,1,-1,1,-1), (1,1,1,1,1,1,1,1)}, {(-1,-1,-1,1,-1,1,1,1), (-1,-1,1,-1,1,-1,1,1), (-1,1,-1,-1,1,1,-1,1), (1,-1,-1,1,1,1,1,-1), (-1,-1,1,1,1,1,-1,-1), (1,-1,1,1,-1,-1,1,1), (-1,1,-1,-1,1,1,-1,1,1), (1,-1,-1,1,1,-1,-1,1), (1,1,1,1,1,1,1,1)}, {(-1,-1,-1,1,-1,1,1,1), (-1,-1,1,-1,1,-1,1,1), (-1,1,-1,-1,1,1,-1,1,1), (-1,1,-1,1,1,-1,1,1,-1), (1,1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,-1,1,-1,1,-1,1,1), (-1,1,-1,-1,1,1,-1,1), (1,-1,-1,1,1,1,1,-1), (-1,-1,1,1,1,1,-1,-1), (1,1,-1,-1,-1,-1,1,1), (-1,1,1,-1,-1,1,1,-1,1), (1,1,1,1,1,1,1,1)}, {(-1,-1,-1,1,-1,1,1,1), (-1,-1,1,-1,1,-1,1,1), (-1,1,1,1,-1,-1,-1,1), (1,-1,-1,-1,1,1,1,-1), (1,1,-1,-1,-1,-1,1,1), (1,-1,-1,1,1,-1,-1,1,1), (1,1,1,1,1,1,1,1)}, {(-1,-1,-1,1,-1,1,1,1), (-1,-1,1,-1,1,-1,1,1), (-1,1,-1,-1,1,1,-1,1), (1,-1,-1,-1,1,1,1,-1), (1,1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,-1,1,-1,1,-1,1,1), (-1,1,-1,-1,1,1,-1,1), (1,-1,-1,-1,1,1,1,-1), (1,1,-1,-1,-1,1,1,1), (-1,-1,-1,-1,-1,-1,-1,-1), (1,-1,1,1,1,-1,-1,1,1)}, {(-1,-1,-1,1,-1,1,1,1), (-1,-1,1,-1,1,-1,1,1), (-1,1,1,1,-1,-1,-1,1), (1,-1,-1,-1,1,1,1,-1), (1,-1,1,1,-1,-1,1,1), (-1,1,-1,1,1,-1,1,-1), (1,1,1,1,1,1,1,1)}, {(-1,-1,-1,1,-1,1,1,1), (-1,-1,1,-1,1,-1,1,1), (-1,1,1,1,-1,-1,-1,1), (1,-1,-1,-1,1,1,1,-1), (1,-1,1,1,-1,-1,1,1), (1,1,-1,-1,-1,-1,1,1), (-1,-1,-1,-1,-1,-1,-1,-1), (-1,1,1,1,-1,-1,1,-1)}, {(-1,-1,-1,1,-1,1,1,1), (-1,-1,1,-1,1,-1,1,1), (-1,1,1,1,-1,-1,-1,1), (1,-1,-1,-1,1,1,1,-1), (1,1,-1,-1,-1,-1,1,1), (1,-1,-1,1,1,-1,-1,1), (1,1,1,1,1,1,1,1)}, {(-1,-1,-1,1,-1,1,1,1), (-1,-1,1,-1,1,-1,1,1), (-1,1,1,1,-1,-1,-1,1), (1,-1,-1,-1,1,1,1,-1), (-1,-1,1,1,1,1,-1,-1,1), (-1,1,-1,-1,-1,-1,-1,-1), (1,-1,-1,1,1,-1,-1,1,1), (1,1,1,1,1,1,1,1)}, {(-1,-1,-1,1,-1,1,1,1), (-1,-1,1,-1,1,-1,1,1), (-1,1,1,1,-1,-1,-1,1), (1,-1,-1,-1,1,1,1,-1), (-1,-1,1,1,1,1,-1,-1,1), (-1,1,-1,1,1,-1,1,-1,1), (1,1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,-1,1,-1,1,-1,1,1), (-1,1,1,1,-1,-1,-1,1), (1,-1,-1,-1,1,1,1,-1), (-1,-1,1,1,1,1,-1,-1,1), (-1,1,-1,1,1,-1,1,-1), (1,-1,-1,1,1,-1,-1,1,1), (1,1,1,1,1,1,1,1)}, {(-1,-1,-1,1,-1,1,1,1), (-1,-1,1,-1,1,-1,1,1), (-1,1,1,1,-1,-1,-1,1), (1,-1,-1,-1,1,1,1,-1), (-1,-1,1,1,1,1,-1,-1,1), (1,1,-1,-1,-1,-1,1,1), (1,-1,-1,1,1,-1,-1,1,1), (1,1,1,1,1,1,1,1)}, {(-1,-1,-1,1,-1,1,1,1), (-1,-1,1,-1,1,-1,1,1), (-1,1,1,1,-1,-1,-1,1,1), (1,-1,-1,-1,1,1,1,-1), (-1,-1,-1,-1,-1,-1,-1,-1), (-1,1,1,1,-1,-1,1,-1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,1,-1,1,1,1,-1,1,-1), (1,1,-1,-1,-1,-1,1,1), (-1,-1,-1,-1,-1,-1,-1,-1), (1,-1,-1,1,1,-1,-1,1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,1,-1,1,1,1,-1,1,-1), (1,1,-1,-1,-1,-1,1,1), (1,-1,1,1,1,1,1,1,1)}, {(-1,-1,-1,1,-1,1,1,1), (-1,-1,1,-1,1,-1,1,1), (-1,1,1,1,1,-1,-1,-1,1), (1,-1,-1,-1,-1,1,1,-1), (-1,-1,1,1,1,1,-1,-1), (1,1,1,1,1,1,1,1)}, {(-1,-1,-1,1,-1,1,1,1), (-1,-1,1,-1,1,-1,1,1), (-1,1,1,1,1,-1,-1,-1,1), (1,-1,-1,-1,1,1,1,-1), (1,1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,-1,1,-1,1,-1,1,1), (-1,1,1,1,1,-1,-1,-1,1), (1,-1,-1,1,1,-1,-1,1), (-1,-1,1,1,1,1,-1,-1,1), (1,-1,-1,-1,-1,-1,1,1), (1,-1,-1,1,1,-1,-1,1), (1,1,1,1,1,1,1,1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,-1,1,1,1,1,-1,-1), (-1,1,-1,1,1,-1,1,-1), (-1,1,1,-1,-1,1,1,-1), (-1,1,1,-1,-1,1,1,-1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,-1,1,1,1,1,-1,-1), (-1,1,-1,1,1,-1,1,-1), (-1,-1,-1,-1,-1,-1,-1,-1), (-1,1,1,1,-1,-1,1,-1)}, {(-1,-1,-1,1,-1,1,1,1), (-1,-1,1,-1,1,-1,1,1), (-1,1,1,1,1,-1,-1,-1,1), (1,-1,-1,-1,1,1,1,-1), (-1,-1,1,1,1,1,-1,-1), (-1,1,-1,1,1,-1,1,-1), (1,1,1,1,1,1,1,1)}, {(-1,-1,-1,1,-1,1,1,1), (-1,-1,1,-1,1,-1,1,1), (-1,1,1,1,1,-1,-1,-1,1), (1,-1,-1,1,1,-1,-1,1,-1), (-1,-1,1,1,1,1,-1,-1,1), (1,-1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,-1,1,-1,1,-1,1,1), (-1,1,1,1,1,-1,-1,-1,1), (1,-1,-1,1,1,-1,-1,1,-1), (-1,-1,1,1,1,1,-1,-1,1), (1,-1,-1,-1,-1,-1,1,1), (1,-1,-1,1,1,-1,-1,1), (1,1,1,1,1,1,1,1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,-1,1,1,1,1,-1,-1,1), (-1,1,-1,1,1,-1,1,-1,1), (1,1,1,1,1,1,1,1)}, {(-1,-1,-1,1,-1,1,1,1), (-1,1,1,-1,1,-1,1,1), (-1,1,1,1,1,-1,-1,-1,1), (1,-1,1,1,1,-1,-1,1,-1), (-1,1,1,1,1,1,-1,-1,1), (1,-1,1,1,-1,-1,1,1), (-1,1,-1,-1,1,1,-1,1,1), (1,1,1,1,1,1,1,1)}, {(-1,-1,-1,1,-1,1,1,1), (-1,1,1,-1,1,-1,1,1), (-1,1,1,1,1,-1,-1,-1,1), (1,-1,1,1,1,-1,-1,1,-1), (-1,1,1,1,1,1,-1,-1,1), (1,1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,1,1,-1,1,-1,1,1), (-1,1,1,1,1,-1,-1,-1,1), (1,-1,1,1,1,-1,-1,1,-1), (-1,-1,1,1,1,1,-1,-1,1), (1,-1,-1,-1,-1,-1,1,1), (1,-1,-1,1,1,-1,-1,1), (1,1,1,1,1,1,1,1)}, {(-1,-1,-1,1,-1,1,1,1), (-1,1,1,-1,1,-1,1,1), (-1,1,1,1,1,-1,-1,-1,1), (1,-1,1,1,1,-1,-1,1,-1), (-1,1,1,1,1,1,-1,-1,1), (1,-1,1,1,-1,-1,1,1), (-1,-1,-1,-1,-1,-1,-1,-1), (1,-1,-1,1,1,-1,-1,1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,1,1,1,1,1,-1,-1,1), (1,-1,-1,-1,-1,-1,1,1), (1,-1,-1,1,1,-1,-1,1), (1,1,1,1,1,1,1,1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,1,1,1,1,1,-1,-1,1), (1,1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,-1,1,1,1,1,-1,-1,1), (1,-1,-1,-1,-1,-1,1,1), (-1,-1,-1,-1,-1,-1,-1), (-1,1,1,1,-1,-1,1,-1,1)}, {(-1,-1,-1,1,-1,1,1,1), (-1,1,1,-1,1,-1,1,1), (-1,1,1,1,1,-1,-1,-1,1), (1,-1,1,1,1,-1,-1,1,-1), (-1,1,1,1,1,1,-1,-1,1), (1,-1,-1,-1,-1,-1,1,1), (1,-1,-1,1,1,-1,-1,1), (1,1,1,1,1,1,1,1)}, {(-1,-1,-1,1,-1,1,1,1), (-1,1,1,-1,1,-1,1,1), (-1,1,1,1,1,-1,-1,-1,1), (1,-1,1,1,1,-1,-1,1,-1), (-1,1,1,1,1,1,-1,-1,1), (1,1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,1,1,1,1,1,-1,-1,1), (1,1,-1,-1,-1,-1,1,1), (-1,-1,-1,-1,-1,-1,-1,-1), (-1,1,1,1,-1,-1,1,-1,1)}, {(-1,-1,-1,1,-1,1,1,1), (-1,-1,1,-1,1,-1,1,1), (-1,1,1,1,1,-1,-1,-1,1), (1,-1,1,1,1,-1,-1,1,-1), (-1,1,-1,1,1,1,-1,1,-1), (1,1,-1,-1,-1,-1,1,1), (-1,-1,-1,-1,-1,-1,-1,-1), (1,-1,-1,1,1,-1,-1,1)}, {(-1,-1,-1,1,-1,1,1,1), (-1,1,1,-1,1,-1,1,1), (-1,1,1,1,1,-1,-1,-1,1), (1,-1,1,1,1,-1,-1,1,-1), (-1,1,1,1,1,1,-1,-1,1), (1,1,-1,-1,-1,-1,1,1), (-1,-1,-1,-1,-1,-1,-1,-1), (1,-1,1,1,1,-1,-1,1), (1,1,-1,-1,-1,-1,1,1), (-1,-1,1,1,1,1,-1,-1,1), (1,1,-1,-1,-1,-1,1,1), (-1,1,-1,1,1,-1,1,-1), (1,1,1,1,1,1,1,1)}, {(-1,-1,-1,1,-1,1,1,1), (-1,1,1,-1,1,-1,1,1), (-1,1,1,1,1,-1,-1,-1,1), (1,-1,1,1,1,-1,-1,1,-1), (-1,1,1,1,1,1,-1,-1,1), (1,1,-1,-1,-1,-1,1,1), (1,-1,

1,1,1,-1,-1,1), (1,1,1,1,1,1,1,1)}, {(-1,-1,-1,1,-1,1,1,1), (-1,-1,1,1,-1,1,-1,1,1), (-1,1,1,1,1,-1,-1,-1,1), (1,-1,1,1,-1,1,-1,1,-1), (1,-1,1,1,-1,-1,1,-1), (1,1,-1,-1,-1,1,1,1), (-1,-1,-1,-1,-1,-1,-1,-1), (-1,1,1,1,-1,-1,1,1,1,-1)}, {(-1,-1,-1,1,-1,1,1,1), (-1,-1,1,1,-1,1,-1,1,1), (-1,1,1,1,1,-1,-1,-1,1), (1,-1,1,1,-1,1,-1,1,-1), (1,-1,1,1,-1,-1,1,1), (1,1,-1,-1,-1,1,1,1), (-1,-1,-1,-1,-1,-1,-1,-1), (1,-1,-1,1,1,1,-1,-1,1)}, {(-1,-1,-1,1,-1,1,1,1,1), (-1,-1,1,1,-1,1,-1,1,1,1), (-1,1,1,1,1,-1,-1,-1,1), (1,-1,1,1,1,-1,-1,1,1,-1), (1,-1,1,1,-1,-1,1,1,1), (1,1,-1,-1,-1,1,1,1), (-1,1,1,1,-1,-1,1,1,1,-1), (1,1,1,1,1,1,1,1)}, {(-1,-1,-1,1,1,-1,1,1,1), (-1,-1,1,1,-1,1,-1,1,1), (-1,1,1,1,1,-1,-1,-1,1), (1,-1,1,1,1,-1,-1,1,1,-1), (1,-1,1,-1,-1,1,-1,1), (1,1,-1,-1,-1,1,1,1), (1,-1,1,1,1,-1,1,-1), (1,1,1,1,1,1,1,1)}, {(-1,-1,-1,1,-1,1,1,1), (-1,1,1,-1,1,-1,1,1,1), (1,-1,-1,-1,1,1,1,1,-1), (1,-1,1,1,1,-1,-1,1,1,-1), (-1,-1,1,1,1,1,1,1,-1,-1), (-1,1,1,-1,1,1,-1,1,-1,-1), (-1,-1,1,-1,-1,-1,-1,-1), (-1,1,1,1,-1,-1,1,1,1,-1)}, {(-1,-1,-1,1,-1,1,1,1,1), (-1,-1,1,1,-1,1,-1,1,1,1), (1,-1,-1,-1,1,1,1,1,-1), (1,-1,1,1,1,-1,-1,1,1,-1), (-1,-1,1,1,1,1,1,1,-1,-1), (-1,1,1,-1,1,1,-1,1,1,-1), (-1,-1,-1,-1,-1,-1,-1,-1), (1,-1,-1,1,1,1,-1,-1,1)}, {(-1,-1,-1,1,-1,1,1,1,1), (-1,-1,1,1,-1,1,-1,1,1,1), (1,-1,-1,-1,1,1,1,1,-1), (1,-1,1,1,1,-1,-1,1,1,-1), (-1,-1,1,1,1,1,1,1,-1,-1), (-1,1,1,-1,1,1,-1,1,1,-1), (1,1,1,1,1,1,1,1)}, {(-1,-1,-1,1,-1,1,1,1), (-1,-1,1,1,-1,1,-1,1,1,1), (1,-1,-1,1,1,1,1,1,1,-1), (1,-1,1,1,-1,1,-1,1,1,-1), (-1,-1,1,1,1,1,1,1,-1,-1), (1,-1,-1,1,1,1,-1,-1,1), (1,1,1,1,1,1,1,1)}, {(-1,-1,-1,1,1,-1,1,1,1), (-1,-1,1,1,-1,1,-1,1,1), (1,-1,-1,-1,1,1,1,1,-1), (1,-1,1,1,1,-1,-1,1,1,-1), (-1,-1,1,1,1,1,1,1,-1,-1), (1,-1,1,1,-1,-1,1,1,-1,-1), (-1,-1,-1,-1,-1,-1,-1,-1), (-1,1,1,1,-1,-1,1,1,1,-1)}, {(-1,-1,-1,1,1,-1,1,1,1,1), (1,-1,1,1,-1,1,-1,1,1,1), (1,-1,-1,1,1,1,1,1,1,-1), (1,-1,1,1,1,-1,-1,1,1,-1), (-1,-1,1,1,1,1,1,1,-1,-1), (1,-1,1,1,-1,-1,1,1,-1,-1), (-1,-1,-1,-1,-1,-1,-1,-1), (1,-1,-1,1,1,1,-1,-1,1)}, {(-1,-1,-1,1,-1,1,1,1,1), (-1,-1,1,1,-1,1,-1,1,1,1), (1,-1,-1,-1,1,1,1,1,-1), (1,-1,1,1,1,-1,-1,1,1,-1), (-1,-1,1,1,1,1,1,1,-1,-1), (1,-1,1,1,-1,-1,1,1,1,-1), (1,1,1,1,1,1,1,1)}, {(-1,-1,-1,1,-1,1,1,1,1), (-1,-1,1,1,-1,1,-1,1,1,1), (1,-1,-1,1,1,1,1,1,1,-1), (1,-1,1,1,-1,-1,1,1,1,-1), (-1,-1,1,1,1,1,-1,-1,1,-1), (1,1,-1,-1,-1,1,1,1), (1,-1,-1,1,1,1,-1,-1,1), (1,1,1,1,1,1,1,1)}, {(-1,-1,-1,1,1,-1,1,1,1), (-1,-1,1,1,-1,1,-1,1,1,1), (1,-1,-1,1,1,1,1,1,1,-1), (1,-1,1,1,1,-1,-1,1,1,-1), (-1,1,1,1,1,1,1,-1,1,-1), (1,1,-1,-1,-1,1,1,1), (-1,-1,-1,-1,-1,-1,-1,-1), (1,-1,-1,1,1,1,-1,-1,1)}, {(-1,-1,-1,1,-1,1,1,1,1), (-1,-1,1,1,-1,1,-1,1,1,1), (1,-1,-1,1,1,1,1,1,1,-1), (1,-1,1,1,1,-1,-1,1,1,-1), (1,1,-1,-1,-1,1,1,1,1), (-1,-1,-1,-1,-1,1,-1,1,-1), (-1,1,1,1,-1,-1,1,1,1,-1)}, {(-1,-1,-1,1,-1,1,1,1,1), (-1,-1,1,1,-1,1,-1,1,1,1), (1,-1,-1,-1,1,1,1,1,-1), (1,-1,1,1,-1,-1,1,1,1,-1), (-1,-1,1,1,1,1,-1,-1,1,-1), (1,1,-1,-1,-1,1,1,1,1), (-1,-1,-1,-1,-1,-1,-1,-1), (1,-1,-1,1,1,1,-1,-1,1)}, {(-1,-1,-1,1,-1,1,1,1,1), (-1,-1,1,1,-1,1,-1,1,1,1), (1,-1,-1,1,1,1,1,1,1,-1), (1,-1,1,1,1,-1,-1,1,1,-1), (-1,-1,1,1,1,1,-1,-1,1,-1), (1,1,-1,-1,-1,1,1,1,1), (-1,-1,-1,-1,-1,-1,-1,-1), (1,-1,-1,1,1,1,-1,-1,1)}, {(-1,-1,-1,1,-1,1,1,1,1), (-1,-1,1,1,-1,1,-1,1,1,1), (1,-1,-1,-1,1,1,1,1,-1), (1,-1,1,1,1,-1,-1,1,1,-1), (-1,-1,1,1,-1,-1,1,1,-1), (1,1,-1,-1,-1,1,1,1,1), (-1,-1,-1,-1,-1,-1,-1,-1), (1,-1,-1,1,1,1,-1,-1,1)}, {(-1,-1,-1,1,-1,1,1,1,1), (-1,-1,1,1,-1,1,-1,1,1,1), (1,-1,-1,-1,1,1,1,1,-1), (1,-1,1,1,-1,-1,1,1,-1), (-1,-1,1,1,1,1,-1,-1,1,-1), (1,1,-1,-1,-1,1,1,1,1), (1,-1,-1,1,1,1,-1,-1,1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,-1,1,1,1,-1), (-1,-1,-1,1,-1,1,1,1,1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,-1,1,1,1,-1), (-1,1,1,-1,-1,1,1,1,1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,-1,1,1,1,-1), (-1,-1,1,1,1,1,-1,-1,1,1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,-1,1,1,1,-1), (1,-1,1,1,1,-1,-1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,1,1,-1,-1,1,1,1,1), (1,-1,1,1,1,-1,-1,1,1,-1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,1,-1,-1,1,1,-1), (1,1,-1,1,-1,-1,1,1,-1), (-1,-1,-1,-1,-1,-1,-1,-1), (1,-1,-1,1,1,1,-1,-1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,1,1,1,-1,-1,1,1,-1), (1,1,-1,1,-1,-1,1,1,1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,1,1,1,1,-1,-1,1,1), (1,1,-1,1,-1,-1,1,1,1), (-1,-1,-1,-1,-1,-1,-1,-1), (1,-1,-1,1,1,1,-1,-1,1)},
{(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,-1,1,1,1,-1), (1,-1,1,1,1,-1,1,-1,1,-1), (-1,1,1,1,-1,-1,1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,-1,-1,1,1,1,-1,1), (1,-1,1,1,1,-1,-1,1,1,-1), (1,-1,-1,1,1,1,-1,-1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,-1,1,-1,-1,1), (1,1,-1,1,-1,-1,1,1,-1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,-1,-1,1,1,1,-1), (1,-1,1,1,1,-1,-1,1,-1), (-1,1,1,1,-1,-1,1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,-1,-1,1,1,1,-1), (-1,-1,-1,-1,-1,-1,-1,-1), (1,-1,-1,1,1,1,-1,-1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,1,1,1,-1,-1,1,1,1,-1), (1,1,-1,1,1,1,1,1,1,-1,-1), (-1,1,1,1,-1,-1,1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,1,-1,-1,1,1,-1), (1,1,-1,1,-1,-1,1,1,-1,-1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,1,1,1,-1,-1,1,1), (1,-1,1,1,1,-1,-1,1,-1), (-1,-1,-1,-1,-1,-1,-1,-1), (1,-1,-1,1,1,1,-1,-1,1)},
{(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,1,1,-1,-1,1,1), (1,-1,1,1,1,-1,-1,1,-1), (-1,1,1,1,-1,-1,1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1,-1), (-1,1,1,1,1,-1,-1,-1,1,1), (-1,-1,1,1,-1,1,1,1,-1), (1,-1,1,1,1,-1,-1,1,-1), (-1,1,1,1,-1,-1,1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,1,1,-1,-1,1,1), (1,-1,1,1,-1,-1,1,1,-1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,-1,-1,1,1,1,-1), (1,1,-1,1,-1,-1,1,1,-1), (1,-1,-1,1,1,1,-1,-1,1)}, {(-1,-1,-1,1,-1,1,1,1,1), (-1,-1,1,1,1,1,-1,1,1,-1), (-1,1,1,-1,1,1,1,1,-1,-1,-1), (-1,1,1,1,1,-1,-1,1,1), (1,-1,1,1,1,-1,-1,1,-1), (-1,-1,-1,-1,-1,-1,-1,-1), (1,-1,-1,1,1,1,-1,-1,1)},
{(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,1,1,-1,-1,1,1), (1,-1,1,1,1,-1,-1,1,-1), (-1,1,1,1,-1,-1,1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,1,1,-1,-1,1,1), (1,-1,1,1,1,-1,-1,1,-1), (1,-1,1,1,1,-1,-1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,-1,1,-1,-1,1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,-1,-1,1,1,1,-1), (1,-1,1,1,1,-1,-1,1,-1), (1,1,-1,1,-1,-1,1,1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,-1,-1,1,1,-1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,-1), (1,-1,1,1,-1,-1,1,1,-1,-1,-1), (1,1,-1,1,-1,-1,1,1,-1), (-1,-1,-1,-1,-1,-1,-1,-1), (-1,1,1,1,-1,-1,1,1,1,-1)}, {(-1,-1,-1,1,-1,1,1,1,1),
(-1,-1,1,1,1,1,-1,1,1,-1), (-1,1,1,-1,1,1,1,1,-1,-1), (-1,1,1,1,1,-1,-1,-1,1,1), (-1,1,1,-1,-1,1,1,1,1), (1,1,-1,1,-1,-1,1,1,-1,-1), (1,-1,-1,1,1,1,-1,-1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,1,-1,1,-1,-1,1,1,-1), (-1,-1,-1,-1,-1,-1,-1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,1,-1,-1,1,-1), (-1,-1,1,-1,-1,1,1,1,-1,1), (-1,1,1,1,-1,-1,1,1,1,-1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,1,-1,-1,1,1,-1,-1), (1,1,-1,1,-1,-1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (-1,-1,1,1,1,1,-1,-1,1,1), (1,-1,1,1,1,-1,-1,1,-1,1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,1,-1,-1,1,-1), (1,1,-1,1,-1,-1,1,1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,-1,1,-1,-1,1), (1,1,-1,1,-1,-1,1,1,-1), (-1,-1,-1,-1,-1,-1,-1,-1), (-1,1,1,1,-1,-1,1,1,1,-1)}, {(-1,-1,-1,1,-1,1,1,1,1), (-1,-1,1,1,1,1,-1,1,1,-1), (-1,1,1,-1,1,1,1,1,-1,-1), (-1,1,1,1,1,-1,-1,-1,1,1), (1,-1,1,1,1,-1,-1,1,-1), (1,1,-1,1,-1,-1,1,1,-1), (-1,-1,-1,-1,-1,-1,-1,-1), (1,-1,-1,1,1,1,-1,-1,1)}, {(-1,-1,1,1,-1,1,1,1), (-1,-1,1,1,1,1,-1,1,1,-1), (-1,1,1,-1,1,1,1,1,-1,-1), (-1,1,1,1,-1,-1,1,1), (1,-1,1,1,1,-1,-1,1,-1), (1,1,-1,1,-1,1,-1,-1), (1,1,-1,1,-1,-1,1,1,-1), (-1,1,1,1,-1,-1,1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,-1,-1), (-1,1,1,1,1,-1,-1,-1,1,1),
(1,-1,1,1,1,-1,-1,1,-1), (1,1,-1,1,-1,-1,1,1,-1), (-1,-1,-1,-1,-1,-1,-1,-1), (1,-1,-1,1,1,1,-1,-1,1), (1,1,-1,1,-1,-1,1,-1), (1,1,-1,1,-1,-1,1,-1), (-1,1,1,1,-1,-1,1,1,1,-1), (1,1,1,1,1,1,1,1)}, {(-1,-1,-1,1,-1,1,1,1,1), (-1,-1,1,1,1,1,-1,1,1,-1), (-1,1,1,-1,1,1,1,1,-1,

1), (-1,1,1,1,-1,-1,-1,1), (1,-1,1,1,-1,1,-1,-1), (1,1,-1,1,-1,-1,1,-1), (1,-1,-1,1,1,-1,-1,1), (1,1,1,1,1,1,1,1)}, {(-1,-1,-1,1,-1,1,1,1), (-1,-1,1,1,1,-1,1,-1), (-1,1,-1,1,1,1,-1,-1), (1,-1,-1,-1,1,1,1,-1), (-1,-1,1,-1,1,1,-1,1), (-1,1,-1,-1,1,-1,1,1), (-1,-1,-1,-1,-1,-1,-1,-1), (-1,1,1,1,-1,-1,1,1,-1)}, {(-1,-1,-1,1,-1,1,1,1), (-1,-1,1,1,1,-1,1,-1), (-1,1,1,-1,1,1,1,-1,-1), (1,-1,-1,-1,1,1,1,1,-1), (-1,-1,1,-1,1,1,1,-1,1), (-1,1,-1,-1,1,-1,1,1,1), (-1,-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (-1,1,1,-1,1,1,1,-1,-1), (1,-1,-1,-1,1,1,1,1,-1), (-1,-1,1,-1,1,1,-1,1), (-1,1,1,-1,-1,1,1,-1,1), (-1,1,1,1,-1,-1,1,1,-1), (1,1,1,1,1,1,1,1)}, {(-1,-1,-1,1,-1,1,1,1,1), (-1,-1,1,1,1,1,-1,1,-1), (-1,1,1,-1,1,1,1,-1,-1), (1,-1,-1,-1,1,1,1,1,-1), (-1,-1,1,-1,1,1,-1,1), (-1,1,-1,-1,1,-1,1,1), (-1,1,1,1,-1,-1,1,1), (1,1,1,1,1,1,1,1)}, {(-1,-1,-1,1,1,-1,1,1,1), (-1,-1,1,1,1,1,-1,1,-1), (-1,1,-1,1,1,1,1,-1,-1), (1,-1,-1,-1,1,1,1,1,-1), (-1,-1,1,-1,1,1,1,-1,1), (1,-1,1,1,1,-1,1,-1,-1), (-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,-1,1,1,1,-1,-1), (1,-1,-1,-1,1,1,1,1,-1), (-1,-1,1,-1,1,1,-1,1), (1,-1,1,1,1,-1,1,-1,-1), (-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (-1,1,1,-1,1,1,1,-1,-1), (1,-1,-1,-1,1,1,1,1,-1), (-1,-1,1,-1,1,1,-1,1), (1,-1,1,1,1,-1,1,-1,-1), (-1,1,1,1,-1,-1,1,1,-1), (1,1,1,1,1,1,1,1)}, {(-1,-1,-1,1,1,-1,1,1,1), (-1,-1,1,1,1,1,-1,1,-1), (-1,1,1,-1,1,1,1,-1,-1), (1,-1,-1,-1,1,1,1,1,-1), (-1,-1,1,-1,1,1,1,-1,1), (1,-1,1,1,1,-1,1,-1,-1), (1,-1,1,1,1,-1,1,-1,-1), (1,1,1,1,1,1,1,1)}, {(-1,-1,-1,1,-1,1,1,1,1), (-1,-1,1,1,1,1,-1,1,-1), (-1,1,1,-1,1,1,1,-1,-1), (1,-1,-1,-1,1,1,1,1,-1), (-1,-1,1,-1,1,1,1,-1,1), (1,1,-1,1,-1,-1,1,1,-1), (-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,-1,1,1,1,-1,-1), (1,-1,-1,-1,1,1,1,1,-1), (-1,-1,-1,-1,1,1,-1,1,1), (1,1,-1,1,-1,-1,1,1,-1), (-1,-1,-1,-1,-1,-1,-1,-1), (1,-1,-1,1,1,-1,-1,1)}, {(-1,-1,-1,1,1,-1,1,1,1,1), (-1,-1,1,1,1,1,-1,1,-1), (-1,1,1,-1,1,1,1,1,-1,-1), (1,-1,-1,-1,1,1,1,1,-1), (1,-1,1,1,1,-1,1,-1,-1), (1,1,-1,1,-1,-1,1,1,-1), (-1,-1,-1,-1,-1,-1,-1,-1), (-1,1,1,1,-1,-1,1,1,-1)}, {(-1,-1,-1,1,1,-1,1,1,1,1), (-1,-1,1,1,1,1,-1,1,-1), (-1,1,1,-1,1,1,1,1,-1,-1), (1,-1,-1,-1,1,1,1,1,-1), (1,-1,1,1,1,-1,1,-1,-1), (1,1,-1,1,-1,-1,1,1,-1), (-1,1,1,1,-1,-1,1,1,-1), (1,1,1,1,1,1,1,1)}, {(-1,-1,-1,1,-1,1,1,1,1), (-1,-1,1,1,1,1,-1,1,-1), (-1,1,1,-1,1,1,1,1,-1,-1), (1,-1,-1,-1,1,1,1,1,-1), (-1,-1,1,-1,1,1,-1,1,1), (-1,-1,1,-1,1,-1,1,1,1), (1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,-1,-1,-1,1,1), (1,-1,1,1,-1,-1,1,1,1), (-1,-1,1,-1,1,1,-1,1,1), (-1,1,1,-1,-1,1,1,1), (-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,-1,-1,-1,1,1), (1,-1,1,1,-1,-1,1,1,1), (-1,-1,1,-1,1,1,-1,1,1), (-1,1,1,-1,-1,1,1,1), (1,-1,1,1,1,-1,1,-1,-1), (1,1,1,1,1,1,1,1)}, {(-1,-1,-1,1,1,-1,1,1,1,1), (-1,-1,1,1,1,1,-1,1,-1), (-1,1,1,1,-1,-1,-1,1,1), (1,-1,1,-1,-1,-1,1,1,1), (-1,-1,1,-1,1,-1,1,1,1), (1,-1,-1,1,1,-1,1,-1,-1), (-1,-1,-1,-1,-1,-1,-1,-1,-1), (-1,1,1,1,-1,-1,1,1,-1)}, {(-1,-1,-1,1,1,-1,1,1,1,1), (-1,-1,1,1,1,1,-1,1,-1), (-1,1,1,1,-1,-1,-1,1,1), (1,-1,1,-1,-1,-1,1,1,1), (-1,-1,1,-1,1,-1,1,1,1), (1,-1,-1,1,1,-1,1,-1,-1), (-1,1,1,1,-1,-1,1,1,-1), (1,1,1,1,1,1,1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,-1,-1,1,1,-1,1,-1,-1), (-1,-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (-1,1,1,-1,-1,1,1,1), (-1,1,1,-1,-1,1,1,1), (1,1,1,1,1,1,1,1)}, {(-1,-1,-1,1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (-1,1,1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,-1,-1,-1,-1,1), (1,-1,1,-1,-1,-1,1,1,1), (-1,-1,1,-1,1,1,-1,1,1), (-1,-1,-1,-1,-1,-1,-1,-1), (-1,-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,-1,-1,-1,-1,1), (1,-1,1,-1,-1,-1,1,1,1), (-1,-1,1,-1,1,1,-1,1,1), (-1,-1,-1,-1,-1,-1,-1,-1), (1,-1,1,1,1,-1,1,-1,-1), (1,1,1,1,1,1,1,1)}, {(-1,-1,-1,1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,-1,1,1,1,-1,1,-1,-1), (-1,-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,-1,1,1,1,-1,1,-1,-1), (1,-1,1,1,1,-1,1,-1,-1), (1,1,1,1,1,1,1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,1,-1,1,-1,-1,1,1,-1), (-1,-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,1,-1,1,-1,-1,1,1,-1), (-1,-1,-1,-1,-1,-1,-1,-1,-1), (1,-1,-1,1,1,-1,-1,1)}, {(-1,-1,-1,1,-1,1,-1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,1,-1,1,-1,-1,1,1,-1), (-1,1,1,1,-1,-1,1,1,-1), (1,1,1,1,1,1,1,1)}, {(-1,-1,-1,1,1,-1,1,1,1,1), (-1,-1,1,1,1,1,-1,1,-1), (-1,1,1,1,1,-1,-1,-1,1), (-1,-1,1,-1,-1,-1,1,1,1), (1,-1,1,1,1,-1,1,-1,-1), (-1,-1,1,-1,1,1,-1,1,1), (1,-1,-1,1,1,-1,1,-1,-1), (-1,-1,-1,-1,-1,-1,-1,-1,-1), (-1,1,1,1,-1,-1,1,1,-1)}, {(-1,-1,-1,1,1,-1,1,1,1,1), (-1,-1,1,1,1,1,-1,1,-1), (-1,1,1,1,1,-1,-1,-1,1), (-1,-1,1,-1,-1,-1,1,1,1), (1,-1,1,1,1,-1,1,-1,-1), (-1,-1,1,-1,1,1,-1,1,1), (1,-1,-1,1,1,-1,1,-1,-1), (1,-1,1,1,1,-1,1,-1,-1), (1,1,1,1,1,1,1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,1,-1,1,1), (-1,-1,-1,-1,-1,-1,-1,-1), (1,-1,1,1,1,-1,1,-1,-1), (1,1,1,1,1,1,1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,-1,1,1,1,-1,1,-1,-1), (-1,-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,1,-1,1,1), (1,-1,1,1,1,-1,1,-1,-1), (1,-1,1,1,1,-1,1,-1,-1), (1,1,1,1,1,1,1,1)}, {(-1,-1,-1,1,-1,1,1,1,1), (-1,-1,1,1,1,1,-1,1,-1), (-1,1,1,1,-1,-1,-1,-1,1), (1,-1,1,-1,-1,-1,1,1,1), (-1,-1,1,-1,1,1,-1,1,1), (-1,-1,-1,-1,-1,-1,-1,-1), (-1,-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (1,-1,1,1,1,-1,1,-1,-1), (-1,-1,1,-1,1,1,-1,1,1), (1,-1,1,1,1,-1,1,-1,-1), (-1,-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,-1,1,1,1,-1,1,-1,-1), (-1,-1,-1,-1,-1,-1,-1,-1,-1), (1,-1,-1,1,1,-1,-1,1)}, {(-1,-1,-1,1,1,-1,1,1,1,1), (-1,-1,1,1,1,1,-1,1,-1), (-1,1,1,1,1,-1,-1,-1,1), (1,-1,1,-1,-1,-1,1,1,1), (1,-1,1,1,1,-1,1,-1,-1), (-1,-1,1,-1,1,1,-1,1,1), (1,1,1,1,1,1,1,1)}, {(-1,-1,-1,1,-1,1,1,1,1), (-1,-1,1,1,1,1,-1,1,-1), (-1,1,1,1,-1,-1,-1,-1,1), (1,-1,1,-1,-1,-1,1,1,1), (-1,-1,1,-1,1,-1,1,1,1), (1,1,-1,1,-1,-1,1,1,-1), (-1,-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (1,-1,1,1,1,-1,1,-1,-1), (1,1,-1,1,-1,-1,1,1,-1), (-1,-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (1,-1,-1,1,1,-1,-1,-1,1,1,1), (-1,-1,1,-1,1,1,-1,1,-1), (-1,1,1,1,-1,-1,1,1,-1), (-1,-1,1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,-1,1,1,1,-1,1,-1,-1), (1,-1,1,1,1,-1,1,-1,-1), (1,1,1,1,1,1,1,1)}, {(-1,-1,-1,1,-1,1,1,1,1,1), (-1,-1,1,1,1,1,-1,1,-1), (-1,1,1,1,1,-1,-1,-1,1), (1,-1,1,-1,-1,-1,1,1,1), (-1,-1,1,-1,1,-1,1,1,1), (1,1,-1,1,-1,-1,1,1,-1), (-1,-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (-1,1,1,1,1,-1,-1,-1,1), (-1,-1,1,-1,-1,-1,1,1,1), (1,-1,1,1,1,-1,1,-1,-1), (-1,-1,1,-1,1,1,-1,1,1), (1,-1,-1,1,1,-1,1,-1,-1), (1,1,1,1,1,1,1,1)}, {(-1,-1,-1,1,1,-1,1,1,1,1), (-1,-1,1,1,1,1,-1,1,-1), (-1,1,1,1,-1,-1,-1,-1,1), (1,-1,1,-1,-1,-1,1,1,1), (-1,1,1,-1,1,1,-1,1,-1), (1,1,-1,1,-1,-1,1,1,-1), (-1,-1,-1,-1,-1,-1,-1,-1,-1), (-1,1,1,1,-1,-1,1,1,-1)}, {(-1,-1,-1,1,1,-1,1,1,1,1), (-1,-1,1,1,1,1,-1,1,-1), (-1,1,1,1,-1,-1,-1,-1,1), (1,-1,1,-1,-1,-1,1,1,1), (-1,1,1,-1,1,1,-1,1,-1), (1,1,-1,1,-1,-1,1,1,-1), (1,-1,1,1,1,-1,1,-1,-1), (1,1,1,1,1,1,1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (1,-1,1,1,1,-1,1,-1,-1), (1,1,-1,1,-1,-1,1,1,-1), (-1,-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (1,-1,1,1,1,-1,1,-1,-1), (1,1,-1,1,-1,-1,1,1,-1), (-1,-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (-1,1,1,1,1,-1,-1,-1,1), (1,-1,1,-1,-1,-1,1,1,1), (1,-1,1,1,1,-1,1,-1,-1), (1,1,-1,1,-1,-1,1,1,-1), (1,-1,1,1,1,-1,1,-1,-1), (1,1,1,1,1,1,1,1)}, {(-1,-1,-1,1,1,-1,1,1,1,1), (-1,-1,1,1,1,1,-1,1,-1), (1,-1,1,1,1,1,-1,-1,-1,1), (1,-1,1,-1,-1,-1,1,1,1), (-1,-1,1,-1,1,1,-1,1,-1), (-1,1,1,-1,-1,1,1,1), (-1,-1,-1,-1,-1,-1,-1,-1,-1), (-1,1,1,1,-1,-1,1,1,-1)}, {(-1,-1,-1,1,1,-1,1,1,1,1), (-1,-1,1,1,1,1,-1,1,-1), (1,-1,1,-1,-1,-1,1,1,1,1), (1,-1,1,-1,-1,-1,1,1,1), (-1,-1,1,-1,1,1,-1,1,-1), (-1,1,1,-1,-1,1,1,1), (-1,-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (-1,1,1,1,-1,-1,-1,-1,1,1,-1), (1,-1,1,-1,-1,-1,1,1,1), (1,-1,1,1,1,-1,1,-1,-1), (1,1,-1,1,-1,-1,1,1,-1), (1,-1,-1,1,1,-1,1,-1,-1), (1,1,1,1,1,1,1,1)}, {(-1,-1,-1,1,1,-1,1,1,1,1), (-1,-1,1,1,1,1,-1,1,-1), (1,-1,1,-1,-1,1,1,1,1,-1), (1,-1,1,-1,-1,-1,1,1,1), (-1,-1,1,-1,1,1,-1,1,-1), (-1,1,1,-1,-1,1,1,1), (-1,-1,-1,-1,-1,-1,-1,-1,-1), (-1,1,1,1,-1,-1,1,1,-1)}, {(-1,-1,-1,1,1,-1,1,1,1,1), (-1,-1,1,1,1,1,-1,1,-1), (1,-1,1,-1,-1,1,1,1,1,-1), (1,-1,1,-1,-1,-1,1,1,1), (-1,-1,1,-1,1,1,-1,1,-1), (-1,1,1,-1,-1,1,1,1), (-1,-1,-1,-1,-1,-1,-1,-1,-1), (1,-1,-1,1,1,-1,-1,1)}, {(-1,-1,-1,1,-1,1,1,1,1), (-1,-1,1,1,1,1,-1,1,-1), (1,-1,-1,1,1,1,-1,-1,1,1,-1), (1,-1,1,-1,-1,-1,1,1,1), (-1,1,1,-1,1,1,-1,1,-1), (-1,1,1,-1,-1,1,1,1), (-1,1,1,1,-1,-1,1,1,-1), (1,1,1,1,1,1,1,1)}, {(-1,-

1,-1,1,-1,1,1,1), (-1,-1,1,1,1,1,-1,1,-1), (1,-1,-1,-1,1,1,1,-1), (1,-1,1,-1,-1,-1,1,1), (-1,-1,1,-1,1,1,-1,1), (-1,1,-1,-1,1,-1,1,1), (1,-1,-1,1,1,-1,-1,1,1), (1,1,1,1,1,1,1,1)}, {(-1,-1,-1,1,-1,1,1,1,1), (-1,-1,1,1,1,1,-1,1,-1), (1,-1,-1,-1,1,1,1,1,-1), (1,-1,1,-1,-1,-1,1,1,1), (-1,-1,1,-1,1,1,-1,1), (1,-1,1,1,-1,1,-1,-1,1), (-1,-1,-1,-1,-1,-1,-1,-1), (-1,1,1,1,-1,1,1,1,-1)}, {(-1,-1,-1,1,1,-1,1,1,1,1), (-1,-1,1,1,1,1,-1,1,-1), (1,-1,-1,-1,1,1,1,1,-1), (1,-1,1,-1,-1,-1,1,1,1), (-1,-1,1,-1,1,1,1,-1), (1,-1,1,1,-1,1,-1,-1,1), (-1,-1,-1,-1,-1,-1,-1,-1), (1,-1,-1,1,1,-1,-1,1,1)}, {(-1,-1,-1,1,-1,1,1,1,1), (-1,-1,1,1,1,1,-1,1,-1), (1,-1,-1,-1,1,1,1,1,-1), (1,-1,1,-1,-1,-1,1,1,1), (-1,-1,1,-1,1,1,1,-1), (1,-1,1,1,-1,1,-1,-1,1), (-1,-1,1,-1,-1,1,1,-1), (1,1,1,1,1,1,1,1)}, {(-1,-1,-1,1,-1,1,1,1,1), (-1,-1,1,1,1,1,-1,1,-1), (1,-1,-1,-1,1,1,1,1,-1), (1,-1,1,-1,-1,-1,1,1,1), (-1,-1,1,-1,1,1,1,-1), (1,-1,1,1,-1,1,-1,-1,1). (1,-1,-1,1,1,-1,-1,1), (1,1,1,1,1,1,1,1)}, {(-1,-1,-1,1,-1,1,1,1,1), (-1,-1,1,1,1,1,-1,1,-1), (1,-1,-1,-1,1,1,1,1,-1), (1,-1,1,-1,-1,-1,1,1,1), (-1,1,1,-1,-1,1,-1,1,1), (1,1,-1,1,-1,-1,1,-1), (-1,-1,-1,-1,-1,-1,-1,-1), (-1,1,1,1,-1,-1,1,1,-1)}, {(-1,-1,-1,1,1,-1,1,1,1,1), (-1,-1,1,1,1,1,-1,1,-1), (1,-1,-1,-1,1,1,1,1,-1), (1,-1,1,-1,-1,-1,1,1,1), (-1,1,-1,-1,1,1,-1,1,1), (1,1,-1,1,-1,-1,1,-1), (-1,-1,-1,-1,-1,-1,-1,-1), (1,-1,-1,1,1,-1,-1,1)}, {(-1,-1,-1,1,1,-1,1,1,1,1), (-1,-1,1,1,1,1,-1,1,-1), (1,-1,-1,-1,1,1,1,1,-1), (1,-1,1,-1,-1,-1,1,1,1), (-1,1,-1,-1,1,-1,1,1,1), (1,1,-1,1,-1,-1,1,-1), (-1,1,1,1,-1,-1,1,1,-1), (1,1,1,1,1,1,1,1)}, {(-1,-1,-1,1,-1,1,1,1,1), (-1,-1,1,1,1,1,-1,1,-1), (1,-1,-1,-1,1,1,1,1,-1), (1,-1,1,-1,-1,-1,1,1,1), (-1,1,1,-1,-1,1,-1,1,1), (1,1,-1,1,-1,-1,1,-1), (-1,1,1,1,-1,-1,1,1,-1), (1,1,1,1,1,1,1,1)}, {(-1,-1,-1,1,-1,1,1,1,1), (-1,-1,1,1,1,1,-1,1,-1), (1,-1,-1,-1,1,1,1,1,-1), (1,-1,1,-1,-1,-1,1,1,1), (1,-1,1,1,-1,1,-1,-1,1), (1,1,-1,1,-1,-1,1,-1), (-1,-1,-1,-1,-1,-1,-1,-1), (-1,1,1,1,-1,-1,1,1,-1)}, {(-1,-1,-1,1,-1,1,1,1,1), (-1,-1,1,1,1,1,-1,1,-1), (1,-1,-1,-1,1,1,1,1,-1), (1,-1,1,-1,-1,-1,1,1,1), (-1,-1,1,-1,-1,-1,1,1), (1,1,-1,1,-1,-1,1,-1), (-1,-1,-1,-1,-1,-1,-1,-1), (1,-1,-1,1,1,-1,-1,1,1)}, {(-1,-1,-1,1,-1,1,1,1,1), (-1,-1,1,1,1,1,-1,1,-1), (1,-1,-1,-1,1,1,1,1,-1), (1,-1,1,-1,-1,-1,1,1,1), (1,-1,1,1,-1,1,-1,-1,1), (1,1,-1,1,-1,-1,1,-1), (-1,1,1,1,-1,-1,1,1,-1), (1,1,1,1,1,1,1,1)}, {(-1,-1,-1,1,-1,1,1,1,1), (-1,-1,1,1,1,1,-1,1,-1), (-1,1,1,1,1,-1,-1,1,-1), (1,1,-1,1,-1,1,-1,1,-1), (-1,-1,1,1,1,1,1,-1,-1), (-1,-1,-1,-1,-1,-1,-1,-1), (-1,1,1,1,-1,-1,1,1,-1)}, {(-1,-1,-1,1,-1,1,1,1,1), (-1,1,1,-1,1,1,1,-1), (-1,1,1,1,1,-1,-1,-1,1), (1,1,-1,1,1,-1,1,-1), (-1,-1,1,1,1,1,1,-1,-1), (-1,-1,-1,1,1,-1,1,1), (-1,-1,-1,-1,-1,-1,-1,-1), (1,-1,-1,1,1,1,-1,1,-1,1)}, {(-1,-1,-1,1,1,-1,1,1,1,1), (-1,1,1,-1,1,1,1,-1,1), (-1,1,1,1,1,-1,-1,-1,1), (1,1,-1,1,-1,1,1,-1,-1), (-1,-1,1,1,1,1,1,-1,-1), (-1,1,1,-1,1,1,-1,1,-1), (1,1,1,1,1,1,1,1)}, {(-1,-1,-1,1,1,-1,1,1,1,1), (-1,1,1,-1,1,1,1,-1,1), (-1,1,1,1,1,-1,-1,-1,1), (1,1,-1,1,-1,1,-1,1,-1), (-1,-1,1,1,1,1,1,-1,-1), (1,-1,-1,1,1,-1,-1,1,1), (1,1,1,1,1,1,1,1)}, {(-1,-1,-1,1,1,-1,1,1,1,1), (-1,1,-1,1,1,1,-1,1), (-1,1,1,1,1,-1,-1,1,-1), (1,1,-1,1,-1,1,-1,1,-1), (-1,-1,1,1,1,1,1,-1,-1), (-1,-1,-1,-1,-1,-1,-1,-1), (-1,1,1,1,-1,-1,1,1,-1)}, {(-1,-1,-1,1,1,-1,1,1,1,1), (-1,1,1,-1,1,1,1,-1,1), (-1,1,1,1,1,-1,-1,-1,1), (1,1,-1,1,-1,1,-1,1,-1), (-1,-1,1,1,1,1,1,-1,-1), (1,-1,1,-1,-1,-1,1,-1,1), (-1,-1,-1,-1,-1,-1,-1,-1), (-1,1,1,1,-1,-1,1,1,-1)}, {(-1,-1,-1,1,-1,1,1,1,1), (-1,1,-1,1,1,1,-1,1), (-1,1,1,1,1,-1,-1,-1,1), (1,1,-1,1,-1,1,-1,1,-1), (-1,-1,1,1,1,1,1,-1,-1), (1,-1,1,-1,-1,-1,1,-1,1), (-1,1,1,-1,-1,1,1,1,-1), (1,1,1,1,1,1,1,1)}, {(-1,-1,-1,1,-1,1,1,1,1), (-1,1,-1,1,1,1,-1,1), (-1,1,1,1,1,-1,-1,-1,1), (1,1,-1,1,-1,1,-1,1,-1), (-1,-1,1,1,1,1,1,-1,-1), (1,1,-1,1,-1,1,-1,1,-1), (-1,1,1,-1,1,1,1,-1), (-1,1,1,1,-1,1,1,1,-1)}, {(-1,-1,-1,1,1,-1,1,1,1,1), (-1,1,1,-1,1,1,1,-1,1), (-1,1,1,1,1,-1,-1,-1,1), (1,1,-1,1,-1,1,-1,1,-1), (-1,1,1,-1,-1,-1,-1,1,1), (-1,1,1,-1,1,1,-1,1,-1), (1,1,1,1,1,1,1,1)}, {(-1,-1,-1,1,1,-1,1,1,1,1), (-1,1,1,-1,1,1,1,-1,1), (-1,1,1,1,1,-1,-1,-1,1), (1,1,-1,1,-1,1,-1,1,-1), (-1,-1,1,1,1,1,1,-1,-1), (1,-1,-1,1,1,-1,-1,1,1), (-1,-1,1,1,1,1,-1,1,-1), (-1,1,1,1,-1,1,1,1,-1)}, {(-1,-1,-1,1,-1,1,1,1,1), (-1,1,-1,1,1,1,-1,1), (-1,1,1,1,1,-1,-1,-1,1), (1,1,-1,1,-1,1,-1,1,-1), (-1,1,-1,1,1,-1,1,1,-1), (1,1,-1,1,-1,-1,1,1), (-1,-1,-1,-1,-1,-1,-1,-1), (-1,1,1,1,-1,-1,1,1,-1)}, {(-1,-1,-1,1,1,-1,1,1,1,1), (-1,1,-1,1,1,1,-1,1), (-1,1,1,1,1,-1,-1,-1,1), (1,1,-1,1,-1,1,-1,1,-1), (-1,-1,1,1,1,1,1,-1,-1), (1,-1,-1,1,1,-1,-1,1,1), (1,1,1,1,1,1,1,1)}, {(-1,-1,-1,1,-1,1,1,1,1), (-1,1,-1,1,1,1,-1,1), (-1,1,1,1,1,-1,-1,-1,1), (1,1,-1,1,-1,1,-1,1,-1), (-1,1,-1,1,-1,1,1,1), (1,1,-1,1,-1,-1,1,1), (-1,1,1,1,-1,1,1,1,-1)}, {(-1,-1,-1,1,-1,1,1,1,1), (-1,1,-1,1,1,1,-1,1), (-1,1,1,1,1,-1,-1,-1,1), (1,1,-1,1,-1,1,-1,1,-1), (-1,-1,1,1,1,1,1,-1,-1), (-1,-1,-1,-1,-1,-1,-1,-1), (-1,1,1,1,-1,1,1,1,-1)}, {(-1,-1,-1,1,-1,1,1,1,1), (-1,1,1,-1,1,1,1,-1,1), (-1,1,1,1,1,-1,-1,-1,1), (1,1,-1,1,-1,1,-1,1,-1), (-1,1,-1,1,1,-1,1,1,-1), (1,1,-1,-1,-1,-1,1,1,1), (-1,-1,-1,-1,-1,-1,-1,-1), (1,-1,-1,1,1,-1,-1,1,1)}, {(-1,-1,-1,1,1,-1,1,1,1,1), (-1,1,1,-1,1,1,1,-1,1), (-1,1,1,1,1,-1,-1,-1,1), (1,1,-1,1,-1,1,-1,1,-1), (-1,1,-1,1,1,-1,1,1,-1), (1,1,-1,-1,-1,-1,1,1,1), (-1,-1,1,-1,1,1,-1,1), (1,1,1,1,1,1,1,1)}, {(-1,-1,-1,1,-1,1,1,1,1), (-1,1,-1,1,1,1,-1,1), (-1,1,1,1,1,-1,-1,-1,1), (1,1,-1,1,-1,1,-1,1,-1), (-1,1,-1,1,1,-1,1,1,-1), (1,1,-1,-1,-1,-1,1,1,1), (1,-1,-1,1,1,-1,-1,1), (1,1,1,1,1,1,1,1)}, {(-1,-1,-1,1,-1,1,1,1,1), (-1,1,-1,1,1,1,-1,1), (1,-1,-1,-1,1,1,1,1,-1), (1,1,-1,1,-1,1,-1,1,-1), (-1,-1,1,1,1,1,1,-1,-1), (-1,-1,1,1,1,1,-1,1,-1), (-1,1,1,1,-1,1,1,1,-1)}, {(-1,-1,-1,1,-1,1,1,1,1), (-1,1,1,-1,1,1,1,-1,1), (1,-1,-1,-1,1,1,1,1,-1), (1,1,-1,1,-1,1,-1,1,-1), (-1,1,-1,1,1,-1,1,1,-1), (-1,-1,1,1,1,1,-1,1,-1), (-1,-1,1,1,1,1,-1,1,-1), (1,1,1,1,1,1,1,1)}, {(-1,-1,-1,1,-1,1,1,1,1), (-1,1,1,-1,1,1,1,-1,1), (1,-1,-1,-1,1,1,1,1,-1), (1,1,-1,1,-1,1,-1,1,-1), (-1,-1,1,1,1,1,1,-1,-1), (-1,-1,1,1,1,1,-1,1,-1), (-1,-1,1,1,1,1,-1,1,-1), (1,-1,1,1,1,-1,1,-1,1)}, {(-1,-1,-1,1,1,-1,1,1,1,1), (-1,1,-1,1,1,1,-1,1), (-1,1,1,1,1,-1,-1,-1,1), (1,1,-1,1,-1,1,-1,1,-1), (-1,-1,1,1,1,1,-1,1,-1), (1,1,1,1,1,1,1,1)}, {(-1,-1,-1,1,-1,1,1,1,1), (-1,1,-1,1,1,1,-1,1), (-1,1,1,1,1,-1,-1,1), (1,1,-1,1,-1,1,-1,1,-1), (-1,-1,1,1,1,1,-1,1,-1), (-1,-1,-1,-1,-1,-1,-1,-1), (-1,1,1,1,-1,1,1,1,-1)}, {(-1,-1,-1,1,1,-1,1,1,1,1), (-1,1,-1,1,1,1,-1,1), (-1,1,1,1,1,-1,-1,-1,1), (1,1,-1,1,-1,1,-1,1,-1), (-1,1,-1,1,1,-1,1,1,-1), (-1,-1,-1,-1,-1,-1,-1,-1), (1,-1,-1,1,1,-1,-1,1,1)}, {(-1,-1,-1,1,-1,1,1,1,1), (-1,1,-1,1,1,1,-1,1), (-1,1,1,1,1,-1,-1,-1,1), (1,1,-1,1,-1,1,-1,1,-1), (-1,-1,1,1,1,1,-1,1,-1), (1,1,-1,1,-1,-1,-1,1,1), (-1,1,1,1,-1,1,1,1,-1), (1,1,1,1,1,1,1,1)}, {(-1,-1,-1,1,-1,1,1,1,1), (-1,1,-1,1,1,1,-1,1), (-1,1,1,1,1,-1,-1,-1,1), (1,1,-1,1,-1,1,-1,1,-1), (-1,1,-1,1,1,-1,1,1,-1), (-1,-1,-1,-1,-1,-1,-1,-1), (-1,1,1,1,-1,1,1,1,-1)}, {(-1,-1,-1,1,-1,1,1,1,1), (-1,1,-1,1,1,1,-1,1), (1,-1,-1,-1,1,1,1,1,-1), (1,1,-1,1,-1,1,-1,1,-1), (-1,-1,1,1,1,1,-1,1,-1), (-1,-1,1,1,1,1,-1,1,-1), (-1,-1,1,1,1,-1,-1,1,1,-1), (1,1,1,1,1,1,1,1)}, {(-1,-1,-1,1,-1,1,1,1,1), (-1,1,-1,1,1,1,-1,1), (1,-1,-1,-1,1,1,1,1,-1), (1,1,-1,1,-1,1,-1,1,-1), (-1,-1,1,1,1,1,-1,1,-1), (1,-1,1,-1,-1,-1,1,1,1), (-1,-1,-1,-1,-1,-1,-1,-1), (-1,1,1,1,-1,1,1,1,-1)}, {(-1,-1,-1,1,-1,1,1,1,1), (-1,1,-1,1,1,1,-1,1), (1,-1,-1,-1,1,1,1,1,-1), (1,1,-1,1,-1,1,-1,1,-1), (-1,-1,1,1,1,1,-1,1,-1), (-1,-1,1,1,1,1,-1,1,-1), (-1,-1,1,1,1,-1,-1,1,1,-1), (1,1,1,1,1,1,1,1)}, {(-1,-1,-1,1,-1,1,1,1,1), (-1,1,-1,1,1,1,-1,1), (1,-1,-1,-1,1,1,1,1,-1), (1,1,-1,1,-1,1,-1,1,-1), (-1,-1,1,1,1,1,-1,1,-1), (-1,-1,-1,-1,-1,-1,-1,-1), (-1,1,1,1,-1,1,1,1,-1)}, {(-1,-1,-1,1,-1,1,1,1,1), (-1,1,-1,1,1,1,-1,1), (1,-1,-1,-1,1,1,1,1,-1), (1,1,-1,1,-1,1,-1,-1), (-1,-1,1,1,1,1,-1,1,-1), (-1,-1,1,1,1,1,-1,1,-1), (-1,-1,-1,-1,-1,-1,-1,-1), (-1,1,1,1,-1,1,1,1,-1)}, {(-1,-1,-1,1,-1,1,1,1,1), (-1,1,-1,1,-1,1,1,1), (1,-1,-1,1,1,1,1,-1), (1,1,-1,1,-1,1,-1,-1), (-1,-1,1,1,1,1,1,-1,-1), (1,-1,1,-1,-1,-1,1,1), (-1,-1,-1,-1,-1,-1,-1,-1), (-1,1,1,1,-1,1,1,1,-1)}, {(-1,-1,-1,1,-1,1,1,1,1), (-1,1,-1,1,-1,1,1,1,1), (1,-1,-1,1,1,1,1,-1), (1,1,-1,1,-1,1,-1,-1), (-1,-1,1,1,1,1,1,-1,-1), (1,-1,1,-1,-1,1,1,1), (-1,-1,-1,-1,-1,-1,-1,-1), (1,-1,-1,1,1,1,-1,1,-1,1)}, {(-1,-1,-1,1,-1,1,1,1,1), (-1,1,-1,1,1,1,-1,1), (1,-1,-1,-1,1,1,1,1,-1), (1,1,-1,1,-1,1,-1,-1), (-1,-1,1,1,1,1,1,-1,-1), (-1,-1,1,1,1,1,-1,1,-1), (-1,1,1,1,-1,1,1,1,-1)}, {(-1,-1,-1,1,-1,1,1,1,1), (-1,1,-1,-1,1,1,1,1), (1,-1,-1,-1,1,1,1,1,-1), (1,1,-1,1,-1,1,-1,-1), (-1,-1,1,1,1,1,-1,1,-1), (-1,-1,-1,-1,-1,-1,-1,-1), (-1,1,1,1,-1,1,1,1,-1)}, {(-1,-1,-1,1,-1,1,1,1,1), (-1,1,-1,1,1,1,-1,1), (1,-1,-1,-1,1,1,1,1,-1), (1,1,-1,1,-1,1,-1,-1), (-1,1,1,1,1,1,-1,-1), (1,-1,1,-1,-1,-1,1,1), (-1,-1,-1,-1,-1,-1,-1,-1), (-1,1,1,1,-1,1,1,1,-1)}, {(-1,-1,-1,1,-1,1,1,1,1), (-1,1,-1,1,1,1,-1,1), (1,-1,-1,-1,1,1,1,1,-1), (1,1,-1,1,-1,1,-1,-1), (-1,-1,1,1,1,1,1,-1,-1), (-1,-1,1,1,1,1,-1,1,-1), (-1,1,1,1,-1,1,1,1,-1), (1,1,1,1,1,1,1,1)}, {(-1,-1,-1,1,-1,1,1,1,1), (-1,1,-1,1,1,1,-1,1), (1,-1,-1,-1,1,1,1,1,-1), (1,1,-1,1,-1,1,-1,-1), (-1,-1,1,1,1,1,1,-1,-1), (1,-1,1,-1,-1,-1,1,1), (-1,-1,-1,-1,-1,-1,-1,-1), (-1,1,1,1,-1,1,1,1,-1)}, {(-1,-1,-1,1,-1,1,1,1,1), (-1,1,-1,1,1,1,-1,1), (1,-1,-1,-1,1,1,1,1,-1), (1,1,-1,1,-1,1,-1,-1), (-1,1,1,1,1,1,-1,-1), (1,-1,1,-1,-1,1,1,1), (-1,-1,-1,-1,-1,-1,-1,-1), (1,-1,-1,1,1,1,-1,1,-1,1)}, {(-1,-1,-1,1,-1,1,1,1,1), (-1,1,-1,1,1,1,-1,1), (1,-1,-1,-1,1,1,1,1,-1), (1,1,-1,1,-1,1,-1,-1), (-1,-1,1,1,1,1,1,-1,-1), (-1,-1,1,1,1,1,-1,1,-1), (-1,1,1,1,-1,1,1,1,-1)}, {(-1,-1,-1,1,-1,1,1,1,1), (-1,1,-1,-1,1,1,1,1), (1,-1,-1,-1,1,1,1,1,-1), (1,1,-1,1,-1,1,-1,-1), (-1,-1,1,1,1,1,-1,1,-1), (1,-1,1,-1,-1,1,1), (-1,-1,-1,-1,-1,-1,-1,-1), (-1,1,1,1,-1,1,1,1,-1)}, {(-1,-1,-1,1,-1,1,1,1,1), (-1,1,-1,1,1,1,-1,1), (1,-1,-1,-1,1,1,1,1,-1), (1,1,-1,1,-1,1,-1,-1), (-1,-1,1,1,1,1,1,-1,-1), (1,-1,1,-1,-1,-1,1,-1,1), (-1,-1,1,1,1,1,-1,1,-1), (1,-1,1,1,-

1,1,-1,1), (-1,1,1,-1,-1,1,1,-1), (1,1,1,1,1,1,1,1)}, {(-1,-1,-1,1,-1,1,1,1), (-1,1,1,-1,-1,1,1,-1,1), (1,-1,-1,-1,1,1,1,1,-1), (1,1,-1,1,-1,1,1,-1,-1), (-1,-1,1,1,1,1,1,-1,-1), (1,-1,1,-1,-1,1,1,-1,1), (1,-1,-1,1,1,1,-1,-1,1), (1,1,1,1,1,1,1,1)}, {(-1,-1,-1,1,-1,1,1,1,1), (-1,1,-1,-1,1,1,1,-1,1), (1,-1,-1,-1,1,1,1,1,-1), (1,1,-1,1,-1,1,1,-1,-1), (-1,1,-1,1,1,1,1,-1,-1), (1,1,-1,-1,-1,-1,1,1,1), (-1,-1,-1,-1,-1,-1,-1,-1), (-1,1,1,-1,-1,1,1,1,-1)}, {(-1,-1,-1,1,-1,1,1,1,1), (-1,1,1,-1,-1,1,1,1,-1,1), (1,-1,-1,-1,1,1,1,1,-1), (1,1,-1,1,-1,1,1,-1,-1), (-1,1,1,-1,1,1,1,-1,1,-1), (1,1,-1,-1,-1,-1,1,1,1), (-1,-1,-1,-1,-1,-1,-1,-1), (1,-1,-1,1,1,1,-1,-1,1)}, {(-1,-1,-1,1,-1,1,1,1,1), (-1,1,1,-1,-1,1,1,1,-1,1), (1,-1,-1,-1,1,1,1,1,-1), (1,1,-1,1,1,-1,1,1,-1,-1), (-1,1,1,-1,1,1,1,-1,1,-1), (1,1,1,-1,-1,-1,1,1,1), (-1,1,1,1,-1,-1,1,1,1,-1), (1,1,1,1,1,1,1,1)}, {(-1,-1,-1,1,-1,1,1,1,1), (-1,1,1,-1,-1,1,1,1,-1,-1), (1,-1,-1,-1,1,1,1,1,-1), (1,1,-1,1,-1,1,1,-1,-1), (-1,1,1,-1,1,1,1,-1,1,-1), (1,1,-1,-1,1,1,1,-1,1,1), (1,-1,-1,1,1,1,-1,-1,1), (1,1,1,1,1,1,1,1)}, {(-1,-1,-1,1,1,-1,1,1,1), (-1,1,1,-1,-1,1,1,1,-1,1), (1,-1,-1,-1,1,1,1,-1,1,-1), (1,1,-1,1,-1,1,1,-1,-1), (1,-1,1,1,-1,-1,1,1,-1), (1,1,-1,-1,-1,-1,1,1,1), (-1,-1,1,-1,-1,-1,-1,-1), (-1,1,1,1,-1,1,1,1,-1)}, {(-1,-1,-1,1,1,-1,1,1,1), (-1,1,1,-1,-1,1,1,1,-1,1), (1,-1,-1,-1,1,1,1,1,-1), (1,1,-1,1,-1,1,1,-1,-1), (1,-1,1,1,-1,1,1,-1,1), (1,1,-1,-1,-1,-1,1,1,1), (-1,-1,-1,-1,-1,-1,-1,-1), (1,-1,-1,1,1,1,-1,-1,1)}, {(-1,-1,-1,1,-1,1,1,1,1), (-1,1,1,-1,1,1,1,-1,1,-1), (1,-1,-1,-1,1,1,1,1,-1), (1,1,-1,1,-1,1,1,-1,-1), (1,-1,1,-1,-1,1,1,-1,1), (1,1,-1,-1,-1,1,1,1,1), (-1,1,1,1,-1,1,1,1,-1,-1), (-1,1,1,1,-1,1,1,1,-1)}, {(-1,-1,-1,1,-1,1,1,1,1), (-1,1,1,-1,1,1,1,-1,1,-1), (1,-1,-1,-1,1,1,1,1,-1), (1,1,-1,1,-1,1,1,-1,-1), (-1,1,1,-1,1,1,1,-1,1,-1), (1,-1,-1,1,1,1,-1,-1,1,-1), (-1,-1,-1,-1,-1,-1,-1,-1), (-1,1,1,1,-1,-1,1,1,1,-1)}, {(-1,-1,-1,1,-1,1,1,1,1), (-1,1,1,-1,1,1,1,-1,1,-1), (-1,1,1,1,1,-1,-1,1,-1), (1,1,-1,-1,-1,1,1,-1,1), (-1,-1,1,-1,-1,1,1,-1,1), (1,1,-1,-1,-1,1,1,1,1), (-1,-1,-1,-1,-1,-1,-1,-1), (-1,1,1,1,-1,-1,1,1,1,-1)}, {(-1,-1,-1,1,-1,1,1,1,1), (-1,1,1,-1,1,1,1,-1,1,-1), (-1,1,1,1,1,-1,-1,1,1,-1), (1,1,-1,-1,1,1,-1,1,-1), (-1,-1,1,1,-1,1,1,-1,1,-1), (-1,1,1,-1,1,1,1,-1,1,1), (-1,-1,-1,-1,-1,-1,-1,-1), (1,-1,1,1,1,-1,-1,-1,1)}, {(-1,-1,-1,1,1,-1,1,1,1), (-1,1,1,-1,1,1,1,1,-1,-1), (-1,1,1,1,1,1,-1,-1,-1,1), (1,1,-1,-1,-1,1,1,-1,1), (-1,1,1,1,1,-1,-1,1,1,-1), (-1,-1,1,1,1,-1,-1,1,1,-1), (1,1,1,1,1,1,1,1)}, {(-1,-1,-1,1,1,-1,1,1,1), (-1,1,1,-1,1,1,1,1,-1,-1), (-1,1,1,1,1,1,-1,-1,-1,1), (1,1,-1,-1,-1,1,1,-1,1), (-1,1,-1,1,1,1,1,-1,1,-1), (-1,-1,1,-1,1,1,-1,1,1,-1), (1,-1,1,1,1,1,1,-1,1), (1,1,1,1,1,1,1,1)}, {(-1,-1,-1,1,1,-1,1,1,1), (-1,1,1,-1,1,1,1,1,-1,-1), (-1,1,1,1,1,1,-1,-1,-1,1), (1,1,-1,-1,-1,1,1,-1,1), (-1,-1,1,1,-1,1,1,-1,1,-1), (1,-1,1,1,1,-1,-1,1,-1), (-1,-1,-1,-1,-1,-1,-1,-1), (-1,1,1,1,-1,-1,1,1,1,-1)}, {(-1,-1,-1,1,1,-1,1,1,1), (-1,1,1,-1,1,1,1,1,-1,-1), (-1,1,1,1,1,1,-1,-1,-1,1), (1,1,-1,-1,-1,1,1,-1,1), (-1,1,1,1,1,-1,1,1,-1,1), (1,-1,1,1,1,-1,-1,1,-1), (-1,-1,-1,-1,-1,-1,-1,-1), (1,-1,-1,1,1,1,-1,-1,1)}, {(-1,-1,-1,1,1,-1,1,1,1), (-1,1,1,-1,1,1,1,1,-1,-1), (-1,1,1,1,1,1,-1,-1,-1,1), (1,1,-1,-1,-1,1,1,-1,1,-1), (-1,-1,1,-1,-1,1,1,-1,1,1,-1), (1,1,1,1,1,1,1,1)}, {(-1,-1,-1,1,1,-1,1,1,1), (-1,1,1,-1,1,1,1,1,-1,-1), (-1,1,1,1,1,-1,-1,-1,1), (1,1,-1,-1,-1,1,1,-1,1), (-1,1,1,1,1,-1,-1,1,1,-1), (1,1,-1,-1,-1,-1,1,1,1), (-1,-1,-1,-1,-1,-1,-1,-1), (-1,1,1,1,-1,-1,1,1,1,-1)}, {(-1,-1,-1,1,1,-1,1,1,1), (-1,1,1,-1,1,1,1,1,-1,-1), (-1,1,1,1,1,-1,-1,-1,1), (1,1,-1,-1,-1,1,1,-1,1,-1), (-1,1,1,1,-1,1,1,-1,1), (1,1,-1,-1,-1,1,1,-1,1,-1), (1,1,1,1,1,1,1,1)}, {(-1,-1,-1,1,1,-1,1,1,1), (-1,1,1,-1,1,1,1,1,-1,-1), (-1,1,1,1,1,-1,-1,-1,1), (1,1,-1,-1,-1,1,1,-1,1), (-1,-1,1,1,1,-1,-1,1,1), (-1,1,1,-1,1,1,1,-1,1,1), (-1,-1,1,1,1,-1,-1,-1,1), (1,1,1,1,1,1,1,1)}, {(-1,-1,-1,1,1,-1,1,1,1), (-1,1,1,-1,1,1,1,1,-1,-1), (1,-1,-1,-1,1,1,1,1,-1), (1,1,-1,-1,-1,1,1,-1,1), (-1,1,1,-1,1,1,1,-1,1,-1), (-1,-1,-1,-1,-1,-1,-1,-1), (1,-1,-1,1,1,1,-1,-1,1,-1)}, {(-1,-1,-1,1,-1,1,1,1,1), (-1,1,1,-1,1,1,1,1,-1,-1), (1,-1,-1,-1,1,1,1,1,-1), (1,1,-1,-1,-1,1,1,-1,1), (-1,1,1,-1,1,1,1,-1,1,-1), (1,-1,1,1,1,1,1,-1,1), (-1,-1,-1,-1,-1,-1,-1,-1), (-1,1,1,1,-1,-1,1,1,1,-1)}, {(-1,-1,-1,1,1,-1,1,1,1), (-1,1,1,-1,1,1,1,1,-1,-1), (1,-1,-1,-1,1,1,1,1,-1), (1,1,-1,-1,-1,1,1,-1,1), (-1,-1,1,-1,-1,1,1,-1,1), (1,-1,1,1,1,-1,-1,1,-1), (-1,-1,-1,-1,-1,-1,-1,-1), (1,-1,-1,1,1,1,-1,-1,1)}, {(-1,-1,-1,1,-1,1,1,1,1), (-1,1,-1,1,1,1,1,-1,-1), (1,-1,-1,-1,1,1,1,1,-1), (1,1,-1,-1,-1,1,1,-1,1), (-1,-1,1,-1,1,1,-1,1,1,-1), (1,-1,1,1,1,-1,-1,1,1,-1), (-1,1,1,1,-1,-1,1,1,-1), (1,1,1,1,1,1,1,1)}, {(-1,-1,-1,1,-1,1,1,1,1), (-1,1,1,-1,1,1,1,1,-1,-1), (1,-1,-1,-1,1,1,1,1,-1), (1,1,-1,-1,-1,1,1,-1,1), (-1,-1,1,-1,1,1,-1,1,1,-1), (1,-1,1,1,1,-1,-1,1,-1), (-1,1,1,1,-1,-1,1,1,-1), (1,-1,1,1,1,-1,-1,-1,1)}, {(-1,-1,-1,1,-1,1,1,1,1), (-1,1,1,-1,1,1,1,-1,-1), (1,-1,-1,-1,1,1,1,1,-1), (1,1,-1,-1,-1,1,1,-1,1,-1), (-1,-1,1,-1,1,1,-1,1,1,-1), (1,-1,1,1,1,-1,-1,1,-1), (-1,-1,-1,-1,-1,-1,-1,-1), (-1,1,1,1,-1,-1,1,1,1,-1)}, {(-1,-1,-1,1,-1,1,1,1,1), (-1,1,1,-1,1,1,1,1,-1,-1), (1,-1,-1,-1,1,1,1,1,-1), (1,1,-1,-1,-1,1,1,-1,1), (-1,-1,1,-1,1,1,-1,1,1,-1), (1,-1,1,1,1,-1,-1,1,-1,-1), (-1,-1,-1,-1,-1,-1,-1,-1), (-1,1,1,1,1,1,1,1,-1,-1)}, {(-1,-1,-1,1,-1,1,1,1,1), (-1,1,1,-1,1,1,1,-1,-1), (1,-1,-1,-1,1,1,1,1,-1), (1,1,-1,-1,-1,1,1,-1,1), (-1,-1,1,-1,-1,1,1,-1,1), (1,-1,1,1,1,-1,-1,1,-1), (-1,-1,-1,-1,-1,-1,-1,-1), (-1,1,1,1,-1,-1,1,1,1,-1)}, {(-1,-1,-1,1,-1,1,1,1,1), (-1,1,1,-1,1,1,1,1,-1,-1), (1,-1,-1,-1,1,1,1,1,-1), (1,1,-1,-1,-1,1,1,-1,1), (-1,-1,1,-1,-1,1,1,-1,1,-1), (1,1,1,1,1,1,1,1,1)}, {(-1,-1,-1,1,-1,1,1,1,1), (-1,1,1,-1,1,1,1,-1,-1), (1,-1,-1,-1,1,1,1,1,-1), (1,1,-1,-1,-1,1,1,-1,1,-1), (-1,-1,1,-1,-1,1,1,1,1), (1,1,-1,-1,-1,-1,1,1,-1,1,-1), (-1,-1,-1,-1,-1,-1,-1,-1), (-1,1,1,1,-1,-1,1,1,1,-1)}, {(-1,-1,-1,1,-1,1,1,1,1), (-1,1,1,-1,1,1,1,1,-1,-1), (1,-1,-1,-1,1,1,1,1,-1), (1,1,-1,-1,-1,1,1,-1,1), (-1,1,1,-1,1,1,1,-1,1,1), (1,1,-1,-1,-1,-1,1,1,-1), (-1,-1,-1,-1,-1,-1,-1,-1), (-1,1,1,1,-1,-1,1,1,1,-1)}, {(-1,-1,-1,1,-1,1,1,1,1), (-1,1,1,-1,1,1,1,1,-1,-1), (1,-1,-1,-1,1,1,1,1,-1), (1,1,-1,-1,-1,1,1,-1,1), (-1,1,1,-1,1,1,1,-1,1,1,-1), (1,-1,1,1,1,-1,-1,-1,1),

1,-1,1,1,1,-1), (1,1,-1,-1,-1,1,-1,1), (-1,1,-1,-1,1,-1,1,1), (1,1,-1,1,-1,-1,1,-1), (-1,1,1,-1,-1,1,1,-1), (1,1,1,1,1,1,1,1)}, {(-1,-1,1,1,-1,1,1,1), (-1,1,-1,1,1,1,-1,-1), (1,-1,-1,-1,1,1,1,-1), (1,1,-1,-1,-1,1,-1,1), (-1,1,-1,-1,1,-1,1,1), (1,1,-1,1,-1,-1,1,-1), (1,-1,-1,1,1,-1,-1,1), (1,1,1,1,1,1,1,1)}, {(-1,-1,-1,1,-1,1,1,1), (-1,1,-1,1,1,1,-1,-1), (1,-1,-1,-1,1,1,1,-1), (1,1,-1,-1,-1,1,-1,1), (1,-1,1,1,-1,1,-1,-1), (1,1,-1,1,-1,-1,1,-1), (-1,-1,-1,-1,-1,-1,-1,-1), (-1,1,1,1,-1,-1,1,1,-1)}, {(-1,-1,-1,1,-1,1,1,1), (-1,1,-1,1,1,1,-1,-1), (1,-1,-1,-1,1,1,1,-1), (1,1,-1,-1,1,-1,1,1), (1,-1,1,1,-1,1,-1,-1), (1,1,-1,1,-1,-1,1,-1), (-1,-1,-1,-1,-1,-1,-1,-1), (1,-1,-1,1,1,1,-1,-1,1)}, {(-1,-1,1,1,-1,1,1,1), (-1,1,1,-1,1,1,1,-1,-1), (1,-1,-1,-1,1,1,1,-1), (1,1,-1,-1,-1,1,-1,1), (1,-1,1,1,-1,1,-1,-1), (1,1,-1,-1,1,1,-1), (-1,1,1,1,-1,-1,1,1,-1), (1,1,1,1,1,1,1,1)}, {(-1,-1,-1,1,-1,1,1,1), (-1,1,-1,1,1,1,-1,-1), (1,-1,-1,-1,1,1,1,-1), (1,1,-1,-1,-1,1,-1,1), (1,-1,1,1,-1,1,-1,-1), (1,1,-1,1,-1,-1,1,-1), (1,-1,1,1,1,-1,-1,1), (1,1,1,1,1,1,1,1)}, {(-1,-1,-1,1,-1,1,1,1), (-1,1,1,1,1,-1,-1,-1,1), (1,-1,1,1,-1,-1,-1,1,1), (1,1,-1,-1,-1,1,1,-1,1), (-1,1,1,-1,1,1,1,-1), (-1,1,-1,-1,1,-1,1,1), (-1,-1,-1,-1,-1,-1,-1,-1), (-1,1,1,1,-1,-1,1,1,-1)}, {(-1,-1,-1,1,-1,1,1,1), (-1,1,1,1,1,-1,-1,-1,1), (1,-1,1,-1,-1,-1,1,1,1), (1,1,-1,-1,-1,1,-1,1), (-1,1,1,-1,1,1,1,-1), (-1,1,-1,-1,1,-1,1,1), (-1,-1,-1,-1,-1,-1,-1,-1), (1,-1,-1,1,1,-1,-1,1)}, {(-1,-1,-1,1,-1,1,1,1), (-1,1,1,1,1,-1,-1,-1,1), (1,-1,1,1,-1,-1,1,1,1), (1,1,-1,-1,-1,1,-1,1), (-1,1,1,-1,1,1,1,-1), (-1,1,-1,1,1,-1,1,-1), (1,1,1,1,1,1,1,1)}, {(-1,-1,-1,1,-1,1,1,1), (-1,1,-1,1,1,1,-1,-1), (1,-1,1,1,-1,-1,1,-1,1), (1,1,-1,-1,-1,1,-1,1), (-1,1,1,-1,1,1,1,-1), (1,-1,1,1,1,-1,1,-1,-1), (-1,-1,-1,-1,-1,-1,-1,-1), (-1,1,1,1,-1,-1,1,1,-1)}, {(-1,-1,-1,1,-1,1,1,1), (-1,1,1,1,1,-1,-1,-1,1), (1,-1,1,1,-1,-1,1,1,1), (1,1,-1,-1,-1,1,1,-1), (-1,1,-1,-1,1,-1,1,-1,1), (1,-1,1,1,1,-1,-1,1), (-1,-1,-1,-1,-1,-1,-1,-1), (1,-1,-1,1,1,-1,-1,1)}, {(-1,-1,1,1,-1,1,1,1,1), (-1,1,1,1,1,-1,-1,-1,1), (1,-1,1,-1,-1,-1,1,1,1), (1,1,-1,-1,-1,1,1,-1), (-1,1,1,-1,1,1,1,-1), (1,-1,1,1,1,-1,-1,1), (1,1,1,1,1,1,1,1,1)}, {(-1,-1,-1,1,-1,1,1,1), (-1,1,1,1,1,-1,-1,-1,1), (1,-1,1,-1,-1,-1,1,1,1), (1,1,-1,-1,-1,1,-1,1), (-1,1,1,-1,1,1,1,-1), (1,-1,1,1,1,-1,1,-1,1), (1,1,1,1,1,1,1,1,1)}, {(-1,-1,-1,1,-1,1,1,1), (-1,1,1,1,1,-1,-1,-1,1), (1,-1,1,-1,-1,-1,1,1,1), (1,1,-1,-1,-1,1,-1,1), (-1,1,1,-1,1,1,1,-1), (-1,1,-1,1,-1,1,-1,-1), (-1,-1,-1,-1,-1,-1,-1,-1), (-1,1,1,1,-1,-1,1,1,-1)}, {(-1,-1,-1,1,-1,1,1,1), (-1,1,1,1,1,-1,-1,-1,1), (1,-1,1,-1,-1,-1,1,1,1), (1,1,-1,-1,-1,1,-1,1), (-1,1,-1,-1,1,-1,1,1,-1), (-1,1,1,-1,-1,1,1,-1), (1,1,1,1,1,1,1,1)}, {(-1,-1,-1,1,-1,1,1,1), (-1,1,1,1,1,-1,-1,-1,1), (1,-1,1,-1,-1,-1,1,1,1), (1,1,-1,1,-1,-1,1,-1,1), (-1,1,1,-1,1,1,1,-1), (1,1,-1,1,-1,-1,1,-1), (1,-1,-1,1,1,-1,-1,1), (1,1,1,1,1,1,1,1)}, {(-1,-1,-1,1,-1,1,1,1), (-1,1,1,1,1,-1,-1,-1,1), (1,-1,1,-1,-1,-1,1,1,1), (1,1,-1,-1,-1,1,1), (1,-1,1,1,1,-1,1,-1,-1), (1,1,-1,1,-1,-1,1,-1), (-1,-1,-1,-1,-1,-1,-1,-1), (-1,1,1,1,-1,-1,1,1,-1)}, {(-1,-1,-1,1,-1,1,1,1), (-1,1,1,1,1,-1,-1,-1,1), (1,-1,1,-1,-1,-1,1,1,1), (1,1,-1,-1,-1,1,1,-1), (1,-1,1,1,1,-1,1,-1,-1), (1,1,-1,1,-1,-1,1,-1), (-1,-1,-1,-1,-1,-1,-1,-1), (1,-1,-1,1,1,-1,-1,1)}, {(-1,-1,-1,1,-1,1,1,1), (-1,1,1,1,1,-1,-1,-1,1), (1,-1,1,-1,-1,-1,1,1,1), (1,1,-1,-1,-1,1,1,-1,1), (1,-1,1,1,1,-1,1,-1,-1), (1,1,-1,1,-1,-1,1,-1), (-1,1,1,-1,-1,1,1,-1), (1,1,1,1,1,1,1,1)}, {(-1,-1,-1,1,-1,1,1,1), (-1,1,1,1,1,-1,-1,-1,1), (1,-1,1,-1,-1,-1,1,1,1), (1,1,-1,-1,-1,1,-1,1,1), (1,-1,1,1,-1,-1,1,1,-1), (1,1,-1,-1,1,1,-1), (1,-1,1,1,1,-1,-1,1), (1,1,1,1,1,1,1,1)}, {(-1,-1,-1,1,-1,1,1,1), (-1,1,1,1,1,-1,-1,-1,1), (1,-1,1,-1,-1,-1,1,1,1), (1,1,-1,-1,-1,1,-1,1,-1,1), (-1,1,1,-1,1,1,1,-1), (1,1,-1,1,-1,-1,1,-1), (-1,-1,-1,-1,-1,-1,-1,-1), (-1,1,1,1,-1,-1,1,1,-1)}, {(-1,-1,-1,1,-1,1,1,1), (-1,1,1,1,1,-1,-1,-1,1), (1,-1,1,-1,-1,-1,1,1,1), (1,1,-1,-1,-1,1,1,-1), (1,-1,1,1,1,-1,-1,1), (-1,-1,-1,-1,-1,-1,-1,-1), (1,-1,-1,1,1,-1,-1,1)}, {(-1,-1,-1,1,-1,1,1,1), (-1,1,1,1,1,-1,-1,-1,1), (1,-1,1,1,-1,-1,1,1,-1), (1,1,-1,-1,1,-1,1,-1,-1), (-1,-1,1,1,1,1,1,-1,-1), (1,-1,1,-1,-1,1,1,-1,1), (-1,-1,-1,-1,-1,-1,-1,-1), (-1,1,1,1,-1,-1,1,1,-1)}, {(-1,-1,-1,1,-1,1,1,1), (-1,1,1,1,1,-1,-1,-1,1), (1,-1,1,1,-1,-1,1,1,-1), (1,1,-1,1,-1,-1,1,-1,-1), (-1,1,1,1,1,1,1,-1,-1), (1,-1,1,1,-1,-1,1,1,-1), (-1,-1,-1,-1,-1,-1,-1,-1), (1,-1,-1,1,1,-1,-1,1)}, {(-1,-1,-1,1,-1,1,1,1), (-1,1,1,1,1,-1,-1,-1,1), (1,-1,1,1,-1,-1,1,1,-1), (1,1,-1,1,-1,-1,1,-1,-1), (-1,-1,1,1,1,1,1,-1,-1), (1,-1,1,-1,-1,1,1,-1,1), (-1,-1,-1,-1,-1,-1,-1,-1), (-1,1,1,1,-1,-1,1,1,-1)}, {(-1,-1,-1,1,-1,1,1,1), (-1,1,1,1,1,-1,-1,-1,1), (1,-1,1,1,-1,-1,1,1,-1), (1,1,-1,-1,1,-1,1,-1,-1), (-1,1,1,1,1,1,1,-1,-1), (1,-1,1,1,-1,-1,1,1,-1), (-1,-1,-1,-1,-1,-1,-1,-1), (1,-1,-1,1,1,-1,-1,1)}, {(-1,-1,-1,1,-1,1,1,1), (-1,1,1,1,1,-1,-1,-1,1), (1,-1,1,1,-1,-1,1,1,-1), (1,1,-1,1,-1,-1,1,-1,-1), (-1,1,1,1,1,1,1,-1,-1), (1,1,-1,-1,-1,1,1,-1), (-1,1,1,1,-1,-1,1,1,-1), (1,1,1,1,1,1,1,1)}, {(-1,-1,-1,1,-1,1,1,1), (-1,1,1,1,1,-1,-1,-1,1), (1,-1,1,1,-1,-1,1,1,-1), (1,1,-1,1,-1,-1,1,-1,-1), (-1,1,1,1,1,1,1,-1,-1), (1,-1,1,-1,-1,-1,1,1,1), (1,-1,1,1,-1,-1,1,1,-1), (1,1,1,1,1,1,1,1)}, {(-1,-1,-1,1,-1,1,1,1), (-1,1,1,1,1,-1,-1,-1,1), (1,-1,1,1,-1,-1,1,1,-1), (1,1,-1,1,-1,1,-1,-1), (-1,-1,1,1,1,1,1,-1,-1), (1,-1,1,-1,-1,1,1,-1,1), (-1,-1,-1,-1,-1,-1,-1,-1), (-1,1,1,1,-1,1,1,1,-1)}, {(-1,-1,-1,1,-1,1,1,1), (-1,1,1,1,1,-1,-1,-1,1), (1,-1,1,1,-1,-1,1,1,-1), (1,1,-1,1,-1,1,-1,-1), (1,-1,1,1,-1,1,1,-1,1), (1,1,-1,-1,-1,1,1,-1), (-1,-1,-1,-1,-1,-1,-1,-1), (-1,1,1,1,-1,1,1,1,-1)}, {(-1,-1,-1,1,-1,1,1,1), (-1,1,1,1,1,-1,-1,-1,1), (1,-1,1,1,1,-1,-1,1,1,-1), (1,1,-1,1,1,-1,-1,1,-1,-1), (1,-1,1,1,-1,-1,1,1,-1), (1,1,-1,-1,-1,1,1,1), (-1,-1,-1,-1,-1,-1,-1,-1), (-1,1,1,1,-1,1,1,1,-1)}, {(-1,-1,-1,1,-1,1,1,1), (-1,1,1,1,1,-1,-1,-1,1), (1,-1,1,1,1,-1,-1,1,1,-1), (1,1,-1,1,-1,1,1,-1,-1), (1,-1,1,1,-1,-1,1,1,-1), (1,1,-1,-1,-1,-1,1,1), (-1,-1,-1,-1,-1,-1,-1,-1), (-1,1,1,1,-1,-1,1,1,-1)}, {(-1,-1,-1,1,-1,1,1,1,1), (-1,1,1,1,1,-1,-1,-1,1), (1,-1,1,1,1,-1,-1,1,1,-1), (1,1,-1,-1,1,-1,-1,1,-1), (-1,1,1,1,1,1,1,-1,-1), (1,-1,1,-1,-1,-1,1,1,1), (1,1,1,1,1,1,1,1,1)}, {(-1,-1,-1,1,-1,1,1,1), (-1,1,1,1,1,-1,-1,-1,1), (1,-1,1,1,1,-1,-1,1,1,-1), (1,1,-1,1,-1,1,1,-1,-1), (-1,1,1,1,1,1,1,-1,-1,-1), (1,-1,1,1,-1,1,1,-1,1), (1,-1,1,1,1,-1,-1,1), (-1,-1,-1,-1,-1,-1,-1,-1), (-1,1,1,1,-1,1,1,1,-1)}, {(-1,-1,-1,1,-1,1,1,1), (-1,1,1,1,1,-1,-1,-1,1), (1,-1,1,1,1,-1,-1,1,1,-1), (1,1,-1,1,-1,1,1,-1,-1), (-1,1,1,1,1,1,1,-1,-1), (1,1,-1,-1,-1,-1,1,1,1), (-1,1,1,1,-1,1,1,1,-1), (1,1,1,1,1,1,1,1)}, {(-1,-1,-1,1,-1,1,1,1), (-1,1,1,1,1,-1,-1,-1,1), (1,-1,1,1,1,-1,-1,1,1,-1), (1,1,-1,1,-1,1,1,-1,-1), (-1,1,1,1,1,1,1,-1,-1,-1), (1,-1,1,1,-1,1,1,-1,1), (1,1,1,1,1,1,1,1,1)}, {(-1,-1,-1,1,-1,1,1,1), (-1,1,1,1,1,-1,-1,-1,1), (1,-1,1,1,1,-1,-1,1,1,-1), (1,1,-1,1,1,-1,1,-1,-1), (-1,-1,1,1,1,1,1,-1,-1), (1,-1,1,1,-1,-1,1,1,-1), (1,1,-1,-1,-1,-1,1,1), (-1,-1,-1,-1,-1,-1,-1,-1), (1,-1,-1,1,1,-1,-1,1)}, {(-1,-1,-1,1,-1,1,1,1), (-1,1,1,1,1,-1,-1,-1,1), (1,-1,1,1,1,-1,-1,1,1,-1), (1,1,-1,1,-1,1,1,-1,-1), (-1,1,1,1,1,1,1,-1,-1), (1,1,1,1,1,1,1,1)}, {(-1,-1,1,1,-1,1,1,1), (-1,1,1,1,1,-1,-1,-1,1), (1,-1,1,1,1,-1,-1,1,1,-1), (1,1,-1,1,-1,1,-1,-1), (-1,-1,1,1,1,1,1,-1,-1), (1,-1,1,1,-1,1,1,-1,1), (-1,1,1,1,-1,-1,1,1,-1), (1,1,1,1,1,1,1,1)}, {(-1,-1,-1,1,-1,1,1,1,1), (-1,1,1,1,1,-1,-1,-1,1), (1,-1,1,1,1,-1,-1,1,1,-1), (1,1,-1,1,-1,1,1,-1,-1), (-1,1,1,1,1,1,1,-1,-1,-1), (1,-1,1,1,-1,1,1,-1,1), (1,-1,1,1,1,-1,-1,1), (1,1,1,1,1,1,1,1,1)}, {(-1,-1,-1,1,-1,1,1,1,1), (-1,1,1,1,1,-1,-1,-1,1), (1,-1,1,1,1,-1,-1,1,1,-1), (1,1,-1,1,1,-1,-1,1,-1,-1), (-1,1,1,1,1,1,1,-1,-1), (1,-1,1,1,-1,-1,1,1,-1), (1,-1,1,1,1,-1,-1,1,1), (1,1,1,1,1,1,1,1,1)}, {(-1,-1,-1,1,-1,1,1,1,1), (-1,1,1,1,1,-1,-1,-1,1), (1,-1,1,1,1,-1,-1,1,1,-1), (1,1,-1,1,-1,1,1,-1,-1), (1,-1,1,1,-1,1,1,-1,1), (1,1,-1,-1,-1,-1,1,1), (-1,-1,-1,-1,-1,-1,-1,-1), (-1,1,1,1,-1,1,1,1,-1)}, {(-1,-1,-1,1,-1,1,1,1,1), (-1,1,1,1,1,-1,-1,-1,1,-1), (1,-1,1,1,1,-1,-1,1,1,-1), (1,1,-1,1,-1,1,1,-1,-1), (-1,-1,1,1,1,1,1,-1,-1), (1,-1,1,1,-1,-1,-1,1,1), (1,1,1,1,1,1,1,1)}, {(-1,-1,-1,1,-1,1,1,1,1), (-1,1,1,1,1,-1,-1,-1,1), (1,-1,1,1,1,-1,-1,1,1,-1), (1,1,-1,1,1,-1,1,-1,-1), (-1,1,1,1,1,1,1,-1,-1), (1,-1,1,1,-1,-1,1,1,-1), (1,1,-1,-1,-1,-1,1,1), (1,1,1,1,1,1,1,1)}, {(-1,-1,-1,1,-1,1,1,1,1), (-1,1,1,1,1,-1,-1,-1,1), (1,-1,1,1,1,-1,-1,1,1,-1), (1,1,-1,1,-1,1,1,-1,-1), (-1,1,1,1,1,1,1,-1,-1), (1,-1,1,1,1,-1,1,1,-1,1), (-1,-1,-1,-1,-1,-1,-1,-1), (-1,1,1,1,-1,1,1,1,-1)}, {(-1,-1,-1,1,-1,1,1,1,1), (-1,1,1,1,1,-1,-1,-1,1), (1,-1,1,1,1,-1,-1,1,1,-1), (1,1,-1,1,-1,1,1,-1,-1), (-1,-1,1,1,1,1,1,-1,-1), (1,-1,1,1,1,-1,-1,1,1), (-1,-1,-1,-1,-1,-1,-1,-1), (-1,1,1,1,-1,1,1,1,-1)}, {(-1,-1,-1,1,-1,1,1,1,1), (-1,1,1,1,1,-1,-1,-1,1), (1,-1,1,1,1,-1,-1,1,1,-1), (1,1,-1,1,-1,1,1,-1,-1), (1,-1,1,-1,-1,1,1,-1,1), (1,1,1,-1,-1,-1,1,1,1), (-1,-1,-1,-1,-1,-1,-1,-1), (-1,1,1,1,-1,1,1,1,-1)}, {(-1,-1,-1,1,-1,1,1,1,1), (-1,1,1,1,1,-1,-1,-1,1), (1,-1,1,1,1,-1,-1,1,1,-1), (1,1,-1,1,-1,1,1,-1,-1), (-1,1,1,1,1,1,1,1,-1), (1,1,-1,-1,-1,-1,1,1,1), (-1,1,1,1,-1,1,1,1,-1), (1,1,1,1,1,1,1,1)}, {(-1,-1,-1,1,-1,1,1,1,1), (-1,1,1,1,1,-1,-1,-1,1,-1), (1,-1,1,1,1,-1,-1,1,1,-1), (1,1,-1,1,-1,1,1,-1,-1), (-1,-1,1,1,1,1,1,-1,-1), (1,-1,1,-1,-1,-1,1,1,1), (1,-1,1,1,-1,-1,1,1,-1), (1,1,1,1,1,1,1,1,1)}, {(-1,-1,-1,1,-1,1,1,1,1), (-1,1,1,1,1,-1,-1,-1,1), (1,-1,1,1,1,-1,-1,1,1,-1), (1,1,-1,1,-1,1,1,-1,-1), (-1,1,1,-1,1,1,1,-1), (1,1,-1,-1,-1,1,1,-1), (1,1,1,1,1,1,1,1)}, {(-1,-1,-1,1,-1,1,1,1), (-1,1,1,1,1,-1,-1,-1,1), (1,-1,1,1,1,-1,-1,1,1,-1), (1,1,-1,1,1,-1,1,-1,-1), (1,-1,1,-1,-1,1,1,-1,1), (1,1,-1,-1,-1,-1,1,1,1), (-1,-1,-1,-1,-1,-1,-1,-1), (-1,1,1,1,-1,1,1,1,-1)}, {(-1,-1,-1,1,-1,1,1,1,1), (-1,1,1,1,1,-1,-1,-1,1,-1), (1,-1,1,1,1,-1,-1,1,1,-1), (1,1,-1,1,-1,1,1,-1,-1), (1,-1,1,-1,-1,1,1,-1,1), (1,1,1,-1,-1,-1,1,1,1), (-1,-1,-1,-1,-1,-1,-1,-1), (-1,1,1,1,-1,1,1,1,-1)}, {(-1,-1,1,1,-1,1,1,1,1), (-1,1,1,1,1,-1,-1,-1,1), (1,-1,1,1,1,-1,-1,1,1,-1), (1,1,-1,1,-1,1,1,-1,-1), (1,-1,1,-1,-1,1,1,-1,1), (1,1,-1,-1,-1,-1,1,1,1), (-1,-1,-1,-1,-1,-1,-1,-1), (-1,1,1,1,-1,1,1,1,-1)}, {(-1,-1,-1,1,-1,1,1,1,1), (-1,1,1,1,1,-1,-1,-1,1), (1,-1,1,1,1,-1,-1,1,1,-1), (1,1,-1,1,-1,1,1,-1,-1,-1), (1,-1,1,1,-1,1,1,-1,1), (1,1,-1,-1,-1,1,1,1), (-1,1,1,1,-1,1,1,1,-1)}, {(-1,-1,-1,1,-1,1,1,1), (1,1,1,1,-1,-1,-1,1), (1,-1,1,1,1,-1,-1,1,1,-1), (1,1,-1,1,1,-1,1,-1,-1,-1), (1,-1,1,1,-1,1,1,-1,1), (1,1,-1,-1,-1,-1,-1,-1,-1), (-1,1,1,1,-1,-1,1,1,-1)}, {(-1,-1,-1,1,-1,1,1,1), (1,1,1,1,-1,-1,-1,1), (1,-1,1,1,1,-1,-1,1,1,-1), (1,1,-1,1,-1,1,1,-1,-1,-1), (1,-1,1,1,-1,-1,1,1,-1), (1,1,-1,-1,-1,-1,

1,1,1), (-1,-1,-1,-1,-1,-1,-1,-1), (1,-1,-1,1,1,-1,-1,1)}, {(-1,-1,-1,1,-1,1,1,1), (-1,1,1,1,-1,-1,-1,1), (1,-1,1,1,-1,1,1,-1), (1,1,-1,1,-1,1,-1,-1), (1,-1,1,-1,-1,1,-1,1), (1,1,-1,-1,-1,-1,1,1), (-1,1,1,-1,-1,1,1,-1), (1,1,1,1,1,1,1,1)}, {(-1,-1,-1,1,-1,1,1,1), (-1,1,1,1,-1,-1,-1,1), (1,-1,1,1,-1,-1,1,-1), (1,1,-1,1,-1,1,-1,-1), (1,-1,1,-1,-1,1,-1,1), (1,1,-1,-1,-1,-1,1,1), (1,-1,-1,1,1,-1,-1,1), (1,1,1,1,1,1,1,1)}, {(-1,-1,-1,1,-1,1,1,1), (1,-1,-1,1,1,1,1,-1), (1,-1,1,-1,-1,-1,1,1), (1,1,-1,-1,-1,1,1,-1,1), (-1,-1,1,1,1,1,-1,1), (-1,1,-1,-1,1,-1,1,1), (-1,-1,-1,-1,-1,-1,-1,-1), (-1,1,1,1,-1,-1,1,1,-1)}, {(-1,-1,-1,1,-1,1,1,1), (1,-1,-1,-1,1,1,1,-1), (1,-1,1,-1,-1,-1,1,1), (1,1,-1,-1,1,1,-1,1), (-1,-1,1,-1,1,1,1,-1), (-1,1,1,-1,1,1,-1,1,1), (-1,1,-1,-1,-1,-1,-1,-1), (1,-1,-1,1,1,1,-1,-1,1)}, {(-1,-1,-1,1,-1,1,1,1), (1,-1,-1,-1,1,1,1,1,-1), (1,-1,1,1,-1,-1,1,1,1), (1,1,-1,-1,-1,1,1,-1,1), (-1,-1,1,1,-1,1,1,1,-1,1), (-1,1,1,-1,-1,1,1,1,-1), (1,1,1,1,1,1,1,1)}, {(-1,-1,-1,1,-1,1,1,1), (1,-1,-1,-1,1,1,1,-1), (1,-1,-1,-1,-1,1,1,1), (1,1,-1,-1,-1,1,1,-1,1), (-1,-1,1,-1,1,1,1,-1,1), (-1,1,-1,-1,1,-1,1,1), (1,-1,-1,1,1,1,-1,-1,1), (1,1,1,1,1,1,1,1)}, {(-1,-1,-1,1,-1,1,1,1), (1,-1,-1,-1,1,1,1,-1), (1,-1,1,-1,-1,-1,1,1), (1,1,-1,-1,-1,1,1,-1,1), (-1,-1,1,-1,1,1,1,-1,1), (1,-1,1,1,1,-1,1,1,-1,1), (-1,-1,-1,-1,-1,-1,-1,-1), (-1,1,1,1,-1,-1,1,1,-1)}, {(-1,-1,-1,1,-1,1,1,1), (1,-1,-1,-1,1,1,1,-1), (1,-1,1,-1,-1,-1,1,1), (1,1,-1,-1,-1,1,1,-1,1), (-1,-1,1,-1,1,1,1,-1,1), (1,-1,1,1,1,-1,1,1,-1,1), (-1,-1,-1,-1,-1,-1,-1,-1), (-1,1,1,1,-1,-1,1,1,-1)}, {(-1,-1,-1,1,-1,1,1,1), (1,-1,-1,-1,1,1,1,-1), (1,-1,1,1,-1,-1,1,1,-1), (-1,-1,1,1,-1,1,1,1,-1), (1,-1,1,1,1,-1,1,1,-1,1), (-1,1,1,1,-1,-1,1,1,1,-1), (1,1,1,1,1,1,1,1)}, {(-1,-1,-1,1,-1,1,1,1), (1,-1,-1,-1,1,1,1,-1), (1,-1,1,-1,-1,-1,1,1), (1,1,-1,-1,-1,1,1,-1,1), (-1,-1,1,-1,1,1,1,-1,1), (1,-1,1,1,1,-1,1,1,-1,1), (1,1,1,1,1,1,1,1)}, {(-1,-1,-1,1,-1,1,1,1), (1,-1,-1,-1,1,1,1,-1), (1,-1,1,-1,-1,-1,1,1), (1,1,-1,-1,-1,1,1,-1,1), (-1,-1,1,-1,1,1,1,-1,1), (1,1,-1,1,-1,1,1,-1,1), (-1,-1,-1,-1,-1,-1,-1,-1), (-1,1,1,1,-1,-1,1,1,-1)}, {(-1,-1,-1,1,-1,1,1,1), (1,-1,-1,-1,1,1,1,-1), (1,-1,1,-1,-1,-1,1,1), (1,1,-1,-1,-1,1,1,-1,1), (-1,-1,1,-1,1,1,1,-1,1), (1,1,-1,1,-1,1,1,-1,1), (-1,1,1,1,-1,1,1,1,-1), (1,1,1,1,1,1,1,1)}, {(-1,-1,-1,1,-1,1,1,1), (1,-1,-1,-1,1,1,1,-1), (1,-1,1,-1,-1,1,1,1), (1,1,-1,-1,1,1,-1,1,-1), (-1,-1,1,-1,1,1,1,-1,1), (1,1,-1,1,-1,1,1,-1,1). (1,-1,-1,1,1,1,-1,1,-1,1), (1,1,1,1,1,1,1,1)}, {(-1,-1,-1,1,1,1,1,1), (1,-1,-1,-1,1,1,1,-1), (1,-1,1,1,-1,-1,1,1), (1,1,-1,-1,-1,1,1,-1,1), (1,-1,1,1,1,-1,1,1,-1,1), (1,1,-1,1,-1,1,1,-1,1), (-1,-1,-1,-1,-1,-1,-1,-1), (-1,1,1,1,-1,-1,1,1,-1)}, {(-1,-1,-1,1,-1,1,1,1), (1,-1,-1,-1,1,1,1,-1), (1,-1,1,-1,-1,1,1,1), (1,1,-1,-1,-1,1,1,-1,1), (1,-1,1,1,-1,1,1,-1,1), (1,1,-1,1,-1,1,1,-1,1), (-1,-1,-1,-1,-1,-1,-1,-1), (1,-1,-1,1,1,1,-1,1,-1,1)}, {(-1,-1,-1,1,-1,1,1,1), (1,-1,-1,-1,1,1,1,-1), (1,-1,1,-1,-1,-1,1,1), (1,1,-1,-1,-1,1,1,-1,1), (1,1,1,1,1,1,1,1)}, {(-1,-1,-1,1,-1,1,1,1), (1,-1,-1,-1,1,1,1,-1), (1,-1,1,-1,-1,1,1,1), (1,1,-1,-1,1,1,-1,1,-1), (-1,-1,1,-1,1,1,1,-1,1), (1,-1,1,1,1,-1,1,1,-1,1), (1,1,1,1,1,1,1,1)}, {(-1,-1,-1,1,-1,1,1,1), (1,-1,-1,-1,1,1,1,-1), (1,-1,1,1,-1,-1,1,1,-1), (1,1,-1,1,-1,1,1,-1,1), (-1,-1,1,1,1,1,1,-1,-1), (-1,1,1,1,-1,-1,1,1,-1), (-1,1,1,1,-1,-1,1,1,1,-1), (1,1,1,1,1,1,1,1)}, {(-1,-1,-1,1,-1,1,1,1), (1,-1,-1,-1,1,1,1,-1), (1,-1,1,1,1,-1,-1,1,1,-1), (1,1,-1,1,-1,1,1,-1,1,-1), (-1,-1,1,1,1,1,1,-1,-1,1), (-1,1,1,-1,1,1,1,-1,-1,1), (1,-1,-1,1,1,1,-1,-1,1), (1,1,1,1,1,1,1,1)}, {(-1,-1,-1,1,-1,1,1,1), (1,-1,-1,-1,1,1,1,-1), (1,-1,1,1,1,-1,-1,1,1,-1), (1,1,-1,1,-1,1,1,-1,1,-1), (-1,-1,1,1,1,1,1,-1,-1,1), (1,-1,1,1,-1,1,1,-1,1), (-1,-1,-1,-1,-1,-1,-1,-1), (1,-1,-1,1,1,1,-1,-1,1)}, {(-1,-1,-1,1,-1,1,1,1), (1,-1,-1,-1,1,1,1,-1), (1,-1,1,1,1,-1,-1,1,1,-1), (1,1,-1,1,-1,1,1,-1,1,-1), (-1,-1,1,1,1,1,1,-1,-1,1), (1,-1,1,1,-1,1,1,-1,1), (-1,-1,-1,-1,-1,-1,-1,-1), (1,-1,-1,1,1,1,-1,1,-1,1)}, {(-1,-1,-1,1,-1,1,1,1), (1,-1,-1,-1,1,1,1,-1), (1,-1,1,1,1,-1,-1,1,-1,1), (1,1,-1,1,-1,1,1,-1,1,-1), (-1,-1,1,1,1,1,1,-1,-1,1), (1,-1,1,1,-1,1,1,-1,1), (1,-1,-1,1,1,1,-1,-1,1), (1,1,1,1,1,1,1,1)}, {(-1,-1,-1,1,-1,1,1,1,1), (1,-1,-1,-1,1,1,1,-1), (1,-1,1,1,-1,-1,1,1,-1), (1,1,-1,1,-1,1,1,-1,-1), (-1,-1,1,1,1,1,1,-1,-1,-1), (1,-1,1,-1,-1,1,1,-1,1), (1,-1,-1,1,1,1,-1,-1,1,-1), (1,1,1,1,1,1,1,1)}, {(-1,-1,-1,1,-1,1,1,1), (1,-1,-1,-1,1,1,1,-1), (1,-1,1,1,-1,-1,1,1,-1), (1,1,-1,1,-1,1,1,-1,-1), (-1,-1,1,1,1,1,1,-1,-1,-1), (1,-1,1,-1,-1,1,1,-1,1), (1,-1,-1,-1,-1,-1,-1,-1), (1,-1,-1,1,1,1,-1,-1,1,-1)}, {(-1,-1,-1,1,-1,1,1,1), (1,-1,-1,-1,1,1,1,-1), (1,-1,1,1,1,-1,-1,1,1,-1), (1,1,-1,1,-1,1,1,-1,1,-1), (-1,-1,1,1,1,1,1,-1,1,-1), (1,-1,1,1,-1,1,1,-1,1), (1,-1,-1,1,1,1,-1,-1,1), (1,1,1,1,1,1,1,1)}, {(-1,-1,-1,1,-1,1,1,1), (1,-1,-1,-1,1,1,1,-1), (1,-1,1,1,1,-1,-1,1,-1,1), (1,1,-1,1,-1,1,1,-1,-1), (-1,-1,1,1,1,1,1,-1,-1,-1,1), (1,-1,1,-1,-1,1,1,-1,1), (-1,-1,-1,-1,-1,-1,-1,-1), (-1,1,1,1,-1,-1,1,1,-1)}, {(-1,-1,-1,1,1,1,1,1), (-1,-1,1,-1,1,1,1,-1), (-1,1,-1,-1,-1,1,1,1), (-1,1,1,1,1,-1,1,-1,-1), (-1,1,1,-1,1,1,1,-1,-1,1), (-1,1,1,1,-1,1,1,-1,-1,1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,1,-1), (-1,1,1,-1,-1,-1,

1,1,1,1), (-1,1,1,1,-1,1,-1,-1), (-1,1,-1,1,1,-1,1,-1), (-1,1,1,-1,1,-1,-1,1), (-1,-1,-1,-1,-1,-1,-1,-1), (1,1,-1,-1,1,1,1,-1,-1)}, {(-1,-1,-1,1,1,1,-1,1), (-1,-1,1,-1,1,1,1,-1), (-1,1,1,-1,-1,-1,1,1,1), (-1,1,1,1,1,-1,1,-1,-1), (-1,1,-1,1,1,1,-1,1,-1), (-1,1,1,-1,1,-1,-1,1), (-1,-1,1,1,-1,-1,1,1), (1,1,1,1,1,1,1,1)}, {(-1,-1,-1,1,1,1,-1,1), (-1,-1,1,-1,1,1,1,-1), (-1,1,-1,-1,-1,1,1,1), (-1,1,1,1,1,-1,1,-1,-1), (-1,1,1,-1,1,1,-1,1,-1), (-1,1,1,-1,1,-1,-1,1), (1,1,-1,-1,1,1,1,-1,-1), (1,1,1,1,1,1,1,1,1)}, {(-1,-1,-1,1,1,1,-1,1), (-1,-1,1,-1,1,1,1,-1), (-1,1,-1,-1,-1,1,1,1), (-1,1,1,1,-1,1,-1,-1), (-1,1,-1,1,1,-1,1,-1), (1,-1,-1,1,-1,1,1,-1), (-1,-1,-1,-1,-1,-1,-1,-1), (-1,-1,1,1,1,-1,-1,1,1)}, {(-1,-1,-1,1,1,1,1,-1,1), (-1,-1,1,-1,1,1,1,-1), (-1,1,1,-1,-1,-1,1,1,1), (-1,1,1,1,1,-1,1,-1,-1), (-1,1,-1,1,1,1,-1,1,-1), (1,-1,-1,1,-1,-1,1,1,-1), (-1,-1,-1,-1,-1,-1,-1,-1), (1,1,-1,-1,1,1,1,-1,-1)}, {(-1,-1,-1,1,1,1,1,-1,1), (-1,-1,1,-1,1,1,1,-1), (-1,1,-1,1,-1,1,1,1), (-1,1,1,1,-1,1,1,-1,-1), (-1,1,-1,1,1,-1,1,-1), (1,-1,-1,1,-1,1,1,-1), (-1,-1,1,1,1,-1,-1,1,1), (1,1,1,1,1,1,1,1,1)}, {(-1,-1,-1,1,1,1,1,-1,1), (-1,-1,1,-1,1,1,1,-1), (-1,1,-1,-1,-1,1,1,1), (-1,1,1,1,1,-1,1,-1,-1), (-1,1,-1,1,1,-1,1,-1), (1,-1,-1,1,-1,1,1,-1), (1,1,-1,-1,1,1,1,-1,-1), (1,1,1,1,1,1,1,1,1)}, {(-1,-1,-1,1,1,1,1,-1,1), (-1,1,1,-1,1,1,1,-1), (-1,1,-1,-1,-1,1,1,1), (-1,1,1,1,1,-1,1,-1,-1), (-1,1,1,-1,1,1,-1,1,-1), (1,-1,1,1,-1,1,-1,1,-1), (-1,-1,-1,-1,-1,-1,-1,-1), (-1,-1,1,1,1,-1,-1,1,1)}, {(-1,-1,-1,1,1,1,1,-1,1), (-1,-1,1,-1,1,1,1,-1), (-1,1,1,-1,-1,-1,1,1,1), (-1,1,1,1,-1,1,1,-1,-1), (-1,1,1,-1,1,1,-1,1,-1), (1,-1,1,-1,-1,1,1,-1), (-1,-1,-1,-1,-1,-1,-1,-1), (1,1,-1,-1,1,1,1,-1,-1)}, {(-1,-1,-1,1,1,1,1,-1,1), (-1,-1,1,-1,1,1,1,-1), (-1,1,-1,-1,-1,1,1,1,1), (-1,1,1,1,1,-1,1,-1,-1), (-1,1,1,-1,1,1,-1,1,-1), (1,-1,1,-1,-1,1,1,-1), (-1,-1,1,1,1,-1,-1,1,1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (-1,1,1,1,1,-1,1,-1,-1), (-1,1,1,-1,1,1,-1,1,-1), (1,-1,1,-1,-1,1,1,-1), (1,1,-1,-1,1,1,1,-1,-1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (-1,1,1,1,1,-1,1,-1,-1), (1,-1,-1,1,-1,1,1,1,-1), (1,-1,1,-1,-1,1,1,-1), (-1,-1,-1,-1,-1,-1,-1,-1), (-1,-1,1,1,1,-1,-1,1,1)}, {(-1,-1,-1,1,1,1,1,-1,1), (-1,-1,1,-1,1,1,1,-1), (-1,1,-1,-1,-1,1,1,1,1), (-1,1,1,1,1,-1,1,-1,-1), (1,-1,-1,1,-1,1,1,1,-1), (1,-1,1,-1,-1,1,1,-1), (-1,-1,1,1,1,-1,-1,1,1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (-1,1,1,1,1,-1,1,-1,-1), (1,-1,-1,1,-1,1,1,1,-1), (1,-1,1,-1,-1,1,1,-1), (1,1,-1,-1,1,1,1,-1,-1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (-1,1,1,1,-1,1,1,-1,-1), (1,-1,-1,1,-1,1,1,1,-1), (1,-1,1,-1,-1,-1,-1,-1,-1), (-1,-1,1,1,1,-1,-1,1,1)}, {(-1,-1,-1,1,1,1,1,-1,1), (-1,-1,1,-1,1,1,1,-1), (-1,1,-1,-1,-1,1,1,1,1), (-1,1,1,1,-1,1,1,-1,-1), (1,-1,-1,1,-1,1,1,1,-1), (1,-1,1,-1,-1,1,1,-1), (-1,-1,1,1,1,-1,-1,1,1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (1,-1,-1,-1,1,1,-1,1,1), (-1,1,1,-1,1,1,-1,1,-1), (-1,1,1,-1,-1,1,-1,1,-1), (-1,-1,-1,-1,-1,-1,-1,-1), (-1,-1,1,1,1,-1,-1,1,1)}, {(-1,-1,-1,1,1,1,1,-1,1), (-1,-1,1,-1,1,1,1,-1), (-1,1,-1,-1,-1,1,1,1,1), (1,-1,-1,-1,1,1,-1,1,1), (-1,1,1,1,-1,1,1,-1,-1), (-1,1,-1,1,-1,1,1,-1), (-1,-1,-1,-1,-1,-1,-1,-1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (1,-1,-1,-1,1,1,-1,1,1), (-1,1,1,1,-1,1,1,-1,-1), (-1,1,-1,1,1,-1,1,-1), (1,1,-1,-1,1,1,1,-1,-1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (1,-1,-1,-1,1,1,-1,1,1), (-1,1,-1,1,1,-1,1,-1), (-1,1,-1,1,-1,-1,1,-1), (-1,-1,-1,-1,-1,-1,-1,-1), (1,1,-1,-1,1,1,1,-1,-1)}, {(-1,-1,-1,1,1,1,1,-1,1), (-1,-1,1,-1,1,1,1,-1), (-1,1,-1,-1,-1,1,1,1,1), (1,-1,-1,-1,1,1,-1,1,1), (-1,1,-1,1,1,-1,1,-1), (-1,1,-1,1,-1,1,1,-1), (-1,-1,1,1,1,-1,-1,1,1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (1,-1,-1,-1,1,1,-1,1,1), (-1,1,-1,1,1,-1,1,-1), (-1,1,1,1,-1,-1,1,1,-1), (1,-1,-1,1,-1,1,1,-1), (-1,-1,-1,-1,-1,-1,-1,-1), (-1,-1,1,1,1,-1,-1,1,1)}, {(-1,-1,-1,1,1,1,1,-1,1), (-1,-1,1,-1,1,1,1,-1), (-1,1,1,-1,-1,-1,1,1,1), (1,-1,-1,-1,1,1,-1,1,1), (-1,1,1,1,-1,1,1,-1,-1), (1,-1,-1,1,-1,1,1,-1), (1,1,-1,-1,1,1,1,-1,-1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (1,-1,-1,-1,1,1,-1,1,1), (-1,1,-1,1,-1,1,1,1,-1), (1,-1,-1,1,-1,1,1,-1), (-1,-1,-1,-1,-1,-1,-1,-1), (-1,-1,1,1,1,-1,-1,1,1)}, {(-1,-1,-1,1,1,1,1,-1,1), (-1,-1,1,-1,1,1,1,-1), (-1,1,-1,-1,-1,1,1,1,1), (1,-1,-1,-1,1,1,-1,1,1), (1,-1,-1,1,-1,1,1,1,-1), (1,-1,1,-1,-1,1,1,-1,-1,1), (1,1,-1,-1,1,1,1,-1,-1), (1,1,1,1,1,1,1,1,1)}, {(-1,-1,-1,1,1,1,1,-1,1), (-1,-1,1,-1,1,1,1,-1), (-1,1,1,-1,-1,-1,1,1,1), (1,-1,-1,-1,1,1,-1,1,1), (-1,1,-1,1,-1,1,1,1,-1), (1,-1,-1,1,-1,1,1,-1), (-1,-1,1,1,1,-1,-1,1,1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (-1,1,1,1,-1,-1,1,-1,1), (1,-1,-1,1,-1,1,1,1,-1), (-1,-1,-1,-1,-1,-1,-1,-1), (-1,-1,1,1,1,-1,-1,1,1), (1,1,1,1,1,1,1,1,1)}, {(-1,-1,-1,1,1,1,1,-1,1), (-1,-1,1,-1,1,1,1,-1), (-1,1,-1,-1,-1,1,1,1,1), (-1,1,1,1,-1,-1,1,-1,1), (1,-1,-1,1,-1,1,1,1,-1), (-1,1,1,1,1,-1,-1,-1,-1), (-1,-1,-1,-1,-1,-1,-1,-1), (-1,-1,1,1,1,-1,-1,1,1)}, {(-1,-1,-1,1,1,1,1,-1,1), (-1,-1,1,-1,1,1,1,-1), (-1,1,1,-1,-1,1,1,1,1), (-1,1,1,1,-1,-1,1,-1,1), (-1,1,1,-1,1,1,-1,1,-1), (-1,1,1,1,1,-1,-1,1,-1), (1,1,1,1,1,-1,-1,-1,1), (1,1,1,1,1,1,1,1,1)}, {(-1,-1,-1,1,1,1,1,-1,1), (-1,-1,1,-1,1,1,1,-1), (-1,1,-1,1,1,-1,1,1,1), (-1,1,1,1,-1,-1,1,-1,1), (-1,1,1,-1,1,1,-1,1,-1), (-1,1,1,1,1,-1,-1,-1,-1), (1,1,1,1,-1,-1,1,-1,-1), (1,1,1,1,1,1,1,1,1)}, {(-1,-1,-1,1,1,1,1,-1,1), (-1,-1,1,-1,1,1,1,-1), (-1,1,-1,1,-1,1,1,1,1), (-1,1,1,-1,-1,1,1,-1,1), (-1,1,1,-1,1,1,-1,1,1), (1,-1,-1,-1,1,1,1,1), (-1,-1,-1,-1,-1,-1,-1,-1), (-1,-

1,1,1,-1,-1,1,1)}, {(-1,-1,-1,1,1,1,-1,1), (-1,-1,1,-1,1,1,1,-1), (-1,1,1,-1,1,-1,1,1,-1), (-1,1,1,-1,-1,1,-1,1), (-1,1,-1,-1,1,-1,1,1), (1,-1,-1,-1,-1,1,1,1,1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,-1,1,-1,1,1,-1), (-1,1,1,1,-1,-1,1,1,-1), (-1,1,1,-1,-1,1,-1,1,1), (1,-1,-1,-1,-1,1,1,1,1), (-1,-1,1,1,1,-1,-1,1,1,1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (-1,1,1,1,-1,-1,1,1,-1), (-1,1,1,-1,-1,1,-1,1,1), (1,-1,-1,-1,-1,1,1,1,1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (-1,1,1,1,-1,-1,1,1,-1), (-1,1,1,1,1,-1,-1,-1), (1,-1,1,1,1,-1,1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,-1,1,-1,1,1,-1), (-1,1,1,1,-1,-1,1,1,-1), (-1,1,1,1,1,1,-1,-1,-1), (1,-1,1,1,1,-1,1,-1,-1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,-1,1,-1,1,1,-1), (-1,1,1,1,-1,-1,1,1,-1), (-1,1,1,1,1,1,-1,-1,-1), (1,-1,1,1,1,-1,1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (-1,1,1,1,-1,-1,1,1,-1), (1,-1,-1,-1,-1,1,1,1,1), (1,-1,1,1,1,-1,1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,-1,1,-1,1,1,-1), (-1,1,1,1,-1,-1,1,1,-1), (1,-1,-1,-1,-1,1,1,1,1), (1,-1,1,1,1,-1,1,-1,-1), (1,1,1,-1,-1,1,1,1,-1,-1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,-1,1,-1,1,1,-1), (-1,1,1,1,-1,-1,1,1,-1), (1,-1,-1,-1,-1,1,1,1,1), (1,-1,1,1,1,-1,1,-1,-1), (-1,1,1,1,1,-1,-1,1,1,1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (1,-1,-1,-1,-1,1,1,1,1), (1,-1,1,1,1,-1,1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (1,-1,-1,1,1,1,-1,1,-1,-1), (-1,1,1,1,1,1,-1,-1,-1), (-1,-1,1,1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,-1,1,-1,1,1,-1), (1,-1,-1,1,1,1,-1,1,-1,-1), (-1,1,1,1,1,1,-1,-1,-1), (-1,-1,1,1,-1,-1,-1,-1), (1,1,1,-1,-1,1,1,1,-1,-1)}, {(-1,-1,-1,1,1,1,1,-1,1), (-1,-1,1,1,-1,1,1,1,-1), (-1,1,1,-1,1,-1,1,1,-1), (1,-1,-1,1,1,1,-1,1,-1,-1), (-1,1,1,1,1,1,-1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (1,-1,-1,1,1,1,-1,1,-1,-1), (-1,1,1,1,1,1,-1,-1,-1), (1,-1,1,1,1,-1,1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,-1,1,-1,1,1,-1), (1,-1,-1,1,1,1,-1,1,-1,-1), (-1,1,1,1,1,1,-1,-1,-1), (1,-1,1,1,1,-1,1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (1,-1,-1,1,1,1,-1,1,-1,-1), (-1,1,1,1,1,1,-1,-1,-1), (1,-1,1,1,1,-1,1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (1,-1,-1,1,1,1,-1,1,-1,-1), (-1,1,1,1,1,1,-1,-1,-1), (1,-1,1,1,1,-1,1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,1,-1,1,1,-1), (1,-1,-1,1,1,1,-1,1,-1,-1), (1,-1,-1,-1,-1,1,1,1,1), (1,-1,1,1,1,-1,1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,-1,-1,1,1,-1,1), (1,-1,1,1,-1,1,-1,-1,1), (-1,1,1,-1,1,-1,1,1,-1), (1,-1,1,1,1,-1,1,-1,-1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,-1,-1,1,1,-1,1), (1,-1,1,1,-1,1,-1,-1,1), (-1,1,1,-1,-1,1,-1,1,1), (1,-1,-1,-1,-1,1,1,1,1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,-1,-1,1,-1,1,1), (1,-1,-1,-1,-1,1,1,1,1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (-1,1,1,1,1,1,-1,-1,-1), (1,-1,1,1,1,-1,1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (-1,1,1,1,1,1,-1,-1,-1), (1,-1,1,1,1,-1,1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (-1,1,1,1,1,1,-1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (-1,1,1,1,1,1,-1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (-1,1,1,1,1,1,-1,-1,-1), (1,-1,1,1,1,-1,1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (1,-1,-1,-1,-1,1,1,1,1), (1,-1,1,1,1,-1,1,-1,-1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (1,-1,-1,-1,-1,1,1,1,1), (1,-1,1,1,1,-1,1,-1,-1), (-1,-1,1,1,1,-1,-1,1,1,1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (1,-1,-1,-1,-1,1,1,1,1), (1,-1,1,1,1,-1,1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,1,1,1,-1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,1,1,1,-1,-1,-1), (1,-1,1,1,1,-1,1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,-1,1,-1,1,1,-1), (1,-1,1,1,-1,1,-1,-1,1), (-1,1,1,1,1,1,-1,-1,-1), (1,-1,1,1,1,-1,1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,-1,1,-1,1,1,-1), (1,-1,1,1,-1,1,-1,-1,1), (-1,1,1,1,1,1,-1,-1,-1), (1,-1,-1,-1,-1,1,1,1,1), (-1,-1,1,1,1,-1,-1,1,1,1), (1,1,1,1,1,1,1,1,1)}, {(-1,-1,-1,1,1,1,1,-1,1), (-1,-1,1,1,-1,1,1,1,-1), (-1,1,1,-1,-1,1,1,-1,1), (1,-1,1,1,-1,1,-1,-1,1), (-1,1,1,1,1,1,-1,-1,-1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,1,1,1,-1,-1,-1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,1,1,1,-1,-1,-1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (1,-1,-1,-1,-1,1,1,1,1), (-1,1,1,1,1,-1,-1,1,1,1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (-1,1,1,1,1,-1,-1,1,1,1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (1,-1,-1,-1,-1,1,1,1,1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,1,-1,-1,1,1,-1), (1,-1,-1,1,1,1,-1,1,-1,-1), (-1,1,1,1,1,1,-1,-1,-1), (-1,-1,-1,-1,-1,-1,-1,-1), (-1,-1,1,1,1,-1,-1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,1,1,-1,-1,1), (-1,1,1,1,1,1,-1,-1,-1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,1,-1,1,-1,1,1), (-1,1,1,1,1,1,-1,-1,-1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,-1,1,-1,1,1,-1), (-1,1,1,1,1,1,-1,-1,-1), (-1,-1,1,1,1,-1,-1,1,1,1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,-1,-1,1,-1,1,1), (1,-1,1,1,1,-1,1,-1,-1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,-1,-1,1,-1,1,1), (1,-1,-1,-1,-1,1,1,1,1), (-1,-1,-1,-1,-1,-1,-1,-1), (1,1,1,-1,-1,1,1,-1,-1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,-1,-1,1,-1,1,1), (1,-1,-1,-1,-1,1,1,1,1), (-1,-1,1,1,1,-1,-1,1,1,1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-1,1,1,-1,1,-1,-1,1,1), (1,-1,-1,-1,-1,1,1,1,1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,-1,1,1,-1,1), (1,-1,1,1,-1,1,-1,-1,1), (-1,1,1,-1,1,-1,1,1,-1), (1,-1,-1,-1,-1,1,1,1,1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,-1,-1,1,-1,1), (1,-1,1,1,-1,1,-1,-1,1), (-1,1,1,-1,-1,1,-1,1,1), (1,-1,-1,-1,-1,1,1,1,1), (1,1,1,-1,-1,1,1,1,-1,-1), (1,1,1,1,1,1,1,1,1)}, {(-1,-1,-1,1,1,1,1,-1,1), (-1,-1,1,1,-1,1,1,1,-1), (-1,1,1,1,-1,-1,1,1,-1), (1,-1,1,1,-1,1,-1,-1,1), (-

1,1,1,1,1,-1,-1,-1), (1,-1,1,1,-1,1,-1,-1), (-1,-1,-1,-1,-1,-1,-1,-1), (-1,-1,1,1,-1,-1,1,1)}, {(-1,-1,-1,1,1,1,-1,1), (-1,-1,1,-1,1,1,1,-1), (-1,1,1,-1,-1,1,-1,-1), (1,-1,1,-1,1,-1,-1,1,1), (-1,1,1,1,1,-1,-1,-1), (1,-1,1,1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (-1,1,1,-1,-1,1,-1,-1), (1,-1,1,-1,1,-1,-1,1), (-1,1,1,1,1,-1,-1,-1), (1,-1,1,1,-1,1,-1,-1), (-1,-1,1,1,-1,-1,1,1), (1,1,1,1,1,1,1,1)}, {(-1,-1,-1,1,1,1,-1,1), (-1,-1,1,-1,1,1,1,-1), (-1,1,1,1,-1,-1,1,-1,-1), (1,-1,1,-1,1,-1,-1,1), (-1,1,1,1,1,-1,-1,-1), (1,-1,1,1,-1,1,-1,-1), (1,1,-1,-1,1,1,-1,-1), (1,1,1,1,1,1,1,1)}, {(-1,-1,-1,1,1,1,-1,1), (-1,-1,1,-1,1,1,1,-1), (-1,1,1,1,-1,-1,1,-1,1), (1,-1,1,-1,1,-1,-1,1), (1,-1,-1,-1,1,1,1,1), (1,-1,1,1,-1,1,-1,-1), (-1,-1,-1,-1,-1,-1,-1,-1), (-1,-1,1,1,1,-1,1,1)}, {(-1,-1,-1,1,1,1,-1,1), (-1,-1,1,-1,1,1,1,-1), (-1,1,1,1,-1,-1,1,-1,1), (1,-1,1,-1,1,-1,-1,1), (1,-1,-1,-1,1,1,1,1), (1,-1,1,1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (-1,1,1,1,-1,-1,1,-1,1), (1,-1,1,-1,1,-1,-1,1), (1,-1,-1,-1,1,1,1,1), (1,-1,1,1,-1,1,-1,-1), (-1,-1,1,1,-1,-1,1,1), (1,1,1,1,1,1,1,1)}, {(-1,-1,-1,1,1,1,-1,1), (-1,-1,1,-1,1,1,1,-1), (-1,1,1,1,-1,-1,1,-1,1), (1,-1,1,-1,1,-1,-1,1), (1,-1,-1,-1,-1,1,1,1), (1,-1,1,1,-1,1,-1,-1), (1,1,-1,-1,1,1,-1,-1), (1,1,1,1,1,1,1,1)}, {(-1,-1,-1,1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (-1,-1,1,1,1,-1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (-1,1,1,1,-1,1,-1,-1), (-1,-1,1,1,-1,-1,1,1), (1,1,1,1,1,1,1,1)}, {(-1,-1,-1,1,1,1,-1,1), (-1,-1,1,-1,1,1,1,-1), (-1,1,1,1,-1,-1,1,-1,-1), (1,-1,1,1,1,1,-1,-1,-1), (-1,1,1,-1,1,1,-1,1,-1), (-1,1,1,1,-1,1,-1,-1), (1,1,-1,-1,1,1,-1,-1), (1,1,1,1,1,1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (-1,-1,1,1,1,-1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (-1,1,1,1,-1,1,-1,-1), (-1,-1,1,1,-1,-1,1,1), (1,1,1,1,1,1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (-1,1,1,1,-1,1,-1,-1), (1,1,-1,-1,1,1,-1,-1), (1,1,1,1,1,1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,1,-1,-1,1,-1,1), (-1,1,-1,1,-1,1,-1,-1), (-1,-1,-1,-1,-1,-1,-1,-1), (-1,-1,1,1,-1,-1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,-1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,-1,-1,1,-1,-1), (1,1,1,1,1,1,1,1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (-1,-1,1,1,1,-1,1,1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (-1,1,-1,-1,1,1,-1,1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (1,-1,1,1,-1,-1,1,-1,1), (-1,-1,1,1,1,-1,-1,1,1,-1), (-1,1,1,1,-1,1,-1,-1), (1,1,1,1,1,1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,-1,-1,1,-1,-1), (-1,-1,-1,-1,-1,-1,-1,-1), (-1,-1,1,1,1,-1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,-1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,-1,-1,1,-1,-1), (-1,-1,1,1,-1,-1,1,1), (1,1,1,1,1,1,1,1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (-1,-1,-1,-1,-1,-1,-1,-1), (-1,-1,1,1,1,-1,1,1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (-1,1,-1,-1,1,1,-1,1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (-1,-1,1,1,-1,-1,1,1), (1,1,1,1,1,1,1,1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (1,-1,1,-1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (1,-1,1,-1,-1,1,-1,-1), (1,1,1,1,1,1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,-1,-1,1,-1,-1), (-1,-1,-1,-1,-1,-1,-1,-1), (-1,-1,1,1,1,-1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,-1,-1,1,-1,-1), (-1,-1,-1,-1,-1,-1,-1,-1), (1,1,-1,-1,1,1,-1,-1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (1,-1,1,-1,-1,1,-1,-1), (-1,-1,-1,-1,-1,-1,-1,-1), (-1,-1,1,1,1,-1,1,1), (1,1,1,1,1,1,1,1)}, {(-1,-1,-1,1,1,1,-1,1), (-1,-1,1,-1,1,1,1,-1), (1,-1,-1,-1,1,1,-1,1,1), (1,-1,1,1,1,1,-1,-1,-1), (-1,1,1,-1,1,1,-1,1,-1), (-1,1,1,1,-1,1,-1,-1), (-1,-1,-1,-1,-1,-1,-1,-1), (-1,-1,1,1,-1,-1,1,1), (1,1,1,1,1,1,1,1)}, {(-1,-1,-1,1,1,1,-1,1), (-1,-1,1,-1,1,1,1,-1), (-1,1,1,1,1,-1,1,-1,-1), (1,-1,1,1,1,1,-1,-1,-1), (-1,1,1,-1,1,1,-1,1,-1), (1,-1,1,-1,-1,1,-1,-1), (-1,-1,-1,-1,-1,-1,-1,-1), (-1,-1,1,1,-1,-1,1,1, (1,1,1,1,1,1,1,1)}, {(-1,-1,-1,1,1,1,-1,1), (-1,

1,1,-1,1,1,1,-1), (1,-1,-1,-1,1,-1,1,1), (1,-1,1,1,1,-1,-1,-1), (1,-1,-1,1,-1,1,1,-1), (1,-1,1,-1,-1,1,-1,1), (-1,-1,-1,-1,-1,-1,-1,-1,-1), (-1,-1,1,1,-1,-1,1,1,1)}, {(-1,-1,-1,1,1,1,-1,1), (-1,-1,1,-1,1,1,1,-1), (1,-1,-1,-1,1,-1,1,1), (1,-1,1,1,1,-1,-1,-1), (1,-1,-1,1,-1,1,1,-1), (1,-1,1,-1,-1,1,-1,1), (-1,-1,-1,-1,-1,-1,-1,-1), (1,1,-1,-1,1,1,-1,-1,-1)}, {(-1,-1,-1,1,1,1,-1,1), (-1,-1,1,-1,1,1,1,-1), (1,-1,-1,-1,1,-1,1,1), (1,-1,1,1,1,-1,-1,-1), (1,-1,-1,1,-1,1,1,-1), (1,-1,1,-1,-1,1,-1,1), (-1,-1,1,1,1,-1,1,1,1), (1,1,1,1,1,1,1,1)}, {(-1,-1,-1,1,1,1,-1,1), (-1,-1,1,-1,1,1,1,-1), (1,-1,-1,-1,1,-1,1,1), (1,-1,1,1,1,-1,-1,-1), (1,-1,-1,1,-1,1,1,-1), (1,-1,1,-1,-1,1,-1,1), (1,1,-1,-1,1,1,-1,-1), (1,1,1,1,1,1,1,1)}, {(-1,-1,-1,1,1,1,-1,1), (-1,-1,1,-1,1,1,1,-1), (1,-1,-1,1,1,-1,-1,-1), (1,-1,1,-1,1,-1,-1,1), (-1,1,1,-1,1,1,-1,1,1), (-1,1,1,1,1,1,-1,-1,-1), (-1,-1,-1,-1,-1,-1,-1,-1), (-1,-1,1,1,-1,-1,1,1,1)}, {(-1,-1,-1,1,1,1,-1,1), (-1,-1,1,-1,1,1,1,-1), (1,-1,-1,1,1,-1,-1,-1), (1,-1,1,-1,1,-1,-1,1), (-1,1,1,-1,1,1,-1,1,1), (-1,1,1,1,1,1,-1,-1,-1), (-1,1,-1,-1,-1,-1,-1,-1), (1,1,1,-1,1,1,1,-1,-1)}, {(-1,-1,-1,1,1,1,-1,1), (-1,-1,1,-1,1,1,1,-1), (1,-1,-1,1,1,-1,-1,-1), (1,-1,1,-1,1,-1,-1,1), (-1,1,1,-1,1,1,-1,1,1), (-1,1,1,1,1,1,-1,-1,-1), (-1,-1,1,1,-1,-1,1,1,1), (1,1,1,1,1,1,1,1)}, {(-1,-1,-1,1,1,1,-1,1), (-1,-1,1,-1,1,1,1,-1), (1,-1,-1,1,1,-1,-1,-1), (1,-1,1,-1,1,-1,-1,1), (-1,1,1,-1,1,1,-1,1,1), (-1,1,1,1,1,1,-1,-1,-1), (1,1,-1,-1,1,1,-1,-1), (1,1,1,1,1,1,1,1)}, {(-1,-1,-1,1,1,1,-1,1), (-1,-1,1,-1,1,1,1,-1), (1,-1,-1,1,1,-1,1,-1), (1,-1,1,-1,1,-1,1), (-1,1,-1,-1,1,1,-1,1,1), (1,-1,-1,-1,1,1,1,1), (-1,-1,-1,-1,-1,-1,-1,-1), (-1,-1,1,1,1,-1,-1,1,1)}, {(-1,-1,-1,1,1,1,-1,1), (-1,-1,1,-1,1,1,1,-1), (1,-1,-1,1,1,-1,-1,-1), (1,-1,1,-1,1,-1,-1,1), (-1,1,1,-1,1,1,-1,1,1), (1,-1,-1,-1,1,1,1,1), (-1,-1,-1,-1,-1,-1,-1,-1), (1,1,-1,-1,1,1,1,-1,-1)}, {(-1,-1,-1,1,1,1,-1,1), (-1,-1,1,-1,1,1,1,-1), (1,-1,-1,1,1,-1,-1,-1), (1,-1,1,-1,1,-1,-1,1), (-1,1,1,-1,1,1,-1,1,1), (1,-1,-1,-1,-1,1,1,1), (1,1,-1,-1,1,1,-1,-1), (1,1,1,1,1,1,1,1)}, {(-1,-1,-1,1,1,1,-1,1), (-1,-1,1,-1,1,1,1,-1), (1,-1,-1,1,1,-1,-1,-1), (1,-1,1,-1,1,-1,-1,1), (-1,1,1,-1,1,1,-1,1,1), (1,-1,-1,-1,1,1,1,1), (1,1,-1,-1,1,1,-1,-1,-1), (1,1,1,1,1,1,1,1)}, {(-1,-1,-1,1,1,1,-1,1), (-1,-1,1,-1,1,1,1,-1), (1,-1,-1,1,1,-1,1,-1), (1,-1,1,-1,1,-1,-1,1), (-1,1,1,1,1,1,-1,-1,-1), (1,-1,1,1,1,-1,1,-1,-1), (-1,-1,-1,-1,-1,-1,-1,-1), (-1,-1,1,1,1,-1,-1,1,1)}, {(-1,-1,-1,1,1,1,-1,1), (-1,-1,1,-1,1,1,1,-1), (1,-1,-1,1,1,-1,1,-1), (1,-1,1,-1,1,-1,-1,1), (-1,1,1,1,1,1,-1,-1,-1), (1,-1,1,1,1,-1,1,-1,-1), (-1,-1,-1,-1,-1,-1,-1,-1), (1,1,-1,-1,1,1,1,-1,-1)}, {(-1,-1,-1,1,1,1,-1,1), (-1,-1,1,-1,1,1,1,-1), (1,-1,-1,1,1,-1,1,-1), (1,-1,1,-1,1,-1,-1,1), (-1,1,1,1,1,1,-1,-1,-1), (1,-1,1,1,1,-1,1,-1,-1), (1,1,-1,-1,1,1,-1,-1), (1,1,1,1,1,1,1,1)}, {(-1,-1,-1,1,1,1,-1,1), (-1,-1,1,-1,-1,1,1,1), (-1,1,1,1,1,-1,1,-1,-1), (1,1,-1,1,-1,-1,-1,1), (-1,1,1,-1,1,1,-1,1,-1), (-1,-1,-1,-1,-1,-1,-1,-1), (-1,-1,1,1,1,-1,-1,1,1)}, {(-1,-1,-1,1,1,1,-1,1), (-1,-1,-1,-1,1,1,1,1), (-1,1,1,1,1,-1,1,-1,-1), (1,1,-1,1,1,-1,-1,1), (-1,1,1,1,-1,1,1,-1,1), (-1,-1,-1,-1,-1,-1,-1,-1), (1,1,-1,-1,1,1,1,-1,-1)}, {(-1,-1,-1,1,1,1,-1,1), (-1,-1,-1,-1,1,1,1,1), (-1,1,1,1,1,-1,1,-1,-1), (1,1,-1,1,-1,-1,1), (-1,1,1,-1,1,1,-1,1,-1), (-1,-1,-1,-1,-1,-1,-1,-1), (1,1,-1,-1,1,1,-1,-1), (1,1,1,1,1,1,1,1)}, {(-1,-1,-1,1,1,1,-1,1), (-1,-1,-1,-1,1,1,1,1), (-1,1,1,1,1,-1,1,-1,-1), (1,1,-1,1,-1,-1,-1,1), (-1,1,1,-1,1,1,-1,1,-1), (1,-1,-1,-1,-1,-1,-1,-1), (-1,-1,1,1,1,-1,-1,1,1)}, {(-1,-1,-1,1,1,1,-1,1), (-1,-1,-1,-1,1,1,1,1), (-1,1,1,1,1,-1,1,-1,-1), (1,1,-1,1,-1,-1,-1,1), (-1,1,1,-1,1,1,-1,1,-1), (1,-1,-1,1,-1,1,1,-1), (-1,-1,1,1,-1,1,1,1,1), (1,1,1,1,1,1,1,1)}, {(-1,-1,-1,1,1,1,-1,1), (-1,-1,-1,-1,1,1,1,1), (-1,1,1,1,1,-1,1,-1,-1), (1,1,-1,1,-1,-1,-1,1), (-1,1,1,-1,1,1,-1,1,-1), (1,-1,-1,1,-1,1,1,-1), (-1,-1,1,1,-1,1,1,1,1), (1,1,1,1,1,1,1,1)}, {(-1,-1,-1,1,1,1,-1,1), (-1,-1,-1,-1,1,1,1,1), (-1,1,1,1,1,-1,1,-1,-1), (1,1,-1,1,-1,-1,-1,1), (-1,1,1,-1,1,1,-1,1,-1), (1,-1,-1,-1,-1,-1,-1,-1), (1,1,-1,-1,1,1,1,-1,-1)}, {(-1,-1,-1,1,1,1,-1,1), (-1,-1,-1,-1,1,1,1,1), (-1,1,1,1,1,-1,1,-1,-1), (1,1,-1,1,-1,-1,-1,1), (-1,1,1,-1,1,1,-1,1,-1), (1,-1,-1,1,-1,1,1,-1), (-1,-1,1,1,-1,1,1,1,1), (1,1,1,1,1,1,1,1)}, {(-1,-1,-1,1,1,1,-1,1), (-1,-1,-1,-1,-1,1,1,1,1), (-1,1,1,1,1,-1,1,-1,-1), (1,1,-1,1,-1,-1,1), (-1,1,1,-1,1,1,-1,1,-1), (1,-1,-1,-1,-1,-1,-1,-1), (-1,-1,1,1,1,-1,-1,1,1)}, {(-1,-1,-1,1,1,1,-1,1), (-1,-1,-1,-1,1,1,1,1), (-1,1,1,1,1,-1,1,-1,-1), (1,1,-1,1,-1,-1,-1,1), (-1,1,1,-1,1,1,-1,1,-1), (1,-1,-1,-1,-1,-1,-1,-1), (1,1,-1,-1,1,1,-1,-1), (1,1,1,1,1,1,1,1)}, {(-1,-1,-1,1,1,1,-1,1), (-1,-1,-1,-1,-1,1,1,1), (-1,1,1,1,1,-1,1,-1,-1), (1,1,-1,1,-1,-1,-1,1), (-1,1,1,-1,1,1,-1,1,-1), (1,-1,-1,-1,-1,-1,-1,-1), (-1,-1,1,1,1,-1,-1,1,1)}, {(-1,-1,-1,1,1,1,-1,1), (-1,-1,-1,-1,-1,1,1,1), (-1,1,1,1,1,-1,1,-1,-1), (1,1,-1,1,-1,-1,-1,1), (-1,1,1,-1,1,1,-1,1,-1), (1,-1,-1,1,-1,1,1,-1), (-1,-1,1,1,-1,1,1,1,1), (1,1,1,1,1,1,1,1)}, {(-1,-1,-1,1,1,1,-1,1), (-1,-1,-1,-1,-1,1,1,1), (-1,1,1,1,1,-1,1,-1,-1), (1,1,-1,1,-1,-1,-1,1), (-1,1,1,-1,1,1,-1,1,-1), (1,-1,-1,-1,-1,-1,-1,-1), (1,1,-1,-1,1,1,-1,-1), (1,1,1,1,1,1,1,1)}, {(-1,-1,-1,1,1,1,-1,1), (-1,-1,-1,-1,-1,1,1,1), (-1,1,1,1,1,-1,1,-1,-1), (1,1,-1,1,-1,-1,-1,1), (-1,1,1,-1,1,1,-1,1,-1), (1,-1,-1,1,-1,1,1,-1), (-1,-1,1,1,-1,1,1,1,1), (1,1,1,1,1,1,1,1)}, {(-1,-1,-1,1,1,1,-1,1), (-1,1,1,-1,-1,1,1,1), (-1,1,1,1,1,-1,1,-1,-1), (1,1,-1,-1,1,-1,-1,1,1), (1,-1,-1,1,-1,1,1,-1), (-1,1,1,1,-1,1,1,1), (-1,1,1,1,-1,1,1,1,1), (1,1,1,1,1,1,1,1)}, {(-1,-1,-1,1,1,1,-1,1), (-1,1,1,-1,-1,1,1,1), (-1,1,1,1,1,-1,1,-1,-1), (1,1,-1,-1,1,-1,-1,1,1), (1,-1,-1,1,-1,1,1,-1), (1,-1,1,-1,-1,1,-1,1), (-1,-1,1,1,-1,1,1,1), (1,1,1,1,1,1,1,1)}, {(-1,-1,-1,1,1,1,-1,1), (-1,1,1,-1,-1,1,1,1), (-1,1,1,1,1,-1,1,-1,-1), (1,1,-1,-1,1,-1,-1,1,1), (1,-1,-1,1,-1,1,1,-1), (-1,1,1,1,-1,1,1,1), (1,1,1,1,1,1,1,1)}, {(-1,-1,-1,1,1,1,-1,1), (-1,1,1,-1,-1,1,1,1), (-1,1,1,1,1,-1,1,-1,-1), (1,1,-1,-1,1,-1,-1,1,1), (1,-1,-1,1,-1,1,1,-1), (-1,1,1,1,-1,1,1,1,1), (1,1,1,1,1,1,1,1)}, {(-1,-1,-1,1,1,1,-1,1), (-1,1,1,-1,-1,1,1,1), (-1,1,1,1,1,-1,1,-1,-1), (1,1,-1,-1,-1,1), (1,-1,-1,1,-1,1,1,-1), (-1,1,1,1,-1,1,1,1,1), (1,1,

1,-1,1,1,-1,-1), (1,1,1,1,1,1,1,1)}, {(-1,-1,-1,1,1,1,-1,1), (-1,1,-1,-1,-1,1,1,1), (1,-1,-1,-1,1,-1,1,1), (1,1,-1,1,-1,1,-1,1), (-1,1,-1,1,1,-1,1,-1), (-1,1,1,-1,1,-1,-1,1), (-1,-1,-1,-1,-1,-1,-1,-1), (-1,-1,1,1,-1,-1,1,1)}, {(-1,-1,-1,1,1,1,1,-1,1), (-1,1,-1,-1,-1,1,1,1), (1,-1,-1,-1,1,-1,1,1), (1,1,-1,1,-1,-1,-1,1), (-1,1,-1,1,1,1,-1,1,-1), (-1,1,1,-1,-1,1), (-1,-1,-1,-1,-1,-1,-1,-1), (1,1,-1,-1,1,1,-1,-1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (-1,1,-1,1,1,1,-1,1,-1), (-1,1,1,-1,1,-1,-1,1), (-1,-1,1,1,1,-1,1,-1,1,1), (1,1,1,1,1,1,1,1)}, {(-1,-1,-1,1,1,1,1,-1,1), (-1,1,-1,-1,-1,1,1,1), (1,-1,-1,-1,1,1,-1,1,1), (1,1,-1,1,1,-1,-1,-1,1), (-1,1,-1,1,1,1,-1,1,-1), (-1,1,1,1,-1,1,-1,-1,1), (1,1,-1,-1,1,1,-1,1,-1), (1,1,1,1,1,1,1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (-1,1,-1,1,1,1,-1,1,-1), (1,-1,-1,1,1,-1,1,1,1,-1), (-1,-1,-1,-1,-1,-1,-1,-1), (-1,-1,1,1,1,-1,-1,1,1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (-1,1,-1,1,1,1,-1,1,-1), (1,-1,-1,1,1,-1,1,1,1,-1), (-1,-1,-1,-1,-1,-1,-1,-1), (1,1,-1,-1,1,1,1,-1,-1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (-1,1,-1,1,1,1,-1,1,-1), (1,-1,-1,1,1,-1,1,1,1,-1), (-1,-1,1,1,1,1,-1,1,-1,1,1), (1,1,1,1,1,1,1,1)}, {(-1,-1,-1,1,1,1,1,-1,1), (-1,1,-1,-1,-1,1,1,1), (1,-1,-1,-1,1,1,-1,1,1), (1,1,-1,1,1,-1,-1,-1,1), (-1,1,-1,1,1,1,-1,1,-1), (1,-1,-1,1,1,1,-1,1,1,1,-1), (1,1,-1,-1,1,1,-1,1,-1), (1,1,1,1,1,1,1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (-1,1,1,1,-1,1,-1,-1,1), (1,-1,1,1,-1,1,1,-1,1,-1), (-1,-1,-1,-1,-1,-1,-1,-1), (-1,-1,1,1,1,-1,-1,1,1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (-1,1,1,1,-1,1,-1,-1,1), (1,-1,1,1,-1,1,-1,1,-1,1), (-1,-1,-1,-1,-1,-1,-1,-1,-1), (1,1,1,-1,1,1,1,-1,-1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (-1,1,1,1,-1,1,-1,-1,1), (1,-1,1,1,-1,1,-1,1,-1,1), (-1,-1,1,1,1,-1,1,-1,1,1), (1,1,1,1,1,1,1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (-1,1,1,1,-1,1,-1,-1,1), (1,-1,1,1,-1,1,-1,1,-1,1), (1,1,-1,-1,1,1,-1,1,-1), (1,1,1,1,1,1,1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (1,-1,-1,1,1,-1,1,1,1,-1), (1,-1,1,1,-1,-1,1,1,-1,1), (-1,-1,-1,-1,-1,-1,-1,-1), (-1,-1,1,1,1,-1,-1,1,1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (1,-1,-1,1,1,-1,1,1,1,-1), (1,-1,1,1,-1,-1,1,-1,1,-1), (-1,-1,-1,-1,-1,-1,-1,-1,-1), (1,1,-1,-1,1,1,1,-1,-1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (1,-1,-1,1,1,-1,1,1,1,-1), (1,-1,1,1,-1,-1,1,-1,1,-1), (-1,-1,1,1,1,1,-1,1,-1,1,1), (1,1,1,1,1,1,1,1)}, {(-1,-1,-1,1,1,1,1,-1,1), (-1,1,-1,-1,-1,1,1,1), (1,-1,-1,-1,1,1,-1,1,1), (1,1,-1,1,-1,-1,-1,1), (1,-1,-1,1,1,-1,1,1,1,-1), (1,-1,1,1,-1,-1,1,-1,1,-1), (1,1,-1,-1,1,1,-1,1,-1), (1,1,1,1,1,1,1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (-1,1,-1,1,1,-1,1,1,1), (-1,1,1,1,1,1,-1,-1,-1), (-1,-1,-1,-1,-1,-1,-1,-1,-1), (-1,-1,1,1,1,-1,-1,1,1,1)}, {(-1,-1,-1,1,1,1,1,-1,1), (-1,1,1,-1,1,-1,1,1,1,-1), (-1,1,1,1,-1,-1,1,1,-1,1), (1,1,-1,1,-1,-1,-1,1), (-1,1,-1,1,1,-1,1,1,1), (-1,1,1,1,1,1,1,-1,-1,-1), (-1,-1,-1,-1,-1,-1,-1,-1,-1), (1,1,-1,-1,1,1,1,-1,-1,1)}, {(-1,-1,-1,1,1,1,1,-1,1), (-1,1,1,-1,1,-1,1,1,1,-1), (-1,1,1,1,-1,-1,1,1,-1,1), (1,1,-1,1,-1,-1,-1,1), (-1,1,-1,1,1,-1,1,1,1), (-1,1,1,1,1,1,1,-1,-1,-1,-1), (-1,-1,1,1,1,1,-1,1,-1,1,1), (1,1,1,1,1,1,1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (-1,1,-1,1,1,-1,1,1,1), (1,-1,-1,-1,1,-1,1,1,-1,1), (-1,-1,-1,-1,-1,-1,-1,-1,-1), (-1,-1,1,1,1,-1,-1,1,1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (-1,1,-1,1,1,-1,1,1,1), (1,-1,-1,-1,1,-1,1,1,-1,1), (-1,-1,-1,-1,-1,-1,-1,-1,-1), (1,1,-1,-1,1,1,1,-1,-1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (-1,1,-1,1,1,-1,1,1,1), (1,-1,-1,-1,1,-1,1,1,-1,1), (1,1,-1,-1,1,1,-1,1,-1), (1,1,1,1,1,1,1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (1,-1,-1,1,1,-1,1,1,1,-1), (1,-1,1,1,-1,1,-1,-1,1,1,1), (-1,-1,-1,-1,-1,-1,-1,-1,-1), (1,1,-1,-1,1,1,1,-1,-1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (-1,1,1,1,1,1,1,-1,-1,-1), (1,-1,1,1,-1,-1,1,-1,-1,1), (-1,-1,-1,-1,-1,-1,-1,-1,-1), (1,1,-1,-1,1,1,1,-1,-1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (-1,1,1,1,1,1,1,-1,-1,1,1), (1,-1,-1,-1,-1,-1,-1,-1,-1), (1,1,-1,-1,1,1,1,-1,-1,1)}, {(-1,-1,-1,1,1,1,1,-1,1), (-1,1,-1,1,-1,1,1,1,-1), (1,-1,-1,1,1,1,-1,1,1,-1,1), (1,1,-1,1,1,-1,-1,-1,1), (-1,1,1,1,1,1,-1,-1,1,1), (-1,1,1,1,1,1,-1,-1,-1), (-1,-1,-1,-1,-1,-1,-1,-1,-1), (-1,-1,1,1,1,-1,-1,1,1,1)}, {(-1,-1,-1,1,1,1,1,-1,1), (-1,1,-1,1,-1,1,1,1,-1), (1,-1,-1,1,1,1,-1,1,1,-1,1), (1,1,-1,1,-1,-1,-1,-1,1), (1,-1,-1,-1,1,-1,1,1,1,1), (1,-1,1,1,1,1,-1,1,-1,1,1), (-1,-1,-1,-1,-1,-1,-1,-1,-1), (-1,-1,1,1,1,-1,-1,1,1,1)}, {(-1,-1,-1,1,1,1,1,-1,1), (-1,1,-1,1,-1,1,1,1,-1), (1,-1,-1,1,1,1,-1,1,1,-1,1), (1,1,-1,1,-1,-1,-1,1), (-1,1,1,1,1,1,-1,-1,1,1), (-1,1,-1,-1,-1,-1,-1,-1,-1), (1,1,1,1,1,1,1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (-1,1,1,1,1,1,-1,-1,1,1), (1,-1,-1,1,1,1,-1,-1,-1,-1), (1,1,-1,-1,1,1,1,-1,-1,1)}, {(-1,-1,-1,1,1,1,1,-1,1), (-1,1,-1,1,-1,1,1,1,-1), (-1,1,1,1,-1,-1,1,1,-1,1), (1,1,-1,1,1,-1,-1,-1,1), (1,-1,-1,1,1,1,-1,1,-1,-1,1), (1,-1,-1,-1,-1,-1,-1,-1,-1), (1,1,-1,-1,1,1,1,-1,-1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (-1,1,1,1,1,1,-1,-1,1,1,1), (1,-1,1,1,-1,-1,-1,-1,-1), (-1,-1,1,1,1,-1,-1,1,1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (1,-1,-1,-1,1,1,1,1,1), (1,-1,1,1,1,-1,-1,1,-1,-1), (-1,-1,-1,-1,-1,-1,-1,-1,-1), (-1,-1,1,1,1,-1,-1,1,1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1), (1,-1,-1,-1,1,1,1,1,1), (-1,-1,1,1,1,1,-1,1,-1,1,1), (1,1,1,1,1,1,1,1)}, {(-1,-1,-1,1,1,1,1,-1,1), (-1,1,-1,1,-1,1,1,1,-1), (1,-1,-1,1,1,1,-1,1,1,-1,1), (1,1,-1,1,-1,-1,-1,1), (-1,1,1,1,1,1,-1,-1,1,1), (-1,-1,-1,-1,-1,-1,-1,-1,-1), (1,1,-1,-1,1,1,1,-1,-1,1)}, {(-1,-1,-1,1,1,1,1,-1,1), (-1,1,-1,1,-1,1,1,1,-1), (-1,1,1,1,-1,-1,1,1,-1,1), (1,1,-1,1,-1,-1,-1,1,1,1), (-1,1,1,1,-1,-1,1,1,1,1), (-1,-1,1,1,1,-1,-1,1,1,1), (1,1,1,1,1,1,1,1)}, {(-1,-1,-1,1,1,1,1,-1,1), (-1,1,-1,1,-1,1,1,1,-1), (1,-1,1,1,1,-1,1,1,-1,1), (1,1,-1,1,-1,-1,-1,1), (-1,1,1,1,-1,-1,1,1,1,1), (-1,-1,1,1,1,-1,-1,1,-1,-1), (-1,-1,-1,-1,-1,-1,-1,-1,-1), (1,1,1,-1,1,1,1,-1,-1,1)}, {(-1,-1,-1,1,1,1,1,-1,1), (-1,1,-1,1,-1,1,1,1,-1), (1,-1,1,1,1,-1,1,1,-1,1), (1,1,-1,1,-1,-1,-1,1),

1,1,-1,-1,-1,1), (-1,1,-1,-1,1,-1,1,1), (-1,1,1,1,1,-1,-1,-1), (1,1,-1,-1,1,1,-1,-1), (1,1,1,1,1,1,1,1)}, {(-1,-1,-1,1,1,1,-1,1), (-1,1,-1,1,-1,1,1,-1), (1,-1,-1,1,1,-1,1,-1), (1,1,-1,1,-1,-1,-1,1), (-1,1,-1,-1,1,-1,1,1), (1,-1,-1,-1,1,1,1,1), (-1,-1,-1,-1,-1,-1,-1,-1), (-1,-1,1,1,-1,-1,1,1)}, {(-1,-1,-1,1,1,1,-1,1), (-1,1,-1,1,-1,1,1,-1), (1,-1,-1,1,1,-1,1,-1), (1,1,-1,1,-1,-1,1,1), (-1,1,-1,-1,1,-1,1,1), (1,-1,-1,-1,-1,1,1,1), (-1,-1,-1,-1,-1,-1,-1,-1), (1,1,-1,-1,1,1,-1,-1)}, {(-1,-1,-1,1,1,1,-1,1), (-1,1,-1,1,-1,1,1,-1), (1,-1,-1,1,1,-1,1,-1), (1,1,-1,1,-1,-1,1,1), (-1,1,-1,-1,1,-1,1,1), (1,-1,-1,-1,-1,1,1,1), (-1,-1,1,1,-1,-1,1,1), (1,1,1,1,1,1,1,1)}, {(-1,-1,-1,1,1,1,-1,1), (-1,1,-1,1,1,1,-1), (1,-1,-1,1,1,-1,1,-1), (1,1,-1,1,-1,-1,-1,1), (-1,1,-1,-1,1,1,1,1), (1,-1,-1,-1,1,1,1,1), (1,1,-1,-1,1,1,1,-1,1), (1,1,1,1,1,1,1,1)}, {(-1,-1,-1,1,1,1,-1,1), (-1,1,-1,1,-1,1,1,-1), (1,-1,-1,1,1,-1,1,-1), (1,1,-1,1,-1,-1,1,1), (-1,1,1,1,1,-1,-1,-1), (1,-1,1,1,-1,1,-1,-1), (-1,-1,-1,-1,-1,-1,-1,-1), (-1,-1,1,1,1,-1,-1,1,1)}, {(-1,-1,-1,1,1,1,-1,1), (-1,1,-1,1,-1,1,1,-1), (1,-1,-1,1,1,-1,1,-1), (1,1,-1,1,-1,-1,1,1), (-1,1,1,1,1,-1,-1,-1), (1,-1,1,1,1,-1,1,-1,-1), (-1,-1,-1,-1,-1,-1,-1,-1), (1,1,-1,-1,1,1,-1,-1,1)}, {(-1,-1,-1,1,1,1,-1,1), (-1,1,-1,1,-1,1,1,-1), (1,-1,-1,1,1,-1,1,-1), (1,1,-1,1,-1,-1,1,1), (-1,1,1,1,1,-1,-1,-1), (1,-1,1,1,-1,1,-1,-1), (-1,-1,1,1,-1,-1,1,1,1), (1,1,1,1,1,1,1,1)}, {(-1,-1,-1,1,1,1,-1,1), (-1,1,-1,1,-1,1,1,-1), (1,-1,-1,1,1,-1,1,-1), (1,1,-1,1,-1,-1,-1,1), (-1,1,1,1,1,-1,-1,-1), (1,-1,1,1,1,-1,1,-1,-1), (1,1,-1,-1,1,1,-1,-1,1), (1,1,1,1,1,1,1,1)}, {(-1,-1,-1,1,1,1,-1,1), (-1,1,-1,1,-1,1,1,-1), (1,-1,-1,1,1,-1,1,-1), (1,1,-1,1,-1,-1,1,1), (1,-1,-1,-1,-1,1,1,1), (-1,1,-1,1,1,-1,1,-1,-1), (-1,-1,-1,-1,-1,-1,-1,-1), (-1,-1,1,1,1,-1,-1,1,1)}, {(-1,-1,-1,1,1,1,-1,1), (-1,1,-1,1,-1,1,1,-1), (1,-1,-1,1,1,-1,1,-1), (1,1,-1,1,-1,-1,1,1), (1,-1,-1,-1,-1,1,1,1), (-1,1,-1,1,1,-1,1,-1,-1), (-1,-1,1,1,-1,-1,1,1,1), (1,1,1,1,1,1,1,1)}, {(-1,-1,-1,1,1,1,-1,1), (-1,1,-1,1,-1,1,1,-1), (1,-1,-1,1,1,-1,1,-1), (1,1,-1,1,-1,-1,-1,1), (-1,1,1,1,1,-1,-1,-1), (1,-1,1,1,-1,1,-1,-1), (-1,-1,-1,-1,-1,-1,-1,-1), (1,1,-1,-1,1,1,-1,-1,1)}, {(-1,-1,-1,1,1,1,-1,1), (-1,1,1,1,-1,1,1,-1), (1,-1,1,1,-1,1,-1,-1), (1,1,-1,1,-1,-1,1,1), (-1,1,-1,-1,1,-1,1,1), (-1,1,1,1,1,-1,-1,-1,-1), (-1,-1,-1,-1,-1,-1,-1,-1), (-1,-1,1,1,1,-1,-1,1,1)}, {(-1,-1,-1,1,1,1,-1,1), (-1,1,1,1,-1,1,1,-1), (1,-1,1,1,-1,1,-1,-1), (1,1,-1,1,-1,-1,1,1), (-1,1,1,-1,1,-1,1,1), (-1,1,1,1,1,-1,-1,-1,-1), (-1,-1,-1,-1,-1,-1,-1,-1), (1,1,-1,-1,1,1,-1,-1,1)}, {(-1,-1,-1,1,1,1,-1,1), (-1,1,1,1,-1,1,1,-1), (1,-1,1,1,-1,1,-1,-1), (1,1,-1,1,-1,-1,1,1), (-1,1,-1,-1,1,-1,1,1,1), (-1,1,1,1,1,-1,-1,-1,-1), (-1,-1,1,1,-1,-1,1,1,1), (1,1,1,1,1,1,1,1)}, {(-1,-1,-1,1,1,1,-1,1), (-1,1,1,1,-1,1,1,-1), (1,-1,1,1,-1,1,-1,-1), (1,1,-1,1,-1,-1,-1,1), (-1,1,-1,-1,1,-1,1,1), (1,-1,-1,-1,-1,1,1,1), (1,1,-1,-1,1,1,-1,-1,1), (1,1,1,1,1,1,1,1)}, {(-1,-1,-1,1,1,1,-1,1), (-1,1,1,1,-1,1,1,-1), (1,-1,1,1,-1,1,-1,-1), (1,1,-1,1,-1,-1,1,1), (-1,1,-1,-1,1,-1,1,1), (1,-1,-1,-1,-1,1,1,1), (-1,-1,-1,-1,-1,-1,-1,-1), (1,1,-1,-1,1,1,-1,-1,1)}, {(-1,-1,-1,1,1,1,-1,1), (-1,1,1,1,-1,1,1,-1), (1,-1,1,1,-1,1,-1,-1), (1,1,-1,1,-1,-1,1,1), (-1,1,-1,-1,1,-1,1,1), (1,-1,-1,-1,-1,1,1,1), (-1,-1,1,1,-1,-1,1,1,1), (1,1,1,1,1,1,1,1)}, {(-1,-1,-1,1,1,1,-1,1), (-1,1,1,1,-1,1,1,-1), (1,-1,1,1,-1,1,-1,-1), (1,1,-1,1,-1,-1,1,1), (1,-1,-1,-1,-1,1,1,1), (-1,1,-1,1,1,-1,1,-1,-1), (-1,-1,-1,-1,-1,-1,-1,-1), (1,1,-1,-1,1,1,-1,-1,1)}, {(-1,-1,-1,1,1,1,-1,1), (-1,1,1,1,-1,1,1,-1), (1,-1,1,1,-1,1,-1,-1), (1,1,-1,1,-1,-1,1,1), (1,-1,-1,-1,-1,1,1,1), (-1,1,-1,1,1,-1,1,-1,-1), (-1,-1,1,1,1,-1,-1,1,1), (1,1,1,1,1,1,1,1)}, {(-1,-1,-1,1,1,1,-1,1), (-1,1,1,1,-1,1,1,-1), (1,-1,1,1,-1,1,-1,-1), (1,1,-1,1,-1,-1,-1,1), (-1,1,-1,-1,1,-1,1,1), (1,-1,-1,-1,-1,1,1,1), (1,1,-1,-1,1,1,-1,-1,1), (1,1,1,1,1,1,1,1)}, {(-1,-1,-1,1,1,1,-1,1), (-1,1,1,1,-1,-1,1,-1,-1), (1,-1,1,1,1,-1,-1,-1,-1), (1,1,-1,1,-1,-1,-1,1), (-1,1,1,1,1,-1,-1,-1,-1), (1,-1,1,1,-1,1,-1,-1), (-1,-1,-1,-1,-1,-1,-1,-1), (1,1,-1,-1,1,1,-1,-1,1)}, {(-1,-1,-1,1,1,1,-1,1), (-1,1,1,1,-1,-1,1,-1,-1), (1,-1,1,1,-1,1,-1,-1), (1,1,-1,1,-1,-1,-1,1), (-1,1,1,-1,1,-1,1,1), (-1,1,1,1,1,-1,-1,-1,-1), (-1,-1,-1,-1,-1,-1,-1,-1), (1,1,-1,-1,1,1,-1,-1,1)}, {(-1,-1,-1,1,1,1,-1,1), (-1,1,1,1,-1,-1,1,-1,-1), (1,-1,1,1,-1,1,-1,-1), (1,1,-1,1,-1,-1,-1,1), (-1,1,-1,-1,1,-1,1,1), (1,-1,-1,-1,-1,1,1,1), (-1,-1,-1,-1,-1,-1,-1,-1), (-1,-1,1,1,1,-1,-1,1,1)}, {(-1,-1,-1,1,1,1,-1,1), (-1,1,1,1,-1,-1,1,-1,-1), (1,-1,1,1,-1,1,-1,-1), (1,1,-1,1,-1,-1,1,1), (-1,1,-1,-1,1,-1,1,1), (1,-1,-1,-1,-1,1,1,1), (-1,-1,1,1,1,-1,-1,1,1), (1,1,1,1,1,1,1,1)}, {(-1,-1,-1,1,1,1,-1,1), (-1,1,1,1,-1,-1,1,-1,-1), (1,-1,1,1,-1,1,-1,-1), (1,1,-1,1,-1,-1,1,1), (-1,1,-1,-1,1,-1,1,1), (1,-1,-1,-1,-1,1,1,1), (1,1,-1,-1,1,1,-1,-1,1), (1,1,1,1,1,1,1,1)}, {(-1,-1,-1,1,1,1,-1,1), (-1,1,1,1,-1,-1,1,-1,-1), (1,-1,1,1,-1,1,-1,-1), (1,1,-1,1,-1,-1,-1,1), (-1,1,1,1,1,-1,-1,-1,-1), (1,-1,1,1,-1,1,-1,-1), (-1,-1,-1,-1,-1,-1,-1,-1), (-1,-1,1,1,1,-1,-1,1,1)}, {(-1,-1,-1,1,1,1,-1,1), (-1,1,1,1,-1,-1,1,-1,-1), (1,-1,1,1,-1,1,-1,-1), (1,1,-1,1,-1,-1,-1,1), (-1,1,1,1,1,-1,-1,-1,-1), (1,-1,1,1,-1,1,-1,-1), (-1,-1,1,1,1,-1,-1,1,1), (1,1,1,1,1,1,1,1)}, {(-1,-1,-1,1,1,1,-1,1), (-1,1,1,1,-1,-1,1,-1,-1), (1,-1,1,1,1,-1,-1,-1,-1), (1,1,-1,1,-1,-1,1,1), (-1,1,1,1,1,-1,-1,-1,-1), (1,-1,1,1,-1,1,-1,-1), (-1,-1,-1,-1,-1,-1,-1,-1), (-1,-1,1,1,1,-1,-1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,1,1,1,-1,-1,-1,-1), (1,-1,1,1,-1,1,-1,-1), (-1,-1,1,1,1,-1,-1,1,1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,1,1,1,-1,-1,-1,-1), (1,-1,1,1,-1,1,-1,-1), (-1,-1,1,1,-1,-1,1,1,1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,1,1,1,-1,-1,-1,-1), (1,-1,1,1,-1,1,-1,-1), (-1,-1,-1,-1,-1,-1,-1,-1), (-1,-1,1,1,1,-1,-1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,1,1,1,-1,-1,-1,-1), (1,-1,1,1,-1,1,-1,-1), (-1,-1,-1,-1,-1,-1,-1,-1), (1,1,-1,-1,1,1,-1,-1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,-1,1), (-1,1,1,1,1,-1,-1,-1,-1), (1,-1,1,1,-1,1,-1,-1), (-1,-1,1,1,1,-1,-1,1,1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,-1,1), (-1,1,1,1,1,-1,-1,-1,-1), (1,-1,1,1,-1,1,-1,-1), (-1,-1,-1,-1,-1,-1,-1,-1), (-1,-1,1,1,1,-1,-1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,1,1,1,-1,-1,-1,-1), (1,-1,1,1,-1,1,-1,-1), (-1,-1,-1,-1,-1,-1,-1,-1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,1,1,1,-1,-1,-1,-1), (1,-1,1,1,-1,1,-1,-1), (-1,-1,-1,-1,-1,-1,-1,-1), (-1,-1,1,1,1,-1,-1,1,1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,-1,-1,1,-1,1,1), (1,-1,-1,-1,-1,1,1,1), (-1,-1,-1,-1,-1,-1,-1,-1), (1,1,-1,-1,1,1,-1,-1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,-1,1), (-1,1,1,1,1,-1,-1,-1,-1), (1,-1,1,1,-1,1,-1,-1), (-1,-1,1,1,1,-1,-1,1,1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,-1,-1,1,-1,1,1), (1,-1,-1,-1,-1,1,1,1), (-1,-1,-1,-1,-1,-1,-1,-1), (1,1,-1,-1,1,1,-1,-1,1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,-1,1), (-1,1,-1,-1,1,-1,1,1), (-1,1,1,1,1,-1,-1,-1,-1), (-1,-1,-1,-1,-1,-1,-1,-1), (-1,-1,1,1,1,-1,-1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,-1,1), (-1,1,1,1,1,-1,-1,-1,-1), (1,-1,1,1,-1,1,-1,-1), (-1,-1,-1,-1,-1,-1,-1,-1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,1,1,1,-1,-1,-1,-1), (1,-1,1,1,-1,1,-1,-1), (-1,-1,-1,-1,-1,-1,-1,-1), (1,1,-1,-1,1,1,-1,-1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,-1,1), (-1,1,-1,-1,1,-1,1,1), (-1,1,1,1,1,-1,-1,-1,-1), (1,1,1,1,1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,1,1), (-1,1,1,-1,1,-1,1,1), (-1,1,1,1,1,-1,-1,-1,-1), (-1,-1,-1,-1,-1,-1,-1,-1), (-1,-1,1,1,1,-1,-1,1,1,1)}, {(-1,-1,-1,1,1,1,-1,1), (-1,1,1,1,1,-1,1,-1,-1), (1,-1,1,1,1,-1,-1,-1,-1), (1,1,-1,1,-1,-1,-1,1), (-1,1,-1,-1,1,-1,1,1), (-1,-1,-1,-1,-1,-1,-1,-1), (-1,-1,1,1,1,-1,-1,1,1), (1,1,1,1,1,1,1,1)}, {(-1,-1,-1,1,1,1,-1,1), (-1,1,1,1,1,-1,1,-1,-1), (1,-1,1,1,1,1,-1,-1,-1,-1), (1,1,-1,1,-1,-1,-1,1), (-1,1,1,-1,1,-1,1,1,-1), (-1,-1,1,1,1,-1,-1,1,1), (-1,-1,-1,-1,-1,-1,-1,-1), (-1,-1,1,1,1,-1,-1,1,1,1)}, {(-1,-1,-1,1,1,1,-1,1), (-1,1,1,1,1,-1,1,-1,-1), (1,-1,1,1,1,1,-1,-1,-1,-1), (1,1,-1,1,-1,-1,-1,1), (-1,1,1,-1,1,-1,1,1,-1), (1,-1,-1,1,1,-1,1,1,-1), (-1,-1,-1,-1,-1,-1,-1,-1), (-1,-1,1,1,1,-1,-1,1,1,1)}, {(-1,-1,-1,1,1,1,-1,1), (-1,1,1,1,1,-1,1,-1,-1), (1,-1,1,1,1,1,-1,-1,-1,-1), (1,1,-1,1,-1,-1,1,1), (-1,1,1,-1,1,1,-1,1,1,-1), (1,-1,-1,1,1,-1,1,1,-1), (-1,-1,1,1,1,-1,-1,1,1,1), (1,1,1,1,1,1,1,1)}, {(-1,-

1,-1,1,1,1,-1,1), (-1,1,1,1,-1,1,-1,-1), (1,-1,1,1,1,-1,-1,-1), (1,1,-1,1,-1,-1,-1,1), (-1,1,-1,1,1,-1,1,-1), (1,-1,-1,1,-1,1,1,-1), (1,1,-1,-1,1,1,-1,-1), (1,1,1,1,1,1,1,1)}, {(-1,-1,-1,1,1,1,-1,1), (-1,1,1,1,-1,1,-1,-1), (1,-1,1,1,1,-1,-1,-1), (1,1,-1,1,-1,-1,-1,1), (-1,1,1,-1,1,-1,-1,1), (1,-1,1,-1,-1,1,-1,1), (-1,-1,-1,-1,-1,-1,-1,-1), (-1,-1,1,1,1,-1,1,1,1)}, {(-1,-1,-1,1,1,1,-1,1), (-1,1,1,1,-1,1,-1,-1), (1,-1,1,1,1,-1,-1,-1), (1,1,-1,1,-1,-1,-1,1), (-1,1,1,-1,1,-1,-1,1), (1,-1,1,-1,1,-1,1,-1), (-1,-1,-1,-1,-1,-1,-1,-1), (1,1,-1,-1,1,1,-1,-1)}, {(-1,-1,-1,1,1,1,-1,1), (-1,1,1,1,-1,1,-1,-1), (1,-1,1,1,1,-1,-1,-1), (1,1,-1,1,-1,-1,-1,1), (-1,1,1,-1,1,-1,-1,1), (1,-1,1,-1,-1,1,-1,1), (-1,-1,1,1,1,-1,1,1,1), (1,1,1,1,1,1,1,1)}, {(-1,-1,-1,1,1,1,-1,1), (-1,1,1,1,-1,1,-1,-1), (1,-1,1,1,1,-1,-1,-1), (1,1,-1,-1,1,1,-1,1), (-1,1,1,-1,1,-1,-1,1), (1,-1,1,-1,-1,1,-1,1), (1,1,1,1,1,1,1,1)}, {(-1,-1,-1,1,1,1,-1,1), (-1,1,1,1,-1,1,-1,-1), (1,-1,1,1,1,-1,-1,-1), (1,1,-1,1,-1,-1,-1,1), (1,-1,-1,1,-1,1,1,1,-1), (1,-1,1,-1,1,1,-1,1), (-1,-1,-1,-1,-1,-1,-1,-1), (-1,-1,1,1,1,-1,1,1,1)}, {(-1,-1,-1,1,1,1,-1,1), (-1,1,1,1,-1,1,-1,-1), (1,-1,1,1,1,-1,-1,-1), (1,1,-1,1,-1,-1,-1,1), (1,-1,-1,1,-1,1,1,1,-1), (1,-1,1,-1,-1,1,1,-1), (-1,-1,-1,-1,-1,-1,-1,-1), (1,1,-1,-1,1,1,-1,-1)}, {(-1,-1,-1,1,1,1,-1,1), (-1,1,1,1,-1,1,-1,-1), (1,-1,1,1,1,-1,-1,-1), (1,1,-1,1,-1,-1,-1,1), (1,-1,-1,1,-1,1,1,1,-1), (1,-1,1,-1,-1,1,1,-1), (-1,-1,1,1,1,-1,1,1,1), (1,1,1,1,1,1,1,1)}, {(-1,-1,-1,1,1,1,-1,1), (-1,1,1,1,-1,1,-1,-1), (1,-1,1,1,1,-1,-1,-1), (1,1,-1,1,-1,-1,-1,1), (1,-1,-1,1,-1,1,1,1,-1), (1,-1,1,-1,-1,1,1,-1), (1,1,1,1,1,1,1,1)}, {(-1,-1,-1,1,1,1,-1,1), (1,-1,-1,-1,1,1,-1,1), (1,-1,1,1,1,1,-1,-1,-1), (1,1,-1,1,-1,-1,-1,1), (-1,1,-1,1,1,1,-1,1,-1), (-1,1,1,1,-1,1,-1,-1,-1), (-1,-1,-1,-1,-1,-1,-1,-1), (-1,-1,1,1,1,-1,1,1,1)}, {(-1,-1,-1,1,1,1,-1,1), (1,-1,-1,-1,1,1,-1,1), (1,-1,1,1,1,1,-1,-1,-1), (1,1,-1,1,-1,-1,-1,1), (-1,1,1,-1,1,1,-1,1,-1), (-1,1,1,1,-1,1,-1,-1), (1,1,1,1,1,1,1,1)}, {(-1,-1,-1,1,1,1,-1,1), (1,-1,-1,-1,1,1,-1,1), (1,-1,1,1,1,-1,-1,-1), (1,1,-1,-1,1,-1,-1,1), (-1,1,1,-1,1,1,-1,1,-1), (1,-1,1,-1,-1,1,1,-1), (-1,-1,-1,-1,-1,-1,-1,-1), (1,1,-1,-1,1,1,-1,-1)}, {(-1,-1,-1,1,1,1,-1,1), (1,-1,-1,-1,1,1,-1,1), (1,-1,1,1,1,1,-1,-1,-1), (1,1,-1,1,-1,-1,-1,1), (-1,1,1,-1,1,1,-1,1,-1), (1,-1,1,-1,-1,1,1,-1), (-1,-1,1,1,1,-1,1,1,1), (1,1,1,1,1,1,1,1)}, {(-1,-1,-1,1,1,1,-1,1), (1,-1,-1,-1,1,1,-1,1), (1,-1,1,1,1,-1,-1,-1), (1,1,-1,1,-1,-1,-1,1), (-1,1,1,-1,1,1,-1,1,-1), (1,-1,1,-1,-1,1,1,-1), (1,1,1,1,1,1,1,1)}, {(-1,-1,-1,1,1,1,-1,1), (1,-1,-1,-1,1,-1,1,1), (1,-1,1,1,1,1,-1,-1,-1), (1,1,-1,1,-1,-1,-1,1), (-1,1,1,-1,1,1,-1,1,-1), (1,-1,1,-1,-1,1,1,-1), (-1,-1,-1,-1,-1,-1,-1,-1), (-1,-1,1,1,1,-1,1,1,1)}, {(-1,-1,-1,1,1,1,-1,1), (1,-1,-1,-1,1,1,-1,1), (1,-1,1,1,1,1,-1,-1,-1), (1,1,-1,1,-1,-1,-1,1), (-1,1,1,-1,1,-1,-1,1), (1,-1,1,-1,-1,1,1,-1), (-1,-1,-1,-1,-1,-1,-1,-1), (1,1,-1,-1,1,1,-1,-1)}, {(-1,-1,-1,1,1,1,-1,1), (1,-1,-1,-1,1,1,-1,1), (1,-1,1,1,1,1,-1,-1,-1), (1,1,-1,1,-1,-1,-1,1), (-1,1,1,-1,1,-1,-1,1), (-1,1,1,1,-1,1,-1,-1), (1,1,1,1,1,1,1,1)}, {(-1,-1,-1,1,1,1,-1,1), (1,-1,-1,-1,1,1,-1,1), (1,-1,1,1,1,1,-1,-1,-1), (1,1,-1,1,-1,-1,-1,1), (1,-1,-1,1,-1,1,1,1,-1), (1,-1,1,-1,1,1,-1,1), (-1,-1,-1,-1,-1,-1,-1,-1), (-1,-1,1,1,1,-1,1,1,1)}, {(-1,-1,-1,1,1,1,-1,1), (1,-1,-1,-1,1,1,-1,1), (1,-1,1,1,1,1,-1,-1,-1), (1,1,-1,1,-1,-1,-1,1), (1,-1,-1,1,-1,1,1,1,-1), (1,-1,1,-1,-1,1,1,-1), (-1,-1,-1,-1,-1,-1,-1,-1), (1,1,-1,1,1,1,-1,1,-1)}, {(-1,-1,-1,1,1,1,-1,1), (1,-1,-1,-1,1,1,-1,1), (1,-1,1,1,1,1,-1,-1,-1), (1,1,-1,1,-1,-1,-1,1), (-1,1,1,-1,1,-1,-1,1), (-1,1,1,1,-1,1,-1,-1), (1,1,1,1,1,1,1,1)}, {(-1,-1,-1,1,1,1,-1,1), (1,-1,-1,1,1,-1,1,-1), (1,-1,1,1,-1,1,-1,-1,1), (1,-1,1,1,-1,1,1,-1), (1,-1,1,-1,-1,1,-1,1), (-1,1,1,1,1,1,-1,-1,-1), (-1,-1,-1,-1,-1,-1,-1,-1), (1,1,-1,-1,1,1,-1,-1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (-1,1,1,1,1,-1,-1,-1,-1), (1,1,1,1,1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (-1,1,1,1,1,-1,-1,-1,-1), (1,1,1,1,1,1,1,1)}, {(-1,-1,-1,1,1,1,-1,1), (1,-1,-1,1,1,-1,1,-1), (1,-1,1,1,-1,-1,1,-1), (1,1,-1,1,-1,-1,-1,1), (-1,1,-1,-1,1,-1,-1,1,1), (-1,1,1,1,1,-1,-1,-1,-1), (-1,-1,-1,-1,-1,-1,-1,-1), (-1,-1,1,1,1,-1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (-1,1,1,1,1,-1,-1,-1,-1), (-1,-1,-1,-1,-1,-1,-1,-1), (1,1,-1,-1,1,1,-1,-1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (-1,1,1,1,1,-1,-1,-1,-1), (1,1,1,1,1,1,1,1)}, {(-1,-1,-1,1,1,1,-1,1), (1,-1,-1,1,1,-1,1,-1), (1,-1,1,1,-1,-1,1,-1), (1,1,-1,1,-1,-1,-1,1), (-1,1,-1,-1,1,-1,-1,1,1), (-1,1,1,-1,1,-1,-1,1), (-1,1,1,1,1,1,1,-1,-1,-1), (1,1,-1,-1,1,1,-1,-1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (-1,1,1,1,1,-1,-1,-1,-1), (-1,-1,-1,-1,-1,-1,-1,-1), (-1,-1,1,1,1,-1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,1,1,1,-1,-1,-1), (1,-1,1,1,-1,1,1,-1,-1,-1), (1,1,-1,-1,1,1,-1,1,-1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,-1,-1,1,-1,-1,1,1), (-1,1,1,1,1,-1,-1,-1,-1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,-1,-1,1,-1,-1,1,1), (1,-1,1,-1,-1,1,1,1,-1), (-1,-1,-1,-1,-1,-1,-1,-1), (-1,-1,1,1,1,-1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (1,-1,-1,-1,-1,-1,-1,-1), (1,1,1,1,1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (-1,1,1,1,1,-1,-1,-1,-1), (1,1,1,1,1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,1,1,1,1,-1,-1,-1), (1,-1,1,-1,-1,1,1,-1), (-1,-1,-1,-1,-1,-1,-1,-1), (1,1,-1,-1,1,1,-1,-1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,-1,-1,1,-1,-1,1,1), (-1,1,1,1,1,-1,-1,-1,-1), (1,1,-1,-1,1,1,-1,-1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,1,1,1,-1,-1,-1), (1,-1,1,1,-1,1,1,-1,-1,-1), (-1,-1,-1,-1,-1,-1,-1,-1), (-1,-1,1,1,1,-1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (1,-1,1,-1,-1,1,1,1,-1), (1,1,1,1,1,1,1,1)}, {(-1,-1,-1,1,1,1,-1,1), (1,-1,1,1,1,-1,1,-1,-1), (1,-1,1,-1,1,-1,-1,1,1), (1,1,-1,1,-1,-1,-1,1), (-1,1,1,1,1,1,-1,-1,-1), (1,-1,1,-1,-1,1,1,1,-1), (-1,-1,-1,-1,-1,-1,-1,-1), (-1,-1,1,1,1,-1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,-1,-1,1,-1,-1,1,1), (1,-1,-1,-1,-1,-1,-1,-1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,1,1,1,-1,-1,-1), (-1,1,1,1,1,-1,-1,-1,-1), (-1,-1,-1,-1,-1,-1,-1,-1), (-1,-1,1,1,1,-1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,1,1,1,1,-1,-1,-1), (-1,1,1,1,1,1,-1,-1,-1,-1), (-1,-1,-1,-1,-1,-1,-1,-1), (1,1,-1,-1,1,1,-1,-1,-1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,-1,-1,1,-1,-1,1,1), (-1,1,1,1,1,1,-1,-1,-1), (-1,-1,-1,-1,-1,-1,-1,-1), (1,1,1,1,1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,-1,-1,1,-1,-1,1,1), (-1,1,1,1,1,-1,-1,-1,-1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,1,1,1,-1,-1,-1), (-1,1,1,1,1,1,-1,-1,-1,-1), (-1,-1,-1,-1,-1,-1,-1,-1), (-1,-1,1,1,1,-1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,1,1,1,-1,-1,-1), (-1,1,1,1,1,1,-1,-1,-1,-1), (1,1,-1,-1,1,1,-1,1,-1,-1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,-1,1,-1,-1,1), (1,-1,-1,-1,-1,-1,-1,-1), (-1,-1,1,1,1,-1,1,1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,1,-1,1,-1,-1,1), (-1,1,1,1,1,-1,-1,-1,-1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,-1,1,-1,-1,1), (1,-1,-1,-1,-1,-1,-1,-1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,1,1,1,-1,-1,-1), (1,-1,1,1,-1,1,1,-1,-1,-1), (1,1,-1,-1,1,1,-1,1,-1,-1), (-1,1,1,1,1,-1,-1,-1,-1), (1,-1,1,1,-1,1,-1,-1,1), (1,1,-1,1,-1,-1,-1,1), (-1,1,1,1,1,1,-1,-1,-1), (-1,1,1,1,1,-1,-1,-1,-1), (1,1,-1,-1,1,1,-1,-1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,1,1,1,-1,-1,-1,-1), (1,-1,1,1,-1,1,1,-1,-1,-1), (-1,-1,-1,-1,-1,-1,-1,-1), (1,1,-1,-1,1,1,-1,-1,-1,1)}, {(-1,-1,-1,1,1,1,-1,1), (1,-1,-1,1,1,-1,1,-1), (1,-1,1,1,-1,1,-1,-1,1), (1,1,-1,1,-1,-1,-1,1), (-1,1,1,1,1,1,-1,-1,-1), (1,-1,1,1,-1,1,1,-1,-1,-1), (-1,1,1,1,1,-1,-1,-1,-1), (1,-1,1,1,-1,1,-1,-1,1), (-

1,-1,1,1,-1,-1,1,1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (-1,1,1,1,1,-1,-1,-1), (1,-1,1,1,-1,1,-1,-1), (1,1,-1,-1,1,1,-1,-1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (1,-1,-1,-1,-1,1,1,1), (1,-1,1,1,-1,-1,-1,1), (-1,-1,-1,-1,-1,-1,-1,-1), (-1,-1,1,1,-1,-1,1,1)}, {(-1,-1,-1,1,1,1,-1,1), (1,-1,-1,1,1,-1,1,-1), (1,-1,1,-1,1,1,-1,1), (1,1,-1,1,-1,-1,-1,1), (1,-1,-1,-1,-1,1,1,1), (1,-1,1,1,-1,1,-1,-1), (-1,-1,-1,-1,-1,-1,-1,-1), (1,1,-1,1,1,1,-1,-1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (1,-1,-1,-1,1,1,1,1), (1,-1,1,1,-1,1,-1,-1), (-1,-1,1,1,-1,-1,1,1), (1,1,1,1,1,1,1,1)}, {(-1,-1,-1,1,1,1,-1,1), (1,-1,-1,1,1,-1,1,-1), (1,-1,1,-1,1,-1,-1,1), (1,1,-1,1,-1,-1,-1,1), (1,-1,-1,-1,-1,1,1,1), (1,-1,1,1,1,-1,-1,-1), (1,1,-1,-1,1,1,-1,-1), (1,1,1,1,1,1,1,1)}, {(-1,-1,1,1,-1,1,-1,1,1), (-1,-1,1,1,1,-1,1,-1,1), (-1,1,1,-1,1,1,1,-1,1), (-1,1,1,1,1,-1,-1,1,1), (-1,-1,1,1,1,1,1,-1,1), (-1,1,1,1,1,1,-1,-1,1), (-1,-1,1,-1,-1,-1,-1,-1,1), (-1,1,1,1,-1,-1,1,1,-1)}, {(-1,-1,1,-1,1,1,-1,1), (-1,-1,1,1,-1,1,-1,1), (-1,1,1,-1,-1,1,1,-1,1), (-1,1,1,-1,1,-1,-1,1,1), (-1,-1,-1,1,1,1,1,-1), (-1,1,1,1,1,-1,-1,-1), (-1,-1,-1,-1,-1,-1,-1,-1), (1,-1,-1,1,1,1,-1,1,1)}, {(-1,-1,1,1,-1,1,-1,1,1), (-1,-1,1,1,1,-1,1,-1,1), (-1,1,1,-1,1,1,1,1,-1), (-1,1,1,-1,-1,1,1,1,1), (-1,-1,1,1,1,1,1,1,-1), (-1,1,1,1,1,1,-1,-1,1), (1,1,1,1,1,1,1,1,1)}, {(-1,-1,1,-1,1,-1,1,1,1), (-1,-1,1,1,1,-1,1,-1,1), (-1,1,1,-1,-1,1,1,1,-1), (-1,1,1,-1,1,-1,-1,1,1), (-1,-1,-1,1,1,1,1,1,-1), (1,-1,-1,-1,-1,1,1,1), (-1,-1,-1,-1,-1,-1,-1,-1), (1,-1,-1,1,1,1,-1,-1,1)}, {(-1,-1,1,1,-1,1,-1,1,1), (-1,-1,1,1,1,-1,1,-1,1), (-1,1,1,-1,1,1,1,-1,1), (-1,1,1,-1,-1,1,1,-1,1), (-1,-1,1,1,1,1,1,-1,1), (1,-1,-1,-1,-1,1,1,1), (-1,1,1,1,-1,1,1,1,-1), (1,1,1,1,1,1,1,1,1)}, {(-1,-1,1,1,-1,1,-1,1,1), (-1,-1,1,1,1,-1,1,-1,1), (-1,1,1,-1,-1,1,1,1,-1), (-1,1,1,1,1,1,1,-1,-1,1), (-1,-1,1,1,1,1,1,-1,1), (1,-1,-1,-1,-1,1,1,1), (1,-1,-1,1,1,1,-1,-1,1), (1,1,1,1,1,1,1,1,1)}, {(-1,-1,1,1,-1,1,-1,1,1), (-1,-1,1,1,1,-1,1,-1,1), (-1,1,1,-1,1,1,1,-1,1), (-1,1,1,-1,1,1,-1,-1,1), (-1,1,1,1,1,1,-1,-1,1), (1,1,1,1,1,-1,-1,-1,1), (-1,-1,-1,-1,-1,-1,-1,-1), (-1,1,1,1,-1,1,1,1,-1)}, {(-1,-1,1,1,-1,1,-1,1,1), (-1,-1,1,1,1,-1,1,-1,1), (-1,1,1,-1,1,1,1,-1,1), (-1,1,1,-1,1,-1,-1,1,1), (-1,1,1,1,1,1,-1,-1,-1,1), (1,1,1,1,-1,-1,-1,-1,1), (-1,-1,-1,-1,-1,-1,-1,-1,-1), (1,-1,-1,1,1,1,-1,-1,1)}, {(-1,-1,1,1,-1,1,-1,1,1), (-1,-1,1,1,-1,1,-1,1,1), (-1,1,1,-1,1,1,1,-1,1), (-1,1,1,-1,1,-1,-1,1,1), (-1,1,1,1,1,1,-1,-1,1), (1,1,1,1,-1,-1,-1,-1,1), (1,-1,-1,1,1,-1,-1,1), (1,1,1,1,1,1,1,1,1)}, {(-1,-1,1,1,-1,1,-1,1,1), (-1,-1,1,1,1,-1,1,-1,1), (-1,1,1,-1,1,1,1,-1,1), (-1,1,1,-1,1,-1,-1,1,1,1), (1,-1,-1,-1,-1,1,1,1,1), (1,1,1,1,-1,-1,-1,-1,1), (-1,-1,-1,-1,-1,-1,-1,-1), (-1,1,1,1,-1,1,1,1,-1)}, {(-1,-1,1,1,-1,1,-1,1,1), (-1,-1,1,1,1,-1,1,-1,1), (-1,1,1,-1,1,1,1,-1,1), (-1,1,1,-1,1,-1,-1,1,1), (1,-1,-1,-1,-1,1,1,1,1), (1,1,1,1,-1,-1,-1,-1,1), (1,-1,-1,1,1,1,-1,-1,1), (1,1,1,1,1,1,1,1,1)}, {(-1,-1,1,1,-1,1,-1,1,1), (-1,-1,1,1,1,-1,1,-1,1), (-1,1,1,-1,1,1,1,-1,1), (1,-1,-1,-1,-1,1,1,1,1), (1,1,1,1,-1,-1,-1,-1,1), (1,-1,-1,1,1,1,-1,-1,1), (1,1,1,1,1,1,1,1,1)}, {(-1,-1,1,1,-1,1,-1,1,1), (-1,-1,1,1,-1,1,-1,1,1), (-1,1,1,-1,1,1,1,-1,1), (1,-1,1,-1,1,1,1,-1,-1), (-1,-1,-1,1,1,1,1,1,-1), (-1,1,1,1,1,1,-1,-1,-1,-1), (-1,-1,-1,-1,-1,-1,-1,-1), (-1,1,1,1,-1,-1,1,1,1,-1)}, {(-1,-1,1,1,-1,1,-1,1,1), (-1,-1,1,1,1,-1,1,-1,1), (-1,1,1,-1,1,1,1,-1,1), (1,-1,1,-1,1,1,1,-1,-1), (-1,-1,1,1,1,1,1,-1,-1,-1), (-1,-1,-1,-1,-1,-1,-1,-1), (1,-1,-1,1,1,1,-1,-1,1)}, {(-1,-1,1,1,-1,1,-1,1,1), (-1,-1,1,1,-1,1,-1,1,-1), (-1,1,1,-1,1,1,1,-1,1), (1,-1,1,1,-1,1,1,-1,-1), (-1,-1,-1,1,1,1,1,1,-1), (1,1,1,1,1,-1,-1,-1,-1,1), (1,-1,-1,1,1,1,-1,-1,1), (1,1,1,1,1,1,1,1,1)}, {(-1,-1,1,1,-1,1,-1,1,1), (-1,-1,1,1,1,-1,1,-1,1), (-1,1,1,-1,-1,1,1,1,-1), (1,-1,1,-1,1,1,1,-1,-1), (-1,1,1,1,1,1,-1,-1,1), (1,-1,-1,-1,-1,-1,-1,-1,-1), (1,-1,1,1,1,-1,-1,1,-1), (-1,1,1,1,-1,-1,1,1,1,-1)}, {(-1,-1,1,1,-1,1,-1,1,1), (-1,-1,1,1,-1,1,-1,1,-1), (-1,1,1,-1,1,1,1,-1,1), (1,-1,1,-1,1,1,1,-1,-1), (-1,-1,1,1,1,1,1,-1,-1,-1), (-1,-1,-1,-1,-1,-1,-1,-1), (1,-1,-1,1,1,1,-1,-1,1)}, {(-1,-1,1,1,-1,1,-1,1,1), (-1,-1,1,1,-1,1,-1,1,-1), (-1,1,1,-1,1,1,1,-1,1), (1,-1,1,-1,1,1,1,-1,-1), (-1,-1,-1,1,1,1,1,1,-1), (1,1,1,1,1,-1,-1,-1,-1,1), (1,-1,-1,1,1,1,-1,-1,1), (1,1,1,1,1,1,1,1,1)}, {(-1,-1,1,1,-1,1,-1,1,1), (-1,-1,1,1,-1,1,-1,1,-1), (-1,1,1,-1,-1,1,1,1,-1), (1,-1,1,-1,1,1,1,-1,-1), (-1,-1,-1,1,1,1,1,1,-1), (1,1,1,1,-1,-1,-1,-1,1), (-1,-1,-1,-1,-1,-1,-1,-1), (-1,1,1,1,-1,-1,1,1,1,-1)}, {(-1,-1,1,1,-1,1,-1,1,1), (-1,-1,1,1,-1,1,-1,1,-1), (-1,1,1,-1,1,1,1,-1,-1), (1,-1,1,-1,1,1,1,-1,-1), (-1,1,1,1,1,1,-1,-1,-1), (1,-1,-1,-1,-1,1,1,1,1), (1,-1,1,1,1,-1,-1,1,-1), (1,1,1,1,1,1,1,1,1)}, {(-1,-1,1,1,-1,1,-1,1,1), (-1,-1,1,1,-1,1,-1,1,-1), (-1,1,1,-1,1,1,1,-1,1), (1,-1,1,-1,1,1,1,-1,-1), (-1,-1,-1,1,1,1,1,1,-1), (1,1,1,1,-1,-1,-1,-1,1), (1,-1,-1,-1,-1,-1,-1,-1,-1), (1,-1,-1,1,1,1,-1,-1,1)}, {(-1,-1,1,1,-1,1,-1,1,1), (-1,-1,1,1,1,-1,1,-1,-1), (-1,1,1,-1,1,1,1,-1,1), (1,-1,1,1,-1,1,1,-1,-1), (-1,1,1,1,1,1,-1,-1,-1), (1,1,1,1,-1,-1,-1,-1,1), (1,-1,-1,1,1,1,-1,-1,1), (1,1,1,1,1,1,1,1,1)}, {(-1,-1,1,1,-1,1,-1,1,1), (-1,-1,1,1,-1,1,-1,1,-1), (-1,1,1,-1,1,1,1,-1,1), (1,-1,1,-1,1,1,1,-1,-1), (-1,-1,-1,1,1,1,1,1,-1), (1,1,1,1,-1,-1,-1,-1,1), (1,-1,-1,1,1,1,-1,-1,1), (1,1,1,1,1,1,1,1,1)}, {(-1,-1,1,1,-1,1,-1,1,1), (-1,-1,1,1,-1,1,-1,1,-1), (-1,1,1,-1,-1,1,1,1,-1), (1,-1,1,-1,1,1,1,-1,-1), (-1,-1,1,1,1,1,1,-1,-1), (1,-1,-1,-1,-1,1,1,1,1), (1,-1,1,1,1,-1,-1,1,-1), (1,1,1,1,1,1,1,1,1)}, {(-1,-1,1,1,-1,1,-1,1,1), (-1,-1,1,1,-1,1,-1,1,-1), (-1,1,1,-1,1,1,1,-1,1), (1,-1,1,-1,1,1,1,-1,-1), (1,-1,1,-1,-1,1,1,1,1,-1), (1,1,1,-1,-1,-1,-1,1,1), (-1,-1,-1,-1,-1,-1,-1,-1,-1), (-1,1,1,1,-1,-1,1,1,1,-1)}, {(-1,-1,1,1,-1,1,-1,1,1), (-1,-1,1,1,-1,1,-1,1,-1), (-1,1,1,-1,1,1,1,-1,1), (1,-1,1,-1,1,1,1,-1,-1), (1,-1,1,-1,-1,-1,1,1,1), (1,1,1,-1,-1,-1,-1,1,1), (-1,-1,-1,-1,-1,-1,-1,-1,-1), (1,-1,-1,1,1,1,-1,-1,1)}, {(-1,-1,1,1,-1,1,-1,1,1), (-1,-1,1,1,1,-1,1,-1,1), (-1,1,1,-1,1,1,1,-1,1), (1,-1,1,-1,1,1,1,-1,-1), (1,1,1,-1,-1,-1,-1,1,1), (-1,-1,-1,-1,-1,-1,-1,-1), (1,-1,-1,1,1,1,-1,-1,1)}

(1,-1,1,-1,1,1,-1,-1), (1,-1,-1,-1,-1,1,1,1), (1,1,1,-1,-1,-1,-1,1), (-1,1,1,-1,-1,1,1,-1), (1,1,1,1,1,1,1,1)}, {(-1,-1,1,-1,1,-1,1,1), (-1,-1,1,1,-1,1,-1,1), (-1,1,-1,-1,1,1,1,-1,1), (1,-1,1,-1,1,1,1,-1,-1), (1,-1,-1,-1,-1,1,1,1), (1,1,1,-1,-1,-1,-1,1), (1,-1,-1,1,1,-1,-1,1), (1,1,1,1,1,1,1,1)}, {(-1,-1,1,-1,1,-1,1,1), (-1,-1,1,1,-1,1,-1,1), (-1,1,-1,1,-1,1,1,1), (1,-1,1,1,1,-1,-1,-1), (-1,-1,-1,1,1,1,1,-1), (-1,1,1,1,1,-1,-1,-1), (-1,-1,-1,-1,-1,-1,-1,-1), (-1,1,1,-1,-1,1,1,-1)}, {(-1,-1,1,-1,1,-1,1,1), (-1,-1,1,1,-1,1,-1,1), (-1,1,-1,1,-1,1,1,1), (1,-1,1,1,1,-1,1,1,-1), (-1,-1,1,1,1,1,1,-1), (-1,1,1,1,1,-1,-1,-1), (-1,-1,-1,-1,-1,-1,-1,-1), (1,-1,-1,1,1,-1,-1,1)}, {(-1,-1,1,-1,1,-1,1,1), (-1,1,1,-1,1,-1,-1,1), (-1,1,1,-1,1,-1,1,1,1), (1,-1,1,1,1,-1,-1,1,-1), (-1,-1,-1,1,1,1,1,-1), (-1,1,1,1,1,-1,-1,-1), (-1,1,1,1,1,1,1,1)}, {(-1,-1,1,-1,1,-1,1,1), (-1,-1,1,1,-1,1,-1,1), (-1,1,1,-1,1,-1,1,1,1), (1,-1,1,1,1,-1,-1,1,-1), (-1,-1,-1,1,1,1,1,-1), (-1,1,1,1,1,-1,-1,-1), (1,-1,-1,1,1,1,-1,-1,1), (1,1,1,1,1,1,1,1)}, {(-1,-1,1,-1,1,-1,1,1), (-1,-1,1,1,-1,1,-1,1), (-1,1,-1,1,-1,1,1,1), (1,-1,1,1,1,-1,-1,1,-1), (-1,-1,-1,1,1,1,1,-1), (1,-1,-1,-1,-1,1,1,1), (-1,1,1,-1,-1,1,1,-1), (-1,1,1,1,-1,-1,1,1,-1)}, {(-1,-1,1,-1,1,-1,1,1), (-1,-1,1,1,-1,1,-1,1), (-1,1,1,-1,1,-1,1,1,1), (1,-1,1,1,1,-1,-1,1,-1), (-1,-1,1,1,1,1,1,-1), (1,-1,-1,-1,-1,1,1,1), (-1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (-1,1,-1,1,-1,1,1,1), (1,-1,1,1,1,-1,-1,1,-1), (-1,-1,1,1,1,1,1,-1), (1,-1,-1,-1,-1,1,1,1), (-1,1,1,-1,-1,1,1,-1), (1,1,1,1,1,1,1,1)}, {(-1,-1,1,-1,1,-1,1,1), (-1,-1,1,1,-1,1,-1,1), (-1,1,-1,1,-1,1,1,1), (1,-1,1,1,1,-1,-1,1,-1), (-1,-1,-1,1,1,1,1,-1), (1,-1,-1,-1,-1,1,1,1), (1,-1,-1,-1,-1,-1,-1,-1), (-1,1,1,1,-1,-1,1,1,-1)}, {(-1,-1,1,-1,1,-1,1,1), (-1,-1,1,1,-1,1,-1,1), (-1,1,-1,1,-1,1,1,1), (1,-1,1,1,1,-1,-1,1,-1), (-1,1,1,1,1,-1,-1,-1), (1,1,1,-1,-1,-1,-1,1), (-1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (-1,1,-1,1,-1,1,1,1), (1,-1,1,1,1,-1,-1,1,-1), (-1,1,1,1,1,-1,-1,-1), (1,1,1,1,1,1,1,1)}, {(-1,-1,1,-1,1,-1,1,1), (-1,-1,1,1,-1,1,-1,1), (-1,1,1,-1,1,-1,1,1,1), (1,-1,1,1,1,-1,-1,1,-1), (-1,-1,-1,1,1,1,1,-1), (1,1,1,-1,-1,-1,-1,1), (-1,-1,-1,-1,-1,-1,-1,-1), (1,-1,1,1,1,-1,-1,1)}, {(-1,-1,1,-1,1,-1,1,1), (-1,-1,1,1,-1,1,-1,1), (-1,1,1,-1,1,-1,1,1,1), (1,-1,1,1,1,-1,1,1,-1), (-1,1,1,1,1,-1,-1,-1), (1,1,1,1,1,1,1,1)}, {(-1,-1,1,-1,1,-1,1,1), (-1,-1,1,1,-1,1,-1,1), (-1,1,-1,1,-1,1,1,1), (1,-1,1,1,1,-1,-1,1,-1), (-1,1,1,1,1,-1,-1,-1), (1,1,1,1,1,1,1,1)}, {(-1,-1,1,-1,1,-1,1,1), (-1,-1,1,1,-1,1,-1,1), (-1,1,-1,1,-1,1,1,1), (1,-1,1,1,1,-1,-1,-1), (-1,-1,1,1,1,1,1,-1), (-1,1,1,1,1,-1,-1,-1), (-1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (1,-1,1,1,-1,1,-1,1), (1,-1,1,1,1,-1,-1,1,-1), (-1,-1,1,1,1,1,1,-1), (1,-1,-1,-1,-1,1,1,1), (-1,1,1,-1,-1,1,1,-1), (1,1,1,1,1,1,1,1)}, {(-1,-1,1,-1,1,-1,1,1), (-1,-1,1,1,-1,1,-1,1), (-1,1,-1,1,-1,1,1,1), (1,-1,1,1,1,-1,-1,1,-1), (-1,-1,1,1,1,1,1,-1), (-1,-1,-1,-1,-1,-1,-1,-1), (-1,1,1,1,-1,1,1,1,-1)}, {(-1,-1,1,-1,1,-1,1,1), (-1,-1,1,1,-1,1,-1,1), (-1,1,-1,1,-1,1,1,1), (1,-1,1,1,1,-1,-1,1,-1), (-1,-1,-1,1,1,1,1,-1), (-1,1,1,1,1,-1,-1,-1), (-1,1,1,-1,-1,1,1,-1), (1,1,1,1,1,1,1,1)}, {(-1,-1,1,-1,1,-1,1,1), (-1,-1,1,1,-1,1,-1,1), (1,-1,1,1,-1,1,-1,1), (1,-1,1,1,-1,-1,1,-1), (-1,-1,1,1,1,1,1,-1), (1,-1,-1,-1,-1,1,1,1), (-1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (1,-1,1,1,-1,1,-1,-1), (1,-1,1,1,-1,-1,1,-1), (-1,-1,1,1,1,1,1,-1), (-1,1,1,1,1,-1,-1,-1), (-1,1,1,1,-1,1,1,1,-1), (1,1,1,1,1,1,1,1)}, {(-1,-1,1,-1,1,-1,1,1), (-1,-1,1,1,-1,1,-1,1), (1,-1,1,1,-1,1,-1,1), (1,-1,1,1,-1,-1,1,-1), (-1,-1,1,1,1,1,1,-1), (-1,1,1,1,1,-1,-1,-1), (1,-1,-1,-1,-1,1,1,1), (-1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (1,-1,1,1,-1,1,-1,1), (1,-1,1,1,-1,-1,1,-1), (-1,-1,-1,1,1,1,1,-1), (-1,1,1,1,1,-1,-1,-1), (-1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (1,-1,1,1,-1,1,-1,1), (1,-1,1,1,-1,-1,1,-1), (-1,-1,1,1,1,1,1,-1), (-1,1,1,1,1,-1,-1,-1), (1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (1,-1,1,1,-1,1,-1,-1), (1,-1,1,1,-1,-1,1,-1), (-1,-1,-1,1,1,1,1,-1), (1,-1,-1,-1,-1,1,1,1), (-1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (1,-1,1,1,-1,1,-1,-1), (1,-1,1,1,-1,-1,1,-1), (-1,-1,1,1,1,1,1,-1), (-1,1,1,1,1,-1,-1,-1), (1,-1,-1,-1,-1,1,1,1), (1,1,1,1,1,1,1,1)}, {(-1,-1,1,-1,1,-1,1,1), (-1,-1,1,1,-1,1,-1,1), (1,-1,1,1,-1,1,-1,1), (1,-1,1,1,-1,-1,1,-1), (-1,-1,-1,1,1,1,1,-1), (1,-1,-1,-1,-1,1,1,1), (-1,-1,-1,-1,-1,-1,-1,-1), (1,-1,-1,1,1,-1,-1,1)}, {(-1,-1,1,-1,1,-1,1,1), (-1,-1,1,1,-1,1,-1,1), (1,-1,1,1,-1,1,-1,1), (1,-1,1,1,-1,-1,1,-1), (-1,-1,1,1,1,1,1,-1), (1,1,1,1,1,1,1,1)}, {(-1,-1,1,-1,1,-1,1,1), (-1,-1,1,1,-1,1,-1,1), (1,-1,1,1,-1,1,-1,1), (1,-1,1,1,-1,-1,1,-1), (-1,-1,1,1,1,1,1,-1), (1,1,1,1,1,1,1,1)}, {(-1,-1,1,-1,1,-1,1,1), (-1,-1,1,1,-1,1,-1,1), (1,-1,1,1,-1,1,-1,1), (1,-1,1,1,-1,-1,1,-1), (-1,-1,-1,-1,-1,-1,-1,-1), (-1,1,1,1,-1,1,1,1,-1)}, {(-1,-1,1,-1,1,-1,1,1), (-1,1,1,-1,1,-1,1,-1,1), (-1,1,1,-1,1,1,-1,1), (1,-1,1,1,1,-1,-1,1,-1), (-1,1,1,1,1,-1,-1,-1), (1,1,1,-1,-1,-1,-1,1), (-1,-1,-1,-1,-1,-1,-1,-1), (-1,1,1,1,-1,1,1,1,-1)}, {(-1,-1,1,-1,1,-1,1,1), (-1,-1,1,1,-1,1,-1,1), (-1,1,1,-1,1,-1,1,1,1), (1,-1,1,1,1,-1,-1,1,-1), (-1,1,1,1,1,-1,-1,-1), (1,1,1,-1,-1,-1,-1,1), (1,-1,1,1,1,-1,-1,1), (1,1,1,1,1,1,1,1)}, {(-1,-1,1,-1,1,-1,1,1), (-1,1,-1,1,1,-1,1,-1,1), (-1,1,1,-1,1,-1,1,1,1), (1,1,-1,1,1,-1,-1,1,-1), (-1,-1,1,1,1,1,1,-1), (-1,1,1,1,1,-1,-1,-1), (-1,-1,-1,-1,-1,-1,-1,-1), (1,-1,-1,1,1,1,-1,-1,1)}, {(-

1,-1,1,-1,1,-1,1,1), (-1,1,-1,-1,1,1,-1,1), (-1,1,-1,1,-1,-1,1,1), (1,1,-1,-1,1,-1,1,-1), (-1,-1,-1,1,1,1,1,-1), (-1,1,1,1,1,-1,-1,-1), (-1,1,1,-1,-1,1,1,-1), (1,1,1,1,1,1,1,1)}, {(-1,-1,1,-1,1,-1,1,1), (-1,1,-1,-1,1,1,-1,1), (-1,1,-1,1,-1,-1,1,1), (1,1,-1,-1,1,-1,1,-1), (-1,-1,-1,1,1,1,1,-1), (-1,1,1,1,1,-1,-1,-1), (1,-1,-1,1,1,-1,-1,1), (1,1,1,1,1,1,1,1)}, {(-1,-1,1,1,-1,1,-1,1,1), (-1,1,1,-1,-1,1,1,-1,1), (-1,1,-1,1,1,-1,-1,1,1), (1,1,-1,-1,1,1,-1,1,-1), (-1,-1,-1,1,1,1,1,-1), (1,-1,-1,-1,-1,1,1,1), (-1,-1,-1,-1,-1,-1,-1,-1), (-1,1,1,1,-1,-1,1,1,-1)}, {(-1,-1,1,1,-1,1,-1,1,1), (-1,1,-1,-1,1,1,1,-1,1), (-1,1,1,-1,-1,1,-1,1,1), (1,1,-1,-1,1,1,-1,1,-1), (-1,-1,-1,1,1,1,1,1,-1), (1,-1,-1,-1,-1,1,1,1,1), (-1,-1,-1,-1,-1,-1,-1), (1,-1,-1,1,1,1,-1,-1,1)}, {(-1,-1,1,1,-1,1,-1,1,1), (-1,1,1,-1,-1,1,1,-1,1), (-1,1,1,-1,1,-1,-1,1,1), (1,1,-1,-1,1,1,-1,1,-1), (-1,-1,-1,1,1,1,1,1,-1), (1,-1,-1,-1,-1,1,1,1,1), (-1,1,1,1,-1,-1,1,1,-1), (1,1,1,1,1,1,1,1)}, {(-1,-1,1,1,-1,1,-1,1,1), (-1,1,1,-1,-1,1,1,1,-1,1), (-1,1,1,-1,1,-1,-1,1,1), (1,1,-1,-1,1,1,-1,1,-1), (-1,-1,-1,1,1,1,1,1,-1), (1,-1,-1,1,1,1,-1,-1,1), (1,1,1,1,1,1,1,1)}, {(-1,-1,1,1,-1,1,-1,1,1), (-1,1,1,-1,-1,1,1,1,-1,1), (-1,1,1,-1,1,-1,-1,1,1), (1,1,-1,-1,1,1,-1,1,-1), (-1,1,1,1,1,-1,-1,-1), (1,1,1,-1,-1,-1,-1,1,1), (-1,-1,-1,-1,-1,-1,-1,-1), (-1,1,1,1,-1,-1,1,1,-1)}, {(-1,-1,1,1,-1,1,-1,1,1), (-1,1,1,-1,-1,1,1,1,-1,1), (-1,1,-1,1,1,-1,-1,1,1), (1,1,-1,-1,1,1,-1,1,-1), (-1,1,1,1,1,-1,-1,-1), (1,1,1,-1,-1,-1,-1,1,1), (-1,-1,-1,-1,-1,-1,-1), (1,-1,-1,1,1,1,-1,-1,1)}, {(-1,-1,1,1,-1,1,-1,1,1), (-1,1,1,-1,-1,1,1,1,-1,1), (-1,1,-1,1,1,-1,-1,1,1), (1,1,-1,-1,1,1,-1,1,-1), (-1,1,1,1,1,1,-1,-1,-1), (1,1,1,-1,-1,-1,-1,1,1), (-1,-1,-1,-1,-1,-1,-1,-1), (-1,1,1,1,-1,-1,1,1,-1)}, {(-1,-1,1,1,-1,1,-1,1,1), (-1,1,1,-1,-1,1,1,1,-1,1), (-1,1,1,-1,-1,1,-1,1,1), (1,1,-1,-1,1,1,-1,1,-1), (-1,-1,-1,1,1,1,1,1,-1), (1,-1,-1,-1,-1,1,1,1,1), (-1,-1,-1,-1,-1,-1,-1), (1,-1,1,1,1,-1,-1,1)}, {(-1,-1,1,1,-1,1,-1,1,1), (-1,1,1,-1,-1,1,1,1,-1,1), (-1,1,1,-1,1,-1,-1,1,1), (1,1,-1,-1,1,1,-1,1,-1), (-1,1,1,1,1,-1,-1,-1), (1,1,1,-1,-1,-1,-1,1), (-1,1,1,1,-1,-1,1,1,-1), (1,1,1,1,1,1,1,1)}, {(-1,-1,1,1,-1,1,-1,1,1), (-1,1,1,-1,-1,1,1,1,-1,1), (-1,1,1,1,1,-1,-1,-1,-1), (1,1,1,-1,1,1,-1,-1,-1,-1), (-1,-1,1,1,1,1,1,-1,-1,-1), (-1,-1,1,1,1,1,-1,-1,1,-1), (-1,-1,-1,-1,-1,-1,-1,-1), (-1,1,1,1,-1,-1,1,1,-1)}, {(-1,-1,1,1,-1,1,-1,1,1), (-1,1,1,-1,-1,1,1,1,-1,1), (-1,1,1,1,1,-1,-1,1,1), (1,1,1,-1,-1,1,-1,-1,-1), (-1,-1,1,1,1,1,1,-1,-1), (-1,-1,1,1,1,1,-1,-1,1), (-1,-1,-1,-1,-1,-1,-1), (1,-1,-1,1,1,1,-1,-1,1)}, {(-1,-1,1,1,-1,1,-1,1,1), (-1,1,1,-1,-1,1,1,1,-1,1), (-1,1,1,1,1,-1,-1,-1,-1,1), (1,1,1,-1,1,1,-1,-1,-1,-1), (-1,-1,1,1,1,1,1,-1,-1,-1), (1,-1,1,1,1,-1,-1,-1,1), (1,1,1,1,1,1,1,1,1)}, {(-1,-1,1,1,-1,1,-1,1,1), (-1,1,1,-1,-1,1,1,1,-1,1), (-1,1,1,1,1,-1,-1,1,1), (1,1,1,-1,1,1,-1,-1,-1,-1), (-1,-1,1,1,1,1,1,-1,-1,1), (1,-1,1,1,1,-1,-1,-1,1), (1,1,1,1,1,1,1,1)}, {(-1,-1,1,1,-1,1,-1,1,1), (-1,1,1,-1,-1,1,1,1,-1,1), (-1,1,1,1,1,-1,-1,-1,-1,1), (1,1,1,-1,-1,1,-1,-1,-1), (-1,1,1,1,1,1,-1,-1,1,-1), (1,-1,1,1,1,-1,-1,-1,1), (1,1,1,1,1,1,1,1,1)}, {(-1,-1,1,1,-1,1,-1,1,1), (-1,1,1,-1,-1,1,1,1,-1,1), (-1,1,1,1,1,-1,-1,-1,1), (1,1,1,-1,1,1,-1,-1,-1,-1), (-1,-1,1,1,1,1,1,-1,-1,1), (1,-1,1,1,1,-1,-1,1,1), (1,1,1,1,1,1,1,1,1)}, {(-1,-1,1,1,-1,1,-1,1,1), (-1,1,1,-1,-1,1,1,1,-1,1), (1,-1,-1,-1,1,1,1,1,-1), (1,1,1,-1,1,1,-1,-1,-1,-1), (-1,-1,1,1,1,1,1,-1,-1,-1), (-1,-1,-1,-1,-1,-1,-1), (1,-1,-1,1,1,1,-1,-1,1)}, {(-1,-1,1,1,-1,1,-1,1,1), (-1,1,1,-1,-1,1,1,1,-1,1), (-1,1,1,1,1,-1,-1,-1,1), (1,1,1,-1,1,1,-1,-1,-1,-1), (-1,-1,1,1,1,1,1,-1,-1,-1), (-1,1,1,1,1,-1,-1,-1,1,-1), (1,1,1,1,1,1,1,1)}, {(-1,-1,1,1,-1,1,-1,1,1), (-1,1,1,-1,-1,1,1,1,-1,1), (-1,1,1,1,1,-1,-1,-1,-1,1), (1,1,1,-1,1,1,-1,-1,-1,-1), (-1,1,1,1,-1,-1,1,1,-1), (1,1,1,-1,-1,-1,-1,1,1), (-1,-1,-1,-1,-1,-1,-1), (1,-1,1,1,1,-1,-1,1)}, {(-1,-1,1,1,-1,1,-1,1,1), (-1,1,1,-1,-1,1,1,1,-1,1), (-1,1,1,1,1,-1,-1,-1,-1,1), (1,1,1,-1,1,1,-1,-1,-1,-1), (-1,-1,1,1,1,1,1,-1,-1,-1), (1,-1,1,1,1,-1,-1,1,1), (1,1,1,1,1,1,1,1,1)}, {(-1,-1,1,1,-1,1,-1,1,1), (-1,1,1,-1,-1,1,1,1,-1,1), (1,-1,-1,-1,1,1,1,1,-1), (1,1,1,-1,1,1,-1,-1,-1,-1), (-1,-1,1,1,1,1,1,-1,-1,1), (-1,1,1,-1,1,1,-1,-1,1), (-1,-1,-1,-1,-1,-1,-1,-1), (1,-1,-1,1,1,1,-1,-1,1)}, {(-1,-1,1,1,-1,1,-1,1,1), (-1,1,1,-1,-1,1,1,1,-1,1), (1,-1,-1,1,1,1,-1,-1,1), (1,1,1,-1,-1,1,-1,-1,-1), (-1,1,1,-1,-1,1,-1,-1,1), (1,1,-1,-1,-1,-1,1,1), (-1,-1,-1,-1,-1,-1,-1), (-1,1,1,1,-1,-1,1,1,-1)}, {(-1,-1,1,1,-1,1,-1,1,1), (-1,1,1,-1,-1,1,1,1,-1,1), (-1,1,1,1,1,-1,-1,-1,-1,1), (1,1,1,-1,1,1,-1,-1,-1,-1), (-1,1,1,-1,-1,1,-1,-1,1,-1), (1,1,-1,-1,-1,-1,1,1), (-1,-1,-1,-1,-1,-1,-1,-1), (1,-1,-1,1,1,1,-1,-1,1)}, {(-1,-1,1,1,-1,1,-1,1,1), (-1,1,1,-1,-1,1,1,1,-1,1), (-1,1,1,1,1,-1,-1,1,-1), (1,1,1,-1,-1,1,-1,-1,-1), (-1,1,1,-1,-1,1,-1,-1,1), (1,1,-1,-1,-1,-1,1,1), (-1,-1,-1,-1,-1,-1,-1), (1,-1,-1,1,1,1,-1,-1,1)}, {(-1,-1,1,1,-1,1,-1,1,1), (-1,1,1,-1,-1,1,1,1,-1,1), (-1,1,1,1,1,-1,-1,1,1), (1,1,1,-1,1,1,-1,-1,-1,-1), (-1,-1,1,1,1,1,1,-1,-1,1), (-1,1,1,-1,1,1,-1,-1,1), (1,1,1,1,1,1,1,1)}, {(-1,-1,1,1,-1,1,-1,1,1), (-1,1,1,-1,-1,1,1,-1,1), (1,-1,-1,1,1,1,-1,-1,1), (1,1,1,-1,-1,1,-1,-1,-1), (-1,1,1,1,1,1,1,-1,-1), (-1,1,1,-1,-1,1,-1,1,-1), (-1,-1,-1,-1,-1,-1,-1), (1,1,1,1,1,1,1,1)}, {(-1,-1,1,1,-1,1,-1,1,1), (-1,1,1,-1,-1,1,1,1,-1,1), (-1,1,1,1,1,-1,-1,1,-1), (1,1,1,-1,-1,1,-1,-1,-1), (-1,-1,-1,1,1,1,1,-1,-1), (1,-1,-1,-1,-1,1,1,1,1), (-1,1,-1,1,1,1,-1,-1,1), (1,1,1,1,1,1,1,1)}, {(-1,-1,1,1,-1,1,-1,1,1), (-1,1,1,-1,-1,1,1,-1,1), (-1,1,1,1,1,-1,-1,1,-1), (1,1,1,-1,-1,1,-1,-1,-1), (-1,-1,-1,1,1,1,1,-1,-1), (1,-1,-1,-1,-1,1,1,1,1), (-1,-1,-1,-1,-1,-1,-1), (1,-1,-1,1,1,1,-1,-1,1)}, {(-1,-1,1,1,-1,1,-1,1,1), (-1,1,1,-1,-1,1,1,1,-1,1), (-1,1,1,1,1,-1,-1,-1,-1,1), (1,1,1,-1,-1,1,-1,-1,-1,-1), (-1,1,1,-1,1,1,1,-1,-1,-1), (1,-1,1,1,1,-1,-1,-1,1), (1,1,1,1,1,1,1,1,1)}, {(-1,-1,1,1,-1,1,-1,1,1), (-1,1,1,-1,-1,1,1,-1,1), (-1,1,1,1,1,-1,-1,1,-1), (1,1,1,-1,-1,1,-1,-1,-1), (-1,1,1,-1,1,1,1,-1,-1), (1,-1,-1,-1,-1,1,1,1,1), (-1,1,-1,1,1,1,-1,-1,1), (1,1,1,1,1,1,1,1)}, {(-1,-1,1,1,-1,1,-1,1,1), (-1,1,1,-1,-1,1,1,1,-1,1), (-1,1,1,1,1,-1,-1,1,-1), (1,1,1,-1,-1,1,-1,-1,-1,-1), (-1,1,1,-1,1,1,-1,-1,1,-1), (1,1,1,-1,-1,-1,-1,1,1), (1,-1,-1,1,1,1,-1,-1,1), (1,1,1,1,1,1,1,1)}, {(-1,-1,1,1,-1,1,-1,1,1), (-1,1,-1,1,1,1,-1,1), (1,-1,-1,-1,1,1,1,1,-1), (1,1,1,-1,1,1,-1,-1,-1,-1), (-1,1,1,1,1,1,1,-1,-1), (-1,1,1,-1,1,1,-1,1,-1), (-1,-1,-1,-1,-1,-1,-1,-1), (1,1,1,1,1,1,1,1)}, {(-1,-1,1,1,-1,1,-1,1,1), (-1,1,-1,-1,1,1,1,-1,1), (-1,1,1,1,1,-1,-1,1,-1), (1,1,1,-1,1,1,-1,-1,-1,-1), (-1,1,1,1,1,1,1,-1,-1,-1), (1,-1,1,1,1,-1,-1,-1,1), (1,1,1,1,1,1,1,1,1)}, {(-1,-1,1,1,-1,1,-1,1,1), (-1,1,1,-1,-1,1,1,1,-1,1), (1,-1,-1,-1,1,1,1,1,-1), (1,1,1,-1,1,1,-1,-1,-1,-1), (-1,1,1,1,-1,-1,1,1,-1), (1,-1,-1,-1,-1,1,1,1,1), (-1,-1,-1,-1,-1,-1,-1,-1), (1,-1,1,1,1,-1,-1,1)}, {(-1,-1,1,1,-1,1,-1,1,1), (-1,1,1,-1,-1,1,1,1,-1,1), (-1,1,1,1,1,-1,-1,-1,-1,1), (1,1,1,-1,1,1,-1,-1,-1,-1), (-1,1,1,-1,1,1,1,-1,-1,-1), (1,-1,1,1,1,-1,-1,-1,1), (1,1,1,1,1,1,1,1,1)}, {(-1,-1,1,1,-1,1,-1,1,1), (-1,1,-1,1,1,1,-1,1), (1,-1,-1,-1,1,1,1,1,-1), (1,1,1,-1,1,1,-1,-1,-1,-1), (-1,1,1,1,1,1,1,-1,-1,-1), (-1,1,1,-1,1,1,-1,-1,1), (-1,-1,-1,-1,-1,-1,-1), (1,-1,-1,1,1,1,-1,-1,1)}, {(-1,-1,1,1,-1,1,-1,1,1), (-1,1,1,-1,-1,1,1,-1,1), (1,-1,-1,-1,1,1,1,1,-1), (1,1,1,-1,1,1,-1,-1,-1,-1), (-1,-1,1,1,1,1,1,-1,-1), (-1,-1,1,1,1,1,-1,-1,1), (-1,-1,-1,-1,-1,-1,-1), (1,-1,-1,1,1,1,-1,-1,1)}, {(-1,-1,1,1,-1,1,-1,1,1), (-1,1,-1,-1,1,1,1,-1,1), (1,-1,-1,-1,1,1,1,1,-1), (1,1,1,-1,1,1,-1,-1,-1,-1), (-1,1,1,1,1,1,1,-1,-1,-1), (1,-1,1,1,1,-1,-1,1,1), (1,1,1,1,1,1,1,1,1)}, {(-1,-1,1,1,-1,1,-1,1,1), (-1,1,-1,1,1,1,-1,1), (1,-1,-1,-1,1,1,1,1,-1), (1,1,1,-1,-1,1,-1,-1,-1,-1), (-1,1,1,1,1,1,1,-1,-1), (-1,1,1,-1,1,1,-1,1,-1), (-1,-1,-1,-1,-1,-1,-1,-1), (1,-1,-1,1,1,1,-1,-1,1)}, {(-1,-1,1,1,-1,1,-1,1,1), (-1,1,-1,-1,1,1,1,-1,1), (1,-1,-1,-1,1,1,1,1,-1), (1,1,1,-1,1,1,-1,-1,-1,-1), (-1,-1,1,1,1,1,1,-1,-1), (-1,-1,1,1,1,1,-1,-1,1), (-1,-1,-1,-1,-1,-1,-1,-1), (1,-1,-1,1,1,1,-1,-1,1)}, {(-1,-1,1,1,-1,1,-1,1,1), (-1,1,-1,-1,1,1,1,-1,1), (1,-1,-1,-1,1,1,1,1,-1), (1,1,1,-1,1,1,-1,-1,-1,-1), (-1,1,1,1,-1,-1,1,1,-1), (1,1,1,-1,-1,-1,-1,1,1), (-1,-1,-1,-1,-1,-1,-1,-1), (1,1,1,1,1,1,1,1)}, {(-1,-1,1,1,-1,1,-1,1,1), (-1,1,-1,-1,1,1,1,-1,1), (1,-1,-1,1,1,1,1,-1,1,-1), (1,1,1,-1,1,1,-1,-1,-1,-1), (-1,-1,1,1,1,1,1,-1,-1,-1), (-1,-1,1,1,1,1,-1,-1,1,-1), (1,-1,1,1,1,-1,-1,1,-1), (1,1,1,1,1,1,1,1,1)}, {(-1,-1,1,1,-1,1,-1,1,1), (-1,1,-1,1,1,1,-1,1), (1,-1,-1,-1,1,1,1,1,-1), (1,1,1,-1,1,1,-1,-1,-1,-1), (-1,1,1,1,1,1,1,-1,-1,-1), (-1,1,1,-1,1,1,-1,1,-1), (-1,-1,-1,-1,-1,-1,-1,-1), (1,-1,-1,1,1,1,-1,-1,1)}, {(-1,-1,1,1,-1,1,1,1), (-1,1,-1,-1,1,1,1,-1,1), (-1,1,1,-1,1,1,1,-1), (1,1,1,-1,1,1,-1,-1,-1), (-1,-1,1,1,1,1,1,-1,-1), (-1,-1,1,1,1,-1,1,-1), (-1,-1,-1,-1,-1,-1,-1), (1,1,1,1,1,1,1,1)}, {(-1,-1,1,1,-1,1,-1,1,1), (-1,1,1,-1,-1,1,1,1,-1,1), (1,-1,-1,-1,1,1,1,1,-1), (1,1,1,-1,1,1,-1,-1,-1,-1), (-1,1,1,1,1,1,1,-1,-1,-1), (1,-1,1,1,1,-1,-1,1,1), (1,1,1,1,1,1,1,1,1)}, {(-1,-1,1,1,-1,1,-1,1,1), (-1,1,-1,1,1,1,-1,1), (1,-1,-1,-1,1,1,1,1,-1), (1,1,1,-1,1,1,-1,-1,-1,-1), (-1,1,1,1,1,1,1,-1,-1), (-1,1,1,-1,1,1,-1,1,-1), (-1,-1,-1,-1,-1,-1,-1), (1,1,1,1,1,1,1,1)}, {(-1,-1,1,1,-1,1,-1,1,1), (-1,1,-1,-1,1,1,1,-1,1), (1,-1,-1,-1,1,1,1,1,-1), (1,1,1,-1,1,1,-1,-1,-1,-1), (-1,1,1,1,1,1,1,-1,-1,-1), (-1,1,1,-1,1,1,-1,1,-1), (-1,-1,-1,-1,-1,-1,-1,-1), (1,-1,1,1,1,-1,-1,1)}, {(-1,-1,1,1,-1,1,-1,1,1), (-1,1,-1,-1,1,1,1,-1,1), (1,-1,-1,1,1,1,1,-1), (1,1,1,-1,1,1,-1,-1,-1,-1), (-1,-1,1,1,1,1,1,-1,-1), (-1,-1,1,1,1,1,-1,-1,1), (1,-1,-1,1,1,1,-1,-1,1), (-1,-

1,-1,-1,-1,-1,-1,-1), (1,-1,-1,1,1,-1,-1,1)}, {(-1,-1,1,-1,1,-1,1,1), (-1,1,1,-1,-1,1,1,-1,1), (1,-1,-1,-1,1,1,1,-1), (1,1,1,-1,1,-1,-1,-1), (-1,-1,1,1,1,1,-1,-1,1), (1,-1,1,1,-1,-1,1,-1,1), (-1,1,1,1,-1,-1,1,1,-1,1), (1,1,1,1,1,1,1,1)}, {(-1,-1,1,1,-1,1,-1,1,1,1), (-1,1,1,-1,-1,1,1,-1,1), (1,-1,-1,-1,1,1,1,-1), (1,1,1,-1,1,-1,-1,-1), (-1,-1,1,1,1,1,-1,-1,1), (1,-1,1,1,-1,-1,1,1,-1,1), (1,-1,-1,1,1,1,-1,-1,1), (1,1,1,1,1,1,1,1)}, {(-1,-1,1,1,-1,1,-1,1,1,1), (-1,1,1,-1,-1,1,1,1,-1,1), (1,-1,-1,-1,1,1,1,-1), (1,1,1,-1,1,-1,-1,-1), (-1,1,1,-1,1,1,1,-1,1,-1), (1,1,1,-1,-1,-1,1,1,1,1), (-1,-1,-1,-1,-1,-1,-1,-1), (-1,1,1,1,-1,1,1,1,-1)}, {(-1,-1,1,1,-1,1,1,-1,1,1,1), (-1,1,1,-1,-1,1,1,1,-1,1), (1,-1,-1,-1,1,1,1,1,-1), (1,1,1,-1,1,-1,-1,-1), (-1,1,1,-1,1,1,1,-1,1,-1), (1,1,1,-1,-1,-1,-1,1,1,1), (-1,-1,-1,-1,-1,-1,-1,-1,-1), (1,-1,-1,1,1,1,-1,-1,1,1)}, {(-1,-1,1,1,-1,1,1,-1,1,1,1), (-1,1,1,-1,-1,1,1,1,-1,1), (1,-1,-1,-1,1,1,1,1,-1), (1,1,1,-1,1,-1,-1,-1), (-1,1,1,-1,1,1,1,-1,1,-1), (1,1,1,-1,-1,-1,-1,1,1,1), (-1,1,1,1,-1,-1,1,1,1,-1), (1,1,1,1,1,1,1,1,1)}, {(-1,-1,1,1,-1,1,1,-1,1,1,1), (-1,1,1,-1,-1,1,1,1,-1,1), (1,-1,-1,-1,1,1,1,1,-1), (1,1,1,-1,1,-1,-1,-1), (-1,-1,1,1,1,1,-1,-1,1), (1,1,1,-1,-1,-1,1,1,1,1), (1,-1,1,1,1,1,1,1,1)}, {(-1,-1,1,1,-1,1,1,-1,1,1,1), (-1,1,1,-1,-1,1,1,1,-1,1), (1,-1,-1,-1,1,1,1,1,-1), (1,1,1,-1,1,-1,-1,-1), (1,-1,1,1,-1,-1,1,1,-1,1), (1,1,1,-1,-1,-1,1,1,1,1), (-1,-1,-1,-1,-1,-1,-1,-1,-1), (-1,1,1,1,-1,-1,1,1,1,-1)}, {(-1,-1,1,1,-1,1,1,-1,1,1,1), (-1,1,1,-1,-1,1,1,1,-1,1), (1,-1,-1,-1,1,1,1,1,-1), (1,1,1,-1,1,-1,-1,-1), (1,-1,1,1,-1,-1,1,1,-1,1), (1,1,1,-1,-1,-1,-1,1,1,1), (-1,-1,-1,-1,-1,-1,-1,-1,-1), (1,-1,1,1,1,-1,-1,1)}, {(-1,-1,1,1,-1,1,1,-1,1,1,1), (-1,1,1,-1,-1,1,1,1,-1,1), (1,-1,-1,-1,1,1,1,1,-1), (1,1,1,-1,1,-1,-1,-1), (1,-1,1,1,-1,-1,1,1,-1,1), (1,1,1,-1,-1,-1,1,1,1,1), (-1,1,1,1,-1,-1,1,1,1,-1), (1,1,1,1,1,1,1,1,1)}, {(-1,-1,1,1,-1,1,1,-1,1,1,1), (-1,1,1,-1,-1,1,1,1,-1,1), (1,-1,-1,-1,1,1,1,1,-1), (1,1,1,-1,1,-1,-1,-1), (1,-1,1,1,-1,-1,1,1,-1,1), (1,1,1,-1,-1,-1,1,1,1,1), (1,-1,1,1,1,-1,-1,1), (1,1,1,1,1,1,1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,1,-1,-1,-1), (-1,-1,1,1,1,1,1,1,-1), (-1,1,1,1,1,1,-1,-1,-1), (-1,-1,-1,-1,-1,-1,-1,-1,-1), (-1,1,1,1,-1,-1,1,1,1,-1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,1,-1,-1,-1), (-1,-1,1,1,1,1,1,1,-1), (-1,1,1,1,1,1,-1,-1,-1), (1,-1,1,1,1,-1,-1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,-1,1,1,1,1,-1,-1,1), (-1,1,1,1,-1,-1,1,1,-1,1), (1,1,1,1,1,1,1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,1,-1,-1,-1), (1,1,1,-1,-1,1,1,-1,1,-1), (-1,-1,1,1,1,1,1,1,-1,-1), (-1,1,1,-1,-1,-1,-1,-1,-1,-1), (-1,1,1,1,-1,-1,1,1,1,-1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,1,1,1,1,1,-1,-1,-1), (1,1,1,-1,-1,-1,-1,-1,-1), (-1,1,1,1,-1,-1,1,1,1,-1), (1,1,1,1,1,1,1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,1,1,1,1,1,-1,-1,-1), (1,1,1,-1,-1,-1,-1,-1,-1), (-1,1,-1,-1,-1,-1,-1,-1,-1), (1,-1,-1,1,1,1,-1,-1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,1,1,1,1,1,-1,-1,-1), (1,1,1,-1,-1,-1,-1,1,1,1), (-1,1,1,1,-1,-1,1,1,1,-1), (1,1,1,1,1,1,1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (1,-1,1,1,-1,-1,1,1,1,1), (1,1,1,-1,-1,-1,-1,-1,-1,-1), (-1,1,1,1,-1,-1,1,1,1,-1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (1,-1,1,1,-1,-1,1,1,1,1), (1,1,1,-1,-1,-1,-1,-1,-1,-1), (1,-1,1,1,1,-1,-1,1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,1,1,1,1,1,-1,-1,-1), (1,1,1,-1,-1,-1,-1,1,1,1), (-1,-1,-1,-1,-1,-1,-1,-1,-1), (-1,1,1,1,-1,-1,1,1,1,-1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,-1,1,1,1,1,1,1,-1,-1), (1,-1,1,1,1,-1,-1,-1,-1,1), (1,-1,1,1,1,1,-1,-1,1), (1,1,1,1,1,1,1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,-1,1,1,1,1,1,1,-1,-1), (1,1,1,-1,-1,-1,-1,-1,-1,-1), (1,-1,1,1,1,1,-1,-1,1,-1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,-1,1,1,1,1,1,1,-1,-1), (1,1,1,-1,-1,-1,-1,-1,-1,-1), (-1,-1,-1,-1,-1,-1,-1,-1,-1), (1,-1,-1,1,1,1,-1,-1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,-1,1,1,1,1,1,1,-1,-1), (1,-1,1,1,1,-1,-1,-1,-1,1), (-1,1,1,1,-1,-1,1,1,-1,1), (1,1,1,1,1,1,1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,1,1,1,1,1,-1,-1,-1), (1,1,1,-1,-1,-1,-1,-1,-1,-1), (-1,1,1,1,-1,-1,1,1,1,-1), (1,1,1,1,1,1,1,1,1)}, {(-1,-1,1,1,-1,1,1,-1,1,1,1), (-1,1,1,-1,-1,1,1,1,-1,1), (1,-1,1,1,-1,1,1,1,-1,1), (1,1,1,-1,-1,1,1,-1,1,-1), (-1,-1,-1,-1,-1,-1,-1,-1,-1), (1,-1,1,1,1,-1,-1,-1,-1,1), (1,-1,-1,1,1,1,-1,-1,1), (1,1,1,1,1,1,1,1,1)}, {(-1,-1,1,1,-1,1,1,-1,1,1,1,1), (-1,1,1,-1,1,-1,-1,1,1,1), (1,-1,1,1,1,-1,-1,1,1,-1), (1,1,1,-1,-1,1,1,-1,1,-1), (-1,-1,1,1,1,1,1,1,-1,-1), (-1,1,1,1,1,1,-1,-1,-1,-1), (1), (-1,-1,-1,-1,-1,-1,-1,-1), (-1,1,1,1,-1,-1,1,1,1,-1)}, {(-1,-1,1,1,-1,1,1,-1,1,1,1), (-1,1,1,-1,1,-1,-1,1,1,1), (1,-1,1,1,1,-1,-1,1,1,-1), (1,1,1,-1,-1,1,1,-1,1,-1), (-1,-1,1,1,1,1,1,1,-1,-1), (-1,-1,-1,-1,-1,-1,-1,-1,-1), (1,-1,1,1,1,-1,-1,1,-1,1)}, {(-1,-1,1,1,-1,1,1,-1,1,1,1), (-1,1,1,-1,1,-1,-1,1,1,1), (1,-1,1,1,1,-1,-1,1,1,-1), (1,1,1,-1,-1,1,1,1,-1,-1), (-1,1,1,1,1,1,-1,-1,-1), (-1,1,1,1,1,1,-1,-1,-1,-1), (-1,-1,-1,1,-1,-1,1,1,1,-1), (1,1,1,1,1,1,1,1,1)}, {(-1,-1,1,1,-1,1,1,-1,1,1,1), (-1,1,1,-1,-1,1,1,1,-1,1), (1,-1,1,1,1,-1,-1,1,1,-1), (1,1,1,-1,-1,1,1,-1,1,-1), (-1,-1,1,1,1,1,1,1,-1,-1), (1,-1,1,1,1,-1,-1,-1,-1,1), (1,-1,-1,1,1,1,-1,-1,1,1)}, {(-1,-1,1,1,-1,1,1,-1,1,1,1), (-1,1,1,-1,-1,1,1,1,-1,1), (1,-1,1,1,-1,1,1,-1,1,1,1), (1,1,-1,-1,1,1,-1,-1,1,1), (-1,1,1,1,1,1,-1,-1,-1), (1,1,1,-1,-1,-1,1,1,1,1), (-1,-1,-1,-1,-1,-1,-1,-1), (1,-1,1,1,1,-1,-1,1,-1,1)}, {(-1,-1,1,1,-1,1,1,-1,1,1,1), (-1,1,-1,-1,1,1,1,-1,1,1,1), (1,-1,1,1,1,-1,-1,1,1,-1), (1,1,1,-1,-1,1,1,1,-1,-1), (-1,1,1,1,1,1,-1,-1,-1,-1), (1,1,1,1,1,-1,-1,-1,-1,1), (-1,-1,-1,-1,-1,-1,-1,-1), (-1,1,1,1,-1,-1,1,1,1,-1)}, {(-1,-1,1,1,-1,1,1,-1,1,1,1), (-1,1,1,-1,1,-1,-1,1,1,1), (1,-1,1,1,1,-1,-1,1,1,-1)}, {(-1,-1,1,1,-1,1,1,-1,1,1,1), (-1,1,1,-1,1,-1,-1,1,1,1), (1,-1,1,1,1,-1,-1,1,1,-1), (1,1,-1,-1,1,1,-1,-1,1,1), (-1,1,1,1,1,1,-1,-1,-1), (1,1,1,-1,-1,-1,-1,-1,-1,-1), (-1,-1,-1,-1,-1,-1,-1,-1), (-1,1,1,1,-1,-1,1,1,1,-1)}, {(-1,-1,1,1,-1,1,1,-1,1,1,1), (-1,1,1,-1,1,-1,-1,1,1,1), (1,-1,1,1,1,-1,-1,1,1,-1), (1,1,-1,-1,1,1,-1,-1,1,1), (-1,1,1,1,1,1,-1,-1,-1), (1,1,1,-1,-1,-1,-1,-1,-1,-1), (1,-1,-1,1,1,1,-1,-1,1,1), (1,1,1,1,1,1,1,1,1)}, {(-1,-1,1,1,-1,1,1,-1,1,1,1), (-1,1,1,-1,-1,1,1,1,-1,1), (1,-1,1,1,1,-1,-1,1,1,-1), (1,1,1,-1,-1,1,1,-1,1,-1), (-1,1,1,1,1,1,-1,-1,-1), (1,-1,1,1,1,-1,-1,1), (1,1,-1,-1,1,1,-1,-1,1,1)}, {(-1,-1,1,1,-1,1,1,-1,1,1,1), (-1,1,-1,-1,1,1,1,-1,1,1,1), (1,-1,1,1,1,-1,-1,1,1,-1), (1,1,1,-1,-1,1,1,-1,1,-1), (-1,1,1,1,1,1,-1,-1,-1,-1), (1,1,1,-1,-1,-1,-1,1,1,1), (-1,-1,-1,-1,-1,-1,-1,-1), (1,-1,-1,1,1,1,-1,-1,1,1)}, {(-1,-1,1,1,-1,1,1,-1,1,1,1), (-1,1,1,-1,-1,1,1,1,-1,1), (1,-1,1,1,-1,1,1,-1,1,1,1), (1,1,-1,-1,1,1,-1,-1,1,1,1,-1), (1,-1,-1,-1,-1,1,1,1,1), (1,1,1,-1,-1,-1,-1,-1,1,1), (1,-1,1,1,1,1,-1,-1,1), (1,1,1,1,1,1,1,1,1)}, {(-1,-1,1,1,-1,1,1,-1,1,1,1), (-1,1,1,-1,1,1,-1,-1,1,1,1), (1,-1,1,1,1,-1,-1,1,1,-1), (1,1,1,-1,-1,1,1,-1,1,-1), (-1,-1,1,1,1,1,1,1,-1,-1), (-1,1,1,1,1,1,-1,-1,-1,-1), (1), (-1,-1,-1,-1,-1,-1,-1,-1), (-1,1,1,1,-1,-1,1,1,1,-1)}, {(-1,-1,1,1,-1,1,1,-1,1,1,1), (-1,1,1,-1,1,-1,-1,1,1,1), (1,-1,1,1,1,-1,-1,1,1,-1), (1,1,1,-1,-1,1,1,-1,1,-1), (-1,-1,1,1,1,1,1,1,-1,-1), (-1,1,1,1,1,1,-1,-1,-1,-1), (-1,-1,-1,-1,-1,-1,-1,-1,-1), (1,-1,1,1,1,-1,-1,1,-1,1)}, {(-1,-1,1,1,-1,1,1,-1,1,1,1), (-1,1,1,-1,1,-1,-1,1,1,1), (1,-1,1,1,1,-1,-1,1,1,-1), (1,1,1,-1,-1,1,1,1,-1,-1), (-1,1,1,1,1,1,-1,-1,-1), (-1,1,1,1,1,1,-1,-1,-1,-1), (1,-1,1,1,1,-1,-1,1,-1,1), (1,1,1,1,1,1,1,1,1)}, {(-1,-1,1,1,-1,1,1,-1,1,1,1), (-1,1,1,-1,-1,1,1,1,-1,1), (1,-1,1,1,1,-1,-1,1,1,-1), (1,1,1,-1,-1,1,1,-1,1,-1), (-1,-1,1,1,1,1,1,1,-1,-1), (-1,1,1,1,1,1,-1,-1,-1,-1), (1,-1,1,1,1,-1,-1,1,1,1), (1,1,1,1,1,1,1,1,1)}, {(-1,-1,1,1,-1,1,1,-1,1,1,1), (-1,1,1,-1,1,-1,-1,1,1,1), (1,-1,1,1,1,-1,-1,1,1,-1), (1,1,1,-1,-1,1,1,-1,1,-1), (-1,-1,1,1,1,1,1,1,-1,-1), (1,-1,1,1,1,-1,-1,1), (-1,1,1,1,-1,-1,1,1,1,-1), (1,1,1,1,1,1,1,1,1)}, {(-1,-1,1,1,-1,1,1,-1,1,1,1), (-1,1,1,-1,1,-1,-1,1,1,1), (1,-1,1,1,1,-1,-1,1,1,-1), (1,1,-1,-1,1,1,-1,-1,1,1), (-1,1,1,1,1,1,-1,-1,-1), (1,1,1,1,-1,-1,-1,-1,1,1), (-1,-1,-1,-1,-1,-1,-1,-1), (-1,1,1,1,-1,-1,1,1,1,-1)}, {(-1,-1,1,1,-1,1,1,-1,1,1,1), (-1,1,1,-1,1,-1,-1,1,1,1), (1,-1,1,1,1,-1,-1,1,1,-1), (1,1,-

1,-1,1,-1,1,-1), (-1,1,1,1,1,1,-1,-1,-1), (1,1,1,-1,-1,-1,-1,1), (-1,-1,-1,-1,-1,-1,-1,-1), (1,-1,-1,1,1,-1,-1,1)}, {(-1,-1,1,-1,1,-1,1,1), (-1,1,1,-1,1,-1,1,1), (1,-1,1,1,-1,-1,1,1,-1), (1,1,-1,-1,1,-1,1,1,-1), (-1,1,1,1,1,-1,-1,-1), (1,1,1,-1,-1,-1,-1,1), (-1,1,1,-1,-1,1,1,-1), (1,1,1,1,1,1,1,1)}, {(-1,-1,1,-1,1,-1,1,1), (-1,1,-1,1,-1,-1,1,1), (1,-1,1,1,1,-1,-1,1,1,-1), (1,1,-1,-1,1,1,-1,1,1,-1), (-1,1,1,1,1,-1,-1,-1), (1,1,1,-1,-1,-1,-1,1), (1,-1,-1,1,1,1,-1,-1,1), (1,1,1,1,1,1,1,1)}, {(-1,-1,1,1,-1,1,-1,1,1), (-1,1,1,-1,1,-1,-1,1,1), (1,-1,1,1,1,-1,-1,1,1,-1), (1,1,-1,-1,1,1,-1,1,1,-1), (1,-1,-1,-1,1,1,1,1), (1,1,1,-1,-1,-1,-1,1), (-1,-1,-1,-1,-1,-1,-1,-1), (-1,1,1,1,-1,1,1,1,-1)}, {(-1,-1,1,1,-1,1,-1,1,1,1), (-1,1,-1,1,1,-1,1,1,1), (1,-1,1,1,-1,-1,1,1,-1), (1,1,1,-1,1,1,-1,1,1,-1), (-1,-1,-1,-1,1,1,1,1), (1,1,1,1,-1,-1,-1,1,1), (-1,1,-1,-1,-1,-1,-1,-1), (1,-1,-1,1,1,1,-1,-1,1)}, {(-1,-1,1,1,-1,1,1,-1,1,1), (-1,1,1,-1,1,-1,-1,1,1), (1,-1,1,1,1,-1,-1,1,1,-1), (1,1,-1,-1,1,-1,1,1,-1), (1,-1,-1,-1,1,1,1,1,1), (1,1,1,1,-1,-1,-1,1,1), (-1,1,1,1,-1,-1,1,1,1,-1), (1,1,1,1,1,1,1,1)}, {(-1,-1,1,1,-1,1,-1,1,1,1), (-1,1,1,-1,1,-1,-1,1,1), (1,-1,1,1,1,-1,-1,1,1,-1), (1,1,-1,-1,1,1,-1,1,1,-1), (1,-1,-1,-1,1,1,1,1), (1,1,1,1,-1,-1,-1,1,1), (1,-1,-1,1,1,1,-1,-1,1), (1,1,1,1,1,1,1,1)}, {(-1,-1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (-1,-1,1,1,1,1,1,-1,-1), (-1,1,1,-1,1,1,1,-1,1,-1), (-1,-1,-1,-1,-1,-1,-1,-1), (-1,1,1,1,-1,1,1,1,-1)}, {(-1,-1,1,1,-1,1,-1,1,1,1), (-1,1,1,1,1,-1,-1,1,1), (1,-1,1,1,1,-1,-1,1,1,-1), (1,1,1,-1,1,1,-1,-1,1,-1), (-1,-1,1,1,1,1,1,-1,-1,-1), (-1,-1,-1,1,1,1,-1,1,1,-1), (-1,-1,-1,-1,-1,-1,-1,-1), (1,-1,-1,1,1,1,-1,-1,1)}, {(-1,-1,1,1,-1,1,-1,1,1), (-1,1,1,1,1,-1,-1,-1,1), (1,-1,1,1,1,-1,-1,1,1,-1), (1,1,1,-1,1,1,-1,-1,-1), (-1,-1,1,1,1,1,-1,1,1,-1), (-1,-1,1,1,1,-1,-1,1,1,-1), (1,-1,-1,1,1,1,-1,-1,1), (1,1,1,1,1,1,1,1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (-1,-1,1,1,1,1,1,-1,-1,-1), (1,-1,1,1,-1,-1,1,1,-1), (-1,-1,-1,-1,-1,-1,-1,-1), (-1,1,1,1,-1,1,1,1,-1)}, {(-1,-1,1,1,-1,1,-1,1,1,1), (-1,1,1,1,1,-1,-1,-1,1), (1,-1,1,1,1,-1,-1,1,1,-1), (1,1,1,-1,-1,1,-1,-1,-1), (-1,-1,1,1,1,1,1,-1,-1,-1), (1,-1,1,1,-1,1,1,-1,1,1), (-1,1,1,1,-1,-1,1,1,1,-1), (1,1,1,1,1,1,1,1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (-1,-1,1,1,1,1,1,-1,-1,-1), (1,-1,1,1,-1,-1,1,1,-1), (1,1,1,1,1,1,1,1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (-1,1,1,-1,1,1,-1,-1,1,-1), (1,1,-1,-1,-1,-1,1,1,1), (-1,-1,-1,-1,-1,-1,-1,-1), (-1,1,1,1,-1,1,1,1,-1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (-1,1,1,-1,1,1,-1,1,1,-1), (1,1,-1,-1,-1,-1,1,1,1), (-1,-1,-1,-1,-1,-1,-1,-1), (1,-1,-1,1,1,1,-1,-1,1)}, {(-1,-1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (-1,1,1,-1,1,1,-1,1,1,-1), (1,1,-1,-1,-1,-1,1,1,1), (-1,1,1,1,-1,-1,1,1,1,-1), (1,1,1,1,1,1,1,1)}, {(-1,-1,1,1,-1,1,-1,1,1), (-1,1,1,1,1,-1,-1,-1,1), (1,-1,1,1,1,-1,-1,1,1,-1), (1,1,1,-1,1,1,-1,-1,-1), (-1,-1,1,1,1,1,-1,1,1,-1), (1,1,1,-1,-1,-1,1,1,1), (1,-1,-1,1,1,1,-1,-1,1), (1,1,1,1,1,1,1,1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (-1,1,1,1,1,1,1,-1,-1), (1,1,1,-1,-1,-1,1,1,1), (-1,1,1,1,-1,-1,1,1,1,-1), (1,1,1,1,1,1,1,1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (-1,1,1,1,1,1,1,-1,-1,-1), (1,-1,1,-1,-1,-1,1,1,1), (-1,-1,-1,-1,-1,-1,-1,-1), (-1,1,1,1,-1,1,1,1,-1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (1,-1,1,1,-1,-1,1,1,-1), (1,1,-1,-1,-1,-1,1,1,1), (-1,-1,-1,-1,-1,-1,-1,-1), (-1,1,1,1,-1,1,1,1,-1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (1,-1,1,1,-1,-1,1,1,-1), (1,1,-1,-1,-1,-1,1,1,1), (-1,-1,-1,-1,-1,-1,-1,-1), (1,-1,-1,1,1,1,-1,-1,1)}, {(-1,-1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (1,-1,1,1,-1,-1,1,1,-1), (1,1,-1,-1,-1,-1,1,1,1), (-1,-1,-1,-1,-1,-1,-1,-1), (1,-1,-1,1,1,1,-1,-1,1)}, {(-1,-1,1,1,-1,1,-1,1,1), (-1,1,1,1,1,-1,-1,-1,1), (1,-1,1,1,1,-1,-1,1,1,-1), (1,1,1,-1,1,1,-1,-1,-1), (1,-1,1,1,-1,-1,1,1,-1), (1,1,-1,-1,-1,-1,1,1,1), (1,-1,-1,1,1,1,-1,-1,1), (1,1,1,1,1,1,1,1)}, {(-1,-1,1,1,-1,1,-1,1,1,1), (-1,1,1,1,1,-1,-1,-1,1), (1,-1,1,1,1,-1,-1,1,1,-1), (1,1,1,-1,1,1,-1,-1,-1), (1,-1,1,1,-1,-1,1,1,-1), (1,1,-1,-1,-1,-1,1,1,1), (-1,-1,-1,-1,-1,-1,-1,-1), (-1,1,1,1,-1,1,1,1,-1)}, {(-1,-1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,-1,1,1,1,1,1,-1,-1,-1), (-1,1,1,1,1,-1,-1,1,1,-1,-1), (-1,-1,-1,-1,-1,-1,-1,-1), (1,-1,-1,1,1,1,-1,-1,1)}, {(-1,-1,1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,-1,1,1,1,1,1,-1,-1,-1), (-1,-1,1,1,1,1,-1,-1,1,1,-1), (-1,1,1,1,1,1,1,1)}, {(-1,-1,1,1,-1,1,-1,1,1,1), (1,-1,-1,-1,1,1,1,1,-1), (1,-1,1,1,1,-1,-1,1,1,-1), (1,1,1,-1,1,1,-1,-1,1,-1), (-1,-1,1,1,1,1,1,-1,-1,-1), (-1,1,1,-1,1,1,1,-1,1,-1), (1,1,1,1,1,1,1,1)}, {(-1,-1,1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,-1,1,1,1,1,1,-1,-1,-1), (1,-1,1,1,-1,1,1,-1,1,1), (1,-1,1,1,1,-1,-1,1,1,-1), (1,1,1,1,1,1,1,1)}, {(-1,-1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,-1,1,1,1,1,-1,1,1,-1), (1,1,-1,-1,-1,-1,1,1,1), (-1,-1,-1,-1,-1,-1,-1,-1), (1,-1,-1,1,1,1,-1,-1,1)}, {(-1,-1,1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,1,1,-1,1,1,-1,-1,1,-1), (1,1,1,-1,-1,-1,-1,1,1,1), (-1,1,1,1,-1,-1,1,1,1,-1), (1,1,1,1,1,1,1,1)}, {(-1,-1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,1,1,-1,1,1,-1,1,1,-1), (1,1,-1,-1,-1,-1,1,1,1), (-1,-1,-1,-1,-1,-1,-1,-1), (1,-1,-1,1,1,1,-1,-1,1)}, {(-1,-1,1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,-1,1,1,1,1,1,-1,-1,-1), (1,1,-1,-1,-1,-1,1,1,1), (1,-1,1,1,1,-1,-1,1,1,1,-1), (1,1,1,1,1,1,1,1)}, {(-1,-1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,1,1,-1,1,1,-1,1,1,-1), (1,1,-1,-1,-1,-1,1,1,1), (-1,-1,-1,-1,-1,-1,-1,-1), (1,-1,-1,1,1,1,-1,-1,1)}, {(-1,-1,1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,1,1,-1,1,1,-1,1,1,-1), (1,1,-1,-1,-1,-1,1,1,1), (-1,1,1,1,-1,-1,1,1,1,-1), (1,1,1,1,1,1,1,1)}, {(-1,-1,1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,1,1,-1,1,1,-1,1,1,-1), (1,1,-1,-1,-1,-1,1,1,1), (1,-1,-1,1,1,1,-1,-1,1), (1,1,1,1,1,1,1,1)}, {(-1,-1,1,-1,1,-1,1,1,1), (1,-1,-1,-1,1,1,1,1,-1), (1,-1,1,1,1,-1,-1,1,1,-1), (1,1,1,-1,1,1,-1,-1,-1), (-1,1,1,-1,1,1,-1,1,1,-1), (1,1,-1,-1,-1,-1,1,1,1), (-1,1,1,1,-1,-1,1,1,1,-1), (1,1,1,1,1,1,1,1)}, {(-1,-1,1,-1,1,-1,1,1,1), (1,-1,-1,1,1,1,1,-1), (1,-1,1,1,1,-1,-1,1,1,-1), (1,1,1,-1,1,1,-1,-1,-1), (-1,1,1,-1,1,1,-1,1,1,-1), (1,1,-1,-1,-1,1,1,1), (-1,-1,-1,-1,-1,-1,-1,-1), (-1,1,1,1,-1,1,1,1,-1)}, {(-1,-

1,1,-1,1,-1,1,1), (1,-1,-1,-1,1,1,1,-1), (1,-1,1,1,-1,-1,1,-1), (1,1,1,-1,1,-1,-1,-1), (1,-1,1,-1,-1,1,-1,1), (1,1,-1,-1,-1,-1,1,1), (-1,-1,-1,-1,-1,-1,-1,-1), (1,-1,-1,1,1,1,-1,-1,1)}, {(-1,-1,1,-1,1,1,-1,1,1), (1,-1,-1,-1,1,1,1,1,-1), (1,-1,1,1,1,-1,-1,1,1,-1), (1,1,1,-1,1,-1,-1,-1), (1,-1,1,-1,-1,1,1,-1,1), (1,1,1,-1,-1,-1,-1,1,1), (-1,1,1,1,-1,-1,1,1,-1), (1,1,1,1,1,1,1,1)}, {(-1,-1,1,-1,1,-1,1,1), (1,-1,-1,-1,1,1,1,-1), (1,-1,1,1,1,-1,-1,1,-1), (1,1,1,-1,1,-1,-1,-1), (1,-1,1,-1,-1,1,-1,1), (1,1,-1,-1,-1,-1,1,1,1), (1,-1,-1,1,1,-1,-1,1), (1,1,1,1,1,1,1,1)}, {(-1,-1,1,-1,1,1,-1,1,1), (1,-1,1,-1,1,1,1,-1), (1,-1,1,1,1,-1,-1,1,-1), (1,1,-1,-1,1,1,-1,1,-1), (-1,-1,-1,1,1,1,1,-1), (-1,1,1,1,1,1,-1,-1,-1), (-1,-1,-1,-1,-1,-1,-1,-1), (-1,1,1,1,-1,-1,1,1,-1)}, {(-1,-1,1,-1,1,1,-1,1,1), (1,-1,1,-1,1,1,1,-1,-1), (1,-1,1,1,1,-1,-1,1,-1), (1,1,-1,1,1,-1,1,1,-1), (-1,-1,-1,1,1,1,1,1,-1), (-1,1,1,1,1,1,-1,-1,-1), (-1,-1,-1,-1,-1,-1,-1,-1), (1,-1,-1,1,1,1,-1,-1,1)}, {(-1,-1,1,-1,1,1,-1,1,1), (1,-1,1,-1,1,1,1,1,-1,-1), (1,-1,1,1,1,-1,-1,1,-1), (1,1,-1,-1,1,1,-1,1,-1), (-1,-1,-1,1,1,1,1,1,-1), (-1,1,1,1,1,1,-1,-1,-1), (1,1,1,1,1,1,1,1,1)}, {(-1,-1,1,-1,1,1,-1,1,1), (1,-1,1,-1,1,1,1,-1), (1,-1,1,1,1,-1,-1,1,-1), (1,1,-1,-1,1,1,-1,1,-1), (-1,-1,-1,1,1,1,1,-1,-1,1), (-1,1,1,1,1,1,-1,-1,-1), (1,-1,-1,1,1,1,-1,-1,1), (1,1,1,1,1,1,1,1)}, {(-1,-1,1,-1,1,-1,1,1,1), (1,-1,1,-1,1,1,1,1,-1,-1), (1,-1,1,1,1,-1,-1,1,-1), (1,1,-1,-1,1,1,-1,1,-1), (-1,-1,-1,1,1,1,1,1,-1), (1,-1,-1,-1,-1,1,1,1,1), (-1,-1,-1,-1,-1,-1,-1,-1), (-1,1,1,1,-1,-1,1,1,-1)}, {(-1,-1,1,1,-1,1,1,-1,1,1), (1,-1,1,-1,1,1,1,-1,-1), (1,-1,1,1,1,-1,-1,1,1,-1), (1,1,-1,-1,1,1,-1,1,1,-1), (-1,-1,-1,1,1,1,1,1,-1), (1,-1,-1,-1,-1,1,1,1,1), (-1,1,-1,-1,-1,-1,-1,-1,-1), (1,-1,-1,1,1,1,-1,-1,1,1)}, {(-1,-1,1,1,-1,1,-1,1,1,1), (1,-1,1,-1,1,1,1,-1,-1,-1), (1,-1,1,1,1,-1,-1,1,-1), (1,1,-1,-1,1,1,-1,1,-1), (-1,-1,-1,1,1,1,1,1,-1), (1,-1,-1,-1,1,1,1,1), (-1,1,1,1,1,1,-1,-1,-1), (1,1,1,1,1,1,1,1)}, {(-1,-1,1,-1,1,-1,1,1,1), (1,-1,1,-1,1,1,1,-1), (1,-1,1,1,1,-1,-1,1,-1), (1,1,-1,-1,1,1,-1,1,-1), (-1,1,1,1,1,1,1,-1,-1,-1), (1,1,1,-1,-1,-1,-1,1,1), (-1,-1,-1,-1,-1,-1,-1,-1), (-1,1,1,1,-1,-1,1,1,-1)}, {(-1,-1,1,-1,1,1,-1,1,1), (1,-1,1,-1,1,1,1,-1,-1), (1,-1,1,1,1,-1,-1,1,-1), (1,1,-1,-1,1,1,-1,1,-1), (-1,-1,-1,1,1,1,1,-1,-1), (-1,1,1,1,1,1,-1,-1,-1), (1,-1,-1,1,1,1,-1,-1,1), (1,1,1,1,1,1,1,1)}, {(-1,-1,1,-1,1,-1,1,1,1), (1,-1,1,-1,1,1,1,-1,-1), (1,-1,1,1,1,-1,-1,1,-1), (1,1,-1,-1,1,1,-1,1,-1), (-1,-1,-1,1,1,1,1,-1,-1,1,1), (1,-1,-1,-1,1,1,1,1), (-1,-1,-1,-1,-1,-1,-1,-1), (-1,1,1,1,-1,-1,1,1,-1)}, {(-1,-1,1,-1,1,1,-1,1,1), (1,-1,1,-1,1,1,1,-1,-1), (1,-1,1,1,1,-1,-1,1,-1), (1,1,-1,-1,1,1,-1,1,-1), (-1,-1,-1,1,1,1,1,-1,-1,1,1), (1,1,1,-1,-1,-1,1,1,1), (-1,-1,1,1,1,-1,-1,1,1,-1), (1,1,1,1,1,1,1,1)}, {(-1,-1,1,-1,1,1,-1,1,1), (1,-1,1,-1,1,1,1,-1,-1), (1,-1,1,1,1,-1,-1,1,-1), (1,1,-1,-1,1,1,-1,1,-1), (-1,-1,-1,1,1,1,1,-1,-1,1,1), (1,1,1,-1,-1,-1,-1,1,1), (1,-1,-1,1,1,1,-1,-1,1), (1,1,1,1,1,1,1,1)}, {(-1,-1,1,-1,1,1,1,-1,1,1), (1,-1,1,-1,1,1,1,-1,-1), (1,-1,1,1,1,-1,-1,1,-1), (1,1,-1,-1,1,1,-1,1,-1), (-1,-1,-1,-1,-1,1,1,1,1,1), (1,1,1,-1,-1,-1,-1,1,1), (-1,-1,-1,-1,-1,-1,-1,-1), (-1,1,1,1,-1,-1,1,1,-1)}, {(-1,-1,1,-1,1,1,-1,1,1,1), (1,-1,1,-1,1,1,1,-1), (1,-1,-1,-1,-1,-1,1,1,1,1), (1,-1,1,1,1,-1,-1,1,-1), (1,1,-1,-1,1,1,-1,1,-1), (-1,-1,-1,1,1,1,1,-1,-1,1,1), (1,1,1,-1,-1,-1,1,1,1), (-1,1,1,1,-1,-1,1,1,-1), (1,1,1,1,1,1,1,1)}, {(-1,-1,1,-1,1,-1,1,1,1), (1,-1,1,-1,1,1,1,-1,-1), (1,-1,1,1,1,-1,-1,1,-1), (1,1,-1,-1,1,1,-1,1,-1), (1,-1,-1,1,1,1,1,-1,-1,1,1), (1,1,1,-1,-1,-1,-1,1,1), (-1,-1,-1,-1,-1,-1,-1,-1), (-1,-1,1,1,1,-1,-1,1,1,1)}, {(-1,-1,1,-1,1,1,-1,1,1,1), (1,-1,1,-1,1,1,1,-1,-1), (1,-1,1,1,1,-1,-1,1,-1), (1,1,-1,-1,1,1,-1,1,-1), (-1,-1,-1,1,1,1,1,-1,-1,1,1), (1,1,1,-1,-1,-1,-1,1,1), (-1,-1,-1,-1,-1,-1,-1,-1), (-1,-1,1,1,1,-1,-1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,1,-1), (-1,1,1,1,1,-1,-1,1,-1,-1,1), (-1,-1,1,1,1,-1,-1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (-1,1,1,1,1,-1,-1,1,-1,1), (-1,-1,1,1,1,-1,-1,1,1,1), (1,1,1,1,1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,1,-1,-1,1,1,1,-1,-1), (-1,-1,-1,-1,-1,-1,-1,-1), (-1,-1,1,1,1,-1,-1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,-1,1,1,-1,-1,1,1,-1), (-1,-1,-1,-1,-1,-1,-1,-1), (1,1,1,-1,-1,1,1,1,-1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,-1,1,1,-1,-1,1,1,-1), (1,1,1,1,1,1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,-1,1,1,-1,-1,1,1,-1), (-1,-1,-1,-1,-1,-1,-1,-1), (-1,-1,1,1,1,-1,-1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,-1,1,1,-1,1,1,-1,1), (-1,-1,-1,-1,-1,-1,-1,-1), (1,1,-1,-1,1,1,1,-1,-1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,-1,1,1,-1,-1,1,1,1,-1), (1,1,1,1,1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,1,-1,1,1,-1,-1,-1,1), (1,1,1,-1,-1,-1,1,1,1), (-1,-1,-1,-1,-1,-1,-1,-1), (-1,-1,1,1,1,-1,-1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,1,1,1,1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,-1,1,1,-1,-1,1,1,-1), (-1,-1,-1,-1,-1,-1,-1,-1), (-1,1,1,1,-1,-1,1,1,1,-1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,1,1,1,1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (-1,1,1,-1,1,1,1,-1,-1,1), (1,-1,1,1,-1,-1,1,1,-1), (1,-1,1,-1,-1,1,1,-1,1), (1,1,1,-1,-1,1,1,1,-1), (1,1,1,1,1,1,1,1)}, {(-1,-1,1,-1,1,1,1,1,-1), (-1,1,1,-1,-1,-1,1,1,1,1), (-1,1,1,1,1,-1,1,1,-1,-1,-1), (1,1,1,-1,-1,-1,1,1,-1), (1,-1,1,-1,-1,-1,-1,1,1,1,1), (1,1,1,-1,-1,-1,-1,1,1), (-1,1,1,1,-1,-1,1,1,-1,1)}, {(-1,-1,1,-1,1,1,1,1,-1), (-1,1,1,-1,-1,1,1,1,1,1), (-1,1,1,1,1,-1,1,1,-1,-1,-1), (1,1,1,-1,-1,-1,-1,1,1), (-1,1,1,-1,1,1,1,-1,-1,-1,1), (-1,-1,1,1,1,-1,-1,1,1,-1), (-1,-1,1,1,1,-1,-1,1,1,-1), (-1,1,1,1,-1,1,1,-1,1)

1,-1,1), (-1,-1,-1,-1,-1,-1,-1,-1), (-1,-1,1,1,-1,-1,1,1)}, {(-1,-1,1,-1,1,1,1,-1), (-1,1,-1,-1,-1,-1,1,1,1), (1,-1,-1,-1,1,1,-1,1,1), (1,1,1,-1,-1,-1,1,1,-1), (-1,1,1,-1,1,1,-1,1,-1), (-1,1,1,1,-1,1,-1,-1,1), (-1,-1,-1,-1,-1,-1,-1,-1), (1,1,1,-1,1,1,1,-1,-1)}, {(-1,-1,1,-1,1,1,1,-1), (-1,1,-1,-1,-1,1,1,1), (1,-1,-1,-1,1,1,-1,1,1), (1,1,1,-1,-1,1,1,-1), (-1,1,1,1,-1,1,-1,1,-1), (-1,1,1,1,-1,1,-1,1,1), (1,1,1,1,1,1,1,1)}, {(-1,-1,1,-1,1,1,1,-1), (-1,1,-1,-1,-1,1,1,1), (1,-1,-1,-1,1,1,-1,1,1), (1,1,1,-1,-1,-1,1,1,-1), (-1,1,1,-1,1,1,-1,1,-1), (-1,1,1,1,-1,1,-1,1,-1), (1,1,1,-1,1,-1), (1,1,1,1,1,1,1,1)}, {(-1,-1,1,-1,1,1,1,-1), (-1,1,-1,-1,-1,1,1,1,1), (1,-1,-1,1,1,-1,1,1), (1,1,1,-1,-1,1,1,-1), (-1,1,-1,1,1,-1,1,-1), (1,-1,-1,1,-1,1,1,-1), (-1,-1,-1,-1,-1,-1,-1,-1), (-1,-1,1,1,1,-1,1,1,1)}, {(-1,-1,1,-1,1,1,1,1,-1), (-1,1,-1,-1,-1,1,1,1), (1,-1,-1,-1,1,1,-1,1,1), (1,1,1,-1,-1,1,1,-1), (-1,1,-1,1,1,1,-1,1,-1), (1,-1,-1,1,-1,1,1,1,-1), (-1,-1,-1,-1,-1,-1,-1,-1), (1,1,-1,-1,1,1,-1,-1)}, {(-1,-1,1,-1,1,1,1,1,-1), (-1,1,-1,-1,-1,1,1,1,1), (1,-1,-1,-1,1,1,-1,1,1), (1,1,1,-1,-1,-1,1,1,-1), (-1,1,-1,1,1,1,-1,1,-1), (1,-1,-1,1,1,-1,1,-1), (-1,1,1,1,-1,-1,1,1,-1), (1,1,1,1,1,1,1,1)}, {(-1,-1,1,-1,1,1,1,1,-1), (-1,1,-1,-1,-1,1,1,1,1), (1,-1,-1,-1,1,1,-1,1,1), (1,1,1,-1,-1,-1,1,1,-1), (-1,1,-1,1,1,-1,1,-1), (1,-1,-1,1,-1,1,1,1,-1), (1,1,1,-1,1,1,-1,1,-1), (1,1,1,1,1,1,1,1)}, {(-1,-1,1,-1,1,1,1,1,-1), (-1,1,-1,-1,-1,1,1,1), (1,-1,-1,-1,1,1,-1,1,1), (1,1,1,-1,-1,1,1,-1), (-1,1,1,-1,1,1,-1,1,-1), (1,-1,1,1,-1,-1,1,1,-1), (-1,-1,-1,-1,-1,-1,-1,-1), (-1,-1,1,1,1,-1,1,1,1)}, {(-1,-1,1,-1,1,1,1,1,-1), (-1,1,-1,-1,-1,1,1,1,1), (1,-1,-1,-1,1,1,-1,1,1), (1,1,1,-1,-1,1,1,-1), (-1,1,1,1,-1,1,-1,1,-1), (1,-1,1,-1,1,1,-1,1,-1), (-1,-1,-1,-1,-1,-1,-1,-1), (1,1,1,-1,1,1,1,-1,-1)}, {(-1,-1,1,-1,1,1,1,1,-1), (-1,1,-1,-1,-1,1,1,1), (1,-1,-1,-1,1,1,-1,1,1), (1,1,1,-1,-1,1,1,-1), (-1,1,1,-1,1,1,-1,1,-1), (-1,1,1,1,-1,1,-1,1,-1), (1,1,1,1,1,1,1,1)}, {(-1,-1,1,-1,1,1,1,1,-1), (-1,1,-1,-1,-1,1,1,1,1), (1,-1,-1,-1,1,1,-1,1,1), (1,1,1,-1,-1,1,1,-1), (-1,1,-1,1,1,-1,1,-1), (1,-1,1,-1,1,1,-1,1,-1), (1,1,1,1,1,1,1,1)}, {(-1,-1,1,-1,1,1,1,1,-1), (-1,1,-1,-1,-1,1,1,1,1), (1,-1,-1,-1,1,1,-1,1,1), (1,1,1,-1,-1,-1,1,1,-1), (1,-1,-1,1,-1,1,1,1,-1), (-1,-1,-1,-1,-1,-1,-1,-1), (-1,-1,1,1,1,-1,1,1,1)}, {(-1,-1,1,-1,1,1,1,1,-1), (-1,1,-1,-1,-1,1,1,1,1), (1,-1,-1,-1,1,1,-1,1,1), (1,1,1,-1,-1,-1,1,1,-1), (1,-1,1,1,-1,1,1,1,-1), (1,-1,1,-1,-1,1,1,-1), (-1,1,1,1,-1,-1,1,1,-1), (1,1,1,1,1,1,1,1)}, {(-1,-1,1,-1,1,1,1,1,-1), (-1,1,-1,-1,-1,1,1,1,1), (1,-1,-1,-1,1,1,-1,1,1), (1,1,1,-1,-1,1,1,-1), (1,-1,1,1,-1,1,1,1,-1), (1,-1,1,1,-1,1,1,-1), (1,1,1,1,1,1,1,1)}, {(-1,-1,1,-1,1,1,1,1,-1), (-1,1,-1,1,-1,1,1,1,1), (-1,1,1,1,-1,1,-1,1,1), (1,1,1,-1,-1,1,1,-1), (-1,1,-1,1,1,-1,1,-1), (-1,-1,1,1,1,-1,-1,-1), (-1,-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (-1,1,1,1,-1,-1,1,1,-1), (1,1,1,1,-1,-1,1,1,-1), (-1,1,-1,1,1,1,-1,1,-1), (-1,1,1,1,1,-1,-1,-1), (-1,-1,-1,-1,-1,-1,-1,-1), (1,1,1,-1,1,1,1,-1,-1)}, {(-1,-1,1,-1,1,1,1,1,-1), (-1,1,1,1,-1,1,-1,1,-1), (-1,1,1,1,-1,-1,1,1,-1), (1,1,1,1,-1,-1,1,1,-1), (-1,1,1,-1,1,1,-1,1,-1), (-1,1,1,1,1,1,-1,1,-1), (1,1,1,1,1,1,1,1)}, {(-1,-1,1,-1,1,1,1,1,-1), (-1,1,-1,1,-1,1,1,-1,1), (1,1,1,-1,-1,-1,1,1,-1), (-1,1,-1,1,1,-1,1,1), (-1,1,1,1,1,1,-1,-1,-1), (-1,-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (-1,1,1,1,-1,-1,1,1,-1), (1,1,1,1,-1,-1,1,1,-1), (-1,1,-1,1,1,1,-1,1,1), (-1,1,-1,-1,1,1,1,-1), (-1,-1,-1,-1,-1,-1,-1,-1), (1,1,-1,1,1,1,-1,-1)}, {(-1,-1,1,-1,1,1,1,1,-1), (-1,1,-1,1,-1,1,1,1,-1), (-1,1,1,1,-1,-1,1,1,-1), (1,1,1,-1,-1,1,1,-1), (-1,1,-1,1,1,-1,1,1), (1,-1,-1,-1,1,1,1,1), (1,1,1,1,1,1,1,1)}, {(-1,-1,1,-1,1,1,1,1,-1), (-1,1,1,1,-1,1,1,1,-1), (-1,1,1,1,-1,-1,1,1,-1), (1,1,1,-1,-1,1,1,-1), (-1,1,-1,1,1,-1,1,1), (1,-1,-1,-1,1,1,1,1), (1,1,-1,-1,1,1,1,-1,-1), (1,1,1,1,1,1,1,1)}, {(-1,-1,1,-1,1,1,1,1,-1), (-1,1,1,-1,-1,1,1,1,-1), (1,-1,1,1,1,-1,1,1,-1), (1,1,1,-1,-1,1,1,-1), (-1,1,-1,-1,1,1,1,1), (-1,1,1,1,1,1,-1,-1,-1), (-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (1,-1,1,1,1,-1,1,1,-1), (1,1,1,-1,-1,1,1,-1), (-1,1,-1,-1,1,1,1,1), (-1,1,1,1,1,-1,-1,-1), (-1,-1,1,1,1,-1,1,1,1), (-1,-1,-1,-1,-1,-1,-1,-1), (1,1,-1,-1,1,1,1,-1,-1)}, {(-1,-1,1,-1,1,1,1,1,-1), (-1,1,1,1,-1,1,1,1,-1), (1,-1,1,1,1,-1,1,1,-1), (1,1,1,-1,-1,-1,1,1,-1), (-1,1,-1,-1,1,1,1,1), (1,-1,1,1,1,-1,1,-1), (1,1,1,1,1,1,1,1)}, {(-1,-1,1,-1,1,1,1,1,-1), (-1,1,1,1,-1,1,1,1,1), (1,-1,1,1,1,-1,1,1,-1), (1,1,1,-1,-1,-1,1,1,-1), (-1,1,-1,-1,1,1,1,1), (1,-1,1,1,1,1,1,-1,-1), (1,1,1,1,1,1,1,1)}, {(-1,-1,1,-1,1,1,1,1,-1), (-1,1,1,-1,-1,1,1,1,-1), (1,-1,1,1,1,-1,1,1,-1), (1,1,1,-1,-1,-1,1,1,-1), (-1,1,-1,-1,1,1,1,1), (-1,1,1,1,1,-1,-1,-1), (-1,-1,-1,-1,-1,-1,-1), (-1,-1,1,1,1,-1,1,1,1)}, {(-1,-1,1,-1,1,1,1,1,-1), (-1,1,1,-1,-1,1,1,1,-1), (1,-1,1,1,1,-1,1,1,-1), (1,1,1,-1,-1,-1,1,1,-1), (-1,1,-1,-1,1,1,1,1), (-1,1,1,1,1,-1,-1,-1), (-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (1,-1,1,1,1,-1,1,1,-1), (1,1,1,-1,-1,-1,1,1,-1), (-1,1,-1,-1,1,1,1,1), (-1,1,1,1,1,1,-1,-1,-1), (-1,-1,-1,-1,-1,-1,-1), (1,1,-1,-1,1,1,1,-1,-1)}, {(-1,-1,1,-1,1,1,1,1,-1), (-1,1,1,-1,-1,1,1,1,-1), (1,-1,1,1,1,-1,1,1,-1), (1,1,1,-1,-1,-1,1,1,-1), (-1,1,-1,-1,1,1,1,1), (-1,1,1,1,1,1,-1,-1,-1), (1,1,1,1,1,1,1,1)}, {(-1,-1,1,-1,1,1,1,1,-1), (-1,1,-1,1,-1,1,1,1,-1), (1,-1,1,1,1,-1,1,1,-1), (1,1,1,-1,-1,1,1,-1), (-1,1,-1,-1,1,1,1,1), (-1,1,1,1,1,1,-1,-1,-1), (-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (1,-1,1,1,1,-1,1,1,-1), (1,1,1,-1,-1,1,1,-1), (-1,1,-1,-1,1,1,1,1), (-1,1,1,1,1,1,-1,-1,-1), (-1,-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (1,-1,1,1,1,-1,1,1,-1), (1,1,1,-1,-1,-1,1,1,-1), (-1,1,-1,-1,1,1,1,1), (-1,1,1,1,1,1,-1,-1,-1), (-1,-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (1,-1,1,1,1,-1,1,1,-1), (1,1,1,-1,-1,-1,1,1,-1), (-1,1,-1,-1,1,1,1,1), (-1,1,1,1,1,1,-1,-1,-1), (-1,-1,-1,-1,-1,-1,-1), (1,1,-1,-1,1,1,1,-1,-1)}, {(-1,-1,1,-1,1,1,1,1,-1), (-1,1,-1,1,-1,1,1,1,-1), (1,-1,-1,1,1,1,-1,1,-1), (1,1,1,-1,-1,-1,1,1,-1), (-1,1,-1,-1,1,1,1,1), (-1,1,1,1,1,1,-1,-1,-1), (-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (1,-1,-1,1,1,1,-1,1,-1), (1,1,1,-1,-1,-1,1,1,-1), (-1,1,-1,-1,1,1,1,1), (-1,1,1,1,1,1,-1,-1,-1), (-1,-1,-1,-1,-1,-1,-1), (1,1,1,1,1,1,1,1)}, {(-1,-1,1,-1,1,1,1,1,-1), (-1,1,-1,1,-1,1,1,1,-1), (1,-1,-1,1,1,1,-1,1,-1), (1,1,1,-1,-1,-1,1,1,-1), (-1,1,-1,-1,1,1,1,1), (-1,1,1,1,1,1,-1,-1,-1), (-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (1,-1,-1,1,1,1,-1,1,-1), (1,1,1,-1,-1,-1,1,1,-1), (-1,1,-1,-1,1,1,1,1), (-1,1,1,1,1,1,-1,-1,-1), (-1,-1,-1,-1,-1,-1,-1,-1), (1,1,1,1,1,1,1,1)}, {(-1,-1,1,-1,1,1,1,1,-1), (-1,1,-1,1,-1,1,1,1,-1), (1,-1,-1,1,1,1,-1,1,-1), (1,1,1,-1,-1,-1,1,1,-1), (-1,1,-1,-1,1,1,1,1), (-1,1,1,1,1,1,-1,-1,-1), (-1,-1,-1,-1,-1,-1,-1), (-1,-1,1,1,1,-1,1,1,1)}, {(-1,-1,1,-1,1,1,1,1,-1), (-1,1,-1,1,-1,1,1,1,-1), (1,-1,

1,1,1,-1,1,-1), (1,1,1,-1,-1,-1,1,-1), (-1,1,-1,-1,1,-1,1,1), (1,-1,-1,-1,-1,1,1,1), (-1,-1,-1,-1,-1,-1,-1,-1), (-1,-1,1,1,-1,-1,1,1,1)}, {(-1,-1,1,1,-1,1,1,1,-1), (-1,1,-1,1,1,-1,1,1,-1), (1,-1,-1,1,1,-1,1,1,-1), (1,1,1,-1,-1,-1,1,1,-1), (-1,1,1,-1,-1,1,1,1,-1), (1,-1,-1,-1,-1,1,1,1,-1), (-1,-1,-1,-1,-1,-1,-1,-1), (1,1,-1,-1,1,1,-1,-1)}, {(-1,-1,1,-1,1,1,1,-1), (-1,1,1,-1,1,-1,1,1,-1), (1,-1,-1,1,1,-1,1,-1), (1,1,1,-1,-1,-1,1,1,-1), (-1,1,1,-1,-1,1,1,1), (1,-1,-1,-1,-1,1,1,1), (-1,-1,1,1,1,-1,1,1,1), (1,1,1,1,1,1,1,1,1)}, {(-1,-1,1,-1,1,1,1,1,-1), (-1,1,1,-1,-1,1,1,1,-1), (1,-1,-1,1,1,-1,1,-1), (1,1,1,-1,-1,-1,1,1,-1), (-1,1,-1,-1,1,1,-1,1,1), (1,-1,-1,-1,-1,1,1,1,1), (1,1,-1,-1,1,1,-1,-1), (1,1,1,1,1,1,1,1)}, {(-1,-1,1,-1,1,1,1,-1), (-1,1,-1,-1,-1,1,1,-1), (1,-1,-1,1,1,-1,1,-1), (1,1,1,-1,-1,-1,1,1,-1), (-1,1,1,1,1,-1,-1,-1), (1,-1,1,1,1,-1,1,-1,-1), (-1,-1,-1,-1,-1,-1,-1,-1), (-1,-1,1,1,1,-1,-1,1,1,1)}, {(-1,-1,1,1,-1,1,1,1,-1), (-1,1,1,-1,1,-1,1,1,-1), (1,-1,-1,1,1,-1,1,-1), (1,1,1,-1,-1,-1,1,1,-1), (-1,1,1,1,1,-1,-1,-1), (1,-1,1,1,1,-1,1,-1,-1), (-1,-1,-1,-1,-1,-1,-1,-1), (1,1,-1,-1,1,1,-1,1,-1)}, {(-1,-1,1,-1,1,1,1,-1), (-1,1,-1,1,1,-1,1,1,-1), (1,-1,-1,1,1,-1,1,-1), (1,1,1,-1,-1,-1,1,1,-1), (-1,1,1,1,1,-1,-1,-1), (1,-1,1,1,1,-1,1,-1,-1), (-1,-1,1,1,1,-1,-1,1,1), (1,1,1,1,1,1,1,1,1)}, {(-1,-1,1,-1,1,1,1,-1), (-1,1,-1,1,-1,1,1,1,-1), (1,-1,-1,1,1,1,-1,1,-1), (1,1,1,-1,-1,-1,1,1,-1), (-1,1,1,1,1,1,-1,-1,-1), (1,-1,1,1,1,-1,1,-1,-1), (1,1,-1,-1,1,1,-1,1,-1), (1,1,1,1,1,1,1,1,1)}, {(-1,-1,1,1,-1,1,1,1,-1), (-1,1,1,-1,1,-1,1,1,-1), (1,-1,-1,1,1,-1,1,-1), (1,1,1,-1,-1,-1,1,1,-1), (1,-1,-1,-1,-1,1,1,1), (1,-1,1,1,1,-1,1,-1,-1), (-1,-1,1,-1,1,-1,-1,-1,-1), (-1,-1,1,1,1,-1,1,1,1)}, {(-1,-1,1,1,-1,1,1,1,-1), (-1,1,1,-1,1,-1,1,1,-1), (1,-1,-1,1,1,-1,1,-1), (1,1,1,-1,-1,-1,1,1,-1), (1,-1,-1,-1,-1,1,1,1), (1,-1,1,1,1,-1,1,-1,-1), (-1,-1,-1,-1,-1,-1,-1,-1), (1,1,-1,-1,1,1,-1,1,-1)}, {(-1,-1,1,-1,1,1,1,1,-1), (-1,1,1,-1,-1,1,1,1,-1), (1,-1,-1,1,1,-1,1,-1), (1,1,1,-1,-1,-1,1,1,-1), (1,-1,-1,-1,-1,1,1,1,1), (1,-1,1,1,1,-1,1,-1,-1), (-1,-1,1,1,1,-1,-1,1,1), (1,1,1,1,1,1,1,1,1)}, {(-1,-1,1,1,-1,1,1,1,-1), (-1,1,1,1,-1,1,1,-1,1), (1,-1,1,1,-1,1,1,-1,1), (1,1,1,-1,-1,-1,1,1,-1), (-1,1,1,-1,1,1,-1,1,1), (-1,1,1,1,1,1,-1,-1,-1), (-1,-1,-1,-1,-1,-1,-1,-1), (-1,-1,1,1,1,-1,-1,1,1,1)}, {(-1,-1,1,1,-1,1,1,1,-1), (-1,1,1,1,-1,1,1,-1,1), (1,-1,1,1,1,-1,1,-1,1), (1,1,1,-1,-1,-1,1,1,-1), (-1,1,1,1,1,1,-1,-1,-1), (-1,1,1,1,1,1,-1,-1,-1), (1,1,-1,-1,1,1,-1,1,-1), (1,1,1,1,1,1,1,1,1)}, {(-1,-1,1,1,-1,1,1,1,-1), (-1,1,1,1,-1,1,1,-1,1), (1,-1,1,1,1,-1,1,-1,1), (1,1,1,-1,-1,-1,1,1,-1), (-1,1,1,1,1,1,-1,-1,-1), (1,-1,-1,-1,-1,1,1,1,1), (-1,-1,1,1,1,-1,-1,1,1), (1,1,-1,-1,1,1,-1,-1)}, {(-1,-1,1,-1,1,1,1,1,-1), (-1,1,1,1,-1,-1,1,1,-1,1), (1,-1,1,1,-1,1,1,-1,1), (1,1,1,-1,-1,-1,1,1,-1), (-1,1,1,1,1,1,-1,-1,-1), (1,-1,1,1,1,-1,1,-1,-1), (-1,-1,-1,-1,-1,-1,-1,-1), (1,1,-1,-1,1,1,-1,1,-1)}, {(-1,-1,1,-1,1,1,1,-1), (-1,1,1,1,-1,-1,1,1,-1,1), (1,-1,1,1,-1,1,1,-1,1), (1,1,1,-1,-1,-1,1,1,-1), (-1,1,1,1,1,1,-1,-1,-1), (1,-1,1,1,1,-1,1,-1,-1), (1,1,-1,-1,1,1,-1,1,-1), (1,1,1,1,1,1,1,1,1)}, {(-1,-1,1,-1,1,1,1,-1), (-1,1,1,1,-1,-1,1,1,-1,1), (1,-1,1,1,-1,1,1,-1,1), (1,1,1,-1,-1,-1,1,1,-1), (-1,1,1,1,1,1,-1,-1,-1), (1,-1,-1,-1,-1,1,1,1,1), (-1,1,1,1,-1,1,1,1), (1,1,1,1,1,1,1,1,1)}, {(-1,-1,1,-1,1,1,1,-1), (-1,1,1,1,-1,-1,1,1,-1,1), (1,-1,1,1,-1,1,1,-1,1), (1,1,1,-1,-1,-1,1,1,-1), (-1,1,-1,-1,1,1,-1,1,1), (1,-1,1,1,-1,1,1,-1,-1), (-1,-1,-1,-1,-1,-1,-1,-1), (-1,-1,1,1,1,-1,-1,1,1,1)}, {(-1,-1,1,-1,1,1,1,-1), (-1,1,1,1,-1,-1,1,1,-1,1), (1,-1,1,1,-1,1,1,-1,1), (1,1,1,-1,-1,-1,1,1,-1), (-1,1,1,1,1,1,-1,-1,-1), (1,-1,1,1,1,-1,1,-1,-1), (-1,-1,1,-1,1,-1,-1,-1,-1), (1,1,-1,-1,1,1,-1,-1)}, {(-1,-1,1,-1,1,1,1,-1), (-1,1,1,1,1,-1,1,1,-1,1), (1,-1,1,1,1,1,-1,1,-1,1), (1,1,1,-1,-1,-1,1,1,-1), (-1,1,-1,1,1,1,-1,1,1), (1,-1,-1,-1,-1,1,1,1,1), (-1,-1,1,1,1,-1,-1,1,1), (1,1,-1,-1,1,1,-1,1,-1)}, {(-1,-1,1,-1,1,1,1,1,-1), (-1,1,1,1,-1,-1,1,1,-1,1), (1,-1,1,1,1,1,-1,1,-1,1), (1,1,1,-1,-1,-1,1,1,-1), (-1,1,1,1,1,1,-1,-1,-1), (1,-1,1,1,1,-1,1,-1,-1), (1,1,1,1,1,1,1,1)}, {(-1,-1,1,-1,1,1,1,1,-1), (-1,1,1,1,-1,-1,1,1,-1,1), (1,-1,1,1,1,1,-1,1,-1,1), (1,1,1,-1,-1,-1,1,1,-1), (-1,1,1,1,1,1,-1,-1,-1), (1,-1,-1,-1,-1,1,1,1,1), (-1,-1,-1,-1,-1,-1,-1,-1), (-1,-1,1,1,1,-1,-1,1,1,1)}, {(-1,-1,1,-1,1,1,1,-1), (-1,1,1,1,-1,-1,1,1,-1,1), (1,-1,1,1,1,1,-1,1,-1,1), (1,1,1,-1,-1,-1,1,1,-1), (-1,1,-1,1,1,1,-1,1,1), (1,-1,1,1,1,-1,1,-1,-1), (-1,-1,1,-1,1,-1,-1,-1,-1), (1,1,-1,-1,1,1,-1,-1)}, {(-1,-1,1,-1,1,1,1,-1), (-1,1,1,1,-1,-1,1,1,-1,1), (1,-1,1,1,1,1,-1,-1,-1,1), (1,1,1,-1,-1,-1,1,1,-1), (-1,1,1,1,1,1,-1,-1,-1), (1,-1,1,1,1,-1,1,-1,-1), (-1,-1,-1,-1,-1,-1,-1,-1), (1,1,-1,-1,1,1,-1,1,-1)}, {(-1,-1,1,-1,1,1,1,-1), (-1,1,1,1,1,-1,-1,1,-1,1), (1,-1,1,1,1,1,-1,-1,-1,1), (1,1,1,-1,-1,-1,1,1,-1), (-1,1,1,1,1,1,-1,-1,-1), (1,-1,-1,-1,-1,1,1,1,1), (1,1,1,1,1,1,1,1)}, {(-1,-1,1,-1,1,1,1,-1), (-1,1,1,1,1,-1,-1,1,-1,1), (1,-1,1,1,1,1,-1,-1,-1,1), (1,1,1,-1,-1,-1,1,1,-1), (-1,1,1,-1,1,1,-1,1,1), (1,-1,-1,-1,-1,1,1,1,1), (-1,-1,1,1,1,-1,-1,1,1), (1,1,1,1,1,1,1,1)}, {(-1,-1,1,-1,1,1,1,-1), (-1,1,1,1,1,-1,-1,1,-1,1), (1,-1,1,1,1,1,-1,-1,-1,1), (1,1,1,-1,-1,-1,1,1,-1), (-1,1,-1,1,1,1,-1,1,1), (1,-1,-1,-1,-1,-1,-1,-1,-1), (-1,-1,1,1,1,-1,-1,1,1,1)}, {(-1,-1,1,-1,1,1,1,-1), (-1,1,1,1,1,-1,1,1,-1,1), (1,-1,1,1,1,1,-1,-1,-1,1), (1,1,1,-1,-1,-1,1,1,-1), (-1,1,-1,1,1,1,-1,1,1), (1,-1,-1,-1,-1,1,1,1,1), (-1,-1,-1,-1,-1,-1,-1,-1), (1,1,-1,-1,1,1,-1,1,-1)}, {(-1,-1,1,-1,1,1,1,1,-1), (-1,1,1,1,1,-1,1,1,-1,-1), (1,-1,1,1,1,1,-1,-1,-1,1), (1,1,1,-1,-1,-1,1,1,-1), (-1,1,1,-1,1,1,-1,1,1), (-1,1,1,1,1,-1,-1,-1,-1), (-1,-1,-1,-1,-1,-1,-1,-1), (1,1,-1,-1,1,1,-1,1,-1)}, {(-1,-1,1,-1,1,1,1,1,-1), (-1,1,1,1,1,-1,1,1,-1,-1), (1,-1,1,1,1,1,-1,-1,-1,1), (1,1,1,-1,-1,-1,1,1,-1), (-1,1,1,-1,1,1,-1,1,1), (1,-1,-1,-1,-1,1,1,1,1), (1,1,-1,-1,1,1,-1,1,-1), (1,1,1,1,1,1,1,1)}, {(-1,-1,1,-1,1,1,1,1,-1), (-1,1,1,1,1,-1,1,1,-1,1), (1,-1,1,1,1,1,-1,-1,-1,1), (1,1,1,-1,-1,-1,1,1,-1), (-1,1,-1,1,1,1,-1,1,1), (1,-1,-1,1,1,-1,1,-1,-1), (-1,-1,1,1,1,-1,-1,1,1,1), (1,1,1,1,1,1,1,1,1)}, {(-1,-1,1,-1,1,1,1,-1), (-1,1,1,1,1,-1,1,1,-1,1), (1,-1,1,1,1,1,-1,-1,-1,1), (1,1,1,-1,-1,-1,1,1,-1), (-1,1,-1,1,1,1,-1,1,1,-1), (-1,1,1,1,1,-1,-1,1,-1), (-1,-1,-1,-1,-1,-1,-1,-1), (1,1,-1,-1,1,1,-1,1,-1), 1)}, {(-1,-1,1,-1,1,1,1,-1), (-1,1,1,1,1,-1,1,1,-1,-1), (1,-1,1,1,1,1,-1,-1,-1,1), (1,1,1,-1,-1,-1,1,1,-1), (-1,1,-1,1,1,1,-1,1,1,-1), (1,-1,-1,1,-1,1,1,1,-1), (-1,-1,1,1,1,-1,-1,1,1,1), (1,1,1,1,1,1,1,1,1)}, {(-1,-1,1,-1,1,1,1,-1), (-1,1,1,1,1,-1,1,-1,-1,1), (1,-1,1,1,1,1,-1,-1,-1,1), (1,1,1,-1,-1,-1,1,1,-1), (-1,1,1,-1,1,1,-1,1,1,-1), (1,-1,-1,1,1,-1,1,1,-1), (1,1,-1,-1,1,1,-1,1,-1),

(1,1,1,1,1,1,1,1)}, {(-1,-1,1,-1,1,1,1,-1), (-1,1,1,1,-1,1,-1,-1), (1,-1,1,1,1,-1,-1,-1), (1,1,1,-1,-1,-1,1,-1), (-1,1,1,-1,1,-1,-1,1), (1,-1,1,-1,-1,1,-1,1), (-1,-1,-1,-1,-1,-1,-1,-1), (-1,-1,1,1,-1,-1,1,1)}, {(-1,-1,1,-1,1,1,1,-1), (-1,1,1,1,-1,1,-1,-1), (1,-1,1,1,1,-1,-1,-1), (1,1,1,-1,-1,-1,1,-1), (-1,1,1,-1,1,-1,-1,1), (1,-1,1,-1,-1,1,-1,1), (-1,-1,-1,-1,-1,-1,-1,-1), (1,1,-1,-1,1,1,-1,-1)}, {(-1,-1,1,-1,1,1,1,-1), (-1,1,1,1,-1,1,-1,-1), (1,-1,1,1,1,-1,-1,-1), (1,1,1,-1,-1,-1,1,-1), (-1,1,1,1,-1,1,-1,-1), (1,-1,1,-1,-1,1,-1,1), (-1,-1,1,1,-1,-1,1,1), (1,1,1,1,1,1,1,1)}, {(-1,-1,1,-1,1,1,1,-1), (-1,1,1,1,-1,1,-1,-1), (1,-1,1,1,1,-1,-1,-1), (1,1,1,-1,-1,-1,1,-1), (-1,1,1,-1,1,-1,-1,1), (1,-1,1,-1,-1,1,-1,1), (1,1,-1,-1,1,1,-1,-1), (1,1,1,1,1,1,1,1)}, {(-1,-1,1,-1,1,1,1,-1), (-1,1,1,1,-1,1,-1,-1), (1,-1,1,1,1,-1,-1,-1), (1,1,1,-1,-1,-1,1,-1), (1,-1,1,-1,-1,1,1,1,-1), (1,-1,1,-1,-1,1,-1,1), (-1,-1,-1,-1,-1,-1,-1,-1), (-1,-1,1,1,1,-1,-1,1,1)}, {(-1,-1,1,-1,1,1,1,-1), (-1,1,1,1,-1,1,-1,-1), (1,-1,1,1,1,-1,-1,-1), (1,1,1,-1,-1,-1,1,-1), (1,-1,1,-1,-1,1,1,-1), (-1,-1,-1,-1,-1,-1,-1,-1), (1,1,-1,-1,1,1,-1,-1)}, {(-1,-1,1,-1,1,1,1,-1), (-1,1,1,1,1,-1,1,-1,-1), (1,-1,1,1,1,-1,-1,-1), (1,1,1,-1,-1,-1,1,-1), (1,-1,1,-1,-1,1,-1,1), (1,-1,1,-1,-1,1,-1,1), (-1,-1,1,1,-1,-1,1,1), (1,1,1,1,1,1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (-1,1,1,1,-1,1,-1,-1), (-1,-1,-1,-1,-1,-1,-1,-1), (-1,-1,1,1,1,-1,-1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (-1,1,1,1,-1,1,-1,-1,1), (-1,-1,-1,-1,-1,-1,-1,-1), (1,1,-1,-1,1,1,-1,-1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (-1,1,1,1,-1,1,-1,-1,1), (-1,-1,1,1,1,-1,-1,1,1), (1,1,1,1,1,1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (1,-1,1,-1,-1,1,1,-1), (-1,-1,-1,-1,-1,-1,-1,-1), (-1,-1,1,1,1,-1,-1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (1,-1,1,-1,-1,1,1,-1,-1,1), (-1,-1,1,1,1,-1,-1,1,1), (1,1,1,1,1,1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (1,-1,1,-1,-1,1,1,-1,-1,1), (1,1,1,-1,-1,-1,1,-1), (1,1,1,1,1,1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (-1,-1,-1,-1,-1,-1,-1,-1), (-1,-1,1,1,1,-1,-1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (1,-1,1,-1,-1,1,1,-1,-1,1), (-1,-1,-1,-1,-1,-1,-1,-1), (-1,-1,1,1,1,-1,-1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (1,-1,1,-1,-1,1,1,-1,-1,1), (-1,1,1,1,-1,1,-1,-1,1), (1,1,1,1,1,1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (1,-1,1,-1,-1,1,1,-1,-1,1), (-1,1,1,1,-1,1,-1,-1,1), (-1,-1,1,1,1,-1,-1,1,1), (1,1,1,1,1,1,1,1)}, {(-1,-1,1,-1,1,1,1,-1), (1,-1,-1,-1,1,1,-1,1,1), (1,-1,-1,1,1,-1,1,1,-1,1), (1,1,1,-1,-1,-1,1,-1), (-1,1,1,-1,1,1,-1,-1,1), (-1,-1,-1,-1,-1,-1,-1,-1), (-1,-1,1,1,1,-1,-1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (1,-1,1,-1,-1,1,1,-1,-1,1), (-1,-1,-1,-1,-1,-1,-1,-1), (1,1,-1,-1,1,1,-1,-1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (1,-1,1,-1,-1,1,1,-1,-1,1), (-1,1,1,1,-1,1,-1,-1,1), (-1,-1,-1,-1,-1,-1,-1,-1), (1,1,-1,-1,1,1,-1,-1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (-1,1,1,1,1,-1,-1,-1), (-1,-1,1,1,1,-1,-1,1,1), (1,1,-1,-1,1,1,-1,-1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (1,-1,1,-1,-1,1,1,-1,-1,1), (-1,-1,-1,-1,-1,-1,-1,-1), (1,1,-1,-1,1,1,-1,-1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (1,-1,-1,1,1,-1,1,1), (-1,-1,1,1,1,-1,-1,1,1), (1,1,1,1,1,1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (-1,1,1,1,-1,1,-1,-1,1), (-1,-1,-1,-1,-1,-1,-1,-1), (-1,-1,1,1,1,-1,-1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (1,-1,1,-1,-1,1,1,-1,-1,1), (-1,1,1,1,-1,1,-1,-1,1), (-1,-1,1,1,1,-1,-1,1,1), (1,1,1,1,1,1,1,1)}, {(-1,-1,1,-1,1,1,1,-1), (1,-1,-1,-1,1,1,-1,1,1), (1,-1,1,1,1,1,-1,-1,-1), (1,1,1,-1,-1,-1,1,-1), (-1,1,1,-1,1,1,-1,-1,1), (1,-1,1,-1,-1,1,1,-1,-1,1), (-1,-1,1,1,1,-1,-1,1,1), (1,1,1,1,1,1,1,1)}, {(-1,-1,1,-1,1,1,1,-1), (1,-1,-1,1,1,1,-1,1,1,-1), (1,-1,1,-1,1,1,-1,1,-1,-1,1), (1,1,1,-1,-1,-1,1,-1,1), (-

1,1,1,1,1,-1,-1,-1), (1,-1,1,1,1,-1,1,-1,-1), (1,1,-1,-1,1,1,1,-1,-1), (1,1,1,1,1,1,1,1,1)}, {(-1,-1,1,-1,1,1,1,1,-1), (1,-1,-1,1,1,-1,1,1,-1), (1,-1,1,1,-1,1,-1,-1,1,1), (1,1,1,-1,-1,-1,1,1,-1), (1,-1,-1,-1,-1,1,1,1,1), (1,-1,1,1,1,-1,1,-1,-1), (-1,-1,-1,-1,-1,-1,-1,-1), (-1,-1,1,1,1,-1,-1,1,1,1)}, {(-1,-1,1,1,-1,1,1,1,-1), (1,-1,-1,1,1,1,-1,1,-1), (1,-1,1,1,-1,1,-1,-1,1,1), (1,1,1,-1,-1,-1,1,-1), (1,-1,-1,-1,-1,1,1,1,1), (1,-1,1,1,1,-1,1,-1,-1), (-1,-1,-1,-1,-1,-1,-1,-1), (1,1,-1,-1,1,1,1,-1,-1)}, {(-1,-1,1,1,-1,1,1,1,1,-1), (1,-1,-1,1,1,1,-1,1,1,-1), (1,-1,1,1,-1,1,1,-1,-1,1), (1,1,1,1,-1,-1,-1,1,1,-1), (1,-1,-1,-1,-1,1,1,1,1,1), (1,-1,1,1,1,-1,1,1,-1,-1), (-1,-1,1,1,1,-1,1,1,1,1), (1,1,1,1,1,1,1,1,1)}, {(-1,-1,1,1,-1,1,1,1,1,-1), (1,-1,-1,1,1,1,-1,1,1,-1), (1,-1,1,1,-1,1,1,1,-1,-1,1), (1,1,1,1,-1,-1,-1,1,1,-1), (1,-1,-1,-1,-1,1,1,1,1,1), (1,-1,1,1,1,-1,1,-1,-1), (1,1,-1,-1,1,1,1,-1,-1), (1,1,1,1,1,1,1,1,1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (-1,-1,1,-1,1,1,1,1,1,1), (-1,1,1,1,-1,1,1,-1,-1,1), (-1,-1,-1,-1,-1,-1,-1,-1), (-1,1,1,1,-1,1,1,1,1,-1)}, {(-1,-1,1,1,1,-1,1,1,-1,1), (-1,-1,1,1,1,1,-1,1,1,-1), (-1,1,1,-1,1,1,-1,-1,1,1), (-1,1,1,-1,1,1,1,1,-1,-1), (-1,-1,-1,-1,1,1,1,1,1,1), (-1,1,1,1,-1,1,1,-1,-1), (-1,-1,-1,-1,-1,-1,-1,-1), (1,-1,-1,1,1,1,-1,-1,1,1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (-1,-1,-1,-1,1,1,1,1,1,1), (-1,1,1,1,-1,1,1,-1,-1,1), (-1,1,1,1,-1,1,1,1,1,-1), (1,1,1,1,1,1,1,1,1)}, {(-1,-1,1,1,1,-1,1,1,-1,1), (-1,-1,1,1,1,1,-1,1,1,-1), (-1,1,1,-1,1,1,-1,-1,1,1), (-1,1,1,-1,1,1,1,1,-1,-1), (-1,-1,-1,-1,1,1,1,1,1,1), (-1,1,1,1,-1,1,1,-1,-1), (1,-1,1,1,1,-1,-1,1), (1,1,1,1,1,1,1,1,1)}, {(-1,-1,1,1,1,-1,1,1,-1,1), (-1,-1,1,1,1,1,-1,1,1,-1), (-1,1,1,-1,1,1,1,-1,1,1,1), (-1,1,1,-1,1,1,1,1,-1,-1), (-1,-1,-1,-1,1,1,1,1,1,1), (1,-1,-1,1,1,-1,1,1,1,-1), (-1,-1,-1,-1,-1,-1,-1,-1), (-1,1,1,1,-1,1,1,1,-1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (-1,-1,-1,-1,1,1,1,1,1), (1,-1,-1,1,1,-1,1,1,1,-1), (-1,-1,-1,-1,-1,-1,-1,-1,-1), (1,-1,-1,1,1,1,-1,-1,1,1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (1,-1,-1,1,1,-1,1,1,1,-1), (1,-1,-1,1,1,-1,1,-1,-1,1), (1,1,1,1,1,1,1,1,1,1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (-1,1,1,-1,1,1,1,1,-1,-1), (1,1,1,1,1,-1,-1,1,-1), (-1,-1,-1,-1,-1,-1,-1,-1), (-1,1,1,1,-1,1,1,1,-1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (-1,-1,1,-1,1,1,1,1,-1,-1), (1,-1,-1,1,1,-1,1,1,1,-1), (-1,-1,-1,-1,-1,-1,-1,-1,-1), (1,1,1,1,1,1,1,1,1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (1,-1,-1,1,1,-1,1,1,1,-1), (1,1,1,1,-1,-1,-1,-1,-1), (-1,-1,-1,-1,-1,-1,-1,-1), (-1,1,1,1,-1,-1,1,1,1,-1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (1,-1,-1,1,1,-1,1,1,1,-1), (1,1,1,1,-1,-1,-1,-1,-1), (-1,-1,-1,-1,-1,-1,-1,-1,-1), (1,-1,-1,1,1,1,-1,-1,1,1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (1,-1,-1,1,1,-1,1,1,1,-1), (1,1,1,1,-1,-1,-1,-1,-1), (1,-1,-1,1,1,1,-1,-1,1), (1,1,1,1,1,1,1,1,1)}, {(-1,-1,1,1,1,-1,1,1,-1,1), (-1,-1,1,1,1,1,-1,1,1,-1), (-1,1,1,-1,1,1,1,-1,1,1,1), (1,-1,1,1,-1,1,-1,-1,1,1), (-1,-1,-1,-1,1,1,1,1,1,1), (-1,1,1,1,-1,1,1,-1,-1,1), (-1,-1,-1,-1,-1,-1,-1,-1,-1), (-1,1,1,1,-1,-1,1,1,1,-1)}, {(-1,-1,1,1,1,-1,1,1,-1,1), (-1,-1,1,1,1,1,-1,1,1,-1), (-1,1,1,-1,1,1,-1,-1,1,1,1), (1,-1,1,1,-1,1,-1,-1,1,1), (-1,-1,-1,-1,1,1,1,1,1,1), (-1,1,1,1,-1,1,1,-1,-1), (1,1,1,1,1,1,1,1,1)}, {(-1,-1,1,1,1,-1,1,1,-1,1), (-1,-1,1,1,1,1,-1,1,1,-1), (-1,1,1,-1,1,1,-1,-1,1,1,1), (1,-1,1,1,-1,1,-1,-1,1,1), (-1,-1,-1,-1,1,1,1,1,1,1), (-1,1,1,1,-1,1,1,-1,-1,1), (1,-1,1,1,1,-1,-1,1), (1,1,1,1,1,1,1,1,1)}, {(-1,-1,1,1,1,-1,1,1,-1,1), (-1,-1,1,1,1,1,-1,1,1,-1), (-1,1,1,-1,1,1,-1,-1,1,1), (1,-1,1,1,-1,1,-1,-1,1,1), (-1,1,1,-1,1,1,-1,-1,1,1), (1,1,1,1,1,-1,-1,-1,-1), (-1,-1,-1,-1,-1,-1,-1,-1,-1), (-1,1,1,1,-1,-1,1,1,1,-1)}, {(-1,-1,1,1,1,-1,1,1,-1,1), (-1,-1,1,1,1,1,-1,1,1,-1), (-1,1,1,-1,1,1,-1,-1,1,1,1), (1,-1,1,1,-1,1,-1,-1,1,1), (-1,-1,-1,1,1,1,1,1,1), (1,-1,1,1,1,-1,-1,1), (1,1,1,1,1,1,1,1,1)}, {(-1,-1,1,1,1,-1,1,-1,1,1), (-1,-1,1,1,1,1,-1,1,1,-1), (-1,1,1,-1,1,1,-1,-1,1,1,1), (1,-1,1,1,-1,1,-1,-1,1,1), (-1,1,1,1,-1,1,-1,-1,1,1), (1,1,1,1,1,-1,-1,1,-1), (-1,-1,-1,-1,-1,-1,-1,-1,-1), (-1,1,1,1,-1,-1,1,1,1,-1)}, {(-1,-1,1,1,1,-1,1,1,-1,1), (-1,-1,1,1,1,1,-1,1,1,-1), (-1,1,1,-1,1,1,1,-1,1,1,1), (1,-1,1,1,-1,-1,1,1,1), (-1,1,1,1,-1,1,-1,-1,1,1), (-1,-1,-1,-1,-1,-1,-1,-1), (1,-1,-1,1,1,1,-1,-1,1,1)}, {(-1,-1,1,1,1,-1,1,1,-1,1), (-1,-1,1,1,1,1,-1,1,1,-1), (-1,1,1,-1,1,1,-1,-1,1,1,1), (1,-1,1,1,-1,-1,1,1,1), (-1,-1,-1,-1,1,1,1,1,1,1), (1,-1,1,1,1,-1,-1,1,-1), (1,1,1,1,1,1,1,1,1)}, {(-1,-1,1,1,1,-1,1,-1,1,1), (-1,-1,1,1,1,1,-1,1,-1), (-1,1,1,-1,1,1,-1,-1,1,1,1), (1,-1,1,1,-1,-1,-1,1,1,1), (1,-1,-1,1,1,-1,1,1,1,-1), (-1,1,1,1,-1,-1,1,1,1,-1), (1,1,1,1,1,1,1,1,1)}, {(-1,-1,1,1,1,-1,1,-1,1), (-1,-1,1,1,1,1,-1,1,-1), (-1,1,1,-1,1,1,-1,-1,1,1,1), (1,-1,1,1,-1,-1,-1,1,1,1), (-1,1,1,1,-1,1,-1,-1,1,1), (1,1,1,1,1,-1,-1,-1,-1), (-1,-1,-1,-1,-1,-1,-1,-1,-1), (-1,1,1,1,-1,-1,1,1,1,-1)}, {(-1,-1,1,1,1,-1,1,1,-1,1), (-1,-1,1,1,1,1,-1,1,1,-1), (-1,1,1,-1,1,-1,-1,1,1,1), (1,-1,1,1,-1,-1,1,1,1), (1,-1,-1,1,1,-1,1,1,1,-1), (1,1,1,1,1,-1,-1,-1,-1), (-1,1,1,1,-1,-1,1,1,1,-1), (1,1,1,1,1,1,1,1,1)}, {(-1,-1,1,1,1,-1,1,1,-1,1), (-1,-1,1,1,1,1,-1,1,1,-1), (-1,1,1,-1,1,1,-1,-1,1,1,1), (-1,1,1,-1,1,1,1,1,-1,-1), (1,-1,-1,1,1,-1,1,1,1,-1), (1,1,1,1,1,-1,-1,-1,-1), (-1,-1,-1,-1,-1,-1,-1,-1,-1), (-1,1,1,1,-1,-1,1,1,1,-1)

1,1,-1), (-1,1,-1,1,-1,-1,1,1), (1,-1,1,-1,-1,-1,1,1), (1,-1,-1,1,-1,1,1,-1), (1,1,1,1,-1,-1,-1,-1), (1,-1,-1,1,1,-1,-1,1), (1,1,1,1,1,1,1,1)}, {(-1,-1,1,1,-1,1,-1,1), (-1,-1,1,1,1,1,-1,1,-1), (-1,1,-1,1,1,1,-1,-1), (1,-1,1,-1,1,1,-1,-1), (-1,-1,-1,-1,1,1,1,1), (-1,1,1,1,-1,1,-1,-1), (-1,-1,-1,-1,-1,-1,-1,-1), (-1,1,1,-1,-1,1,1,-1)}, {(-1,-1,1,1,-1,1,-1,1), (-1,-1,1,1,1,1,-1,1,-1), (-1,1,-1,1,1,1,1,-1,-1), (1,-1,1,-1,1,1,-1,-1), (-1,-1,-1,-1,1,1,1,1), (-1,1,1,1,-1,1,-1,-1), (-1,-1,-1,-1,-1,-1,-1,-1), (1,-1,1,1,1,-1,-1,1)}, {(-1,-1,1,1,-1,1,-1,1), (-1,-1,1,1,1,1,-1,1,-1), (-1,1,-1,1,1,1,1,-1,-1), (1,-1,1,-1,1,1,-1,-1), (-1,-1,-1,-1,1,1,1,1), (-1,1,1,1,-1,1,-1,-1), (-1,1,1,1,-1,1,1,1,-1), (1,1,1,1,1,1,1,1)}, {(-1,-1,1,1,-1,1,-1,1), (-1,-1,1,1,1,1,-1,1,-1), (-1,1,-1,1,1,1,1,-1,-1), (1,-1,1,-1,1,1,-1,-1), (-1,-1,-1,-1,1,1,1,1), (-1,1,1,1,-1,1,-1,-1,1), (1,-1,-1,1,1,1,-1,-1,1), (1,1,1,1,1,1,1,1)}, {(-1,-1,1,1,-1,1,-1,1), (-1,1,1,1,1,-1,1,-1), (-1,1,-1,1,1,1,1,-1,-1), (1,-1,1,-1,1,1,1,-1,-1), (-1,-1,-1,-1,1,1,1,1), (1,-1,1,-1,1,-1,1,1,-1), (-1,-1,-1,-1,-1,-1,-1,-1), (-1,1,1,1,-1,1,1,1,-1)}, {(-1,-1,1,1,-1,1,-1,1), (-1,-1,1,1,1,1,-1,1,-1), (-1,1,-1,1,1,1,1,-1,-1), (1,-1,-1,1,1,-1,1,1,-1), (-1,-1,-1,-1,1,1,1,1), (1,-1,-1,1,-1,1,1,1,-1), (-1,-1,-1,-1,-1,-1,-1,-1), (1,-1,-1,1,1,1,-1,-1,1)}, {(-1,-1,1,1,-1,1,1,-1,1), (-1,-1,1,1,1,1,-1,1,-1), (-1,1,-1,1,1,1,1,-1,-1), (1,-1,1,-1,1,1,1,-1,-1), (-1,-1,-1,-1,1,1,1,1,1), (1,-1,1,1,1,-1,-1,1,-1), (-1,1,1,1,-1,1,1,1,-1), (1,1,1,1,1,1,1,1)}, {(-1,-1,1,1,-1,1,-1,1), (-1,-1,1,1,1,1,-1,1,-1), (-1,1,-1,1,1,1,1,-1,-1), (1,-1,1,-1,1,1,1,-1,-1), (-1,-1,-1,-1,1,1,1,1,1), (1,-1,-1,1,1,1,-1,-1,1), (1,-1,-1,1,1,1,-1,1,-1), (1,1,1,1,1,1,1,1)}, {(-1,-1,1,1,-1,1,-1,1), (-1,-1,1,1,1,1,-1,1,-1), (-1,1,-1,1,1,1,1,-1,-1), (1,-1,1,-1,1,1,1,-1,-1), (-1,-1,-1,-1,1,1,1,1,1), (1,1,1,1,1,-1,-1,-1,-1), (-1,-1,-1,-1,-1,-1,-1,-1), (-1,1,1,1,-1,1,1,1,-1)}, {(-1,-1,1,1,-1,1,-1,1), (-1,-1,1,1,1,1,-1,1,-1), (-1,1,-1,1,1,1,1,-1,-1), (1,-1,1,-1,1,1,1,-1,-1), (-1,-1,-1,-1,1,1,1,1,1), (1,1,1,1,1,-1,-1,-1,-1), (-1,-1,-1,-1,-1,-1,-1,-1), (1,-1,-1,1,1,1,-1,-1,1)}, {(-1,-1,1,1,-1,1,-1,1), (-1,-1,1,1,1,1,-1,1,-1), (-1,1,-1,1,1,1,1,-1,-1), (1,-1,1,-1,1,1,1,-1,-1), (-1,1,1,1,1,-1,-1,-1,-1), (-1,-1,1,1,-1,-1,1,-1,-1,1), (1,1,1,1,1,1,1,1)}, {(-1,-1,1,1,-1,1,-1,1), (-1,-1,1,1,1,1,-1,1,-1), (-1,1,-1,1,1,1,1,-1,-1), (1,-1,1,-1,1,1,1,-1,-1), (-1,1,1,1,-1,1,-1,-1,1), (1,1,1,1,1,1,1,1)}, {(-1,-1,1,1,-1,1,-1,1), (-1,-1,1,1,1,1,-1,1,-1), (-1,1,-1,1,1,1,1,-1,-1), (1,-1,1,-1,1,1,1,-1,-1), (-1,1,1,1,-1,1,-1,-1,1), (1,1,1,1,1,-1,-1,-1,-1), (-1,-1,-1,-1,-1,-1,-1,-1), (-1,1,1,1,-1,1,1,1,-1)}, {(-1,-1,1,1,-1,1,-1,1), (-1,-1,1,1,1,1,-1,1,-1), (-1,1,-1,1,1,1,1,-1,-1), (1,-1,1,-1,1,1,1,-1,-1), (-1,1,1,1,-1,1,-1,-1,1), (1,1,1,1,1,-1,-1,-1,-1), (-1,1,1,1,-1,1,1,1,-1), (1,1,1,1,1,1,1,1)}, {(-1,-1,1,1,-1,1,-1,1), (-1,-1,1,1,1,1,-1,1,-1), (-1,1,1,-1,1,1,1,-1,-1,1), (1,-1,1,-1,1,1,1,-1,-1), (-1,-1,-1,-1,1,1,1,1), (-1,1,1,1,-1,-1,-1,-1), (1,-1,-1,1,1,1,-1,-1,1), (1,1,1,1,1,1,1,1)}, {(-1,-1,1,1,-1,1,-1,1), (-1,-1,1,1,1,1,-1,1,-1), (1,-1,1,-1,-1,1,1,1), (1,-1,1,-1,1,1,1,-1,-1), (-1,-1,-1,-1,1,1,1,1,1), (-1,1,1,1,-1,1,-1,1), (-1,-1,-1,-1,-1,-1,-1,-1), (-1,1,1,1,-1,1,1,1,-1)}, {(-1,-1,1,1,-1,1,-1,1), (-1,-1,1,1,1,1,-1,1,-1), (1,-1,1,-1,-1,-1,1,1,1), (1,-1,1,-1,1,1,1,-1,-1), (-1,-1,-1,-1,1,1,1,1,1), (-1,1,1,1,-1,1,-1,-1,1), (-1,-1,-1,-1,-1,-1,-1,-1), (1,-1,1,1,1,-1,-1,1)}, {(-1,-1,1,1,-1,1,-1,1), (-1,-1,1,1,1,1,-1,1,-1), (1,-1,1,-1,-1,-1,1,1,1), (1,-1,1,-1,1,1,1,-1,-1), (-1,-1,-1,-1,1,1,1,1,1), (-1,1,1,1,-1,1,-1,-1,1), (-1,1,1,1,-1,1,1,1,-1), (1,1,1,1,1,1,1,1)}, {(-1,-1,1,1,-1,1,-1,1), (-1,-1,1,1,1,1,-1,1,-1), (1,-1,1,-1,-1,-1,1,1,1), (1,-1,1,-1,1,1,1,-1,-1), (-1,-1,-1,-1,1,1,1,1,1), (-1,1,1,1,-1,-1,-1,-1), (-1,1,1,1,-1,1,1,1,-1), (1,1,1,1,1,1,1,1)}, {(-1,-1,1,1,-1,1,-1,1), (-1,-1,1,1,1,1,-1,1,-1), (1,-1,1,-1,-1,-1,1,1,1), (1,-1,1,-1,1,1,1,-1,-1), (-1,1,1,1,-1,1,-1,-1,1), (1,1,1,1,1,-1,-1,-1,-1), (-1,-1,-1,-1,-1,-1,-1,-1), (-1,1,1,1,-1,1,1,1,-1)}, {(-1,-1,1,1,-1,1,-1,1), (-1,1,1,1,1,-1,1,-1), (1,-1,1,-1,-1,-1,1,1,1), (1,-1,1,-1,1,1,1,-1,-1), (-1,1,1,1,-1,1,-1,-1,1), (1,1,1,1,1,-1,-1,-1,-1), (-1,1,1,1,-1,1,1,1,-1), (1,1,1,1,1,1,1,1)}, {(-1,-1,1,1,-1,1,-1,1), (-1,1,1,-1,1,1,1,-1,-1), (-1,1,1,-1,-1,1,1,1), (1,1,-1,1,1,-1,1,1,-1,-1,-1), (-1,-1,-1,1,1,1,1,1), (-1,1,1,1,1,1,-1,-1,-1), (-1,-1,-1,-1,-1,-1,-1,-1), (-1,1,1,1,-1,1,1,1,-1)}, {(-1,-1,1,1,-1,1,-1,1), (-1,1,-1,1,1,1,-1,1,-1), (-1,1,-1,1,-1,-1,1,1,1), (1,1,-1,1,1,-1,1,1,-1), (-1,1,1,1,1,1,-1,-1,1,-1), (-1,-1,1,1,1,-1,1,-1), (-1,1,1,1,1,1,-1,-1,1)}, {(-1,-1,1,1,-1,1,-1,1), (-1,1,1,-1,-1,1,1,-1), (1,1,-1,1,1,-1,1,1,-1), (-1,-1,-1,1,1,1,1,1), (-1,1,1,1,-1,1,-1,-1,1), (1,1,1,1,1,1,1,1)}, {(-1,-1,1,1,-1,1,-1,1), (-1,1,1,-1,-1,1,1,-1,1), (-1,1,-1,1,1,-1,-1,1,1,1), (1,1,-1,1,1,-1,1,1,-1), (-1,-1,-1,1,1,1,1,1), (-1,1,1,1,1,1,-1,-1,-1), (-1,-1,-1,-1,-1,-1,-1,-1), (1,-1,-1,1,1,1,-1,-1,1)}, {(-1,-1,1,1,-1,1,-1,1), (-1,1,1,-1,-1,1,1,-1,1), (-1,1,-1,1,-1,-1,1,1,1), (1,-1,1,-1,1,1,-1,-1), (-1,1,1,1,-1,1,-1,-1,1), (1,1,1,1,-1,-1,-1,-1), (-1,-1,-1,-1,-1,-1,-1,-1), (-1,1,1,1,-1,1,1,1,-1)}

1,1,1,-1,-1,1,1,-1), (1,1,1,1,1,1,1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,-1,-1,1,1,1,1,-1), (-1,1,1,1,1,-1.-1,-1), (1,-1,-1,1,1,-1,-1,1), (1,1,1,1,1,1,1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,-1,-1,1,1,1,1,-1), (1,-1,-1,-1,-1,1,1,1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (-1,1,-1,1,-1,-1,1,1), (1,1,-1,1,-1,1,1,-1,-1), (-1,-1,-1,1,1,1,1,-1), (1,-1,-1,-1,-1,1,1,1,1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,-1,-1,1,1,1,1,-1), (1,-1,-1,-1,-1,1,1,1), (-1,1,1,1,-1,-1,1,1,-1), (1,1,1,1,1,1,1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,-1,-1,1,1,1,1,-1), (1,-1,-1,-1,-1,1,1,1), (1,-1,-1,1,1,-1,-1,1), (1,1,1,1,1,1,1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,1,1,1,1,1,-1,-1,-1), (1,1,1,1,-1,-1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,1,1,1,1,1,-1,-1,-1), (1,1,1,1,-1,-1,-1,-1,-1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (-1,1,-1,-1,1,-1,1,1,1), (1,1,-1,1,-1,1,-1,-1), (-1,1,1,1,1,1,-1,-1,-1), (1,1,1,1,-1,-1,-1,-1,-1), (-1,1,1,1,-1,-1,1,1,-1), (1,1,1,1,1,1,1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,1,1,1,1,1,-1,-1,-1), (1,1,1,1,-1,-1,-1,-1,-1), (1,-1,-1,1,1,-1,-1,1), (1,1,1,1,1,1,1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,-1,-1,-1,-1,1,1,1,1), (1,1,1,-1,-1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,-1,-1,-1,-1,1,1,1,1), (1,1,1,-1,-1,-1,-1,-1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (-1,1,-1,-1,1,-1,1,1,1), (1,1,-1,1,-1,1,-1,-1), (-1,1,1,1,1,1,-1,-1,-1), (1,1,1,-1,-1,-1,-1,-1), (-1,1,1,1,-1,-1,1,1,-1), (1,1,1,1,1,1,1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,1,-1,-1,-1,1,1,1,1), (1,1,1,-1,-1,-1,-1,-1), (-1,1,-1,-1,-1,-1,-1,-1), (-1,1,1,1,-1,-1,1,1,-1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,-1,-1,-1,-1,1,1,1,1), (1,1,1,-1,-1,-1,-1,-1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (-1,1,-1,1,-1,-1,1,1), (1,1,-1,1,-1,1,-1,-1), (-1,1,-1,-1,-1,1,1,1,1), (1,1,1,-1,-1,-1,-1,-1), (1,-1,-1,-1,-1,1,1,1), (1,1,1,1,1,1,1,1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,-1,-1,1,1,1,1,-1), (-1,1,1,1,1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,-1,-1,1,1,1,1,-1), (1,-1,-1,-1,-1,1,1,1,1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,-1,-1,1,1,1,1,-1), (1,-1,-1,-1,-1,1,1,1,1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,-1,-1,1,1,1,1,-1), (1,-1,-1,-1,-1,1,1,1,1), (1,-1,-1,1,1,-1,-1,1), (1,1,1,1,1,1,1,1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,1,1,1,1,1,-1,-1,-1), (1,1,1,1,-1,-1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,1,1,1,1,1,-1,-1,-1), (1,1,1,1,-1,-1,-1,-1,-1), (-1,1,1,1,-1,-1,1,1,-1), (1,1,1,1,1,1,1,1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,-1,-1,1,1,1,1,1,-1), (1,1,1,-1,-1,-1,-1,-1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,1,1,1,1,1,-1,-1,-1), (1,1,1,1,-1,-1,-1,-1,-1), (1,-1,-1,-1,-1,1,1,1,1), (1,-1,-1,1,1,-1,-1,1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,1,1,1,1,1,-1,-1,-1), (1,1,1,1,-1,-1,-1,-1,-1), (-1,1,1,1,-1,-1,1,1,-1), (1,-1,-1,1,1,-1,-1,1)}, {(-1,-1,1,1,-1,1,-1,1), (-1,1,-1,-1,1,1,-1,1), (1,-1,1,-1,1,1,1,-1,-1), (1,1,-1,1,-1,1,-1,-1), (-1,-1,-1,-1,1,1,1,1,-1), (1,1,1,-1,-1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (-1,1,-1,1,1,1,1,-1,-1), (1,1,-1,-1,1,-1,-1,1,1,-1), (-1,-1,-1,-1,-1,1,1,1,1), (-1,1,1,1,1,1,-1,-1,-1), (1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (-1,1,1,-1,1,1,1,-1,-1), (1,1,-1,-1,1,-1,-1,1,1,-1), (-1,-1,-1,-1,-1,1,1,1,1), (1,1,1,1,-1,-1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (-1,1,1,-1,1,1,1,-1,-1), (1,1,-1,-1,1,-1,-1,1,1,-1), (-1,1,1,1,1,1,-1,-1,-1), (1,1,1,1,-1,-1,-1,-1,-1), (1,-1,-1,-1,-1,1,1,1,1), (1,1,1,1,1,1,1,1)}, {(-1,-1,1,1,-1,1,-1,1), (-1,1,-1,-1,1,1,-1,1), (-1,1,1,-1,1,1,1,-1,-1), (1,1,-1,-1,1,-1,-1,1,1,-1), (-1,1,1,1,1,1,-1,-1,-1), (1,1,1,1,-1,-1,-1,-1,-1), (-1,1,1,1,-1,-1,1,1,-1), (1,1,1,1,1,1,1,1)}, {(-1,-1,1,1,-1,1,-1,1), (-1,1,-1,-1,1,1,-1,1), (-1,1,1,-1,1,1,1,-1,-1), (1,1,-1,-1,1,-1,-1,1,1,-1), (1,-1,-1,-1,-1,1,1,1,1), (1,1,1,-1,-1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (1,-1,1,-1,1,1,1,-1,-1), (1,1,-1,-1,1,-1,-1,1,1,-1), (-1,-1,-1,-1,-1,1,1,1,1), (1,1,1,-1,-1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (1,-1,1,-1,1,1,1,-1,-1), (1,1,-1,-1,1,-1,-1,1,1,-1), (1,-1,-1,-1,-1,1,1,1,1), (1,1,1,-1,-1,-1,-1,-1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (1,-1,1,-1,1,1,1,-1,-1), (1,1,-1,-1,1,-1,-1,1,1,-1), (1,-1,-1,-1,-1,1,1,1,1), (1,1,1,-1,-1,-1,-1,-1), (1,-1,-1,1,1,-1,-1,1), (1,1,1,1,1,1,1,1)}, {(-1,-1,1,1,-1,1,-1,1), (-1,1,-1,-1,1,1,-1,1), (1,-1,1,-1,1,1,1,-1,-1), (1,1,-1,-1,1,-1,-1,1,1,-1), (-1,-1,-1,-1,1,1,1,1,-1), (1,1,1,1,-1,-1,-1,-1,-1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (1,-1,1,-1,1,1,1,-1,-1), (1,1,-1,-1,1,-1,-1,1,1,-1), (-1,1,1,1,1,1,-1,-1,-1), (1,1,1,1,-1,-1,-1,-1,-1), (1,-1,-1,1,1,-1,-1,1), (1,1,1,1,1,1,1,1)}, {(-1,-1,1,1,-1,1,-1,1), (-1,1,-1,-1,1,1,-1,1), (1,-1,1,-1,1,1,1,-1,-1), (1,1,-1,-1,1,-1,-1,1,1,-1), (1,-1,-1,-1,-1,1,1,1,1), (1,1,1,-1,-1,-1,-1,-1), (1,-1,-1,1,1,-1,-1,1), (1,1,1,1,1,1,1,1)}, {(-1,-1,1,1,-1,1,-1,1), (-1,1,-1,-1,1,1,-1,1), (-1,1,-1,1,1,1,1,-1,-1), (1,1,-1,-1,1,-1,-1,1,1,-1), (-1,-1,-1,-1,1,1,1,1,-1), (-1,1,1,1,1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (-1,1,-1,1,1,1,1,-1,-1), (1,1,-1,-1,1,-1,-1,1,1,-1), (-1,1,1,1,1,1,-1,-1,-1), (1,1,1,1,-1,-1,-1,-1,-1), (-1,-1,-1,-1,-1,-1,-1,-1), (1,-1,-1,1,1,-1,-1,1)}, {(-1,-1,1,1,-1,1,-1,1), (-1,1,-1,-1,1,1,-1,1), (-1,1,-1,1,1,1,1,-1,-1), (1,1,-1,-1,1,-1,-1,1,1,-1), (1,-1,-1,-1,-1,1,1,1,1), (1,1,1,-1,-1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1), (-1,1,-1,1,1,1,1,-1,-1), (1,1,-1,-1,1,-1,-1,1,1,-1), (-1,-1,-1,-1,-1,1,1,1,1), (-1,1,1,1,1,-1,-1,-1), (1,-1,-1,1,1,-1,-1,1), (1,1,1,1,1,1,1,1)}, {(-1,-1,1,1,-1,1,-1,1), (-1,1,-1,-1,1,1,-1,1), (-1,1,-1,1,1,1,1,-1,-1), (1,1,-1,-1,1,-1,-1,1,1,-1), (-1,1,1,1,1,1,-1,-1,-1), (1,1,1,1,-1,-1,-1,-1,-1), (-1,1,1,1,-1,-1,1,1,-1), (1,1,1,1,1,1,1,1)}, {(-1,-1,1,1,-1,1,-1,1), (-1,1,-1,-1,1,1,-1,1), (-1,1,-1,1,1,1,1,-1,-1), (1,1,-1,-1,1,-1,-1,1,1,-1), (-1,-1,-1,-1,-1,1,1,1,1), (1,1,1,-1,-1,-1,-1,-1), (1,-1,-1,1,1,-1,-1,1), (1,1,1,1,1,1,1,1)}, {(-1,-1,1,1,-1,1,-1,1), (-1,1,-1,-1,1,1,-1,1), (-1,1,-1,1,1,1,1,-1,-1), (1,1,-1,-1,-1,1,1,-1,-1), (-1,-1,-1,1,1,1,1,-1), (-1,1,1,1,1,-1,-1,-1), (-1,-1,-1,-1,-1,-1,-1,-1), (-1,1,1,1,-1,-1,1,1,-1)}, {(-1,-1,1,1,-1,1,-1,1), (-1,1,-1,-1,1,1,-1,1,1), (-1,1,1,-1,1,1,1,-1,-1), (1,1,-1,-1,-1,1,1,-1,-1), (-1,-1,-1,-1,-1,-1,-1,-1), (1,-1,-1,1,1,-1,-1,1)}, {(-1,-1,1,1,-1,1,-1,1), (-1,1,-1,1,1,-1,-1,1,1), (-1,1,1,-1,1,1,1,-1,-1), (1,1,-1,-1,-1,-1,1,1,-1,-1), (1,-1,-1,-1,-1,1,1,1,1), (-1,-1,-1,-1,-1,-1,-1,-1), (-1,1,1,1,-1,-1,1,1,-1)}, {(-1,-1,1,1,-1,1,-1,1), (-1,1,-1,1,1,-1,-1,1,1), (-1,1,-1,1,1,1,1,-1,-1), (1,1,-1,-1,-1,-1,1,1,-1,-1), (-1,-1,-1,-1,1,1,1,1,-1), (-1,1,1,1,1,-1,-1,-1), (1,-1,-1,1,1,-1,-1,1), (1,1,1,1,1,1,1,1)}, {(-1,-1,1,1,-1,1,-1,1), (-1,1,-1,1,1,-1,-1,1,1), (-1,1,-1,1,1,1,1,-1,-1), (1,1,-1,-1,-1,-1,1,1,-1,-1), (-1,-1,-1,-1,-1,1,1,1,1), (1,-1,-1,1,1,-1,-1,1), (-1,-1,-1,-1,-1,-1,-1,-1), (-1,1,1,1,-1,-1,1,1,-1)}, {(-1,-1,1,1,-1,1,-1,1), (-1,1,-1,1,1,-1,-1,1,1), (-1,1,-1,1,1,1,1,-1,-1), (1,1,-1,-1,-1,-1,1,1,-1,-1), (-1,-1,-1,-1,1,1,1,1,-1), (-1,1,1,1,-1,-1,1,1,-1), (1,-1,-1,1,1,-1,-1,1), (1,1,1,1,1,1,1,1)}, {(-1,-1,1,1,-1,1,-1,1), (-1,1,-1,1,1,-1,-1,1,1), (-1,1,-1,1,1,1,1,-1,-1), (1,1,-1,-1,-1,-1,1,1,-1,-1), (-1,-1,-1,1,1,1,1,-1), (1,-1,-1,1,1,-1,-1,1), (-1,-1,1,1,1,-1,-1,1,-1), (1,-1,-1,1,1,-1,-1,1)}, {(-1,-1,1,1,-1,1,-1,1), (-1,1,-1,1,1,-1,-1,1,1), (-1,1,1,1,1,1,1,-1,-1), (1,1,-1,-1,-1,-1,1,1,-1,-1), (-1,-1,-1,-1,1,1,1,1,-1), (-1,1,1,1,1,-1,-1,-1), (1,-1,-1,1,1,-1,-1,1), (1,1,1,1,1,1,1,1)}, {(-1,-1,1,1,-1,1,-1,1), (-1,1,-1,1,1,-1,-1,1,1), (-1,1,-1,1,1,1,1,-1,-1), (1,1,-1,-1,-1,1,1,-1,-1), (-1,-1,-1,1,1,1,1,-1), (1,-1,-1,-1,-1,1,1,1,1), (1,-1,-1,1,1,-1,-1,1), (-1,

(1,1,-1,-1,-1,1,-1,1), (-1,-1,-1,-1,1,1,1,1), (1,-1,-1,1,-1,1,1,-1), (-1,1,1,-1,-1,1,1,-1), (1,1,1,1,1,1,1,1)}, {(-1,-1,1,1,-1,1,-1,1), (-1,1,-1,1,-1,-1,1,1), (-1,1,-1,1,1,1,-1,-1), (1,1,-1,-1,-1,1,-1,1), (-1,-1,-1,-1,1,1,1,1), (1,-1,-1,1,-1,1,1,-1), (1,-1,-1,1,1,-1,1,1), (1,1,1,1,1,1,1,1)}, {(-1,-1,1,1,-1,1,-1,1), (-1,1,-1,1,-1,-1,1,1), (-1,1,-1,1,1,1,-1,-1), (1,1,-1,-1,-1,1,-1,1), (-1,1,1,-1,1,-1,-1,1), (1,1,1,-1,-1,-1,-1,-1), (-1,-1,-1,-1,-1,-1,-1,-1), (-1,1,1,1,-1,1,1,1,-1)}, {(-1,-1,1,1,-1,1,-1,1), (-1,1,-1,1,-1,-1,1,1,1), (-1,1,-1,1,1,1,1,-1,-1), (1,1,-1,-1,-1,1,1,-1,1), (-1,1,1,1,-1,1,1,-1,-1,1), (1,1,1,1,-1,-1,-1,-1), (-1,-1,-1,-1,-1,-1,-1,-1), (1,-1,-1,1,1,1,-1,-1,1)}, {(-1,-1,1,1,1,-1,1,1,-1,1), (-1,1,1,-1,1,-1,-1,1,1), (-1,1,-1,1,1,1,-1,-1), (1,1,-1,-1,-1,1,1,-1,1), (-1,1,1,1,-1,1,-1,-1,1), (1,1,1,1,-1,-1,-1,-1,-1), (-1,1,1,1,-1,-1,1,1,-1,1), (1,1,1,1,1,1,1,1)}, {(-1,-1,1,1,1,-1,1,1,-1,1), (-1,1,-1,1,-1,-1,1,1), (-1,1,-1,1,1,1,1,-1,-1,1), (1,1,-1,-1,1,-1,1,1,-1,1), (-1,1,1,1,-1,1,1,-1,-1,1), (1,1,1,1,-1,-1,-1,-1,1), (1,-1,-1,1,1,1,-1,-1,1), (1,1,1,1,1,1,1,1)}, {(-1,-1,1,1,1,-1,1,1,-1,1), (-1,1,1,-1,1,-1,-1,1,1,1), (-1,1,-1,1,1,1,1,-1,-1,1), (1,1,-1,-1,-1,1,1,-1,1), (1,-1,-1,1,1,-1,1,1,-1,1), (1,1,1,1,-1,-1,-1,-1), (-1,-1,-1,-1,-1,-1,-1,-1), (-1,1,1,1,-1,1,1,1,-1,1)}, {(-1,-1,1,1,1,-1,1,1,-1,1), (-1,1,-1,1,-1,-1,1,1,1), (-1,1,-1,1,1,1,1,-1,-1,1), (1,1,-1,-1,-1,1,1,-1,1), (-1,1,1,1,-1,1,1,-1,-1,1), (1,1,1,1,-1,-1,-1,-1,1), (1,-1,-1,1,1,-1,1,1,-1,1), (1,1,1,1,1,1,1,1)}, {(-1,-1,1,1,1,-1,1,1,-1,1), (-1,1,-1,1,-1,-1,1,1,1), (-1,1,-1,1,1,1,1,-1,-1,1), (1,1,-1,-1,-1,1,1,-1,1), (-1,1,1,1,-1,1,1,-1,-1,1), (1,1,1,1,-1,-1,-1,-1,-1), (-1,-1,-1,-1,-1,-1,-1,-1,-1), (-1,1,1,1,-1,1,1,1,1,-1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1), (-1,1,1,1,-1,1,1,-1,-1,1), (-1,-1,-1,-1,-1,-1,-1,-1), (-1,1,1,1,-1,1,1,1,-1)}, {(-1,-1,1,1,1,-1,1,1,-1,1), (-1,1,1,-1,1,-1,-1,1,1,1), (1,-1,1,1,-1,-1,1,1,-1,1), (1,1,-1,-1,-1,1,1,-1,1), (-1,-1,-1,-1,1,1,1,1), (-1,1,1,1,-1,-1,1,1,-1,1), (-1,-1,-1,-1,-1,-1,-1,-1,-1), (1,-1,-1,1,1,1,-1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1,1), (-1,1,1,1,-1,1,1,-1,-1,1), (1,-1,-1,1,1,-1,1,1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1,1), (1,-1,-1,1,1,-1,1,1,-1,1), (-1,1,1,1,-1,1,1,-1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,1,1,1,-1,1,1,-1,-1,1), (1,1,1,1,-1,-1,-1,-1,-1), (-1,-1,-1,-1,-1,-1,-1,-1,-1), (-1,1,1,1,-1,1,1,1,1,-1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,1,1,1,-1,1,1,-1,-1,1), (1,1,1,1,-1,-1,-1,-1,-1), (-1,-1,-1,-1,-1,-1,-1,-1,-1), (1,-1,-1,1,1,1,-1,-1,1)}, {(-1,-1,1,1,1,-1,1,1,-1,1), (-1,1,1,-1,1,-1,-1,1,1,1), (-1,1,1,1,-1,1,1,-1,-1,1), (1,1,1,1,1,-1,-1,-1,-1,1), (-1,1,1,1,-1,1,1,-1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1,1), (1,1,1,1,1,-1,-1,-1,-1,1), (-1,-1,-1,-1,1,1,1,1,-1,1), (-1,-1,-1,-1,-1,-1,-1,-1,-1), (-1,1,1,1,-1,1,1,1,-1,1)}, {(-1,-1,1,1,1,-1,1,1,-1,1), (-1,1,-1,1,-1,-1,1,1,1), (1,-1,1,1,-1,-1,-1,1,1,1), (1,1,-1,-1,-1,1,1,-1,1), (-1,-1,-1,-1,-1,1,1,1,1,-1,1), (1,1,1,1,1,-1,-1,-1,-1,1), (-1,-1,-1,-1,-1,-1,-1,-1,-1), (-1,1,1,1,-1,1,1,1,-1,1)}, {(-1,-1,1,1,1,-1,1,1,-1,1), (1,1,-1,-1,-1,1,1,-1,1), (-1,1,1,1,-1,1,1,-1,-1,1), (1,1,1,1,1,-1,-1,-1,-1,1), (-1,1,1,1,-1,1,1,-1,1,1,-1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,1,1,1,-1,-1,1,1,-1,1), (1,1,1,1,1,-1,-1,-1,-1,1), (1,-1,-1,1,1,1,-1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1,1), (1,1,1,1,1,-1,-1,-1,-1,1), (-1,-1,-1,-1,-1,-1,-1,-1,-1), (1,-1,-1,1,1,1,-1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1,1,1), (1,1,1,1,1,1,-1,-1,-1,1), (1,-1,-1,1,1,1,-1,-1,1), (-1,-1,-1,-1,-1,-1,-1,-1,-1), (-1,1,1,1,-1,1,1,1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1), (-1,1,1,1,-1,1,1,-1,-1,1), (1,1,1,1,1,1,1,1,1)}, {(-1,-1,1,1,1,-1,1,1,-1,1), (-1,1,1,-1,-1,-1,1,1,1), (1,-1,1,1,-1,-1,1,1,-1,1), (1,1,-1,-1,-1,1,1,-1,1), (-1,-1,-1,-1,1,1,1,1), (-1,-1,-1,-1,-1,-1,-1,-1), (-1,1,1,1,-1,1,1,1,-1,1)}, {(-1,-1,1,1,1,-1,1,1,-1,1), (-1,1,1,-1,-1,-1,1,1,1), (1,-1,1,1,-1,-1,1,1,-1,1), (1,1,1,1,1,-1,-1,-1,-1,1), (-1,1,1,1,-1,1,1,-1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,1,1,1,-1,-1,-1,-1,1), (-1,1,1,1,-1,1,1,-1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,1,1,1,-1,1,1,-1,-1,1), (1,1,1,1,1,-1,-1,-1,-1,1), (-1,-1,-1,-1,-1,-1,-1,-1,-1), (-1,1,1,1,-1,1,1,1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1,1), (-1,1,1,1,-1,-1,-1,1,1,-1), (1,-1,-1,1,1,-1,1,1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,1,-1,1,1,-1,-1,1), (-1,1,1,1,1,1,-1,-1,-1,1), (1,1,1,-1,-1,-1,1,1,-1,1), (-1,-1,-1,-1,-1,-1,-1,-1,-1), (1,-1,-1,1,1,1,-1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,1,-1,1,1,-1,-1,1), (-1,1,1,1,1,1,-1,-1,-1,1), (1,1,-1,-1,-1,-1,1,1,-1,1), (1,-1,-1,-1,-1,1,1,1,1,-1), (1,-1,1,1,1,-1,1,1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,1,1,1,1,1,1,-1), (-1,1,1,1,1,1,-1,-1,-1,1), (1,1,1,-1,-1,-1,1,1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,-1,1,1,1,1,1,-1), (-1,1,1,1,1,1,-1,-1,-1,-1), (1,-1,-1,1,1,1,-1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,1,-1,1,1,-1,-1,1), (-1,-1,1,1,1,1,1,1,1,-1), (1,-1,-1,-1,1,1,1,1,1,-1), (-1,-1,-1,-1,-1,-1,-1,-1,-1), (1,-1,-1,1,1,1,-1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,1,-1,1,1,-1,-1,1), (-1,-1,1,1,1,1,1,1,1,-1), (-1,1,1,1,1,1,-1,-1,-1,1), (1,-1,-1,-1,-1,1,1,1,1,-1,-1), (1,-1,-1,1,1,1,-1,-1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,1,1,1,1,1,1,1,-1), (-1,1,1,1,1,1,-1,-1,-1,-1), (1,1,1,-1,-1,-1,1,1,-1,1), (1,1,1,1,1,1,1,1,1)}, {(-1,-1,1,1,1,-1,1,1,-1,1), (-1,1,-1,1,-1,-1,1,1,1), (1,-1,1,1,-1,-1,1,1,-1,1), (1,1,-1,-1,-1,1,1,-1,1), (-1,-1,-1,1,1,1,1,1,1,-1), (-1,1,-1,-1,-1,-1,1,1,-1,1), (1,-1,-1,-1,-1,1,1,1,1,-1), (-1,1,-1,-1,-1,-1,1,1,-1,1)}, {(-1,-1,1,1,1,-1,1,1,-1,1), (-1,1,-1,1,-1,-1,1,1,1), (1,-1,1,1,-1,-1,-1,1,1,-1,1), (1,1,-1,-1,1,-1,1,1,-1,-1,1), (-1,-1,-1,1,1,1,1,1,1,-1), (-1,1,-1,-1,-1,-1,1,1,-1,1), (-1,1,1,1,-1,1,1,1,1,-1), (1,-1,-1,1,1,1,-1,-1,1)}, {(-1,-1,1,1,1,-1,1,1,-1,1), (-1,1,-1,1,-1,-1,1,1,1), (1,-1,1,1,-1,-1,-1,1,1,-1,1), (1,1,-1,-1,-1,1,1,-1,1), (-1,1,1,1,1,1,-1,-1,-1,1), (1,1,-1,-1,-1,-1,1,1,-1,1), (-1,-1,-1,-1,-1,-1,-1,-1,-1), (1,-1,-1,1,1,1,-1,-1,1)}

1,-1,1,1,-1,-1,1)}, {(-1,-1,1,1,-1,1,-1,1), (-1,1,-1,1,-1,-1,1,1), (1,-1,1,1,-1,-1,1,-1), (1,1,-1,1,-1,1,-1,-1), (-1,1,1,1,1,-1,-1,-1), (1,1,1,-1,-1,-1,-1,1), (-1,1,1,-1,-1,1,1,-1), (1,1,1,1,1,1,1,1)}, {(-1,-1,1,1,-1,1,-1,1), (-1,1,-1,1,-1,-1,1,1), (1,-1,1,1,-1,-1,1,-1), (1,1,-1,1,-1,1,-1,-1), (-1,1,1,1,1,-1,-1,-1), (1,1,1,-1,-1,-1,-1,1), (1,-1,-1,1,1,-1,-1,1), (1,1,1,1,1,1,1,1)}, {(-1,-1,1,1,-1,1,-1,1), (-1,1,-1,1,-1,-1,1,1), (1,-1,1,1,-1,-1,1,-1), (1,1,-1,1,-1,1,-1,-1), (1,-1,-1,-1,-1,1,1,1), (1,1,1,-1,-1,-1,-1,1), (-1,-1,-1,-1,-1,-1,-1,-1), (-1,1,1,1,-1,-1,1,1,-1)}, {(-1,-1,1,1,1,-1,1,1,-1,1), (-1,1,1,-1,1,1,-1,-1,1,1), (1,-1,1,1,1,-1,-1,1,1,-1), (1,1,-1,1,1,-1,1,1,-1,-1), (1,-1,-1,-1,-1,1,1,1,1), (1,1,1,-1,-1,-1,-1,1), (-1,-1,-1,-1,-1,-1,-1,-1), (1,-1,-1,1,1,1,-1,-1,1,1)}, {(-1,-1,1,1,1,-1,1,1,-1,1), (-1,1,1,-1,1,1,-1,-1,1,1), (1,-1,1,1,1,-1,-1,1,1,-1), (1,1,-1,1,1,-1,1,1,-1,-1), (1,-1,-1,-1,-1,1,1,1,1), (1,1,1,-1,-1,-1,-1,1), (-1,1,1,1,-1,-1,1,1,-1), (1,1,1,1,1,1,1,1)}, {(-1,-1,1,1,1,-1,1,1,-1,1), (-1,1,1,-1,1,1,-1,-1,1,1), (1,-1,1,1,1,-1,-1,1,1,-1), (1,1,-1,1,1,-1,1,1,-1,-1), (1,-1,-1,-1,-1,1,1,1,1), (1,1,1,-1,-1,-1,-1,1), (1,-1,-1,1,1,1,-1,-1,1,1), (1,1,1,1,1,1,1,1)}, {(-1,-1,1,1,1,-1,1,1,-1,1), (-1,1,1,1,1,-1,-1,1,1), (1,-1,1,-1,1,1,1,-1,-1,1), (1,1,-1,-1,-1,-1,1,1,-1,1), (-1,-1,-1,-1,1,1,1,1,1), (-1,1,1,1,-1,1,1,-1,-1,1), (-1,-1,-1,-1,-1,-1,-1,-1), (-1,1,1,1,-1,-1,1,1,1,-1)}, {(-1,-1,1,1,1,-1,1,1,-1,1), (-1,1,1,-1,1,1,1,1,-1,-1), (1,-1,1,-1,1,1,1,-1,-1), (1,1,-1,1,-1,-1,1,-1,1,1), (-1,-1,-1,-1,1,1,1,1,1), (-1,1,1,1,-1,1,1,-1,-1), (-1,-1,-1,-1,-1,-1,-1,-1), (1,-1,-1,1,1,1,-1,-1,1,1)}, {(-1,-1,1,1,1,-1,1,1,-1,1), (-1,1,1,-1,1,1,1,1,-1,-1), (1,-1,1,-1,1,1,1,-1,-1), (1,1,-1,-1,-1,1,1,-1,1,1), (-1,-1,-1,-1,1,1,1,1,1,1), (-1,1,1,1,-1,1,1,-1,-1,1), (1,1,1,1,1,1,1,1,1,1)}, {(-1,-1,1,1,1,-1,1,1,-1,1), (-1,1,1,-1,1,1,1,1,-1,-1), (1,-1,1,-1,-1,1,1,1,-1,-1), (1,1,-1,1,-1,-1,1,1,-1,-1), (-1,-1,-1,-1,1,1,1,1,1,1), (1,-1,1,1,-1,-1,1,1,-1), (-1,-1,-1,-1,-1,-1,-1,-1), (-1,1,1,1,-1,-1,1,1,1,-1)}, {(-1,-1,1,1,1,-1,1,1,-1,1), (-1,1,1,-1,1,1,1,1,-1,-1), (1,-1,1,-1,1,1,1,-1,-1), (1,1,-1,1,-1,-1,1,1,-1,-1), (-1,-1,-1,-1,1,1,1,1,1,1), (1,-1,1,1,-1,-1,1,1,-1), (1,-1,-1,1,1,1,-1,-1,1,1), (1,1,1,1,1,1,1,1,1,1)}, {(-1,-1,1,1,1,-1,1,1,-1,1), (-1,1,1,-1,1,1,1,1,-1,-1), (1,-1,1,-1,1,1,1,-1,-1), (1,1,-1,-1,-1,1,1,-1,1,1), (-1,1,1,1,-1,-1,1,1,-1,1), (1,1,1,1,-1,-1,-1,-1,1), (-1,-1,-1,-1,-1,-1,-1,-1), (-1,1,1,1,-1,1,1,1,-1)}, {(-1,-1,1,1,1,-1,1,1,-1,1), (-1,1,1,-1,1,1,1,1,-1,-1), (1,-1,1,-1,1,1,1,-1,-1), (1,1,-1,-1,-1,1,1,-1,1,1), (-1,1,1,1,-1,-1,1,1,-1,1), (1,1,1,1,-1,-1,-1,-1,1), (1,-1,-1,1,1,1,-1,-1,1,1), (1,-1,-1,1,1,1,-1,-1,1,1)}, {(-1,-1,1,1,1,-1,1,1,-1,1), (-1,1,1,-1,1,1,1,1,-1,-1), (1,-1,1,-1,1,1,1,-1,-1), (1,1,-1,-1,-1,1,1,-1,1,1), (-1,1,1,1,-1,-1,1,1,-1,1), (1,1,1,1,1,-1,-1,-1,-1,1), (-1,-1,-1,-1,-1,-1,-1,-1), (-1,1,1,1,-1,-1,1,1,1,-1)}, {(-1,-1,1,1,1,-1,1,1,-1,1), (-1,1,1,-1,1,1,1,1,-1,-1), (1,-1,1,-1,1,1,1,-1,-1), (1,1,-1,-1,-1,1,1,-1,1,1), (-1,1,1,1,-1,-1,1,1,-1,1), (1,1,1,1,1,1,1,1,1,1)}, {(-1,-1,1,1,1,-1,1,1,-1,1), (-1,1,1,-1,1,1,1,1,-1,-1), (1,-1,1,-1,1,1,1,-1,-1), (1,1,-1,-1,-1,1,1,-1,1,1), (-1,1,1,1,-1,-1,1,1,-1,1), (1,1,1,1,-1,-1,-1,-1,1,-1), (-1,-1,-1,-1,-1,-1,-1,-1), (-1,1,1,1,-1,-1,1,1,1,-1)}, {(-1,-1,1,1,1,-1,1,1,-1,1), (-1,1,1,-1,1,1,1,1,-1,-1), (1,-1,1,-1,1,1,1,-1,-1), (1,1,-1,-1,-1,1,1,-1,1,1), (-1,1,1,1,-1,-1,1,1,-1,1), (1,1,1,1,1,1,1,1,1,1)}, {(-1,-1,1,1,1,-1,1,1,-1,1), (-1,1,1,-1,1,-1,-1,1,1,1), (1,-1,1,-1,1,1,1,-1,-1), (1,1,-1,-1,-1,1,1,-1,1,1), (-1,-1,-1,-1,1,1,1,1,1,1), (-1,1,1,1,-1,1,1,-1,-1,1), (-1,-1,-1,-1,-1,-1,-1,-1), (-1,1,1,1,-1,-1,1,1,1,-1)}, {(-1,-1,1,1,1,-1,1,1,-1,1), (1,-1,1,1,-1,-1,1,1,1), (1,-1,1,-1,1,1,1,-1,-1), (1,1,-1,-1,-1,1,1,-1,1,1), (-1,-1,-1,-1,1,1,1,1,1,1), (-1,1,1,1,-1,1,1,-1,-1,1), (-1,-1,-1,-1,-1,-1,-1,-1), (1,-1,-1,1,1,1,-1,-1,1,1)}, {(-1,-1,1,1,1,-1,1,1,-1,1), (1,-1,1,1,-1,-1,1,1,1), (1,-1,1,-1,1,1,1,-1,-1), (1,1,-1,-1,-1,1,1,-1,1,1), (-1,-1,-1,-1,1,1,1,1,1,1), (-1,1,1,1,-1,1,1,-1,-1,1), (-1,-1,-1,-1,-1,-1,-1,-1), (1,1,1,1,1,1,1,1,1,1)}, {(-1,-1,1,1,1,-1,1,1,-1,1), (1,-1,1,-1,-1,1,1,1), (1,-1,1,-1,1,1,1,-1,-1), (1,1,-1,-1,-1,1,1,-1,1,1), (-1,-1,-1,-1,1,1,1,1,1,1), (-1,1,1,1,-1,1,1,-1,-1,1), (-1,-1,-1,-1,-1,-1,-1,-1), (-1,1,1,1,-1,-1,1,1,1,-1)}, {(-1,-1,1,1,1,-1,1,1,-1,1), (1,-1,1,1,-1,-1,1,1,1), (1,-1,1,-1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (1,-1,-1,1,1,1,-1,-1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (1,-1,-1,1,1,1,-1,-1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,1,1,1,-1,-1,-1,-1,1), (-1,-1,-1,-1,-1,-1,-1,-1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,-1,-1,-1,-1,1), (-1,-1,-1,-1,-1,-1,-1,-1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,1,1,1,-1,-1,-1,-1,1,-1), (-1,-1,-1,-1,-1,-1,-1,-1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (1,-1,-1,1,1,1,-1,-1,1,1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,-1,-1,-1,-1,1,-1), (1,-1,1,1,1,-1,-1,1,-1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (1,-1,-1,1,1,1,-1,-1,1,1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,-1,-1,-1,-1,1,-1), (-1,-1,-1,-1,-1,-1,-1,-1), (-1,1,1,1,-1,-1,1,1,1,-1)}, {(-1,-1,1,1,1,-1,1,1,-1,1), (1,-1,1,1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (-1,-1,-1,-1,-1,-1,-1,-1), (1,-1,-1,1,1,1,-1,-1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (1,-1,-1,1,1,1,-1,-1,1,1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (1,-1,-1,1,1,1,-1,-1,1,1), (-1,1,1,1,-1,-1,1,1,1,-1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (1,-1,1,1,1,-1,-1,1,-1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,-1,-1,-1,1,1,1,1,1,1), (1,-1,-1,1,1,1,-1,-1,1,1), (1,-1,-1,1,1,1,-1,-1,1,1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,-1,1,1,1,-1,-1,1,-1), (1,-1,1,1,1,-1,-1,1,-1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,-1,-1,-1,-1,1,-1), (1,-1,1,1,1,-1,-1,1,-1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,1,1,1,1,1,1)}, {(-1,-1,1,1,1,-1,1,1,-1,1), (1,-1,1,-1,-1,-1,1,1,1), (1,-1,1,-1,1,1,1,-1,-1), (1,1,-1,-1,-1,1,1,-1,1,1), (-1,1,1,1,-1,-1,1,1,-1,1), (1,1,1,1,-1,-1,-1,-1,1,-1), (-1,-1,-1,-1,-1,-1,-1,-1), (-1,1,1,1,-1,1,1,1,-1)}, {(-1,-1,1,1,1,-1,1,1,-1,1),

(1,-1,-1,1,-1,1,1,-1), (1,1,1,1,-1,-1,-1,-1), (-1,-1,-1,-1,-1,-1,-1,-1), (1,-1,-1,1,1,-1,-1,1)}, {(-1,-1,1,1,1,-1,1,-1,1,1), (1,-1,1,1,-1,-1,1,1), (1,-1,1,1,-1,1,1,-1,-1), (1,1,-1,-1,-1,1,1,-1,1), (1,-1,-1,1,-1,1,1,-1), (1,1,1,1,-1,-1,-1,-1), (-1,1,1,-1,-1,1,1,-1), (1,1,1,1,1,1,1,1)}, {(-1,-1,1,1,-1,1,-1,1,1), (1,-1,1,-1,-1,-1,1,1,1), (1,-1,1,1,-1,1,1,-1,-1), (1,1,-1,-1,-1,1,1,-1,1), (1,-1,1,1,-1,1,1,-1), (1,1,1,1,-1,-1,-1,-1), (1,-1,-1,1,1,-1,-1,1), (1,1,1,1,1,1,1,1)}, {(-1,-1,1,1,1,-1,1,-1,1), (1,-1,1,-1,1,1,-1,-1), (1,-1,1,1,1,-1,1,1,-1), (1,1,-1,1,1,-1,1,-1,1), (-1,-1,-1,1,1,1,1,1,-1), (-1,1,1,1,1,1,-1,-1,-1), (-1,-1,-1,-1,-1,-1,-1,-1), (-1,1,1,1,-1,-1,1,1,-1)}, {(-1,-1,1,1,1,-1,1,1,-1), (1,-1,1,1,1,-1,1,1,-1), (1,-1,1,1,-1,-1,1,1,-1), (1,1,-1,1,1,-1,1,-1,1), (-1,-1,-1,1,1,1,1,1,-1), (-1,1,1,1,1,1,-1,-1,-1), (-1,-1,-1,-1,-1,-1,-1,-1), (1,-1,-1,1,1,-1,-1,1)}, {(-1,-1,1,1,1,-1,1,-1,1), (1,-1,1,-1,1,1,1,-1,1), (1,-1,1,1,-1,-1,1,1,-1), (1,1,-1,1,1,-1,1,-1,1), (-1,-1,-1,1,1,1,1,1,-1), (-1,1,1,1,1,1,-1,-1,-1), (-1,-1,1,1,-1,-1,1,1,-1), (1,1,1,1,1,1,1,1)}, {(-1,-1,1,1,1,-1,1,-1,1), (1,-1,1,1,1,-1,1,1,-1), (1,-1,1,1,1,-1,1,1,-1), (1,1,-1,1,1,-1,1,-1,1), (-1,-1,-1,1,1,1,1,1,-1), (-1,1,1,1,1,1,-1,-1,-1), (1,-1,-1,1,1,-1,-1,1), (1,1,1,1,1,1,1,1)}, {(-1,-1,1,1,1,-1,1,-1,1), (1,-1,1,-1,1,1,1,-1,1), (1,-1,1,1,1,-1,1,1,-1), (1,1,-1,1,1,-1,1,-1,1), (-1,-1,-1,1,1,1,1,1,-1), (1,-1,-1,-1,1,1,1,1), (-1,-1,-1,-1,-1,-1,-1,-1), (-1,1,1,1,-1,-1,1,1,-1)}, {(-1,-1,1,1,1,-1,1,-1,1), (1,-1,1,-1,1,1,1,-1,1), (1,-1,1,1,1,-1,1,1,-1), (1,1,-1,1,1,-1,1,-1,1), (-1,-1,-1,1,1,1,1,1,-1), (1,-1,-1,-1,-1,1,1,1,1), (-1,-1,-1,-1,-1,-1,-1,-1), (1,-1,-1,1,1,-1,-1,1)}, {(-1,-1,1,1,1,-1,1,-1,1), (1,-1,1,-1,1,1,1,-1,1), (1,-1,1,1,1,-1,1,1,-1), (1,1,-1,1,1,-1,1,-1,1), (-1,-1,-1,1,1,1,1,1,-1), (1,-1,1,1,-1,-1,-1,-1,1), (-1,-1,-1,-1,-1,-1,-1,-1), (-1,1,1,1,-1,-1,1,1,-1)}, {(-1,-1,1,1,1,-1,1,-1,1), (1,-1,1,-1,1,1,1,-1,1), (1,-1,1,1,1,-1,1,1,-1), (1,1,-1,1,1,-1,1,-1,1), (-1,1,1,1,1,1,1,-1,-1,-1), (1,1,1,1,-1,-1,-1,-1,1), (-1,1,1,1,-1,-1,1,1,-1), (1,1,1,1,1,1,1,1)}, {(-1,-1,1,1,1,-1,1,1,-1), (1,-1,1,1,1,-1,1,1,-1), (1,-1,1,1,1,-1,1,1,-1), (1,1,-1,1,1,-1,1,-1,1), (-1,1,1,1,1,1,-1,-1,-1), (1,1,1,1,-1,-1,-1,-1,1), (1,-1,1,1,1,-1,1,1,-1), (1,1,1,1,1,1,1,1)}, {(-1,-1,1,1,1,-1,1,-1,1), (1,-1,1,-1,1,1,1,-1,1), (1,-1,1,1,-1,-1,1,1,-1), (1,1,-1,1,1,-1,1,-1,1), (-1,1,-1,-1,1,1,1,1), (1,1,1,1,-1,-1,-1,-1,1), (-1,-1,-1,-1,-1,-1,-1,-1), (-1,1,1,1,-1,1,1,1,-1)}, {(-1,-1,1,1,1,-1,1,-1,1), (1,-1,1,-1,1,1,1,-1,1), (1,-1,1,1,1,-1,1,1,-1), (1,1,-1,1,-1,1,1,-1,1), (1,-1,-1,-1,-1,1,1,1,1), (1,1,1,1,-1,-1,-1,-1,1), (-1,1,-1,-1,-1,-1,-1,-1), (1,-1,-1,1,1,-1,-1,1)}, {(-1,-1,1,1,1,-1,1,-1,1), (1,-1,1,-1,1,1,1,-1,1), (1,-1,1,1,1,-1,1,1,-1), (1,1,-1,1,-1,1,1,-1,1), (1,-1,-1,-1,-1,1,1,1,1), (1,1,1,-1,-1,-1,1,1,-1), (-1,1,1,1,-1,1,1,1,-1), (1,1,1,1,1,1,1,1)}, {(-1,-1,1,1,1,-1,1,-1,1), (-1,1,1,-1,1,-1,-1,1,1), (-1,1,1,1,1,1,1,-1,1,-1), (1,1,1,-1,-1,1,1,-1,1,-1), (-1,-1,-1,-1,1,1,1,1), (-1,1,1,1,-1,1,1,-1,-1,1), (-1,-1,-1,-1,-1,-1,-1,-1), (-1,1,1,1,-1,-1,1,1,-1)}, {(-1,-1,1,1,1,1,-1,1,1,-1), (-1,1,1,-1,1,-1,-1,1,1,1), (-1,1,1,-1,1,1,1,1,-1,-1), (1,1,1,-1,-1,1,1,-1,1,-1), (-1,-1,-1,-1,1,1,1,1), (-1,1,1,1,-1,1,1,-1,-1,1), (-1,-1,-1,-1,-1,-1,-1,-1), (1,-1,-1,1,1,-1,-1,1)}, {(-1,-1,1,1,1,1,-1,1,1,-1), (-1,1,1,-1,1,-1,-1,1,1,1), (-1,1,1,-1,1,1,1,1,-1,-1), (1,1,1,-1,-1,1,1,-1,1,-1), (-1,-1,-1,-1,1,1,1,1), (-1,1,1,1,-1,1,1,-1,-1,1), (-1,1,1,1,-1,1,1,1,-1), (1,1,1,1,1,1,1,1)}, {(-1,-1,1,1,1,1,-1,1,1,-1), (-1,1,1,-1,1,-1,-1,1,1,1), (-1,1,1,-1,1,1,1,1,-1,-1), (1,1,1,-1,-1,1,1,-1,1,-1), (-1,-1,-1,-1,1,1,1,1), (-1,1,1,1,-1,1,1,-1,-1,-1,-1), (-1,-1,-1,-1,-1,-1,-1,-1), (1,-1,-1,1,1,-1,-1,1)}, {(-1,-1,1,1,1,1,-1,1,1,-1), (-1,1,1,-1,1,-1,-1,1,1,1), (-1,1,1,-1,1,1,1,1,-1,-1), (1,1,-1,-1,1,1,-1,1,-1), (-1,-1,-1,-1,1,1,1,1), (1,-1,1,1,1,-1,1,1,-1), (-1,1,1,1,-1,-1,1,1,-1), (1,1,1,1,1,1,1,1)}, {(-1,-1,1,1,1,1,-1,1,1,-1), (-1,1,1,-1,1,-1,-1,1,1), (-1,1,1,-1,1,1,1,1,-1,-1), (1,1,1,-1,-1,1,1,-1,1), (-1,-1,-1,-1,1,1,1,1), (1,-1,1,1,1,-1,1,1,-1), (-1,1,1,1,-1,1,1,1,-1), (1,1,1,1,1,1,1,1)}, {(-1,-1,1,1,1,1,-1,1,1,-1), (-1,1,1,-1,1,-1,-1,1,1,1), (-1,1,1,-1,1,1,1,1,-1,-1), (1,1,-1,1,-1,1,1,-1,1), (-1,-1,-1,-1,1,1,1,1), (1,-1,1,1,1,-1,1,1,-1), (-1,1,1,1,-1,1,1,1,-1), (1,-1,1,1,1,-1,1,1)}, {(-1,-1,1,1,1,1,-1,1,1,-1), (-1,1,1,-1,1,1,-1,-1,1,1), (1,1,1,1,1,-1,-1,-1,1), (-1,-1,-1,-1,-1,-1,-1,-1), (-1,1,1,1,-1,-1,1,1,-1)}, {(-1,-1,1,1,1,1,-1,1,1,-1), (-1,1,1,-1,1,-1,-1,1,1,1), (-1,1,1,-1,1,1,1,1,-1,-1), (1,1,1,1,-1,-1,1,1,-1,-1), (-1,1,1,1,-1,-1,1,1,-1), (1,1,1,1,1,-1,-1,-1,-1), (-1,-1,-1,-1,-1,-1,-1,-1), (1,-1,-1,1,1,-1,-1,1)}, {(-1,-1,1,1,1,1,-1,1,1,-1), (-1,1,1,-1,1,-1,-1,1,1,1), (-1,1,1,-1,1,1,1,1,-1,-1), (1,1,1,-1,-1,1,1,-1,1,-1), (-1,-1,-1,-1,1,1,-1,-1,1), (1,1,1,1,1,-1,-1,-1,-1), (1,-1,-1,1,1,-1,-1,1), (1,1,1,1,1,1,1,1)}, {(-1,-1,1,1,1,1,-1,1,1,-1), (-1,1,1,-1,1,-1,-1,1,1,1), (-1,1,1,-1,1,1,1,1,-1,-1), (1,1,-1,-1,1,1,-1,1,-1), (-1,-1,1,1,1,-1,1,1,-1), (1,1,1,1,1,-1,-1,-1,-1), (1,-1,1,1,1,-1,1,1,-1), (1,1,1,1,1,1,1,1)}, {(-1,-1,1,1,1,1,-1,1,-1), (-1,1,1,-1,1,-1,-1,1,1,1), (1,-1,1,-1,-1,-1,1,1,1), (1,1,-1,-1,1,1,-1,1,-1), (-1,-1,-1,-1,1,1,1,1,1), (-1,1,1,1,-1,1,1,-1,-1), (-1,-1,-1,-1,-1,-1,-1,-1), (-1,1,1,1,-1,1,1,1,-1)}, {(-1,-1,1,1,1,1,-1,1,1,-

1), (-1,1,-1,1,-1,-1,1,1), (1,-1,1,-1,-1,-1,1,1), (1,1,-1,-1,1,-1,1,-1), (-1,-1,-1,-1,1,1,1,1), (-1,1,1,-1,1,-1,-1,1), (-1,-1,-1,-1,-1,-1,-1,-1), (1,-1,-1,1,1,-1,-1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,-1,-1,-1,1,1,1,1), (-1,1,1,-1,1,-1,-1,1), (-1,1,1,-1,-1,1,1,-1), (1,1,1,1,1,1,1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,-1,-1,-1,1,1,1,1), (-1,1,1,-1,1,-1,-1,1), (1,-1,-1,1,1,-1,-1,1), (1,1,1,1,1,1,1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,-1,-1,-1,1,1,1,1), (1,-1,-1,1,1,-1,1,-1), (-1,-1,-1,-1,-1,-1,-1,-1), (-1,1,1,-1,-1,1,1,-1)}, {(-1,-1,1,1,1,-1,1,-1), (-1,1,-1,1,-1,-1,1,1), (1,-1,1,-1,-1,-1,1,1), (1,1,-1,1,1,-1,1,-1), (-1,-1,-1,-1,1,1,1,1), (1,-1,-1,1,-1,1,1,-1), (-1,-1,-1,-1,-1,-1,-1,-1), (1,-1,-1,1,1,-1,-1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,-1,-1,-1,1,1,1,1), (1,-1,-1,1,1,-1,1,-1), (-1,1,1,-1,-1,1,1,-1), (1,1,1,1,1,1,1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,-1,-1,-1,1,1,1,1), (1,-1,-1,1,-1,1,1,-1), (1,-1,-1,1,1,-1,-1,1), (1,1,1,1,1,1,1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,1,1,1,-1,1,-1,-1,1), (1,1,1,1,-1,-1,-1,-1), (-1,-1,-1,-1,-1,-1,-1,-1), (-1,1,1,-1,-1,1,1,-1)}, {(-1,-1,1,1,1,-1,1,-1), (-1,1,1,-1,1,-1,-1,1,1), (1,-1,1,-1,-1,-1,1,1), (1,1,-1,-1,1,-1,1,-1), (-1,1,1,-1,1,-1,-1,1), (1,1,1,1,-1,-1,-1,-1), (-1,-1,-1,-1,-1,-1,-1,-1), (1,-1,-1,1,1,1,-1,-1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,1,1,-1,1,-1,-1,1), (1,1,1,1,-1,-1,-1,-1), (-1,1,1,-1,-1,1,1,-1), (1,1,1,1,1,1,1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,1,1,-1,1,-1,-1,1), (1,1,1,1,-1,-1,-1,-1), (1,-1,-1,1,1,-1,-1,1), (1,1,1,1,1,1,1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,1,1,-1,1,-1,-1,1), (1,1,1,1,-1,-1,-1,-1), (-1,-1,-1,-1,-1,-1,-1,-1), (-1,1,1,-1,-1,1,1,-1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (-1,1,1,-1,1,-1,-1,1), (1,1,1,1,-1,-1,-1,-1), (-1,-1,-1,-1,-1,-1,-1,-1), (1,-1,-1,1,1,-1,-1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (1,-1,-1,1,1,-1,1,-1), (-1,1,1,1,-1,-1,1,1,-1), (1,1,1,1,1,1,1,1)}, {(-1,-1,1,1,1,-1,1,-1), (-1,1,-1,1,-1,-1,1,1), (1,-1,1,-1,-1,-1,1,1), (1,1,-1,-1,1,-1,1,-1), (1,-1,-1,1,1,-1,1,-1), (-1,1,1,1,-1,-1,1,1,-1), (1,1,1,1,1,1,1,1)}, {(-1,-1,1,1,1,-1,1,-1), (-1,1,-1,1,1,1,-1,1,-1), (-1,1,1,1,1,-1,-1,1,1), (1,1,1,-1,1,-1,-1,-1), (-1,-1,1,-1,1,1,-1,-1,1), (-1,-1,-1,-1,-1,-1,-1,-1), (-1,1,1,1,-1,-1,1,1,1,-1)}, {(-1,-1,1,1,1,-1,1,-1), (-1,1,-1,1,1,1,-1,1,-1), (-1,1,1,1,1,-1,-1,1,1), (1,1,1,-1,1,-1,-1,-1), (-1,-1,1,-1,1,1,1,-1,1), (-1,-1,1,-1,1,-1,1,-1,1), (-1,-1,-1,-1,-1,-1,-1,-1), (1,-1,-1,1,1,-1,-1,1)}, {(-1,-1,1,1,1,-1,1,-1), (-1,1,-1,1,1,1,-1,1,-1), (-1,1,1,1,1,-1,-1,1,1), (1,1,1,-1,1,1,-1,-1,-1), (-1,-1,1,-1,1,1,1,-1,1), (1,-1,1,1,-1,1,-1,-1,1), (-1,1,1,1,-1,-1,1,1,-1), (1,1,1,1,1,1,1,1)}, {(-1,-1,1,1,1,-1,1,-1), (-1,1,-1,1,1,1,-1,1,-1), (-1,1,1,1,1,-1,-1,1,1), (1,1,1,-1,1,1,-1,-1,-1), (-1,-1,1,-1,1,1,1,-1,1), (-1,1,1,1,-1,-1,1,1,-1), (-1,1,1,1,1,1,1,1), (1,-1,1,1,1,-1,-1,1,

1,-1), (-1,-1,-1,-1,-1,-1,-1,-1), (-1,1,1,-1,-1,1,1,-1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (-1,-1,1,-1,1,1,-1,1), (1,-1,1,1,-1,1,-1,-1), (-1,-1,-1,-1,-1,-1,-1,-1), (1,-1,-1,1,1,-1,-1,1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (-1,-1,1,-1,1,1,-1,1), (1,-1,1,1,-1,1,-1,-1), (-1,1,1,-1,-1,1,1,-1), (1,1,1,1,1,1,1,1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (-1,-1,1,-1,1,1,-1,1), (1,-1,1,1,-1,1,-1,-1), (1,-1,-1,1,-1,-1,1), (1,1,1,1,1,1,1,1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (-1,1,-1,-1,1,-1,1,1), (1,1,-1,1,-1,1,-1,-1), (-1,-1,-1,-1,-1,-1,-1), (-1,1,1,-1,-1,1,1,-1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (-1,1,-1,-1,1,-1,1,1), (1,1,-1,1,-1,-1,1,-1), (-1,-1,-1,-1,-1,-1,-1), (1,-1,1,1,-1,-1,1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (-1,1,-1,-1,1,-1,1,1), (1,1,-1,1,-1,-1,1,-1), (-1,1,1,-1,-1,1,1,-1), (1,1,1,1,1,1,1,1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (-1,1,-1,-1,1,-1,1,1), (1,1,-1,1,-1,-1,1,-1), (1,-1,-1,1,1,-1,-1,1), (1,1,1,1,1,1,1,1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (1,-1,1,1,-1,1,-1,1), (1,-1,1,1,-1,-1,1,-1), (1,-1,-1,1,1,-1,-1,1), (1,1,1,1,1,1,1,1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (1,-1,1,1,-1,1,-1,1), (1,-1,1,1,-1,-1,1,-1), (-1,-1,-1,-1,-1,-1,-1,-1), (-1,1,1,-1,-1,1,1,-1)}, {(-1,-1,1,1,1,-1,1,-1), (-1,1,-1,1,1,1,-1,-1), (1,-1,-1,-1,1,1,1,-1), (1,1,1,-1,1,-1,-1,-1), (1,-1,1,-1,1,-1,-1,1), (-1,1,1,-1,1,-1,-1,1), (-1,-1,-1,-1,-1,-1,-1,-1), (-1,1,1,-1,-1,1,1,-1)}, {(-1,-1,1,1,1,-1,1,-1), (-1,1,-1,1,1,1,-1,-1), (1,-1,1,-1,1,1,-1,-1), (1,1,1,-1,1,-1,-1,-1), (-1,-1,-1,-1,1,1,1,1), (-1,1,1,-1,1,-1,-1,1), (-1,1,1,-1,-1,1,1,-1), (1,1,1,1,1,1,1,1)}, {(-1,-1,1,1,1,-1,1,-1), (-1,1,-1,1,1,1,-1,-1), (1,-1,1,-1,1,1,-1,-1), (1,1,1,-1,1,-1,-1,-1), (-1,-1,-1,-1,1,1,1,1), (-1,1,1,-1,1,-1,-1,1), (1,1,1,-1,-1,1,1,-1), (1,1,1,1,1,1,1,1)}, {(-1,-1,1,1,1,-1,1,-1), (-1,1,-1,1,1,1,-1,-1), (1,-1,1,-1,1,1,-1,-1), (1,1,-1,-1,1,-1,-1,-1), (-1,-1,-1,-1,1,1,1,1), (-1,1,1,-1,1,-1,-1,1), (1,-1,-1,1,1,-1,-1,1), (1,1,1,1,1,1,1,1)}, {(-1,-1,1,1,1,-1,1,-1), (-1,1,-1,1,1,1,-1,-1), (1,-1,1,-1,1,1,-1,-1), (1,1,-1,-1,1,-1,-1,-1), (-1,-1,-1,-1,1,1,1,1), (1,-1,-1,1,1,-1,-1,1), (-1,-1,-1,-1,-1,-1,-1,-1), (1,-1,1,1,1,-1,-1,1)}, {(-1,-1,1,1,1,-1,1,-1), (-1,1,1,1,1,-1,-1,-1,1), (1,-1,1,-1,1,1,-1,-1), (1,1,1,-1,1,1,-1,-1,-1), (-1,-1,1,-1,1,-1,-1,1), (1,-1,1,-1,-1,1,1,-1), (-1,-1,-1,-1,-1,-1,-1,-1), (-1,1,1,1,-1,-1,1,1,-1)}, {(-1,-1,1,1,1,-1,1,-1), (-1,1,-1,1,1,1,-1,-1), (1,-1,1,-1,1,1,-1,-1), (1,1,1,-1,1,-1,-1,-1), (-1,1,1,-1,1,-1,-1,1), (1,1,1,1,-1,-1,-1,-1), (-1,-1,1,-1,1,1,-1,-1), (1,1,1,1,1,1,1,1)}, {(-1,-1,1,1,1,-1,1,-1), (-1,1,-1,1,1,1,-1,-1), (1,-1,1,-1,1,1,-1,-1), (1,1,-1,-1,1,1,-1,-1), (-1,1,1,-1,1,-1,-1,-1), (1,-1,1,1,-1,-1,-1,1), (1,1,1,1,-1,-1,-1,-1), (-1,1,1,1,-1,-1,1,1,-1)}, {(-1,-1,1,1,1,-1,1,-1), (-1,1,1,1,1,-1,-1,-1,1), (1,-1,1,-1,-1,1,1,1,-1), (1,1,1,-1,1,-1,-1,-1), (-1,-1,1,-1,1,1,-1,-1), (-1,-1,-1,-1,-1,-1,-1,-1), (1,-1,1,1,1,-1,-1,1)}, {(-1,-1,1,1,1,-1,1,-1), (-1,1,1,1,1,-1,-1,-1,1), (1,-1,1,-1,-1,1,1,1,-1), (1,1,1,-1,1,-1,-1,-1), (-1,-1,1,-1,1,1,-1,-1), (1,-1,1,1,-1,-1,-1,1), (1,1,1,1,1,1,1,1)}, {(-1,-1,1,1,1,-1,1,-1), (-1,1,1,1,1,-1,-1,-1,1), (1,-1,1,-1,1,1,-1,-1), (1,1,1,-1,1,-1,-1,-1), (-1,1,1,-1,1,-1,-1,-1), (1,-1,-1,-1,-1,-1,-1,-1), (-1,1,1,1,-1,1,1,1,-1)}, {(-1,-1,1,1,1,-1,1,-1), (-1,1,1,1,1,-1,-1,-1,1), (1,-1,1,-1,-1,1,1,1,-1), (1,1,1,-1,1,-1,-1,-1), (-1,1,1,-1,1,-1,-1,-1), (1,-1,1,1,-1,-1,-1,1), (1,1,1,1,1,1,1,1)}, {(-1,-1,1,1,1,-1,1,-1), (-1,1,1,1,1,-1,-1,-1,1), (1,-1,1,-1,-1,1,1,1,-1), (1,1,1,-1,1,-1,-1,-1), (-1,-1,1,-1,1,1,-1,-1), (-1,-1,-1,-1,-1,-1,-1,-1), (1,-1,-1,1,1,-1,-1,1)}, {(-1,-1,1,1,1,-1,1,-1), (-1,1,1,1,1,-1,-1,-1,1), (1,-1,1,-1,-1,1,1,1,-1), (1,1,1,-1,1,-1,-1,-1), (-1,-1,1,-1,1,1,-1,1,1), (-1,-1,-1,-1,-1,-1,-1,-1), (1,-1,-1,1,1,-1,-1,1,1)}, {(-1,-1,1,1,1,-1,1,-1), (-1,1,1,1,1,-1,-1,-1,1), (1,-1,1,-1,-1,-1,1,1,1), (1,1,1,-1,1,-1,-1,-1), (-1,-1,1,-1,1,1,-1,1,1), (1,-1,1,1,-1,-1,-1,1), (1,1,1,1,1,1,1,1)}, {(-1,-1,1,1,1,-1,1,-1), (-1,1,1,1,1,-1,-1,-1,1), (1,-1,1,-1,-1,-1,1,1,1), (1,1,1,-1,1,-1,-1,-1), (-1,-1,1,-1,1,1,-1,-1), (1,-1,1,1,-1,-1,-1,1), (-1,-1,-1,-1,-1,-1,-1,-1), (1,-1,-1,1,1,-1,-1,1)}, {(-1,-1,1,1,1,-1,1,-1), (-1,1,1,1,1,-1,-1,-1,1), (1,-1,1,-1,-1,1,1,1,-1), (1,1,1,-1,1,-1,-1,-1), (-1,-1,1,-1,1,1,-1,1,1), (1,-1,1,1,-1,-1,-1,1), (-1,-1,-1,-1,-1,-1,-1,-1), (1,-1,-1,1,1,-1,-1,1,1)}, {(-1,-1,1,1,1,-1,1,-1), (-1,1,1,1,1,-1,-1,-1,1), (1,-1,1,-1,-1,1,1,1,-1), (1,1,1,-1,1,-1,-1,-1), (-1,-1,1,-1,1,1,-1,1,1), (-1,-1,-1,-1,-1,-1,-1,-1), (1,-1,-1,1,1,-1,-1,1,1)}, {(-1,-1,1,1,1,-1,1,-1), (-1,1,1,1,1,-1,-1,-1,1), (1,-1,1,-1,-1,1,1,1,-1), (1,1,1,-1,1,-1,-1,-1), (-1,-1,1,-1,1,1,-1,1,1), (1,-1,1,1,-1,-1,-1,1), (-1,-1,-1,-1,-1,-1,-1,-1), (1,-1,-1,1,1,-1,-1,1,1)}, {(-1,-1,1,1,1,-1,1,-1), (-1,1,1,1,1,-1,-1,-1,1), (1,-1,1,-

1,-1,-1,1,1), (1,1,1,-1,1,-1,-1,-1), (-1,1,-1,-1,1,-1,1,1), (1,1,-1,1,-1,-1,1,-1), (-1,-1,-1,-1,-1,-1,-1,-1), (-1,1,1,-1,-1,1,1,-1)}, {(-1,-1,1,1,1,-1,1,-1), (-1,1,1,1,1,-1,-1,-1,1,1), (1,-1,1,-1,-1,-1,1,1,1), (1,1,1,-1,1,-1,-1,1,-1), (-1,1,-1,-1,1,1,-1,1,1), (1,1,-1,1,-1,-1,1,-1), (-1,-1,-1,-1,-1,-1,-1,-1), (1,-1,-1,1,1,-1,-1,1)}, {(-1,-1,1,1,1,-1,1,-1), (-1,1,1,1,1,-1,-1,-1,1), (1,-1,1,-1,-1,-1,1,1,1), (1,1,1,-1,1,-1,-1,-1), (-1,1,-1,-1,1,-1,1,1,1), (1,1,-1,1,-1,-1,1,-1), (-1,1,1,1,-1,1,1,1,-1), (1,1,1,1,1,1,1,1)}, {(-1,-1,1,1,1,-1,1,1,-1), (-1,1,1,1,1,-1,-1,-1,1), (1,-1,1,-1,-1,-1,1,1,1), (1,1,1,-1,1,-1,-1,-1), (-1,1,-1,-1,1,1,-1,1,1), (1,1,-1,1,-1,-1,1,-1), (1,-1,-1,1,1,1,-1,-1,1), (1,1,1,1,1,1,1,1)}, {(-1,-1,1,1,1,1,-1,1,-1), (-1,1,1,1,1,-1,-1,-1,1), (1,-1,1,-1,-1,-1,1,1,1), (1,1,1,-1,1,-1,-1,1,-1), (-1,-1,1,-1,-1,1,-1,-1,-1), (-1,-1,1,-1,-1,-1,-1,-1,-1), (-1,1,1,1,-1,1,1,1,-1)}, {(-1,-1,1,1,1,1,-1,1,-1), (-1,1,1,1,1,-1,-1,-1,1), (1,-1,1,-1,-1,1,1,1), (1,1,1,-1,1,1,-1,-1,-1), (1,-1,1,1,1,-1,1,-1,-1), (1,1,-1,1,-1,-1,1,-1), (-1,-1,-1,-1,-1,-1,-1,-1), (1,-1,1,1,1,-1,-1,1)}, {(-1,-1,1,1,1,1,-1,1,-1), (-1,1,1,1,1,-1,-1,-1,1), (1,-1,1,-1,-1,-1,1,1,1), (1,1,1,-1,1,-1,-1,-1), (1,1,-1,1,-1,-1,1,-1), (-1,1,1,1,-1,1,1,1,-1), (1,1,1,1,1,1,1,1)}, {(-1,-1,1,1,1,1,-1,1,-1), (-1,1,1,1,1,-1,-1,-1,1), (1,-1,1,-1,-1,-1,1,1,1), (1,1,1,-1,1,-1,-1,1,-1), (-1,1,-1,-1,1,1,-1,1,1), (1,1,-1,1,-1,-1,1,-1), (-1,1,1,1,-1,1,1,1,-1), (1,1,1,1,1,1,1,1)}, {(-1,-1,1,1,1,1,-1,1,-1), (1,-1,1,-1,1,1,1,1,-1), (1,-1,1,1,-1,-1,-1,1,1,1), (1,1,1,-1,1,-1,-1,-1), (-1,-1,1,1,-1,1,1,1,1), (-1,1,1,-1,-1,1,1,1,1), (-1,-1,-1,-1,-1,-1,-1,-1), (-1,1,1,1,-1,1,1,1,-1)}, {(-1,-1,1,1,1,1,-1,1,-1), (1,-1,-1,-1,1,1,1,1,-1), (1,-1,1,-1,-1,-1,1,1,1), (1,1,1,1,-1,1,-1,-1,-1), (-1,-1,1,1,-1,1,1,-1,-1), (-1,1,1,-1,-1,1,1,1,1), (-1,-1,-1,-1,-1,-1,-1,-1), (1,-1,1,1,1,-1,-1,1)}, {(-1,-1,1,1,1,1,-1,1,-1), (1,-1,-1,1,1,1,1,-1,-1), (1,-1,1,-1,-1,1,1,1), (1,1,1,1,-1,1,-1,-1,-1), (-1,-1,1,1,-1,1,1,-1,-1), (-1,1,1,-1,-1,1,1,1,-1), (-1,-1,-1,-1,-1,-1,-1,-1), (1,1,1,1,1,1,1,1)}, {(-1,-1,1,1,1,1,-1,1,-1), (1,-1,-1,-1,1,1,1,1,-1), (1,-1,1,1,-1,-1,-1,1,1,1), (1,1,1,1,-1,1,-1,-1,-1), (-1,-1,1,1,-1,1,1,1,1), (1,-1,1,1,1,-1,1,-1), (1,-1,-1,1,1,1,-1,-1,1), (1,1,1,1,1,1,1,1)}, {(-1,-1,1,1,1,1,-1,1,-1), (1,-1,-1,-1,1,1,1,1,-1), (1,-1,1,-1,-1,-1,1,1,1), (1,1,1,-1,1,-1,-1,-1), (-1,-1,1,-1,-1,1,-1,-1,-1), (1,-1,1,1,1,-1,1,-1), (1,1,1,1,-1,1,1,1,-1)}, {(-1,-1,1,1,1,1,-1,1,-1), (1,-1,-1,-1,1,1,1,1,-1), (1,-1,1,-1,-1,-1,1,1,1), (1,1,1,-1,1,-1,-1,-1), (-1,1,-1,-1,1,1,-1,1,1), (1,1,-1,1,-1,-1,1,-1), (-1,-1,-1,-1,-1,-1,-1,-1), (-1,1,1,1,-1,1,1,1,-1)}, {(-1,-1,1,1,1,1,-1,1,-1), (1,-1,-1,-1,1,1,1,1,-1), (1,-1,1,-1,-1,-1,1,1,1), (1,1,1,-1,1,-1,-1,-1), (-1,1,-1,-1,1,1,-1,1,1), (1,1,-1,1,-1,-1,1,-1), (1,-1,-1,1,1,1,-1,-1,1), (1,1,1,1,1,1,1,1)}, {(-1,-1,1,1,1,1,-1,1,-1), (1,-1,-1,-1,1,1,1,1,-1), (1,-1,1,-1,-1,-1,1,1,1), (1,1,1,-1,1,-1,-1,1,-1), (-1,1,-1,-1,1,1,-1,1,1), (-1,-1,-1,-1,-1,-1,-1,-1), (-1,1,1,1,-1,1,1,1,-1)}, {(-1,-1,1,1,1,1,-1,1,-1), (1,-1,-1,-1,1,1,1,1,-1), (1,-1,1,-1,-1,-1,1,1,1), (1,1,1,-1,1,-1,-1,1,-1), (1,-1,1,1,1,-1,1,-1,-1), (1,1,-1,1,-1,-1,1,-1), (-1,-1,-1,-1,-1,-1,-1,-1), (-1,1,1,1,-1,1,1,1,-1)}, {(-1,-1,1,1,1,1,-1,1,-1), (1,-1,-1,-1,1,1,1,1,-1), (1,-1,1,-1,-1,-1,1,1,1), (1,1,1,-1,1,-1,-1,-1), (-1,1,-1,-1,1,1,-1,1,1), (1,1,1,1,1,1,1,1)}, {(-1,-1,1,1,1,1,-1,1,-1), (1,-1,-1,-1,1,1,1,1,-1), (1,-1,1,-1,-1,-1,1,1,1), (1,1,1,-1,1,-1,-1,-1), (-1,-1,-1,-1,1,1,1,1), (-1,1,1,1,-1,1,-1,-1,1), (-1,1,1,1,-1,1,1,1,-1)}, {(-1,-1,1,1,1,1,-1,1,-1), (1,-1,-1,-1,1,1,1,1,-1), (1,-1,1,-1,-1,-1,1,1,1), (1,1,1,-1,1,-1,-1,-1), (-1,1,-1,-1,1,1,-1,1,1), (-1,-1,-1,-1,-1,-1,-1,-1), (-1,1,1,1,-1,1,1,1,-1)}, {(-1,-1,1,1,1,1,-1,1,-1), (1,-1,-1,-1,-1,-1,1,1,1), (1,-1,1,-1,1,1,1,-1,-1), (1,1,1,-1,1,-1,-1,-1), (-1,1,-1,-1,1,1,-1,1,1), (-1,1,1,-1,-1,1,-1,1,-1), (1,-1,1,1,1,-1,-1,1,-1,-1)}, {(-1,-1,1,1,1,1,-1,1,-1), (1,-1,-1,-1,-1,1,1,1), (1,-1,1,-1,1,1,1,-1,-1,-1), (1,1,1,-1,1,-1,-1,-1), (-1,-1,-1,-1,1,1,1,1), (-1,1,1,1,-1,1,-1,-1,1), (-1,-1,-1,-1,-1,-1,-1,-1), (1,-1,1,1,1,-1,-1,1)}, {(-1,-1,1,1,1,1,-1,1,-1), (1,-1,-1,-1,-1,-1,1,1,1), (1,-1,1,-1,1,1,1,-1,-1), (1,1,1,-1,1,-1,-1,-1), (-1,-1,-1,-1,1,1,1,1), (-1,1,1,1,-1,1,-1,-1,1), (1,1,1,1,1,1,1,1)}, {(-1,-1,1,1,1,1,-1,1,-1), (1,-1,-1,-1,-1,1,1,1), (1,-1,1,-1,-1,1,1,1,-1,-1), (1,1,1,-1,1,-1,-1,-1), (-1,-1,-1,-1,1,1,1,1), (1,-1,1,1,1,-1,-1,1), (-1,-1,-1,-1,-1,-1,-1,-1), (-1,1,1,1,-1,1,1,1,-1)}, {(-1,-1,1,1,1,1,-1,1,-1), (1,-1,-1,-1,-1,-1,1,1,1), (1,-1,1,-1,1,1,1,-1,-1,-1), (1,1,1,-1,1,-1,-1,-1), (-1,-1,-1,-1,1,1,1,1), (1,-1,1,1,1,-1,-1,1), (1,-1,-1,1,1,1,-1,-1,1), (1,1,1,1,1,1,1,1)}, {(-1,-1,1,1,1,1,-1,1,-1), (1,-1,-1,-1,-1,1,1,1), (1,-1,1,-1,-1,1,1,1,-1), (1,1,1,-1,1,-1,-1,-1), (-1,1,1,1,-1,1,-1,-1,1), (-1,1,1,1,-1,1,1,1,-1), (1,-1,-1,-1,-1,-1,-1,-1), (1,-1,1,1,1,-1,-1,1)}, {(-1,-1,1,1,1,1,-1,1,-1), (1,-1,1,1,-1,-1,-1,1,1), (1,-1,1,-1,1,1,1,-1,-1), (1,1,1,-1,-1,1,1,-1,-1), (-1,-1,1,1,-1,1,-1,-1,1), (1,1,1,1,-1,1,-1,-1,1), (-1,-1,-1,-1,-1,-1,-1,-1), (-1,1,1,1,-1,1,1,1,-1)},

(1,1,1,1,1,1,1,1)}, {(-1,-1,1,1,1,-1,1,-1), (1,-1,1,-1,-1,-1,1,1), (1,-1,1,-1,1,1,-1,-1), (1,1,-1,-1,1,-1,1,-1), (1,-1,-1,1,-1,1,1,-1), (1,1,1,1,-1,-1,-1,-1), (-1,-1,-1,-1,-1,-1,-1,-1), (-1,1,1,1,-1,-1,1,1,-1)}, {(-1,-1,1,1,1,-1,1,-1), (1,-1,1,-1,-1,-1,1,1), (1,-1,1,-1,1,1,-1,-1), (1,1,-1,-1,1,-1,1,-1), (1,-1,-1,1,-1,1,1,-1), (1,1,1,1,-1,-1,-1,-1), (-1,-1,-1,-1,-1,-1,-1,-1), (1,-1,-1,1,1,1,-1,-1,1)}, {(-1,-1,1,1,1,-1,1,-1), (1,-1,1,-1,-1,-1,1,1), (1,-1,1,-1,1,1,-1,-1), (1,1,-1,-1,1,-1,1,-1), (1,-1,-1,1,-1,1,1,-1), (1,1,1,1,-1,-1,-1,-1), (-1,1,1,1,-1,-1,1,1,-1), (1,1,1,1,1,1,1,1)}, {(-1,-1,1,1,1,-1,1,-1), (1,-1,1,-1,-1,-1,1,1), (1,-1,1,-1,1,1,-1,-1), (1,1,-1,-1,1,-1,1,-1), (1,-1,-1,1,-1,1,1,-1), (1,1,1,1,-1,-1,-1,-1), (1,-1,-1,1,1,1,-1,-1,1), (1,1,1,1,1,1,1,1)}, {(-1,1,-1,-1,-1,1,1,1), (-1,1,-1,1,1,1,-1,1,1), (-1,1,1,1,-1,1,-1,1,-1), (-1,1,1,1,1,-1,1,-1,1), (-1,-1,-1,1,1,1,1,1,1), (-1,-1,1,1,-1,1,1,-1,1), (-1,-1,-1,-1,-1,-1,-1,-1), (-1,-1,1,1,1,-1,-1,1,1,-1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1), (-1,-1,-1,1,1,1,1,1,1), (-1,-1,1,-1,1,1,1,-1,1), (-1,-1,-1,-1,-1,-1,-1,-1), (1,1,-1,-1,1,1,1,-1,-1)}, {(-1,1,-1,-1,-1,1,1,1), (-1,1,1,-1,1,1,-1,-1,1), (-1,1,1,1,-1,1,1,-1,1), (-1,1,1,1,-1,1,1,-1,1), (-1,-1,-1,1,1,1,1,1,1), (-1,-1,1,-1,1,1,1,-1,1), (-1,-1,1,1,1,-1,-1,1,1), (1,1,1,1,1,1,1,1,1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1), (-1,-1,-1,1,1,1,1,1,1), (1,1,-1,-1,1,1,1,-1,-1), (1,1,1,1,1,1,1,1,1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1,1), (-1,-1,1,-1,1,1,1,-1,1), (1,1,-1,1,-1,1,1,-1), (-1,-1,-1,-1,-1,-1,-1,-1), (-1,-1,1,1,1,-1,-1,1,1,-1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1,1), (-1,-1,1,-1,1,1,1,1,1,-1,1), (1,1,-1,1,-1,1,1,-1), (-1,-1,-1,-1,-1,-1,-1,-1), (1,1,-1,1,1,1,-1,-1)}, {(-1,1,-1,-1,-1,1,1,1), (-1,1,-1,1,1,1,-1,-1,1), (-1,1,1,1,-1,1,1,-1,1), (-1,1,1,1,-1,1,1,-1,1), (-1,-1,1,-1,1,1,-1,-1,1), (1,1,1,1,-1,-1,-1,1,1), (-1,-1,1,1,1,-1,-1,1,1), (1,1,1,1,1,1,1,1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1,1), (-1,-1,1,1,1,1,1,-1), (1,1,-1,1,-1,1,1,-1), (-1,-1,1,1,1,-1,-1,1,1), (1,1,1,1,1,1,1,1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,1), (-1,-1,1,-1,1,1,1,-1,1), (1,1,1,1,-1,-1,-1,1,1). (-1,-1,-1,-1,-1,-1,-1,-1), (-1,-1,1,1,1,-1,-1,1,1,1)}, {(-1,1,-1,1,-1,-1,1,1,1), (-1,1,-1,1,1,1,-1,-1,1), (-1,1,1,1,-1,1,1,-1,1), (-1,1,1,1,1,-1,1,-1,1), (-1,-1,1,1,-1,1,1,-1,1), (1,1,1,1,-1,-1,1,-1), (-1,-1,-1,-1,-1,-1,-1,-1), (1,1,1,-1,1,1,1,-1,1,-1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1,1), (-1,-1,1,-1,1,1,1,-1,1), (1,1,1,1,-1,-1,-1,1,1), (-1,-1,1,1,1,-1,-1,1,1,1), (1,1,1,1,1,1,1,1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1,1), (-1,-1,1,1,-1,-1,-1,1,1), (1,1,1,1,-1,-1,-1,1,1), (1,1,1,-1,1,1,1,-1,-1,1), (1,1,1,1,1,1,1,1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1,1), (1,1,-1,1,-1,1,1,-1), (1,1,1,1,-1,-1,-1,1,1), (-1,-1,-1,1,-1,-1,-1,1), (-1,1,1,1,1,-1,1,1,1)}, {(-1,1,-1,-1,-1,1,1,1), (-1,1,-1,1,1,1,-1,-1,1), (-1,1,1,1,-1,1,1,-1,1), (1,1,-1,1,1,-1,1,-1,1), (1,1,1,-1,-1,-1,-1,1), (-1,-1,-1,-1,-1,-1,-1,-1), (1,1,1,-1,-1,1,1,1,-1,-1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,1), (1,1,-1,1,-1,1,1,-1,1), (1,1,1,-1,-1,-1,1,1), (-1,-1,1,1,1,-1,-1,1,1), (1,1,1,1,1,1,1,1)}, {(-1,1,-1,-1,-1,1,1,1), (-1,1,-1,1,1,1,-1,-1,1), (-1,1,1,1,-1,1,1,-1,1), (-1,1,1,1,1,-1,1,-1,-1,1), (1,1,1,-1,-1,-1,-1,1), (1,1,1,-1,-1,-1,1,1), (-1,1,-1,1,1,1,-1,-1,1), (1,1,1,1,1,1,1,1)}, {(-1,1,-1,-1,-1,1,1,1), (-1,1,-1,1,1,1,-1,-1,1), (-1,1,1,1,-1,1,1,-1,1), (1,-1,-1,-1,1,1,-1,1,1), (-1,-1,1,1,1,1,1,-1), (-1,-1,1,1,-1,1,1,-1,1), (-1,-1,-1,-1,-1,-1,-1,-1), (-1,-1,1,1,1,-1,-1,1,1,-1)}, {(-1,1,-1,-1,-1,1,1,1), (-1,1,-1,1,1,1,-1,-1,1), (-1,1,1,1,-1,1,1,-1,1), (1,-1,-1,-1,1,1,-1,1,1), (-1,-1,-1,1,1,1,1,-1,1), (-1,-1,1,1,1,1,1,-1,1), (-1,-1,-1,-1,-1,-1,-1,-1), (1,1,-1,-1,1,1,1,-1,-1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,1,1,1,1,-1), (-1,-1,1,1,-1,1,1,-1,1), (-1,-1,1,1,1,-1,-1,1,1,1), (1,1,1,1,1,1,1,1,1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,-1,1,1,1,1,1,-1), (1,1,1,-1,-1,-1,-1,1), (-1,-1,-1,-1,-1,-1,-1,-1), (1,1,1,-1,1,1,1,-1,1,-1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,1,1,1,1,-1), (1,1,1,-1,-1,-1,1,1), (-1,-1,1,1,1,-1,-1,1,1), (1,1,1,1,1,1,1,1,1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,1,1,1,1,-1), (1,1,1,-1,-1,-1,1,1), (-1,-1,-1,-1,-1,-1,-1,-1), (-1,-1,1,1,1,-1,-1,1,1,-1)}, {(-1,1,-1,-1,-1,1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,-1,1,1,-1,1), (1,1,1,-1,-1,-1,-1,1), (-1,-1,-1,-1,-1,-1,-1,-1), (1,1,-1,-1,1,1,1,-1,-1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,-1,1,1,-1,1), (1,1,1,-1,-1,-1,-1,1,1), (1,1,1,-1,-1,-1,1,1,1), (-1,-1,-1,-1,-1,-1,-1,-1), (-1,-1,1,1,1,-1,-1,1,1,1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,-1,1,1,1,1,-1,1), (1,1,1,-1,-1,-1,-1,1), (1,1,-1,-1,1,1,1,-1,-1,1), (1,1,1,1,1,1,1,1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,1,1,1,1,-1), (1,1,-1,1,-1,1,1,-1), (-1,-1,-1,-1,-1,-1,-1,-1), (1,1,1,-1,1,1,1,-1,1,-1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,-1,1,1,-1,1), (1,1,1,-1,-1,-1,-1,1), (1,1,-1,-1,1,1,1,-1,-1,1), (1,1,1,1,1,1,1,1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (1,1,-1,1,-1,1,1,-1), (1,1,1,-1,-1,-1,-1,1), (-1,-1,-1,-1,-1,-1,-1,-1), (-1,-1,1,1,1,-1,-1,1,1,1)}, {(-1,1,-1,-1,-1,1,1,1,1), (-1,1,-1,1,1,1,-1,-1,1), (-1,1,1,1,-1,1,1,-1,-1,1), (1,-1,-1,-1,1,1,-1,1,1), (1,1,-1,1,-1,1,1,-1), (1,1,1,-1,-1,-1,-1,1), (-1,-1,-1,-1,-1,-1,-1,-1), (1,1,-1,-1,1,1,1,-1,-1,1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,-1,1,1,-1,1), (1,1,1,-1,-1,-1,-1,1), (-1,1,1,1,1,-1,1,1,1)}, {(-1,1,-1,-1,-1,1,1,1), (-1,1,-1,1,1,1,-1,-1,1), (-1,1,1,1,-1,1,1,-1,-1,1), (1,-1,-1,-1,1,1,-1,1,1), (-1,-1,1,1,-1,-1,-1,1), (1,1,1,-1,-1,-1,-1,1), (-1,-1,-1,-1,-1,-1,-1,-1), (-1,-1,1,1,1,-1,-1,1,1,-1)}, {(-1,1,-1,-1,-1,1,1,1,1), (-1,1,-1,1,1,1,-1,-1,1), (-1,1,1,1,-1,1,1,-1,-1,1), (1,-1,-1,-1,1,1,-1,1,1), (1,1,-1,1,-1,1,1,-1), (1,1,1,-1,-1,-1,-1,1), (-1,-1,-1,-1,-1,-1,-1,-1), (1,1,1,-1,1,1,1,-1,1,-1)}, {(-1,1,-1,-1,-1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1,1), (-1,-1,1,1,-1,-1,1,1,1), (1,1,1,1,1,1,1,1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1,1), (-1,-1,-1,-1,-1,-1,-1,-1), (1,1,-1,-1,1,1,1,-1,-1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1,1), (-1,-1,1,1,1,-1,-1,1,1), (1,1,1,1,1,1,1,1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1,1), (-1,-1,-1,-1,-1,-1,-1,-1), (1,1,-1,-1,1,1,1,-1,-1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (-1,-1,1,1,1,1,1,-1), (1,1,1,-1,-1,-1,-1,1,1), (1,1,-1,1,-1,1,1,-1), (1,1,1,1,1,1,1,1,1)}, {(-1,1,-1,-1,-1,1,1,1), (-1,1,-1,1,1,1,-1,-1,1), (-1,1,1,1,-1,1,1,-1,1,-1), (1,-1,-1,-1,1,1,-1,1,1), (-1,-1,-1,1,-1,-1,1,1,-1), (1,1,1,-1,-1,-1,1,1,-1,-1), (1,1,1,-1,-1,-1,-1,1,1), (-1,-1,-1,-1,-1,-1,-1,-1), (-1,-1,1,1,1,-1,-1,1,1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (-1,-1,1,1,1,1,1,-1), (1,1,1,-1,-1,-1,-1,1,1), (1,1,1,-1,-1,-1,1,1,-1), (1,1,1,1,1,1,1,1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (-1,-1,1,1,-1,1,1,-1,1), (1,1,1,-1,-1,-1,-1,1,1), (1,1,1,-1,-1,-1,1,1,-1,-1), (-1,-1,-1,-1,-1,-1,-1,-1), (-1,-1,1,1,1,-1,-1,1,1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1,1), (-1,-1,1,1,1,-1,1,1,1), (1,1,1,1,1,1,1,1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1,1), (-1,-1,-1,-1,-1,-1,-1,-1), (-1,-1,1,1,1,-1,-1,1,1,-1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1,1), (-1,-1,-1,-1,-1,-1,-1,-1), (1,1,-1,-1,1,1,1,-1,-1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1), (-1,-1,-1,-1,-1,-1,-1,-1), (1,1,-1,-1,1,1,1,-1,-1,1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,1,-1,-1,-1,-1,1), (1,1,1,-1,-1,-1,-1,1,1), (-1,-1,-1,-1,-1,-1,-1,-1), (-1,-1,1,1,1,-1,-1,1,1,-1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1), (1,1,-1,1,-1,-1,1,1,-1), (1,1,1,-1,-1,-1,-1,1), (-1,1,1,1,-1,-1,1,1,1,1), (1,1,1,-1,-1,-1,-1,1,-1,-1)}, {(-1,1,-1,-1,-1,1,1,1,1), (-1,1,-1,1,1,1,-1,-1,1), (-1,1,1,1,-1,1,1,-1,1,-1), (1,-1,-1,-1,1,1,-1,1,1),

(1,1,-1,1,-1,-1,1,-1), (1,1,1,-1,-1,-1,-1,1), (1,1,-1,-1,1,1,-1,-1), (1,1,1,1,1,1,1,1)}, {(-1,1,-1,-1,-1,1,1,1), (-1,1,-1,1,1,-1,-1,1), (-1,1,1,1,1,-1,1,-1,-1), (1,-1,-1,1,1,-1,1,-1,1), (-1,-1,-1,1,1,1,1,-1), (-1,-1,1,1,-1,1,1,-1,1), (-1,-1,-1,-1,-1,-1,-1,-1), (-1,-1,1,1,1,-1,-1,1,1)}, {(-1,1,-1,-1,-1,1,1,1), (-1,1,-1,1,1,-1,-1,1), (-1,1,1,1,1,-1,1,-1,-1), (1,-1,-1,1,1,-1,1,-1,1), (-1,-1,-1,1,1,1,1,1,-1), (-1,-1,1,1,-1,1,1,-1,1), (-1,-1,-1,-1,-1,-1,-1,-1), (1,1,-1,-1,1,1,1,-1,-1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (-1,-1,1,1,-1,1,1,-1,1), (-1,-1,1,1,-1,1,1,-1,1), (1,1,1,1,1,1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (-1,-1,1,1,-1,1,1,-1,1), (1,1,-1,-1,1,1,1,-1,-1,1,-1), (1,1,1,1,1,1,1,1)}, {(-1,1,-1,-1,-1,1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (1,1,-1,1,1,-1,-1,1,-1,-1), (-1,-1,-1,-1,-1,-1,-1,-1), (-1,-1,1,1,1,-1,-1,1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (1,1,-1,1,1,-1,-1,1,-1,-1), (-1,-1,-1,-1,-1,-1,-1), (1,1,-1,-1,1,1,1,-1,1,-1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (1,1,-1,1,1,-1,-1,1,-1,-1), (-1,-1,1,1,-1,1,-1,1,1), (1,1,1,1,1,1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (1,1,-1,1,-1,1,1,-1,1), (1,1,-1,-1,1,1,1,-1,-1), (1,1,1,1,1,1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (1,1,1,-1,-1,-1,-1,1), (-1,-1,-1,-1,-1,-1,-1,-1), (-1,-1,1,1,1,-1,-1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (1,1,1,-1,-1,-1,-1,1), (-1,-1,-1,-1,-1,-1,-1,-1), (1,1,-1,-1,1,1,1,-1,-1,1,-1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,-1,1,1,1,1,1,-1), (1,1,1,-1,-1,-1,-1,1), (-1,-1,1,1,-1,1,1,-1,1), (1,1,1,1,1,1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (1,1,-1,1,1,-1,-1,1,-1,-1), (-1,-1,1,1,1,-1,1,1,-1), (-1,-1,1,1,-1,1,1,-1,1), (-1,-1,-1,-1,-1,-1,-1,-1), (-1,-1,1,1,1,-1,-1,1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (1,1,-1,1,1,-1,-1,1,-1,-1), (1,1,1,-1,-1,-1,-1,1), (-1,-1,-1,-1,-1,-1,-1,-1), (1,1,-1,-1,1,1,1,-1,1,-1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (1,1,-1,1,1,-1,-1,1,-1,-1), (1,1,1,-1,-1,-1,-1,1), (-1,-1,1,1,-1,1,1,-1,1,1), (1,1,1,1,1,1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (1,1,-1,1,1,-1,-1,1,-1,-1), (1,1,-1,1,-1,1,1,-1,1), (1,1,-1,-1,1,1,1,-1,-1), (1,1,1,1,1,1,1,1)}, {(-1,1,-1,-1,-1,1,1,1), (-1,1,-1,1,1,1,-1,-1,1), (-1,1,1,1,1,-1,1,-1,-1), (1,-1,-1,1,1,-1,1,-1,1), (-1,-1,1,1,1,1,1,1,-1), (-1,-1,1,1,-1,1,1,-1,1), (-1,-1,-1,-1,-1,-1,-1,-1), (-1,-1,1,1,1,-1,-1,1,1,1)}, {(-1,1,-1,-1,1,-1,1,1,1), (-1,1,1,-1,1,1,-1,-1,1,1), (1,-1,-1,-1,1,1,-1,1,1,1), (1,-1,-1,1,1,-1,1,-1,1), (-1,-1,-1,1,1,1,1,1,-1), (-1,-1,1,1,1,-1,-1,-1,-1,1), (1,1,-1,-1,1,1,1,-1,-1,1,-1)}, {(-1,1,-1,-1,-1,1,1,1), (-1,1,-1,1,1,1,-1,-1,1), (1,-1,-1,1,-1,1,1,-1,1), (-1,-1,1,1,1,-1,-1,1,1), (-1,-1,1,1,1,-1,1,1,-1,1,-1,-1), (-1,-1,-1,-1,-1,-1,-1), (-1,-1,1,1,1,-1,-1,1,1)}, {(-1,1,-1,-1,-1,1,1,1), (-1,1,-1,1,1,1,-1,-1,1), (1,-1,-1,-1,1,1,-1,-1,1,1), (1,-1,-1,1,1,-1,1,-1,1), (-1,-1,-1,1,1,1,1,1,-1), (1,1,-1,1,-1,-1,1,-1,-1), (-1,-1,-1,-1,-1,-1,-1,-1), (1,1,-1,-1,1,1,1,-1,-1,1,-1)}, {(-1,1,-1,-1,-1,1,1,1), (-1,1,-1,1,1,1,-1,-1,1), (1,-1,-1,-1,1,1,-1,-1,1,1), (1,-1,-1,1,1,-1,1,-1,1), (-1,-1,-1,1,1,1,1,1,-1), (1,1,-1,1,-1,-1,1,-1,-1), (-1,-1,-1,-1,-1,-1,-1), (1,1,-1,-1,1,1,1,-1,1,-1)}, {(-1,1,-1,-1,-1,1,1,1), (-1,1,-1,1,1,1,-1,-1,1), (1,-1,-1,-1,1,1,-1,1,-1,1,1), (1,-1,-1,1,1,-1,1,-1,1), (-1,-1,-1,1,1,1,1,1,-1), (1,1,-1,1,-1,-1,1,-1,-1), (1,1,-1,-1,1,1,1,-1,-1), (1,1,1,1,1,1,1,1)}, {(-1,1,-1,-1,-1,1,1,1), (-1,1,-1,1,1,1,-1,-1,1), (1,-1,-1,-1,1,1,-1,-1,1,1), (1,-1,-1,1,1,-1,1,-1,1), (-1,-1,-1,1,1,1,1,1,-1), (1,1,-1,1,-1,1,1,-1,1), (1,1,-1,-1,1,1,1,-1,-1), (1,1,1,1,1,1,1,1)}, {(-1,1,-1,-1,-1,1,1,1), (-1,1,-1,1,1,1,-1,-1,1), (1,-1,-1,-1,1,1,-1,-1,1,1), (1,-1,-1,1,1,-1,1,-1,1), (-1,-1,-1,1,1,1,1,1,-1), (1,1,1,-1,-1,-1,-1,1), (-1,-1,-1,-1,-1,-1,-1,-1), (-1,-1,1,1,1,-1,-1,1,1,1)}, {(-1,1,-1,-1,-1,1,1,1), (-1,1,-1,1,1,1,-1,-1,1), (1,-1,-1,-1,1,1,-1,-1,1,1), (1,-1,-1,1,1,-1,1,-1,1), (-1,-1,-1,1,1,1,1,1,-1), (1,1,1,-1,-1,-1,-1,1), (-1,-1,-1,-1,-1,-1,-1,-1), (1,1,-1,-1,1,1,1,-1,-1,1,-1)}, {(-1,1,-1,-1,-1,1,1,1,1), (-1,1,-1,1,1,1,-1,-1,1), (1,-1,-1,-1,1,1,-1,-1,1,1), (1,-1,-1,1,1,-1,1,-1,1), (1,1,-1,1,-1,-1,1,-1,-1), (1,1,1,-1,-1,-1,-1,1), (-1,-1,-1,-1,-1,-1,-1,-1), (-1,-1,1,1,1,-1,-1,1,1,1)}, {(-1,1,-1,-1,-1,1,1,1), (-1,1,-1,1,1,1,-1,-1,1), (1,-1,-1,-1,1,1,-1,-1,1,1), (1,-1,-1,1,1,-1,1,-1,1), (-1,-1,1,1,1,1,1,1,-1), (1,1,-1,1,-1,-1,1,-1,-1), (-1,-1,-1,-1,-1,-1,-1,-1), (1,1,-1,-1,1,1,1,-1,1,-1)}, {(-1,1,-1,-1,-1,1,1,1), (-1,1,-1,1,1,1,-1,-1,1), (1,-1,-1,-1,1,1,-1,-1,1,1), (1,-1,-1,1,1,-1,1,-1,1), (1,1,-1,1,-1,-1,1,-1,-1), (1,1,1,-1,-1,-1,-1,1), (-1,-1,1,1,-1,1,1,-1,1), (1,1,1,1,1,1,1,1)}, {(-1,1,-1,-1,-1,1,1,1), (-1,1,-1,1,1,1,-1,-1,1), (1,-1,-1,-1,1,1,-1,-1,1,1), (1,-1,-1,1,1,-1,1,-1,1), (1,1,-1,1,-1,-1,1,-1,-1), (1,1,1,-1,-1,-1,-1,1), (-1,-1,1,1,-1,1,1,-1,1), (1,1,1,1,1,1,1,1)}, {(-1,1,-1,-1,-1,1,1,1), (-1,1,1,-1,1,1,-1,-1,1), (-1,1,1,1,1,-1,1,-1,-1), (1,-1,-1,1,-1,1,1,-1,1), (-1,-1,1,1,1,1,1,1,-1), (-1,-1,1,1,-1,1,1,-1,1), (-1,-1,-1,-1,-1,-1,-1,-1), (-1,-1,1,1,1,-1,-1,1,1,1)}, {(-1,1,-1,-1,-1,1,1,1,1), (-1,1,1,1,-1,1,1,-1,-1), (-1,1,1,1,1,-1,1,-1,-1), (1,-1,1,-1,-1,1,1,1,-1), (-1,-1,1,1,1,1,1,1,-1), (-1,-1,1,1,-1,1,1,-1,1), (-1,-1,-1,-1,-1,-1,-1), (1,1,-1,-1,1,1,1,-1,-1,1,-1)}, {(-1,1,-1,-1,-1,1,1,1,1), (-1,1,1,-1,1,-1,1,1,-1), (-1,1,1,1,1,-1,1,-1,-1), (1,-1,1,-1,-1,1,1,1,-1), (-1,-1,1,1,1,1,1,1,-1), (-1,-1,1,1,-1,1,1,-1,1), (-1,-1,1,1,-1,1,1,-1,1), (1,1,1,1,1,1,1,1)}, {(-1,1,-1,-1,-1,1,1,1), (-1,

1,1,1,-1,1,-1,1,-1), (-1,1,1,1,-1,1,-1,-1), (1,-1,1,-1,-1,1,1,-1), (-1,-1,-1,1,1,1,1,-1), (-1,-1,1,-1,1,1,-1,1), (1,1,-1,-1,1,1,1,-1,-1), (1,1,1,1,1,1,1,1)}, {(-1,1,-1,-1,-1,1,1,1), (-1,1,1,-1,1,-1,1,-1), (-1,1,1,1,-1,1,-1,-1), (1,-1,1,-1,-1,1,1,-1), (-1,-1,-1,1,1,1,1,-1), (1,1,-1,1,-1,-1,1,-1), (-1,-1,-1,-1,-1,-1,-1,-1), (-1,-1,1,1,-1,-1,1,1)}, {(-1,1,-1,-1,-1,1,1,1), (-1,1,1,1,-1,1,-1,-1), (-1,1,1,1,1,-1,1,-1,-1), (1,-1,1,-1,-1,1,1,-1), (-1,-1,-1,1,1,1,1,-1), (1,1,-1,1,-1,-1,1,-1), (-1,-1,-1,-1,-1,-1,-1,-1), (1,1,1,-1,1,1,1,-1,-1)}, {(-1,1,-1,-1,-1,1,1,1), (-1,1,1,-1,1,-1,1,-1), (-1,1,1,1,1,-1,1,-1,-1), (1,-1,1,-1,-1,1,1,-1), (-1,-1,1,1,1,1,1,-1), (1,1,-1,1,-1,-1,1,-1), (-1,-1,1,1,1,-1,1,1,1), (1,1,1,1,1,1,1,1)}, {(-1,1,-1,-1,-1,1,1,1), (-1,1,1,-1,1,-1,1,-1), (-1,1,1,1,-1,1,-1,-1), (1,-1,1,-1,-1,1,1,-1), (-1,-1,1,1,1,1,1,-1), (1,1,-1,1,-1,-1,1,-1), (1,1,1,1,1,1,1,1)}, {(-1,1,-1,-1,-1,1,1,1), (-1,1,1,1,-1,1,-1,-1), (1,-1,1,-1,-1,1,1,-1), (-1,-1,1,1,1,1,1,-1), (1,1,1,-1,-1,-1,-1,1), (-1,-1,1,1,1,-1,1,1,1), (1,1,1,1,1,1,1,1)}, {(-1,1,-1,-1,-1,1,1,1), (-1,1,1,-1,1,-1,1,-1), (-1,1,1,1,-1,1,-1,-1), (1,-1,1,-1,-1,1,1,-1), (-1,-1,1,1,1,1,1,-1), (1,1,-1,1,-1,-1,1,-1), (1,1,1,1,1,1,1,1)}, {(-1,1,-1,-1,-1,1,1,1), (-1,1,1,-1,1,-1,1,-1), (-1,1,1,1,1,-1,1,-1,-1), (1,-1,1,-1,-1,1,1,-1), (1,1,1,-1,-1,-1,-1,1), (-1,-1,-1,-1,-1,-1,-1,-1), (-1,-1,1,1,1,-1,1,1,1)}, {(-1,1,-1,-1,-1,1,1,1), (-1,1,1,-1,1,-1,1,-1), (-1,1,1,1,-1,1,-1,-1), (1,-1,1,-1,-1,1,1,-1), (1,1,-1,1,-1,-1,1,-1), (1,1,1,-1,1,1,1,-1,-1), (1,1,1,1,1,1,1,1)}, {(-1,1,-1,-1,-1,1,1,1), (-1,1,1,-1,1,-1,1,-1), (-1,1,1,1,1,-1,1,-1,-1), (1,-1,1,-1,-1,1,1,-1), (1,1,-1,1,-1,-1,1,-1), (1,1,1,-1,-1,-1,-1,1), (-1,-1,-1,-1,-1,-1,-1,-1), (-1,-1,1,1,1,-1,1,1,1)}, {(-1,1,-1,-1,1,1,1,1), (-1,1,1,-1,1,-1,1,-1), (-1,1,1,1,-1,1,-1,-1), (1,-1,1,-1,-1,1,1,-1), (1,1,-1,1,-1,-1,1,-1), (1,1,1,-1,-1,-1,-1,1), (-1,-1,-1,-1,-1,-1,-1,-1), (1,1,-1,1,1,1,-1,-1)}, {(-1,1,-1,-1,-1,1,1,1), (-1,1,1,1,-1,1,-1,-1), (1,-1,1,-1,-1,1,1,-1), (1,1,-1,1,-1,-1,1,-1), (1,1,1,-1,-1,-1,-1,1), (-1,-1,1,1,1,-1,1,1,1)}, {(-1,1,-1,-1,-1,1,1,1), (-1,1,1,-1,1,-1,1,-1), (1,-1,1,-1,-1,1,1,-1), (1,1,-1,1,-1,-1,1,-1), (1,1,1,-1,1,1,1,-1,-1), (1,1,1,1,1,1,1,1)}, {(-1,1,-1,-1,-1,1,1,1), (-1,1,1,1,-1,1,-1,-1), (1,-1,1,-1,-1,1,1,-1), (1,1,-1,1,-1,-1,1,-1), (1,1,1,-1,-1,-1,-1,-1,1), (-1,-1,1,1,1,-1,1,1,1)}, {(-1,1,-1,-1,-1,1,1,1), (-1,1,1,1,-1,1,-1,-1,-1), (1,-1,-1,-1,-1,1,-1,1,1), (1,-1,1,-1,-1,1,1,-1), (-1,-1,-1,1,1,1,1,-1), (-1,-1,1,1,1,-1,1,1,-1), (-1,-1,-1,-1,-1,-1,-1,-1), (-1,-1,1,1,1,-1,-1,1,1,1)}, {(-1,1,-1,-1,-1,1,1,1), (-1,1,1,-1,1,-1,1,-1), (1,-1,1,-1,-1,1,1,-1), (1,-1,1,-1,-1,1,1,-1), (-1,-1,1,1,1,1,1,-1), (-1,-1,1,1,-1,1,1,-1,1), (-1,-1,-1,-1,-1,-1,-1,-1), (1,1,-1,-1,1,1,-1,-1)}, {(-1,1,-1,-1,-1,1,1,1), (-1,1,1,-1,1,-1,1,-1), (1,-1,-1,-1,1,1,-1,1,1), (1,-1,1,-1,-1,1,1,-1), (-1,-1,-1,1,1,1,1,-1), (-1,-1,1,1,-1,1,1,-1,1), (1,1,-1,1,-1,-1,1,-1), (1,1,1,1,1,1,1,1)}, {(-1,1,-1,-1,-1,1,1,1), (-1,1,1,-1,1,-1,1,-1), (1,-1,-1,-1,1,1,-1,1,1), (1,-1,1,-1,-1,1,1,-1), (-1,-1,1,1,1,1,1,-1), (-1,-1,1,1,-1,1,1,-1,1), (-1,-1,-1,1,1,1,1,-1), (1,1,-1,1,-1,-1,1,-1), (-1,-1,1,1,1,-1,-1,1,1,1)}, {(-1,1,-1,-1,-1,1,1,1), (-1,1,1,-1,1,-1,1,-1), (1,-1,-1,-1,1,1,-1,1,1), (1,-1,1,-1,-1,1,1,-1), (-1,-1,1,1,1,1,1,-1), (-1,-1,1,1,-1,1,1,-1,1), (-1,-1,-1,-1,-1,-1,-1,-1), (1,1,-1,1,1,1,-1,-1)}, {(-1,1,-1,-1,-1,1,1,1), (-1,1,1,-1,1,-1,1,-1), (1,-1,-1,-1,1,1,-1,1,1), (1,-1,1,-1,-1,1,1,-1), (-1,-1,1,1,1,1,1,-1), (1,1,1,-1,-1,-1,-1,1), (-1,-1,-1,-1,-1,-1,-1,-1), (1,1,-1,1,1,1,-1,-1)}, {(-1,1,-1,-1,-1,1,1,1), (-1,1,1,-1,1,-1,1,-1), (1,-1,-1,-1,1,1,-1,1,1), (1,-1,1,-1,-1,1,1,-1), (-1,-1,1,1,1,1,1,-1), (1,1,1,-1,-1,-1,-1,1), (1,1,1,1,1,1,1,1)}, {(-1,1,-1,-1,-1,1,1,1), (-1,1,1,-1,1,-1,1,-1), (1,-1,-1,-1,1,1,-1,1,1), (1,-1,1,-1,-1,1,1,-1), (-1,-1,1,1,1,1,1,-1), (1,1,1,-1,-1,-1,-1,1,1), (1,1,-1,1,-1,1,1,1,-1), (1,1,1,1,1,1,1,1)}, {(-1,1,-1,-1,-1,1,1,1), (-1,1,1,-1,1,-1,1,-1), (1,-1,-1,-1,1,1,-1,1,1), (1,-1,1,-1,-1,1,1,-1), (1,1,-1,1,-1,-1,1,-1), (1,1,1,-1,-1,-1,-1,1), (-1,-1,-1,-1,-1,-1,-1,-1), (-1,-1,1,1,1,-1,-1,1,1,1)}, {(-1,1,-1,-1,-1,1,1,1), (-1,1,1,1,-1,1,-1,-1), (1,-1,-1,-1,1,1,-1,1,1), (1,-1,1,-1,-1,1,1,-1), (-1,-1,1,1,1,1,1,-1), (-1,-1,1,1,-1,1,1,-1), (-1,-1,-1,-1,-1,-1,-1,-1), (-1,-1,1,1,1,-1,-1,1,1,1)}, {(-1,1,-1,-1,-1,1,1,1), (-1,1,1,1,-1,1,-1,-1,-1), (1,-1,-1,1,-1,1,1,-1,-1,1), (1,-1,1,-1,-1,1,1,-1), (-1,-1,-1,1,1,1,1,-1), (-1,-1,1,1,-1,1,1,-1), (-1,-1,-1,-1,-1,-1,-1,-1), (1,1,1,1,1,1,1,1)}, {(-1,1,-1,-1,-1,1,1,1), (-1,1,1,1,-1,1,-1,-1), (1,-1,-1,-1,1,1,-1,1,1), (1,-1,1,-1,-1,1,1,-1), (1,1,-1,1,-1,-1,1,-1), (1,1,1,-1,-1,-1,-1,1), (-1,-1,-1,-1,-1,-1,-1,-1), (-1,-1,1,1,1,-1,-1,1,1,1)}, {(-1,1,-1,-1,-1,1,1,1), (-1,1,1,1,-1,1,-1,-1,-1), (1,-1,-1,1,-1,1,1,-1,1,1), (1,-1,1,-1,-1,1,1,-1), (-1,-1,-1,1,1,1,1,1,-1), (-1,-1,1,1,-1,1,1,1,-1), (-1,-1,-1,-1,-1,-1,-1,-1), (-1,-1,1,1,1,-1,-1,1,1,1)}, {(-1,1,-1,-1,-1,1,1,1), (-1,1,1,1,-1,1,-1,-1,-1), (1,-1,-1,1,-1,1,1,-1,1,1), (1,-1,1,-1,-1,1,1,-1), (-1,-1,-1,1,1,1,1,-1), (-1,-1,1,1,-1,1,1,-1), (-1,-1,-1,-1,-1,-1,-1,-1), (1,1,-1,1,1,1,-1,-1)}, {(-1,1,-1,-1,-1,1,1,1), (-1,1,1,1,-1,1,-1,-1,-1), (1,-1,-1,1,-1,1,1,-1,1,1), (1,-1,1,-1,-1,1,1,-1), (-1,-1,1,1,1,1,1,-1), (-1,-1,1,1,-1,1,1,-1), (-1,-1,-1,-1,-1,-1,-1,-1), (-1,-1,1,1,1,-1,-1,1,1,1)}, {(-1,1,-1,-1,-1,1,1,1), (-1,1,1,1,-1,1,-1,-1,-1), (1,-1,-1,1,-1,1,1,-1,1,1), (1,-1,1,-1,-1,1,1,-1), (-1,-1,1,1,1,1,1,-1), (-1,-1,1,1,-1,1,1,-1), (-1,-1,-1,-1,-1,-1,-1,-1), (1,1,1,1,1,1,1,1)}, {(-1,1,-1,-1,-1,1,1,1), (-1,1,1,1,-1,1,-1,-1,-1), (1,-1,-1,1,-1,1,1,-1,1,1), (1,-1,1,-1,-1,1,1,-1), (-1,-1,1,1,1,1,1,-1), (1,1,-1,1,-1,-1,1,-1), (-1,-1,-1,-1,-1,-1,-1,-1), (-1,-1,1,1,1,-1,-1,1,1,1)}, {(-1,1,-1,-1,-1,1,1,1), (-1,1,1,1,-1,1,-1,-1,-1), (1,-1,-1,1,-1,1,1,-1,1,1), (1,-1,1,-1,-1,1,1,-1), (-1,-1,1,1,1,1,1,-1), (1,1,-1,1,-1,-1,1,-1), (-1,-1,-1,-1,-1,-1,-1,-1), (-1,-1,1,1,1,-1,-1,1,1,1)}, {(-1,1,-1,-1,-1,1,1,1), (-1,1,1,1,-1,1,-1,-1,-1), (1,-1,-1,1,-1,1,1,-1,1,1), (1,-1,1,-1,-1,1,1,-1), (-1,-1,1,1,1,1,1,-1), (1,1,-1,1,-1,-1,1,-1), (1,1,1,1,1,1,1,1)}, {(-1,1,-1,-1,-1,1,1,1), (-1,1,1,1,-1,1,-1,-1,-1), (1,-1,-1,1,-1,1,1,-1,1,1), (1,-1,1,-1,-1,1,1,-1), (-1,-1,1,1,1,1,1,-1), (-1,-1,1,1,-1,1,1,-1), (-1,-1,-1,-1,-1,-1,-1,-1), (-1,-1,1,1,1,-1,-1,1,1,1)}, {(-1,1,-1,-1,-1,1,1,1,1), (-1,1,1,1,1,-1,1,-1,-1,-1), (1,-1,-1,1,1,-1,1,1,-1,1), (1,-1,1,-1,-1,1,1,-1), (-1,-1,-1,1,1,1,1,1,-1), (-1,-1,1,1,1,-1,1,1,-1), (-1,-1,-1,-1,-1,-1,-1,-1,-1), (-1,-1,1,1,1,1,-1,-1,1,1,1)}, {(-1,1,-1,-1,1,-1,1,1,1), (-1,1,1,1,1,-1,1,-1,-1,-1), (1,-1,-1,1,1,-1,1,1,-1,1), (1,-1,1,-1,-1,1,1,-1), (-1,-1,-1,1,1,1,1,1,-1), (-1,-1,1,1,-1,1,1,-1), (1,1,-1,1,-1,-1,1,-1), (-1,-1,-1,-1,-1,-1,-1,-1), (1,1,-1,1,1,1,-1,-1)}, {(-1,1,-1,-1,-1,1,1,1), (-1,1,1,1,1,-1,1,1,-1,-1), (1,-1,-1,1,1,-1,1,1,-1,1), (1,-1,1,-1,-1,1,1,-1), (-1,-1,1,1,1,1,1,-1), (1,1,-1,1,-1,-1,1,-1), (-1,-1,-1,-1,-1,-1,-1,-1), (1,1,-1,1,1,1,-1,-1,1-1)}, {(-1,1,-1,-1,-1,1,1,1,1), (-1,1,1,1,1,-1,1,-1,1,-1,-1), (1,-1,-1,1,1,-1,1,1,-1,1), (1,-1,1,-1,-1,1,1,1,-1), (-1,-1,1,1,1,1,1,-1), (1,1,-1,1,-1,-1,1,-1), (-1,-1,-1,-1,-1,-1,-1,-1), (1,1,-1,-1,1,1,1,-1,-1)}, {(-1,1,-1,-1,-1,1,1,1,1), (-1,1,1,1,1,-1,1,-1,-1,-1), (1,-1,-1,1,1,-1,1,1,-1,1), (1,-1,1,-1,-1,1,1,1,-1), (-1,-1,1,1,1,1,1,1,-1,

1), (1,1,-1,1,-1,-1,1,-1), (-1,-1,1,1,-1,-1,1,1), (1,1,1,1,1,1,1,1)}, {(-1,1,-1,-1,-1,1,1,1), (-1,1,1,1,-1,1,-1,-1), (1,-1,-1,1,-1,1,-1,1), (1,-1,1,-1,-1,1,1,-1), (-1,-1,1,1,1,1,1,-1), (1,1,-1,1,-1,-1,1,1,-1), (1,1,-1,-1,1,1,-1,-1), (1,1,1,1,1,1,1,1)}, {(-1,1,-1,-1,-1,1,1,1), (-1,1,1,1,-1,1,-1,-1), (1,-1,-1,1,-1,1,-1,1), (1,-1,1,-1,-1,1,1,-1), (-1,-1,1,-1,1,1,-1,1), (1,1,1,-1,-1,-1,-1,1), (-1,-1,-1,-1,-1,-1,-1,1), (-1,-1,1,1,-1,-1,1,1)}, {(-1,1,-1,-1,-1,1,1,1), (-1,1,1,1,-1,1,-1,-1), (1,-1,-1,1,-1,1,-1,1), (1,-1,1,-1,-1,1,1,-1), (-1,-1,1,-1,1,1,-1,1), (1,1,1,-1,-1,-1,-1,1), (-1,-1,-1,-1,-1,-1,-1,-1), (1,1,-1,-1,1,1,1,-1)}, {(-1,1,-1,-1,-1,1,1,1), (-1,1,1,1,1,-1,1,-1,-1), (1,-1,-1,1,-1,1,-1,1), (1,-1,1,-1,-1,1,1,-1), (-1,-1,1,1,-1,1,1,-1), (1,1,1,-1,-1,-1,-1,1), (-1,-1,1,1,-1,-1,1,1), (1,1,1,1,1,1,1,1)}, {(-1,1,-1,-1,-1,1,1,1), (-1,1,1,1,1,-1,1,-1,-1), (1,-1,-1,1,-1,1,-1,1), (1,-1,1,-1,-1,1,1,-1), (-1,-1,1,1,1,1,1,-1), (1,1,1,-1,-1,-1,-1,1), (1,1,-1,1,1,1,-1,-1), (1,1,1,1,1,1,1,1)}, {(-1,1,-1,-1,-1,1,1,1), (-1,1,1,1,1,-1,1,-1,-1), (1,-1,-1,1,-1,1,-1,1), (1,-1,1,-1,-1,1,1,-1), (1,1,1,-1,-1,-1,-1,1), (1,1,-1,-1,1,1,-1,1), (-1,-1,-1,-1,-1,-1,-1,-1), (1,-1,1,1,1,-1,-1,1,1)}, {(-1,1,-1,-1,-1,1,1,1), (-1,1,1,1,1,-1,1,-1,-1), (1,-1,-1,1,-1,1,-1,1), (1,-1,1,-1,-1,1,1,-1), (1,1,-1,1,-1,-1,1,-1), (1,1,1,-1,-1,-1,-1,1), (-1,-1,-1,-1,-1,-1,-1,-1), (1,1,-1,1,1,1,-1,-1)}, {(-1,1,-1,-1,-1,1,1,1), (-1,1,1,1,1,-1,1,-1,-1), (1,-1,-1,1,-1,1,-1,1), (1,-1,1,-1,-1,1,1,-1), (1,1,-1,1,-1,-1,1,-1), (1,1,1,-1,-1,-1,-1,1), (1,1,1,-1,-1,-1,-1,1), (1,1,1,1,1,1,1,1)}, {(-1,1,-1,-1,-1,1,1,1), (-1,1,1,1,1,-1,1,-1,-1), (1,-1,-1,1,-1,1,-1,1), (1,-1,1,-1,-1,1,1,-1), (1,1,-1,1,-1,-1,1,-1), (1,1,1,-1,-1,-1,-1,1), (1,1,-1,-1,1,1,-1,-1,1), (1,1,1,1,1,1,1,1)}, {(-1,1,-1,-1,-1,1,1,1), (-1,1,1,1,1,-1,1,-1,-1), (1,1,-1,1,-1,-1,1,-1), (1,1,1,-1,-1,-1,-1,1), (-1,-1,1,1,1,-1,1,-1), (-1,-1,1,-1,1,1,-1,1), (-1,-1,-1,-1,-1,-1,-1,-1), (1,1,-1,-1,1,1,1,-1)}, {(-1,1,-1,-1,-1,1,1,1), (-1,1,1,1,1,-1,1,-1,-1), (1,1,-1,1,-1,-1,1,-1), (1,1,1,-1,-1,-1,-1,1), (-1,-1,1,1,1,-1,1,-1), (-1,-1,1,-1,1,1,-1,1), (-1,-1,-1,-1,-1,-1,-1,-1), (1,1,-1,-1,1,1,-1,-1)}, {(-1,1,-1,-1,-1,1,1,1), (-1,1,1,1,1,-1,1,-1,-1), (1,1,-1,1,-1,-1,1,-1), (1,1,1,-1,-1,-1,-1,1), (-1,-1,1,1,1,-1,1,-1), (-1,-1,1,-1,1,1,-1,1), (-1,-1,1,1,1,-1,1,-1,-1,1,1), (1,1,1,1,1,1,1,1)}, {(-1,1,-1,-1,-1,1,1,1), (-1,1,1,1,1,-1,1,-1,-1), (1,1,-1,1,-1,-1,1,-1), (1,1,1,-1,-1,-1,1,1,-1), (1,-1,-1,1,-1,1,1,-1), (1,1,-1,1,1,1,-1,-1), (1,1,1,1,1,1,1,1)}, {(-1,1,-1,-1,-1,1,1,1), (-1,1,1,1,1,-1,1,-1,-1), (1,1,-1,1,-1,-1,1,-1,-1,1,1), (1,1,1,-1,-1,-1,1,-1), (-1,-1,1,1,1,-1,1,-1,-1,1,1), (1,-1,-1,1,-1,1,-1,-1,1,1), (-1,-1,-1,-1,-1,-1,-1,-1), (-1,-1,1,1,1,-1,1,1,1)}, {(-1,1,-1,-1,-1,1,1,1), (-1,1,1,1,1,-1,1,-1,-1), (1,1,-1,1,-1,-1,1,-1), (1,1,1,-1,-1,-1,1,-1), (-1,-1,1,1,1,-1,1,-1), (1,-1,-1,1,-1,1,1,-1), (-1,-1,1,1,1,-1,1,1,1), (1,1,1,1,1,1,1,1)}, {(-1,1,-1,-1,-1,1,1,1), (-1,1,1,1,1,-1,1,-1,-1), (1,1,-1,1,-1,-1,-1,1), (1,1,1,-1,-1,-1,1,1,-1), (-1,-1,1,-1,1,1,-1,1), (1,-1,-1,1,-1,1,1,1,-1), (1,1,-1,-1,1,1,1,-1,-1), (1,1,1,1,1,1,1,1)}, {(-1,1,-1,-1,-1,1,1,1), (-1,1,1,1,1,-1,1,-1,-1), (1,1,-1,1,-1,-1,-1,1), (1,1,1,-1,-1,-1,1,-1), (-1,-1,1,-1,1,1,-1,1), (1,-1,-1,1,-1,1,1,-1), (-1,-1,-1,-1,-1,-1,-1,-1), (1,1,-1,-1,1,1,1,-1)}, {(-1,1,-1,-1,-1,1,1,1), (-1,1,1,1,1,-1,1,-1,-1), (1,1,-1,1,-1,-1,-1,1), (1,1,1,-1,-1,-1,1,-1), (-1,-1,1,1,1,-1,1,-1), (1,-1,-1,1,-1,1,1,-1), (1,1,1,1,1,1,1,1)}, {(-1,1,-1,-1,-1,1,1,1), (-1,1,1,1,1,-1,1,-1,-1), (1,1,-1,1,-1,-1,-1,1), (1,1,1,-1,-1,-1,1,-1), (-1,-1,1,1,1,-1,1,-1,-1), (1,-1,-1,1,-1,1,1,-1), (-1,-1,-1,-1,-1,-1,-1,-1), (1,1,-1,1,1,1,-1,-1)}, {(-1,1,-1,-1,-1,1,1,1), (-1,1,1,1,1,-1,1,-1,-1), (1,1,-1,1,-1,-1,-1,1), (1,1,1,-1,-1,-1,1,-1), (-1,-1,1,1,-1,-1,1,1), (1,-1,-1,1,-1,-1,1,1,-1), (1,-1,1,-1,1,1,-1,-1), (1,1,1,1,1,1,1,1)}, {(-1,1,-1,-1,-1,1,1,1), (1,-1,-1,-1,1,1,-1,1,1), (1,-1,-1,1,-1,1,-1,1), (1,-1,1,1,-1,-1,1,1,-1), (-1,-1,-1,1,1,1,1,-1), (-1,-1,1,-1,1,1,1,-1), (-1,-1,-1,-1,-1,-1,-1,-1), (-1,-1,1,1,1,-1,-1,1,1)}, {(-1,1,-1,-1,-1,1,1,1), (1,-1,-1,-1,1,1,-1,1,1), (1,-1,-1,1,-1,1,1,-1), (1,-1,1,-1,1,-1,1,1,-1), (-1,-1,1,1,1,1,1,-1), (-1,-1,1,-1,1,1,-1,1), (-1,-1,-1,-1,-1,-1,-1,-1), (1,1,-1,1,1,1,-1,-1)}, {(-1,1,-1,-1,-1,1,1,1), (1,-1,-1,-1,1,1,-1,1,1), (1,-1,-1,1,-1,1,1,-1), (1,-1,1,-1,-1,1,1,1,-1), (-1,-1,-1,1,1,1,1,-1), (-1,-1,1,1,1,1,-1), (1,1,1,1,1,1,1,1)}, {(-1,1,-1,-1,-1,1,1,1), (1,-1,-1,-1,1,1,-1,1,1), (1,-1,1,1,-1,1,-1,1,1), (1,-1,1,-1,-1,1,1,1,-1), (-1,-1,1,1,1,1,1,-1), (-1,-1,1,-1,1,1,-1,1), (1,1,1,-1,-1,1,1,-1,-1), (1,1,1,1,1,1,1,1)}, {(-1,1,-1,-1,-1,1,1,1), (1,-1,-1,-1,1,1,-1,1,1), (1,-1,-1,1,-1,1,1,-1,1), (1,-1,1,-1,1,-1,1,1,-1), (-1,-1,-1,1,1,1,1,-1), (-1,-1,1,1,1,1,-1), (-1,-1,-1,-1,-1,-1,-1,-1), (1,1,-1,1,1,1,-1,-1)}, {(-1,1,-1,-1,-1,1,1,1), (1,-1,-1,-1,1,1,-1,1,1), (1,-1,-1,1,-1,1,1,-1,1), (1,-1,1,-1,-1,1,1,1,-1), (-1,-1,1,1,1,1,1,-1), (1,1,-1,1,-1,-1,1,-1,-1,1,1), (1,1,1,1,1,1,1,1)}, {(-1,1,-1,-1,-1,1,1,1), (1,-1,-1,-1,1,1,-1,1,1), (1,-1,1,1,-1,1,-1,1,1), (1,-1,1,-1,-1,1,1,1,-1), (-1,-1,1,1,1,1,-1), (1,1,-1,1,-1,-1,1,-1,-1,1,1), (-1,-1,-1,-1,-1,-1,-1,-1), (1,1,-1,1,1,1,-1,-1)}, {(-1,1,-1,-1,-1,1,1,1), (1,-1,-1,1,1,-1,1,1), (1,-1,1,-1,

1,1,-1,1),    (1,-1,1,-1,-1,1,1,-1),    (-1,-1,1,-1,1,1,-1,1),    (1,1,1,-1,-1,-1,-1,1),    (-1,-1,1,1,-1,-1,1,1), (1,1,1,1,1,1,1,1)}, {(-1,1,-1,-1,-1,1,1,1), (1,-1,-1,-1,1,-1,1,1), (1,-1,-1,1,-1,1,-1,1,-1,1), (1,-1,1,-1,-1,1,1,-1), (-1,-1,1,-1,1,1,-1,1), (1,1,1,-1,-1,-1,-1,1), (1,1,-1,1,1,1,-1,-1), (1,1,1,1,1,1,1,1)}, {(-1,1,-1,-1,-1,1,1,1), (1,-1,-1,-1,1,1,-1,1), (1,-1,-1,1,-1,1,-1,1,1), (1,-1,1,-1,-1,1,1,-1), (1,1,-1,1,-1,-1,1,1), (1,1,1,-1,-1,-1,-1,1), (-1,-1,-1,-1,-1,-1,-1,-1), (-1,-1,1,1,1,-1,-1,1,1,1)}, {(-1,1,-1,-1,-1,1,1,1), (1,-1,-1,-1,1,1,-1,1,1), (1,-1,-1,1,-1,1,-1,1,1), (1,-1,1,-1,-1,1,1,1,-1), (1,1,-1,1,-1,-1,1,1,-1), (1,1,1,-1,-1,-1,-1,1), (-1,-1,-1,-1,-1,-1,-1,-1), (1,1,-1,-1,1,1,1,-1,-1)}, {(-1,1,-1,-1,-1,1,1,1,1), (1,-1,-1,-1,1,1,-1,1,1), (1,-1,-1,1,-1,1,1,-1,1), (1,-1,1,-1,-1,1,1,1,-1), (1,1,-1,1,-1,-1,1,1,-1), (1,1,1,-1,-1,-1,-1,1,-1,1), (-1,-1,1,1,1,-1,-1,1,1,1), (1,1,1,1,1,1,1,1)}, {(-1,1,1,-1,-1,-1,1,1,1,1), (1,-1,-1,-1,1,1,-1,1,1,1), (1,-1,-1,1,- 1,1,-1,1), (1,-1,1,-1,-1,1,1,1,-1), (1,1,-1,1,-1,-1,1,1,-1), (1,1,1,-1,-1,-1,-1,1,1), (1,1,-1,-1,1,1,1,-1,-1,-1), (1,1,1,1,1,1,1,1)}, {(-1,1,-1,-1,-1,1,1,1,1), (1,-1,-1,-1,1,1,-1,1,1), (1,1,-1,1,-1,-1,1,1,-1,-1), (1,1,1,-1,-1,-1,-1,1,1,-1), (-1,1,1,1,-1,1,1,-1,-1,1,-1), (-1,-1,-1,-1,-1,-1,-1,-1), (-1,-1,1,1,1,-1,-1,1,1,1)}, {(-1,1,-1,-1,-1,1,1,1,1), (1,-1,-1,-1,1,1,-1,1,1), (1,1,-1,1,-1,-1,1,1,-1,-1), (1,1,1,-1,-1,-1,1,1,-1), (-1,1,1,-1,1,1,1,-1,1,-1), (-1,1,1,1,-1,1,1,-1,1,-1,1), (-1,-1,-1,-1,-1,-1,-1,-1,-1), (1,1,1,-1,-1,1,1,1,-1,-1)}, {(-1,1,-1,-1,-1,1,1,1,1), (1,-1,-1,-1,1,1,-1,1,1), (1,1,-1,1,-1,-1,1,1,-1), (1,1,1,-1,-1,-1,1,1,-1), (-1,1,1,-1,1,1,1,-1,1,-1), (-1,1,1,1,-1,1,1,-1,1,-1), (1,1,1,1,1,1,1,1)}, {(-1,1,-1,-1,-1,1,1,1,1), (1,-1,-1,-1,1,1,-1,1,1,1), (1,1,-1,1,-1,-1,1,1,-1,-1), (-1,1,1,-1,1,1,-1,1,-1,1), (1,-1,1,-1,-1,1,1,1,1,-1), (1,1,1,1,1,1,1,1)}, {(-1,1,-1,-1,-1,1,1,1,1), (1,-1,-1,-1,1,1,-1,1,1), (1,1,-1,1,-1,-1,-1,1,1), (1,1,1,-1,-1,-1,-1,1,1,-1), (-1,1,1,1,-1,1,1,-1,-1,-1,1), (1,-1,-1,-1,-1,-1,-1,-1,-1), (-1,-1,1,1,1,-1,-1,1,1,1)}, {(-1,1,-1,-1,-1,1,1,1,1), (1,-1,-1,-1,1,1,-1,1,1), (1,1,-1,1,-1,-1,-1,1,1), (1,1,1,-1,-1,-1,-1,1,1,-1), (1,-1,-1,1,1,-1,1,1,-1,1,-1), (-1,-1,1,1,1,1,-1,-1,-1,1,-1), (-1,-1,-1,-1,-1,-1,-1,-1), (1,1,1,-1,1,1,1,1,-1,-1,-1)}, {(-1,1,-1,-1,-1,1,1,1,1), (1,-1,-1,-1,1,1,-1,1,1,1), (1,1,-1,1,-1,-1,1,1,-1), (1,1,1,-1,-1,-1,1,1,-1), (-1,1,1,-1,1,1,-1,1,-1,1), (-1,1,1,1,-1,1,-1,1,1), (1,1,1,1,1,1,1,1)}, {(-1,1,-1,-1,-1,1,1,1,1), (1,-1,-1,-1,1,1,-1,1,1), (1,1,-1,1,-1,-1,1,1,-1), (1,1,1,-1,-1,-1,-1,1,-1), (-1,1,1,-1,1,1,-1,1,-1), (1,-1,1,-1,-1,1,1,1,-1), (1,-1,1,1,-1,-1,1,1,1,-1), (1,1,1,1,1,1,1,1)}, {(-1,1,-1,-1,-1,1,1,1,1), (1,-1,-1,-1,1,1,-1,1,1), (1,1,-1,1,-1,-1,1,1,-1), (1,1,1,-1,-1,-1,-1,1,1,-1), (1,-1,-1,1,-1,1,1,1,-1), (-1,-1,-1,-1,-1,-1,-1,-1,-1), (-1,-1,1,1,1,-1,-1,1,1,1)}, {(-1,1,-1,-1,-1,1,1,1,1), (1,-1,-1,-1,1,1,-1,1,1), (1,1,-1,1,-1,-1,1,1,-1), (1,1,1,-1,-1,-1,-1,1,-1), (1,-1,-1,1,-1,1,1,1,-1), (1,-1,1,1,-1,-1,1,1,1,-1), (1,-1,1,-1,-1,1,1,1,-1,-1,-1), (-1,-1,1,1,1,-1,-1,1,1,1)}, {(-1,1,-1,-1,-1,1,1,1,1), (1,-1,-1,-1,1,1,-1,1,1), (1,1,-1,1,-1,-1,1,1,-1,-1), (1,1,1,-1,-1,-1,-1,1,-1), (1,-1,-1,1,-1,1,1,1,-1), (1,-1,1,1,-1,-1,1,1,1), (-1,1,1,-1,1,1,-1,1,-1), (1,1,1,1,1,1,1,1)}, {(-1,1,-1,-1,-1,1,1,1,1), (1,-1,-1,-1,1,1,-1,1,1), (1,1,-1,1,-1,-1,1,1,-1), (1,1,1,-1,-1,-1,-1,1,-1), (-1,1,1,-1,1,1,-1,1,-1), (1,-1,1,1,-1,-1,1,1,1), (1,1,-1,1,1,1,-1,-1), (1,1,1,1,1,1,1,1)}, {(-1,1,-1,-1,-1,1,1,1,1), (1,-1,-1,-1,1,1,-1,1,1), (1,1,-1,1,-1,-1,1,1,-1), (1,1,1,-1,-1,-1,-1,1,-1), (-1,1,1,-1,1,1,-1,1,-1), (1,-1,1,1,-1,1,1,-1). (-1,-1,-1,-1,-1,-1,-1,-1), (-1,-1,1,1,1,-1,-1,1,1,1)}, {(-1,1,1,-1,-1,1,1,1,1), (1,-1,-1,-1,1,1,-1,1,1), (1,1,-1,1,-1,-1,-1,1,1), (1,1,1,-1,-1,-1,-1,1,-1), (1,-1,-1,1,-1,1,1,1,-1), (1,-1,1,1,-1,1,1,-1), (-1,-1,-1,-1,-1,-1,-1,-1), (1,1,-1,1,1,1,-1,-1)}, {(-1,1,-1,-1,-1,1,1,1,1), (1,-1,-1,-1,1,1,-1,1,1), (1,1,-1,1,-1,-1,-1,1,1), (1,1,1,-1,-1,-1,1,1,-1), (1,-1,1,1,-1,1,1,-1,1,-1), (1,-1,1,1,-1,-1,1,1,1,-1,-1), (1,-1,1,1,-1,-1,1,1,1), (-1,1,1,1,-1,1,1,-1,-1,-1)}, {(-1,1,-1,-1,-1,1,1,1,1), (1,-1,-1,-1,1,-1,1,1,1), (1,1,-1,1,-1,-1,1,1,-1), (1,1,1,-1,-1,-1,1,1,-1), (-1,1,1,1,-1,-1,1,1,-1), (-1,1,1,1,1,1,-1,-1,-1), (-1,1,1,1,-1,-1,1,1,1,-1), (1,1,1,1,1,1,1,1)}, {(-1,1,-1,-1,1,1,1,-1,1), (-1,1,1,-1,1,1,-1,-1,1), (1,1,-1,1,-1,-1,1,1,-1), (1,1,1,-1,-1,1,1,-1,-1), (-1,-1,1,1,1,1,1,-1,-1,-1), (1,-1,-1,1,1,1,-1,-1), (-1,1,1,1,1,1,-1,-1,-1), (1,1,1,1,1,1,1,1)}, {(-1,1,1,-1,1,1,-1,-1,1), (-1,1,1,1,-1,-1,1,1,1), (1,1,-1,1,-1,1,-1,1,-1), (1,1,-1,1,-1,1,-1,-1,1), (-1,-1,1,1,1,1,-1,-1,-1), (1,1,1,-1,1,-1,-1,-1,1), (-1,-1,-1,-1,-1,-1,-1,-1), (-1,1,1,1,-1,-1,1,1,1,-1)}, {(-1,1,1,-1,-1,1,1,-1,1), (-1,1,1,1,-1,-1,1,1,1), (1,1,-1,1,-1,1,-1,1,-1), (1,1,-1,1,-1,1,-1,1,-1), (-1,-1,-1,1,1,1,1,1,-1), (-1,1,1,1,1,1,-1,-1,-1), (-1,-1,-1,-1,-1,-1,-1,-1), (1,-1,1,1,1,1,-1,-1,1,1)}, {(-1,1,1,-1,-1,1,1,-1,1), (-1,1,1,1,-1,-1,1,1,1), (1,1,-1,-1,1,1,-1,1,-1), (1,1,-1,1,-1,1,-1,-1,1,-1), (-1,-1,-1,1,1,1,1,1,-1,-1,1), (-1,1,1,1,1,1,-1,-1,-1,-1), (-1,-1,-1,-1,-1,-1,-1,-1), (1,1,1,1,1,1,1,1)}, {(-1,1,1,-1,-1,1,1,-1,1), (-1,1,1,-1,-1,-1,1,1,1), (1,1,-1,-1,1,1,-1,1,-1), (1,1,-1,1,-1,-1,1,1,-1), (-1,-1,1,1,1,1,1,-1,-1), (1,-1,-1,-1,-1,-1,-1), (1,-1,-1,1,1,1,-1,-1,1,-1), (1,-1,-1,1,1,1,-1,-1,1)}, {(-1,1,1,-1,-1,1,1,-1,1), (-1,1,1,1,-1,-1,1,1,1), (1,1,-1,-1,1,1,-1,1,-1), (1,1,-1,1,-1,1,-1,1,-1), (-1,-1,-1,1,1,1,1,1,-1), (1,-1,-1,-1,-1,-1,-1,-1,-1), (1,1,1,1,1,1,1,1)}, {(-1,1,1,-1,1,1,-1,-1,1), (-1,1,1,1,-1,-1,1,1,1), (1,1,-1,-1,1,1,-1,1,-1), (1,1,-1,1,-1,1,-1,-1,1), (-1,1,1,1,1,1,-1,-1,-1), (1,1,1,1,-1,-1,-1,-1,1,1), (-1,-1,-1,-1,-1,-1,-1,-1), (1,-1,-1,1,1,1,-1,-1,1)}, {(-1,1,1,-1,-1,1,1,-1,1), (-1,1,1,-1,-1,-1,1,1,1), (1,1,-1,-1,1,1,-1,1,-1), (1,1,-1,1,-1,-1,1,1,-1), (-1,1,1,1,1,1,-1,-1,-1,1), (1,1,1,-1,-1,-1,-1,1,1), (1,-1,-1,1,1,1,-1,-1,1,-1), (1,1,1,1,1,1,1,1)}, {(-1,1,-1,-1,1,1,1,-1,1), (-1,1,1,-1,-1,-1,1,1,1), (1,1,-1,-1,1,1,-1,1,-1), (1,1,-1,1,-1,-1,1,-1,-1), (-1,1,1,1,1,1,-1,-1,-1), (1,1,1,-1,-1,-1,-1,1,1), (-1,-1,-1,-1,-1,-1,-1,-1), (1,-1,-1,1,1,1,-1,-1,1)}, {(-1,1,-1,-1,1,1,1,-1,1), (-1,1,1,-1,-1,-1,1,1,1), (1,1,-1,-1,1,1,-1,1,-1), (1,1,-1,1,-1,-1,1,-1,-1), (-1,1,1,1,1,1,-1,-1,-1,1), (1,1,1,-1,-1,-1,-1,1), (-1,-1,1,1,1,-1,-1,1,1,-1), (1,1,1,1,1,1,1,1)}, {(-1,1,-1,-1,1,1,1,-1,1), (-1,1,1,-1,-1,-1,1,1,1), (1,1,-1,-1,1,1,-1,1,-1), (1,1,-1,1,-1,-1,1,-1,-1), (-1,1,1,1,1,1,-1,-1,-1), (1,1,1,-1,-1,-1,-1,1), (1,-1,-1,1,1,1,-1,-1,1,-1,-1), (1,1,1,1,1,1,1,1)}, {(-1,1,1,-1,1,1,-1,-1,1), (-1,1,1,-1,-1,-1,1,1,1), (1,1,-1,-1,1,1,-1,1,-1), (1,1,-1,1,-1,1,-1,-1,1,-1), (-1,-1,-1,1,1,1,1,1,-1,1,-1), (1,-1,-1,-1,-1,1,1,1,1), (-1,-1,-1,-1,-1,-1,-1,-1), (-1,1,1,1,-1,-1,1,1,1,-1)}, {(-1,1,1,-1,1,1,-1,-1,1), (-1,1,1,-1,-1,-1,1,1,1), (1,1,-1,-1,1,1,-1,1,-1), (1,1,-1,1,-1,1,-1,-1,1,-1), (-1,-1,1,1,1,1,1,1,-1,-1), (1,-1,-1,-1,-1,1,1,1,1), (-1,-1,-1,-1,-1,-1,-1,-1), (1,-1,-1,1,1,1,-1,-1,1)}, {(-1,1,1,-1,1,1,-1,-1,1), (-1,1,1,-1,-1,-1,1,1,1), (1,1,-1,-1,1,1,-1,1,-1), (1,1,-1,1,-1,-1,1,-1,-1), (-1,-1,1,1,1,1,1,1,-1,-1), (1,-1,-1,-1,-1,-1,-1,-1,-1), (-1,1,1,1,-1,-1,1,1,1), (1,1,1,1,1,1,1,1)}, {(-1,1,1,-1,-1,1,1,-1,1), (-1,1,1,-1,-1,-1,1,1,1), (1,1,-1,-1,1,1,-1,-1,1), (1,1,-1,1,-1,-1,1,-1,-1), (-1,-1,-1,1,1,1,1,1,-1,-1,-1), (1,1,1,-1,-1,-1,-1,1), (1,-1,-1,1,1,1,-1,-1,1,-1), (1,1,1,1,1,1,1,1)}, {(-1,1,1,-1,-1,1,1,-1,1), (-1,1,1,-1,-1,-1,1,1,1), (1,1,-1,-1,1,1,-1,1,-1), (1,1,-1,1,-1,1,-1,-1,1), (-1,-1,-1,1,1,1,1,1,-1), (-1,-1,-1,-1,-1,-1,-1,-1,-1), (1,-1,-1,1,1,1,-1,-1,1)}, {(-1,1,1,-1,1,1,-1,-1,1), (-1,1,1,-1,-1,-1,1,1,1), (1,1,-1,-1,1,1,-1,1,-1), (1,1,-1,1,-1,1,-1,-1,-1), (-1,1,1,1,1,1,-1,-1,-1), (1,-1,-1,1,1,1,-1,-1,1,1), (-1,-1,-1,-1,-1,-1,-1,-1), (-1,1,1,1,-1,-1,1,1,1)}, {(-1,1,1,-1,-1,1,1,-1,1), (-1,1,1,-1,-1,-1,1,1,1), (1,1,-1,-1,1,1,-1,1,-1), (1,1,-1,1,-1,1,-1,-1,-1), (-1,-1,1,1,1,1,1,-1,-1,-1), (1,1,1,-1,-1,-1,-1,1,-1,-1), (-1,-1,-1,-1,-1,-1,-1,-1), (-1,1,1,1,-1,-1,1,1,1,-1)}, {(-1,1,1,-1,1,1,-1,-1,1), (-1,1,1,-1,-1,-1,1,1,1), (1,1,-1,-1,1,1,-1,1,-1), (1,1,-1,1,-1,1,-1,-1,-1), (-1,-1,1,1,1,1,1,-1,-1,-1), (1,-1,-1,-1,-1,-1,-1,-1), (-1,1,1,1,-1,-1,1,1,1,-1), (1,1,1,1,1,1,1,1)}, {(-1,1,1,-1,-1,1,1,-1,1), (-1,1,1,-1,-1,-1,1,1,1), (1,1,-1,-1,1,1,-1,-1,1,-1), (1,1,-1,1,-1,1,-1,-1,1,-1), (-1,-1,-1,1,1,1,1,1,-1,-1), (1,1,1,-1,-1,-1,-1,1,1), (-1,-1,1,1,1,-1,-1,1,1,-1), (1,1,1,1,1,1,1,1)}, {(-1,1,1,-1,-1,1,1,-1,1,-1,1), (-1,1,1,-1,-1,-1,1,1,1), (1,1,-1,-1,1,1,-1,1,-1), (1,1,-1,1,-1,1,-1,1,-1), (-1,1,1,1,1,1,-1,-1,-1,1), (1,1,1,-1,-1,-1,-1,1,-1), (1,-1,-1,1,1,1,-1,-1,1,-1), (1,1,1,1,1,1,1,1)}, {(-1,1,1,-1,-1,1,1,-1,1), (-1,1,1,-1,-1,-1,1,1,1), (1,1,-1,-1,1,1,-1,1,-1), (1,1,-1,1,-1,1,-1,-1,1), (-1,-1,1,1,1,1,1,-1,-1,1), (1,-1,-1,-1,-1,-1,-1,-1,-1), (-1,1,1,1,-1,-1,1,1,-1,-1), (1,1,1,1,1,1,1,1)}, {(-1,1,1,-1,-1,1,1,-1,1), (-1,1,1,-1,-1,-1,1,1,1), (1,1,-1,-1,1,1,-1,1,-1), (1,1,-1,1,-1,1,-1,-1,1), (-1,1,1,1,1,1,-1,-1,-1), (1,1,1,-1,-1,-1,-1,1), (-1,-1,-1,-1,-1,-1,-1,-1), (-1,1,1,1,-1,-1,1,1,1,-1)}, {(-1,1,1,-1,-1,1,1,-1,1), (-1,1,1,-1,-1,-1,1,1,1), (1,1,-1,-1,1,1,-1,-1,1,-1), (1,1,-1,1,-1,1,-1,-1,-1), (-1,1,1,1,1,1,-1,-1,-1,1), (1,-1,-1,1,1,1,-1,-1,1,-1), (1,1,1,1,1,1,1,1)}, {(-1,1,1,-1,1,1,-1,-1,1), (-1,1,1,-1,-1,-1,1,1,1), (1,1,-1,-1,1,1,-1,1,-1), (1,1,-1,1,-1,1,-1,-1,-1), (-1,-1,1,1,1,1,1,-1,-1), (1,1,1,-1,-1,-1,-1,1,1), (-1,-1,-1,-1,-1,-1,-1,-1), (-1,1,1,1,-1,-1,1,1,1,-1)}, {(-1,1,-1,-1,1,1,1,-1,1), (-1,1,1,-1,-1,-1,1,1,1), (1,1,-1,-1,1,1,-1,1,-1), (1,1,-1,1,-1,-1,1,-1,-1), (-1,1,1,1,1,1,-1,-1,-1), (1,-1,-1,1,1,1,-1,-1,1,-1,-1), (1,1,1,1,1,1,1,1)}, {(-1,1,-1,-1,1,1,1,-1,1), (-1,1,1,-1,-1,-1,1,1,1), (1,1,-1,-1,1,1,-1,1,-1), (1,1,-1,1,-1,-1,1,-1,-1), (-1,1,1,1,1,1,-1,-1,-1), (1,1,1,-1,-1,-1,-1,1), (-1,-1,1,1,1,-1,-1,1,1,-1), (1,1,1,1,1,1,1,1)}, {(-1,1,-1,-1,1,1,1,-1,1), (-1,1,1,-1,-1,-1,1,1,1), (1,1,-1,-1,1,1,-1,1,-1), (1,1,-1,1,-1,-1,1,-1,-1), (1,-1,-1,1,1,1,1,1), (1,1,1,-1,-1,-1,-1,1), (1,-1,1,1,1,1,-1,-1,1,-1), (1,1,1,1,1,1,1,1)}, {(-1,1,-1,-1,1,1,1,-1,1), (-1,1,1,-1,-1,-1,1,1,1), (1,1,-1,-1,1,1,-1,1,-1), (1,1,-1,1,-1,1,-1,-1,-1), (1,-1,-1,1,1,1,1,-1,-1), (1,1,1,-1,-1,-1,-1,1), (1,-1,1,1,1,1,-1,-1,1,-1), (1,1,1,1,1,1,1,1)}, {(-1,1,-1,-1,1,1,1,-1,1), (-1,1,1,-1,-1,-1,1,1,1), (1,1,-1,-1,1,1,-1,1,-1), (1,1,-1,1,-1,1,-1,-1,-1), (-1,1,1,1,1,1,-1,-1,-1), (1,1,1,-1,-1,-1,-1,1), (1,-1,-1,1,1,1,-1,-1,1,-1), (1,1,1,1,1,1,1,1)}, {(-1,1,1,-1,-1,1,1,-1,1), (-1,1,1,-1,-1,-1,1,1,1), (1,1,-1,-1,1,1,-1,1,-1), (1,1,-1,1,-1,1,-1,-1,-1), (1,-1,-1,1,1,1,-1,1,-1), (1,1,1,-1,-1,-1,-1,1), (1,-1,-1,1,1,1,-1,-1,1,-1), (1,1,1,1,1,1,1,1)}, {(-1,1,1,-1,-1,1,1,-1,1), (-1,1,1,-1,-1,-1,1,1,1), (1,1,-1,-1,1,1,-1,1,-1), (1,1,-1,1,-1,1,-1,-1,-1), (1,-1,-1,-1,-1,1,1,1,1), (1,1,1,-1,-1,-1,-1,1), (1,-1,-1,1,1,1,-1,-1,1,-1), (1,1,1,1,1,1,1,1)}, {(-1,1,1,-1,1,1,-1,-1,1,-1,1), (-1,1,1,-1,-1,-1,1,1,1), (1,1,-1,1,-1,1,-1,-1,1,-1), (1,1,-1,1,-1,1,-1,1,-1), (1,-1,-1,-1,-1,1,1,1,1), (1,1,1,-1,-1,-1,-1,1), (-1,-1,-1,-1,-1,-1,-1,-1), (-1,1,1,1,-1,-1,1,1,1,-1)}, {(-1,1,1,-1,-1,1,1,-1,1), (-1,1,1,-1,-1,-1,1,1,1), (1,1,-1,-1,1,1,-1,1,-1), (1,1,-1,1,-1,1,-1,-1,1,-1), (1,-1,-1,-1,-1,1,1,1,1), (1,1,1,-1,-1,-1,-1,1,-1), (-1,-1,-1,-1,-1,-1,-1,-1,-1), (1,-1,

1,1,1,-1,-1,1)}, {(-1,1,-1,-1,1,1,-1,1), (-1,1,-1,1,-1,-1,1,1), (1,1,-1,-1,1,-1,1,-1), (1,1,-1,1,-1,1,-1,-1), (1,-1,-1,-1,-1,1,1,1), (1,1,1,-1,-1,-1,-1,1), (-1,1,1,-1,-1,1,1,-1),(1,1,1,1,1,1,1,1)}, {(-1,1,-1,-1,1,1,-1,1), (-1,1,-1,1,-1,-1,1,1), (1,1,-1,-1,1,-1,1,-1), (1,1,-1,1,-1,1,-1,-1), (1,-1,-1,-1,-1,1,1,1), (1,1,1,-1,-1,-1,-1,1), (1,-1,-1,1,1,1,-1,-1), (1,1,1,1,1,1,1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1,-1), (-1,-1,1,1,1,1,-1,-1), (-1,1,-1,1,1,-1,1,-1), (-1,-1,-1,-1,-1,-1,-1,-1), (-1,1,1,-1,-1,1,1,-1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (-1,1,-1,1,1,-1,1,-1), (-1,-1,-1,-1,-1,-1,-1,-1), (1,-1,-1,1,1,-1,-1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (-1,1,-1,1,1,-1,1,-1), (-1,1,1,1,1,1,1,1)}, {(-1,1,-1,-1,1,1,-1,1), (-1,1,1,1,-1,-1,1,1), (1,1,-1,1,-1,1,-1,-1), (1,1,1,-1,1,-1,-1,-1), (-1,-1,1,1,1,1,-1,-1), (-1,1,-1,1,1,-1,1,-1), (1,-1,-1,1,1,-1,-1,1), (1,1,1,1,1,1,1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,-1,1,1,-1,1,1,-1), (-1,-1,-1,-1,-1,-1,-1,-1), (-1,1,1,1,-1,1,1,1,-1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,-1,1,1,-1,1,1,-1), (1,-1,-1,1,1,-1,-1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,-1,1,1,-1,1,1,-1), (1,1,1,1,1,1,1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,-1,-1,1,-1,1,1,-1), (1,-1,-1,1,1,-1,-1,1), (1,1,1,1,1,1,1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,-1,-1,-1,-1,1,1,1), (1,-1,-1,1,1,-1,-1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,-1,-1,-1,-1,1,1,1), (1,1,1,1,1,1,1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,-1,-1,-1,-1,1,1,1), (1,1,1,1,1,1,1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,1,-1,-1,-1,-1,1,1,1), (1,-1,-1,1,1,-1,-1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,1,-1,-1,-1,-1,1,1,1), (1,1,1,1,1,1,1,1)}, {(-1,1,-1,-1,1,1,-1,1), (-1,1,1,1,-1,-1,-1,1), (1,1,-1,1,-1,1,-1,-1), (1,1,1,-1,1,-1,-1,-1), (-1,-1,1,1,1,1,-1,-1), (1,-1,-1,-1,-1,1,1,1), (1,-1,-1,1,1,-1,-1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (-1,1,1,-1,-1,1,1,-1), (-1,1,1,1,-1,-1,1,1,-1), (1,1,1,1,1,1,1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (-1,1,-1,1,1,1,-1,1,-1), (1,-1,-1,1,1,1,-1,-1,1), (1,1,1,1,1,1,1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,-1,-1,1,1,1), (-1,1,1,1,-1,-1,1,1,-1), (1,1,1,1,1,1,1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,-1,-1,1,1,1), (-1,1,1,1,-1,-1,1,1,-1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,1,-1,1,1,-1), (-1,-1,1,1,1,1,-1,-1), (-1,-1,-1,-1,-1,-1,-1,-1), (-1,1,1,1,-1,1,1,1,-1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,1,-1,1,1,-1), (-1,-1,-1,-1,-1,-1,-1,-1), (-1,1,1,1,-1,1,1,1,-1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,-1,-1,1,1,1), (-1,1,1,1,-1,-1,1,1,-1), (1,1,1,1,1,1,1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,-1,-1,1,1,1), (-1,-1,-1,-1,-1,-1,-1,-1), (1,-1,-1,1,1,-1,-1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (-1,1,1,-1,-1,1,1,-1), (1,1,1,1,1,1,1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (1,-1,-1,-1,1,1,-1,-1,1), (-1,1,-1,1,1,-1,1,-1), (-1,-1,-1,-1,-1,-1,-1,-1), (-1,1,1,1,-1,1,1,1,-1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,1,1,-1,1,1,-1), (-1,-1,-1,-1,-1,-1,-1,-1), (-1,1,1,1,-1,1,1,1,-1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,1,1,-1,1,1,-1), (1,1,1,1,1,1,1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,1,-1,1,1,-1), (-1,-1,-1,-1,-1,-1,-1,-1), (-1,1,1,1,-1,1,1,1,-1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,1,-1,1,1,-1), (1,1,1,1,1,1,1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (1,-1,-1,-1,1,1,-1,-1,1), (1,1,-1,-1,-1,-1,1,1), (-1,1,1,1,-1,-1,1,1,-1), (1,1,1,1,1,1,1,1)}, {(-1,1,-1,-1,1,1,-1,1), (1,-1,-1,-1,1,1,1,-1), (1,1,-1,1,-1,1,-1,-1), (1,1,1,-1,1,-1,-1,-1), (-1,-1,1,1,1,1,-1,-1), (1,-1,-1,-1,-1,1,1,1), (-1,1,1,1,-1,-1,1,1,-1), (1,1,1,1,1,1,1,1)}, {(-1,1,-1,-1,1,1,-1,1), (1,-1,1,1,-1,1,1,-1,1), (1,-1,1,1,-1,1,1,-1,-1), (1,1,-1,-1,1,-1,1,-1), (1,1,-1,1,-1,1,-1,-1), (-1,-1,-1,1,1,1,1,1,-1), (-

1,1,1,1,1,-1,-1,-1), (-1,-1,-1,-1,-1,-1,-1,-1), (1,-1,-1,1,1,-1,-1,1)}, {(-1,1,-1,-1,1,1,-1,1), (1,-1,1,-1,1,1,-1,-1), (1,1,-1,-1,1,-1,1,-1), (1,1,-1,1,-1,1,-1,-1), (-1,-1,-1,1,1,1,1,-1), (-1,1,1,1,1,1,-1,-1,-1), (-1,1,1,1,-1,-1,1,1,-1), (1,1,1,1,1,1,1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,-1,-1,1,1,1,1,-1), (-1,1,1,1,1,1,-1,-1,-1), (1,-1,-1,1,1,1,-1,-1,1), (1,1,1,1,1,1,1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,-1,-1,1,1,1,1,1,-1), (1,-1,-1,-1,-1,1,1,1,1), (-1,-1,-1,-1,-1,-1,-1,-1), (-1,1,1,1,-1,-1,1,1,-1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,-1,-1,1,1,1,1,-1), (1,-1,-1,-1,-1,1,1,1,1), (-1,-1,-1,-1,-1,-1,-1,-1), (1,-1,-1,1,1,1,-1,-1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,-1,-1,1,1,1,1,1,-1), (1,-1,-1,-1,-1,1,1,1,1), (-1,1,1,1,-1,-1,1,1,-1), (1,1,1,1,1,1,1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,-1,-1,1,1,1,1,-1), (1,-1,-1,-1,-1,1,1,1,1), (1,-1,-1,1,1,1,-1,-1,1), (1,1,1,1,1,1,1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,1,1,1,1,-1,-1,-1), (1,1,1,-1,-1,-1,-1,1,1), (-1,-1,-1,-1,-1,-1,-1,-1), (-1,1,1,1,-1,-1,1,1,-1)}, {(-1,1,1,-1,-1,1,1,-1,1), (1,-1,1,-1,1,1,1,-1,-1), (1,1,-1,-1,1,-1,1,-1), (1,1,-1,1,1,-1,1,-1,-1), (-1,1,1,1,1,-1,-1,-1), (1,1,1,-1,-1,-1,-1,1,1), (-1,-1,-1,-1,-1,-1,-1,-1), (1,-1,-1,1,1,1,-1,-1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,1,1,1,1,-1,-1,-1,-1), (1,1,1,-1,-1,-1,-1,1,1), (-1,1,1,1,-1,-1,1,1,-1), (1,1,1,1,1,1,1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,1,1,1,1,-1,-1,-1), (1,1,1,-1,-1,-1,-1,1,1), (1,-1,-1,1,1,1,-1,-1,1), (1,1,1,1,1,1,1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,-1,-1,-1,-1,1,1,1,1), (1,1,1,-1,-1,-1,-1,-1,1), (-1,-1,-1,-1,-1,-1,-1,-1,-1), (-1,1,1,1,-1,-1,1,1,-1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,-1,-1,-1,-1,1,1,1,1), (1,1,1,-1,-1,-1,-1,-1,1), (1,-1,-1,1,1,1,-1,-1,1)}, {(-1,1,1,-1,-1,1,1,-1,1), (1,-1,1,-1,1,1,1,-1,-1), (1,1,-1,-1,1,1,-1,1,-1), (1,1,-1,1,1,-1,1,-1,-1), (-1,-1,-1,-1,-1,1,1,1,1), (-1,1,1,1,-1,-1,1,1,-1), (1,1,1,1,1,1,1,1)}, {(-1,1,1,-1,1,-1,-1,1,1), (-1,1,1,-1,1,1,1,-1,-1), (1,1,-1,-1,-1,1,1,-1,-1), (1,1,-1,1,1,-1,1,-1,-1), (-1,-1,-1,-1,1,1,1,1,1), (-1,1,1,1,-1,1,1,-1,-1,-1), (1,-1,-1,1,1,1,-1,-1,1), (1,1,1,1,1,1,1,1)}, {(-1,1,1,-1,1,-1,-1,1,1), (-1,1,1,-1,1,1,1,-1,-1), (1,1,-1,-1,-1,1,1,-1,-1), (1,1,-1,1,1,-1,1,-1,-1), (-1,-1,-1,-1,1,1,1,1,1), (-1,1,1,1,-1,1,1,-1,-1,-1), (-1,1,1,1,-1,1,1,-1,-1), (1,1,1,1,1,1,1,1)}, {(-1,1,1,-1,1,-1,-1,1,1), (-1,1,1,-1,1,1,1,-1,-1), (1,1,-1,-1,1,1,-1,1,-1), (1,1,-1,1,-1,1,1,-1,-1), (-1,-1,-1,1,1,1,1,1), (-1,1,1,1,-1,1,1,-1,-1), (-1,-1,-1,-1,-1,-1,-1,-1), (1,-1,-1,1,1,1,-1,-1,1)}, {(-1,1,1,-1,1,-1,-1,1,1), (-1,1,1,1,1,1,-1,-1), (1,1,-1,-1,-1,1,1,-1), (1,1,-1,1,1,-1,1,-1,-1), (-1,-1,-1,-1,1,1,1,1,1), (1,-1,1,1,1,-1,-1,1,1), (-1,-1,-1,-1,-1,-1,-1,-1), (1,-1,-1,1,1,1,-1,-1,1)}, {(-1,1,1,-1,1,-1,-1,1,1), (-1,1,1,-1,1,1,1,-1,-1), (1,1,-1,-1,-1,1,1,-1), (1,1,-1,1,1,-1,1,-1,-1), (-1,-1,-1,-1,1,1,1,1,1), (1,-1,1,1,1,-1,-1,1,1), (-1,1,1,1,-1,1,1,-1,-1), (1,1,1,1,1,1,1,1)}, {(-1,1,1,-1,1,-1,-1,1,1), (-1,1,1,-1,1,1,1,-1,-1), (1,1,-1,-1,-1,1,1,-1,-1), (1,1,-1,1,1,-1,1,-1,-1), (-1,-1,-1,1,1,1,1,1), (1,1,1,-1,-1,1,1,-1,-1,-1), (-1,-1,-1,-1,-1,-1,-1,-1), (1,-1,-1,1,1,1,-1,-1,1)}, {(-1,1,1,-1,1,-1,-1,1,1), (-1,1,1,-1,1,1,1,-1,-1), (1,1,-1,-1,-1,1,1,-1,-1), (1,1,-1,1,1,-1,1,-1,-1), (-1,-1,-1,1,1,1,1,1), (1,1,1,-1,-1,-1,-1,-1,1), (-1,1,1,1,-1,1,1,-1,-1), (1,1,1,1,1,1,1,1)}, {(-1,1,1,-1,1,-1,-1,1,1), (-1,1,1,-1,1,1,1,-1,-1), (1,1,-1,-1,-1,1,1,-1), (1,1,-1,1,1,-1,1,-1,-1), (-1,-1,-1,1,1,1,1,1), (1,-1,-1,1,1,1,-1,-1,1), (1,1,1,1,1,1,1,1)}, {(-1,1,1,-1,1,-1,-1,1,1), (-1,1,1,-1,1,1,1,-1,-1), (1,1,-1,-1,-1,1,1,-1), (1,1,-1,1,1,-1,1,-1,-1), (-1,1,1,1,1,-1,-1,-1), (1,1,1,1,-1,-1,-1,-1,-1), (-1,-1,-1,-1,-1,-1,-1,-1), (-1,1,1,1,-1,1,1,-1,-1)}, {(-1,1,1,-1,1,-1,-1,1,1), (-1,1,1,-1,1,1,1,-1,-1), (1,1,-1,-1,-1,1,1,-1), (1,1,-1,1,1,-1,1,-1,-1), (-1,1,1,1,1,-1,-1,-1), (1,1,1,-1,-1,-1,-1,-1,1), (-1,1,1,1,-1,1,1,-1,-1), (1,1,1,1,1,1,1,1)}, {(-1,1,1,-1,1,-1,-1,1,1), (-1,1,1,-1,1,1,1,-1,-1), (1,1,-1,-1,-1,1,1,-1), (1,1,-1,1,1,-1,1,-1,-1), (-1,-1,-1,1,1,1,1,1), (1,1,1,1,-1,-1,-1,-1), (1,-1,-1,1,1,1,-1,-1,1)}, {(-1,1,1,-1,1,-1,-1,1,1), (-1,1,1,-1,1,1,1,-1,-1), (1,1,-1,-1,-1,1,1,-1), (1,1,-1,1,1,-1,1,-1,-1), (-1,1,1,1,1,-1,-1,-1), (1,1,1,1,-1,-1,-1,-1,-1), (-1,-1,-1,-1,-1,-1,-1,-1), (-1,1,1,1,-1,1,1,-1,-1)}, {(-1,1,1,-1,1,-1,-1,1,1), (-1,1,1,-1,-1,-1,1,1,1), (1,1,-1,-1,-1,1,1,-1,-1), (1,1,-1,1,1,-1,1,-1,-1), (-1,1,1,1,1,-1,-1,-1), (1,1,1,1,-1,-1,-1,-1,-1), (-1,1,1,1,-1,1,1,-1,-1), (1,1,1,1,1,1,1,1)}, {(-1,1,1,-1,1,-1,-1,1,1), (-1,1,1,-1,-1,-1,1,1,1), (1,1,-1,-1,-1,1,1,-1), (1,1,-1,1,1,-1,1,-1,-1), (-1,-1,-1,-1,1,1,1,1,1), (-1,1,1,1,-1,1,1,-1,-1), (-1,-1,-1,-1,-1,-1,-1,-1), (1,-1,-1,1,1,1,-1,-1,1)}, {(-1,1,1,-1,1,-1,-1,1,1), (-1,1,1,-1,-1,-1,1,1,1), (1,1,-1,-1,-1,1,1,-1), (1,1,-1,1,1,-1,1,-1,-1), (-1,-1,-1,-1,1,1,1,1,1), (-1,1,1,1,-1,1,1,-1,-1), (-1,-1,-1,-1,-1,-1,-1,-1), (1,-1,-1,1,1,1,-1,-1,1)}, {(-1,1,1,-1,1,-1,-1,1,1), (-1,1,1,-1,-1,-1,1,1,1), (1,1,-1,-1,-1,1,1,-1,-1), (1,1,-1,1,1,-1,1,-1,-1), (-1,-1,-1,-1,1,1,1,1,1), (-1,1,1,1,-1,1,1,-1,-1), (-1,-1,-1,-1,-1,-1,-1,-1,-1), (-1,1,1,1,-1,1,1,-1,-1)}, {(-1,1,1,-1,1,-1,-1,1,1), (1,-1,1,-1,-1,-1,1,1,1), (1,1,-1,-1,-1,1,1,-1,-1), (1,1,-1,1,1,-1,1,-1,-1), (-1,-1,-1,-1,1,1,1,1,1), (-1,1,1,1,-1,1,1,-1,-1), (1,-1,-1,1,1,1,-1,-1,1)}, {(-1,1,1,-1,1,-1,-1,1,1), (1,-1,1,-1,-1,-1,1,1,1), (1,1,-1,-1,-1,1,1,-1), (1,1,-1,1,1,-1,1,-1,-1), (-1,-1,-1,-1,1,1,1,1,1), (1,-1,1,1,1,-1,-1,1,1), (-1,-1,-1,-1,-1,-1,-1,-1), (-1,1,1,1,-1,1,1,-1,-1)}, {(-1,1,1,-1,1,-1,-1,1,1), (1,-1,1,-1,-1,-1,1,1,1),

(1,1,-1,-1,-1,1,-1,1), (1,1,-1,-1,1,-1,1,-1), (-1,-1,-1,-1,1,1,1,1), (1,-1,-1,1,1,-1,1,1,-1), (-1,-1,-1,-1,-1,-1,-1,-1), (1,-1,-1,1,1,-1,-1,1)}, {(-1,1,-1,1,1,-1,-1,1,1), (1,-1,1,-1,-1,-1,1,1), (1,1,-1,-1,-1,1,1,-1,1), (1,1,-1,-1,1,1,-1,1,-1), (-1,-1,-1,-1,1,1,1,1), (1,-1,-1,1,1,-1,1,1,-1), (-1,1,1,1,-1,-1,1,1,1,-1), (1,1,1,1,1,1,1,1)}, {(-1,1,-1,1,1,-1,-1,1,1,1), (1,-1,1,-1,-1,-1,1,1,1), (1,1,-1,-1,-1,1,1,-1,1), (1,1,-1,-1,1,1,-1,1,-1), (-1,-1,-1,-1,1,1,1,1,1), (1,-1,-1,1,1,-1,1,1,1,-1), (1,-1,-1,1,1,1,1,-1,1,1), (1,1,1,1,1,1,1,1)}, {(-1,1,-1,1,1,-1,-1,1,1,1), (1,-1,1,1,-1,-1,1,1,1), (1,1,-1,-1,-1,1,1,-1,1), (1,1,-1,-1,1,1,-1,1,-1), (-1,1,1,1,-1,1,1,-1,-1,1), (1,1,1,1,1,-1,-1,-1,-1), (-1,-1,-1,-1,-1,-1,-1,-1,-1), (-1,1,1,1,1,-1,-1,1,1,1,-1)}, {(-1,1,1,-1,1,1,-1,1,1,1), (1,-1,1,1,-1,-1,-1,1,1,1), (1,1,-1,-1,-1,1,1,1,-1,1), (1,1,-1,-1,1,1,-1,1,-1), (-1,1,1,1,-1,1,1,-1,-1,1), (1,1,1,1,1,-1,-1,-1,-1), (-1,-1,-1,-1,-1,-1,-1,-1,-1), (1,-1,-1,1,1,1,1,-1,-1,1)}, {(-1,1,1,-1,1,1,-1,-1,1,1), (1,-1,1,1,-1,-1,-1,1,1,1), (1,1,-1,-1,1,1,-1,1,-1), (1,1,-1,-1,1,1,-1,1,-1), (-1,1,1,1,1,-1,1,1,-1,-1,1), (1,1,1,1,1,-1,-1,-1,-1), (-1,1,1,1,1,-1,-1,1,1,1,-1), (1,1,1,1,1,1,1,1)}, {(-1,1,1,-1,1,1,-1,-1,1,1), (1,-1,1,1,-1,-1,-1,1,1,1), (1,1,-1,-1,-1,1,1,-1,1), (1,1,-1,-1,1,1,-1,1,-1), (-1,1,1,1,-1,1,1,-1,-1,1), (1,1,1,1,1,-1,-1,-1,-1), (1,-1,-1,1,1,1,1,-1,-1,1), (1,1,1,1,1,1,1,1)}, {(-1,1,1,-1,1,1,-1,-1,1,1), (1,-1,1,1,-1,-1,-1,1,1,1), (1,1,-1,-1,-1,1,1,-1,1), (1,1,-1,-1,1,1,-1,1,-1), (1,-1,-1,1,1,-1,1,1,1,-1), (1,1,1,1,1,-1,-1,-1,-1), (-1,-1,-1,-1,-1,-1,-1,-1,-1), (-1,1,1,1,1,-1,-1,1,1,1,-1)}, {(-1,1,1,-1,1,1,-1,-1,1,1), (1,-1,1,1,-1,-1,-1,1,1,1), (1,1,-1,-1,-1,1,1,-1,1), (1,1,-1,-1,1,1,-1,1,-1), (1,-1,-1,1,1,-1,1,1,1,-1), (1,1,1,1,1,-1,-1,-1,-1), (-1,-1,-1,-1,-1,-1,-1,-1,-1,-1), (1,-1,-1,1,1,1,1,-1,-1,1,-1)}, {(-1,1,1,-1,1,1,-1,-1,1,1), (1,-1,1,1,-1,-1,-1,1,1,1), (1,1,-1,-1,-1,1,1,-1,1,-1), (1,1,-1,-1,1,1,-1,1,-1), (1,-1,-1,1,1,-1,1,1,1,-1), (1,1,1,1,1,-1,-1,-1,-1), (1,-1,-1,1,1,1,1,-1,-1,1), (1,1,1,1,1,1,1,1)}, {(-1,1,1,-1,1,1,-1,-1,1,1), (1,-1,1,1,-1,-1,-1,1,1,-1), (1,1,-1,-1,1,1,-1,1,-1), (1,1,-1,-1,1,1,-1,1,-1), (-1,-1,-1,1,1,1,1,1,-1), (-1,1,1,1,1,1,1,-1,-1,-1), (-1,-1,-1,-1,-1,-1,-1,-1,-1), (-1,1,1,1,-1,-1,1,1,1,-1)}, {(-1,1,1,-1,1,1,-1,-1,1,1), (1,-1,1,1,1,-1,-1,1,1,-1), (1,1,-1,-1,1,1,-1,1,-1,1), (1,1,-1,-1,1,1,-1,1,-1), (-1,-1,-1,1,1,1,1,1,1,-1), (-1,1,1,1,1,1,1,-1,-1,-1), (-1,-1,-1,-1,-1,-1,-1,-1,-1), (1,-1,-1,1,1,1,1,-1,-1,1)}, {(-1,1,1,-1,1,1,-1,-1,1,1), (1,-1,1,1,1,-1,-1,1,1,-1), (1,1,-1,-1,1,1,-1,1,-1), (1,1,-1,1,1,-1,1,1,-1,-1), (-1,-1,-1,1,1,1,1,1,1,-1), (-1,1,1,1,1,1,1,-1,-1,-1), (-1,1,1,1,1,-1,-1,1,1,1,-1), (1,1,1,1,1,1,1,1)}, {(-1,1,1,-1,1,1,-1,-1,1,1), (1,-1,1,1,1,-1,-1,1,1,-1), (1,1,-1,-1,1,1,-1,1,-1), (1,1,-1,1,1,-1,1,1,-1,-1), (-1,-1,-1,1,1,1,1,1,1,-1), (-1,1,1,1,1,1,1,-1,-1,-1), (1,-1,-1,1,1,1,1,-1,-1,1), (1,1,1,1,1,1,1,1)}, {(-1,1,1,-1,1,1,-1,-1,1,1), (1,1,1,1,-1,-1,1,1,-1), (1,1,-1,-1,1,1,-1,1,-1), (1,1,-1,-1,1,1,-1,1,-1), (-1,-1,-1,1,1,1,1,1,1,-1), (1,-1,-1,-1,-1,1,1,1,1,1), (-1,-1,-1,-1,-1,-1,-1,-1,-1), (-1,1,1,1,1,-1,-1,1,1,1,-1)}, {(-1,1,1,-1,1,1,-1,-1,1,1), (1,-1,1,1,1,-1,-1,1,1,-1), (1,1,-1,-1,1,1,-1,1,-1), (1,1,-1,1,1,-1,1,1,-1,-1), (-1,-1,-1,1,1,1,1,1,1,-1), (1,-1,-1,-1,-1,1,1,1,1,1), (-1,-1,-1,-1,-1,-1,-1,-1,-1), (1,-1,-1,1,1,1,1,-1,-1,1)}, {(-1,1,1,-1,1,1,-1,-1,1,1), (1,-1,1,1,1,-1,-1,1,1,-1), (1,1,-1,-1,1,1,-1,1,-1), (1,1,-1,1,1,-1,1,1,-1,-1), (1,-1,-1,1,1,1,1,1,-1), (1,1,1,1,1,-1,-1,-1,-1,1), (-1,-1,-1,-1,-1,-1,-1,-1,-1), (1,-1,-1,1,1,1,1,-1,-1,1)}, {(-1,1,1,-1,1,1,-1,-1,1,1), (1,1,1,1,-1,-1,1,1,-1), (1,1,-1,-1,1,1,-1,1,-1), (1,1,-1,1,1,-1,1,1,-1,-1), (1,-1,-1,-1,1,1,1,1,-1), (-1,1,1,1,1,-1,-1,-1,-1,1), (-1,-1,-1,-1,-1,-1,-1,-1,-1), (1,1,1,1,1,1,1,1)}, {(-1,1,1,-1,1,1,-1,-1,1,1), (1,-1,1,1,1,-1,-1,1,1,-1), (1,1,-1,-1,1,1,-1,1,-1), (1,1,-1,-1,1,1,-1,1,-1), (-1,-1,-1,-1,1,1,1,1,-1), (1,1,1,1,1,-1,-1,-1,-1,1), (1,-1,-1,1,1,1,1,-1,-1,1), (-1,-1,1,1,1,1,1,1,1)}, {(-1,1,1,-1,1,1,1,1,-1), (-1,1,1,-1,1,1,1,-1,1,1), (-1,1,1,1,-1,-1,1,1,1,-1), (-1,1,1,1,-1,-1,1,1,-1,-1), (-1,-1,-1,-1,1,1,1,1,1,1), (-1,-1,1,1,1,1,1,-1,-1,1), (-1,-1,-1,-1,-1,-1,-1,-1,-1), (-1,-1,1,1,1,-1,-1,1,1,1)}, {(-1,1,1,-1,1,1,1,1,-1), (-1,1,1,-1,1,1,1,-1,-1,1), (-1,1,1,1,-1,-1,1,1,-1,-1,1), (-1,1,1,1,-1,1,1,-1,-1,1), (-1,-1,-1,-1,1,1,1,1,1,1), (-1,-1,1,1,1,1,1,-1,-1,-1), (-1,-1,-1,-1,-1,-1,-1,-1,-1), (1,1,-1,-1,1,1,1,-1,-1)}, {(-1,1,1,-1,1,1,-1,1,1,-1), (-1,1,1,-1,1,1,1,-1,-1,1), (-1,1,1,1,-1,-1,1,1,-1,-1), (-1,-1,-1,1,1,1,1,-1), (-1,-1,-1,-1,1,1,1,1,1,1), (-1,-1,1,1,1,1,1,-1,-1,-1), (-1,-1,-1,1,1,1,1,-1,1,1,1), (1,1,1,1,1,1,1,1)}, {(-1,1,1,-1,1,1,-1,1,1,-1), (-1,1,1,-1,1,1,1,-1,-1,1), (-1,1,1,1,-1,-1,1,1,-1,-1), (-1,1,1,1,-1,1,1,-1,-1,-1), (-1,-1,-1,-1,1,1,1,1,1,1), (1,1,-1,-1,-1,-1,1,1,1,1), (-1,-1,-1,-1,-1,-1,-1,-1,-1), (1,1,-1,-1,1,1,1,-1,-1)}, {(-1,1,1,-1,1,1,-1,1,1,-1), (-1,1,1,-1,1,1,1,-1,-1,1), (-1,1,1,1,-1,-1,1,1,-1,-1), (-1,1,1,1,-1,1,1,-1,-1,-1), (-1,-1,-1,-1,1,1,1,1,1,1), (1,1,-1,-1,-1,-1,-1,1,1,1), (1,1,-1,-1,1,1,1,-1,-1), (1,1,1,1,1,1,1,1)}, {(-1,1,-1,1,1,-1,1,1,-1), (-1,1,1,-1,1,1,1,-1,-1,1), (-1,1,1,1,-1,-1,1,1,-1,-1), (-1,1,1,1,-1,1,1,-1,-1,1,-1), (-1,-1,1,1,1,1,1,-1,-1,1), (1,1,1,1,1,-1,-1,-1,-1,1,1), (1,1,1,1,1,-1,

1,-1,-1,-1), (-1,-1,-1,-1,-1,-1,-1,-1), (-1,-1,1,1,-1,-1,1,1)}, {(-1,1,-1,1,-1,1,1,-1), (-1,1,-1,1,1,-1,-1,1), (-1,1,1,-1,-1,1,1,-1,1), (-1,1,1,-1,1,-1,1,-1), (-1,-1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (-1,1,-1,1,1,-1,-1,1), (-1,1,1,-1,-1,1,1,-1), (-1,1,1,-1,1,-1,1,-1), (-1,-1,1,1,1,1,-1,-1), (1,1,1,1,-1,-1,-1,-1), (-1,-1,1,1,-1,-1,1,1), (1,1,1,1,1,1,1,1)}, {(-1,1,-1,1,-1,1,1,-1), (-1,1,-1,1,1,-1,-1,1), (-1,1,1,-1,-1,1,1,-1), (-1,1,1,-1,1,-1,1,-1), (-1,-1,1,1,1,1,-1,-1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (-1,1,1,-1,1,-1,1,-1), (1,1,-1,-1,-1,-1,1,1), (1,1,1,1,-1,-1,-1,-1), (-1,-1,-1,-1,-1,-1,-1,-1), (-1,-1,1,1,-1,-1,1,1)}, {(-1,1,-1,1,-1,1,1,-1), (-1,1,-1,1,1,-1,-1,1), (-1,1,1,-1,-1,1,1,-1), (-1,1,1,-1,1,-1,1,-1), (1,1,-1,-1,-1,-1,1,1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (-1,1,-1,1,1,-1,-1,1), (-1,1,1,-1,-1,1,1,-1), (1,1,-1,-1,-1,-1,1,1), (1,1,1,1,-1,-1,-1,-1), (-1,-1,1,1,-1,-1,1,1), (1,1,1,1,1,1,1,1)}, {(-1,1,-1,1,-1,1,1,-1), (-1,1,-1,1,1,-1,-1,1), (-1,1,1,-1,-1,1,1,-1), (-1,1,1,-1,1,-1,1,-1), (1,1,-1,-1,-1,-1,1,1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,1,-1), (-1,-1,-1,-1,1,1,1,1), (-1,-1,1,1,1,1,-1,-1), (-1,-1,-1,-1,-1,-1,-1,-1), (-1,-1,1,1,1,-1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,-1,-1,1,1,1,1), (-1,-1,1,1,1,1,-1,-1), (-1,-1,-1,-1,-1,-1,-1,-1), (1,1,-1,-1,1,1,-1,-1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,-1,-1,1,1,1,1), (-1,-1,1,1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,-1,-1,1,1,1,1), (1,1,-1,-1,-1,-1,1,1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,-1,-1,1,1,1,1), (1,1,-1,-1,-1,-1,1,1), (-1,-1,-1,-1,-1,-1,-1,-1), (1,1,-1,-1,1,1,-1,-1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,-1,-1,1,1,1,1), (1,1,-1,-1,-1,-1,1,1), (-1,-1,1,1,-1,-1,1,1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (1,1,-1,-1,-1,-1,1,1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,1,1,1,1,-1,-1), (1,1,1,1,-1,-1,-1,-1), (-1,-1,-1,-1,-1,-1,-1,-1), (-1,-1,1,1,1,-1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,1,1,1,1,-1,-1), (1,1,1,1,-1,-1,-1,-1), (-1,-1,-1,-1,-1,-1,-1,-1), (-1,-1,1,1,-1,-1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,1,1,1,1,-1,-1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,1,1,1,1,-1,-1), (1,1,1,1,-1,-1,-1,-1), (-1,-1,-1,-1,-1,-1,-1,-1), (-1,-1,1,1,-1,-1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,1,1,1,1,-1,-1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,1,1,1,1,-1,-1), (1,1,-1,-1,-1,-1,1,1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (1,1,-1,-1,-1,-1,1,1), (1,1,1,1,-1,-1,-1,-1), (-1,-1,-1,-1,-1,-1,-1,-1), (-1,-1,1,1,-1,-1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,-1,-1,1,1,1,1), (-1,-1,1,1,1,1,-1,-1), (-1,-1,-1,-1,-1,-1,-1,-1), (-1,-1,1,1,1,-1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (1,1,-1,-1,-1,-1,1,1), (-1,-1,1,1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (1,1,-1,-1,-1,-1,1,1), (1,1,1,1,-1,-1,-1,-1), (-1,-1,1,1,-1,-1,1,1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (1,1,-1,-1,-1,-1,1,1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,-1,1,-1,1), (-1,-1,-1,-1,1,1,1,1), (-1,-1,1,1,1,1,-1,-1), (-1,-1,-1,-1,-1,-1,-1,-1), (-1,-1,1,1,-1,-1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (-1,-1,1,1,1,1,-1,-1), (-1,-1,-1,-1,-1,-1,-1,-1), (-1,-1,1,1,1,-1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (1,1,-1,-1,-1,-1,1,1), (-1,-1,1,1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (1,1,1,1,-1,-1,-1,-1), (-1,-1,-1,-1,-1,-1,-1,-1), (-1,-1,1,1,-1,-1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (1,1,1,1,-1,-1,-1,-1), (-1,-1,-1,-1,-1,-1,-1,-1), (-1,-1,1,1,1,-1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (-1,-1,1,1,1,1,-1,-1), (1,1,-1,-1,1,1,-1,-1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (1,1,-1,-1,-1,-1,1,1), (-1,-1,1,1,-1,-1,1,1), (1,1,1,1,1,1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (1,1,-1,-1,-1,-1,1,1), (-1,-1,-1,-1,-1,-1,-1,-1), (1,1,-1,-1,1,1,-1,-1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (1,1,1,1,-1,-1,-1,-1), (-1,-1,-1,-1,-1,-1,-1,-1), (-1,-1,1,1,-1,-1,1,1)}, {(-1,1,-1,1,-1,1,1,-1), (-1,1,-1,1,1,-1,-1,1), (-1,1,1,-1,-1,1,1,-1), (1,-1,-1,1,1,-1,-1,1), (-1,-1,-1,-1,1,1,1,1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,

1,1,1,-1,-1,1), (-1,1,1,-1,1,-1,1,-1), (1,-1,-1,1,1,-1,1,-1), (1,1,-1,-1,-1,-1,1,1), (1,1,1,1,-1,-1,-1,-1), (-1,-1,-1,-1,-1,-1,-1,-1), (-1,-1,1,1,-1,1,1,1)}, {(-1,1,-1,1,-1,1,1,-1), (-1,1,-1,1,1,-1,-1,1), (-1,1,1,-1,1,-1,1,-1), (1,-1,-1,1,1,-1,1,-1), (1,1,-1,-1,-1,-1,1,1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (-1,1,1,-1,1,1,-1,-1,1), (-1,1,1,-1,1,-1,1,-1), (1,-1,-1,1,1,-1,1,-1), (1,1,-1,-1,-1,-1,1,1), (1,1,1,1,-1,-1,-1,-1), (-1,-1,1,1,-1,-1,1,1), (1,1,1,1,1,1,1,1)}, {(-1,1,-1,1,-1,1,1,-1), (-1,1,-1,1,1,-1,-1,1), (-1,1,1,-1,1,1,-1,1,-1), (1,-1,-1,1,1,-1,1,-1), (1,1,-1,-1,-1,-1,1,1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,-1,1,1,-1,-1,1), (1,-1,-1,1,-1,1,1,1), (1,-1,-1,1,1,-1,1,-1), (-1,-1,-1,1,1,1,1,1), (-1,-1,1,1,1,1,1,-1,-1), (-1,-1,-1,-1,-1,-1,-1,-1), (-1,-1,1,1,1,-1,-1,1,1,1)}, {(-1,1,-1,1,1,-1,1,1,-1), (-1,1,-1,1,1,1,-1,-1,1), (1,-1,-1,1,1,-1,1,-1), (1,-1,-1,1,1,-1,1,-1), (-1,-1,-1,-1,1,1,1,1), (-1,-1,1,1,1,1,1,-1,-1), (-1,-1,-1,-1,-1,-1,-1,-1), (1,1,-1,-1,1,1,1,-1,-1)}, {(-1,1,-1,1,-1,1,1,-1), (-1,1,-1,1,1,-1,-1,1), (1,-1,-1,1,1,-1,1,1,-1,-1), (1,-1,-1,1,1,-1,1,-1), (-1,-1,-1,-1,1,1,1,1,1), (-1,-1,1,1,1,1,1,-1,-1), (-1,-1,1,1,1,-1,-1,1,1,1), (1,1,1,1,1,1,1,1)}, {(-1,1,-1,1,-1,1,1,-1), (-1,1,-1,1,1,-1,-1,1), (1,-1,-1,1,1,-1,1,1,-1,-1), (1,-1,-1,1,1,-1,1,-1), (-1,-1,-1,-1,1,1,1,1,1), (-1,-1,1,1,1,1,1,-1,-1), (1,1,-1,-1,1,1,1,-1,-1), (1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (-1,-1,-1,-1,1,1,1,1,1), (1,1,-1,-1,-1,-1,1,1), (-1,-1,-1,-1,-1,-1,-1,-1), (-1,-1,-1,-1,-1,-1,-1,-1), (-1,1,1,1,-1,-1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (-1,-1,-1,-1,1,1,1,1,1), (1,1,-1,-1,-1,-1,1,1), (-1,-1,-1,-1,-1,-1,-1,-1), (1,1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (-1,-1,-1,-1,1,1,1,1,1), (1,1,-1,-1,-1,-1,1,1), (1,1,-1,-1,1,1,1,-1,-1,1), (1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}. {(-1,1,-1,1,-1,1,1,-1), (-1,1,-1,1,1,-1,-1,1), (1,-1,-1,1,1,-1,1,1,-1,-1), (1,-1,-1,1,1,-1,1,-1), (-1,-1,1,1,1,1,1,-1,1,-1), (1,1,1,1,-1,-1,-1,-1), (-1,-1,-1,-1,-1,-1,-1,-1), (1,1,-1,-1,1,1,1,-1,-1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (-1,-1,1,1,1,1,1,-1,1,-1), (1,1,1,1,-1,-1,-1,-1), (-1,-1,1,1,1,-1,-1,1,1,1), (1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (-1,-1,1,1,1,1,1,-1,1,-1), (1,1,1,1,-1,-1,-1,-1), (1,1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (1,1,-1,-1,-1,-1,1,1), (1,1,1,1,-1,-1,-1,-1), (1,1,1,1,1,1,1,1)}, {(-1,1,-1,1,-1,1,1,-1), (-1,1,1,-1,1,1,-1,-1,1), (1,-1,-1,1,1,-1,1,-1), (1,-1,-1,1,1,-1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}. {(-1,1,-1,1,-1,1,1,-1), (-1,1,-1,1,1,1,-1,-1,1), (1,-1,-1,1,-1,1,1,-1,1), (1,-1,-1,1,1,-1,1,-1), (1,1,1,1,1,-1,-1,-1,-1), (-1,-1,1,1,1,-1,-1,1,1,1), (1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (-1,-1,-1,-1,1,1,1,1,1), (-1,-1,1,1,1,1,1,-1,-1), (1,1,-1,-1,1,1,1,-1,-1), (1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (-1,-1,1,1,1,1,1,-1,1,-1), (1,1,1,1,-1,-1,-1,-1), (-1,-1,-1,-1,-1,-1,-1,-1), (1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (-1,-1,1,1,1,1,1,-1,1,-1), (1,1,1,1,-1,-1,-1,-1), (1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (1,1,-1,-1,-1,-1,1,1), (1,1,1,1,-1,-1,-1,-1), (1,1,1,1,1,1,1,1)}. {(-1,1,-1,1,-1,1,1,-1), (-1,1,-1,1,1,-1,-1,1), (1,-1,-1,1,-1,1,1,-1,1), (1,-1,-1,1,1,-1,1,-1), (1,1,1,1,1,-1,-1,-1,-1), (-1,1,1,1,1,-1,-1,1,1,1), (1,1,1,1,1,1,1,1)}, {(-1,1,-1,1,-1,1,1,-1), (-1,1,-1,1,1,-1,-1,1), (1,-1,-1,1,-1,1,1,-1,1), (1,-1,-1,1,1,-1,1,-1), (1,1,-1,-1,-1,-1,1,1), (1,1,1,1,-1,-1,-1,-1), (1,1,-1,-1,1,1,1,-1,-1), (1,1,1,1,1,1,1,1)}, {(-1,1,-1,1,-1,1,1,-1), (-1,1,1,-1,1,-1,1,1,-1,1), (-1,1,1,-1,1,1,-1,1,-1), (1,-1,-1,1,-1,1,1,1), (-1,-1,-1,1,1,1,1,1), (-1,-1,1,1,1,1,1,-1,-1), (-1,-1,-1,-1,-1,-1,-1,-1), (-1,-1,1,1,1,-1,-1,1,1,1)}, {(-1,1,-1,1,-1,1,1,-1), (-1,1,-1,1,1,-1,-1,1,-1), (-1,1,1,1,-1,1,1,-1,1,-1), (1,-1,1,1,-1,1,-1,1,1,-1), (-1,-1,-1,-1,1,1,1,1,1), (-1,-1,-1,-1,-1,-1,-1,-1), (1,1,-1,-1,1,1,1,-1,-1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,-1,1,1,1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,-1,-1,1,1,1,1,1), (1,1,1,1,-1,-1,-1,-1), (-1,-1,1,1,1,-1,-1,1,1,1,1), (1,1,1,1,1,1,1,1)}, {(-1,1,-1,1,-1,1,1,-1), (-1,1,1,-1,1,1,-1,1,-1), (-1,1,1,1,-1,1,1,-1,1,-1), (1,-1,1,1,-1,-1,1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,1,-1,1,-1), (-1,1,1,1,-1,1,1,-1,1,-1), (1,-1,1,1,-1,-1,1,1,-1), (1,1,-1,-1,-1,-1,1,1), (1,1,1,1,-1,-1,-1,-1), (1,1,1,1,1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,-1,-1,1,1,1,1,1), (1,1,1,1,-1,-1,-1,-1), (-1,-1,1,1,1,-1,-1,1,1,1), (1,1,1,1,1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,-1,-1,1,1,1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,1,-1,1,-1), (-1,1,1,1,-1,1,1,-1,1,-1), (1,-1,1,1,-1,-1,1,1,-1), (-1,-1,1,1,1,1,1,-1,1,-1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,1,1,1,1,1,-1,1,-1), (1,1,1,1,-1,-1,-1,-1), (1,1,1,1,1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,-1,-1,1,1,1,1,1), (1,1,-1,-1,-1,-1,1,1), (1,1,1,1,-1,-1,-1,-1), (-1,-1,-1,-1,-1,-1,-1,-1), (1,1,-1,-1,1,1,1,-1,-1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,-1,-1,1,1,1,1,1), (1,1,-1,-1,-1,-1,1,1), (-1,-1,1,1,1,-1,-1,1,1,1), (1,1,1,1,1,1,1,1)}, {(-1,1,-1,1,-1,1,1,-1), (-1,1,1,-1,1,1,-1,1,-1), (-1,1,1,1,-1,1,1,-1,1,-1), (1,-1,1,1,-1,-1,1,1,-1), (-1,-1,1,1,1,1,1,-1,1,-1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,1,-1,1,-1), (-1,1,1,1,-1,1,1,-1,1,-1), (1,-1,1,1,-1,-1,1,1,-1), (-1,-1,1,1,1,1,1,-1,1,-1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,1,1,1,1,1,-1,1,-1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,1,1,1,1,1,-1,1,-1), (1,1,1,1,1,1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,1,1,1,1,1,-1,1,-1), (1,1,1,1,-1,-1,-1,-1), (-1,-1,-1,-1,-1,-1,-1,-1), (1,1,-1,-1,1,1,1,-1,-1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,1,1,1,1,1,-1,1,-1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (-1,-1,1,1,1,1,1,-1,1,-1), (1,1,1,1,1,1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,-1,1,1,-1,1), (-1,1,1,1,-1,1,1,-1,1,-1), (1,-1,1,1,-1,-1,1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,1,1,-1,1,-1), (-1,1,1,1,-1,1,1,-1,1,-1), (1,-1,1,1,-1,-1,1,1,-1),

(1,1,1,1,-1,-1,-1,-1), (1,1,-1,-1,1,1,-1,-1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,-1,-1,1,1,1,1), (-1,-1,1,1,1,1,-1,-1), (-1,-1,-1,-1,-1,-1,-1,-1), (-1,-1,1,1,-1,-1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,-1,-1,1,1,1,1), (-1,-1,1,1,1,1,-1,-1), (-1,-1,-1,-1,-1,-1,-1,-1), (1,1,-1,-1,1,1,-1,-1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,-1,-1,1,1,1,1), (-1,-1,1,1,1,1,-1,-1), (-1,-1,1,1,1,1,-1,-1,1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,-1,-1,1,1,1,1), (-1,-1,1,1,1,1,-1,-1), (1,1,-1,-1,1,1,-1,-1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,-1,-1,1,1,1,1), (1,1,-1,-1,-1,-1,1,1,1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,-1,-1,1,1,1,1), (1,1,-1,-1,-1,-1,1,1,1), (-1,-1,-1,-1,-1,-1,-1,-1), (1,1,-1,-1,1,1,-1,-1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,-1,-1,1,1,1,1), (1,1,-1,-1,-1,-1,1,1,1), (-1,-1,1,1,1,1,-1,-1,1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,-1,-1,1,1,1,1), (1,1,-1,-1,-1,-1,1,1,1), (1,1,-1,-1,1,1,-1,-1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,1,1,1,1,1,-1,-1), (1,1,1,1,-1,-1,-1,-1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,-1,1,1,1,1,1,-1,-1,1), (1,1,1,1,-1,-1,-1,-1), (-1,-1,1,1,1,-1,-1,1,1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (-1,1,1,1,1,1,-1,-1,1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (1,1,1,1,-1,-1,1,1,1), (-1,-1,-1,-1,1,1,-1,-1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (1,1,1,1,-1,-1,1,1,1), (-1,-1,-1,-1,1,1,-1,-1), (-1,-1,-1,-1,-1,-1,-1,-1), (1,1,-1,-1,1,1,-1,-1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (1,1,1,1,-1,-1,1,1,1), (-1,-1,-1,-1,1,1,-1,-1), (-1,-1,1,1,1,-1,-1,1,1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1), (1,1,1,1,-1,-1,1,1,1), (-1,-1,-1,-1,1,1,-1,-1), (1,1,-1,-1,1,1,-1,-1), (1,1,1,1,1,1,1,1)}, {(-1,1,-1,1,-1,1,1,-1), (-1,1,1,-1,-1,1,1,-1,1), (1,1,-1,-1,1,-1,-1,1,1), (1,1,1,-1,-1,1,1,-1), (-1,1,1,1,1,1,-1,-1,1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,1,-1,-1,1,-1,-1,1,1), (1,1,1,-1,-1,1,1,-1), (-1,-1,-1,-1,1,1,1,1), (-1,-1,1,1,1,1,-1,-1), (-1,-1,1,1,1,1,-1,-1,1), (1,1,1,1,1,1,1,1)}, {(-1,1,-1,1,-1,1,1,-1), (-1,1,1,-1,-1,1,1,-1,1), (1,1,-1,-1,1,-1,-1,1,1), (1,1,1,-1,-1,1,1,-1), (-1,-1,-1,-1,1,1,1,1), (-1,-1,1,1,1,1,-1,-1), (1,1,-1,-1,1,1,-1,-1), (1,1,1,1,1,1,1,1)}, {(-1,1,-1,1,-1,1,1,-1), (-1,1,1,-1,-1,1,1,-1,1), (1,1,-1,-1,1,-1,-1,1,1), (1,1,1,-1,-1,1,1,-1), (-1,-1,-1,-1,1,1,1,1), (-1,1,1,1,1,1,-1,-1,-1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,1,-1,-1,1,-1,-1,1,1), (1,1,1,-1,-1,1,1,-1), (-1,-1,-1,-1,1,1,1,1), (-1,1,1,1,1,1,-1,-1,-1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,1,-1,1,-1,-1,1,1,-1), (1,1,1,-1,-1,1,1,-1), (-1,-1,-1,-1,1,1,1,1), (-1,-1,1,1,1,1,-1,-1,-1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,1,-1,1,-1,-1,1,1,-1), (1,1,1,-1,-1,1,1,-1), (-1,-1,-1,-1,1,1,1,1), (-1,-1,1,1,1,1,-1,-1,-1), (-1,-1,-1,-1,-1,-1,-1,-1), (1,1,-1,-1,1,1,-1,-1)}, {(-1,1,-1,1,-1,1,1,-1), (-1,1,1,-1,-1,1,1,-1,1), (1,1,-1,1,-1,-1,1,1,-1), (1,1,1,-1,-1,1,1,-1), (-1,-1,-1,-1,1,1,1,1), (-1,-1,1,1,1,1,-1,-1,-1), (1,-1,-1,1,1,1,-1,-1,1), (1,1,1,1,1,1,1,1)}, {(-1,1,-1,1,-1,1,1,-1), (-1,1,1,-1,-1,1,1,-1,1), (1,1,-1,1,-1,-1,1,1,-1), (1,1,1,-1,-1,1,1,-1), (-1,-1,-1,-1,1,1,1,1), (-1,-1,-1,-1,-1,-1,-1,-1), (1,1,-1,-1,1,1,-1,-1)}, {(-1,1,-1,1,-1,1,1,-1), (-1,1,1,-1,-1,1,1,-1,1), (1,1,-1,1,-1,-1,1,1,-1), (1,1,1,-1,-1,1,1,-1), (-1,-1,-1,-1,1,1,1,1), (-1,1,1,1,1,1,-1,-1,-1), (1,1,-1,-1,1,1,-1,-1), (1,1,1,1,1,1,1,1)}, {(-1,1,-1,1,-1,1,1,-1), (-1,1,1,-1,-1,1,1,-1,1), (1,1,-1,1,-1,-1,1,1,-1), (1,1,1,-1,-1,1,1,-1), (-1,1,1,1,1,1,-1,-1,-1), (1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,1,-1,1,-1,-1,1,1,-1), (1,1,1,-1,-1,1,1,-1), (-1,-1,-1,-1,1,1,1,1), (-1,1,1,1,1,1,-1,-1,-1), (-1,-1,-1,-1,-1,-1,-1,-1), (1,1,1,1,1,1,1,1)}, {(-1,1,-1,1,-1,1,1,-1), (-1,1,1,-1,-1,1,1,-1,1), (1,1,1,-1,-1,-1,1,1,-1), (-1,1,1,-1,-1,1,1,-1,1,1), (1,-1,-1,-1,-1,1,1,1,1), (-1,-1,-1,-1,-1,-1,-1,-1), (1,1,-1,-1,1,1,-1,-1,-1)}, {(-1,1,-1,1,-1,1,1,-1), (-1,1,1,-1,-1,1,1,-1,1), (1,1,-1,1,-1,-1,1,1,-1), (1,1,1,-1,-1,-1,1,1,-1), (-1,-1,-1,-1,1,1,1,1), (-1,-1,1,1,1,1,-1,-1,-1), (-1,-1,1,1,1,-1,-1,1,1), (1,1,1,1,1,1,1,1)}, {(-1,1,-1,1,-1,1,1,-1), (-1,1,1,-1,-1,1,1,-1,1), (1,1,-1,1,-1,-1,1,1,-1), (1,1,1,-1,-1,-1,1,1,-1), (-1,1,1,-1,-1,1,1,-1,1,1), (1,1,-1,-1,1,1,-1,-1,-1), (1,1,1,1,1,1,1,1)}, {(-1,1,-1,1,-1,1,1,-1), (-1,1,1,-1,-1,1,1,-1,1), (1,1,1,-1,-1,-1,1,1,-1), (1,1,1,-1,-1,-1,1,1,-1), (-1,-1,-1,-1,1,1,1,1), (1,-1,-1,-1,-1,1,1,1,1), (-1,-1,-1,-1,-1,-1,-1,-1), (1,1,-1,-1,1,1,-1,-1,-1)}, {(-1,1,-1,1,-1,1,1,-1), (-1,1,1,-1,-1,1,1,-1,1), (1,-1,-1,-1,-1,1,1,1,1), (1,-1,1,1,-1,-1,1,1,-1), (-1,-1,-1,-1,1,1,1,1), (1,-1,-1,-1,-1,1,1,1,1), (-1,1,1,1,1,1,1,1,1)}, {(-1,1,-1,1,-1,1,1,-1), (-1,1,1,-1,-1,1,1,-1,1), (1,-1,1,-1,-1,1,1,-1,1), (1,-1,1,1,-1,-1,1,1,-1), (-1,1,1,1,1,1,-1,-1,-1), (-1,-1,1,1,1,1,-1,-1,-1), (-1,-1,1,1,1,-1,-1,1,1), (1,1,1,1,1,1,1,1)}, {(-1,1,-1,1,-1,1,1,-1), (-1,1,1,-1,-1,1,1,-1,1), (1,1,-1,-1,1,-1,-1,1,1), (1,1,1,-1,-1,-1,1,1,-1), (-1,-1,-1,-1,1,1,1,1), (-1,1,-1,1,1,1,-1,-1,1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1,1), (-1,1,1,1,1,1,1,-1,-1,1), (1,-1,1,1,1,-1,-1,1,1,-1), (-1,-1,1,1,1,-1,-1,1,1,1), (1,1,1,1,1,1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1,1), (-1,-1,-1,-1,1,1,1,1), (1,1,-1,-1,-1,-1,1,1,1,1), (1,1,-1,-1,1,1,-1,-1,-1)}, {(-1,1,-1,1,-1,1,1,-1), (-1,1,1,-1,-1,1,1,-1,1), (1,1,-1,1,-1,-1,1,1,-1), (1,1,1,-1,-1,-1,1,1,-1), (-1,1,1,1,1,1,-1,-1,1,1), (1,-1,1,1,1,-1,-1,1,1,-1), (-1,-1,1,1,1,-1,-1,1,1,1), (1,1,1,1,1,1,1,1)}, {(-1,1,-1,1,-1,1,1,-1), (-1,1,1,-1,-1,1,1,-1,1), (1,1,-1,-1,1,-1,-1,1,1), (1,1,1,-1,-1,-1,1,1,-1), (-1,1,1,1,1,1,-1,-1,1,1), (1,-1,1,1,1,-1,-1,1,1,-1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,-1,-1,1,-1,1,1,-1,1), (1,-1,1,-1,-1,1,1,-1,1), (-1,1,1,1,1,1,-1,-1,1,1), (1,-1,1,1,1,-1,-1,1,1,-1), (1,1,1,1,1,1,1,1)}, {(-1,1,-1,1,-1,1,1,-1), (-1,1,1,-1,-1,1,1,-1,1), (1,1,-1,-1,1,-1,-1,1,1), (1,1,1,-1,-1,-1,1,1,-1), (-1,-1,-1,-1,1,1,1,1), (1,1,-1,-1,-1,-1,1,1,1,1), (-1,-1,-1,-1,-1,-1,-1,-1), (1,1,-1,-1,1,1,-1,-1,-1)}, {(-1,1,-1,1,-1,1,1,-1), (-1,1,1,-1,-1,1,1,-1,1), (1,1,-1,-1,1,-1,-1,1,1), (1,1,1,-1,-1,-1,1,1,-1), (-1,-1,-1,-1,1,1,1,1), (-1,-1,1,1,1,1,1,-1,-1,1), (-1,-1,1,1,1,-1,-1,1,1,1), (-1,-1,-1,-1,-1,-1,-1,-1), (-1,-1,1,1,1,-1,-1,1,1)}, {(-1,1,-1,1,-1,1,1,-1), (-1,1,1,-1,-1,1,1,-1,1), (1,-1,-1,1,1,-1,-1,1,1), (1,-1,1,-1,1,-1,-1,1,1,-1), (-1,-1,-1,-1,-1,1,1,1,1), (-1,-1,1,1,1,1,-1,-1,-1), (-1,-1,-1,-1,-1,-1,-1,-1), (-1,-1,1,1,1,-1,-1,1,1,1)}, {(-1,1,-1,1,-1,1,1,-1), (-1,1,1,-1,-1,1,1,-1,1), (1,-1,1,-1,1,1,-1,-1,1,1), (1,-1,1,-1,-1,1,1,-1,1), (-1,-1,-1,-1,1,1,1,1,1), (-1,-1,1,1,1,1,1,-1,-1,1,1), (-1,-1,-1,-1,-1,-1,-1,-1), (-1,-1,1,1,1,-1,-1,1,1,1)}, {(-1,1,-1,1,-1,1,1,-1), (-1,1,1,-1,1,1,-1,1,1,-1), (1,-1,

1,1,1,-1,1,-1),  (1,-1,1,-1,-1,1,1,-1),  (-1,-1,-1,-1.1,1,1,1),  (-1,-1,1,1,1,1,-1,-1),  (1,1,-1,-1,1,1,-1,-1), (1,1,1,1,1,1,1,1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (-1,-1,-1,1,1,1,1), (1,1,-1,-1,-1,-1,1,1), (-1,-1,-1,-1,-1,-1,-1,-1), (-1,-1,1,1,-1,-1,1,1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (-1,-1,-1,-1,1,1,1,1), (1,1,-1,-1,-1,-1,1,1), (-1,-1,-1,-1,-1,-1,-1,-1), (1,1,-1,-1,1,1,-1,-1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (-1,-1,-1,-1,1,1,1,1), (1,1,-1,-1,-1,-1,1,1), (-1,-1,1,1,1,-1,1,1), (1,1,1,1,1,1,1,1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (-1,-1,-1,-1,1,1,1,1), (1,1,-1,-1,-1,1,1,1), (1,1,-1,-1,1,1,-1,-1), (1,1,1,1,1,1,1,1)}, {(-1,1,-1,1,-1,1,1,-1), (-1,1,1,-1,1,-1,1,-1), (1,-1,-1,1,1,-1,1,-1), (-1,-1,1,1,1,1,-1,-1), (1,1,1,1,-1,-1,-1,-1), (-1,-1,-1,-1,-1,-1,-1), (-1,-1,1,1,1,-1,-1,1,1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (-1,-1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (-1,-1,1,1,1,1,-1,-1), (1,1,1,1,-1,-1,-1,-1), (-1,-1,-1,-1,-1,-1,-1,-1), (1,1,1,1,1,1,1,1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (-1,-1,1,1,1,1,-1,-1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (1,1,1,1,-1,-1,-1,-1), (1,1,-1,-1,1,1,-1,-1), (1,1,1,1,1,1,1,1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (1,1,-1,-1,-1,-1,1,1), (-1,-1,-1,-1,-1,-1,-1,-1), (1,1,-1,-1,1,1,-1,-1)}, {(-1,1,-1,1,-1,1,1,-1), (-1,1,1,-1,1,-1,1,-1), (1,-1,-1,1,1,-1,1,-1), (1,-1,1,-1,-1,1,1,-1), (1,1,-1,-1,-1,-1,1,1), (-1,-1,-1,-1,-1,-1,-1,-1), (1,1,-1,-1,1,1,-1,-1)}, {(-1,1,-1,1,-1,1,1,-1), (1,-1,-1,1,1,-1,1,-1), (1,-1,1,-1,1,1,-1,-1,-1), (1,-1,1,-1,-1,1,1,-1), (-1,-1,-1,-1,1,1,1,1), (-1,-1,1,1,1,1,-1,-1), (-1,-1,-1,-1,-1,-1,-1,-1), (-1,-1,1,1,1,-1,-1,1,1)}, {(-1,1,-1,1,-1,1,1,-1), (1,-1,-1,1,-1,1,1,-1), (1,-1,-1,1,1,-1,1,-1), (1,-1,1,-1,-1,1,1,-1), (-1,-1,-1,-1,1,1,1,1), (-1,-1,1,1,1,1,-1,-1), (-1,-1,-1,-1,-1,-1,-1,-1), (1,1,-1,-1,1,1,-1,-1)}, {(-1,1,-1,1,-1,1,1,-1), (1,-1,-1,1,-1,1,1,-1), (1,-1,1,-1,1,1,-1,-1,-1), (-1,-1,-1,-1,1,1,1,1), (-1,-1,1,1,1,1,-1,-1), (-1,-1,1,1,1,1,-1,-1,1), (1,1,1,1,1,1,1,1,1)}, {(-1,1,-1,1,-1,1,1,-1), (1,-1,-1,1,-1,1,1,-1), (1,-1,-1,1,1,-1,1,-1), (1,-1,1,-1,-1,1,1,-1), (-1,-1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (1,-1,-1,1,-1,1,1,-1), (1,-1,1,1,1,-1,1,-1), (1,-1,1,-1,-1,1,1,-1), (-1,-1,-1,-1,1,1,1,1), (1,1,-1,-1,-1,-1,1,1), (-1,-1,-1,-1,-1,-1,-1,-1), (1,1,-1,-1,1,1,-1,-1)}, {(-1,1,-1,1,-1,1,1,-1), (1,-1,-1,1,-1,1,1,-1), (1,-1,1,1,1,-1,1,-1), (1,-1,1,-1,-1,1,1,-1), (-1,-1,-1,-1,1,1,1,1), (-1,-1,1,1,1,1,-1,-1,1), (1,1,1,1,1,1,1,1)}, {(-1,1,-1,1,-1,1,1,-1), (1,-1,-1,1,-1,1,1,-1), (1,-1,-1,1,1,-1,1,-1), (1,-1,1,-1,-1,1,1,-1), (-1,-1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (1,-1,-1,1,-1,1,1,-1), (1,-1,1,1,1,-1,1,-1), (1,-1,1,-1,-1,1,1,-1), (-1,-1,1,1,1,1,-1,-1), (1,1,1,1,-1,-1,-1,-1), (-1,-1,1,1,1,-1,1,1), (1,1,1,1,1,1,1,1)}, {(-1,1,-1,1,-1,1,1,-1), (1,-1,-1,1,-1,1,1,-1), (1,-1,-1,1,1,-1,1,-1), (1,-1,1,-1,-1,1,1,-1), (-1,-1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,-1,1,1,-1), (1,-1,-1,1,-1,1,1,-1), (1,-1,-1,1,1,-1,1,-1), (1,-1,1,-1,-1,1,1,-1), (1,1,1,1,-1,-1,-1,-1), (1,1,-1,-1,1,1,-1,-1), (1,1,1,1,1,1,1,1)}, {(-1,1,-1,1,-1,1,1,-1), (1,-1,-1,1,-1,1,1,-1), (1,-1,-1,1,1,-1,1,-1), (1,-1,1,-1,-1,1,1,-1), (1,1,-1,-1,-1,-1,1,1), (1,1,1,1,-1,-1,-1,-1), (1,1,-1,-1,1,1,-1,-1), (1,1,1,1,1,1,1,1)}, {(-1,1,-1,1,-1,1,1,-1), (1,-1,-1,1,-1,1,1,-1), (1,1,-1,-1,-1,-1,1,1), (1,1,1,1,-1,-1,1,1,-1), (-1,1,-1,-1,1,1,-1,1,1), (-1,1,1,1,1,1,-1,-1,-1), (-1,-1,-1,-1,-1,-1,-1,-1), (-1,-1,1,1,1,-1,-1,1,1)}, {(-1,1,-1,1,-1,1,1,-1), (1,-1,-1,1,-1,1,1,-1), (1,-1,-1,1,1,-1,1,-1), (1,-1,1,-1,-1,1,1,-1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1)}, {(-1,1,-1,1,-1,1,1,-1), (1,-1,-1,1,-1,1,1,-1), (1,-1,1,1,-1,-1,-1,1,1), (1,1,1,1,-1,-1,1,1,-1), (-1,1,-1,-1,1,1,-1,1,1), (-1,1,-1,-1,-1,1,1,1), (-1,-1,-1,-1,-1,-1,-1,-1), (-1,-1,1,1,1,-1,-1,1,1)}, {(-1,1,-1,1,-1,1,1,-1), (1,-1,-1,1,-1,1,1,-1), (1,-1,-1,1,1,-1,1,-1), (1,-1,1,-1,-1,1,1,-1), (-1,-1,-1,-1,-1,1,1,1), (-1,1,1,1,1,1,-1,-1,-1), (-1,-1,1,1,1,-1,-1,1,1)}, {(-1,1,-1,1,-1,1,1,-1), (1,-1,-1,1,1,-1,1,-1,-1), (1,1,1,-1,-1,-1,1,1,-1), (1,1,1,-1,-1,1,1,-1), (-1,1,1,-1,-1,1,1,1,1), (-1,-1,1,1,1,-1,-1,1,1), (-1,-1,1,1,1,-1,-1,1,1), (1,1,1,1,1,1,1,1)}, {(-1,1,-1,1,-1,1,1,-1), (1,-1,-1,1,1,-1,1,-1,-1), (1,1,-1,1,-1,-1,1,1,-1), (1,1,1,-1,-1,1,1,-1), (-1,1,-1,-1,1,1,-1,1,1), (-1,1,1,1,1,1,-1,-1,-1), (-1,-1,-1,-1,-1,-1,-1,-1), (-1,-1,1,1,1,-1,-1,1,1)}, {(-1,1,-1,1,-1,1,1,-1), (1,-1,-1,1,1,-1,1,-1,-1), (1,1,-1,1,-1,-1,1,1,-1), (1,1,1,-1,-1,1,1,-1), (1,1,-1,-1,-1,-1,1,1,1), (1,1,1,1,-1,-1,-1,-1,-1), (1,1,-1,-1,1,1,-1,-1), (1,1,1,1,1,1,1,1)}, {(-1,1,-1,1,-1,1,1,-1), (1,-1,-1,1,1,-1,1,-1,-1), (1,1,-1,1,-1,-1,1,1,-1), (1,1,1,-1,-1,1,1,-1), (-1,1,-1,-1,1,1,-1,1,1), (-1,1,1,1,1,1,-1,-1,-1), (-1,-1,1,1,1,-1,-1,1,1), (1,1,1,1,1,1,1,1)}, {(-1,1,-1,1,-1,1,1,-1), (1,-1,-1,1,1,-1,1,-1,-1), (1,1,-1,1,-1,-1,1,1,-1), (1,1,1,-1,-1,-1,1,1,-1), (-1,1,-1,-1,1,1,-1,1,1), (-1,-1,1,1,1,1,-1,-1,-1,1), (-1,-1,1,1,1,-1,-1,1,1), (1,1,1,1,1,1,1,1)}, {(-1,1,-1,1,-1,1,1,-1), (1,-1,-1,1,1,-1,1,-1,-1), (1,1,-1,1,-1,-1,1,1,-1), (1,1,1,-1,-1,1,1,-1), (-1,1,-1,-1,-1,-1,1,1,1), (-1,1,1,1,1,1,-1,-1,-1), (-1,-1,-1,-1,-1,-1,-1,-1), (-1,-1,1,1,1,-1,-1,1,1)}, {(-1,1,-1,1,-1,1,1,-1), (1,-1,-1,1,1,-1,1,-1,-1), (1,1,-1,1,-1,-1,1,1,-1), (1,1,1,-1,-1,1,1,-1), (1,1,-1,-1,-1,-1,1,1,1), (-1,1,1,1,1,1,-1,-1,-1), (-1,-1,-1,-1,-1,-1,-1,-1), (1,1,1,1,1,1,1,1)}, {(-1,1,-1,1,-1,1,1,-1), (1,-1,-1,1,1,-1,1,-1,-1), (1,1,1,-1,-1,-1,1,1,-1), (1,1,1,-1,-1,1,1,-1), (-1,1,-1,-1,1,1,-1,1,1), (1,1,1,1,-1,-1,-1,-1,-1), (-1,-1,-1,-1,-1,-1,-1,-1), (1,1,-1,-1,1,1,-1,-1,-1)}, {(-1,1,-1,1,-1,1,1,-1), (1,-1,-1,1,1,-1,1,-1,-1), (1,1,-1,1,-1,-1,1,1,-1), (1,1,1,-1,-1,1,1,-1), (-1,1,-1,-1,-1,-1,1,1,1), (-1,1,1,1,1,1,-1,-1,-1), (-1,-1,-1,-1,-1,-1,-1,-1), (1,1,-1,-1,1,1,-1,-1)}, {(-1,1,-1,1,-1,1,1,-1), (1,-1,-1,1,1,-1,1,-1,-1), (1,1,-1,1,-1,-1,1,1,-1), (1,1,1,-1,-1,-1,1,1,-1), (-1,1,-1,-1,-1,-1,1,1,1), (-1,1,1,1,1,1,-1,-1,-1), (-1,-1,1,1,1,-1,-1,1,1), (1,1,1,1,1,1,1,1)}, {(-1,1,-1,1,-1,1,1,-1), (1,-1,-1,1,1,-1,1,-1,-1), (1,1,1,-1,-1,-1,1,1,-1), (1,1,1,-1,-1,1,1,-1), (-1,1,-1,-1,1,1,-1,1,1), (-1,-1,1,1,1,1,-1,-1,-1,1), (-1,-1,1,1,1,-1,-1,1,1), (1,1,1,1,1,1,1,1)}, {(-1,1,-1,1,-1,1,1,-1), (1,-1,-1,1,1,-1,1,-1,-1), (1,1,-1,1,-1,-1,1,1,-1), (1,1,1,-1,-1,1,1,-1), (-1,1,-1,-1,-1,-1,1,1,1), (-1,1,1,1,1,1,-1,-1,-1), (-1,-1,-1,-1,-1,-1,-1,-1), (-1,-1,1,1,1,-1,-1,1,1)}, {(-1,1,-1,1,-1,1,1,-1), (1,-1,-1,1,1,-1,1,-1,-1), (1,1,-1,1,-1,-1,1,1,-1), (1,1,1,-1,-1,-1,1,1,-1), (-1,1,-1,-1,1,1,-1,1,1), (-1,1,1,1,1,1,-1,-1,-1,1), (-1,-1,1,1,1,-1,-1,1,1), (1,1,1,1,1,1,1,1,1)}, {(-1,1,1,-1,1,1,-1,-1), (1,-1,-1,1,1,-1,1,-1,-1), (1,1,1,-1,-1,-1,-1,1,1,1), (1,1,1,-1,-1,1,1,1,-1), (-1,1,1,-1,-1,1,1,1,1), (-1,1,1,1,1,1,-1,-1,-1,-1), (-1,-1,1,1,1,-1,-1,1,1), (1,1,1,1,1,1,1,1,1)}, {(-1,1,-1,1,-1,1,1,-1), (1,-1,-1,1,1,-1,1,-1,-1), (1,1,-1,1,-1,-1,-1,1,1,-1), (1,1,1,-1,-1,-1,1,1,-1), (-1,1,-1,-1,1,1,-1,1,1), (-1,1,1,1,1,1,-1,-1,-1,1), (-1,-1,-1,-1,-1,-1,-1,-1), (1,1,1,1,1,1,1,1,1)}, {(-1,1,-1,1,-1,1,1,-1), (1,-1,-1,1,1,-1,1,-1,-1), (1,1,1,-1,-1,-1,-1,1,1), (1,1,1,-1,-1,1,1,-1), (-1,1,-1,-1,1,1,-1,1,1), (-1,-1,1,1,1,1,-1,-1,-1), (-1,-1,1,1,1,-1,-1,1,1), (1,1,1,1,1,1,1,1,1)}, {(-1,1,-1,1,-1,1,1,-1), (1,-1,-1,1,1,-1,1,-1,-1), (1,1,-1,1,-1,-1,-1,1,1,-1), (1,1,1,-1,-1,-1,-1,1,1,1), (-1,1,-1,-1,1,1,-1,1,1), (-1,1,1,1,1,1,-1,-1,-1), (-1,-1,1,1,1,-1,-1,1,1,1), (1,1,1,1,1,1,1,1,1)}, {(-1,1,-1,1,-1,1,1,-1), (1,-1,-1,1,1,-1,1,-1,-1), (1,1,-1,1,-1,-1,-1,1,1,-1), (1,1,1,-1,-1,-1,-1,1,1), (-1,1,-1,-1,1,1,-1,1,1), (-1,-1,1,1,1,1,-1,-1,-1,1), (-1,-1,1,1,1,-1,-1,1,1), (-1,-1,-1,-1,-1,-1,-1,-1), (-1,-1,1,1,1,-1,-1,1,1)}, {(-1,1,-1,1,-1,1,1,-1), (1,-1,-1,1,1,-1,1,-1,-1), (1,1,-1,1,-1,-1,-1,1,1), (1,1,1,-1,-1,-1,1,1,-1), (-1,1,-1,-1,1,1,-1,1,1,1), (-1,-1,1,1,1,1,-1,-1,-1,-1), (-1,-1,-1,-1,-1,-1,-1,-1,-1), (1,1,-1,-1,1,1,-1,-1,-1)}, {(-1,1,-1,1,-1,1,1,-1), (1,-1,-1,1,1,-1,1,-1,-1), (1,1,1,-1,-1,-1,1,1), (1,1,1,-1,-1,-1,1,1,-1), (-1,1,-1,-1,1,1,-1,1,1), (-1,-1,1,1,1,1,-1,-1,-1,-1), (-1,-1,1,1,1,-1,-1,1,1,1), (1,1,1,1,1,1,1,1,1)}, {(-1,1,-1,1,-1,1,1,-1), (1,-1,-1,1,1,-1,1,-1,-1), (1,1,-1,1,-1,-1,-1,1,1,-1), (1,1,1,-1,-1,-1,-1,1,1,-1), (-1,1,-1,-1,1,1,-1,1,1,1), (-1,-1,1,1,1,1,-1,-1,-1,-1), (-1,-1,1,1,1,-1,-1,1,1,1), (1,1,1,1,1,1,1,1,1)}, {(-1,1,-1,1,-1,1,1,-1), (1,-1,-1,1,1,-1,1,-1,-1), (1,1,-1,1,-1,-1,-1,1,1,-1), (1,1,1,-1,-1,-1,1,1,-1), (-1,1,-1,-1,1,1,-1,1,1), (-1,-1,1,1,1,1,-1,-1,-1,-1), (-1,-1,1,1,1,-1,-1,1,1,1), (1,1,1,1,1,1,1,1,1)}, {(-1,1,-1,1,-1,1,1,-1), (1,-1,-1,1,1,-1,1,-1,-1), (1,1,-1,1,-1,-1,-1,1,1), (1,1,1,-1,-1,-1,1,1,-1), (-1,1,1,-1,-1,1,1,1,1), (1,-1,-1,-1,-1,1,1,1,1), (-1,-1,-1,-1,-1,-1,-1,-1,-1,-1), (-1,-1,1,1,1,-1,-1,1,1,1)}, {(-1,1,-1,1,-1,1,1,-1), (1,-1,-1,1,1,-1,1,-1,-1), (1,1,-1,1,-1,-1,-1,1,1,-1), (1,1,1,-1,-1,-1,-1,1,1,-1), (-1,1,-1,-1,-1,1,1,1,1), (-1,-1,-1,-1,-1,-1,-1,-1,-1,-1), (-1,-1,1,1,1,-1,-1,1,1,1)}, {(-1,1,-1,1,-1,1,1,-1), (1,-1,-1,1,1,-1,1,-1,-1), (1,1,-1,1,-1,-1,-1,1,1), (1,1,1,-1,-1,-1,-1,1,1,-1), (-1,1,1,-1,-1,1,1,1,1), (-1,-1,1,1,1,1,-1,-1,-1,-1), (-1,-1,1,1,1,-1,-1,1,1,1), (1,1,1,1,1,1,1,1,1)}, {(-1,1,-1,1,-1,1,1,-1), (1,-1,-1,1,1,-1,1,-1,-1), (1,1,1,-1,-1,-1,-1,1,1), (1,1,1,-1,-1,-1,-1,1,1), (-1,1,1,-1,-1,1,1,1,1), (-1,-1,-1,-1,-1,-1,-1,-1,-1,-1), (-1,-1,1,1,1,-1,-1,1,1,1)}, {(-1,1,-1,1,-1,1,1,-1), (1,-1,-1,1,1,-1,1,-1,-1), (1,1,-1,1,-1,-1,-1,1,1), (1,1,1,-1,-1,-1,-1,1,1,-1), (-1,1,1,-1,-1,1,1,1,1), (1,-1,-1,-1,-1,1,1,1,1), (-1,-1,-1,-1,-1,-1,-1,-1,-1,-1), (-1,-1,1,1,1,-1,-1,1,1,1)}, {(-1,1,-1,1,-1,1,1,-1), (1,-1,-1,1,1,1,-1,1,1,-1,-1), (1,1,-1,-1,-1,-1,1,1,-1), (1,1,1,-1,-1,-1,1,1,1,-1), (-1,1,1,-1,-1,1,1,1,1), (1,-1,-1,-1,-1,1,1,1,1), (-1,-1,1,1,1,-1,-1,1,1,1,1), (1,-1,-1,-1,-1,1,1,1,-1), (-1,-1,-1,-1,-1,-1,-1,-1,-1), (-1,-1,1,1,1,-1,-1,1,1,1)},

(1,1,1,1,1,1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,-1,-1,1,-1,1,1), (1,-1,-1,-1,-1,1,1,1), (1,1,-1,-1,1,1,-1,-1), (1,1,1,1,1,1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,1,1,1,-1,-1,-1), (1,-1,1,1,-1,1,-1,-1), (-1,-1,-1,-1,-1,-1,-1,-1), (-1,-1,1,1,-1,-1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,1,1,1,-1,-1,-1), (1,-1,1,1,-1,1,-1,-1), (-1,-1,-1,-1,-1,-1,-1,-1), (1,1,-1,-1,1,1,-1,-1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,1,1,1,-1,-1,-1), (1,-1,1,1,-1,1,-1,-1), (-1,-1,1,1,-1,-1,1,1), (1,1,1,1,1,1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,1,1,1,-1,-1,-1), (1,-1,1,1,-1,1,-1,-1), (1,1,-1,-1,1,1,-1,-1), (1,1,1,1,1,1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,1,1,1,-1,-1,-1), (1,-1,1,1,-1,1,-1,-1), (-1,-1,-1,-1,-1,-1,-1,-1), (-1,-1,1,1,-1,-1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (1,-1,-1,-1,-1,1,1,1), (1,-1,1,1,-1,1,-1,-1), (-1,-1,-1,-1,-1,-1,-1,-1), (1,1,-1,-1,1,1,-1,-1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (1,-1,-1,-1,-1,1,1,1), (1,-1,1,1,-1,1,-1,-1), (-1,-1,1,1,-1,-1,1,1), (1,1,1,1,1,1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,-1,-1,1,-1,1,1), (1,-1,-1,-1,-1,1,1,1), (-1,-1,1,1,-1,-1,1,1), (1,1,1,1,1,1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,-1,-1,1,-1,1,1), (1,-1,-1,-1,-1,1,1,1), (-1,-1,-1,-1,-1,-1,-1,-1), (1,1,-1,-1,1,1,-1,-1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (1,-1,-1,-1,-1,1,1,1), (1,-1,1,1,-1,1,-1,-1), (-1,-1,1,1,-1,-1,1,1), (1,1,1,1,1,1,1,1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (1,-1,-1,-1,-1,1,1,1), (1,-1,1,1,-1,1,-1,-1), (-1,-1,-1,-1,-1,-1,-1,-1), (1,1,-1,-1,1,1,-1,-1)}, {(-1,1,-1,1,-1,1,1,-1), (1,-1,-1,1,1,-1,1,-1), (1,1,-1,1,-1,-1,-1,1), (1,1,1,-1,-1,-1,1,-1), (-1,1,-1,-1,1,-1,1,1), (1,-1,-1,-1,-1,1,1,1), (-1,-1,1,1,-1,-1,1,1), (1,1,1,1,1,1,1,1)}, {(-1,1,-1,1,1,1,-1,-1), (-1,1,1,1,-1,-1,1,-1,-1), (-1,1,1,1,-1,-1,1,-1), (1,-1,1,1,-1,1,-1,-1), (-1,-1,-1,-1,1,1,1,1), (-1,-1,1,1,1,1,1,-1,-1), (-1,-1,-1,-1,-1,-1,-1,-1), (-1,-1,1,1,1,-1,-1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,-1,-1,-1,-1), (1,1,-1,-1,1,1,-1,-1), (-1,-1,-1,-1,-1,-1,-1,-1), (1,1,-1,-1,1,1,-1,-1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (-1,-1,1,1,1,1,1,-1,-1), (1,1,-1,-1,1,1,-1,-1), (1,1,1,1,1,1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (-1,-1,1,1,1,1,1,-1,-1), (1,1,-1,-1,1,1,-1,-1), (1,1,1,1,1,1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (1,1,-1,-1,1,1,-1,-1), (-1,-1,1,1,1,1,1,-1,-1), (1,1,1,1,1,1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (1,1,-1,-1,1,1,-1,-1), (-1,-1,-1,-1,-1,-1,-1,-1), (-1,-1,1,1,1,-1,-1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (1,1,-1,-1,1,1,-1,-1), (1,1,-1,-1,1,1,-1,-1), (1,1,1,1,1,1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (-1,-1,1,1,1,1,1,-1,-1), (-1,-1,-1,-1,-1,-1,-1,-1), (-1,-1,1,1,1,-1,-1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (1,1,-1,-1,1,1,-1,-1), (-1,-1,-1,-1,-1,-1,-1,-1), (1,1,-1,-1,1,1,-1,-1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (1,1,-1,-1,-1,1,1,1), (-1,-1,1,1,1,1,1,-1,-1), (1,1,1,1,1,1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,-1,-1,1,1,1,1), (1,1,-1,-1,-1,1,1,1), (1,1,-1,-1,1,1,-1,-1), (1,1,1,1,1,1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,1,1,1,1,1,-1,-1), (1,1,1,1,1,-1,-1,-1,-1), (-1,-1,-1,-1,-1,-1,-1,-1), (-1,-1,1,1,1,-1,-1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (-1,-1,1,1,1,1,1,-1,-1), (1,1,1,1,1,-1,-1,-1,-1), (1,1,-1,-1,1,1,-1,-1), (1,1,1,1,1,1,1,1)}, {(-1,1,-1,1,1,1,-1,-1), (-1,1,1,1,-1,-1,1,-1), (-1,1,1,1,-1,-1,1,-1,-1), (1,-1,1,1,-1,1,-1,-1), (1,1,-1,-1,-1,1,1,1), (1,1,1,1,1,-1,-1,-1,-1), (1,1,-1,-1,1,1,-1,-1), (1,1,1,1,1,1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (1,1,-1,-1,-1,1,1,1), (1,1,1,1,1,-1,-1,-1,-1), (-1,-1,-1,-1,-1,-1,-1,-1), (1,1,-1,-1,1,1,-1,-1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (1,1,-1,-1,-1,1,1,1), (-1,-1,1,1,1,1,1,-1,-1), (-1,-1,-1,-1,-1,-1,-1,-1), (1,1,-1,-1,1,1,-1,-1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (1,1,-1,-1,-1,1,1,1), (1,1,1,1,1,-1,-1,-1,-1), (-1,-1,-1,-1,-1,-1,-1,-1), (1,1,-1,-1,1,1,-1,-1)}, {(-1,1,-1,1,1,1,-1,-1), (-1,1,1,1,-1,-1,1,-1), (-1,1,1,1,-1,-1,1,1,-1), (1,-1,1,1,-1,1,-1,-1), (-1,-1,1,1,1,1,1,-1,-1), (1,1,1,1,1,-1,-1,-1,-1), (-1,-1,1,1,1,1,1,-1,-1), (1,1,1,1,1,1,1,1)}, {(-1,1,-1,1,1,1,-1,-1), (-1,1,1,1,-1,-1,1,-1), (-1,1,1,1,-1,1,-1,-1), (1,-1,1,1,-1,1,-1,-1), (1,1,-1,-1,-1,1,1,1), (1,1,1,1,1,-1,-1,-1,-1), (1,1,-1,-1,1,1,-1,-1), (1,1,1,1,1,1,1,1)}, {(-1,1,-1,1,1,1,-1,-1), (-1,1,1,1,-1,-1,1,-1), (1,-1,1,1,-1,1,-1,-1), (1,-1,1,1,-1,1,-1,-1), (-1,-1,-1,-1,1,1,1,1), (1,1,-1,-1,-1,1,1,1), (-1,-1,-1,-1,-1,-1,-1,-1), (-1,-1,1,1,1,-1,-1,1,1)}, {(-1,1,-1,1,1,1,-1,-1), (-1,1,1,1,-1,-1,1,-1), (1,-1,1,1,-1,1,-1,-1), (1,-1,1,1,-1,1,-1,-1), (-1,-1,-1,-1,1,1,1,1), (1,1,-1,-1,-1,1,1,1), (1,1,-1,-1,1,1,-1,-1), (1,1,1,1,1,1,1,1)}, {(-1,1,-1,1,1,1,-1,-1), (-1,1,1,1,-1,-1,1,-1), (1,-1,1,1,-1,1,-1,-1), (1,-1,1,1,-1,1,-1,-1), (-1,-1,-1,-1,1,1,1,1), (-1,-1,1,1,1,1,1,-1,-1), (-1,-1,-1,-1,-1,-1,-1,-1), (-1,-1,1,1,1,-1,-1,1,1)}, {(-1,1,-1,1,1,1,-1,-1), (-1,1,1,1,-1,-1,1,-1), (1,-1,1,1,-1,1,-1,-1), (1,-1,1,1,-1,1,-1,-1), (-1,-1,-1,-1,1,1,1,1), (1,1,-1,-1,-1,1,1,1), (1,1,-1,-1,1,1,-1,-1), (-1,-1,1,1,1,1,1,-1,-1), (-1,-1,-1,-1,-1,-1,-1,-1), (-1,-1,1,1,1,-1,-1,1,1)}. {(-1,1,-1,1,1,1,-1,-1), (-1,1,1,1,-1,-1,1,-1), (1,-1,-1,1,1,-1,1,-1), (1,-1,1,1,-1,1,-1,-1), (-1,-1,1,1,1,1,1,-1,-1), (1,1,1,1,1,-1,-1,-1,-1), (-1,-1,-1,-1,-1,-1,-1,-1), (1,1,-1,-1,1,1,-1,-1)}, {(-1,1,-1,1,1,1,-1,-1), (-1,1,1,1,-1,-1,1,-1), (1,-1,-1,1,1,-1,1,-1), (1,-1,1,1,-1,1,-1,-1), (-1,-

1,1,1,1,1,-1,-1), (1,1,1,1,-1,-1,-1,-1), (-1,-1,1,1,-1,-1,1,1), (1,1,1,1,1,1,1,1)}, {(-1,1,-1,1,1,-1,-1,1), (-1,1,1,-1,1,1,-1,1), (1,-1,-1,1,1,-1,1,-1,1), (1,-1,1,-1,1,1,-1,-1,1), (-1,-1,1,1,1,1,1,-1,-1), (1,1,1,1,-1,-1,-1,-1), (1,1,-1,-1,1,1,1,-1,-1), (1,1,1,1,1,1,1,1)}, {(-1,1,-1,1,1,-1,-1,1), (-1,1,1,-1,1,1,-1,1), (1,-1,-1,1,1,-1,1,-1,1), (1,-1,1,-1,1,1,-1,-1,1), (1,1,-1,-1,-1,-1,1,1,1), (1,1,1,1,-1,-1,-1,-1), (-1,-1,-1,-1,-1,-1,-1,-1), (-1,-1,1,1,-1,-1,1,1,1)}, {(-1,1,-1,1,1,1,-1,-1,1), (-1,1,1,1,-1,-1,1,1,-1,1), (1,-1,-1,1,1,-1,1,-1,1), (1,-1,1,1,-1,1,1,-1,-1,1), (1,1,1,-1,-1,-1,-1,1,1,1), (1,1,1,1,1,-1,-1,-1,-1), (-1,-1,-1,-1,-1,-1,-1,-1), (1,1,-1,-1,1,1,1,-1,-1,1)}, {(-1,1,-1,1,1,1,-1,-1,1), (-1,1,1,1,-1,-1,1,1,-1,1), (1,-1,-1,1,1,-1,1,-1,1), (1,-1,1,1,-1,1,1,-1,-1,1), (1,1,-1,-1,-1,-1,1,1,1), (1,1,1,1,1,-1,-1,-1,-1), (-1,-1,1,1,1,-1,-1,1,1,1), (1,1,1,1,1,1,1,1)}, {(-1,1,-1,1,1,1,-1,-1,1), (-1,1,1,1,-1,-1,1,1,-1,1), (1,-1,-1,1,1,-1,1,1,-1,1), (1,-1,1,1,-1,1,1,-1,-1,1), (1,1,-1,-1,-1,-1,1,1,1), (1,1,1,1,1,-1,-1,-1,-1), (1,1,-1,-1,1,1,1,-1,-1,1), (1,1,1,1,1,1,1,1)}, {(-1,1,-1,1,1,1,-1,-1,1), (-1,1,1,1,-1,-1,1,1,-1,1), (-1,1,1,1,1,-1,-1,1,-1,1), (1,-1,1,1,1,1,-1,-1,1), (-1,-1,-1,1,1,1,1,-1,1), (-1,-1,1,1,1,1,-1,-1,1), (-1,-1,1,-1,-1,-1,-1,-1,-1), (-1,-1,1,1,1,-1,-1,1,1,1)}, {(-1,1,-1,1,1,1,-1,-1,1), (-1,1,1,1,-1,-1,1,1,-1,1), (-1,1,1,1,1,-1,1,-1,-1,1), (1,-1,1,1,1,1,-1,-1,1), (-1,-1,-1,1,1,1,1,1,-1,1), (-1,-1,1,1,-1,1,1,-1,1), (-1,-1,-1,-1,-1,-1,-1,-1), (1,1,1,-1,-1,1,1,1,-1,1)}, {(-1,1,-1,1,1,1,-1,-1,1), (-1,1,1,1,-1,1,-1,1,-1,1), (-1,1,1,1,1,-1,1,-1,-1,1), (1,-1,1,1,1,1,-1,-1,1), (-1,-1,-1,1,1,1,1,1,1,-1,1), (-1,-1,1,1,-1,1,1,-1,1), (-1,-1,1,1,1,-1,-1,1,1,1), (1,1,1,1,1,1,1,1)}, {(-1,1,-1,1,1,1,-1,-1,1), (-1,1,1,1,-1,1,-1,1,-1,1), (-1,1,1,1,1,-1,1,-1,-1,1), (1,-1,1,1,1,1,-1,-1,1), (-1,-1,-1,1,1,1,1,1,-1,1), (-1,-1,1,1,-1,1,1,-1,1), (1,1,-1,-1,1,1,1,-1,-1,1), (1,1,1,1,1,1,1,1)}, {(-1,1,-1,1,1,1,-1,-1,1), (-1,1,1,1,-1,1,-1,1,-1,1), (-1,1,1,1,1,-1,1,-1,-1,1), (1,-1,1,1,1,1,-1,-1,1), (-1,-1,1,1,1,1,1,-1,1), (1,1,-1,-1,-1,-1,1,1,1), (-1,-1,-1,-1,-1,-1,-1,-1), (-1,-1,1,1,1,-1,-1,1,1,1)}, {(-1,1,-1,1,1,1,-1,-1,1), (-1,1,1,1,-1,1,-1,1,-1,1), (-1,1,1,1,1,-1,1,-1,-1,1), (1,-1,1,1,1,1,-1,-1,1), (-1,-1,1,1,1,1,1,-1,1), (1,1,-1,-1,-1,-1,1,1,1), (-1,-1,1,1,1,-1,-1,1,1,1), (1,1,1,1,1,1,1,1)}, {(-1,1,-1,1,1,1,-1,-1,1), (-1,1,1,1,-1,1,-1,1,-1,1), (-1,1,1,1,1,-1,1,-1,-1,1), (1,-1,1,1,1,1,-1,-1,1), (-1,-1,1,1,1,1,1,-1,1), (1,1,-1,-1,1,1,1,-1,-1,1), (-1,-1,-1,-1,-1,-1,-1,-1), (-1,-1,1,1,1,-1,-1,1,1,1)}, {(-1,1,-1,1,1,1,-1,-1,1), (-1,1,1,1,-1,1,-1,1,-1,1), (-1,1,1,1,1,-1,1,-1,-1,1), (1,-1,1,1,1,1,-1,-1,1), (-1,-1,1,1,1,1,1,-1,1), (1,1,1,-1,-1,-1,-1,1,1,1), (-1,-1,-1,-1,-1,-1,-1,-1), (1,1,-1,-1,1,1,1,-1,-1,1)}, {(-1,1,-1,1,1,1,-1,-1,1), (-1,1,1,1,-1,1,-1,1,-1,1), (-1,1,1,1,1,-1,1,-1,-1,1), (1,-1,1,1,1,1,-1,-1,1), (-1,-1,-1,1,1,1,1,1,-1,1), (1,1,1,-1,-1,-1,-1,-1,1), (1,1,-1,-1,1,1,1,-1,-1,1), (1,1,1,1,1,1,1,1)}, {(-1,1,-1,1,1,1,-1,-1,1), (-1,1,1,1,-1,1,-1,1,-1,1), (-1,1,1,1,1,-1,1,-1,-1,1), (1,-1,1,1,1,1,-1,-1,1), (1,1,1,-1,-1,1,1,1,-1,1), (1,1,-1,-1,-1,-1,1,1,1), (1,1,1,1,1,1,1,1)}, {(-1,1,-1,1,1,1,-1,-1,1), (-1,1,1,1,-1,1,-1,1,-1,1), (-1,1,1,1,1,-1,-1,1,1,-1,1), (1,-1,1,1,1,1,-1,-1,1), (-1,-1,1,1,1,1,1,-1,1), (1,1,1,-1,-1,1,1,1,-1,1), (1,1,1,1,1,1,1,1)}, {(-1,1,-1,1,1,1,-1,-1,1), (-1,1,1,1,-1,1,-1,1,-1,1), (1,-1,-1,1,1,-1,1,1,-1,1), (1,-1,1,1,1,1,-1,-1,1), (-1,-1,-1,1,1,1,1,1,-1,1), (1,1,1,-1,-1,1,1,1,-1,1), (1,1,1,1,1,1,1,1)}, {(-1,1,-1,1,1,1,-1,-1,1), (-1,1,1,1,-1,1,-1,1,-1,1), (1,-1,-1,-1,1,1,1,1,1), (1,-1,1,1,1,1,-1,-1,1), (-1,-1,-1,1,1,1,1,1,-1,1), (-1,-1,1,1,-1,1,1,-1,1), (-1,-1,-1,-1,-1,-1,-1,-1), (1,1,-1,-1,1,1,1,-1,-1,1)}, {(-1,1,-1,1,1,1,-1,-1,1), (-1,1,1,1,-1,1,-1,1,-1,1), (1,-1,-1,-1,1,1,1,1,1), (1,-1,1,1,1,1,-1,-1,1), (-1,-1,1,1,1,1,1,-1,1), (-1,-1,1,1,-1,1,1,-1,1), (-1,-1,1,1,1,-1,-1,1,1,1), (1,1,1,1,1,1,1,1)}, {(-1,1,-1,1,1,1,-1,-1,1), (-1,1,1,1,-1,1,-1,1,-1,1), (1,-1,-1,-1,1,1,1,1,1), (1,-1,1,1,1,1,-1,-1,1), (-1,-1,1,1,1,1,1,-1,1), (-1,-1,-1,-1,-1,-1,-1,-1), (-1,-1,1,1,1,-1,-1,1,1,1)}, {(-1,1,-1,1,1,1,-1,-1,1), (-1,1,1,1,-1,1,-1,1,-1,1), (1,-1,-1,-1,1,1,1,1,1), (1,-1,1,1,1,1,-1,-1,1), (-1,-1,-1,1,1,1,1,1,-1,1), (1,1,-1,-1,-1,-1,1,1,1), (1,1,-1,-1,1,1,1,-1,-1,1)}, {(-1,1,-1,1,1,1,-1,-1,1), (-1,1,1,1,-1,1,-1,1,-1,1), (1,-1,-1,-1,1,1,1,1,1), (1,-1,1,1,1,1,-1,-1,1), (-1,-1,1,1,1,1,1,-1,1), (-1,-1,1,1,-1,1,1,-1,1), (-1,-1,1,1,1,-1,-1,1,1,1), (1,1,1,1,1,1,1,1)}, {(-1,1,-1,1,1,1,-1,-1,1), (-1,1,1,1,-1,1,-1,1,-1,1), (1,-1,-1,-1,1,1,1,1,1), (1,-1,1,1,1,1,-1,-1,1), (-1,-1,-1,1,1,1,1,1,-1,1), (-1,-1,1,1,-1,1,1,-1,1), (-1,-1,1,1,1,-1,-1,1,1,1), (1,1,1,1,1,1,1,1)}, {(-1,1,-1,1,1,1,-1,-1,1), (-1,1,1,1,-1,1,-1,1,-1,1), (1,-1,-1,-1,1,1,1,1,1), (1,-1,1,1,1,1,-1,-1,1), (1,1,1,-1,-1,1,1,1,-1,1), (1,1,-1,-1,-1,-1,1,1,1), (-1,-1,1,1,1,-1,-1,1,1,1), (1,1,1,1,1,1,1,1)}, {(-1,1,-1,1,1,1,-1,-1,1), (-1,1,1,1,-1,1,-1,1,-1,1), (1,-1,-1,-1,1,1,1,1,1), (1,-1,1,1,1,1,-1,-1,1), (1,1,1,-1,-1,1,1,1,-1,1), (-1,-1,1,1,1,1,-1,-1,1), (-1,-1,1,1,1,-1,-1,1,1,1), (1,1,1,1,1,1,1,1)}, {(-1,1,-1,1,1,1,-1,-1,1), (-1,1,1,-1,1,1,-1,1,-1,1), (1,-1,-1,1,1,-1,1,1,1), (1,-1,1,1,1,1,-1,-1,1), (-1,-1,1,1,1,1,1,-1,1), (-1,-1,1,1,-1,1,1,-1,1), (-1,-1,-1,-1,-1,-1,-1,-1), (1,1,-1,-1,1,1,1,-1,-1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,1,1,1,1,1,-1,1), (-1,-1,1,1,1,1,-1,-1,1), (-1,-1,1,1,1,-1,-1,1,1,1), (1,1,1,1,1,1,1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,1,1,1,1,1,-1,1), (1,1,1,-1,-1,-1,-1,1,1,1), (-1,-1,1,1,1,-1,-1,1,1,1), (-1,-1,1,1,-1,-1,1,1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (1,1,1,-1,-1,1,1,1,-1,1), (-1,-1,1,1,1,1,-1,-1,1), (-1,-1,1,1,1,-1,-1,1,1,1), (1,1,1,1,1,1,1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (1,1,1,-1,-1,1,1,1,-1,1), (1,1,-1,-1,-1,-1,1,1,1), (-1,-1,1,1,1,-1,-1,1,1,1), (1,1,1,1,1,1,1,1)}, {(-1,1,-1,1,1,1,-1,-1,1), (-1,1,1,-1,1,1,-1,1,-1,1), (1,-1,-1,1,1,-1,1,1,1), (1,-1,1,1,1,1,-1,-1,1), (1,1,-1,-1,1,1,-1,-1,1,-1,1), (1,1,1,-1,-1,-1,-1,1,1,1), (-1,-1,-1,-1,-1,-1,-1,-1), (1,1,-1,-1,1,1,1,-1,-1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,1,1,1,1,1,-1,1), (1,1,1,-1,-1,1,1,1,-1,1), (1,1,1,1,1,1,1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,-1,1,1,1,1,1,-1,1), (1,1,1,-1,-1,1,1,1,-1,1), (-1,-1,-1,-1,-1,-1,-1,-1), (1,1,-1,-1,1,1,1,-1,-1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,1,1,1,1,1,-1,1), (1,1,1,-1,-1,-1,-1,1,1,1), (-1,-1,1,1,1,-1,-1,1,1,1), (1,1,1,1,1,1,1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,1,1,1,1,1,-1,1), (1,1,1,-1,-1,-1,-1,1,1,1), (1,1,-1,-1,1,1,1,-1,-1,1), (1,1,1,1,1,1,1,1)}, {(-1,1,-1,1,1,1,-1,-1,1), (-1,1,1,-1,1,1,-1,1,-1,1), (1,-1,-1,1,1,-1,1,1,1), (1,-1,1,1,1,1,-1,-1,1), (-1,-1,1,1,1,1,1,-1,1), (1,1,1,-1,-1,1,1,1,-1,1), (-1,-1,1,1,1,-1,-1,1,1,1), (1,1,1,1,1,1,1,1)}, {(-1,1,-1,1,1,1,-1,-1,1), (-1,1,1,-1,1,1,-1,1,-1,1), (1,-1,-1,1,1,-1,1,1,1), (1,-1,1,1,1,1,-1,-1,1), (-1,-1,1,1,1,1,1,-1,1), (1,1,1,-1,-1,-1,-1,1,1,1), (-1,-1,-1,-1,-1,-1,-1,-1), (-1,-1,1,1,1,-1,-1,1,1,1)}, {(-1,1,-1,1,1,1,-1,-1,1), (-1,1,1,-1,1,1,-1,1,-1,1), (1,-1,-1,1,1,-1,1,1,1), (1,-1,1,1,1,1,-1,-1,1), (-1,-1,-1,1,1,1,1,1,-1,1), (1,1,-1,-1,-1,-1,1,1,1), (1,1,-1,-1,1,1,1,-1,-1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (1,1,-1,-1,1,1,-1,-1,1,-1,1), (1,1,1,-1,-1,-1,-1,1,1,1), (-1,-1,-1,-1,-1,-1,-1,-1), (1,1,-1,-1,1,1,1,-1,-1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,1,1,1,1,1,-1,1), (1,1,1,-1,-1,-1,-1,-1,1), (-1,-1,1,1,1,-1,-1,1,1,1), (1,1,1,1,1,1,1,1)}, {(-1,1,-1,1,1,1,-1,-1,1), (-1,1,1,-1,1,1,-1,1,-1,1), (1,-1,-1,1,1,-1,1,1,1), (1,-1,1,1,1,1,-1,-1,1), (-1,-1,-1,1,1,1,1,1,-1,1), (1,1,1,-1,-1,1,1,1,-1,1), (1,1,1,1,1,1,1,1)}, {(-1,1,-1,1,1,1,-1,-1,1), (-1,1,1,1,-1,1,-1,1,-1,1), (1,-1,-1,1,1,-1,1,1,1), (1,-1,1,1,1,1,-1,-1,1), (-1,-1,1,1,1,1,1,-1,1), (1,1,1,-1,-1,-1,-1,1,1,1), (-1,-1,-1,-1,-1,-1,-1,-1), (1,1,-1,-1,1,1,1,-1,-1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,-1,1,1,1,1,1,-1,1), (1,1,-1,-1,-1,-1,-1,-1,1), (-1,-1,1,1,1,-1,-1,1,1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,-1,1,1,1,1,1,-1,1), (1,1,1,-1,-1,-1,-1,1,1,1), (-1,-1,1,1,1,-1,-1,1,1,1), (1,1,1,1,1,1,1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (-1,-1,-1,1,1,1,1,1,-1,1), (1,1,-1,-1,-1,-1,-1,-1,1), (-1,-1,1,1,1,-1,-1,1,1,1), (-1,-1,1,1,1,1,-1,-1,1)}, {(-1,1,-1,1,1,1,-1,-1,1), (-1,1,1,-1,1,1,-1,1,-1,1), (1,-1,-1,-1,1,1,1,1,1), (1,-1,1,1,1,1,-1,-1,1), (1,1,-1,-1,1,1,-1,-1,1,-1,1), (1,1,1,-1,-1,-1,-1,1,1,1), (-1,-1,-1,-1,-1,-1,-1,-1), (1,1,-1,-1,1,1,1,-1,-1,1)}, {(-1,1,-1,1,1,1,-1,-1,1), (-1,1,1,-1,1,-1,1,1,-1,1), (1,-1,-1,1,1,-1,1,1,1), (1,-1,1,1,1,1,-1,-1,1), (1,1,-1,-1,1,1,-1,-1,1,-1,1), (1,1,1,-1,-1,-1,-1,1,1,1), (-1,-1,-1,-1,-1,-1,-1,-1), (1,1,-1,-1,1,1,1,-1,-1,1)}, {(-1,1,-1,1,1,1,-1,-1,1), (-1,1,1,-1,1,-1,1,1,-1,1), (1,-1,-1,1,1,-1,1,1,1), (1,-1,1,1,1,1,-1,-1,1), (1,1,-1,-1,1,-1,1,1,-1,1), (1,1,1,-1,-1,-1,-1,-1,1), (-1,-1,-1,-1,-1,-1,-1,-1), (1,1,-1,-1,1,1,1,-1,-1,1)}, {(-1,1,-1,1,1,1,-1,-

1,1), (-1,1,1,-1,1,-1,1,-1), (1,-1,-1,-1,1,-1,1,1), (1,-1,1,1,1,-1,-1,-1), (1,1,-1,1,-1,-1,1,-1), (1,1,1,-1,-1,-1,-1,1,1), (-1,-1,1,1,-1,-1,1,1), (1,1,1,1,1,1,1,1)}, {(-1,1,-1,1,1,-1,-1,1), (-1,1,1,-1,1,-1,1,-1), (1,-1,-1,-1,1,-1,1,1), (1,-1,1,1,1,-1,-1,-1), (1,1,-1,1,-1,-1,1,-1), (1,1,1,-1,-1,-1,-1,1), (1,1,-1,-1,1,1,-1,-1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,-1,-1,1,1,1,1,1), (-1,-1,1,1,1,1,-1,-1), (-1,-1,-1,-1,-1,-1,-1,-1), (-1,-1,1,1,1,-1,-1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,-1,-1,1,1,1,1), (-1,-1,1,1,1,1,-1,-1), (-1,-1,-1,-1,-1,-1,-1,-1), (1,1,-1,-1,1,1,-1,-1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,-1,-1,1,1,1,1), (-1,-1,1,1,1,1,-1,-1), (-1,-1,1,1,1,-1,-1,1,1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,-1,-1,1,1,1,1), (-1,-1,1,1,1,1,-1,-1), (1,1,-1,-1,1,-1,-1,1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,-1,-1,1,1,1,1), (1,1,-1,-1,-1,-1,1,1,1), (-1,-1,-1,-1,-1,-1,-1,-1), (-1,-1,1,1,1,-1,-1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,-1,-1,1,1,1,1), (1,1,-1,-1,-1,-1,1,1), (-1,-1,-1,-1,-1,-1,-1,-1), (1,1,-1,-1,1,1,-1,-1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,-1,-1,1,1,1,1), (1,1,-1,-1,-1,-1,1,1), (-1,-1,1,1,1,-1,-1,1,1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,-1,-1,1,1,1,1), (1,1,-1,-1,-1,-1,1,1), (1,1,-1,-1,1,-1,-1,1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,1,1,1,1,-1,-1), (1,1,1,1,-1,-1,-1,-1), (1,1,-1,-1,1,1,-1,-1,-1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,1,1,1,1,-1,-1), (1,1,1,1,-1,-1,-1,-1), (-1,-1,-1,-1,-1,-1,-1,-1), (1,1,-1,-1,1,1,-1,-1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,1,1,1,1,-1,-1), (1,1,1,1,-1,-1,-1,-1), (-1,-1,-1,-1,-1,-1,-1,-1), (-1,-1,1,1,1,-1,-1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,1,1,1,1,-1,-1), (1,1,1,1,-1,-1,-1,-1), (-1,-1,1,1,1,-1,-1,1,1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (-1,-1,1,1,1,1,-1,-1), (1,1,1,1,-1,-1,-1,-1), (1,1,-1,-1,1,-1,-1,1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (1,1,-1,-1,-1,-1,1,1), (1,1,1,1,-1,-1,-1,-1), (-1,-1,-1,-1,-1,-1,-1,-1), (-1,-1,1,1,1,-1,-1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (-1,-1,1,1,1,1,1,-1,-1), (-1,-1,1,1,-1,1,1,-1), (1,1,1,1,1,1,1,1)}, {(-1,1,-1,1,1,-1,-1,1), (-1,1,1,-1,1,-1,1,-1), (1,-1,-1,1,1,-1,1,-1), (1,-1,1,-1,1,-1,-1,1), (1,1,-1,-1,-1,-1,1,1), (1,1,1,1,-1,-1,-1,-1), (1,1,-1,-1,1,-1,-1,1), (1,1,1,1,1,1,1,1)}, {(-1,1,-1,1,1,-1,-1,1), (-1,1,1,-1,1,-1,1,-1), (1,-1,-1,1,-1,1,-1,-1), (1,-1,1,1,1,-1,-1,1,-1), (-1,-1,1,1,1,1,1,-1), (-1,-1,1,1,-1,1,1,-1), (1,1,1,1,1,1,1,1)}, {(-1,1,-1,1,1,-1,-1,1), (-1,1,1,-1,1,-1,1,-1), (1,-1,-1,1,-1,1,-1,-1), (1,-1,1,1,1,-1,-1,1), (-1,-1,-1,-1,-1,-1,-1,-1), (1,1,-1,-1,1,1,-1,-1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (-1,-1,1,1,-1,1,1,-1), (1,1,1,1,1,1,1,1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (1,1,-1,-1,-1,-1,1,1,-1), (1,1,1,1,1,1,1,1)}, {(-1,1,-1,1,1,-1,-1,1), (-1,1,1,-1,1,-1,1,-1), (1,-1,-1,1,-1,-1,1,-1), (1,-1,1,1,1,1,-1,-1,-1), (-1,-1,-1,1,1,1,1,-1), (1,1,1,1,-1,-1,-1,-1,-1), (1,1,1,1,1,1,1,1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (1,1,-1,-1,-1,-1,1,1), (-1,-1,-1,-1,-1,-1,-1,-1), (-1,-1,1,1,1,-1,-1,1,1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (1,1,-1,-1,-1,-1,1,1), (-1,-1,-1,-1,-1,-1,-1,-1), (1,1,-1,-1,1,1,-1,-1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (1,1,-1,-1,-1,-1,1,1), (1,1,1,1,1,1,1,1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (1,1,-1,-1,-1,-1,1,1), (1,1,-1,-1,1,-1,-1,1), (1,1,1,1,1,1,1,1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (-1,-1,1,1,-1,1,1,-1), (-1,-1,-1,-1,-1,-1,-1,-1), (-1,-1,1,1,1,-1,-1,1,1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (1,1,-1,1,-1,-1,1,-1), (1,1,1,1,1,1,1,1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (1,1,1,1,1,-1,-1,-1,-1), (-1,-1,-1,-1,-1,-1,-1,-1), (1,1,-1,-1,1,1,-1,-1,-1)}, {(-1,1,-1,1,1,-1,-1,1), (-1,1,1,1,1,-1,1,-1,-1), (1,-1,-1,1,-1,1,-1,-1), (1,-1,1,1,1,1,-1,-1,-1), (-1,-1,1,1,1,1,1,-1), (1,1,-1,1,-1,-1,1,-1), (1,1,1,1,1,1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (-1,-1,1,1,1,1,1,-1), (1,1,-1,1,-1,-1,1,-1), (1,1,1,1,1,1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (-1,-1,1,1,1,1,1,-1), (-1,-1,1,1,-1,1,1,-1), (1,1,1,1,1,1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (1,-1,1,1,1,1,-1,-1,-1), (-1,-1,1,1,1,1,1,-1), (-1,-1,-1,-1,-1,-1,-1,-1), (-1,-1,1,1,1,-1,-1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (1,1,1,-1,-1,-1,-1,1,1), (1,1,-1,-1,1,1,-1,-1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (1,1,1,1,-1,-1,-1,-1), (-1,-1,-1,-1,-1,-1,-1,-1), (1,1,-1,-1,1,-1,-1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (-1,-1,1,1,1,1,1,-1), (1,1,1,1,1,1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (-1,-1,1,1,-1,1,1,-1), (1,1,1,-1,-1,-1,-1,1), (1,1,-1,-1,1,1,-1,-1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (-1,-1,1,1,-1,1,1,-1), (-1,-1,-1,-1,-1,-1,-1,-1), (1,1,-1,-1,1,-1,-1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (-1,-1,1,1,-1,1,1,-1), (1,1,1,-1,-1,-1,-1,1), (1,1,1,1,1,1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (-1,-1,1,1,-1,1,1,-1), (1,1,1,1,1,1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (1,-1,1,1,1,1,-1,-1,-1), (-1,-1,1,1,1,1,1,-1), (1,1,-1,-1,1,-1,-1,1), (1,1,1,1,1,1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (1,-1,1,1,1,1,-1,-1,-1), (-1,-1,1,1,-1,1,1,-1), (-1,-1,-1,-1,-1,-1,-1,-1), (-1,-1,1,1,1,-1,-1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (1,-1,1,1,1,1,-1,-1,-1), (-1,-1,-1,1,1,1,1,-1), (1,1,1,1,-1,-1,-1,-1), (1,1,1,1,1,1,1,1)}, {(-1,1,-1,1,1,-1,-1,1), (-1,1,1,1,1,-1,1,-1,-1), (1,-1,-1,1,1,-1,1,-1), (1,-1,1,1,1,1,-1,-1,-1), (1,-1,1,1,1,1,-1,-1,-1), (-1,-1,-1,-1,-1,-1,-1,-1), (-1,-1,1,1,1,-1,-1,1,1), (-1,-1,1,1,-

1,1,1,-1,1), (-1,-1,-1,-1,-1,-1,-1,-1), (1,1,-1,-1,1,1,-1,-1)}, {(-1,1,-1,1,1,-1,-1,1), (1,-1,-1,-1,1,-1,1,1), (1,-1,-1,1,-1,1,1,-1,1), (1,-1,1,1,1,-1,-1,-1), (-1,-1,-1,1,1,1,1,-1), (-1,-1,1,1,-1,1,1,-1,1), (-1,-1,1,1,-1,-1,1,1), (1,1,1,1,1,1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,1,-1,1,1,1,-1), (-1,-1,1,-1,1,1,-1,-1), (1,1,-1,-1,1,1,-1,-1), (1,1,1,1,1,1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,1,1,1,1,1,-1), (1,1,-1,1,-1,-1,1,-1), (-1,-1,-1,-1,-1,-1,-1,-1), (-1,-1,1,1,1,-1,-1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,-1,1,1,1,1,-1), (1,1,-1,1,-1,-1,1,-1), (-1,-1,-1,-1,-1,-1,-1,-1), (1,1,-1,-1,1,1,-1,-1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,-1,1,1,1,1,-1), (1,1,-1,1,-1,-1,1,-1), (-1,-1,1,1,-1,-1,1,1,1), (1,1,1,1,1,1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,-1,1,1,1,1,-1), (1,1,-1,1,-1,-1,1,-1), (1,1,-1,-1,1,1,-1,-1), (1,1,1,1,1,1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,1,-1,1,1,-1,-1), (1,1,1,-1,-1,-1,-1,1), (-1,-1,-1,-1,-1,-1,-1,-1), (-1,-1,1,1,1,-1,1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,1,-1,1,1,-1,-1), (1,1,1,-1,-1,-1,-1,1), (-1,-1,-1,-1,-1,-1,-1,-1), (1,1,-1,-1,1,1,-1,-1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,1,1,1,1,-1,-1), (1,1,1,1,-1,-1,-1,-1), (1,1,1,1,1,1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,1,1,1,1,-1,-1), (1,1,1,-1,-1,-1,-1,1), (1,1,1,-1,-1,-1,-1,1), (1,1,1,1,1,1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (-1,-1,-1,-1,-1,-1,-1,-1), (-1,-1,1,1,1,-1,-1,1,1)}, {(-1,1,-1,1,1,-1-,1,1), (1,-1,-1,-1,1,-1,1,1), (1,-1,-1,1,-1,1,-1,1), (1,-1,1,1,1,-1,-1,-1), (1,1,-1,1,-1,-1,1,-1), (1,1,1,-1,-1,-1,-1,1), (1,1,1,1,1,1,1,1)}, {(-1,1,-1,1,1,-1,-1,1), (1,-1,-1,-1,1,-1,1,1), (1,-1,-1,1,-1,1,-1,1), (1,-1,1,1,1,-1,-1,-1), (1,1,-1,1,-1,-1,1,-1), (1,1,1,-1,-1,-1,-1,1), (1,1,1,1,1,1,1,1)}, {(-1,1,-1,1,1,-1,-1,1), (1,-1,-1,1,1,-1,1,-1), (1,-1,-1,1,1,-1,1,-1), (1,-1,1,1,1,-1,-1,-1), (-1,-1,-1,-1,1,1,1,1), (-1,-1,1,1,1,1,-1,-1), (-1,-1,-1,-1,-1,-1,-1,-1), (1,1,-1,-1,1,1,-1,-1)}, {(-1,1,-1,1,1,-1,-1,1), (1,-1,-1,1,1,-1,1,-1), (1,-1,-1,1,1,-1,1,-1), (1,-1,1,1,1,-1,-1,-1), (-1,-1,-1,-1,1,1,1,1), (-1,-1,1,1,1,1,-1,-1), (-1,-1,1,-1,1,1,1,-1), (-1,-1,-1,-1,-1,-1,-1,-1), (1,-1,1,1,1,-1,1,1)}, {(-1,1,-1,1,1,1,-1,-1), (-1,1,1,1,1,-1,-1,-1,1), (1,1,-1,-1,-1,1,1,-1), (1,1,1,-1,1,1,-1,-1,-1), (-1,-1,1,1,1,-1,1,1), (-1,-1,1,1,-1,1,1,-1,1), (-1,-1,1,1,-1,-1,1,1), (1,1,1,1,1,1,1,1)}, {(-1,1,-1,1,1,1,-1,-1), (-1,1,1,1,1,-1,-1,-1,1), (1,1,-1,-1,-1,1,1,-1), (1,1,1,-1,1,1,-1,-1,-1), (-1,-1,1,1,1,-1,1,1), (-1,-1,1,1,-1,1,1,-1,1), (-1,-1,-1,-1,-1,-1,-1,-1), (1,-1,1,1,1,-1,1,1)}, {(-1,1,-1,1,1,1,-1,-1), (-1,1,1,1,1,-1,-1,-1,1), (1,1,-1,-1,-1,1,1,-1), (1,1,1,-1,1,1,-1,-1,-1), (-1,-1,1,1,1,-1,1,1), (1,1,1,1,1,1,1,1)}, {(-1,1,-1,1,1,1,-1,-1), (-1,1,1,1,1,-1,-1,-1,1), (1,1,-1,-1,-1,1,1,-1), (1,1,1,-1,1,1,-1,-1,-1), (-1,-1,1,1,1,-1,1,1), (1,1,-1,-1,1,1,-1,-1), (-1,-1,-1,-1,-1,-1,-1,-1), (1,-1,1,1,1,-1,1,1)}, {(-1,1,-1,1,1,1,-1,-1), (-1,1,1,1,1,-1,-1,-1,1), (1,1,-1,-1,-1,1,1,-1), (1,1,1,-1,1,1,-1,-1,-1), (-1,-1,-1,-1,-1,-1,-1,-1), (1,-1,1,1,1,-1,1,1)}, {(-1,1,-1,1,1,1,-1,-1), (-

1,1,1,1,-1,-1,-1,1), (1,1,-1,-1,-1,1,-1,1), (1,1,1,-1,1,-1,-1,-1), (-1,-1,1,-1,1,1,-1,1), (1,-1,1,1,-1,1,-1,-1), (-1,-1,-1,-1,-1,-1,-1,-1), (1,-1,-1,1,1,-1,-1,1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (-1,-1,1,-1,1,1,-1,1), (1,-1,1,1,-1,1,-1,-1), (-1,1,1,-1,-1,1,1,-1), (1,1,1,1,1,1,1,1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (-1,-1,1,-1,1,1,-1,1), (1,-1,1,1,-1,1,-1,-1), (1,-1,-1,1,1,-1,-1,1), (1,1,1,1,1,1,1,1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (-1,1,-1,1,1,-1,1,1), (1,1,-1,1,-1,-1,1,-1), (-1,-1,-1,-1,-1,-1,-1,1), (-1,1,1,-1,1,1,1,-1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (-1,1,-1,1,1,1,-1,1), (1,1,-1,1,-1,-1,1,-1), (-1,-1,-1,-1,-1,-1,-1,-1), (1,-1,-1,1,1,-1,-1,1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (-1,1,-1,-1,1,1,-1,1), (1,1,-1,1,-1,-1,1,-1), (-1,1,1,1,-1,-1,1,-1), (1,1,1,1,1,1,1,1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (-1,1,-1,-1,1,1,-1,1), (1,-1,1,1,-1,1,-1,-1), (1,1,1,1,1,1,1,1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (1,-1,1,1,-1,1,-1,-1), (1,1,-1,1,-1,-1,1,-1), (-1,-1,-1,-1,-1,-1,-1,-1), (-1,1,1,1,-1,1,1,-1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (1,-1,1,1,-1,1,-1,-1), (1,1,-1,1,-1,-1,1,-1), (-1,-1,-1,-1,-1,-1,-1,-1), (1,-1,-1,1,1,-1,-1,1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (-1,1,-1,1,1,-1,1,1), (1,1,-1,1,-1,-1,1,-1), (-1,1,1,1,-1,-1,1,-1), (1,1,1,1,1,1,1,1)}, {(-1,1,-1,1,1,1,-1,-1), (-1,1,1,1,-1,-1,-1,1), (1,1,-1,-1,-1,1,-1,1), (1,1,1,-1,1,-1,-1,-1), (-1,1,-1,1,1,-1,1,1), (1,-1,1,1,-1,1,-1,-1), (1,1,1,1,1,1,1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,1,-1,1,1,-1), (-1,1,1,-1,-1,1,1,-1), (-1,-1,-1,-1,-1,-1,-1,-1), (-1,1,1,1,-1,-1,1,1,-1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,1,-1,1,1,-1), (-1,1,-1,-1,-1,1,-1,1), (-1,-1,-1,-1,-1,-1,-1,-1), (1,-1,-1,1,1,-1,-1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,-1,1), (-1,1,-1,1,-1,-1,1,-1), (-1,1,1,1,-1,-1,1,-1), (1,1,1,1,1,1,1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,-1,1), (-1,1,-1,1,-1,-1,1,-1), (-1,-1,-1,-1,-1,-1,-1,1), (-1,1,1,-1,1,1,1,-1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,-1,1), (1,-1,-1,1,1,-1,-1,1), (1,1,1,1,1,1,1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,-1,1), (-1,1,-1,1,-1,-1,1,-1), (-1,-1,-1,-1,-1,-1,-1,-1), (-1,1,1,1,-1,-1,1,-1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,-1,1), (1,-1,1,1,-1,1,-1,-1), (-1,-1,-1,-1,-1,-1,-1,-1), (-1,1,1,1,-1,-1,1,1,-1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,-1,1), (1,-1,1,1,-1,1,-1,-1), (-1,-1,-1,-1,-1,-1,-1,-1), (1,-1,-1,1,1,-1,-1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,-1,1), (1,-1,1,1,-1,1,-1,-1), (1,1,1,1,1,1,1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,-1,1), (-1,1,1,-1,-1,1,1,-1), (-1,-1,-1,-1,-1,-1,-1,-1), (-1,1,1,1,-1,-1,1,-1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,1,-1,1,1,-1,1,1), (1,1,-1,1,-1,-1,1,-1), (-1,-1,-1,-1,-1,-1,-1,-1), (1,-1,-1,1,1,-1,-1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,1,-1,-1,1,1,-1,1), (1,1,-1,1,-1,-1,1,-1), (-1,-1,-1,-1,-1,-1,-1,-1), (1,-1,-1,1,1,-1,-1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,1,-1,-1,1,1,-1,1), (1,1,-1,1,-1,-1,1,-1), (-1,1,1,1,-1,-1,1,-1), (1,1,1,1,1,1,1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,1,-1,-1,1,1,-1,1), (1,-1,1,1,-1,1,-1,-1), (1,1,1,1,1,1,1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,1,-1,1,1,-1,1,1), (1,1,-1,1,-1,-1,1,-1), (-1,1,1,1,-1,-1,1,-1), (1,1,1,1,1,1,1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,1,-1,1,1,-1,1,1), (1,-1,1,1,-1,1,-1,-1), (1,1,1,1,1,1,1,1)}, {(-1,1,-1,1,1,1,-1,-1), (1,-1,-1,-1,1,1,1,-1), (1,1,-1,-1,-1,1,-1,1), (1,1,1,-1,1,-1,-1,-1), (-1,-1,1,-1,1,1,1,1,1), (-1,1,1,1,-1,-1,1,-1,1,-1), (-1,-1,-1,-1,-1,-1,-1,-1), (1,-1,-1,1,1,-1,-1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,1,1,1,-1,1,-1,-1,1), (1,1,1,1,-1,-1,-1,-1), (-1,-1,-1,-1,-1,-1,-1,-1,1,-1), (-1,-1,1,1,1,-1,-1,-1,-1,1), (1,-1,-1,1,1,-1,-1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,1,1,1,-1,1,-1,-1,1), (1,1,1,1,-1,-1,-1,-1,-1,-1), (-1,1,-1,1,1,-1,-1,-1,1,-1), (1,1,1,1,1,1,1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,1,1,1,-1,1,-1,-1,1), (1,1,1,1,-1,-1,-1,-1,-1), (-1,1,1,1,-1,-1,-1,1,-1), (-1,1,1,1,-1,-1,1,1,-1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,1,1,-1,-1,1,-1), (-1,-1,-1,-1,-1,-1,-1,1,-1), (-1,-1,1,1,1,-1,-1,-1,-1,1), (1,-1,-1,1,1,-1,-1,1,-1,1)}, {(-1,1,-1,1,1,1,-1,-1), (1,-1,1,-1,-1,1,1,1,-1), (1,1,-1,-1,-1,1,-1,1), (1,-1,1,1,1,-1,-1,1,-1,-1), (1,1,-1,1,1,-1,-1,1,-1), (1,-1,1,1,1,-1,1,-1,-1,1), (1,1,1,1,1,1,1,1,1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,1,1,-1,-1,1,-1), (-1,-1,-1,-1,-1,-1,-1,-1,1,-1), (-1,-1,1,1,1,-1,-1,-1,-1,1), (1,-1,-1,1,1,-1,-1,1,-1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,1,1,-1,-1,1,-1,1,-1), (-1,-1,-1,-1,-1,-1,-1,-1,-1), (-1,1,1,1,-1,-1,1,1,-1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,-1,1,-1,-1,1,-1,1,-1), (1,-1,-1,1,1,1,-1,-1,1,-1,1,-1), (1,1,1,1,1,1,1,1,1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,1,1,-1,-1,1,-1), (-1,-1,-1,-1,-1,-1,-1,-1), (-1,1,1,1,-1,-1,1,-1)}, {(-1,1,-1,1,1,1,-1,-1), (1,-1,1,-1,-1,1,1,1,-1), (1,1,-1,-1,-1,1,-1,1), (1,1,1,-1,1,-1,-1,-1), (-1,1,1,1,-1,1,1,-1,-1), (1,1,1,1,-1,-1,-1,-1), (-1,1,1,1,-1,-1,1,-1)}, {(-1,1,-1,1,1,1,-1,-1), (1,-1,1,-1,-1,1,1,1,-1), (1,1,-1,-1,-1,1,-1,1), (1,1,1,-1,1,-1,-1,-1), (-1,1,1,1,-1,-1,1,1,-1), (-1,1,1,1,-1,-1,1,-1), (-1,1,1,1,-1,-1,1,-1), (1,1,1,1,1,1,1,1)}, {(-1,1,-1,1,1,1,-1,-1), (1,-1,1,-1,-1,1,1,1,-1), (1,1,-1,-1,-1,1,-1,1), (1,-1,1,1,1,-1,-1,1,-1,-1), (1,1,-1,1,1,-1,-1,1,-1), (1,-1,1,1,1,-1,1,-1,-1,1), (1,1,1,1,1,1,1,1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,1,1,-1,-1,1,-1,1,-1), (-1,-1,-1,-1,-1,-1,-1,-1,1,-1), (-1,-1,1,1,1,-1,-1,-1,-1,1)}, {(-1,1,-1,1,1,1,-1,-1), (1,-1,1,-1,-1,1,1,1,-1), (1,1,-1,-1,-1,1,-1,1), (1,1,1,-1,1,-1,-1,-1), (-1,-1,-1,-1,1,1,1,1,1), (1,-1,1,1,-1,1,-1,-1), (-1,-1,-1,-1,-1,-1,-1,-1), (1,-1,-1,1,1,-1,-1,1)}, {(-1,1,-1,1,1,1,-1,-1), (1,-1,1,-1,-1,1,1,1,-1), (1,1,-1,-1,-1,1,-1,1), (1,1,1,-1,1,-1,-1,-1), (-1,-1,-1,-1,1,1,1,1,1), (1,-1,-1,1,1,-1,-1,1,-1), (-1,1,-1,1,1,-1,1,-1,1,-1,1,-1), (1,1,1,1,1,1,1,1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (1,-1,-1,1,1,-1,-1,1,-1), (-1,-1,-1,-1,-1,-1,-1,-1), (-1,1,1,1,-1,-1,1,-1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,1,1,1,-1,1,-1,-1,-1), (-1,-1,-1,-1,-1,-1,-1,-1,-1), (-1,1,1,1,-1,-1,1,1,-1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,1,1,-1,-1,1,-1,1,-1), (-1,1,1,1,-1,-1,1,1,-1), (1,1,1,1,1,1,1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,1,1,-1,1,-1,1,-1), (1,-1,-1,1,1,1,-1,-1,1,-1), (-1,1,1,1,-1,-1,1,1,-1), (-1,-1,-1,-1,-1,-1,-1,-1,1,-1,1,-1), (1,1,1,1,1,1,1,1)}, {(-1,1,-1,1,1,1,-1,-1), (1,-1,1,-1,-1,1,1,1,-1), (1,1,-1,-1,-1,1,-1,1), (1,1,-1,-1,1,1,-1,1,-1), (-1,-1,-1,-1,1,1,1,1,1), (-1,1,-1,1,-1,-1,1,-1), (-1,-1,-1,-1,-1,-1,-1,-1,-1), (-1,1,1,1,-1,-1,1,1,-1)}, {(-1,1,-1,1,1,1,-1,-1), (1,-1,1,-1,-1,1,1,1,-1), (1,1,-1,-1,-1,1,-1,1), (1,1,1,-1,1,-1,-1,-1), (-1,-1,-1,-1,1,1,1,1,1), (1,-1,1,1,-1,1,-1,-1,1,-1), (-1,-1,-1,-1,-1,-1,-1,-1,1,-1), (-1,1,1,1,-1,-1,1,1,-1)}, {(-1,1,-1,1,1,1,-1,-1), (1,-1,1,-1,-1,1,1,1,-1,-1), (1,1,1,-1,-1,1,1,-1,1,1,-1), (1,1,1,-1,-1,1,1,-1,1,1,-1), (-1,1,1,1,-1,1,-1,-1,1), (1,1,1,1,1,-1,-1,-1,-1), (-1,-1,1,-1,-

1,-1,-1,-1,-1), (-1,1,1,-1,-1,1,1,-1)}, {(-1,1,-1,1,1,1,-1,-1), (1,-1,1,-1,1,1,-1,-1), (1,1,-1,-1,-1,1,-1,1), (1,1,-1,1,-1,1,1,-1), (-1,1,1,-1,1,-1,-1,1), (1,1,1,1,-1,-1,-1,-1), (-1,-1,-1,-1,-1,-1,-1,-1), (1,-1,-1,1,1,-1,-1,1)}, {(-1,1,-1,1,1,1,-1,-1), (1,-1,1,-1,1,1,-1,-1), (1,1,-1,-1,-1,1,-1,1), (1,1,-1,-1,-1,1,1,-1), (-1,1,1,-1,1,-1,-1,1), (1,1,1,1,-1,-1,-1,-1), (-1,1,1,-1,-1,1,1,-1), (1,1,1,1,1,1,1,1)}, {(-1,1,-1,1,1,1,-1,-1), (1,-1,1,-1,1,1,-1,-1), (1,1,-1,-1,-1,1,-1,1), (1,1,-1,-1,1,-1,1,-1), (-1,1,1,-1,1,-1,-1,1), (1,1,1,1,-1,-1,-1,-1), (1,-1,-1,1,1,-1,-1,1), (1,1,1,1,1,1,1,1)}, {(-1,1,-1,1,1,1,-1,-1), (1,-1,1,-1,1,1,-1,-1), (1,1,-1,-1,-1,1,-1,1), (1,1,-1,-1,-1,1,1,-1), (1,-1,1,1,-1,1,1,-1), (1,1,1,1,-1,-1,-1,-1), (-1,-1,-1,-1,-1,-1,-1,-1), (-1,1,1,1,-1,1,1,-1)}, {(-1,1,-1,1,1,1,-1,-1), (1,-1,1,-1,1,1,-1,-1), (1,1,-1,-1,-1,1,-1,1), (1,1,-1,-1,-1,1,1,-1), (1,-1,-1,1,-1,1,1,-1), (1,1,1,1,-1,-1,-1,-1), (-1,-1,-1,-1,-1,-1,-1,-1), (1,-1,-1,1,1,1,-1,1,1)}, {(-1,1,-1,1,1,1,-1,-1), (1,-1,1,-1,1,1,-1,-1), (1,1,-1,-1,-1,1,-1,1), (1,1,-1,-1,1,-1,1,-1), (1,-1,-1,1,-1,1,1,-1), (1,1,1,1,-1,-1,-1,-1), (-1,-1,1,1,1,-1,-1,1,-1), (1,1,1,1,1,1,1,1)}, {(-1,1,1,-1,-1,1,1,-1), (-1,1,1,1,-1,1,1,-1), (1,-1,1,-1,1,1,1,-1), (1,-1,1,-1,1,-1,1,-1), (-1,-1,-1,-1,1,1,1,1), (-1,-1,1,1,1,1,-1,-1), (-1,-1,-1,-1,-1,-1,-1,-1), (-1,-1,1,1,1,-1,1,1,1)}, {(-1,1,1,1,-1,-1,1,-1,1), (-1,1,1,1,-1,1,-1,1,-1), (1,-1,1,-1,-1,1,1,1,-1), (1,-1,1,-1,1,1,-1,-1,1), (-1,-1,-1,-1,1,1,1,1,1), (-1,-1,1,1,1,1,1,-1,-1), (-1,-1,-1,-1,-1,-1,-1,-1,-1), (1,1,-1,-1,1,1,1,-1,-1,1)}, {(-1,1,1,-1,-1,1,1,-1), (-1,1,1,1,-1,1,1,-1), (1,-1,1,-1,-1,1,1,1,-1), (1,-1,1,-1,1,-1,-1,1), (-1,-1,-1,-1,1,1,1,1,1), (1,1,-1,-1,-1,-1,1,1,-1), (-1,-1,-1,-1,-1,-1,-1,-1,-1), (1,1,-1,-1,-1,-1,-1,-1,-1)}, {(-1,1,1,1,-1,-1,1,-1,1), (-1,1,1,1,-1,1,-1,1,-1), (1,-1,1,-1,-1,1,1,1,-1), (1,-1,1,-1,1,-1,-1,1,1), (-1,-1,-1,-1,1,1,1,1,1), (1,1,-1,-1,-1,-1,1,1,1,-1), (-1,-1,1,1,1,-1,-1,1,1,1), (1,1,1,1,1,1,1,1,1)}, {(-1,1,1,-1,-1,1,1,-1), (-1,1,1,1,-1,1,-1,1,-1), (1,-1,1,-1,-1,1,-1,1), (-1,-1,-1,1,1,1,1,1), (1,1,-1,-1,-1,-1,1,1,-1), (1,1,1,1,1,1,1,1)}, {(-1,1,1,1,-1,-1,1,-1,1), (-1,1,1,1,-1,1,-1,1,-1), (1,-1,1,-1,-1,1,1,1,-1), (1,-1,1,-1,1,-1,-1,1), (-1,-1,-1,-1,1,1,1,1,1), (1,1,1,1,-1,-1,-1,-1,-1), (-1,-1,-1,-1,-1,-1,-1,-1,-1), (-1,-1,1,1,1,-1,1,1,1)}, {(-1,1,1,1,-1,-1,1,-1,1), (-1,1,1,1,-1,1,-1,1,-1), (1,-1,1,-1,-1,1,1,1,-1), (1,-1,1,-1,1,-1,-1,1), (-1,-1,-1,-1,1,1,1,1,1), (1,1,-1,-1,-1,-1,1,1,1,-1), (1,1,1,1,1,1,1,1,1)}, {(-1,1,1,-1,-1,1,1,-1), (-1,1,1,1,-1,1,-1,1,-1), (1,-1,1,-1,-1,1,1,1,-1), (1,-1,1,-1,1,-1,-1,1,1), (-1,-1,-1,-1,1,1,1,1,1), (1,1,1,1,-1,-1,-1,-1,-1), (-1,-1,-1,-1,-1,-1,-1,-1,-1), (1,1,-1,-1,1,1,1,-1,-1,1)}. {(-1,1,1,-1,-1,1,1,-1,1), (-1,1,1,-1,1,1,-1,1,-1), (1,-1,1,-1,-1,1,1,1,-1), (-1,-1,1,1,1,1,1,-1,-1), (1,1,1,1,-1,-1,-1,-1,-1), (-1,-1,1,1,1,-1,-1,1,1,1), (1,1,1,1,1,1,1,1,1)}, {(-1,1,1,-1,-1,1,1,-1,1), (-1,1,1,1,-1,1,1,-1,1,-1), (1,-1,1,-1,-1,1,1,1,-1), (1,-1,1,-1,1,1,-1,-1,1), (-1,-1,1,1,1,1,1,-1,-1,-1), (1,1,1,1,-1,-1,-1,-1,-1), (1,1,-1,-1,1,1,1,-1,-1,1), (1,1,1,1,1,1,1,1,1)}, {(-1,1,1,-1,-1,1,1,-1,1), (-1,1,1,1,-1,1,1,-1,1,-1), (1,-1,1,-1,-1,1,1,1,-1), (1,-1,1,-1,1,-1,-1,1), (-1,-1,-1,-1,1,1,1,1,1), (1,1,1,1,-1,-1,-1,-1,-1), (-1,-1,-1,-1,-1,-1,-1,-1,-1), (-1,-1,1,1,1,-1,1,1,1)}, {(-1,1,1,1,-1,-1,1,-1,1), (-1,1,1,1,-1,1,-1,1,-1), (1,-1,1,-1,-1,1,1,1,-1), (1,-1,1,-1,1,-1,-1,1), (1,1,-1,-1,-1,-1,1,1,1), (1,1,1,1,1,-1,-1,-1,-1), (1,1,-1,-1,1,1,1,-1,-1,-1), (1,1,1,1,1,1,1,1,1)}, {(-1,1,1,-1,-1,1,1,-1), (-1,1,1,1,-1,1,-1,1,-1), (1,-1,1,-1,-1,1,1,1,-1), (1,-1,1,-1,1,-1,-1,1), (-1,-1,1,1,1,1,1,-1,-1), (-1,-1,-1,-1,-1,-1,-1,-1), (-1,-1,1,1,1,-1,1,1,1)}, {(-1,1,1,1,-1,-1,1,-1,1), (-1,1,1,1,-1,1,-1,1,-1), (1,-1,1,-1,-1,1,1,1,-1), (1,-1,1,-1,1,-1,-1,1), (1,1,-1,-1,-1,-1,1,1,1), (-1,-1,1,1,1,1,1,-1,-1,-1), (-1,-1,-1,-1,-1,-1,-1,-1,-1), (-1,-1,1,1,1,-1,-1,1,1,1)}, {(-1,1,1,1,-1,-1,1,-1,1), (1,-1,-1,1,1,-1,1,-1,1), (1,-1,1,-1,1,-1,1,1,1,-1), (1,-1,1,-1,1,-1,1,-1,-1,1), (-1,-1,-1,-1,1,1,1,1,1), (-1,-1,1,1,1,1,1,-1,-1,-1), (-1,-1,-1,-1,-1,-1,-1,-1,-1), (1,1,-1,-1,1,1,1,-1,-1,1)}, {(-1,1,1,1,-1,-1,1,-1,1), (1,-1,-1,1,-1,1,-1,1), (1,-1,1,-1,-1,1,1,1,-1), (1,-1,1,-1,1,-1,-1,1), (-1,-1,1,1,1,1,1,-1,-1,-1), (-1,-1,1,1,1,1,1,-1,-1,-1), (-1,-1,1,1,1,-1,-1,1,1,1), (1,1,1,1,1,1,1,1,1)}, {(-1,1,1,1,-1,-1,1,-1,1), (1,-1,-1,1,1,-1,1,-1,1), (1,-1,1,-1,-1,1,1,1,-1), (1,-1,1,-1,1,-1,-1,1), (-1,-1,-1,-1,1,1,1,1,1), (1,1,1,1,-1,-1,-1,-1,-1), (-1,-1,-1,-1,-1,-1,-1,-1,-1), (1,1,-1,-1,-1,-1,-1,-1)}, {(-1,1,1,-1,-1,1,1,-1,1), (1,-1,-1,1,-1,1,-1,1), (1,-1,1,-1,-1,1,1,1,-1), (1,-1,1,-1,1,-1,-1,1), (-1,-1,-1,-1,1,1,1,1,1), (1,1,1,1,-1,-1,-1,-1,-1), (-1,-1,-1,-1,-1,-1,-1,-1,-1), (1,1,-1,-1,1,1,1,-1,-1,1)}, {(-1,1,1,-1,-1,1,1,-1,1), (1,-1,-1,1,-1,1,-1,1), (1,-1,1,-1,-1,1,1,1,-1), (1,-1,1,-1,1,-1,-1,1), (-1,-1,-1,-1,1,1,1,1,1), (-1,-1,1,1,1,1,1,-1,-1,-1), (-1,-1,-1,-1,-1,-1,-1,-1,-1), (1,1,-1,-1,1,1,1,-1,-1,-1)}, {(-1,1,1,-1,-1,1,1,-1,1), (1,-1,-1,1,-1,1,-1,1), (1,-1,1,-1,-1,1,1,1,-1), (1,-1,1,-1,1,-1,1,-1,-1,1), (-1,-1,1,1,1,1,1,-1,-1,-1), (1,1,1,1,1,-1,-1,-1,-1), (-1,-1,1,1,1,-1,-1,1,1,1), (1,1,1,1,1,1,1,1,1)}, {(-1,1,1,-1,-1,1,1,-1,1), (1,-1,1,1,-1,1,-1,1,-1,1), (1,-1,1,-1,-1,1,1,1,-1), (1,-1,1,-1,1,-1,-1,1), (-1,-1,1,1,1,1,1,-1,-1), (1,1,1,1,1,-1,-1,-1,-1,-1), (1,1,1,1,1,1,1,1,1)}, {(-1,1,1,-1,-1,1,1,-1,1), (1,-1,-1,1,-1,1,-1,1), (1,-1,1,-1,-1,1,1,1,-1), (1,-1,1,-1,1,-1,-1,1), (-1,-1,1,1,1,1,1,-1,-1), (1,1,1,1,1,-1,-1,-1,-1), (1,1,1,1,-1,-1,-1,-1,-1),

1,-1,1), (1,1,-1,-1,-1,-1,1,1), (1,1,1,1,-1,-1,-1,-1), (-1,-1,-1,-1,-1,-1,-1,-1), (-1,-1,1,1,-1,-1,1,1)}, {(-1,1,1,-1,-1,1,1,-1,1), (1,-1,-1,1,-1,1,-1,1,1), (1,-1,1,-1,-1,1,1,-1,1), (1,-1,1,-1,1,-1,-1,1,1), (1,1,-1,-1,-1,-1,1,1), (1,1,1,1,-1,-1,-1,-1), (-1,-1,-1,-1,-1,-1,-1,-1), (1,1,-1,-1,1,1,-1,-1)}. {(-1,1,1,1,-1,-1,1,-1,1), (1,-1,-1,1,-1,1,1,-1,1), (1,-1,1,-1,-1,1,1,1,-1), (1,-1,1,-1,1,-1,-1,1), (1,1,-1,-1,-1,-1,1,1), (1,1,1,1,-1,-1,-1,-1), (-1,-1,1,1,-1,-1,1,1), (1,1,1,1,1,1,1,1)}, {(-1,1,1,1,-1,1,1,-1,1), (1,-1,-1,1,-1,1,1,-1,1), (1,-1,1,-1,-1,1,1,1,-1), (1,-1,1,-1,1,-1,-1,1), (1,1,-1,-1,-1,-1,1,1), (1,1,1,1,-1,-1,-1,-1), (1,1,-1,1,1,1,-1,-1), (1,1,1,1,1,1,1,1)}, {(-1,1,1,1,-1,1,1,-1,1), (1,-1,1,-1,1,-1,-1,1,1), (1,1,-1,1,-1,-1,-1,1), (1,1,1,1,-1,-1,1,1,-1), (-1,1,-1,-1,1,1,-1,1,1), (-1,1,1,1,1,1,-1,-1,-1), (-1,-1,-1,-1,-1,-1,-1,-1), (-1,-1,1,1,1,-1,-1,1,1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (-1,1,1,1,1,1,-1,-1,-1), (-1,-1,-1,-1,-1,-1,-1,-1), (1,1,-1,1,1,1,1,-1,-1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (-1,1,1,1,1,1,-1,-1,-1), (1,1,1,1,1,1,1,1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (-1,1,1,1,1,1,-1,-1,-1), (1,1,-1,1,1,1,1,-1,1), (1,1,1,1,1,1,1,1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,1,-1,1,1,-1,1,1), (1,-1,-1,-1,-1,1,1,1), (-1,-1,-1,-1,-1,-1,-1,-1), (-1,-1,1,1,1,-1,-1,1,1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (1,-1,-1,-1,-1,1,1,1), (-1,-1,-1,-1,-1,-1,-1,-1), (1,1,-1,1,1,1,-1,-1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (1,-1,-1,-1,-1,1,1,1,1), (1,1,-1,1,1,1,1,-1,-1), (1,1,1,1,1,1,1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (1,-1,-1,-1,-1,1,1,1), (1,1,-1,1,1,1,1,-1), (1,1,1,1,1,1,1,1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (1,-1,-1,-1,-1,-1,1,1,1), (-1,-1,-1,-1,-1,-1,-1,-1), (-1,-1,1,1,1,-1,-1,1,1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (1,-1,1,1,-1,1,-1,-1), (-1,-1,-1,-1,-1,-1,-1,-1), (1,1,-1,-1,1,1,1,-1,-1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (1,-1,1,1,-1,1,-1,-1), (-1,-1,1,1,-1,-1,1,1,1), (1,1,1,1,1,1,1,1)}, {(-1,1,1,1,-1,1,1,-1,1), (1,-1,1,-1,1,-1,-1,1), (1,1,-1,1,-1,-1,1), (1,1,1,1,-1,-1,1,1,-1), (-1,1,-1,-1,1,1,-1,1,1), (1,-1,-1,-1,-1,1,1,1), (1,1,1,1,1,1,1,1)}, {(-1,1,1,1,-1,-1,1,1,-1), (-1,1,1,1,1,-1,1,1,-1,-1), (1,-1,1,-1,1,1,1,-1), (1,-1,1,1,1,1,-1,-1,-1), (-1,-1,-1,1,1,1,1,-1), (-1,-1,1,-1,1,1,1,-1,1), (-1,-1,-1,-1,-1,-1,-1,-1), (-1,-1,1,1,1,-1,-1,1,1,1)}, {(-1,1,1,1,-1,1,-1,1,1,-1), (-1,1,1,1,1,-1,1,1,-1,-1), (1,-1,1,1,-1,1,1,1,-1), (1,-1,1,1,1,1,-1,-1,-1), (-1,-1,1,1,1,1,1,-1), (-1,-1,1,-1,1,1,1,-1,1), (-1,-1,-1,-1,-1,-1,-1,-1), (1,1,-1,-1,1,1,1,-1,-1)}, {(-1,1,1,1,-1,1,1,-1,1,-1), (-1,1,1,1,1,-1,1,1,-1,-1), (1,-1,1,1,-1,1,1,1,-1), (1,-1,1,1,1,1,-1,-1,-1), (-1,-1,-1,1,1,1,1,-1), (-1,-1,1,-1,1,1,1,-1,1), (-1,-1,1,1,1,-1,-1,1,1), (1,1,1,1,1,1,1,1,1)}, {(-1,1,1,1,-1,1,1,-1,1,-1), (-1,1,1,1,1,-1,1,1,-1,-1), (1,-1,1,1,-1,1,1,1,-1), (1,-1,1,1,1,1,-1,-1,-1), (-1,-1,-1,1,1,1,1,-1), (-1,-1,1,-1,1,1,1,-1,1), (1,1,1,1,1,1,1,1,1)}, {(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (-1,-1,1,1,1,1,1,-1), (1,1,1,-1,-1,-1,1,1), (-1,-1,-1,-1,-1,-1,-1,-1), (-1,-1,1,1,1,-1,-1,1,1,1)}, {(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (-1,-1,1,1,1,1,1,-1), (1,1,-1,-1,1,1,-1,1,-1,-1), (1,1,1,1,1,1,1,1,1)}, {(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (-1,-1,1,1,1,1,1,-1), (1,1,-1,-1,1,1,-1,1,-1,-1), (-1,-1,1,1,1,-1,-1,1,1), (1,1,1,1,1,1,1,1)}, {(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (-1,-1,1,1,1,1,1,-1), (1,1,1,-1,-1,-1,-1,-1), (-1,-1,1,1,1,-1,-1,1,1), (1,1,1,1,1,1,1,1)}, {(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (-1,-1,1,1,1,1,1,-1), (1,1,1,-1,-1,-1,1,1), (-1,-1,-1,-1,-1,-1,-1,-1), (1,1,-1,-1,1,1,1,-1,-1)}, {(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (-1,-1,1,1,1,1,1,-1), (1,1,-1,-1,-1,-1,-1,-1), (1,1,-1,-1,1,1,1,-1), (1,1,1,1,1,1,1,1,1)}, {(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (-1,-1,1,1,1,1,1,-1), (1,1,1,-1,-1,-1,-1,-1), (-1,-1,1,1,1,-1,-1,1,1,1), (1,1,1,1,1,1,1,1)}, {(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (1,1,-1,1,1,-1,-1,1), (1,1,-1,-1,-1,-1,-1,1), (1,1,1,-1,-1,-1,-1,1), (1,1,-1,-1,1,1,1,-1,-1,)},{(-1,1,1,1,-1,1,-1,1,1,-1), (-1,1,1,1,1,-1,1,-1,1,-1), (1,-1,1,-1,1,1,1,-1), (1,-1,1,1,1,1,-1,-1,-1), (1,1,-1,-1,-1,1,1,-1,1), (1,1,1,-1,-1,-1,1,1), (1,1,-1,-1,1,1,1,-1,-1,-1), (-1,-1,1,1,1,-1,-1,1,1,1)}, {(-1,1,1,1,-1,1,-1,1,-1), (-1,1,1,1,1,-1,1,-1,1,-1), (1,-1,1,-1,1,1,1,-1), (1,-1,1,1,1,1,-1,-1,-1), (1,1,-1,-1,-1,1,1,-1,1), (1,1,-1,-1,-1,-1,-1,-1), (1,1,1,-1,-1,-1,1,1,-1,1), (1,1,1,1,1,1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,-1,1,1,1,1,-1), (1,1,1,-1,-1,-1,-1,1), (1,1,-1,-1,1,1,1,-1,-1), (-1,-1,1,1,1,-1,-1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,-1,1,1,1,1,-1), (-1,-1,1,1,1,-1,-1,1,1), (-1,-1,-1,-1,-1,-1,-1,-1), (1,1,-1,-1,1,1,1,-1,-1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,-1,1,1,1,1,-1), (-1,-1,1,1,1,-1,-1,1,1,1), (1,1,1,1,1,1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,-1,1,1,1,1,-1), (-1,-1,1,1,1,-1,-1,1,1,1), (1,1,1,1,1,1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,-1,1,1,1,1,-1), (1,1,1,-1,-1,-1,1,1), (-1,-1,-1,-1,-1,-1,-1,-1), (-1,-1,1,1,1,-1,-1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,-1,1,1,1,1,-1), (1,1,-1,-1,-1,-1,-1,-1), (1,1,-1,-1,1,1,1,-1), (1,1,1,1,1,1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (1,1,-1,-1,1,1,-1,1), (1,1,-1,-1,-1,-1,-1,-1), (1,1,1,-1,-1,-1,-1,1), (-1,-1,1,1,1,-1,-1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (1,1,-1,-1,1,1,-1,1), (1,1,-1,-1,-1,-1,-1,-1), (1,1,1,-1,-1,-1,-1,1), (1,1,1,1,1,1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,-1,1,1,1,1,-1), (1,1,1,-1,-1,-1,1,1), (-1,-1,-1,-1,-1,-1,-1,-1), (-1,-1,1,1,1,-1,-1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,-1,1,1,1,1,-1), (1,1,1,-1,-1,-1,-1,1), (-1,-1,1,1,1,-1,-1,1,1,1), (1,1,1,1,1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (1,1,-1,-1,-1,1,1,-1,-1), (-1,-1,1,-1,1,1,-1,1), (1,1,1,-1,-1,-1,-1,1,1), (-1,-1,1,1,1,-1,-1,1,1,1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (-1,-1,1,1,1,1,1,-1), (1,1,1,-1,-1,-1,-1,1), (-1,-1,-1,-1,-1,-1,-1,-1), (1,1,-1,-1,1,1,1,-1,-1)}, {(-1,1,1,1,-1,1,-1,1,-1), (-1,1,1,1,1,-1,1,-1,-1,-1), (1,-1,1,-1,1,1,1,-1), (1,-1,1,1,1,1,-1,-1,-1), (1,1,-1,-1,-1,-1,-1,1,1), (-1,-1,1,1,1,1,1,-1,1), (1,1,-1,-1,1,1,1,-1,-1), (1,1,1,1,1,1,1,1,1)}, {(-1,1,1,1,-1,1,-1,1,-1), (-1,1,1,1,1,-1,1,-1,-1), (1,-1,1,-1,1,1,1,-1), (1,-1,1,1,1,1,-1,-1,-1), (1,1,-1,-1,-1,-1,-1,1,1), (-1,-1,1,1,1,1,1,-1,1), (1,1,-1,-1,-1,-1,-1,-1), (-1,-1,1,1,1,-1,-1,1,1,1)}, {(-1,1,1,1,-1,1,-1,1,-1), (-1,1,1,1,1,-1,1,-1,-1), (1,-1,1,-1,1,1,1,-1), (1,-1,1,1,1,1,-1,-1,-1), (1,1,-1,-1,-1,-1,-1,1,1), (-1,-1,1,1,1,1,1,-1,1), (1,1,1,-1,-1,-1,-1,1,1), (-1,-1,-1,-1,-1,-1,-1,-1), (-1,-1,1,1,1,-1,-1,1,1,1)}, {(-1,1,1,1,-1,1,-1,1,-1), (-1,1,1,1,1,-1,1,-1,-1), (1,-1,1,-1,-1,1,1,1,-1), (1,-1,1,1,1,1,-1,-1,-1), (-1,-1,1,1,1,-1,1,1,-1,1), (1,1,1,-1,-1,-1,1,1), (-1,-1,1,1,1,-1,-1,1,1,1), (1,1,1,1,1,1,1,1,1)}, {(-1,1,1,1,-1,1,-1,1,-1), (-1,1,1,1,1,-1,1,-1,-1), (1,-1,1,-1,-1,1,1,1,-1), (1,-1,1,1,1,1,-1,-1,-1), (1,1,-1,-1,-1,-1,1,1,-1), (1,1,1,-1,-1,-1,-1,-1), (1,1,1,-1,-1,-1,-1,1), (-1,-1,1,1,1,-1,-1,1,1,1)}, {(-1,1,1,1,-1,1,-1,1,-1), (-1,1,1,1,1,-1,1,-1,-1), (1,-1,1,-1,-1,1,1,1,-1), (1,-1,1,1,1,1,-1,-1,-1), (-1,-1,-1,1,1,1,1,-1), (1,1,1,-1,-1,-1,-1,1), (-1,-1,1,1,1,-1,-1,1,1,1), (1,1,1,1,1,1,1,1,1)}, {(-1,1,1,1,-1,1,-1,1,-1), (-1,1,1,1,1,-1,1,-1,-1), (1,-1,1,-1,-1,1,1,1,-1), (1,-1,1,1,1,1,-1,-1,-1), (1,1,-1,1,-1,-1,1,1,-1), (1,1,1,-1,-1,-1,-1,-1,-1), (-1,-1,1,1,1,-1,-1,1,1,1)}, {(-1,1,1,1,-1,1,-1,1,-1), (-1,1,1,1,1,-1,1,-1,-1), (1,-1,1,-1,-1,1,1,1,-1), (1,-1,1,1,1,1,-1,-1,-1), (1,1,-1,1,-1,-1,1,1,-1), (1,1,1,-1,-1,-1,-1,1,1), (-1,-1,1,1,1,-1,-1,1,1,1)}, {(-1,1,1,1,-1,1,-1,1,-1), (-1,1,1,1,1,-1,1,-1,-1), (1,-1,1,-1,-1,1,1,1,-1), (1,-1,1,1,1,1,-1,-1,-1), (1,1,-1,1,-1,-1,1,1,-1), (1,1,1,-1,-1,-1,-1,1), (1,1,-1,-1,1,1,1,-1,-1),

(1,1,1,1,1,1,1,1)}, {(-1,1,1,-1,1,1,-1,1,-1), (1,-1,-1,-1,1,-1,1,1,1), (1,-1,1,-1,-1,1,1,-1), (1,-1,1,1,1,1,-1,-1,-1), (-1,-1,-1,1,1,1,1,1,-1), (-1,-1,1,-1,1,1,1,-1,1,1), (-1,-1,-1,-1,-1,-1,-1,-1), (-1,-1,1,1,1,-1,-1,1,1,1)}, {(-1,1,1,1,-1,1,1,-1,1,-1), (1,-1,-1,-1,1,-1,1,1,1), (1,-1,1,1,-1,-1,1,1,-1), (1,-1,1,1,1,1,-1,-1,-1), (-1,-1,-1,1,1,1,1,1,1), (-1,-1,1,1,-1,1,1,1,-1,1), (-1,-1,-1,-1,-1,-1,-1,-1), (1,1,-1,-1,1,1,1,-1,-1)}, {(-1,1,1,1,-1,1,1,-1,1,-1), (1,-1,-1,-1,1,1,-1,1,1), (1,-1,1,1,-1,-1,1,1,-1), (1,-1,1,1,1,1,-1,-1,-1), (-1,-1,-1,1,1,1,1,1,1), (-1,-1,1,1,-1,1,1,1,-1,1), (-1,-1,1,1,1,-1,-1,1,1,1), (1,1,1,1,1,1,1,1)}, {(-1,1,1,1,-1,1,1,-1,1,-1), (1,-1,-1,-1,1,1,-1,1,1,1), (1,-1,1,1,-1,-1,1,1,1,-1), (1,-1,1,1,1,1,-1,-1,-1), (-1,-1,-1,1,1,1,1,1,-1), (-1,-1,1,1,-1,1,1,-1,1), (1,1,-1,-1,1,1,-1,-1), (1,1,1,1,1,1,1,1)}, {(-1,1,1,1,-1,1,1,-1,1,-1), (1,-1,-1,-1,1,1,-1,1,1,1), (1,-1,1,-1,1,1,1,-1,-1,-1), (-1,-1,-1,1,1,1,1,1,-1), (1,1,-1,1,1,-1,-1,1,1,-1), (-1,-1,-1,-1,-1,-1,-1,-1), (-1,-1,1,1,1,-1,-1,1,1,1)}, {(-1,1,1,1,-1,1,1,-1,1,-1), (1,-1,-1,-1,1,1,-1,1,1,1), (1,-1,1,1,-1,-1,1,1,-1), (1,-1,1,1,1,1,-1,-1,-1), (-1,-1,-1,1,1,1,1,1,-1), (1,1,-1,1,-1,-1,1,-1,-1), (-1,-1,-1,-1,-1,-1,-1,-1), (1,1,-1,-1,1,1,1,-1,-1)}, {(-1,1,1,1,-1,1,1,-1,1,-1), (1,-1,-1,-1,1,1,-1,1,1,1), (1,-1,1,1,-1,-1,1,1,-1), (1,-1,1,1,1,1,-1,-1,-1), (-1,-1,-1,1,1,1,1,1,1), (1,1,-1,1,-1,-1,1,1,-1), (-1,-1,1,1,1,-1,-1,1,1,1), (1,1,1,1,1,1,1,1,1)}, {(-1,1,1,1,-1,1,1,-1,1,-1), (1,-1,-1,-1,1,1,-1,1,1,1), (1,-1,1,1,-1,-1,1,1,-1), (1,-1,1,1,1,1,-1,-1,-1), (-1,-1,-1,1,1,1,1,1,-1), (1,1,1,1,-1,-1,1,-1,1), (-1,-1,-1,-1,-1,-1,-1,-1), (-1,-1,1,1,1,-1,-1,1,1,1)}, {(-1,1,1,1,-1,1,1,-1,1,-1), (1,-1,-1,-1,1,1,-1,1,1,1), (1,-1,1,1,-1,-1,1,1,-1), (1,-1,1,1,1,1,-1,-1,-1), (-1,-1,1,1,-1,1,1,1,-1), (1,1,1,1,-1,-1,1,-1,-1), (-1,-1,-1,-1,-1,-1,-1,-1), (1,1,-1,1,-1,-1,1,1,1)}, {(-1,1,1,1,-1,1,1,-1,1,-1), (1,-1,-1,-1,1,1,-1,1,1,1), (1,-1,1,1,-1,-1,1,1,-1), (1,-1,1,1,1,1,-1,-1,-1), (-1,-1,1,1,-1,1,1,1,-1), (1,1,1,1,-1,-1,1,-1,1,1), (-1,-1,1,1,1,-1,-1,1,1,1), (1,1,1,1,1,1,1,1)}, {(-1,1,1,1,-1,1,1,-1,1,-1), (1,-1,-1,-1,1,1,-1,1,1,1), (1,-1,1,1,-1,-1,1,1,-1), (1,-1,1,1,1,1,-1,-1,-1), (-1,-1,-1,1,1,1,1,1,-1), (1,1,1,-1,-1,-1,-1,1,1), (1,1,-1,1,1,-1,1,-1,-1,1,-1), (1,1,1,1,1,1,1,1,1)}, {(-1,1,1,1,-1,1,1,-1,1,-1), (1,-1,-1,-1,1,1,-1,1,1,1), (1,-1,1,1,-1,-1,1,1,-1), (1,-1,1,1,1,1,-1,-1,-1), (1,1,-1,1,-1,-1,1,-1,1), (1,1,1,1,-1,-1,1,-1,1,1), (-1,-1,-1,-1,-1,-1,-1,-1), (-1,-1,1,1,1,-1,-1,1,1,1)}, {(-1,1,1,1,-1,1,1,-1,1,-1), (1,-1,-1,-1,1,1,-1,1,1,1), (1,-1,1,-1,1,1,1,-1,-1,-1), (1,-1,1,1,1,1,-1,-1,-1), (1,1,-1,1,-1,-1,1,-1,-1), (-1,-1,-1,-1,-1,-1,-1,-1), (1,1,-1,-1,1,1,1,-1,-1)}, {(-1,1,1,1,-1,1,1,-1,1,-1), (1,-1,-1,-1,1,-1,1,1,1), (1,-1,1,1,-1,-1,1,1,-1), (1,-1,1,1,1,1,-1,-1,-1), (-1,-1,1,1,1,-1,-1,1,1,1), (1,1,1,1,1,1,1,1,1)}, {(-1,1,1,1,-1,1,1,-1,1,-1), (1,-1,-1,1,1,-1,1,1,-1,-1,1), (1,-1,1,1,-1,-1,1,1,1), (-1,-1,-1,-1,-1,-1,-1,-1), (-1,-1,1,1,1,-1,-1,1,1,1)}, {(-1,1,1,1,-1,1,1,-1,1,-1), (1,-1,-1,1,1,-1,1,1,-1), (1,-1,1,1,-1,-1,1,1,-1), (1,-1,1,1,-1,1,1,-1,-1,1), (-1,-1,1,1,1,1,1,1,-1), (-1,-1,-1,-1,-1,-1,-1,-1), (1,1,-1,-1,1,1,1,-1,-1)}, {(-1,1,1,1,-1,1,1,-1,1,-1), (1,-1,-1,1,1,1,-1,1,1,-1), (1,-1,1,1,-1,-1,1,1,-1), (1,-1,1,1,-1,1,1,-1,-1), (-1,-1,-1,1,1,1,1,1,1), (-1,-1,1,1,1,1,1,-1,-1,1), (1,1,-1,-1,1,1,1,-1,-1), (1,1,1,1,1,1,1,1,1)}, {(-1,1,1,1,-1,1,1,-1,1,-1), (1,-1,-1,1,1,1,-1,1,1,-1), (1,-1,1,1,-1,-1,1,1,-1), (1,-1,1,1,-1,1,1,-1,-1), (-1,-1,-1,1,1,1,1,1,1), (1,1,-1,-1,-1,-1,1,1,1), (-1,-1,-1,-1,-1,-1,-1,-1), (-1,-1,1,1,1,-1,-1,1,1,1)}, {(-1,1,1,1,-1,1,1,-1,1,-1), (1,-1,-1,1,1,1,-1,1,1,-1), (1,-1,1,1,-1,-1,1,1,-1), (1,-1,1,1,-1,1,1,-1,-1), (-1,-1,-1,1,1,1,1,1,1), (1,1,-1,-1,-1,-1,1,1,1), (-1,-1,1,1,1,-1,-1,1,1,1), (1,1,1,1,1,1,1,1)}, {(-1,1,1,1,-1,1,1,-1,1,-1), (1,-1,-1,1,1,1,-1,1,1,-1), (1,-1,1,1,-1,-1,-1,1,1), (-1,-1,-1,1,1,1,1,1,-1), (1,1,1,1,-1,-1,-1,1,1), (-1,-1,-1,-1,-1,-1,-1,-1), (1,1,-1,-1,1,1,1,-1,-1)}, {(-1,1,1,1,-1,1,1,-1,1,-1), (1,-1,-1,1,1,-1,1,1,-1), (1,-1,1,1,-1,-1,1,1,-1), (1,-1,1,1,-1,1,1,-1,-1,1), (-1,-1,-1,1,1,1,1,1,1), (-1,-1,1,1,1,1,1,-1,-1,1), (-1,-1,-1,-1,-1,-1,-1,-1), (-1,1,1,1,-1,-1,1,1,1)}, {(-1,1,1,1,1,-1,-1,-1,1), (1,-1,1,-1,-1,-1,1,1,1), (1,1,1,-1,-1,1,1,-1,-1,1), (1,1,1,-1,1,1,-1,-1,-1), (-1,-1,1,1,-1,1,1,-1,1), (-1,1,1,-1,1,1,1,-1,1,1), (-1,-1,-1,-1,-1,-1,-1,-1), (1,-1,-1,1,1,-1,-1,1,1,1)}, {(-1,1,1,1,1,-1,-1,-1,1), (1,-1,1,1,-1,-1,1,1,1), (1,1,-1,-1,-1,1,1,-1,-1), (1,1,1,-1,1,1,-1,-1,-1), (-1,-1,1,1,-1,1,1,1,-1), (-1,-1,1,-1,1,1,-1,1,1), (-1,-1,1,1,1,-1,-1,1,1,-1), (1,1,1,1,1,1,1,1,1)}, {(-1,1,1,1,1,-1,-1,-1,1), (1,1,1,-1,-1,-1,1,1,1), (1,1,1,-1,-1,1,1,-1,-1), (1,1,1,-1,1,1,-1,-1,-1), (-1,-1,1,1,-1,1,1,1,-1), (-1,1,1,-1,-1,1,1,1,1,-1), (-1,-1,-1,-1,-1,-1,-1,-1), (-1,1,1,1,-1,-1,1,1,-1)}, {(-1,1,1,1,1,-1,-1,-1,1), (1,-1,1,-1,-1,-1,1,1,1), (1,1,1,-1,-1,-1,1,1,-1,-1), (1,1,1,-1,1,1,-1,-1,-1), (-1,-1,1,1,-1,1,1,1,-1,1), (-1,-1,1,-1,1,1,-1,1,1), (-

1,1,-1,-1,1,-1,1,1), (1,-1,-1,1,1,-1,-1,1), (1,1,1,1,1,1,1,1)}, {(-1,1,1,1,-1,-1,-1,1), (1,-1,1,-1,-1,-1,1,1), (1,1,-1,-1,-1,1,-1,1), (1,1,1,-1,1,-1,-1,-1), (-1,-1,1,-1,1,1,-1,1), (1,-1,1,1,-1,1,-1,-1), (-1,-1,-1,-1,-1,-1,-1,-1), (-1,1,1,-1,-1,1,1,-1)}, {(-1,1,1,1,-1,-1,-1,1), (1,-1,1,-1,-1,-1,1,1), (1,1,-1,-1,-1,1,-1,1), (1,1,1,-1,1,-1,-1,-1), (-1,-1,1,-1,1,1,-1,1), (1,-1,1,1,-1,1,-1,-1), (-1,-1,-1,-1,-1,-1,-1,-1), (1,-1,1,1,1,-1,-1,1)}, {(-1,1,1,1,1,-1,-1,-1,1), (1,-1,1,-1,-1,-1,1,1), (1,1,-1,-1,-1,1,-1,1), (1,1,1,-1,1,-1,-1,-1), (-1,-1,1,-1,1,1,-1,1), (1,-1,1,1,-1,1,-1,-1), (-1,1,1,1,-1,1,1,-1), (1,1,1,1,1,1,1,1)}, {(-1,1,1,1,-1,-1,-1,1), (1,-1,1,-1,-1,-1,1,1), (1,1,-1,-1,-1,1,-1,1), (1,1,1,-1,1,-1,-1,-1), (-1,-1,1,-1,1,1,-1,1), (1,-1,1,1,-1,1,-1,1), (1,-1,-1,1,1,-1,-1,1), (1,1,1,1,1,1,1,1)}, {(-1,1,1,1,1,-1,-1,-1,1), (1,-1,1,-1,-1,-1,1,1), (1,1,-1,-1,-1,1,-1,1), (1,1,1,-1,1,-1,-1,-1), (-1,1,1,-1,-1,1,-1,1,1,1), (1,1,-1,-1,1,-1,1,-1), (-1,-1,-1,-1,-1,-1,-1,-1), (-1,1,1,1,-1,-1,1,1,1,-1)}, {(-1,1,1,1,1,-1,-1,-1,1), (1,-1,1,-1,-1,-1,1,1), (1,1,-1,-1,-1,1,-1,1), (1,1,1,-1,1,-1,-1,-1), (-1,1,1,-1,-1,1,-1,1,1,1), (1,1,-1,-1,-1,1,-1,-1), (-1,-1,-1,-1,-1,-1,-1,-1,-1,-1), (1,-1,-1,1,1,-1,-1,1)}, {(-1,1,1,1,1,-1,-1,-1,1), (1,-1,1,-1,-1,-1,1,1), (1,1,-1,-1,-1,1,-1,1), (1,1,1,-1,1,-1,-1,-1), (-1,1,1,-1,-1,1,1,-1,1,1), (1,1,-1,1,-1,-1,1,1,-1), (-1,1,1,1,-1,-1,1,1,1,-1), (1,1,1,1,1,1,1,1)}, {(-1,1,1,1,1,-1,-1,-1,1), (1,-1,1,-1,-1,-1,1,1), (1,1,-1,-1,-1,1,-1,1), (1,1,1,-1,1,-1,-1,-1), (-1,1,1,-1,-1,1,1,-1,1,1), (1,1,-1,1,-1,-1,1,1,-1), (1,-1,1,1,1,-1,1,1), (1,1,1,1,1,1,1,1)}, {(-1,1,1,1,1,-1,-1,-1,1), (1,-1,1,-1,-1,-1,1,1), (1,1,-1,-1,-1,1,-1,1), (1,1,1,-1,1,-1,-1,-1), (1,-1,1,1,1,-1,1,1,-1,1), (1,1,-1,-1,-1,1,-1,-1), (-1,-1,-1,-1,-1,-1,-1,-1,-1,-1), (-1,1,1,1,-1,-1,1,1,1,-1)}, {(-1,1,1,1,1,-1,-1,-1,1), (1,-1,1,-1,-1,-1,1,1), (1,1,-1,-1,-1,1,-1,1), (1,1,1,-1,1,-1,-1,-1), (1,-1,1,1,1,-1,1,1,-1,1), (1,1,-1,-1,-1,1,-1,-1), (1,-1,-1,1,1,-1,-1,1), (1,-1,1,1,1,-1,-1,1)}, {(-1,1,1,1,1,-1,-1,-1,1), (1,-1,1,-1,-1,-1,1,1), (1,1,-1,-1,-1,1,-1,1), (1,1,1,-1,1,-1,-1,-1), (1,-1,1,1,1,-1,1,1,-1,1), (1,1,-1,-1,-1,1,-1,-1,-1,-1), (-1,1,1,1,-1,-1,1,1,1,-1), (1,1,1,1,1,1,1,1)}, {(-1,1,1,1,1,-1,-1,-1,1), (1,-1,1,-1,-1,-1,1,1,-1,1), (1,1,-1,1,-1,1,1,-1,1), (1,1,1,-1,1,-1,-1,-1), (-1,-1,1,1,1,1,1,-1,-1), (-1,1,-1,1,1,1,-1,1,1,-1), (-1,-1,-1,1,-1,-1,1,-1,-1,-1), (-1,1,1,1,1,-1,-1,1,1,1,-1)}, {(-1,1,1,1,1,-1,-1,-1,1), (1,-1,1,1,1,-1,-1,1,1,-1), (1,1,-1,-1,1,1,-1,-1,1,-1), (1,1,1,-1,1,1,-1,-1,1), (-1,-1,1,1,1,1,1,-1,-1,-1), (-1,1,-1,1,1,1,1,-1,1,1,-1), (-1,-1,-1,-1,-1,-1,-1,-1,-1,-1), (1,-1,-1,1,1,1,-1,-1,1,-1,1)}, {(-1,1,1,1,1,-1,-1,-1,1), (1,-1,1,1,1,-1,-1,1,1,-1), (1,1,-1,-1,1,1,-1,-1,1,-1), (1,1,1,-1,1,1,-1,-1,1), (-1,-1,1,1,1,1,1,-1,-1,-1), (-1,1,-1,1,1,1,1,-1,1,1,-1), (-1,-1,1,1,1,1,-1,1,1,-1), (-1,-1,-1,-1,-1,-1,-1,-1,-1,-1), (1,-1,-1,1,1,1,-1,-1,1,-1,1)}, {(-1,1,1,1,1,-1,-1,-1,1), (1,-1,1,1,1,-1,-1,1,1,-1), (1,1,-1,-1,1,1,-1,-1,1,-1), (1,1,1,-1,1,1,-1,-1,1), (-1,-1,1,1,1,1,1,-1,-1,-1), (-1,1,-1,1,1,1,1,-1,1,1,-1), (-1,-1,-1,-1,-1,-1,-1,-1,-1,-1), (1,1,1,1,1,1,1,1)}, {(-1,1,1,1,1,-1,-1,-1,1), (1,-1,1,1,1,-1,-1,1,1,-1), (1,1,-1,1,1,-1,1,1,-1,1), (1,1,1,-1,1,1,-1,-1,1), (-1,-1,1,1,1,1,1,-1,-1,-1), (-1,1,-1,1,1,-1,-1,1,1,-1), (-1,-1,1,-1,-1,-1,-1,-1,-1), (-1,1,1,1,-1,-1,1,1,1,-1)}, {(-1,1,1,1,1,-1,-1,-1,1), (1,-1,1,1,1,-1,-1,1,1,-1), (1,1,-1,1,1,-1,1,1,-1,1), (1,1,1,-1,1,1,-1,-1,1), (-1,-1,1,1,1,1,1,-1,-1,-1), (-1,1,-1,1,1,1,1,-1,1,1,-1), (-1,-1,-1,-1,-1,-1,-1,-1,-1,-1), (-1,1,1,1,-1,-1,1,1,1,-1), (1,1,1,1,1,1,1,1)}, {(-1,1,1,1,1,-1,-1,-1,1), (1,-1,1,1,1,-1,-1,1,1,-1), (1,1,-1,1,1,-1,1,1,-1,1), (1,1,1,-1,1,1,-1,-1,1), (-1,-1,1,1,1,1,1,-1,-1,-1), (1,1,-1,-1,-1,1,-1,-1,1,1), (1,-1,1,1,1,-1,-1,1,1), (1,1,1,1,1,1,1,1)}, {(-1,1,1,1,1,-1,-1,-1,-1,1), (1,-1,1,1,1,-1,-1,1,1,-1), (1,1,-1,1,1,-1,1,1,-1,1), (1,1,1,-1,1,1,-1,-1,1), (-1,-1,1,1,1,1,1,-1,-1,-1), (1,1,-1,-1,-1,1,-1,-1,1,1), (-1,-1,-1,-1,-1,-1,-1,-1,-1,-1), (-1,1,1,1,-1,-1,1,1,1,-1)}, {(-1,1,1,1,1,-1,-1,-1,1), (1,-1,1,1,1,-1,-1,1,1,-1), (1,1,-1,1,1,-1,1,1,-1,1), (1,1,1,-1,1,1,-1,-1,1), (-1,-1,1,1,1,1,1,-1,-1,-1), (1,1,-1,-1,-1,1,-1,-1,1,1), (-1,-1,-1,-1,-1,-1,-1,-1,-1,-1), (1,-1,-1,1,1,-1,-1,1,1), (1,1,1,1,1,1,1,1)}, {(-1,1,1,1,1,-1,-1,-1,-1,1), (1,-1,1,1,1,-1,-1,1,1,-1), (1,1,-1,1,1,-1,1,1,-1,1), (1,1,1,-1,1,1,-1,-1,1), (1,-1,1,1,-1,1,1,-1,-1,1,1), (1,1,-1,-1,-1,1,-1,-1,1,1), (-1,-1,-1,-1,-1,-1,-1,-1,-1,-1), (-1,1,1,1,-1,-1,1,1,1,-1)}, {(-1,1,1,1,1,-1,-1,1,-1,-1), (1,-1,1,1,1,-1,1,1,-1), (1,1,-1,1,1,-1,1,1,-1,1), (1,1,1,-1,1,1,-1,-1,1), (-1,-1,1,1,1,1,1,-1,-1,-1), (-1,1,-1,1,1,-1,1,1,-1,1), (-1,-1,-1,-1,-1,-1,-1,-1,-1,-1), (1,-1,-1,1,1,1,-1,-1,1,-1,1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,1,-1,-1,-1), (-1,-1,1,1,-1,1,1,1,1,-1), (-1,-1,1,1,-1,1,1,-1,1,1), (-1,-1,-1,-1,-1,-1,-1,-1,-1,-1), (-1,-1,1,1,1,-1,-1,1,1,1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,-1,-1,-1), (-1,-1,-1,1,1,1,1,1,-1), (-1,-1,1,-1,-1,1,1,-1,1,1), (-1,-1,-1,-1,-1,-1,-1,-1,-1,-1), (1,1,-1,-1,1,1,1,-1,-1,1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,-1,-1,-1), (-1,-1,1,1,-1,1,1,1,1,-1), (-1,-1,1,-1,-1,1,1,-1,1,1), (1,1,-1,-1,1,1,1,-1,-1,1), (1,1,1,1,1,1,1,1)}, {(-1,1,1,1,1,-1,1,-1,-1,-1), (1,-1,1,1,1,1,-1,-1,1), (1,-1,1,1,-1,1,1,1,-1), (1,-1,1,1,1,1,-1,-1,-1), (-1,-1,1,1,1,1,1,1,-1), (1,1,-1,-1,1,-1,-1,1,1), (-1,-1,-1,-1,-1,-1,-1,-1,-1,-1), (-1,-1,1,1,1,-1,-1,1,1,1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,-1,-1,-1), (-1,-1,1,1,1,1,1,1,-1), (1,1,-1,-1,1,-1,-1,1,1), (-1,-1,-1,-1,-1,-1,-1,-1,-1,-1), (1,1,-1,1,1,1,-1,-1,1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,-1,-1,-1), (-1,-1,1,1,1,1,1,1,-1), (1,1,-1,-1,-1,1,1,-1,1), (-1,-1,-1,-1,-1,-1,-1,-1,-1,-1), (1,1,1,1,1,1,1,1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,-1,-1,-1), (-1,-1,-1,1,1,1,1,1,-1), (-1,-1,1,1,-1,1,1,-1,1,1), (-1,-1,-1,-1,-1,-1,-1,-1,-1), (1,-1,1,-1,1,1,1,-1,1,-1,-1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,-1,-1,-1), (-1,-1,1,1,1,1,1,1,-1), (1,1,-1,-1,-1,1,1,-1,1), (-1,-1,-1,-1,-1,-1,-1,-1,-1,-1), (1,1,-1,1,1,1,-1,-1,1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,-1,-1,-1), (-1,-1,1,1,1,1,1,1,-1), (1,1,-1,-1,1,1,1,-1,-1), (-1,-1,-1,-1,-1,-1,-1,-1,-1,-1), (1,1,1,-1,-1,1,1,1,-1)}, {(-1,1,1,1,1,-1,1,-1,-1,-1), (1,-1,-1,1,1,-1,1,1,-1,1), (1,-1,1,-1,-1,1,1,1,-1), (1,-1,1,1,1,1,-1,-1,-1), (-1,-1,-1,1,1,1,1,1,-1), (-1,-1,1,1,-1,1,1,-1,1,1), (-1,-1,-1,-1,-1,-1,-1,-1,-1,-1), (-1,-1,1,1,1,-1,-1,1,1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,1,1,1,1,1,1,-1), (1,1,-1,-1,1,1,1,-1,-1), (1,-1,1,-1,1,1,1,-1,1,-1,-1), (1,1,1,1,1,1,1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,1,1,1,1,1,1,-1), (1,1,-1,-1,1,1,1,-1,-1,1), (-1,-1,-1,-1,-1,-1,-1,-1,-1,-1), (-1,-1,1,1,1,-1,-1,1,1,1)}, {(-1,1,1,1,1,-1,1,-1,-1,-1), (1,-1,-1,1,1,-1,1,1,-1), (1,-1,1,-1,1,1,1,1,-1), (1,-1,1,1,1,1,-1,-1,-1), (-1,-1,1,1,1,1,1,1,-1), (1,1,-1,-1,-1,1,1,1,1), (-1,-1,-1,-1,-1,-1,-1,-1,-1,-1), (-1,-1,1,1,1,-1,-1,1,1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,1,1,1,1,1,1,-1), (-1,-1,1,1,-1,1,1,-1,1,1), (-1,-1,-1,-1,-1,-1,-1,-1,-1,-1), (1,1,-1,1,1,1,-1,-1,1)}, {(-1,1,1,1,1,-1,1,-1,-1,1), (1,-1,-1,1,1,-1,1,1,-1,1), (1,-1,1,-1,-1,1,1,1,-1,1), (1,-1,1,1,1,1,-1,-1,-1), (-1,-1,1,1,1,1,1,1,-1), (-1,-1,1,-1,1,1,1,-1,1,-1), (-1,-1,1,1,1,-1,-1,1,1,-1), (-1,-1,1,1,1,-1,-1,1,1,1), (1,1,1,1,1,1,1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,1,1,1,1,1,1,-1), (-1,-1,1,-1,1,1,1,-1,1), (-1,-1,-1,-1,-1,-1,-1,-1,-1,-1), (1,1,-1,1,1,1,-1,1,-1)}, {(-1,1,1,1,1,-1,1,-1,-1,-1), (1,-1,-1,1,1,-1,1,1,-1,1), (1,-1,1,-1,-1,1,1,1,-1,1), (1,-1,1,1,1,1,-1,-1,-1), (-1,-1,1,1,1,1,1,1,-1), (1,1,-1,-1,1,1,1,-1,-1), (-1,-1,-1,-1,-1,-1,-1,-1,-1,-1), (1,1,-1,1,1,1,-1,-1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,-1,1,1,1,1,1,-1), (1,1,-1,-1,1,1,1,-1,-1,-1), (-1,-1,1,1,1,-1,-1,1,1,-1), (1,1,1,1,1,1,1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,1,1,1,1,1,1,-1), (-1,-1,-1,1,1,1,1,1,-1), (1,1,-1,-1,1,1,1,-1,-1,1), (1,1,1,1,1,1,1,1)}, {(-1,1,1,1,1,-1,1,-1,-1,-1), (1,-1,-1,1,1,-1,1,1,-1,1), (1,-1,1,-1,-1,1,1,1,-1,1), (1,-1,1,1,1,1,-1,-1,-1), (-1,-1,1,-1,1,1,1,1,1,-1), (-1,-1,1,1,-1,1,1,-1,1,1), (-1,-1,-1,-1,-1,-1,-1,-1,-1,-1), (-1,-1,1,1,1,-1,-1,1,1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,1,1,-1,1,1,1,1,-1), (-1,-1,1,1,-1,1,1,-1,1,1), (1,1,-1,1,1,1,-1,-1,1), (1,1,1,1,1,1,1,1)}, {(-1,1,1,1,1,-1,1,-1,-1,1), (1,-1,-1,1,1,-1,1,1,-1,1), (1,-1,1,-1,-1,1,1,1,-1), (1,-1,1,1,1,1,-1,-1,-1), (-1,-1,1,1,1,1,1,1,-1), (1,1,-1,1,-1,-1,1,1), (-1,-1,-1,-1,-1,-1,-1,-1,-1,-1), (1,1,1,1,1,1,1,1)}, {(-1,1,1,1,1,-1,1,1,-1,-1), (1,-1,-1,1,1,-1,1,1,-1,1), (1,-1,1,-1,-1,1,1,1,-1), (1,-1,1,1,1,1,-1,-1,-1), (-1,-1,1,1,1,1,1,1,-1), (-1,-1,1,1,-1,1,1,-1,1,1), (-1,-1,-1,-1,-1,-1,-1,-1,-1,-1), (1,1,-1,1,1,1,-1,-1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,1,-1,1,1,1,1,1,-1), (-1,-1,1,1,-1,1,1,-1,1,1), (-1,-1,1,1,1,-1,-1,1,1,1)}, {(-1,1,1,1,1,-1,1,-1,-1,-1), (1,-1,-1,1,1,-1,1,1,-1), (1,-1,1,-1,1,1,1,1,-1), (1,-1,1,1,1,1,-1,-1,-1), (-1,-1,1,1,1,1,1,1,-1), (-1,-1,1,-1,-1,-1,-1,-1,-1), (1,1,-1,-1,1,1,1,-1,-1,1)}, {(-1,1,1,1,1,-1,1,-1,-1,-1), (1,-1,-1,1,1,-1,1,1,-1,1), (1,-1,1,-1,1,1,1,1,-1), (1,-1,1,1,1,1,-1,-1,-1), (-1,-1,1,1,1,1,1,1,-1), (-1,-1,-1,-1,-1,-1,-1,-1,-1,-1), (1,1,-1,-1,1,1,1,-1,-1,1)}, {(-1,1,1,1,1,-1,1,-1,-1,1), (1,-1,-1,1,1,-1,1,1,-1,1), (1,-1,1,-1,-1,1,1,1,-1,1), (1,-1,1,1,1,1,-1,-1,-1), (-1,-1,1,1,1,1,1,1,-1), (1,1,-1,-1,1,1,1,-1,-1,1), (-1,-1,1,-1,1,1,1,1,-1), (1,1,1,1,1,1,1,1)}, {(-1,1,1,1,1,-1,1,-1,-1,-1), (1,-1,-1,1,1,-1,1,1,-1,1), (1,-1,1,1,-1,1,1,1,-1), (1,-1,1,1,1,1,-1,-1,-1), (-1,-1,-1,1,1,1,1,1,-1), (-1,-1,1,1,-1,1,1,-1,1,1), (1,1,-1,-1,1,1,1,-1,-1), (1,1,1,1,1,1,1,1)}, {(-1,1,1,1,1,-1,1,-1,-1,-1), (1,-1,-1,1,1,-1,1,1,-1), (1,-1,1,-1,-1,1,1,1,-1), (1,-1,1,1,1,1,-1,-1,-1), (-1,-1,1,1,1,1,1,1,-1), (1,1,-1,-1,-1,1,1,-1,1), (-1,-1,-1,-1,-1,-1,-1,-1,-1,-1), (1,1,-1,-1,1,1,1,-1,-1,1)}, {(-1,1,1,1,1,-1,1,-1,-1), (1,-1,-1,1,1,-1,1,1,-1), (1,-1,1,-1,-1,1,1,1,-1), (1,-1,1,1,1,1,-1,-1,-1), (-1,-1,1,1,1,1,1,1,-1), (1,1,-

1,-1,1,1,-1), (1,-1,1,1,1,-1,-1,-1), (-1,-1,-1,1,1,1,1,1,-1), (1,1,-1,1,-1,-1,1,-1), (1,1,-1,-1,1,1,-1,-1), (1,1,1,1,1,1,1,1)}, {(-1,1,1,1,-1,1,-1,-1), (1,-1,-1,1,-1,1,-1,1,1), (1,-1,1,-1,-1,1,1,-1), (1,-1,1,1,1,-1,-1,-1), (-1,-1,1,1,-1,1,1,-1,1), (1,1,1,-1,-1,-1,-1,1), (-1,-1,-1,-1,-1,-1,-1,-1), (-1,-1,1,1,-1,-1,1,1)}, {(-1,1,1,1,-1,1,-1,-1), (1,-1,-1,1,-1,1,-1,1), (1,-1,1,1,-1,1,1,1,-1), (1,-1,1,1,1,-1,-1,-1), (-1,-1,1,1,-1,1,1,-1,1), (1,1,1,-1,-1,-1,-1,-1), (-1,-1,-1,-1,-1,-1,-1,-1), (1,1,-1,-1,1,1,1,-1,-1)}, {(-1,1,1,1,1,-1,1,-1,-1), (1,-1,-1,1,1,-1,1,-1,1), (1,-1,1,1,-1,-1,1,1,1,-1), (1,-1,1,1,1,-1,-1,-1), (-1,-1,1,1,1,-1,-1,1,1), (1,1,1,-1,-1,-1,-1,1), (-1,-1,1,1,1,-1,-1,1,1,1), (1,1,1,1,1,1,1,1)}, {(-1,1,1,1,-1,1,-1,-1), (1,-1,-1,1,1,-1,1,-1,1), (1,-1,1,1,-1,-1,1,1,1,-1), (1,-1,1,1,1,-1,-1,-1), (-1,-1,1,1,-1,1,1,-1,1), (1,1,1,-1,-1,-1,-1,1), (1,1,-1,-1,1,1,1,-1,-1), (1,1,1,1,1,1,1,1)}, {(-1,1,1,1,-1,1,-1,-1), (1,-1,1,1,1,-1,-1,1), (1,-1,1,-1,-1,1,1,1,-1), (1,-1,1,1,1,-1,-1,-1), (1,1,-1,1,-1,-1,1,-1), (1,1,1,-1,-1,-1,-1,1), (-1,-1,-1,-1,-1,-1,-1,-1), (-1,-1,1,1,1,-1,-1,1,1,1)}, {(-1,1,1,1,-1,1,-1,-1), (1,-1,-1,1,-1,1,-1,1), (1,-1,1,-1,-1,1,1,1,-1), (1,-1,1,1,1,-1,-1,-1), (1,1,-1,1,-1,-1,1,-1), (1,1,1,-1,-1,-1,-1,-1), (-1,-1,-1,-1,-1,-1,-1,-1), (1,1,-1,-1,1,1,1,-1,-1)}, {(-1,1,1,1,-1,1,-1,-1), (1,-1,-1,1,-1,1,-1,1,1), (1,-1,1,-1,-1,1,1,1,-1), (1,-1,1,1,1,-1,-1,-1), (1,1,-1,1,-1,-1,1,-1), (1,1,1,-1,-1,-1,-1,1), (-1,-1,1,1,-1,-1,1,1,1), (1,1,1,1,1,1,1,1)}, {(-1,1,1,1,-1,1,-1,-1), (1,-1,-1,1,-1,1,-1,1), (1,-1,1,-1,-1,1,1,1,-1), (1,-1,1,1,1,-1,-1,-1), (1,1,-1,1,-1,-1,1,-1), (1,1,1,-1,-1,-1,-1,1), (1,1,-1,-1,1,1,1,-1,-1), (1,1,1,1,1,1,1,1)}, {(-1,1,1,1,1,-1,1,-1,-1), (1,-1,1,1,1,1,-1,-1,-1), (1,1,-1,1,-1,-1,-1,1), (1,1,1,-1,-1,-1,-1,1,1), (-1,1,1,-1,1,1,1,-1,1,-1), (-1,1,1,1,-1,1,1,-1,-1,1), (-1,-1,-1,-1,-1,-1,-1,-1), (-1,-1,1,1,1,-1,-1,1,1,1)}, {(-1,1,1,1,1,-1,1,-1,-1), (1,-1,1,1,1,1,-1,-1,-1), (1,1,-1,1,-1,-1,-1,1,1), (1,1,1,-1,-1,-1,-1,1,1), (-1,1,1,-1,1,1,1,-1,1,-1), (1,-1,-1,1,-1,1,1,1,-1), (-1,-1,-1,-1,-1,-1,-1,-1), (1,1,-1,-1,1,1,1,-1,-1)}, {(-1,1,1,1,1,-1,1,-1,-1), (1,-1,1,1,1,1,-1,-1,-1), (1,1,-1,1,-1,-1,-1,1,1), (1,1,1,-1,-1,-1,-1,1,1), (-1,1,1,-1,1,1,1,-1,1,-1), (-1,1,1,1,-1,1,1,-1,-1,1), (-1,-1,1,1,1,-1,-1,1,1,1), (1,1,1,1,1,1,1,1)}, {(-1,1,1,1,1,-1,1,-1,-1), (1,-1,1,1,1,1,-1,-1,-1), (1,1,-1,1,-1,-1,-1,1,1), (1,1,1,-1,-1,-1,-1,1,1), (-1,1,1,-1,1,1,1,-1,1,-1), (1,-1,-1,1,-1,1,1,1,-1), (1,1,1,1,1,1,1,1)}, {(-1,1,1,1,1,-1,1,-1,-1), (1,-1,1,1,1,1,-1,-1,-1), (1,1,-1,1,-1,-1,1,-1,1), (1,1,1,-1,-1,-1,1,1,-1), (-1,1,1,1,-1,1,1,-1,-1,1), (1,-1,1,1,-1,-1,1,1,1,-1), (-1,-1,-1,-1,-1,-1,-1,-1), (1,1,-1,-1,1,1,1,-1,-1)}, {(-1,1,1,1,1,-1,1,-1,-1), (1,-1,1,1,1,1,-1,-1,-1), (1,1,-1,1,-1,-1,1,-1,1), (1,1,1,-1,-1,-1,1,1,-1), (-1,1,1,1,-1,1,1,-1,-1,1), (-1,1,1,1,-1,1,1,-1,-1,1), (1,1,1,1,1,1,1,1)}, {(-1,1,1,1,1,-1,1,-1,-1), (1,-1,1,1,1,1,-1,-1,-1), (1,1,-1,1,-1,-1,-1,1,1), (1,1,1,-1,-1,-1,1,1,-1), (-1,1,1,1,-1,1,1,-1,-1,1), (1,-1,-1,1,-1,1,1,1,-1), (-1,-1,1,1,1,-1,-1,1,1,1), (1,1,1,1,1,1,1,1)}, {(-1,1,1,1,1,-1,1,-1,-1), (1,-1,1,1,1,1,-1,-1,-1), (1,1,-1,1,-1,-1,1,-1,1), (1,1,1,-1,-1,-1,1,1,-1), (-1,1,1,1,-1,1,1,-1,-1,1), (1,-1,-1,1,-1,1,1,1,-1), (1,1,-1,-1,1,1,1,-1,-1), (1,1,1,1,1,1,1,1)}, {(-1,1,1,1,1,-1,1,-1,-1), (1,-1,1,1,1,1,-1,-1,-1), (1,1,-1,1,-1,-1,-1,1,1), (1,1,1,-1,-1,-1,1,1,-1), (-1,1,1,1,-1,1,1,-1,-1,1), (1,-1,1,1,-1,-1,1,1,1,-1), (-1,-1,-1,-1,-1,-1,-1,-1), (1,1,-1,-1,1,1,1,-1,-1)}, {(-1,1,1,1,1,-1,1,-1,-1), (1,-1,1,1,1,1,-1,-1,-1), (1,1,-1,1,-1,-1,-1,1,1), (1,1,1,-1,-1,-1,1,1,-1), (-1,1,1,1,-1,1,1,-1,-1,1), (-1,1,1,1,-1,1,1,-1,-1,1), (1,1,1,1,1,1,1,1)}, {(-1,1,1,1,1,-1,1,-1,-1), (1,-1,1,1,1,1,-1,-1,-1), (1,1,-1,1,-1,-1,1,-1,1), (1,1,1,-1,-1,-1,-1,1,1), (-1,1,1,1,-1,1,1,-1,-1,1), (1,-1,1,1,-1,-1,1,1,1,-1), (-1,-1,-1,-1,-1,-1,-1,-1), (1,1,-1,-1,1,1,1,-1,-1)}, {(-1,1,1,1,1,-1,1,-1,-1), (1,-1,1,1,1,1,-1,-1,-1), (1,1,-1,1,-1,-1,1,-1,1), (1,1,1,-1,-1,-1,-1,1,1), (-1,1,1,1,-1,1,1,-1,-1,1), (-1,1,1,1,-1,1,1,-1,-1,1), (1,1,1,1,1,1,1,1)}, {(1,-1,-1,-1,1,-1,1,1,1), (1,-1,-1,1,-1,1,1,-1,1), (1,-1,1,1,-1,1,1,1,-1), (1,-1,1,1,1,1,-1,-1,-1), (-1,-1,-1,1,1,1,1,1,-1), (-1,-1,1,-1,1,1,-1,-1,1), (-1,-1,-1,-1,-1,-1,-1,-1), (-1,-1,1,1,1,-1,1,1,1)}, {(1,-1,-1,-1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,1,1,1,-1), (-1,-1,1,-1,1,1,1,-1,1), (-1,-1,-1,-1,-1,-1,-1,-1), (1,1,-1,-1,1,1,1,-1,-1)}, {(1,-1,-1,-1,1,-1,1,1,1), (1,-1,-1,1,-1,1,1,-1,1), (1,-1,1,1,-1,-1,1,1,1,-1), (1,-1,1,1,1,1,-1,-1,-1), (-1,-1,1,1,1,1,1,-1), (-1,-1,1,1,1,-1,1,1,-1,1), (-1,1,1,1,-1,-1,1,1,-1,-1,1), (1,1,1,1,1,1,1,1)}, {(1,-1,-1,-1,1,-1,1,1,1), (1,-1,-1,1,-1,1,1,-1,1), (1,-1,1,-1,-1,1,1,1,-1), (1,-1,1,1,1,1,-1,-1,-1), (-1,-1,-1,1,1,1,1,1,-1), (1,1,-1,1,-1,-1,1,-1), (-1,-1,-1,-1,-1,-1,-1,-1), (1,1,-1,-1,1,1,1,-1,-1)}, {(1,-1,-1,-1,1,-1,1,1,1), (1,-1,-1,1,-1,1,1,-1,1), (1,-1,1,1,-1,-1,1,1,1,-1), (1,-1,1,1,1,1,-1,-1,-1), (-1,-1,-1,1,1,1,1,1,-1), (1,1,1,-1,-1,-1,-1,1,1), (-1,-1,-1,-1,-1,-1,-1,-1), (-1,-1,1,1,1,-1,1,1,1)}, {(1,-1,-1,-1,1,1,-1,1,1,1), (1,-1,-1,1,1,-1,1,1,-1,1), (1,-1,1,-1,-1,1,1,1,-1), (1,-1,1,1,1,1,-1,-1,-1), (-1,-1,-1,1,1,1,1,1,-1), (1,1,-1,1,-1,-1,1,-1), (-1,-1,1,1,1,-1,1,1,1), (1,1,1,1,1,1,1,1)}, {(1,-1,-1,-1,1,1,-1,1,1,1), (1,-1,-1,1,1,-1,1,1,-1,1), (1,-1,1,-1,-1,1,1,1,-1), (1,-1,1,1,1,1,-1,-1,-1), (-1,-1,1,1,1,1,1,-1), (1,1,-1,1,-1,-1,1,-1), (1,1,-1,1,-1,-1,1,-1), (1,1,1,1,1,1,1,1)}, {(1,-1,-1,-1,1,1,-1,1,1,1), (1,-1,-1,1,1,-1,1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,-1,1,1), (-1,-1,-1,-1,-1,-1,-1,-1), (-1,-1,1,1,1,-1,1,1,1)}, {(1,-1,-1,-1,1,1,-1,1,1,1), (1,-1,-1,1,1,-1,1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,-1,1,1), (1,1,-1,1,-1,-1,1,-1), (1,1,1,1,1,1,1,1)}, {(1,-1,-1,-1,1,1,-1,1,1,1), (1,-1,-1,1,1,-1,1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,-1,1), (1,1,1,1,1,1,1,1)}, {(1,-1,-1,-1,1,1,-1,1,1,1), (1,-1,-1,1,1,-1,1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,-1,1,1), (-1,-1,-1,-1,-1,-1,-1,-1), (-1,-1,1,1,1,-1,1,1,1)}, {(1,-1,-1,-1,1,1,-1,1,1,1), (1,-1,-1,1,1,-1,1,1,-1,1), (1,-1,1,-1,-1,1,1,1,-1), (1,-1,1,1,1,1,-1,-1,-1), (1,-1,1,1,1,1,-1,-1,-1), (-1,-1,1,1,1,-1,-1,1,1,1), (1,1,1,1,1,1,1,1)}, {(1,-1,-1,-1,1,1,-1,1,1,1), (1,-1,-1,1,1,-1,1,-1,1), (1,-1,1,1,-1,-1,1,1,1,-1), (1,-1,1,1,1,1,-1,-1,-1), (-1,-1,1,1,-1,1,1,1,-1), (1,1,1,-1,-1,-1,-1,1,1), (-1,-1,-1,-1,-1,-1,-1,-1), (-1,-1,1,1,1,-1,1,1,1)}, {(1,-1,-1,-1,1,1,-1,1,1,1), (1,-1,-1,1,1,-1,1,-1,1), (1,-1,1,-1,-1,1,1,1,-1), (1,-1,1,1,1,1,-1,-1,-1), (-1,-1,1,1,1,1,1,-1), (1,1,1,-1,-1,-1,-1,1,1), (1,1,-1,1,-1,-1,1,-1), (1,1,1,1,1,1,1,1)}, {(1,-1,-1,-1,1,1,-1,1,1,1), (1,-1,-1,1,1,-1,1,-1,1), (1,-1,1,-1,-1,1,1,1,-1), (1,-1,1,1,1,1,-1,-1,-1), (1,-1,1,1,1,1,-1,-1,-1), (-1,-1,1,1,-1,1,1,1,-1), (1,1,1,-1,-1,-1,-1,1,1), (1,1,-1,-1,1,1,1,-1,-1), (1,1,1,1,1,1,1,1)}, {(1,-1,-1,-1,1,1,-1,1,1,1), (1,-1,-1,1,1,-1,1,-1,1), (1,-1,1,-1,-1,1,1,1,-1), (1,-1,1,1,1,1,-1,-1,-1),
1,1,-1), (1,-1,1,1,1,1,-1,-1,-1), (-1,-1,1,1,-1,1,1,-1,1), (1,1,1,-1,-1,-1,-1,1,1), (-1,-1,1,-1,-1,-1,-1,-1,-1), (-1,-1,1,1,1,-1,1,1,1)}, {(1,-1,-1,-1,1,1,-1,1,1,1), (1,-1,-1,1,1,-1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,-1,1,1), (-1,-1,-1,-1,-1,-1,-1,-1), (1,1,-1,-1,1,1,1,-1,-1)}, {(1,-1,-1,-1,1,1,-1,1,1,1), (1,-1,-1,1,1,-1,1,-1,1), (1,-1,1,1,-1,-1,1,1,1,-1), (1,-1,1,1,1,1,-1,-1,-1), (-1,-1,1,1,-1,1,1,1,-1), (1,1,-1,1,-1,-1,1,-1), (1,1,1,1,1,1,1,1)}, {(1,-1,-1,-1,1,1,-1,1,1,1), (1,-1,-1,1,1,-1,1,-1,1), (1,-1,1,1,-1,-1,1,1,1,-1), (1,-1,1,1,1,1,-1,-1,-1), (-1,-1,1,1,1,1,1,-1), (1,1,-1,1,-1,-1,1,-1), (1,1,1,1,1,1,1,1)}, {(1,-1,-1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,1,1,1,-1), (1,1,-1,1,-1,-1,1,-1), (1,1,-1,-1,1,1,1,-1,-1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,1,1,1,-1), (1,1,1,-1,-1,-1,1,-1), (1,1,1,1,1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,1,1,1,-1), (1,1,-1,1,-1,-1,1,-1), (-1,-1,-1,-1,-1,-1,-1,-1), (-1,-1,1,1,1,-1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (1,-1,1,1,1,1,-1,-1,-1), (-1,-1,1,1,-1,1,1,1,-1), (1,1,-1,1,-1,-1,1,-1,1), (1,1,-1,-1,1,1,1,-1,-1), (1,1,1,1,1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,1,1,1,-1), (1,1,1,-1,-1,-1,1,1,-1), (-1,-1,-1,-1,-1,-1,-1,-1), (-1,-1,1,1,1,-1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,1,1,1,-1,-1), (1,1,1,1,1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,1,1,-1), (-1,-1,-1,-1,-1,-1,-1,-1), (-1,-1,1,1,1,-1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,-1,1,1), (-1,-1,-1,-1,-1,-1,-1,-1), (-1,-1,1,1,1,-1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,-1,1,1), (1,1,-1,1,-1,-1,1,-1), (1,1,1,1,1,1,1,1)}, {(1,-1,-1,-1,1,1,-1,1,1,1), (1,-1,-1,1,-1,1,1,-1,1), (1,-1,1,1,-1,-1,1,1,1,-1), (1,-1,1,1,1,1,-1,-1,-1), (-1,-1,1,1,1,1,1,-1,-1), (1,1,1,1,1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,-1,1,1,1,-1), (1,1,1,-1,-1,-1,-1,1,1), (-1,-1,-1,-1,-1,-1,-1,-1), (-1,-1,1,1,1,-1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,1,1,1,-1), (1,1,1,-1,-1,-1,-1,1,1), (-1,-1,1,-1,-1,-1,-1,-1,-1), (-1,-1,1,1,1,-1,1,1,1)}, {(1,-1,-1,-1,1,1,-1,1,1,1), (1,-1,-1,1,-1,1,1,-1,1), (1,-1,1,-1,-1,1,1,1,-1), (1,-1,1,1,1,1,-1,-1,-1), (-1,-1,1,1,1,1,1,-1), (-1,-1,1,-1,1,1,-1,-1,1)}

(1,1,1,1,1,1,1,1)}, {(1,-1,-1,-1,1,-1,1,1), (1,-1,-1,1,-1,1,-1,1), (1,-1,1,1,-1,-1,1,1,-1), (1,-1,1,1,1,-1,-1,-1), (-1,-1,1,-1,1,1,-1,1), (1,1,1,-1,-1,-1,1,1), (1,1,-1,1,1,1,-1,-1), (1,1,1,1,1,1,1,1)}, {(1,-1,-1,-1,1,-1,1,1), (1,-1,-1,1,-1,1,-1,1), (1,-1,1,-1,1,1,1,-1), (1,-1,1,1,1,-1,-1,-1), (1,1,-1,1,-1,-1,1,-1), (1,1,1,-1,-1,-1,1,-1,1), (-1,-1,-1,1,-1,-1,-1,-1), (-1,-1,1,1,-1,-1,1,1,1)}, {(1,-1,-1,-1,1,-1,1,1), (1,-1,-1,1,-1,1,-1,1), (1,-1,1,-1,1,1,1,-1), (1,-1,1,1,1,-1,-1,-1), (1,1,-1,1,-1,-1,1,1,-1), (1,1,1,-1,-1,-1,1,1), (-1,-1,-1,-1,-1,-1,-1,-1), (1,1,-1,1,1,1,1,-1,-1)}, {(1,-1,-1,-1,1,-1,1,1), (1,-1,-1,1,-1,1,-1,1), (1,-1,1,-1,1,1,1,-1), (1,-1,1,1,1,1,-1,-1,-1), (1,1,-1,1,1,-1,-1,1,1,-1), (1,1,1,-1,-1,-1,-1,1), (-1,-1,1,1,-1,-1,1,1), (1,1,1,1,1,1,1,1)}, {(1,-1,-1,-1,1,-1,1,1), (1,-1,-1,1,1,-1,1,1,-1,1), (1,-1,1,-1,1,1,1,1,-1), (1,-1,1,1,1,1,-1,-1,-1), (1,1,-1,1,-1,-1,1,1,-1), (1,1,1,-1,-1,-1,1,1), (1,1,-1,1,1,1,1,1,-1,-1), (1,1,1,1,1,1,1,1,1)}, {(1,-1,-1,-1,1,-1,1,1), (1,-1,1,1,1,-1,-1,-1), (1,1,-1,1,-1,-1,1,1,-1), (1,1,1,-1,-1,-1,1,1,-1), (-1,1,1,-1,1,1,-1,1,-1), (-1,1,1,1,-1,1,-1,-1,1), (-1,-1,-1,-1,-1,-1,-1,-1), (-1,-1,1,1,-1,-1,1,1,1)}, {(1,-1,-1,-1,1,-1,1,1), (1,-1,1,1,1,-1,-1,-1), (1,1,-1,1,-1,-1,1,1,-1), (1,1,1,-1,-1,-1,1,1,-1), (-1,-1,1,-1,1,1,-1,1,-1), (-1,-1,1,1,-1,1,-1,-1,1), (-1,-1,-1,-1,-1,-1,-1,-1), (1,1,-1,1,1,1,-1,-1,1)}, {(1,-1,-1,-1,1,-1,1,1), (1,-1,1,1,1,1,-1,-1,-1), (1,1,-1,1,-1,-1,1,1,-1), (1,1,1,-1,-1,-1,1,1,-1), (-1,-1,1,1,1,-1,-1,1,-1), (-1,1,1,1,-1,1,-1,-1,1), (-1,-1,1,1,-1,-1,1,1,1), (1,1,1,1,1,1,1,1,1)}, {(1,-1,-1,-1,1,-1,1,1), (1,-1,1,1,1,1,-1,-1,-1), (1,1,-1,1,-1,-1,1,1,-1), (1,1,1,-1,-1,-1,1,1,-1), (-1,-1,1,1,1,-1,-1,1,-1), (1,1,-1,1,-1,1,1,1,-1), (1,1,1,1,1,1,1,1,1)}, {(1,-1,-1,-1,1,-1,1,1), (1,-1,1,1,1,1,-1,-1,-1), (1,1,-1,1,-1,-1,1,1,-1), (1,1,1,-1,-1,-1,1,1,-1), (-1,-1,1,1,1,-1,-1,1,-1), (1,-1,-1,1,-1,1,1,1,-1), (-1,-1,-1,-1,-1,-1,-1,-1,-1), (-1,-1,1,1,1,-1,-1,1,1,1)}, {(1,-1,-1,-1,1,-1,1,1), (1,-1,1,1,1,1,-1,-1,-1), (1,1,-1,1,-1,-1,1,1,-1), (1,1,1,-1,-1,-1,1,1,-1), (-1,-1,1,1,1,-1,-1,1,-1), (1,-1,-1,1,-1,1,1,1,-1), (-1,-1,-1,-1,-1,-1,-1,-1,-1), (1,1,-1,1,1,1,-1,-1,1)}, {(1,-1,-1,-1,1,-1,1,1), (1,-1,1,1,1,1,-1,-1,-1), (1,1,-1,1,-1,-1,1,1,-1), (1,1,1,-1,-1,-1,1,1,-1), (-1,-1,1,1,1,-1,-1,1,-1), (1,-1,-1,1,-1,1,1,1,-1), (-1,-1,1,1,-1,-1,1,1,1), (1,1,1,1,1,1,1,1,1)}, {(1,-1,-1,-1,1,-1,1,1), (1,-1,1,1,1,1,-1,-1,-1), (1,1,-1,1,-1,-1,1,1,-1), (-1,-1,1,1,1,-1,-1,1,-1), (1,-1,-1,1,-1,1,1,1,-1), (1,1,1,-1,-1,1,1,1,-1), (1,1,1,1,1,1,1,1,1)}, {(1,-1,-1,-1,1,-1,1,1), (1,-1,1,1,1,1,-1,-1,-1), (1,1,-1,1,-1,-1,1,1,-1), (1,1,1,-1,-1,-1,1,1,-1), (-1,1,1,1,-1,1,-1,-1,1), (1,-1,-1,1,-1,1,1,1,-1), (-1,-1,1,1,-1,-1,1,1,1), (1,1,1,1,1,1,1,1,1)}, {(1,-1,-1,-1,1,-1,1,1), (1,-1,1,1,1,1,-1,-1,-1), (1,1,-1,1,-1,-1,1,1,-1), (1,1,1,-1,-1,-1,1,1,-1), (-1,1,1,1,-1,1,-1,-1,1), (1,-1,-1,1,-1,1,1,1,-1), (-1,-1,-1,-1,-1,-1,-1,-1,-1), (1,1,-1,1,1,1,-1,-1,1)}, {(1,-1,-1,-1,1,-1,1,1), (1,-1,1,1,1,1,-1,-1,-1), (1,1,-1,1,-1,-1,1,1,-1), (1,1,1,-1,-1,-1,1,1,-1), (-1,1,1,1,-1,1,-1,-1,1), (1,-1,-1,1,-1,1,1,1,-1), (-1,-1,1,1,-1,-1,1,1,1), (1,1,1,1,1,1,1,1,1)}, {(1,-1,-1,-1,1,1,1,-1), (1,-1,1,-1,-1,1,1), (1,1,-1,1,-1,1,-1,1), (1,1,1,-1,1,-1,-1,-1), (-1,-1,1,-1,1,1,-1,1), (-1,-1,-1,-1,1,1,-1,1,1), (-1,-1,1,-1,-1,-1,-1), (-1,1,1,1,-1,-1,1,1,-1)}, {(1,-1,-1,-1,1,1,1,1,-1), (1,-1,1,-1,-1,-1,1,1,1), (1,1,-1,-1,-1,1,1,-1), (1,1,1,-1,1,-1,-1,1,-1), (-1,-1,1,1,-1,1,1,-1,1), (-1,-1,1,-1,1,1,-1,1,-1), (-1,-1,-1,-1,-1,-1,-1,-1,-1), (1,-1,-1,1,1,1,-1,-1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,-1), (-1,-1,1,1,-1,-1,1,1,1), (1,1,1,1,1,1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,1,1,-1,-1,1,-1), (1,-1,1,1,1,-1,1,1,-1,-1), (-1,-1,-1,-1,-1,-1,-1,-1,-1), (-1,1,1,1,-1,-1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,1,1,-1,-1,1,-1), (1,-1,1,1,-1,1,-1,-1,1), (1,1,1,1,1,1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1,-1), (1,-1,1,1,1,-1,-1,1,-1), (-1,1,-1,1,1,1,1,1,-1,-1), (1,-1,-1,1,1,1,-1,-1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,1,-1,1,-1,-1,1,1), (1,-1,1,1,-1,-1,1,1,-1), (1,-1,1,1,1,-1,-1,1,-1), (1,1,1,1,1,1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,1,-1,1,-1,-1,1,1), (1,-1,1,1,-1,-1,1,1,-1), (-1,-1,-1,-1,-1,-1,-1,-1,-1), (1,-1,-1,1,1,1,-1,-1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1,-1), (1,1,-1,1,1,1,-1,-1,1), (1,-1,1,1,1,-1,-1,1,-1), (1,1,1,1,1,1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1,-1), (1,-1,1,1,1,-1,-1,1,-1), (-1,1,-1,1,1,1,1,1,-1,-1,1), (1,1,1,1,1,1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1,-1), (1,-1,1,1,1,-1,-1,1,-1), (-1,-1,-1,-1,-1,-1,-1,-1,-1), (1,-1,-1,1,1,1,-1,-1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1,-1), (1,-1,1,1,1,-1,-1,1,-1), (-1,-1,-1,-1,-1,-1,-1,-1,-1), (-1,-1,1,1,1,-1,-1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1,-1), (1,-1,1,1,-1,-1,1,1,-1), (-1,-1,1,1,1,-1,-1,1,1,-1), (-1,-1,1,1,1,-1,-1,1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1), (-1,-1,1,-1,1,1,-1,1,1,-1), (1,-1,1,1,1,-1,-1,1,-1), (1,1,-1,-1,1,1,-1,1,-1), (-1,-1,-1,-1,-1,-1,-1,-1,-1), (1,-1,-1,1,1,-1,-1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1,-1), (-1,-1,-1,-1,1,1,-1,1,1), (1,1,-1,-1,-1,1,-1,1,-1), (1,-1,-1,1,1,-1,-1,1,1,-1), (1,1,1,1,1,1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,-1,1,1,-1,-1,1,1,-1), (-1,-1,1,1,1,-1,-1,1,1,-1), (1,-1,1,1,1,-1,-1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1), (-1,-1,1,-1,1,1,-1,1,1), (1,1,-1,1,-1,-1,1,-1,1), (-1,-1,-1,-1,-1,-1,-1,-1,-1), (-1,-1,1,1,1,-1,-1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,1,-1,1,-1,-1,1,-1,1), (-1,-1,1,1,1,-1,-1,1,1,-1), (-1,-1,1,1,1,-1,-1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,-1,-1,1,1,1,-1,1,-1), (1,1,-1,-1,1,1,-1,1,-1), (-1,1,-1,1,1,1,-1,-1,1,-1), (1,1,1,1,1,1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,-1,-1,1,1,-1,1,1,-1), (1,1,1,-1,-1,1,-1,1,-1), (1,1,1,-1,-1,1,-1,1,-1,-1), (-1,-1,-1,-1,-1,-1,-1,-1,-1,-1), (1,-1,-1,1,1,-1,-1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,-1,-1,1,1,-1,1,1,-1), (-1,-1,-1,-1,-1,-1,-1,-1,-1), (1,-1,-1,1,1,-1,-1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1,-1), (-1,-1,-1,-1,1,1,-1,1,1), (1,1,-1,-1,-1,1,1,-1,1,-1), (-1,1,-1,1,1,1,-1,1,-1), (1,-1,1,1,1,-1,-1,1,1,1)}, {(1,-1,-1,-1,1,1,1,1,-1), (1,-1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,1,-1,-1,-1,1,1,-1,1,-1), (-1,-1,1,1,1,-1,-1,1,1,-1), (1,-1,1,1,1,-1,-1,1,1,1)}, {(1,-1,-1,-1,1,1,1,1,-1), (1,-1,1,1,-1,-1,1,1,1), (1,1,-1,-1,-1,1,1,-1,1), (1,1,1,-1,1,-1,-1,1,-1), (-1,-1,1,-1,1,1,-1,1,1), (1,-1,-1,1,1,-1,1,1,-1), (1,1,1,-1,-1,1,-1,1,-1), (1,-1,-1,1,1,1,-1,1,1,1)}, {(1,-1,-1,-1,1,1,1,1,-1), (1,-1,1,1,-1,-1,1,1,1), (1,1,-1,-1,-1,1,1,-1,1), (1,1,1,-1,1,-1,-1,1,-1), (-1,-1,1,-1,1,1,-1,1,1), (1,-1,-1,1,1,-1,1,1,-1), (-1,-1,-1,-1,-1,-1,-1,-1,-1), (-1,1,1,1,-1,-1,1,1,1,-1)}, {(1,-1,-1,-1,1,1,1,1,-1), (1,-1,1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,-1,-1,1,1,-1,1,1,-1), (-1,-1,1,1,1,-1,-1,1,1,-1), (1,1,1,1,1,1,1,1,1)}, {(1,-1,-1,-1,1,1,1,1,-1), (1,-1,1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,-1,-1,1,1,1,-1,1,-1), (1,-1,-1,1,1,1,-1,1,-1,-1), (1,1,1,1,1,1,1,1,1)}, {(1,-1,-1,-1,1,1,1,1,-1), (1,-1,1,1,-1,-1,-1,1,1,1), (1,1,-1,-1,-1,1,1,-1,1,-1), (1,1,1,-1,1,-1,-1,1,-1), (-1,-1,1,-1,1,1,-1,1,1), (1,-1,-1,1,1,-1,1,1,-1), (-1,-1,-1,-1,-1,-1,-1,-1,-1), (-1,1,1,1,-1,-1,1,1,1,-1)}, {(1,-1,-1,-1,1,1,1,1,-1), (1,-1,1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,-1,-1,1,1,-1,1,1,-1), (-1,-1,1,1,1,-1,-1,1,1,-1), (1,-1,-1,1,1,1,-1,-1,1,1)}, {(1,-1,-1,-1,1,1,1,1,-1), (1,-1,1,1,-1,-1,-1,1,1,1), (1,1,-1,-1,-1,1,1,-1,1), (1,1,1,-1,1,-1,-1,1,-1), (-1,-1,1,-1,1,1,-1,1,1), (1,1,-1,-1,-1,1,1,-1,1,-1), (-1,-1,-1,-1,-1,-1,-1,-1,-1), (1,-1,-1,1,1,1,-1,-1,1,1,-1)}, {(1,-1,-1,-1,1,1,1,1,-1), (1,-1,1,1,-1,-1,-1,1,1,1), (1,1,-1,-1,-1,1,1,-1,1,-1), (1,1,1,-1,1,-1,-1,1,-1), (-1,-1,1,-1,1,1,-1,1,1), (1,1,-1,-1,-1,1,1,-1,1,-1), (-1,1,-1,1,1,1,-1,-1,1,-1), (1,1,1,1,1,1,1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1,-1), (-1,-1,-1,-1,1,1,-1,1,1), (1,1,-1,-1,-1,1,1,-1,1,-1), (-1,1,-1,1,1,1,-1,1,-1), (1,1,1,1,1,1,1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1), (-1,-1,1,-1,1,1,-1,1,1,1), (1,1,-1,-1,-1,1,1,-1,1,-1), (-1,1,1,1,-1,-1,1,1,-1), (1,1,1,1,1,1,1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1,-1), (-1,-1,-1,-1,1,1,-1,1,1), (1,1,-1,-1,-1,1,1,-1,1,-1), (1,-1,1,1,1,-1,-1,1,1,-1), (1,1,1,1,1,1,1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1), (-1,-1,1,-1,1,1,-1,1,1,1), (1,1,-1,-1,-1,1,1,-1,1,-1), (-1,-1,1,1,1,-1,-1,1,1,-1), (1,1,1,1,1,1,1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1,-1), (-1,-1,-1,-1,1,1,-1,1,1), (1,1,-1,-1,-1,1,1,-1,1,-1), (-1,1,-1,1,1,1,-1,1,-1,1), (1,1,1,1,1,1,1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1), (-1,-1,1,-1,1,1,-1,1,1,1), (1,1,-1,-1,-1,1,1,-1,1,-1), (-1,-1,-1,-1,-1,-1,-1,-1,-1,-1), (1,-1,-1,1,1,-1,-1,1,1,1)}, {(1,-1,-1,-1,1,1,1,1,-1), (1,-1,1,-1,-1,-1,-1,1,1,1), (1,1,-1,-1,-1,1,1,-1,1), (1,1,1,-1,1,-1,-1,1,-1), (-1,-1,1,-1,1,1,-1,1,1,1), (1,1,-1,-1,-1,1,1,-1,1,-1), (-1,1,1,1,-1,-1,1,1,-1,1), (1,1,1,-1,1,-1,-1,1,-1,-1),

(1,-1,1,1,-1,1,-1,-1), (1,1,-1,1,-1,-1,1,-1), (-1,1,1,-1,-1,1,1,-1), (1,1,1,1,1,1,1,1)}, {(1,-1,-1,-1,1,1,1,-1), (1,-1,1,-1,-1,-1,1,1), (1,1,1,-1,-1,-1,1,-1,1), (1,1,1,-1,1,-1,-1,-1), (1,-1,1,1,1,-1,1,-1,-1), (1,1,-1,1,1,-1,-1,1,-1), (1,-1,1,1,1,-1,-1,1), (1,1,1,1,1,1,1,1)}, {(1,-1,-1,-1,1,1,1,-1), (1,-1,1,1,1,-1,-1,1,-1), (1,1,-1,1,-1,1,1,-1,-1), (1,1,1,-1,1,1,-1,-1,-1), (-1,-1,1,1,1,1,1,-1,-1), (-1,1,-1,1,1,1,-1,1,1,-1), (-1,-1,-1,-1,-1,-1,-1,-1), (-1,1,1,-1,-1,1,1,1,-1)}, {(1,-1,-1,-1,1,1,1,-1), (1,-1,1,1,1,-1,-1,1,-1), (1,1,-1,1,1,-1,1,-1,-1), (1,1,1,-1,1,1,-1,-1,-1), (-1,-1,1,1,1,1,1,-1,-1), (-1,1,1,1,1,-1,1,1,-1), (-1,-1,-1,-1,-1,-1,-1,-1), (1,-1,-1,1,1,1,-1,-1,1)}, {(1,-1,-1,-1,1,1,1,-1), (1,-1,1,1,1,-1,-1,1,-1), (1,1,-1,1,1,-1,1,-1,-1), (1,1,1,-1,1,1,-1,-1,-1), (-1,-1,1,1,1,1,1,1,-1), (-1,1,-1,1,1,1,-1,1,1,-1), (-1,1,1,-1,-1,1,1,1,-1), (1,1,1,1,1,1,1,1)}, {(1,-1,-1,-1,1,1,1,-1), (1,-1,1,1,1,-1,-1,1,-1), (1,1,-1,1,1,-1,1,-1,-1), (1,1,1,-1,1,1,-1,-1,-1), (-1,1,1,1,1,1,-1,-1), (-1,1,1,-1,1,1,-1,-1,-1), (1,-1,-1,1,1,1,-1,-1,1), (1,1,1,1,1,1,1,1)}, {(1,-1,-1,-1,1,1,1,-1), (1,1,1,-1,-1,1,1,-1), (1,1,-1,1,-1,1,1,-1,-1), (1,1,1,-1,1,1,-1,-1,-1), (-1,-1,1,1,1,1,1,-1,-1), (1,-1,1,1,-1,-1,1,1,-1), (-1,-1,-1,-1,-1,-1,-1,-1), (-1,1,1,1,-1,-1,1,1,-1)}, {(1,-1,-1,-1,1,1,1,-1), (1,-1,1,1,1,-1,-1,1,-1), (1,1,-1,1,1,-1,1,-1,-1), (1,1,1,-1,1,1,-1,-1,-1), (-1,-1,1,1,1,1,1,-1,-1), (1,-1,1,1,-1,1,1,-1,1), (-1,-1,-1,-1,-1,-1,-1,-1), (1,-1,-1,1,1,1,-1,-1,1,1)}, {(1,-1,-1,-1,1,1,1,-1), (1,-1,1,1,1,-1,-1,1,-1), (1,1,-1,1,1,-1,1,-1,-1), (1,1,1,-1,1,1,-1,-1,-1), (-1,-1,1,1,1,1,1,-1,-1), (1,-1,1,-1,-1,1,1,-1,1), (-1,1,1,1,-1,-1,1,1,-1), (1,1,1,1,1,1,1,1)}, {(1,-1,-1,-1,1,1,1,-1), (1,-1,1,1,1,-1,-1,1,-1), (1,1,-1,1,1,-1,1,-1,-1,1), (1,1,1,-1,1,1,-1,-1,-1), (-1,-1,1,1,1,1,1,-1,-1), (1,-1,-1,1,1,1,-1,-1,1), (1,1,1,1,1,1,1,1)}, {(1,-1,-1,-1,1,1,1,-1), (1,-1,1,1,1,-1,-1,1,-1), (1,1,-1,1,-1,1,1,-1,-1), (1,1,1,-1,1,1,-1,-1,-1), (-1,-1,1,1,1,1,1,-1,-1), (1,1,-1,-1,-1,-1,1,1,-1), (-1,-1,-1,-1,-1,-1,-1,-1), (-1,1,1,1,1,-1,-1,1,1,-1)}, {(1,-1,-1,-1,1,1,1,-1), (1,-1,1,1,1,-1,-1,1,-1), (1,1,-1,1,-1,1,1,-1,-1), (1,1,1,-1,1,1,-1,-1,-1), (-1,-1,1,1,1,1,1,-1,-1), (1,1,-1,-1,-1,-1,1,1,1), (-1,-1,-1,-1,-1,-1,-1,-1), (1,-1,-1,1,1,1,-1,-1,1,1)}, {(1,-1,-1,-1,1,1,1,-1), (1,-1,1,1,1,-1,-1,1,-1), (1,1,-1,1,-1,1,1,-1,-1), (1,1,1,-1,1,1,-1,-1,-1), (-1,-1,1,1,1,1,1,-1,-1), (1,1,-1,-1,-1,-1,1,1,1), (-1,1,-1,-1,-1,1,1,1,-1), (1,1,1,1,1,1,1,1)}, {(1,-1,-1,-1,1,1,1,-1), (1,-1,1,1,-1,-1,1,-1,-1), (1,1,-1,1,-1,1,1,-1,-1), (1,1,1,-1,1,1,-1,-1,-1), (1,-1,1,-1,-1,1,1,-1,1), (1,-1,1,-1,-1,-1,1,1,1), (-1,-1,1,1,1,-1,-1,1,1,-1), (1,1,1,1,1,1,1,1)}, {(1,-1,-1,1,1,-1,1,-1,-1,1), (1,-1,-1,1,1,1,-1,1,1,-1), (1,-1,1,1,-1,-1,1,1,1,-1), (1,-1,1,1,-1,1,-1,-1,1), (-1,-1,-1,-1,1,1,1,1,1), (-1,-1,1,1,1,1,1,-1,-1,-1), (-1,-1,-1,-1,-1,-1,-1,-1), (1,1,-1,-1,1,1,1,-1,-1,-1)}, {(1,-1,-1,1,1,-1,1,-1,-1,1), (1,-1,-1,1,1,1,-1,1,1,-1), (1,-1,1,1,-1,-1,1,1,1,-1), (1,-1,1,1,-1,1,-1,-1,1), (-1,-1,-1,-1,1,1,1,1,1), (-1,-1,1,1,1,1,1,-1,-1,-1), (-1,-1,1,1,1,-1,-1,1,1,1), (1,1,1,1,1,1,1,1)}, {(1,-1,-1,1,1,-1,1,-1,-1,1), (1,-1,-1,1,1,1,-1,1,1,-1), (1,-1,1,1,-1,-1,1,1,1,-1), (1,-1,1,1,-1,1,-1,-1,1), (-1,-1,-1,-1,1,1,1,1,1), (1,1,-1,-1,-1,-1,1,1,1), (-1,-1,-1,-1,-1,-1,-1,-1,-1), (-1,-1,1,1,1,-1,-1,1,1,1)}, {(1,-1,-1,1,1,-1,1,-1,-1,1), (1,-1,-1,1,1,1,-1,1,1,-1), (1,-1,1,1,-1,-1,1,1,1,-1), (1,-1,1,1,-1,1,-1,-1,1), (-1,-1,-1,-1,1,1,1,1,1), (1,1,-1,-1,-1,-1,1,1,1), (1,1,1,1,1,1,1,1)}, {(1,-1,-1,1,1,-1,1,-1,-1,1), (1,-1,-1,1,1,1,-1,1,1,-1), (1,-1,1,1,-1,1,1,-1,-1,1), (1,-1,1,1,-1,1,-1,-1,1), (-1,-1,-1,-1,1,1,1,1,1), (-1,-1,1,1,1,1,1,-1,-1,-1), (-1,-1,-1,-1,-1,-1,-1,-1), (1,1,-1,-1,1,1,1,-1,-1,-1)}, {(1,-1,-1,1,1,-1,1,-1,-1,1), (1,-1,-1,1,1,1,-1,1,1,-1), (1,-1,1,1,-1,-1,1,1,1,-1), (1,-1,1,1,-1,1,-1,-1,1), (-1,-1,-1,-1,1,1,1,1,1), (1,1,-1,-1,-1,-1,1,1,1), (-1,-1,1,1,1,-1,-1,1,1,1), (1,1,1,1,1,1,1,1)}, {(1,-1,-1,1,1,-1,1,-1,-1,1), (1,-1,-1,1,1,1,-1,1,1,-1), (1,-1,1,1,-1,-1,1,1,1,-1), (1,-1,1,1,-1,1,-1,-1,1), (-1,-1,1,1,1,1,1,-1,-1,-1), (1,1,1,1,1,-1,-1,-1,-1,-1), (-1,-1,-1,-1,-1,-1,-1,-1), (1,1,-1,-1,1,1,1,-1,-1,-1)}, {(1,-1,-1,1,1,-1,1,-1,-1,1), (1,-1,-1,1,1,1,-1,1,1,-1), (1,-1,1,-1,-1,1,1,1,-1,-1), (1,-1,1,1,1,-1,-1,1,1,-1), (1,1,-1,-1,-1,-1,1,1,1), (1,1,1,1,1,-1,-1,-1,-1,-1), (-1,-1,1,1,1,-1,-1,1,1,1), (1,1,1,1,1,1,1,1)}, {(1,-1,-1,1,1,-1,1,-1,-1,1), (1,-1,-1,1,1,1,-1,1,1,-1), (1,-1,1,-1,-1,1,1,1,-1,-1), (1,-1,1,1,-1,1,-1,-1,1), (-1,-1,-1,-1,1,1,1,1,1,1), (-1,1,1,1,1,1,-1,1,-1,-1), (1,1,1,1,1,-1,-1,-1,-1,-1), (-1,-1,-1,-1,-1,-1,-1,-1,-1), (-1,1,1,1,-1,-1,1,1,-1)}, {(1,-1,-1,1,1,-1,1,-1,-1,1), (1,-1,-1,1,1,1,-1,1,1,-1), (1,-1,1,1,-1,-1,1,1,1,-1), (1,-1,1,1,-1,1,-1,-1,1), (-1,-1,-1,-1,1,1,1,1,1), (1,1,1,1,1,-1,-1,-1,-1,-1), (-1,-1,-1,-1,-1,-1,-1,-1), (-1,-1,1,1,1,-1,-1,1,1,1)}, {(1,-1,-1,1,1,-1,1,-1,-1,1), (1,-1,-1,1,1,1,-1,1,1,-1), (1,-1,1,-1,-1,1,1,1,-1,-1), (1,-1,1,1,-1,1,-1,-1,1), (-1,-1,-1,-1,1,1,1,1,1), (1,1,1,1,1,-1,-1,-1,-1,-1), (-1,-1,-1,-1,-1,-1,-1,-1), (1,1,1,1,1,1,1,1)}, {(1,-1,-1,1,1,-1,1,-1,-1,1), (1,-1,-1,1,1,1,-1,1,1,-1), (1,-1,1,-1,-1,1,1,1,-1,-1), (1,-1,1,1,-1,1,-1,-1,1), (-1,-1,-1,-1,1,1,1,1,1), (1,1,1,1,1,-1,-1,-1,-1,-1), (-1,-1,1,1,1,-1,-1,1,1,1), (1,1,1,1,1,1,1,1)}, {(1,-1,-1,1,1,-1,1,-1,-1,1), (1,-1,-1,1,1,1,-1,1,1,-1), (1,-1,1,-1,-1,1,1,1,-1,-1,-1), (1,-1,1,-1,-1,1,-1,-1,1), (1,1,-1,-1,-1,-1,1,1,1), (1,1,1,1,1,-1,-1,-1,-1,-1), (-1,-1,-1,-1,-1,-1,-1,-1), (-1,-1,1,1,1,-1,-1,1,1,1)}, {(1,-1,-1,1,1,-1,1,-1,-1,1), (1,-1,-1,1,1,1,-1,1,-1,1), (1,1,-1,1,-1,-1,-1,1,1,-1), (1,1,1,-1,-1,1,1,-1,-1,1), (-1,1,1,1,1,1,-1,-1,-1), (-1,1,1,1,1,1,1,-1,-1,-1), (-1,-1,-1,-1,-1,-1,-1,-1,-1), (1,1,-1,-1,1,1,1,-1,-1,-1)}, {(1,-1,-1,1,1,-1,1,-1,-1,1), (1,-1,-1,1,1,1,-1,1,1,-1), (1,-1,1,-1,-1,1,1,1,-1,-1), (1,-1,1,1,1,-1,-1,1,1,-1), (1,1,-1,-1,-1,-1,1,1,1), (1,1,1,1,1,-1,-1,-1,-1,-1), (-1,-1,-1,-1,-1,-1,-1,-1), (-1,-1,1,1,1,-1,-1,1,1,1)}, {(1,-1,-1,1,1,-1,1,-1,-1,1), (1,-1,-1,1,1,1,-1,1,1,-1), (1,-1,1,-1,-1,1,1,1,-1,-1), (1,-1,1,1,-1,-1,1,1,1,-1,1), (1,1,1,1,1,-1,-1,-1,-1,-1), (1,1,1,1,1,-1,-1,-1,-1,-1), (-1,-1,-1,-1,-1,-1,-1,-1), (1,1,1,1,1,1,1,1)}, {(1,-1,-1,1,1,-1,1,-1,-1,1), (1,-1,-1,1,1,-1,1,-1,1), (1,-1,1,1,-1,-1,1,1,1,-1), (1,-1,1,1,-1,1,-1,-1,1), (1,1,-1,-1,-1,-1,1,1,1), (1,1,1,1,1,-1,-1,-1,-1,-1), (-1,-1,-1,-1,-1,-1,-1,-1), (-1,1,1,1,-1,-1,1,1,-1)}, {(1,-1,-1,1,1,-1,1,-1,-1,1), (1,-1,-1,1,1,1,-1,1,-1,-1), (1,-1,1,1,-1,-1,1,1,1,-1), (1,-1,1,1,1,-1,1,-1,-1,1), (1,1,-1,-1,-1,-1,1,1,1), (1,1,1,1,1,-1,-1,-1,-1,-1), (1,1,1,1,1,1,1,1)}, {(1,-1,-1,1,1,-1,1,-1,-1,1), (1,-1,-1,1,1,-1,1,-1,-1,1), (1,-1,1,-1,-1,1,1,1,-1,-1), (1,-1,1,1,-1,-1,1,1,-1,-1,-1), (-1,1,1,1,1,1,-1,-1,-1), (1,1,1,1,1,-1,-1,-1,-1,-1), (1,1,-1,-1,1,1,1,-1,-1,-1)},
{(1,-1,-1,1,1,-1,1,-1,-1,1), (1,-1,-1,1,1,1,-1,1,1,-1), (1,-1,1,1,-1,-1,1,1,1,-1), (1,-1,1,1,-1,1,-1,-1,1), (-1,-1,1,1,1,1,1,-1,-1,-1), (1,1,1,1,1,-1,-1,-1,-1,-1), (-1,-1,1,1,1,-1,-1,1,1,1), (1,1,1,1,1,1,1,1)}, {(1,-1,-1,1,1,-1,1,-1,-1,1), (1,-1,-1,1,1,-1,1,-1,1), (1,-1,1,1,-1,-1,1,1,1,-1), (1,-1,1,1,-1,-1,1,-1,-1,1), (-1,-1,1,1,1,1,1,-1,-1,-1), (1,1,1,1,1,-1,-1,-1,-1,-1), (1,1,-1,-1,1,1,1,-1,-1,-1), (1,1,1,1,1,1,1,1)}, {(1,-1,-1,1,1,-1,1,-1,-1,1), (1,-1,-1,1,1,-1,1,-1,-1,1), (1,-1,1,-1,-1,1,1,1,-1,-1), (1,-1,1,1,-1,1,-1,-1,1), (1,1,-1,-1,-1,-1,1,1,1), (1,1,1,1,1,-1,-1,-1,-1,-1), (-1,-1,-1,-1,-1,-1,-1,-1), (-1,1,1,1,-1,-1,1,1,1)}, {(1,-1,-1,1,1,-1,1,1,1), (1,-1,-1,1,1,1,-1,1,-1), (1,-1,1,-1,-1,1,1,1,-1), (1,-1,1,1,-1,1,-1,-1,1), (1,1,-1,-1,-1,-1,1,1,1), (1,1,1,1,1,-1,-1,-1,-1,-1), (-1,-1,-1,-1,-1,-1,-1,-1), (1,1,-1,-1,1,1,1,-1,-1,-1)}, {(1,-1,-1,1,1,-1,1,-1,-1,1), (1,-1,-1,1,1,-1,1,-1,-1,1), (1,-1,1,-1,-1,1,1,1,-1,-1,-1), (1,-1,1,1,-1,1,-1,-1,1), (1,1,1,1,1,-1,-1,-1,-1,-1), (-1,-1,-1,-1,-1,-1,-1,-1), (-1,-1,1,1,1,-1,-1,1,1,1)}, {(1,-1,-1,1,1,-1,1,-1,-1,1), (1,-1,-1,1,1,1,-1,1,1,-1), (1,-1,1,-1,-1,1,1,1,-1,-1), (1,-1,1,1,-1,1,-1,-1,1), (-1,-1,1,1,1,1,1,-1,-1,-1), (1,1,1,1,1,-1,-1,-1,-1,-1), (-1,-1,-1,-1,-1,-1,-1,-1), (-1,1,1,1,-1,-1,1,1,1)}, {(1,-1,-1,1,1,-1,1,-1,-1,1), (1,-1,-1,1,1,-1,1,-1,-1), (1,-1,1,-1,-1,1,1,1,-1), (1,-1,1,-1,-1,-1,1,1,1), (-1,-1,1,1,1,1,1,-1,-1,-1), (1,1,1,1,1,-1,-1,-1,-1,-1), (-1,-1,-1,-1,-1,-1,-1,-1,-1), (-1,1,1,1,-1,-1,1,1,1)}, {(1,-1,-1,1,1,-1,1,-1,-1), (1,-1,1,1,-1,-1,1,-1,-1,1), (1,1,1,1,-1), (1,-1,1,1,-1,1,-1,-1,1), (1,1,1,-1,-1,-1,1,1,1), (1,1,1,1,1,-1,-1,-1,-1,-1), (-1,-1,1,1,1,-1,-1,1,1,1), (1,1,1,1,1,1,1,1)}, {(1,-1,-1,1,1,-1,1,-1,-1), (1,-1,-1,1,1,1,-1,1,-1), (1,-1,1,-1,-1,1,1,1,-1), (1,1,1,1,1,-1,-1,-1,-1,-1), (1,1,-1,-1,1,1,1,-1,-1,-1), (1,1,1,1,1,1,1,1)}, {(1,-1,-1,1,1,1,-1,1,-1), (1,-1,1,1,-1,1,-1,1), (1,1,-1,1,-1,-1,1,1), (1,1,1,1,-1,-1,1,1,-1), (-1,1,-1,1,-1,1,1,1), (-1,1,1,1,1,1,-1,-1,-1), (-1,-1,-1,-1,-1,-1,-1,-1), (1,1,-1,-1,1,1,1,-1,-1)}, {(1,-1,-1,1,1,-1,1,-1), (1,-1,1,1,-1,-1,1,1), (1,1,-1,1,-1,-1,-1,1,1), (1,1,1,-1,-1,1,1,-1,-1,1), (-1,1,1,1,1,1,-1,-1,-1), (-1,1,1,1,1,1,1,-1,-1,-1), (-1,-1,-1,-1,-1,-1,-1,-1), (1,1,-1,-1,1,1,1,-1,-1,1,1)}, {(1,-1,-1,1,1,-1,1,-1), (1,-1,1,1,-1,-1,1,1), (1,1,-1,1,-1,-1,1,1,-1), (1,1,1,1,-1,-1,1,1,-1), (-1,1,-1,1,1,-1,-1,1,1), (-1,1,1,1,1,1,1,-1,-1,-1), (-1,-1,-1,-1,-1,-1,-1,-1), (1,1,-1,-1,1,1,1,-1,-

1)}, {(1,-1,-1,1,1,-1,1,-1), (1,-1,1,1,-1,1,-1,-1,1), (1,1,-1,1,-1,-1,-1,1), (1,1,1,-1,-1,-1,1,-1), (-1,1,-1,-1,1,-1,1,1), (-1,1,1,1,1,-1,-1,-1), (-1,-1,1,1,-1,-1,1,1), (1,1,1,1,1,1,1,1)}, {(1,-1,-1,1,1,-1,1,-1), (1,-1,1,1,-1,1,-1,-1,1), (1,1,-1,1,-1,-1,-1,1), (1,1,1,-1,-1,-1,1,-1), (-1,1,-1,-1,1,-1,1,1), (-1,1,1,1,1,-1,-1,-1), (1,1,-1,-1,1,1,-1,-1), (1,1,1,1,1,1,1,1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (-1,1,1,-1,1,1,-1,1,1), (1,-1,-1,-1,-1,1,1,1,1), (-1,-1,-1,-1,-1,-1,-1,-1), (-1,-1,1,1,1,-1,-1,1,1,1)}, {(1,-1,-1,1,1,-1,1,-1), (1,-1,1,-1,1,1,-1,-1,1), (1,1,-1,1,-1,-1,-1,1), (1,1,1,-1,-1,-1,1,-1), (-1,1,-1,-1,1,1,-1,1,1), (1,-1,-1,-1,-1,1,1,1,1), (-1,-1,-1,-1,-1,-1,-1,-1), (1,1,-1,-1,1,1,-1,-1)}, {(1,-1,-1,1,1,-1,1,-1), (1,-1,1,-1,1,-1,-1,1), (1,1,-1,1,-1,1,-1,-1,1,1), (1,1,1,-1,-1,-1,1,-1), (-1,1,1,-1,1,1,-1,1,1), (1,-1,-1,-1,-1,1,1,1,1), (-1,-1,1,1,1,-1,-1,1,1,1), (1,1,1,1,1,1,1,1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (-1,1,-1,-1,1,-1,1,1), (1,-1,-1,-1,-1,1,1,1,1), (1,1,-1,-1,1,1,-1,1,-1), (1,1,1,1,1,1,1,1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (-1,1,1,1,1,-1,-1,-1), (1,-1,1,1,-1,1,1,-1,1,1), (-1,-1,1,-1,-1,-1,-1,-1), (-1,-1,1,1,1,-1,-1,1,1,1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (-1,1,1,1,1,-1,-1,-1), (1,-1,1,1,-1,1,-1,-1,1), (-1,-1,-1,-1,-1,-1,-1,-1), (1,1,-1,-1,1,1,-1,-1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (-1,1,1,1,1,-1,-1,-1), (1,-1,1,1,-1,1,-1,-1,1), (-1,-1,1,1,1,-1,-1,1,1,1), (1,1,1,1,1,1,1,1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (-1,1,1,1,1,-1,-1,-1), (1,-1,1,1,-1,1,-1,-1,1), (1,1,-1,1,-1,1,1,-1,1), (1,1,1,1,1,1,1,1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (-1,1,-1,-1,1,1,1,1), (1,-1,1,1,1,-1,1,1,-1), (-1,-1,-1,-1,-1,-1,-1,-1), (-1,-1,1,1,1,-1,-1,1,1,1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (-1,1,-1,-1,1,1,1,1), (1,-1,1,1,1,-1,1,1,-1,1), (-1,-1,-1,-1,-1,-1,-1,-1), (1,1,-1,-1,1,1,-1,-1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (1,-1,-1,-1,1,1,1,1), (1,-1,1,1,1,-1,1,1,-1,1), (-1,-1,1,1,1,-1,-1,1,1,1), (1,1,1,1,1,1,1,1)}, {(1,-1,-1,1,1,-1,1,-1), (1,-1,1,-1,1,-1,-1,1), (1,1,-1,1,-1,-1,-1,1), (1,1,1,-1,-1,-1,1,-1), (1,-1,-1,-1,1,1,1,1), (1,-1,1,1,1,-1,1,1,-1,1), (1,1,-1,-1,1,1,-1,1,-1), (1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,1,1,-1,1,-1), (-1,-1,-1,-1,1,1,1,1,1), (-1,1,1,1,-1,1,1,-1,-1), (-1,-1,-1,-1,-1,-1,-1,-1), (-1,1,1,1,-1,-1,1,1,1,-1)}, {(1,-1,1,-1,-1,-1,1,1,1), (1,-1,1,-1,1,1,1,-1,-1), (1,1,-1,-1,-1,1,1,-1,1), (1,1,-1,1,1,-1,1,-1), (-1,-1,-1,-1,1,1,1,1,1), (-1,1,1,1,-1,1,1,-1,-1), (-1,-1,-1,-1,-1,-1,-1,-1), (1,-1,-1,1,1,1,-1,-1,1,1)}, {(1,-1,1,-1,-1,-1,1,1,1), (1,-1,1,-1,1,1,1,-1,-1), (1,1,-1,-1,-1,1,1,-1,1), (1,1,-1,1,1,-1,1,-1), (-1,-1,-1,-1,1,1,1,1,1,1), (-1,1,1,1,-1,1,1,-1,-1), (-1,-1,1,1,1,-1,-1,1,1,1,-1), (1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (-1,-1,-1,-1,1,1,1,1,1,1), (1,-1,-1,1,1,1,-1,-1,1,1), (-1,-1,-1,-1,-1,-1,-1,-1), (1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,1,1,-1,1,-1), (-1,-1,-1,-1,1,1,1,1,1,1), (1,-1,-1,1,1,1,-1,-1,1,1), (-1,-1,-1,-1,-1,-1,-1,-1), (1,-1,-1,1,1,1,-1,-1,1,-1,1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (-1,-1,-1,-1,1,1,1,1,1,1), (1,-1,-1,1,1,1,-1,-1,1,1), (-1,-1,1,1,1,-1,-1,1,1,1,-1), (1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,1,1,-1,1,-1), (-1,-1,-1,-1,1,1,1,1,1,1), (1,-1,-1,1,1,1,-1,-1,1,1), (1,-1,-1,1,1,1,-1,-1,1,-1,1), (1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (-1,-1,-1,-1,1,1,1,1,1,1), (1,1,1,1,1,-1,-1,-1,-1), (-1,-1,-1,-1,-1,-1,-1,-1), (-1,1,1,1,-1,-1,1,1,1,-1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (-1,-1,-1,-1,1,1,1,1,1,1), (1,1,1,1,1,-1,-1,-1,-1), (-1,-1,-1,-1,-1,-1,-1,-1), (1,-1,-1,1,1,1,-1,-1,1,-1,1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (-1,-1,-1,-1,1,1,1,1,1,1), (1,1,1,1,1,-1,-1,-1,-1), (-1,-1,1,1,1,-1,-1,1,1,1,-1), (1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (-1,-1,-1,-1,1,1,1,1,1,1), (1,-1,-1,1,1,1,-1,-1,1,1), (1,-1,-1,1,1,1,-1,-1,1,-1,1), (1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (-1,-1,-1,-1,1,1,1,1,1,1), (1,1,1,1,1,-1,-1,-1,-1), (1,-1,-1,1,1,1,-1,-1,1,-1,1), (1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (1,-1,-1,-1,1,1,1,1,1,1,1), (1,1,1,1,1,-1,-1,-1,-1), (-1,-1,-1,-1,-1,-1,-1,-1), (-1,1,1,1,-1,-1,1,1,1,-1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (1,-1,-1,-1,1,1,1,1,1,1,1), (1,-1,-1,1,1,1,-1,-1,1,1), (1,1,1,1,1,1,1,1,1)}, {(1,-1,1,-1,-1,-1,1,1,1), (1,-1,1,-1,1,1,1,-1,-1), (1,1,-1,-1,-1,1,1,-1,1), (1,1,-1,-1,1,1,-1,1,-1), (1,-1,-1,1,1,1,1,1,-1), (1,1,-1,-1,1,1,-1,1,-1,-1), (-1,-1,-1,-1,-1,-1,-1,-1), (-1,1,1,1,-1,-1,1,1,1,-1)}, {(1,-1,1,-1,-1,1,1,-1,-1), (1,-1,1,1,1,-1,-1,1,-1), (1,1,-1,-1,1,1,-1,1,-1), (1,1,-1,1,1,-1,1,-1), (-1,-1,1,1,1,1,1,1,-1), (-1,1,1,1,1,1,-1,-1,-1), (-1,-1,-1,-1,-1,-1,-1,-1), (-1,1,1,1,-1,-1,1,1,1,-1)}, {(1,-1,1,-1,-1,1,1,-1,-1), (1,-1,1,1,1,-1,-1,1,-1), (1,1,-1,-1,1,1,-1,1,-1), (1,1,-1,1,1,-1,1,-1), (-1,-1,1,1,1,1,1,1,-1), (-1,1,1,1,1,1,-1,-1,-1), (-1,-1,1,1,-1,-1,1,1,1,-1), (1,1,1,1,1,1,1,1)}, {(1,-1,1,-1,-1,1,1,-1,-1), (1,-1,1,1,1,-1,-1,1,-1), (1,1,-1,-1,1,1,-1,1,-1), (1,1,-1,1,1,-1,1,-1), (-1,-1,-1,1,1,1,1,1,-1), (-1,1,1,1,1,1,-1,-1,-1,-1), (-1,1,1,1,-1,-1,1,1,1,-1), (1,1,1,1,1,1,1,1)}, {(1,-1,1,-1,-1,1,1,1), (1,-1,1,1,-1,1,1,-1,-1), (1,1,-1,-1,-1,1,1,-1,1,-1), (1,1,-1,-1,1,1,-1,1,-1), (-1,-1,-1,1,1,1,1,1,1,-1), (-1,1,1,1,1,1,-1,-1,-1), (-1,-1,-1,-1,-1,-1,-1,-1), (1,-1,-1,1,1,1,-1,-1,1,-1,1)}, {(1,-1,1,-1,-1,1,1,-1,-1), (1,-1,1,1,-1,1,1,-1,-1), (1,1,-1,-1,1,1,-1,1,-1), (1,1,-1,-1,1,1,-1,1,-1), (-1,-1,-1,1,1,1,1,1,1,-1), (-1,1,1,1,1,1,-1,-1,-1), (-1,1,1,1,-1,-1,1,1,1,-1), (1,1,1,1,1,1,1,1)}, {(1,-1,1,-1,-1,1,1,-1,-1), (1,-1,1,1,1,-1,-1,1,-1), (1,1,-1,-1,1,1,-1,1,-1), (1,1,-1,1,1,-1,1,-1), (-1,-1,-1,1,1,1,1,1,1,-1), (-1,1,1,1,1,1,-1,-1,-1,-1), (-1,-1,-1,-1,-1,-1,-1,-1), (-1,1,1,1,-1,-1,1,1,1,-1)}, {(1,-1,1,-1,-1,1,1,-1,-1), (1,-1,1,1,1,-1,-1,1,-1), (1,1,-1,-1,1,1,-1,1,-1), (1,1,-1,1,1,-1,1,-1), (-1,-1,-1,1,1,1,1,1,-1), (-1,1,1,1,1,1,-1,-1,-1,-1), (1,-1,-1,-1,-1,-1,-1,-1), (-1,1,1,1,1,1,1,1,1,1,1)}, {(1,-1,1,-1,1,1,-1,1,-1), (1,-1,1,1,1,-1,-1,1,-1), (1,1,-1,-1,1,1,-1,1,-1), (1,1,-1,1,1,-1,1,-1), (-1,-1,-1,1,1,1,1,1,1,-1), (-1,1,1,1,1,1,-1,-1,-1), (-1,-1,1,1,-1,-1,1,1,1,-1), (1,1,1,1,1,1,1,1)}, {(1,-1,1,-1,-1,1,1,-1,-1), (1,-1,1,1,1,-1,-1,1,-1), (1,1,-1,-1,1,1,-1,1,-1), (1,1,-1,1,1,-1,1,-1), (-1,-1,1,1,1,1,1,1,-1), (-1,1,1,1,1,1,-1,-1,-1,-1), (-1,-1,1,1,-1,-1,1,1,1,-1), (1,1,1,1,1,1,1,1)}, {(1,-1,1,-1,-1,1,1,-1,-1), (1,-1,1,1,-1,1,1,-1,-1,1), (1,1,-1,-1,1,1,-1,1,-1), (1,1,-1,1,1,-1,1,-1), (-1,-1,1,1,1,1,1,1,-1), (-1,1,1,1,1,1,-1,-1,-1), (-1,-1,1,1,-1,-1,1,1,1,-1), (1,1,1,1,1,1,1,1)}, {(1,-1,1,-1,-1,1,1,-1,-1), (1,-1,1,1,-1,1,1,-1,-1,1), (1,1,-1,-1,1,1,-1,1,-1), (1,1,-1,1,1,-1,1,-1), (-1,-1,-1,1,1,1,1,1,-1), (-1,1,1,1,1,1,-1,-1,-1), (-1,-1,-1,-1,-1,-1,-1,-1), (1,-1,-1,1,1,1,-1,-1,1,-1,1)}, {(1,-1,1,-1,-1,1,1,-1,-1), (1,-1,1,1,1,-1,1,1,-1), (1,1,-1,-1,1,1,-1,1,-1), (1,1,-1,1,1,-1,1,-1), (-1,-1,-1,1,1,1,1,1,-1), (-1,1,1,1,1,1,-1,-1,-1), (-1,-1,1,1,-1,-1,1,1,1,-1), (1,1,1,1,1,1,1,1)}, {(1,-1,1,-1,-1,1,1,1,-1,-1), (1,-1,1,1,1,-1,1,1,-1,-1), (1,1,-1,-1,1,1,-1,1,-1,-1), (1,1,-1,1,1,-1,1,-1,-1), (-1,-1,-1,1,1,1,1,1,1,-1), (-1,1,1,1,1,1,-1,-1,-1,-1), (1,-1,-1,1,1,1,-1,-1,1,-1,1), (1,1,1,1,1,1,1,1,1,1,1)}, {(1,-1,1,-1,1,1,-1,1,-1), (1,-1,1,1,-1,1,1,-1,1,-1), (1,1,-1,-1,1,1,-1,1,-1,-1), (1,1,-1,1,1,-1,1,-1,-1), (-1,-1,-1,1,1,1,1,1,1,-1), (-1,1,1,1,1,1,-1,-1,-1,-1), (-1,-1,1,1,-1,-1,1,1,1,-1), (1,1,1,1,1,1,1,1,1,1,1)}, {(1,-1,1,-1,-1,1,1,1,-1), (1,1,1,1,-1,-1,1,1,-1), (1,1,-1,-1,1,1,-1,1,-1), (1,1,-1,1,1,-1,1,-1), (-1,-1,1,1,1,1,1,1,-1), (-1,1,1,1,1,1,-1,-1,-1,-1), (-1,1,1,1,-1,-1,1,1,1,-1), (1,1,-1,-1,-1,

1,1,1,1), (-1,-1,-1,-1,-1,-1,-1,-1), (1,-1,-1,1,1,-1,-1,1)}, {(1,-1,1,-1,1,1,-1,-1), (1,-1,1,1,-1,-1,1,-1), (1,1,1,-1,-1,1,1,-1,-1), (1,1,-1,1,-1,1,-1,-1), (-1,-1,-1,1,1,1,1,-1), (1,-1,-1,-1,-1,1,1,1), (-1,1,1,-1,-1,1,1,-1), (1,1,1,1,1,1,1,1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (-1,-1,-1,1,1,1,1,-1), (1,-1,-1,-1,-1,1,1,1), (1,-1,-1,1,1,-1,-1,1), (1,1,1,1,1,1,1,1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (-1,1,1,1,1,-1,-1,-1), (1,1,1,-1,-1,-1,-1,1), (-1,-1,1,-1,-1,-1,-1,-1), (-1,1,1,-1,-1,1,1,-1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (-1,1,1,1,1,-1,-1,-1), (1,1,1,-1,-1,-1,-1,1), (-1,-1,-1,-1,-1,-1,-1,-1), (1,-1,-1,1,1,1,-1,-1,1,1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (-1,1,1,1,1,-1,-1,1,-1), (1,1,1,-1,-1,-1,-1,1), (-1,1,1,-1,-1,1,1,1,-1), (1,1,1,1,1,1,1,1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (-1,1,1,1,1,-1,-1,-1), (1,1,1,-1,-1,-1,-1,1), (1,-1,-1,1,1,-1,-1,1), (1,1,1,1,1,1,1,1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (1,-1,-1,-1,-1,1,1,1), (1,1,1,-1,-1,-1,-1,1), (-1,-1,-1,-1,-1,-1,-1,-1), (-1,1,1,-1,-1,1,1,-1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (1,-1,-1,-1,-1,1,1,1), (1,1,1,-1,-1,-1,-1,1), (-1,-1,-1,-1,-1,-1,-1,-1), (1,-1,-1,1,1,-1,-1,1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (1,-1,-1,-1,-1,1,1,1), (1,1,1,-1,-1,-1,-1,1), (-1,1,1,-1,-1,1,1,-1), (1,1,1,1,1,1,1,1)}, {(1,-1,1,-1,1,1,-1,-1), (1,-1,1,1,-1,-1,1,-1), (1,1,-1,-1,1,1,-1,-1), (1,1,-1,1,-1,1,-1,-1), (1,-1,-1,-1,-1,1,1,1), (1,1,1,-1,-1,-1,-1,1), (1,-1,-1,1,1,-1,-1,1), (1,1,1,1,1,1,1,1)}

The orthogonal code sets, as shown in table 4 are base code sets with code length of 8. The mixed frequency code searching module **318** is further capable of outputting orthogonal code sets for four frequency code group with code length of 16 by repeating the codes in base code sets. The mixed frequency code searching module **318** is also capable of outputting orthogonal code sets for four frequency code groups with code length of 32 by repeating the codes in base code sets for four times and so on. It will be appreciated that mixed frequency code searching module **318** is capable of performing the above operation for all mixed frequency code groups.

For instance, a code with length 8 (-1,-1,-1,1,-1,1,1,1) in table 4 with four frequency component may also be represented by a code with length 16 with four frequency component as (-1,-1,-1,1,-1,1,1,1,-1,-1,-1,1,-1,1,1,1), by a code with length 32 with four frequency component as (-1,-1,-1,1,-1,1,1,1,-1,-1,-1,1,-1,1,1,1,-1,-1,-1,1,-1,1,1,1,-1,-1,-1,1,-1,1,1,1) and so on.

The performance of orthogonal codes sets supplied by unique frequency code searching module 316 and mixed frequency code searching module 318 may be evaluated in terms of spectral efficiency calculated as:

$$ SPEF = \frac{N_c}{NF_c} $$

Where NFc is the number of frequency locations of the code, and $N_C$ is the number of codes in a code set within a frequency group. The spectral efficiency of codes within the code sets achieved by one the exemplary embodiment is 2

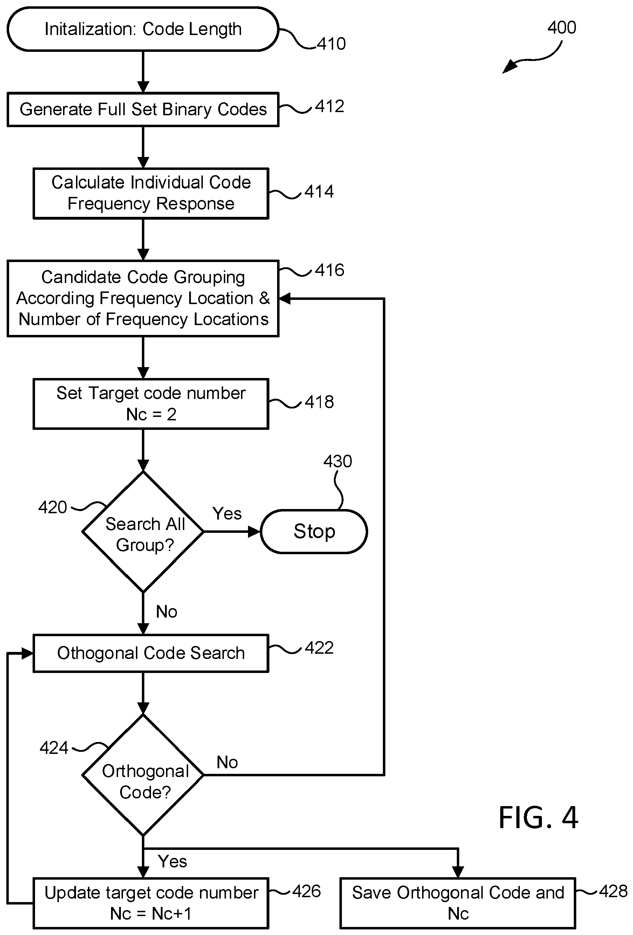

FIG. 4 depicts a functional flow diagram of process **400** directed to spectrally efficient orthogonal code generation processing in accordance with various embodiments of the present disclosure.

As shown, process **400** begins at task block **410,** in which spectrally efficient orthogonal code generation architecture **300** receives a request to generate orthogonal codes of a specific length L. As noted above, architecture **300** may include full-Set code generation module **310** to receive a request to generate orthogonal codes of a specific length L.

Process **400** proceeds to task block **412,** where architecture **300** generates a full-set candidate code group. As noted above, full-Set code generation module **310** generates a full-set candidate code group that contains all possible combination of codes for the code length L.

At task block **414,** architecture **300** operates to calculate the frequency response of every code present in candidate code group. As discussed above, frequency response calculation module **312** calculates frequency response of every code present in candidate code group. In doing so, frequency response calculation module **312** calculates the number of frequency locations and the corresponding frequency positions present in each code of candidate code group.

Process **400** advances to task block **416,** where architecture **300** operates to perform a candidate code grouping based on number of frequency locations and the corresponding frequency positions present in all the codes of candidate code group. That is, as described above, spectrum code grouping module **314** performs a code grouping operation based on calculated frequency responses of codes in candidate code group. In doing so, code grouping module **314** divides the codes into two categories of groups, namely unique frequency code groups and mixed frequency code groups.

Process **400** proceeds to task block **418,** where architecture **300** sets a target number of codes in orthogonal code set. As noted above, code selection module **316C** and code selection module **318C** sets a target number of codes equal to two in orthogonal code set.

At task block **420,** architecture **400** operates to determine whether all frequency code groups have been searched. If all frequency code groups have been searched process 400 goes to task block **430** to end the process; otherwise process **400** advances to task block **422.** As discussed above, unique frequency code searching module **316** and mixed frequency code searching module **318** operate to perform searching in unique frequency code group and mixed frequency code group.

At process **400** the task block **422,** where architecture **400** operates to perform orthogonal code searching. That is, as described above, code selection module **316C** and code selection module **318C** operates to select the orthogonal codes from each unique frequency code group and mixed frequency code group and forms orthogonal code sets within each unique frequency code group and mixed frequency code group respectively.

Process **400** advances to task block **424,** where architecture **300** determines whether the code is orthogonal or not. If the code is not orthogonal, process **400** returns to task block **416** and repeat the process with another group. If the code is orthogonal, process 400 goes to task block **426** where architecture **300** increments the target number of codes in orthogonal code set by one and the process returns to task block **422** to search another orthogonal code. Also, at task block **428,** architecture **300** saves the value of orthogonal code and the target number of codes in orthogonal code set in a memory element. As discussed above, if code selection module **316C** and code selection module **318C** finds a suitable code, the target number of codes is increased by one and the selection process is then repeated with updated target number of codes. Further, the orthogonal code and the target number of codes in orthogonal code set may be then stored in a memory element.

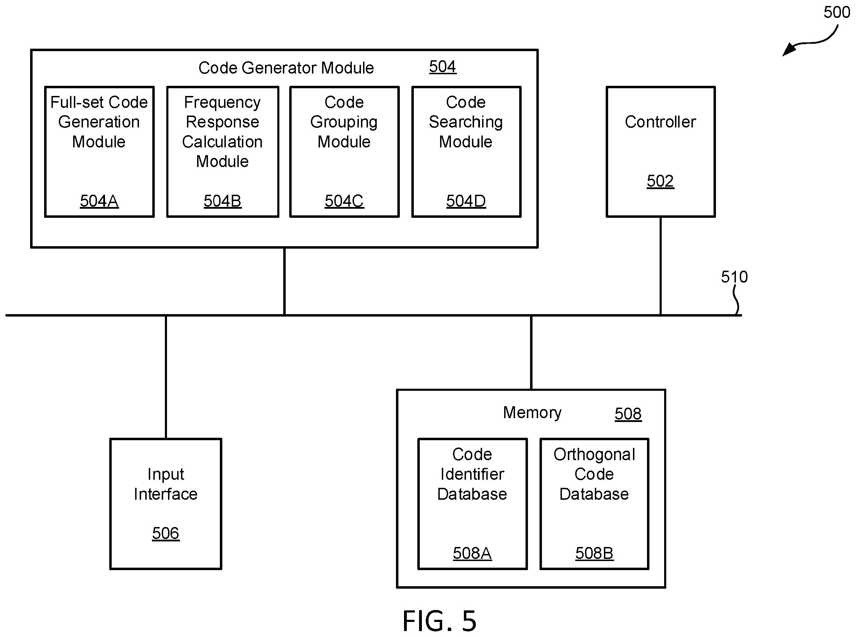

FIG. 5 shows an exemplary block diagram of spectrally efficient orthogonal code generation architecture **500,** in accordance with various embodiments of the present disclosure. As shown, the orthogonal code generation architecture **500** employs a controller **502,** a code generator **504** that includes full-set code generation module **504A,** frequency response calculation module **504B,** code grouping module **504C** and code searching module **504D.** The orthogonal code generation architecture **500** may also include an input interface **506** and a memory **508.** The above components may be coupled together via a signal bus **510.**

The orthogonal code generation architecture **500** may receive a request via the input interface **506** to generate a specific orthogonal code that specifies the lengths of orthogonal codes. After receiving the request, the controller **502** proceeds to command the code generator module **504** to generate various code groups based on number of frequency locations and positions. Within each code group the codes are arranged to form orthogonal code sets based on orthogonality property. This process is similar to as described above. The code groups are placed into the memory **508** as each of the groups are generated.

The memory **508** includes databases such as a code identifier database **508A** and an orthogonal code database **508B.** The orthogonal code database **508B** stores the code groups as generated by code generator module **504.** Each of the orthogonal code is individually identified by an identifier based on additional information outputted by the code generator **504** such as number of code sets in a code group, number codes in a code set, number of frequency components of each code, number of overlapped frequency positions, location of frequency component of each code and length of each code etc. The code identifier database **508A** includes lists of such identifiers so that input signals may be spread according to a selected code sequence.

It will be appreciated that the spectrally efficient orthogonal code generation architectures **300,** 500 presented above may be employed in conventional transmitter and receiver architectures **100, 200.** These architectures exploit the sharing of frequency positions by different orthogonal codes to enable the efficient utilization of the operating frequency spectrum, thereby improving data transmission rates.

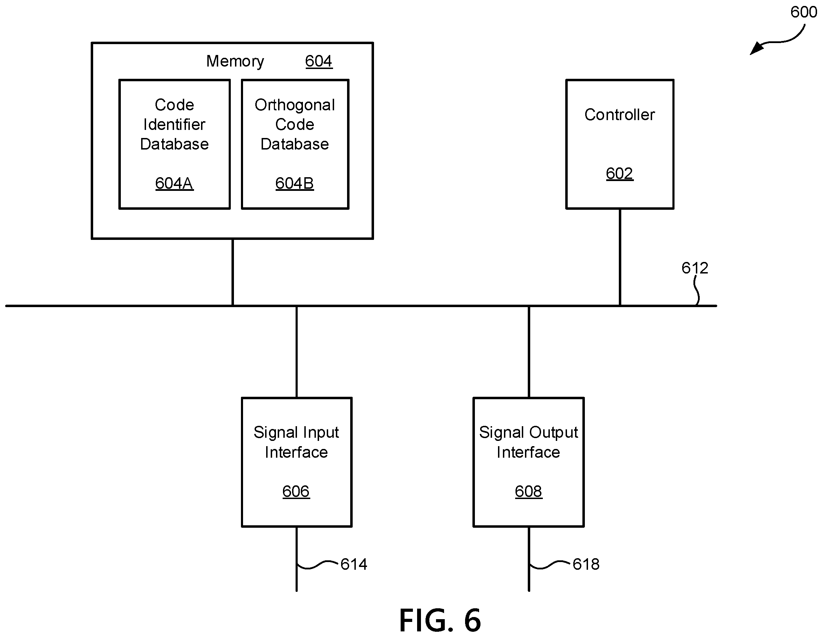

FIG. 6 shows a spectrum spreading system **600,** in accordance with various embodiments of the present disclosure. The spectrum spreading system **600** includes a controller **602,** a memory **604,** a signal input interface **606** and a signal output interface **608.** The above components are coupled together via a signal bus **612.**

The memory **604** includes databases such as a code identifier database **604A** and an orthogonal code database **604B.** The orthogonal code database **604B** stores the code groups as generated by orthogonal code generation architecture **500,** for example. Each of the orthogonal code is individually identified by an identifier based on additional information outputted by the code generator **504** such as number of code sets in a code group, number codes in a code set, number of frequency components of each code, number of overlapped frequency positions, location of frequency component of each code and length of each code etc.

The signal input interface **606** receives the input signal to be spread via the signal bus **614** and the signal output interface **608** outputs the spread signal via a signal bus **616.**

The spectrum spreading system **600** is first initialized with the appropriate orthogonal code database 306 and the appropriate code sequence database 308. When an input signal from a previous stage such as, for example, channel encoder, is input via the signal input interface **606** as a symbol stream, the controller **602** then selects the appropriate orthogonal codes from memory **604** based on symbol stream. In doing so, the controller **602** spread each symbol based on the code sequence of selected orthogonal codes and outputs the spread signal via the signal output interface **608** to a following stage such as a modulator and transmitter for example. This process continues until the input symbol stream is exhausted.

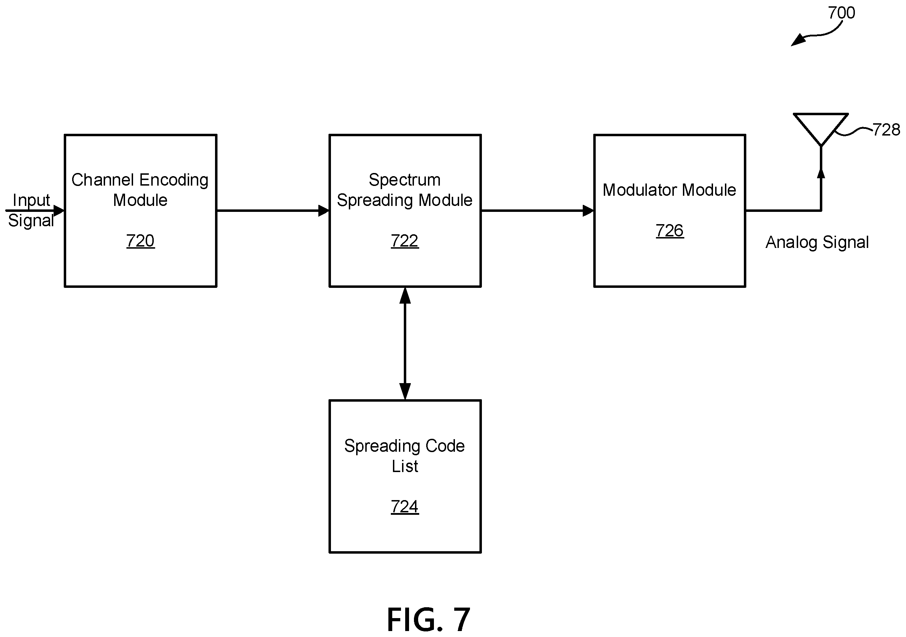

**FIG.** 7 illustrates a functional block diagram of a transmitter **700,** in accordance with various embodiments of the present disclosure. The transmitter **700** includes a channel encoding module **720,** a spectrum spreading module **722,** a spreading code list provider **724,** a modulator module **726** and a transmitter antenna **728.** Other elements may be implemented but not illustrated for purposes of tractability and simplicity.

As illustrated by FIG. 7, transmitter **700** receives an input signal into channel encoding module **720.** The channel encoding module **720** encodes the input signal and outputs the encoded signal to a spectrum spreading module **722.** The channel encoding module **720** may use any of the existing encoding techniques, such as, for example, but not limited to block codes, convolutional codes, turbo codes etc.

The spectrum spreading module **722** receives the encoded signal from channel encoding module **720** and is configured to spread the spectrum of encoded signal according to a set of codes selected from spreading code list provider **724.** The spreading of spectrum is executed by mixing the encoded signal with a code sequence in the code set.

It is to be understood, that spreading code list provider **724** is capable of storing code sets in accordance with table 1, table 2, table 3 or table 4.

The modulator module **726** receives the spread signal from spectrum spreading module **722** and modulates the spread signal onto a carrier signal to output the modulated signal for transmission. An analog signal is thereafter transmitted via a transmitter antenna **728** to the wireless communication channel. The modulator **726** may use any of the existing modulation techniques, such as, for example, but not limited to PSK, FSK, ASK, OOK, QAM etc.

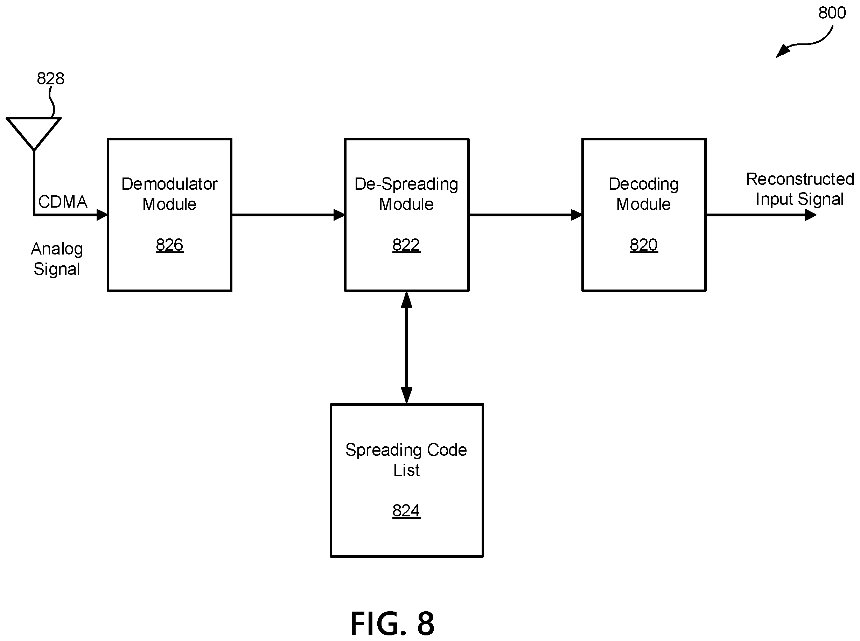

FIG. 8 illustrates a functional block diagram of a receiver **800** used in spread-spectrum based communication system directed to processing received analog signal from transmitter antenna **828,** to reconstruct the input signal. The receiver **800** includes a channel decoding module **820,** a spectrum de-spreading module **822,** a spreading code list provider **824,** a de-modulator module **826** and a receiver antenna **828.** Other elements may be present but not illustrated for purposes of tractability and simplicity.

As illustrated by FIG. 8, receiver **800** receives an analog signal by receiver antenna **828** that may be transmitted by transmitter antenna **728.** The demodulator module **826** demodulates the received analog signal. The demodulation of received analog signal is executed by mixing the received analog signal with a suitable carrier signal.

The spectrum de-spreading module **822** receives the demodulated signal from demodulator module 826 and is configured to de-spread the spectrum of demodulated signal according to a set of codes selected from spreading code list provider **824.** The de-spreading of spectrum is carried out for example, by mixing the de-modulated signal with a code sequence in the code set.

It is to be understood, that spreading code list provider **824** may be capable of storing code sets in accordance with table 1, table 2, table 3 or table 4.

The channel decoding module **820** receives the de-spread signal from spectrum de-spreading module **822.** The channel decoding module **820** decode the de-spread signal to reconstruct the input signal. The channel decoding module **820** may use any of the existing decoding techniques such as, for example, but not limited to maximum likelihood decoder, Viterbi decoder etc.

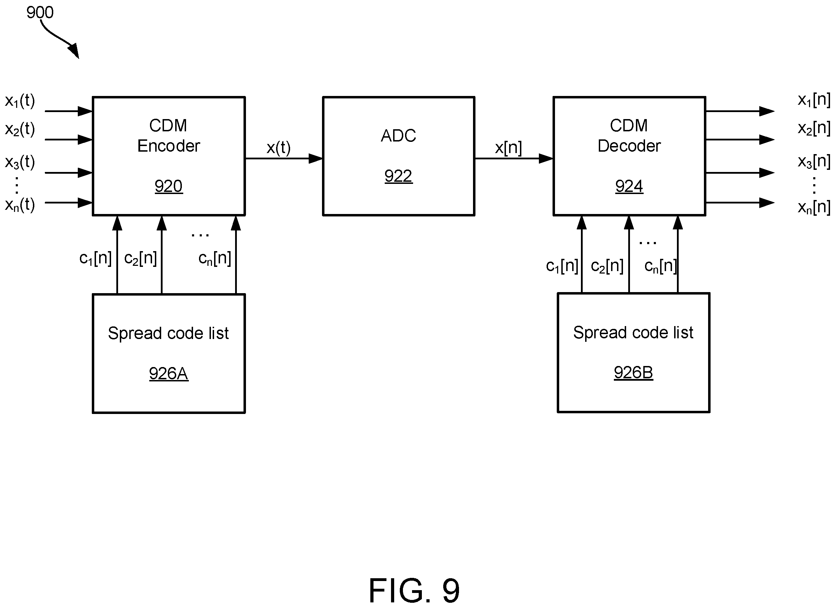

FIG. 9 illustrates a functional block diagram of the architecture of a wireless receiver **900** for processing received analog signals. The wireless receiver **900** includes a code division multiplexing (CDM) encoder module **920,** an analog-to-digital converter (ADC) **922,** a CDM decoder module **924,** and a spread code list provider **926A, 926B.** It will be understood that other elements may be present but not illustrated for the purpose of tractability and simplicity.

As illustrated by FIG. 9, wireless receiver **900** receives analog input signals $x_1(t)$, $x_2(t)$... $x_n(t)$, which may be received by one or more antenna structures (not shown), such as, for example, MIMO/M-MIMO antennas. Moreover, each of the received signals may possess different modulation/encoding characteristics.

As shown, the analog input signals $x_1(t)$, $x_2(t)$... $x_n(t)$ are forwarded to CDM encoder **920.** The CDM encoder **920** is configured to encode and convert the *n* analog input signals $x_1(t)$, $x_2(t)$... $x_n(t)$ into a single, composite, encoded analog signal x(t), in accordance with a supplied coding scheme. That is, spread code list provider **926A** supplies CDM encoder module **920** with a spread code scheme $c_i[n]$: $c_1[n]$, $c_2[n]$ ... $c_n[n]$. Consistent with other embodiments of present disclosure, spread code list provider **926A** may be capable of storing code sets in accordance with table 1, table 2, table 3 or table 4.

In particular, the encoding operation of CDM encoder module **920** is accomplished by mixing the analog input signals $x_1(t)$, $x_2(t)$... $x_n(t)$ with the spread code scheme $c_1[n]$, $c_2[n]$... $c_n[n]$. The outputs of the mixing operation may be subsequently filtered and combined to yield a single analog composite signal x(t) that is effectively spread across a wide frequency bandwidth.

The encoded analog composite signal x(t) may be provided to a ADC module **922** having high bandwidth, and operates to convert analog composite signal x(t) into a digital composite signal x[n].

The digital composite signal x[n] is subsequently transmitted for further processing, such as, for example, decoding operations performed by CDM decoder module **924.** CDM decoder module **924** processes digital composite signal x[n] to decode and segregate the digital composite signal x[n] to obtain digital input signals $x_1[n]$, $x_2[n]$... $x_n[n]$.

That is, CDM decoder module **124** receives and processes digital composite signal x[n] by mixing the digital

composite signal $x_i[n]$ with the spread code scheme $c_i[n]$ provided by spread code list provider **926B.** Consistent with other embodiments of present disclosure, spread code list provider **926A** may be capable of storing code sets in accordance with table 1, table 2, table 3 or table 4. The resulting mixed samples may be then integrated to generate digital input signals $x_1[n]$, $x_2[n]$... $x_n[n]$.

It is to be understood that the operations and functionality of the described orthogonal code generation architecture, transmitter, receiver, constituent components, and associated processes may be achieved by one or more of hardware-based, software-based, firmware-based elements and combinations thereof. Such operational alternatives do not, in any way, limit the scope of the present disclosure.

It will be further appreciated that the orthogonal code generation architecture, transmitter, and receiver discussed in the current discloser may be incorporated in a number of different electronic devices, such as, for example, mobile phones, laptops, user equipment (UE), *etc.*

It will also be understood that, although the inventive concepts and principles presented herein have been described with reference to specific features, structures, and embodiments, it is clear that various modifications and combinations may be made without departing from such disclosures. The specification and drawings are, accordingly, to be regarded simply as an illustration of the inventive concepts and principles as defined by the appended claims, and are contemplated to cover any and all modifications, variations, combinations or equivalents that fall within the scope of the present disclosure.

**Claims**

1. A spectrally-efficient orthogonal code generation system, comprising:

   a code generation module (310) configured to generate a candidate code group, in which the candidate code group contains $2^L$ different codes for a given code length L;
   a frequency response calculation module (312) configured to calculate a frequency response of the codes within the candidate code group;
   a code grouping module (314) configured to divide the codes within the candidate group into a unique frequency code group and a mixed frequency code group, based on frequency response of the codes within the candidate code group;
   a frequency code searching module (316) configured to search for orthogonal codes within each of the unique frequency code group and mixed frequency code group;
   **characterised in that** for a number of frequency locations N, the codes having same number of frequency locations N and frequency components positioned at same frequency locations are grouped to form the unique frequency code group;
   wherein for a given code length L, multiple values of N are used, and the system iteratively increases N to group codes based on their frequency response,
   wherein for a number of frequency locations N, the codes having same number of frequency locations N and frequency components positioned at same frequency locations, in addition to the codes having the number of frequency locations less than N with a condition that the positions of all the frequency components of such codes will overlap with some positions of frequency components of codes having N frequency locations are grouped to form the mixed frequency code group, wherein the frequency components and locations are derived from the calculated frequency response;
   wherein one or more code sets are formed within each frequency code group, the codes within code sets are orthogonal in nature; and
   further comprising a memory configured to store, for each orthogonal code set formed within a unique frequency code group or a mixed frequency code group, identifier information and the corresponding orthogonal codes in a database forming a orthogonal code list, wherein the orthogonal code list comprises a plurality of entries, each entry corresponding to an orthogonal code set and including: a number of code sets in the unique frequency code group or mixed frequency code group, and a number of codes in a code set;
   wherein a frequency location is a position present in the frequency response of a code, and a frequency component is a spectral element present at a specific position in the frequency response of a code.

2. The system of claim 1, wherein the codes within the code sets have zero un-shifted cross correlation.

3. The system of claim 1, wherein the codes within the code sets have a minimum value of a maximum side lobe.

4. The system of claim 1, wherein the codes within the code sets have a minimum value of a total side lobe.

5. The system of any one of claims 1 to 4, further comprising generates an orthogonal code of length 2L within a code set by repeating the orthogonal code of length L.

6. The system of claim 1, further comprising computing a spectral efficiency wherein the spectral efficiency is a ratio of the number of codes in a code set within a frequency group and the number of frequency locations of the code.

7. The system of claim 6, wherein the spectral efficiency is at least 2.

8. A method of generating a spectrally-efficient orthogonal code, comprising:

generating a candidate code group, wherein the candidate code group contains $2^L$ different codes for a given code length L;
calculating a frequency response of the codes within the candidate code group;
**dividing** the codes within the candidate group into two categories of frequency code groups, based on frequency response of the codes within the candidate code group;
searching for orthogonal codes within each of the unique frequency code group and mixed frequency code group;
**characterised in that** for a number of frequency locations N, the codes having same number of frequency locations N and frequency components positioned at same frequency locations are grouped to form the unique frequency code group;
wherein for a number of frequency locations N, the codes having same number of frequency locations N and frequency components positioned at same frequency locations, in addition to the codes having the number of frequency locations less than N with a condition that the positions of all the frequency components of such codes will overlap with some positions of frequency components of codes having N frequency locations are grouped to form the mixed frequency code group, wherein the frequency components and locations are derived from the calculated frequency response;
wherein one or more code sets are formed within each frequency code group, the codes within code sets are orthogonal in nature; and
the method further comprising storing, for each orthogonal code set formed within a unique frequency code group or a mixed frequency code group, identifier information and the corresponding orthogonal codes in a database forming a orthogonal code list, wherein the orthogonal code list comprises a plurality of entries, each entry corresponding to an orthogonal code set and including: a number of code sets in the unique frequency code group or mixed frequency code group, and a number of codes in a code set;
wherein a frequency location is a position present in the frequency response of a code, and a frequency component is a spectral element present at a specific position in the frequency response of a code.

9. The system of claim 1 or the method of claim 8, wherein the code list is one of the following code lists:

code list 1: {(-1,-1,1,1),(-1,1,1,-1)},{(-1,-1,1,1),(1,-1,-1,1)},{(-1,1,1,-1),(1,1,-1,-1)},{(1,-1,-1,1),(1,1,-1,-1)};

code list 2: {(-1,-1,-1,-1,1,1,1,1),(-1,-1,1,1,1,1,1,-1,-1),(-1,1,-1,1,1,-1,1,-1),(-1,1,1,-1,1,-1,-1,1)},{(-1,-1,-1,-1,1,1,1,1),(-1,-1,1,1,1,1,1,-1,-1),(-1,1,-1,1,1,-1,1,-1),(1,-1,-1,1,-1,1,1,-1)},{(-1,-1,-1,-1,1,1,1,1),(-1,-1,1,1,1,1,1,-1,-1),(-1,1,1,-1,1,-1,-1,1),(1,-1,1,-1,-1,1,-1,1)},{(-1,-1,-1,-1,1,1,1,1),(-1,-1,1,1,1,1,1,-1,-1),(1,-1,-1,1,-1,1,1,-1),(1,-1,1,-1,-1,1,-1,1)},{(-1,-1,-1,-1,1,1,1,1),(-1,1,-1,1,1,-1,1,-1),(-1,1,1,-1,1,-1,-1,1),(1,1,-1,-1,-1,-1,1,1)},{(-1,-1,-1,-1,1,1,1,1),(-1,1,-1,1,1,-1,1,-1),(1,-1,-1,1,-1,1,1,-1),(1,1,-1,-1,-1,-1,1,1)},{(-1,-1,-1,-1,1,1,1,1),(-1,1,1,-1,1,-1,-1,1),(1,-1,1,-1,-1,1,-1,1),(1,1,-1,-1,-1,-1,1,1)},{(-1,-1,-1,-1,1,1,1,1),(1,-1,-1,1,-1,1,1,-1),(1,-1,1,-1,-1,1,-1,1),(1,1,-1,-1,-1,-1,1,1)},{(-1,-1,-1,1,1,1,1,-1),(-1,-1,1,1,-1,1,1,-1,1),(-1,1,1,-1,-1,1,-1,1,1),(-1,1,1,1,1,-1,-1,-1)},{(-1,-1,-1,1,1,1,1,-1),(-1,-1,1,1,-1,1,1,-1),(-1,1,-1,1,1,-1,1,-1),(1,-1,-1,-1,1,1,1)},{(-1,-1,-1,1,1,1,1,-1),(-1,-1,1,1,-1,1,1,-1),(-1,1,1,1,1,-1,-1,-1),(1,-1,1,1,-1,1,-1,-1)},{(-1,-1,-1,1,1,1,1,-1),(-1,-1,1,1,-1,1,1,-1),(1,-1,-1,-1,-1,1,1,1),(1,-1,1,1,-1,1,-1,-1)},{(-1,-1,-1,1,1,1,1,-1),(-1,1,1,-1,1,-1,-1,1),(-1,1,1,1,1,-1,-1,-1),(1,1,-1,1,-1,-1,1,-1)},{(-1,-1,-1,1,1,1,1,-1),(-1,1,1,1,1,-1,-1,-1),(1,-1,-1,-1,1,1,1,1),(1,1,-1,1,-1,-1,1,-1)},{(-1,-1,-1,1,1,1,1,-1),(-1,1,1,1,1,-1,-1,-1),(1,-1,1,1,-1,1,-1,-1),(1,1,-1,1,-1,-1,1,-1)},{(-1,-1,1,1,1,1,1,-1),(1,-1,-1,-1,-1,1,1,1),(1,-1,1,1,-1,1,-1,-1),(1,1,-1,1,-1,-1,1,-1)},{(-1,-1,1,-1,1,1,-1,1),(-1,1,-1,-1,1,-1,1,1),(-1,1,1,1,1,-1,-1,-1),(1,1,1,-1,-1,-1,1,-1)},{(-1,-1,1,-1,1,1,-1,1),(-1,1,-1,-1,1,-1,1,1),(1,-1,-1,-1,-1,1,1,1),(1,1,1,-1,-1,-1,1,-1)},{(-1,-1,1,-1,1,1,-1,1),(1,-1,-1,-1,-1,1,1,1),(1,-1,1,1,-1,1,-1,-1),(1,1,1,-1,-1,-1,1,-1)},{(-1,-1,1,1,1,1,-1,-1),(-1,1,1,-1,1,1,-1,1,-1),(-1,1,1,1,1,-1,-1,-1),(1,1,1,1,-1,-1,-1,-1)},{(-1,-1,1,1,1,1,-1,-1),(-1,1,1,-1,1,1,-1,1,-1),(1,-1,-1,1,-1,1,1,-1),(1,1,1,1,-1,-1,-1,-1)},{(-1,-1,1,1,1,1,-1,-1),(-1,1,1,-1,1,1,-1,1,-1),(1,-1,1,-1,-1,1,-1,1),(1,1,1,1,-1,-1,-1,-1)},{(-1,-1,1,1,1,1,-1,-1),(1,-1,-1,1,-1,1,1,-1),(1,-1,1,-1,-1,1,-1,1),(1,1,1,1,-1,-1,-1,-1)},{(-1,1,1,-1,-1,1,1,1),(1,-1,-1,-1,-1,1,1,1),(1,1,-1,1,-1,-1,1,-1),(1,1,1,1,-1,-1,-1,-1)},{(-1,1,-1,1,1,-1,1,-1),(-1,1,1,-1,1,-1,-1,1),(1,1,-1,-1,-1,-1,1,1),(1,1,1,1,-1,-1,-1,-1)},{(-1,1,-1,1,1,-1,1,-1),(1,-1,-1,1,-1,1,1,-1),(1,1,-1,-1,-1,-1,1,1),(1,1,1,1,-1,-1,-1,-1)},{(-1,1,1,-1,1,-1,-1,1),(1,-1,-1,1,-1,1,1,-1),(1,1,-1,-1,-1,-1,1,1),(1,1,1,1,-1,-1,-1,-1)},{(-1,1,1,1,1,-1,-1,-1),(1,-1,1,1,-1,1,1,-1,-1),(1,1,-1,1,-1,-1,1,-1),(1,1,1,1,-1,-1,-1,-1)},{(1,-1,-1,-1,-1,1,1,1),(1,-1,1,1,-1,1,-1,-1),(1,1,-1,1,-1,-1,1,-1),(1,1,1,-1,-1,-1,-1,1)},{(1,-1,-1,1,-1,1,1,-1),(1,-1,1,-1,-1,1,-1,1),(1,1,-1,-1,-1,-1,1,1),(1,1,1,1,-1,-1,-1,-1)}; or

code list 3: {(-1,-1,-1,1,1,-1,1,1),(-1,-1,1,1,-1,-1,1,1,1,1),(-1,1,1,-1,-1,1,1,1,1,-1),(-1,1,1,1,1,-1,-1,1,1,-1),(-1,-1,1,1,1,1,1,-1,-1),(-1,1,1,-1,1,1,-1,1,1)},   {(-1,-1,-1,1,1,-1,1,1),(-1,-1,1,1,-1,-1,1,1,1,1),(-1,1,1,-1,-1,1,1,1,1,-1),(-1,1,1,1,1,-1,-1,1,-1),(-1,-1,1,1,1,1,1,-1,-1),(1,-1,-1,1,-1,1,1,1,-1)},   {(-1,-1,-1,1,1,-1,1,1),(-1,-1,1,1,-1,-1,1,1,1),(-1,1,1,-1,1,1,1,1,-1),(-1,1,1,1,1,-1,-1,1,-1),(-1,1,1,-1,1,1,-1,1,-1),(1,1,1,-1,-1,-1,-1,1,1,1)},   {(-1,-1,-1,1,1,-1,1,1),(-1,-1,1,1,-1,-1,1,1,1),(-1,1,1,-1,-1,1,1,1,1,-1),(-1,1,1,1,1,-1,-1,1,1,-1),(1,-1,-1,1,1,-1,1,1,1,-1),(1,1,1,-1,-1,-1,-1,1,1,1)},   {(-1,-1,-1,1,1,1,-1,1,1,1),(-1,-1,1,1,-1,-1,1,1,1,1),(-1,1,1,-1,-1,1,1,1,1,-1),(1,-1,-1,1,-1,1,1,1,-1,1),(-1,-1,1,1,1,1,1,1,-1,-1),(-1,1,1,1,-1,1,1,-1,1,-1,1,1)},   {(-1,-1,-1,1,1,-1,1,1),(-1,-1,1,1,-1,-1,1,1,1,1),(-1,1,1,-1,-1,1,1,1,1,-1),(1,-1,-1,1,-1,-1,1,1,1,-1,1),(-1,-1,1,1,1,1,1,1,-1,-1),(1,-1,-1,1,1,-1,1,1,1,-1)},   {(-1,-1,-1,1,1,-1,1,1),(-1,-1,1,1,-1,-1,1,1,1,1),(-1,1,1,-1,-1,1,1,1,1,-1),(1,-1,-1,1,-1,-1,1,1,1,-1),(-1,1,1,1,-1,1,1,-1,-1,1),(1,1,1,-1,-1,-1,-1,1,1,1)},   {(-1,-1,-1,1,1,1,-1,1,1,1),(-1,-1,1,1,-1,-1,1,1,1,1),(-1,1,1,-1,-1,1,1,1,1,-1),(1,-1,-1,1,-1,1,1,1,1,-1,1),(1,-1,-1,1,1,-1,1,1,1,-1),(1,1,1,-1,-1,-1,-1,1,1,1)},   {(-1,-1,-1,1,1,1,-1,1,1,1),(-1,-1,1,1,-1,-1,1,1,1,1),(-1,1,1,1,1,-1,-1,1,1,-1),(1,-1,-1,1,1,-1,1,1,1,-1),(-1,1,1,1,-1,-1,-1,1,1),(-1,1,1,1,-1,1,1,-1,-1,1)},   {(-1,-1,-1,1,1,1,-1,1,1,1),(-1,-1,1,1,-1,-1,1,1,1,1),(-1,1,1,-1,-1,1,1,1,1,-1),(1,-1,-1,1,1,-1,1,1,1,-1),(-1,-1,1,1,1,1,1,1,-1,-1),(-1,-1,1,1,-1,1,1,1,-1)},   {(-1,-1,-1,1,1,1,-1,1,1,1),(-1,-1,1,1,-1,-1,1,1,1,1),(-1,1,1,-1,-1,1,1,1,1,-1),(1,-1,-1,1,1,-1,1,1,1,-1),(-1,-1,1,1,1,1,1,1,-1,-1),(1,1,1,-1,-1,-1,-1,1,1,1)},   {(-1,-1,-1,1,1,1,-1,1,1,1),(-1,-1,1,1,-1,-1,1,1,1,1),(-1,1,1,1,1,-1,-1,1,1,-1),(1,-1,-1,1,1,-1,1,1,1,-1),(1,1,1,-1,-1,-1,-1,1,1,1)},   {(-1,-1,-1,1,1,1,-1,1,1,1),(-1,-1,1,1,-1,-1,1,1,1,1),(-1,1,1,1,1,-1,-1,1,1,-1),(1,-1,1,1,1,-1,-1,-1,1,1),(-1,-1,1,1,1,1,1,1,-1,-1),(-1,1,1,1,-1,1,1,-1,-1,1)},   {(-1,-1,-1,1,1,1,-1,1,1,1),(-1,-1,1,1,-1,-1,1,1,1,1),(1,-1,-1,1,1,1,-1,1,-1),(1,-1,1,1,1,-1,-1,-1,1,1),(-1,-1,1,1,1,1,1,1,-1,-1),(1,-1,-1,1,1,1,1,-1)},   {(-1,-1,-1,1,1,1,-1,1,1,1),(-1,-1,1,1,-1,-1,1,1,1,1),(1,-1,-1,1,1,1,-1,1,-1),(1,-1,1,1,1,-1,-1,-1,1,1),(-1,1,1,1,-1,1,1,-1,-1,1),(1,1,1,-1,-1,-1,-1,1,1,1)},   {(-1,-1,-1,1,1,1,-1,1,1,1),(-1,-1,1,1,-1,-1,1,1,1,1),(1,-1,-1,1,1,1,-1,1,-1),(1,-1,1,1,1,-1,-1,1,1),(1,1,1,-1,-1,-1,-1,1,1,1)},   {(-1,-1,-1,1,1,1,-1,1,1,1),(-1,-1,1,1,1,-1,1,1,1,-1),(-1,1,1,-1,-1,1,1,1,1,-1),(-1,-1,1,1,1,1,1,1,-1,-1),(-1,-1,1,1,1,1,1,-1,-1,-1),(-1,-1,1,1,1,1,1,-1,-1)},   {(-1,-1,-1,1,1,1,-1,1,1,1),(-1,-1,1,1,1,-1,1,1,1,-1),(-1,1,1,-1,-1,1,1,1,1,-1),(-1,-1,1,-1,1,1,1,-1,-1,1),(1,-1,-1,-1,-1,1,1,1)},   {(-1,-1,-1,1,1,-1,1,1),(-1,-1,1,1,1,-1,1,1,1,-1),(-1,1,1,-1,-1,1,1,1,1,-1),(1,-1,-1,1,1,1,1,-1,-1),(-1,1,1,1,1,1,-1,-1,-1),(1,1,1,-1,1,1,-1,-1,1,-1)},   {(-1,-1,-1,1,1,-1,1,1),(-1,-1,1,1,1,-1,1,1,1,-1),(-1,1,1,-1,-1,1,1,1,1,-1),(1,-1,-1,1,1,1,1,-1,-1),(1,-1,-1,-1,-1,1,1,1,1,-1),(1,1,-1,1,1,-1,-1,1,-1)},   {(-1,-1,-1,1,1,1,-1,1,1,1),(-1,-1,1,1,-1,1,1,1,-1),(-1,1,1,1,-1,-1,-1,1,1),(1,-1,1,1,1,-1,-1,-1,1,1),(-1,1,1,1,1,1,-1,-1,-1),(-1,1,1,1,1,1,1,-1,-1,-1)},   {(-1,-1,-1,1,1,-1,1,1),(-1,-1,1,1,-1,1,1,1,-1),(-1,1,1,1,-1,-1,-1,1,1),(1,-1,1,1,1,-1,-1,-1,1,1),(-1,1,1,1,1,1,1,-1,-1,-1),(-1,-1,1,1,1,1,1,1,-1,-1)},   {(-1,-1,-1,1,1,-1,1,1),(-1,-1,1,1,-1,1,1,1,-1),(-1,1,1,1,-1,-1,-1,1,1),(1,-1,1,1,1,-1,-1,-1,1,1),(-1,1,1,1,1,1,1,-1,-1,-1),(-1,1,1,1,1,1,1,-1,-1,-1),(-1,1,1,1,1,1,1,-1,-1,-1)},   {(-1,-1,-1,1,1,-1,1,1),(-1,-1,1,1,-1,1,1,1,-1),(-1,1,1,1,-1,-1,-1,1,1),(1,-1,1,1,1,-1,-1,-1,1,1),(-1,1,1,1,1,1,1,-1,-1,-1),(1,-1,1,1,1,-1,-1,1,1,-1)},   {(-1,-1,-1,1,1,-1,1,1),(-1,-1,1,1,-1,1,1,1,-1),(-1,1,1,1,-1,-1,-1,1,1),(1,-1,1,1,1,-1,-1,-1,1,1),(1,1,1,-1,-1,-1,-1,1,1),(1,1,-1,1,1,-1,-1,1,-1)},   {(-1,-1,-1,1,1,-1,1,1),(-1,-1,1,1,-1,1,1,1,-1),(-1,1,1,1,-1,-1,-1,1,1),(1,-1,-1,1,1,1,1,-1,-1),(1,-1,-1,-1,-1,1,1,1,1,-1),(-1,1,1,1,1,1,1,-1,-1,-1)},   {(-1,-1,-1,1,1,-1,1,1),(-1,-1,1,1,-1,1,1,1,-1),(-1,1,1,1,-1,-1,-1,1,1),(1,-1,1,1,1,-1,-1,-1,1,1),(1,1,-1,1,1,-1,-1,1,-1)},   {(-1,-1,-1,1,1,-1,1,1),(-1,-1,1,1,-1,1,1,1,-1),(-1,1,1,1,-1,-1,-1,1,1),(1,-1,1,1,1,-1,-1,-1,1,1),(-1,1,1,1,1,1,1,-1,-1,-1),(1,1,-1,1,1,-1,-1,1,1,-1)},   {(-1,-1,-1,1,1,-1,1,1),(-1,-1,1,1,-1,1,1,1,-1),(-1,1,1,1,-1,-1,-1,1,1),(1,-1,1,1,1,-1,-1,-1,1,1),(1,1,-1,1,1,-1,-1,1,1,-1)},   {(-1,-1,-1,1,1,-1,1,1),(-1,-1,1,1,-1,1,1,1,-1),(-1,1,1,1,-1,-1,-1,1,1),(-1,-1,1,1,1,1,1,1,-1,-1),(-1,1,1,1,1,1,1,-1,-1,-1),(1,1,-1,1,-1,-1,1,-1)},   {(-1,-1,-1,1,1,-1,1,1),(-1,-1,1,1,-1,1,1,1,-1),(-1,1,1,1,-1,-1,-1,1,1),(1,1,-1,1,1,-1,-1,1,-1),(-1,-1,1,1,1,1,1,1,-1,-1),(-1,1,1,1,-1,-1,-1,1,1)},   {(-1,-1,-1,1,1,-1,1,1),(-1,-1,1,1,-1,1,1,1,-1),(-1,1,1,1,-1,-1,-1,1,1),(-1,1,1,1,1,-1,-1,-1,1,1),(1,1,-1,1,1,-1,-1,1,-1)},   {(-1,-1,-1,1,1,-1,1,1),(-1,-1,1,1,-1,1,1,1,-1),(-1,1,1,1,-1,-1,-1,1,1),(1,1,-1,1,1,-1,-1,1,-1),(-1,-1,1,1,1,1,1,1,-1,-1),(-1,1,1,1,1,1,1,-1,-1,-1)},   {(-1,-1,-1,1,1,-1,1,1),(-1,-1,1,1,-1,1,1,1,-1),(-1,1,1,1,-1,-1,-1,1,1),(1,1,-1,1,-1,-1,1,1),(-1,-1,1,1,1,1,1,1,-1,-1),(-1,1,1,1,1,1,1,-1,-1,-1),(1,1,-1,-1,-1,1,1,-1)},   {(-1,-1,-1,1,1,-1,1,1),(-1,-1,1,1,1,-1,1,1,1,-1),(-1,1,1,1,-1,-1,1,-1),(-1,-1,1,1,1,1,1,1,-1,-1),(-1,1,1,1,1,1,1,-1,-1,-1)},   {(-1,-1,-1,1,1,-1,1,1),(-1,-1,1,1,1,-1,1,1,1,-1),(1,-1,-1,1,1,1,-1,1,-1),(1,-1,1,1,1,-1,-1,-1,1,1),(1,1,-1,1,1,-1,-1,1,-1)},   {(-1,-1,-1,1,1,-1,1,1),(-1,-1,1,1,-1,1,1,1,-1),(1,-1,-1,1,1,1,-1,1,-1),(1,-1,1,1,1,-1,-1,-1,1,1),(-1,1,1,1,-1,-1,-1,1,1),(-1,1,1,1,1,1,1,-1,-1,-1),(1,1,-1,1,-1,-1,1,1,-1)},   {(-1,-1,-1,1,1,1,-1,1,1,1),(-1,-1,1,1,-1,-1,1,1,1,1),(1,1,-1,1,-1,1,-1,-1,1,1),(-1,-1,1,1,-1,1,1,1,-1),(1,-1,-1,-1,1,1,1,1,-1)},   {(-1,-1,-1,1,1,-1,1,1,1),(-1,-1,1,1,-1,-1,1,1,1,1),(-1,1,1,1,-1,-1,-1,1,1),(1,1,-1,1,-1,1,-1,-1,1),(-1,1,1,1,1,1,1,-1,-1,-1),(1,1,-1,1,-1,-1,1,-1)},   {(-1,-1,-1,1,1,-1,1,1),(-1,-1,1,1,-1,-1,1,1,1,-1),(-1,1,1,1,-1,-1,1,-1),(1,1,-1,1,-1,-1,1,1),(1,-1,-1,-1,-1,1,1,1,1),(-1,1,1,1,1,-1,-1,-1,1,1),(1,1,-1,1,-1,-1,1,1,-1)},   {(-1,-1,-1,1,1,-1,1,1),(-1,-1,1,1,-1,-1,1,1,1,-1),(-1,1,1,1,-1,-1,1,1,-1),(1,1,-1,1,-1,-1,1,1),(-1,-1,-1,-1,-1,1,1,1)},   {(-1,-1,-1,1,1,-1,1,1),(-1,-1,1,1,-1,-1,1,1,1,-1),(-1,1,1,1,-1,-1,-1,1,1),(1,1,1,-1,1,1,-1,-1,1,-1),(-1,-1,1,1,1,1,1,-1,-1,1),(1,-1,-1,1,-1,-1,1,1,1,-1)},   {(-1,-1,-1,1,1,-1,1,1),(-1,-1,1,1,-1,-1,1,1,1,-1),(1,-1,-1,1,1,1,-1,1,-1),(-1,-1,1,1,1,1,1,-1,-1,-1),(-1,-1,1,1,1,1,1,-1,-1)},   {(-1,-1,-1,1,1,-1,1,1),(-1,-1,1,1,-1,-1,1,1,1,-1),(-1,1,1,1,1,-1,-1,1,1,-1),(1,1,-1,1,-1,-1,1,-1),(-1,-1,1,1,1,1,1,-1,-1,1),(-1,1,1,1,-1,-1,-1,1,1)},   {(-1,-1,-1,1,1,-1,1,1),(-1,-1,1,1,-1,-1,1,1,1,-1),(-1,1,1,1,1,-1,-1,1,1,-1),(-1,-1,1,1,1,1,1,-1,-1,-1),(1,1,-1,1,1,-1,-1,1,1),(1,1,-1,-1,-1,-1,1,1,1)},   {(-1,-1,-1,1,1,-1,1,1),(-1,-1,1,1,-1,-1,1,1,1,-1),(-1,1,1,1,1,-1,-1,1,1,-1),(1,1,-1,1,1,-1,-1,1,-1),(1,-1,-1,1,1,-1,1,1,1,-1),(1,1,-1,-1,-1,-1,1,1,1)},   {(-1,-1,-1,1,1,-1,1,1),(-1,-1,1,1,-1,-1,1,1,1,-1),(1,-1,-1,1,1,1,-1,1,-1),(1,1,-1,1,1,-1,-1,1,1),(-1,1,1,1,1,1,1,-1,-1,-1),(1,1,-1,-1,-1,-1,1,1,1)},   {(-1,-1,-1,1,1,-1,1,1),(-1,-1,1,1,-1,-1,1,1,1,-1),(1,-1,-1,1,1,1,1,-1,-1),(1,1,-1,1,1,-1,-1,1,-1),(1,-1,-1,1,1,1,1,-1,-1),(1,1,-1,-1,-1,-1,1,1,1)},   {(-1,-1,-1,1,1,-1,1,1),(-1,-1,1,1,-1,-1,1,1,1,-1),(1,-1,-1,1,1,1,-1,1,-1),(1,1,-1,-1,1,-1,-1,1,-1),(-1,1,1,1,1,1,1,-1,-1,1),(-1,1,1,1,1,1,1,-1,-1)},   {(-1,-1,-1,1,1,-1,1,1),(-1,-1,1,1,-1,-1,1,1,1,-1),(1,-1,-1,1,1,1,1,-1,-1),(1,1,-1,-1,1,-1,-1,1,-1),(-1,1,1,-1,1,1,-1,1,1),(1,1,-1,-1,-1,-1,1,1,1)},   {(-1,-1,-1,1,1,-1,1,1),(-1,-1,1,1,-1,-1,1,1,1,-1),(1,-1,-1,1,1,1,-1,1,-1),(1,1,-1,-1,1,1,-1,-1,1,1),(1,-1,-1,-1,-1,1,1,1),(1,1,-1,-1,-1,1,1,-1)}

1),(1,1,-1,-1,1,-1,-1,1),(1,-1,-1,-1,-1,1,1,1),(1,1,-1,1,1,-1,-1,1,-1)},     {(-1,-1,-1,1,1,-1,1,1),(-1,1,1,-1,-1,-1,1,1),(1,-1,1,1,-1,-1,-1,1),(1,1,-1,-1,1,-1,-1,1),(-1,-1,1,1,-1,1,1,-1,1),(-1,1,1,1,1,-1,-1,-1)},     {(-1,-1,-1,1,1,-1,1,1),(-1,1,1,-1,-1,-1,1,1),(1,-1,1,1,-1,-1,-1,1),(1,1,-1,-1,1,-1,-1,1),(-1,-1,1,1,-1,1,1,-1,1),(1,-1,-1,-1,-1,1,1,1)},     {(-1,-1,-1,1,1,-1,1,1),(-1,1,1,-1,-1,-1,1,1),(1,-1,1,1,-1,-1,-1,1),(1,1,-1,-1,1,-1,-1,1),(-1,1,1,1,1,-1,-1,-1),(1,1,-1,1,-1,-1,1,-1)},     {(-1,-1,-1,1,1,-1,1,1),(-1,1,1,-1,-1,-1,1,1),(1,-1,1,1,-1,-1,-1,1),(1,1,-1,-1,1,-1,-1,1),(1,-1,-1,-1,-1,1,1,1),(1,1,-1,1,-1,-1,1,-1)},     {(-1,-1,-1,1,1,-1,1,1),(-1,1,1,1,1,-1,-1,1,-1),(1,-1,1,1,-1,-1,-1,1),(1,1,-1,1,1,-1,-1,-1),(-1,-1,1,1,1,1,-1,-1),(-1,1,1,1,-1,1,1,-1,-1,1)},     {(-1,-1,-1,1,1,-1,1,1),(-1,1,1,1,1,-1,-1,1),(1,-1,1,1,-1,-1,-1,1),(1,1,-1,1,1,-1,-1,-1),(-1,-1,1,1,1,1,-1,-1),(1,-1,-1,1,-1,1,1,1)},     {(-1,-1,-1,1,1,-1,1,1),(-1,1,1,1,1,-1,-1,1,-1),(1,-1,1,1,-1,-1,-1,1,-1),(1,1,-1,1,1,-1,-1,-1),(-1,1,1,1,-1,1,1,-1,1),(1,1,-1,-1,-1,-1,1,1,1)},     {(-1,-1,-1,1,1,-1,1,1),(1,-1,-1,-1,1,1,-1,1),(1,-1,1,1,-1,-1,-1,1),(1,1,-1,1,1,-1,-1,-1),(-1,-1,1,1,1,1,-1,-1),(-1,1,1,1,-1,-1,1,-1)},     {(-1,-1,-1,1,1,-1,1,1),(1,-1,-1,1,1,1,-1,-1),(1,-1,1,1,-1,-1,-1,1),(1,1,-1,1,1,-1,-1,-1),(-1,1,1,1,-1,1,1,-1,1),(-1,-1,1,1,1,1,-1,-1,1)},     {(-1,-1,-1,1,1,-1,1,1),(1,-1,-1,1,1,1,-1,-1),(1,-1,1,1,-1,-1,-1,1),(1,1,-1,-1,1,-1,-1,1),(-1,1,1,-1,1,1,-1,-1,1),(1,-1,-1,-1,-1,1,1,1)},     {(-1,-1,-1,1,1,-1,1,1),(1,-1,-1,1,1,1,-1,-1),(1,-1,1,1,-1,-1,-1,1),(1,1,-1,-1,1,-1,-1,-1),(-1,1,1,1,1,1,-1,-1,-1),(1,1,-1,1,-1,-1,1,-1)},     {(-1,-1,-1,1,1,-1,1,1),(1,-1,-1,1,1,1,-1,-1),(1,-1,1,1,-1,-1,-1,1),(1,1,-1,1,1,-1,-1,-1),(-1,1,1,-1,1,-1,-1,-1),(1,1,-1,-1,-1,1,1,1)},     {(-1,-1,-1,1,1,-1,1,1),(1,-1,-1,-1,1,1,1,-1),(1,-1,1,1,-1,-1,-1,1),(1,1,-1,-1,1,-1,-1,-1),(-1,1,1,1,1,1,-1,-1,-1),(1,1,-1,-1,-1,1,1,1)},     {(-1,-1,1,1,-1,1,1,1),(-1,-1,1,1,1,1,-1,-1,1),(-1,1,1,1,-1,1,1,1,-1),(-1,1,1,1,-1,-1,1,1,-1),(-1,-1,-1,1,1,1,1,1,-1),(-1,1,-1,-1,1,1,1,1)},     {(-1,-1,1,1,-1,1,1,1),(-1,-1,1,1,1,1,-1,-1,1),(-1,1,1,1,-1,1,1,-1,1),(-1,1,1,1,1,-1,-1,1,-1),(-1,1,1,1,1,1,-1,-1,-1),(1,-1,1,1,1,-1,1,-1,-1)},     {(-1,-1,1,1,-1,1,1,1),(-1,-1,1,1,1,1,-1,-1,1),(-1,1,1,1,-1,1,1,-1,-1),(-1,1,1,1,-1,-1,1,1,1),(1,1,1,1,-1,-1,-1,1,1)},     {(-1,-1,1,1,-1,1,1,1),(-1,-1,1,1,1,1,-1,-1,1),(-1,1,1,1,-1,1,1,-1,-1,1),(-1,1,1,1,-1,-1,1,-1,-1),(1,-1,1,1,1,-1,1,-1,-1),(1,1,1,1,-1,-1,-1,1,1)},     {(-1,-1,1,1,-1,1,1,1),(-1,1,1,1,1,-1,-1,1),(-1,1,1,1,-1,1,1,-1,-1),(-1,1,-1,-1,1,1,-1,-1),(-1,-1,-1,1,1,1,1,-1),(-1,1,-1,1,1,1,1,1)},     {(-1,-1,1,-1,-1,1,1,1),(-1,-1,1,1,1,1,-1,-1,1),(-1,1,1,1,-1,1,1,-1,-1),(1,-1,-1,-1,-1,1,1,1),(-1,-1,-1,1,1,1,1,1,-1),(-1,1,-1,1,-1,1,1,1)},     {(-1,-1,1,-1,-1,1,1,1),(-1,-1,1,1,1,1,-1,-1,1),(-1,1,1,1,-1,1,1,-1,-1),(-1,1,1,1,-1,-1,1,1,1),(1,1,1,1,-1,-1,-1,1,1)},     {(-1,-1,1,-1,-1,1,1,1),(-1,-1,1,1,1,1,-1,-1,1),(-1,1,1,1,-1,1,1,-1,-1),(1,-1,-1,-1,-1,1,1,1),(-1,-1,-1,1,1,1,1,-1),(-1,1,-1,1,1,1,1,1)},     {(-1,-1,1,-1,-1,1,1,1),(-1,-1,1,1,1,1,-1,-1,1),(1,-1,1,1,-1,-1,1,1,-1),(-1,-1,-1,1,1,1,1,-1),(-1,1,-1,-1,1,1,1,1)},     {(-1,-1,1,-1,-1,1,1,1),(-1,-1,1,1,1,1,-1,-1,1),(-1,1,1,1,-1,1,1,-1,1),(1,-1,-1,1,-1,-1,1,1),(-1,-1,1,1,1,1,-1,-1,1),(1,1,1,1,-1,-1,-1,1,1)},     {(-1,-1,1,-1,-1,1,1,1),(-1,1,1,-1,-1,1,1,-1),(-1,1,1,1,-1,1,1,-1,1),(1,-1,-1,1,-1,-1,1,1),(-1,-1,1,1,1,1,-1,-1,1),(1,-1,1,1,1,-1,1,-1,-1)},     {(-1,-1,1,-1,-1,1,1,1),(-1,1,1,-1,-1,1,1,-1),(-1,1,1,1,-1,1,1,-1,1),(1,-1,-1,-1,-1,1,1,1),(-1,-1,-1,1,1,1,1,-1),(1,1,1,1,-1,-1,-1,1,1)},     {(-1,-1,1,-1,-1,1,1,1),(-1,1,1,1,1,-1,-1,1),(-1,1,1,1,-1,1,1,-1,1),(1,-1,-1,1,-1,-1,1,1),(-1,-1,1,1,1,1,-1,-1,1),(1,1,1,1,-1,-1,-1,1,1)},     {(-1,-1,1,-1,-1,1,1,1),(-1,-1,1,1,1,1,-1,-1,1),(-1,1,1,1,-1,1,1,-1,1),(1,-1,-1,1,-1,-1,1,1),(-1,-1,-1,1,1,1,1,1,-1),(1,1,1,-1,-1,-1,-1,1)},     {(-1,-1,1,-1,-1,1,1,1),(-1,1,1,-1,-1,1,1,-1),(1,-1,-1,1,1,-1,-1,1),(1,1,1,-1,-1,1,1,-1),(-1,-1,1,1,1,1,-1,-1,1),(-1,-1,1,1,-1,-1,1,1)},     {(-1,-1,1,-1,-1,1,1,1),(-1,-1,1,1,1,1,-1,-1,1),(1,-1,-1,1,1,-1,-1,1),(1,-1,-1,1,-1,-1,1,1),(1,-1,-1,1,-1,-1,1,1),(-1,1,1,1,-1,1,1,-1,1),(1,1,1,1,-1,-1,-1,1)},     {(-1,-1,1,-1,-1,1,1,1),(-1,1,1,-1,-1,1,1,-1),(1,-1,-1,1,1,-1,-1,1),(1,1,1,-1,-1,-1,-1,1),(-1,1,1,1,1,1,-1,-1),(1,1,-1,-1,-1,-1,1,1)},     {(-1,-1,1,-1,-1,1,1,1),(-1,1,1,-1,-1,1,1,-1),(1,-1,-1,-1,1,1,-1,1),(1,1,1,-1,-1,-1,-1,1),(-1,1,1,1,1,1,-1,-1),(1,-1,-1,1,-1,1,1,1)},     {(-1,-1,1,-1,-1,1,1,1),(-1,1,1,-1,-1,1,1,-1),(-1,1,1,1,1,-1,-1,1,1),(1,1,1,-1,-1,-1,-1,1),(-1,1,1,1,1,1,-1,-1),(-1,1,1,1,-1,-1,1,1,1)},     {(-1,-1,1,-1,-1,1,1,1),(-1,1,1,-1,-1,1,1,-1),(-1,1,1,1,1,-1,-1,1,1),(1,1,1,-1,-1,-1,-1,1),(-1,1,1,1,1,1,-1,-1),(1,1,1,-1,-1,-1,-1,1)},     {(-1,-1,1,-1,-1,1,1,1),(-1,1,1,-1,-1,1,1,1,-1),(-1,1,1,1,1,-1,-1,1,1),(1,1,1,-1,-1,-1,-1,1),(-1,-1,1,1,1,1,1,-1),(-1,-1,1,1,-1,-1,1,1)},     {(-1,-1,1,-1,-1,1,1,1),(-1,1,1,-1,-1,1,1,1,-1),(-1,1,1,1,1,-1,-1,1,1),(1,1,1,-1,-1,-1,-1,1),(-1,-1,1,1,1,1,-1,1),(1,1,-1,-1,-1,-1,1,1)},     {(-1,-1,1,-1,-1,1,1,1),(-1,1,1,-1,-1,1,1,1,-1),(-1,1,1,1,1,-1,-1,1,1),(1,1,1,-1,-1,-1,-1,1),(-1,1,1,1,1,1,-1,-1),(-1,1,1,1,-1,-1,1,1)},     {(-1,-1,1,-1,-1,1,1,1),(-1,1,1,-1,-1,1,1,1,-1),(1,-1,-1,1,1,-1,-1,1),(1,1,1,-1,-1,1,1,-1),(-1,1,1,1,1,1,-1,-1,1),(-1,1,1,1,-1,-1,1,1)},     {(-1,-1,1,-1,-1,1,1,1),(-1,1,1,-1,-1,1,1,1,-1),(1,-1,-1,1,1,-1,-1,1),(1,1,1,-1,-1,1,1,-1),(1,-1,-1,1,-1,-1,1,1),(1,1,-1,-1,-1,-1,1,1)},     {(-1,-1,1,-1,-1,1,1,1),(-1,1,1,-1,-1,1,1,1,-1),(1,-1,-1,1,1,-1,-1,1),(1,1,1,-1,-1,1,1,-1),(-1,-1,1,1,1,1,-1,-1,1),(-1,-1,1,-1,1,-1,1,1)},     {(-1,-1,1,-1,-1,1,1,1),(-1,1,1,-1,1,1,1,-1),(1,-1,-1,1,1,-1,-1,1),(1,1,1,-1,-1,1,1,-1),(-1,1,-1,-1,1,1,1,1,-1),(-1,-1,1,-1,-1,1,1,1)},     {(-1,-1,1,-1,-1,1,1,1),(-1,1,1,-1,1,1,1,-1,-1),(-1,1,1,1,1,-1,-1,1,1),(1,1,1,-1,-1,1,1,-1),(-1,-1,-1,1,1,1,1,-1),(-1,-1,1,-1,-1,1,1,1)},     {(-1,-1,1,-1,-1,1,1,1),(-1,1,1,-1,1,1,1,-1,-1),(-1,1,1,1,1,-1,-1,1,1),(1,1,1,-1,-1,1,1,-1),(-1,1,-1,1,1,1,1,1),(1,1,1,-1,-1,-1,-1,1)},     {(-1,-1,1,-1,-1,1,1,1),(-1,1,1,-1,1,1,1,-1,-1),(-1,1,1,1,1,-1,-1,1,1),(1,1,1,-1,-1,1,1,-1),(-1,-1,1,1,1,1,-1,1),(1,1,1,-1,-1,-1,-1,1)},     {(-1,-1,1,-1,-1,1,1,1),(-1,1,1,-1,1,1,1,-1,-1),(-1,1,1,1,1,-1,-1,1,1),(1,1,1,-1,-1,1,1,-1),(-1,1,1,-1,1,-1,-1,1,1),(1,1,-1,-1,-1,-1,1,1)},     {(-1,-1,1,-1,-1,1,1,1),(-1,1,1,-1,1,1,1,-1,-1),(1,-1,-1,1,1,-1,-1,1),(1,1,1,-1,-1,1,1,-1),(-1,-1,1,1,1,1,-1,1),(1,1,-1,-1,-1,-1,1,1)},     {(-1,-1,1,-1,-1,1,1,1),(-1,1,1,-1,1,1,1,-1,-1),(-1,1,1,1,1,-1,-1,1,1),(1,1,-1,-1,-1,1,1,-1),(-1,-1,-1,1,1,1,1,1,-1),(-1,-1,1,-1,-1,1,1,1)},     {(-1,-1,1,-1,-1,1,1,1),(-1,1,1,-1,1,1,1,-1,-1),(-1,1,1,1,1,-1,-1,1,1),(1,1,1,-1,-1,-1,-1,1),(-1,-1,1,1,1,1,1,1,-1),(1,-1,1,1,1,-1,1,-1,-1)},     {(-1,-1,1,-1,-1,1,1,1),(-1,1,1,-1,1,1,1,-1,-1),(-1,1,1,1,1,-1,-1,1,1),(1,1,1,-1,-1,-1,-1,1),(-1,1,-1,-1,1,1,1,1),(1,1,1,-1,-1,-1,-1,1)},     {(-1,-1,1,-1,-1,1,1,1),(-1,1,1,-1,1,1,1,-1,-1),(-1,1,1,1,1,-1,-1,1,1),(1,1,-1,-1,-1,1,1,-1),(1,-1,1,1,1,-1,1,-1,-1),(1,1,1,-1,-1,-1,-1,1)},     {(-1,-1,1,-1,-1,1,1,1),(-1,1,1,-1,1,1,1,-1,-1),(1,-1,-1,-1,1,1,1,-1),(1,1,1,-1,-1,-1,-1,1),(-1,1,1,1,1,1,1,-1,-1),(1,-1,1,1,1,-1,1,-1,-1)},     {(-1,-1,1,-1,-1,1,1,1),(-1,1,1,1,1,1,-1,-1),(1,-1,-1,-1,1,1,1,-1),(1,1,1,-1,-1,1,1,-1),(-1,-1,1,1,1,1,1,1,-1),(1,-1,1,1,1,-1,1,-1,-1)},     {(-1,-1,1,-1,-1,1,1,1),(-1,1,1,1,-1,1,1,-1,1),(1,-1,-1,-1,1,1,1,-1),(1,1,1,-1,-1,1,1,-1),(-1,-1,1,1,1,1,1,1,-1),(1,-1,1,1,1,-1,1,-1,-1)},     {(-1,-1,1,-1,-1,1,1,1),(-1,1,1,1,-1,1,1,-1),(1,-1,-1,-1,1,1,1,-1),(1,1,1,-1,-1,-1,1,1,-1),(-1,-1,-1,1,1,1,1,1,-1),(-1,1,1,1,-1,-1,1,1)},     {(-1,-1,1,-1,-1,1,1,1),(-1,1,1,1,-1,1,1,-1,-1),(1,-1,-1,-1,1,1,1,-1),(1,1,1,-1,-1,-1,1,1,-1),(-1,-1,1,1,1,1,1,1,-1),(1,-1,1,1,1,-1,1,-1,-1)},     {(-1,-1,1,-1,-1,1,1,1),(-1,1,1,1,-1,1,1,-1,-1),(1,-1,-1,-1,1,1,1,-1),(1,1,-1,-1,-1,1,1,1,-1),(-1,-1,-1,1,1,1,1,1,-1),(1,-1,1,1,1,-1,-1,1,-1,-1)},     {(-1,-1,1,-1,-1,1,1,1),(-1,1,1,1,-1,1,1,1,-1,-1),(1,-1,-1,-1,1,1,1,-1),(1,1,1,-1,-1,1,1,1,-1),(-1,-1,1,1,1,1,1,1,-1),(1,-1,1,1,1,-1,-1,1,-1,-1)},     {(-1,-1,1,-1,-1,1,1,1),(-1,1,1,-1,1,1,1,-1,-1,-1),(1,-1,-1,-1,1,1,1,-1),(1,1,-1,-1,-1,1,1,1,-1),(-1,-1,-1,1,1,1,1,1,-1),(1,-1,1,1,1,-1,-1,-1,1)},     {(-1,-1,1,-1,-1,1,1,1),(-1,1,1,1,-1,1,1,1,-1,-1),(1,-1,-1,-1,1,1,1,-1),(1,1,1,-1,-1,1,1,1,-1),(-1,-1,1,-1,1,-1,1,1,1),(1,1,1,-1,-1,

1,-1,1)}, {(-1,-1,1,-1,-1,1,1,1),(-1,1,1,-1,1,1,-1,-1),(1,-1,-1,-1,1,1,-1,1),(1,1,-1,-1,-1,1,1,-1),(1,-1,1,1,-1,1,1,-1),(1,1,1,-1,-1,-1,-1,1,1)}, {(-1,-1,1,-1,-1,1,1,1),(-1,1,1,1,-1,-1,1,1,-1),(1,-1,-1,1,-1,-1,1,1,1),(1,1,-1,-1,-1,1,1,1,-1),(-1,-1,-1,1,1,1,1,-1),(-1,1,1,-1,-1,1,-1,1,1,1)}, {(-1,-1,1,-1,-1,1,1,1),(-1,1,1,1,1,-1,-1,1,1,-1),(1,-1,-1,1,-1,-1,1,1,1),(1,1,-1,-1,-1,1,1,1,-1),(-1,-1,-1,1,1,1,1,1,-1),(1,-1,1,1,1,-1,1,1,-1,-1,1)}, {(-1,-1,1,-1,-1,1,1,1),(-1,1,1,1,1,-1,-1,1,1,-1),(1,-1,-1,1,1,-1,-1,1,1,1),(1,1,-1,-1,-1,1,1,1,-1),(-1,1,1,-1,-1,-1,1,1,-1,1,1),(1,1,1,1,-1,-1,-1,-1,1,1)}, {(-1,-1,1,-1,-1,1,1,1,1),(-1,1,1,1,1,-1,-1,1,1,-1),(1,-1,-1,1,1,-1,-1,1,1,1),(1,1,-1,-1,-1,1,1,1,-1),(1,-1,1,1,1,-1,1,1,-1,-1,1),(1,1,1,1,-1,-1,-1,-1,1,1)}, {(-1,-1,1,-1,-1,1,1,1,1),(-1,1,1,1,1,-1,-1,1,1,-1),(1,-1,1,1,1,-1,-1,1,1,-1),(1,1,1,-1,-1,-1,-1,1,1,1),(-1,-1,1,1,1,1,1,-1,-1),(-1,1,1,-1,-1,1,-1,1,1)}, {(-1,-1,1,-1,-1,1,1,1,1),(-1,1,1,1,1,-1,-1,1,1,-1),(1,-1,1,1,1,-1,-1,1,1,-1),(1,1,1,-1,-1,-1,-1,1,1,1),(-1,-1,-1,1,1,1,1,1,-1),(1,-1,1,1,-1,1,1,1,-1)}, {(-1,-1,1,-1,-1,1,1,1,1),(-1,1,1,1,1,-1,-1,1,1,-1),(1,-1,1,1,1,-1,-1,-1,1,1),(1,1,1,-1,-1,-1,-1,1,1,1),(-1,-1,1,1,1,1,1,-1,-1),(1,-1,-1,1,-1,1,1,1,-1)}, {(-1,-1,1,-1,-1,1,1,1,1),(-1,1,1,1,1,-1,-1,1,1,-1),(1,-1,-1,1,1,-1,-1,1,1,1),(1,1,1,-1,-1,1,1,-1,-1),(-1,1,1,1,-1,1,1,-1,-1,1),(1,1,-1,-1,-1,-1,1,1,1)}, {(-1,-1,1,-1,-1,1,1,1,1),(1,-1,-1,1,1,1,-1,-1,1),(1,-1,-1,1,-1,-1,1,1,1),(1,1,-1,-1,1,1,1,-1,-1),(-1,-1,-1,1,1,1,1,1,-1),(-1,1,1,-1,-1,1,1,1,1)}, {(-1,-1,1,-1,-1,1,1,1,1),(1,-1,-1,-1,1,1,1,-1,-1),(1,-1,-1,1,1,-1,-1,1,1,1),(1,1,1,-1,-1,-1,-1,1,1,1),(-1,-1,-1,1,1,1,1,1,1,-1),(-1,1,1,-1,-1,1,-1,1,1)}, {(-1,-1,1,-1,-1,1,1,1,1),(1,-1,-1,1,1,1,1,-1,-1),(1,-1,-1,1,1,-1,-1,1,1,1),(1,1,1,-1,-1,-1,-1,1,1,1),(-1,-1,-1,1,1,1,1,1,-1),(-1,1,1,-1,-1,1,1,-1,-1,1)}, {(-1,-1,1,-1,-1,1,1,1,1),(1,-1,-1,-1,1,1,1,-1,-1),(1,-1,-1,1,-1,-1,1,1,1),(1,1,1,-1,-1,-1,-1,1,1,1),(-1,-1,-1,1,1,1,1,1,1,-1),(-1,1,1,-1,-1,1,1,-1,-1,1)}, {(-1,-1,1,-1,-1,1,1,1,1),(1,-1,-1,-1,1,1,1,-1,-1),(1,-1,1,1,1,-1,-1,1,1,-1),(1,1,1,-1,-1,-1,-1,1,1,1),(-1,-1,1,1,1,1,1,-1,-1),(-1,-1,-1,1,1,1,1,1,-1),(-1,1,1,-1,-1,1,1,-1,-1,1)}, {(-1,-1,1,-1,-1,1,1,1,1),(1,-1,-1,-1,1,1,1,-1,-1),(1,-1,-1,1,1,1,-1,-1,1),(1,1,1,-1,-1,1,1,-1,-1,1),(1,-1,-1,1,1,-1,1,1,-1),(1,1,1,-1,-1,-1,1,1,1)}, {(-1,-1,1,1,-1,1,1,-1),(-1,-1,1,1,1,1,-1,-1,1),(-1,1,1,1,-1,-1,1,1,1),(-1,1,1,-1,1,1,1,-1,-1),(-1,-1,-1,1,1,1,1,1,1),(-1,1,1,-1,1,1,1,-1,-1,1)}, {(-1,-1,1,1,1,-1,1,1,-1),(-1,-1,1,1,1,1,-1,-1,1),(-1,1,1,1,-1,-1,1,1,1),(-1,1,1,1,-1,1,1,-1,-1),(-1,-1,-1,1,1,1,1,1,1),(1,-1,1,1,-1,-1,1,1,-1,1)}, {(-1,-1,1,1,1,-1,1,1,-1),(-1,-1,1,1,1,1,-1,-1,1),(-1,1,1,1,-1,-1,-1,1,1,1),(-1,1,1,1,-1,1,1,-1,-1),(-1,-1,1,1,1,1,-1,-1,1),(1,1,1,1,-1,-1,-1,1,-1)},

{(-1,-1,1,1,-1,1,1,-1),(-1,-1,1,1,1,-1,-1,1),(-1,1,1,1,-1,-1,1,1,1),(-1,1,1,-1,1,1,1,-1,-1),(1,-1,1,1,-1,-1,1,1,-1,1),(1,1,1,1,1,-1,-1,-1,-1,1)}, {(-1,-1,1,1,1,-1,1,1,-1),(-1,-1,1,1,1,1,-1,-1,1),(-1,1,1,1,-1,-1,-1,1,1,1),(-1,1,1,1,-1,1,1,1,-1),(1,-1,-1,-1,1,1,1,1,1),(-1,-1,1,1,1,-1,-1,1,1,-1,-1)}, {(-1,-1,1,1,1,-1,1,1,-1),(-1,-1,1,1,1,-1,-1,1),(-1,1,1,1,-1,-1,1,1,1),(1,-1,-1,1,1,-1,-1,1,1,1),(-1,-1,-1,1,1,1,1,1,1),(1,-1,1,1,-1,-1,1,1,-1,1)}, {(-1,-1,1,1,1,-1,1,1,-1),(-1,-1,1,1,1,-1,-1,1),(-1,1,1,1,-1,-1,1,1,1),(1,-1,-1,1,1,-1,-1,1,1,1),(-1,1,1,-1,1,1,1,-1,-1),(1,1,1,1,-1,-1,-1,-1,1,-1)}, {(-1,-1,1,1,1,-1,1,1,-1),(-1,-1,1,1,1,-1,-1,1),(-1,1,1,1,-1,-1,1,1,1),(1,-1,-1,1,1,-1,-1,1,1,1),(1,-1,1,1,-1,-1,1,1,-1),(1,1,1,1,-1,-1,-1,-1,1,-1)}, {(-1,-1,1,1,1,-1,1,1,-1),(-1,-1,1,1,1,-1,-1,1),(-1,1,1,1,-1,-1,-1,1,1,1),(1,-1,-1,1,1,1,-1,-1,1),(-1,-1,-1,1,1,1,1,1,-1),(-1,1,1,-1,1,1,1,-1,-1,1)}, {(-1,-1,1,1,1,-1,1,1,-1),(-1,-1,1,1,1,-1,-1,1),(-1,1,1,1,-1,-1,-1,1,1,1),(1,-1,-1,1,1,1,-1,-1,1),(-1,-1,-1,1,1,1,1,1,-1),(1,1,1,1,-1,-1,-1,1,-1)}, {(-1,-1,1,1,1,-1,1,1,-1),(-1,-1,1,1,1,-1,-1,1),(-1,1,1,1,-1,1,1,1,-1),(1,-1,-1,1,1,1,-1,-1,1),(1,-1,-1,1,1,-1,1,1,-1),(1,1,1,1,-1,-1,-1,1,-1)}, {(-1,-1,1,1,1,-1,1,1,-1),(-1,-1,1,1,1,1,-1,-1),(1,-1,-1,1,1,1,-1,-1,1),(1,-1,-1,1,1,1,-1,-1,1),(-1,-1,-1,1,1,1,1,1,1),(1,-1,1,1,-1,-1,1,1,-1,1)}, {(-1,-1,1,1,1,-1,1,1,-1),(-1,1,1,1,1,-1,-1,1,1),(1,-1,-1,1,1,1,-1,-1),(1,-1,-1,1,1,1,-1,-1,1),(-1,-1,-1,1,1,1,1,1,1),(-1,1,1,1,1,-1,1,1,-1)}, {(-1,-1,1,1,1,-1,1,1,-1),(-1,1,1,1,1,-1,-1,1),(1,-1,-1,1,1,-1,-1,1),(1,1,1,1,-1,-1,-1,1,-1)}, {(-1,-1,1,1,1,-1,1,1,-1),(-1,1,1,1,1,-1,-1,1,1),(1,-1,-1,1,1,1,-1,-1),(-1,1,1,1,1,1,-1,-1,1),(1,-1,-1,-1,1,1,1,1),(1,1,-1,1,-1,-1,1,1,-1)}, {(-1,-1,1,1,1,-1,1,1,-1),(-1,1,1,1,1,-1,-1,1),(1,-1,-1,1,1,1,-1,-1),(1,1,1,-1,-1,1,1,-1,-1),(-1,-1,1,1,1,1,-1,-1,1),(1,-1,-1,-1,1,1,1,1,1)}, {(-1,-1,1,1,1,-1,1,1,-1),(-1,1,1,-1,1,1,1,-1),(-1,1,1,1,-1,-1,1,1,1),(1,1,1,-1,-1,1,1,-1,-1),(-1,1,1,1,1,1,-1,-1,1),(1,1,-1,1,-1,-1,1,1,-1)},

{(-1,-1,1,1,1,-1,1,1,-1),(-1,1,1,-1,-1,-1,1,1,1),(-1,1,1,1,-1,-1,1,1,1),(1,1,1,-1,-1,1,1,-1,-1),(-1,-1,-1,1,1,1,1,1,1),(-1,1,1,-1,1,1,1,-1,-1,1)}, {(-1,-1,1,1,1,-1,1,1,-1),(-1,1,1,-1,-1,-1,1,1,1),(-1,1,1,1,1,-1,-1,1,1),(1,-1,-1,-1,1,1,1,1),(1,-1,-1,-1,1,1,1,1,1),(1,-1,1,1,-1,-1,1,1,-1)}, {(-1,-1,1,1,1,-1,1,1,-1),(-1,1,1,-1,-1,-1,1,1,1),(-1,1,1,1,-1,-1,1,1,1),(1,-1,-1,1,1,1,1,-1,-1),(-1,-1,1,1,1,1,-1,-1,1),(1,1,1,1,-1,-1,-1,1,-1)}, {(-1,-1,1,1,1,-1,1,1,-1),(-1,1,1,1,-1,-1,1,1,1),(1,-1,-1,1,1,1,-1,-1,1),(1,-1,-1,-1,1,1,1,1,-1),(1,-1,-1,1,1,1,-1,-1),(1,1,1,1,-1,-1,-1,1,-1)}, {(-1,-1,1,1,1,-1,1,1,-1),(-1,1,1,1,-1,-1,1,1,1),(1,-1,-1,-1,1,1,1,-1,1),(1,-1,-1,1,1,-1,-1,1,-1),(-1,1,1,1,1,-1,-1,1,1),(-1,1,1,-1,1,1,1,-1,-1,1)}, {(-1,-1,1,1,1,-1,1,1,-1),(-1,1,1,1,-1,-1,1,1,1),(1,-1,-1,1,1,1,-1,-1,1),(1,-1,-1,1,1,1,-1,-1,1),(-1,-1,-1,1,1,1,1,1,1),(1,-1,1,1,-1,1,1,-1,-1,1)}, {(-1,-1,1,1,1,-1,1,1,-1),(-1,1,1,1,-1,-1,1,1,1),(1,-1,-1,1,1,1,-1,-1,1),(1,-1,-1,1,1,1,-1,-1,1),(1,1,1,1,-1,-1,-1,1,-1)}, {(-1,-1,1,1,1,-1,1,1,-1),(-1,1,1,1,-1,-1,-1,1,1,1),(1,-1,-1,1,1,1,-1,-1),(1,-1,-1,1,1,1,-1,-1,1),(-1,-1,-1,1,1,1,1,1,1),(1,-1,1,1,-1,-1,1,1,-1)}, {(-1,-1,1,1,1,-1,1,1,-1),(-1,1,1,1,-1,-1,-1,1,1,1),(1,-1,-1,1,1,1,-1,-1,1),(1,1,1,-1,-1,1,1,-1,-1),(-1,1,1,1,1,1,-1,-1,1),(1,1,-1,1,-1,-1,1,1,-1)}, {(-1,-1,1,1,1,-1,1,1,-1),(-1,1,1,-1,-1,1,1,1,1),(-1,1,1,1,-1,-1,1,1,1),(1,1,1,-1,-1,1,1,-1,-1),(-1,1,1,1,1,1,-1,-1,1),(1,1,-1,1,-1,-1,1,1,-1)},

{(-1,-1,1,1,1,-1,1,1,-1),(-1,1,1,1,-1,-1,1,1,1),(-1,1,1,1,-1,1,1,-1,-1),(1,1,-1,-1,-1,1,1,1,-1),(-1,-1,1,1,1,1,-1,-1,1),(1,1,1,1,-1,-1,-1,-1,1,1,1)}, {(-1,-1,1,1,1,-1,1,1,-1),(-1,1,1,1,-1,-1,1,1,1,-1),(1,-1,-1,1,1,1,-1,-1),(1,1,1,1,-1,-1,1,-1),(-1,-1,1,-1,1,1,1,-1,1),(-1,1,1,1,1,1,-1,-1,1)}, {(-1,-1,1,1,1,-1,1,1,-1),(-1,1,1,1,-1,-1,1,1,1),(1,-1,-1,1,1,1,-1,-1,1),(1,1,1,1,-1,-1,1,-1),(-1,-1,1,-1,1,1,1,-1,1),(1,1,1,1,-1,-1,-1,1,-1)}, {(-1,-1,1,1,1,-1,1,1,-1),(-1,1,1,-1,-1,1,1,1,1),(1,1,1,-1,-1,1,1,-1,-1),(-1,-1,1,-1,1,1,1,-1,1),(1,-1,-1,-1,1,1,1,1),(1,1,1,1,-1,-1,-1,1,-1)}, {(-1,-1,1,1,1,-1,1,1,-1),(-1,1,1,1,-1,-1,1,1,1),(-1,1,1,-1,-1,-1,1,1,1),(1,1,1,-1,-1,1,1,-1,-1),(-1,1,1,-1,1,1,1,-1,-1,1),(1,-1,-1,-1,1,1,1,1,1)}, {(-1,-1,1,1,1,-1,1,1,-1),(-1,1,1,-1,-1,1,1,1,1),(-1,1,1,1,-1,-1,1,1,1),(1,1,1,-1,-1,1,1,-1,-1),(-1,1,1,1,1,1,-1,-1,1),(1,1,-1,1,-1,-1,1,1,-1)}, {(-1,-1,1,1,1,-1,1,1,-1),(-1,1,1,-1,1,1,1,-1,-1),(-1,1,1,1,-1,-1,1,1,1),(1,1,1,1,-1,-1,1,-1),(-1,-1,1,-1,1,1,1,-1,1),(1,1,-1,1,-1,-1,1,1,-1)},

{(-1,-1,1,1,1,-1,1,1,-1),(-1,1,1,1,-1,-1,-1,1,1,1),(-1,1,1,1,-1,1,1,-1,-1),(1,1,-1,-1,-1,1,1,1,-1),(-1,-1,-1,1,1,1,1,1,1),(-1,1,1,-1,1,1,1,-1,-1,1)}, {(-1,-1,1,1,1,-1,1,1,-1),(-1,1,1,1,-1,-1,-1,1,1,1),(-1,1,1,1,-1,1,1,1,-1),(1,1,1,-1,-1,-1,1,1,1,-1),(-1,1,-1,-1,1,1,1,1),(1,-1,-1,-1,1,1,1,1,1)}, {(-1,-1,1,1,1,-1,1,1,-1),(-1,1,1,1,-1,-1,-1,1,1,1),(-1,1,1,1,-1,1,1,-1,-1),(1,1,-1,-1,1,1,1,-1,-1),(-1,1,1,-1,1,1,1,-1,1,-1),(1,1,1,1,1,-1,-1,-1,1,-1)}, {(-1,-1,1,1,1,-1,1,1,-1),(-1,1,1,1,-1,-1,-1,1,1,1),(-1,1,1,1,-1,-1,1,1,-1,1),(1,1,1,-1,-1,-1,1,1,-1),(1,-1,-1,-1,1,1,-1,1,-1),(1,1,1,1,-1,-1,-1,1,-1)}, {(-1,-1,1,1,1,-1,1,1,-1),(-1,1,1,1,-1,-1,1,-1,1,1),(1,-1,-1,1,1,-1,-1,1,1,1),(1,1,-1,-1,-1,1,1,1,-1),(-1,-1,-1,1,1,1,1,1,1,1),(-1,1,1,1,1,1,-1,-1,1)}, {(-1,-1,1,1,1,-1,1,1,-1),(-1,1,1,1,-1,-1,1,-1,1,1),(1,-1,-1,1,1,-1,-1,1,1),(1,1,1,-1,-1,1,1,-1,-1),(-1,1,1,1,1,1,-1,-1,1),(-1,1,1,-1,1,1,1,-1,-1,1)},

{(-1,-1,1,1,1,-1,1,1,-1),(-1,1,1,1,-1,-1,-1,1,1),(-1,1,1,1,-1,1,1,-1,-1),(1,1,-1,-1,-1,1,1,1,-1),(-1,-1,-1,1,1,1,1,1,1),(1,-1,-1,-1,1,1,1,1,1)}, {(-1,-1,1,1,1,-1,1,1,-1),(-1,1,1,1,-1,-1,-1,1,1,1),(-1,1,1,1,-1,1,1,-1,-1),(1,1,-1,-1,-1,1,1,1,-1),(-1,-1,-1,1,1,1,1,1,1),(1,-1,1,1,1,-1,1,1,-1,-1,1)}, {(-1,-1,1,1,1,-1,1,1,-1),(-1,1,1,1,-1,-1,-1,1,1),(-1,1,1,1,-1,1,1,-1,-1),(1,1,1,1,-1,-1,1,1,-1),(-1,-1,1,-1,1,1,1,-1,1),(1,1,1,1,-1,-1,-1,1,-1)}, {(-1,-1,1,1,1,-1,1,1,-1),(-1,1,1,1,-1,-1,-1,1,1),(-1,1,1,1,-1,-1,1,1,-1,1),(1,1,1,-1,-1,-1,1,1,-1),(1,-1,-1,1,-1,1,-1,1,-1),(1,1,1,1,-1,-1,-1,1,-1)}, {(-1,-1,1,1,1,-1,1,1,-1),(-1,1,1,1,-1,1,1,1),(1,-1,-1,1,1,-1,-1,1,1),(1,1,-1,-1,-1,1,1,1,-1),(-1,-1,-1,1,1,1,1,1,1),(-1,1,1,1,1,1,-1,-1,1,-1)}, {(-1,-1,1,1,1,-1,1,1,-1),(-1,1,1,1,-1,-1,-1,1,1,1),(1,-1,-1,1,1,-1,-1,1,1,1),(1,1,-1,-1,-1,1,1,1,-1),(-1,-1,-1,1,1,1,1,1,1,1),(-1,1,1,1,1,1,-1,-1,1,1)}, {(-1,-1,1,1,1,-1,1,1,-1),(-1,1,1,1,-1,-1,-1,1,1),(1,-1,-1,1,-1,-1,1,1,1),(1,1,-1,-1,-1,1,1,1,-1),(-1,-1,1,1,1,1,-1,-1,1),(1,-1,1,1,-1,-1,1,1,-1,-1,1)}, {(-1,-1,1,1,1,-1,1,1,-1),(-1,1,1,1,-1,-1,-1,1,1,1),(1,-1,-1,1,-1,-1,1,1,1,1),(1,1,-1,-1,1,1,1,-1,-1),(-1,-1,-1,1,1,1,1,1,1,1),(-1,1,1,1,1,1,-1,-1,1,1)}, {(-1,-1,1,1,1,-1,1,1,-1),(-1,1,1,1,-1,-1,-1,1,1,1),(1,-1,-1,1,-1,-1,1,1,1,1),(1,1,-1,-1,-1,1,1,1,-1),(-1,-1,-1,1,1,1,1,1,1,1),(1,-1,1,1,-1,-1,1,1,-1,

1),(1,1,1,1,-1,-1,-1,-1)},    {(-1,-1,1,1,-1,1,1,-1),(-1,1,1,1,-1,-1,-1,1,1,1),(1,-1,-1,1,1,-1,-1,1,1,1),(1,1,-1,-1,-1,-1,1,1,1,-1),(1,-1,1,1,-1,-1,1,-1,1,1),(1,1,1,1,1,-1,-1,-1,-1)},    {(-1,-1,1,1,-1,1,1,-1),(-1,1,1,1,-1,-1,-1,1,1,1),(1,-1,1,1,1,-1,-1,1,-1,1,1),(1,1,1,1,-1,1,1,-1,-1,1),(-1,-1,1,1,-1,1,1,1,-1,1),(-1,1,1,1,1,1,-1,-1,-1)},    {(-1,-1,1,1,-1,1,1,-1),(-1,1,1,1,-1,-1,-1,1,1,1),(1,-1,1,1,1,-1,-1,-1,-1,1),(1,1,1,1,-1,-1,1,1,-1,-1),(-1,-1,1,1,-1,1,1,1,-1,1),(1,-1,-1,-1,-1,1,1,1,1)},    {(-1,-1,1,1,1,-1,1,1,1,-1),(-1,1,1,1,-1,-1,-1,1,1,1),(1,-1,1,1,1,-1,-1,-1,1),(1,1,1,1,-1,-1,1,1,-1,-1,1),(-1,-1,1,1,1,1,1,-1,-1,-1),(1,1,-1,1,1,-1,-1,1,1,-1)},    {(-1,-1,1,1,1,-1,1,1,1,-1),(-1,1,1,1,-1,-1,-1,1,1,1),(1,-1,1,1,1,-1,-1,-1,1,1),(1,1,1,1,-1,-1,1,1,-1,-1),(1,-1,-1,-1,-1,1,1,1,1,1),(1,1,-1,1,1,-1,-1,1,1,-1)},    {(-1,-1,1,1,1,-1,1,1,1,-1),(-1,1,1,1,-1,1,1,1,-1,-1),(1,-1,-1,1,1,1,1,1,-1,-1),(1,1,-1,1,-1,-1,1,1,1,-1),(-1,-1,-1,-1,1,1,1,1,1,1),(-1,1,1,-1,1,1,1,-1,1,1,-1)},    {(-1,-1,1,1,1,-1,1,1,1,-1),(-1,1,1,1,-1,1,1,1,-1,-1),(1,-1,-1,1,1,1,1,-1,1,-1),(1,1,-1,-1,-1,1,1,1,1,1,-1),(-1,-1,-1,-1,1,1,1,1,1,1),(1,-1,1,-1,-1,1,1,-1,1)},    {(-1,-1,1,1,1,-1,1,1,1,-1),(-1,1,1,1,-1,1,1,1,-1,-1),(1,-1,-1,1,1,1,1,-1,1,-1),(1,1,-1,-1,-1,1,1,1,1,1,-1),(-1,1,-1,1,1,1,1,-1,1,1,-1),(1,1,1,1,1,-1,-1,-1,-1,-1)},    {(-1,-1,1,1,1,-1,1,1,1,-1),(-1,1,1,1,-1,1,1,1,-1,-1),(1,-1,-1,1,1,1,1,-1,1,-1),(1,1,-1,-1,-1,1,1,1,1,1,-1),(1,-1,1,-1,1,1,1,-1,1,1),(1,1,1,1,1,-1,-1,-1,-1,-1)},    {(-1,-1,1,1,1,-1,1,1,1,-1),(1,-1,-1,1,1,1,1,-1,-1,1),(1,-1,1,1,1,-1,-1,-1,-1,1),(1,1,-1,-1,-1,-1,1,1,1,1,-1),(1,-1,1,1,-1,-1,1,-1,1,1),(1,1,1,1,1,-1,-1,-1,-1,-1)},    {(-1,-1,1,1,1,-1,1,1,1,-1),(1,-1,-1,1,1,1,1,-1,-1,1),(1,-1,1,1,1,-1,-1,-1,1,1),(1,1,-1,-1,-1,-1,1,1,1,1,-1),(1,-1,1,-1,-1,-1,-1,1,1,1,1),(-1,1,1,-1,1,1,1,-1,1,-1)},    {(-1,-1,1,1,1,-1,1,1,1,-1),(1,-1,-1,1,1,1,-1,1,1,1,-1),(1,-1,1,1,1,-1,-1,-1,-1,1),(1,1,-1,-1,-1,-1,1,1,1,1,-1),(-1,-1,-1,-1,1,1,1,1,1,1),(1,-1,1,1,-1,-1,1,1,-1,-1,1)},    {(-1,-1,1,1,1,-1,1,1,1,-1),(1,-1,-1,1,1,1,-1,-1,-1,1),(1,-1,1,1,1,1,-1,-1,-1,1),(1,1,1,1,1,-1,-1,1,1,-1),(1,-1,-1,-1,-1,1,1,1,1,1),(1,1,-1,1,1,-1,-1,1,1,-1)},    {(-1,-1,1,1,1,-1,1,1,1,-1),(1,-1,-1,1,1,1,-1,-1,-1,1),(1,-1,1,1,1,-1,-1,-1,1,1,1),(1,1,1,1,1,-1,-1,1,1,-1),(-1,-1,-1,-1,1,1,1,1,1,1),(1,-1,1,1,-1,-1,1,1,-1,-1,1)},    {(-1,-1,1,1,1,-1,1,1,1,-1),(1,-1,-1,1,1,1,-1,-1,-1,1),(-1,1,1,1,1,1,1,-1,-1,-1,1),(1,1,-1,1,1,-1,-1,1,1,-1,-1,1),(1,-1,-1,-1,-1,1,1,1,1,1,1),(1,-1,1,1,-1,-1,1,1,-1,-1,-1)},    {(-1,-1,1,1,1,-1,1,1,1,-1),(-1,1,1,1,-1,-1,-1,1,1,1),(-1,1,1,1,-1,1,1,1,-1,-1,1),(1,1,1,-1,-1,1,1,-1,-1,-1),(-1,-1,-1,-1,1,1,1,1,1,1),(1,1,1,1,1,-1,-1,-1,-1,-1)},    {(-1,-1,1,1,1,-1,1,1,1,-1),(-1,1,1,1,-1,-1,-1,1,1,1),(-1,1,1,1,-1,1,1,1,-1,-1),(1,1,-1,1,-1,-1,1,1,1,-1),(-1,-1,-1,-1,1,1,1,1,1,1),(1,-1,1,1,-1,-1,1,-1,1,1)},    {(-1,-1,1,1,1,1,-1,-1,1),(-1,1,1,1,-1,-1,-1,1,1,1),(-1,1,1,1,-1,1,1,1,-1,-1),(1,1,1,-1,-1,1,1,-1,-1,-1),(-1,-1,-1,-1,1,1,1,1,1,1),(-1,1,1,-1,1,1,1,-1,1,1,-1)},    {(-1,-1,1,1,1,1,-1,-1,1),(-1,1,1,1,-1,-1,-1,1,1,1),(-1,1,1,1,-1,1,1,1,-1,-1),(1,1,1,-1,-1,1,1,-1,-1,-1),(-1,-1,-1,-1,1,1,1,1,1,1),(1,-1,1,1,-1,-1,1,1,-1)},    {(-1,-1,1,1,1,1,-1,-1,1),(-1,1,1,1,-1,-1,-1,1,1,1),(-1,1,1,1,-1,1,1,1,-1,-1),(1,1,1,-1,-1,1,1,-1,-1,-1),(1,-1,1,-1,-1,1,1,-1,1,1),(-1,1,1,1,1,-1,-1,-1,-1)},    {(-1,-1,1,1,1,1,-1,-1,1),(-1,1,1,1,-1,-1,-1,1,1,1),(-1,1,1,1,-1,1,1,1,-1,-1),(1,1,-1,1,1,-1,-1,-1,1),(-1,-1,-1,1,1,1,1,1,-1),(-1,1,1,1,1,-1,-1,-1,-1)},    {(-1,-1,1,1,1,1,-1,-1,1),(-1,1,1,1,-1,-1,-1,1,1,1),(-1,1,1,1,1,-1,-1,-1,1),(1,1,1,-1,1,1,1,-1,-1,1),(-1,-1,-1,-1,1,1,1,1,1),(1,1,1,1,1,-1,-1,-1,-1)},    {(-1,-1,1,1,1,1,-1,-1,1),(-1,1,1,1,-1,1,1,1,-1,-1),(1,-1,-1,1,1,1,1,-1,-1,1),(1,1,-1,1,1,-1,-1,-1,-1),(-1,1,-1,-1,1,1,1,1,-1),(1,-1,1,1,1,-1,1,1,-1,-1)},    {(-1,-1,1,1,1,1,-1,-1,1),(-1,1,1,1,-1,1,1,1,-1,-1),(1,-1,-1,1,1,1,1,-1,-1,1),(1,1,1,-1,1,1,-1,-1,-1),(-1,-1,-1,1,1,1,1,1,-1),(1,1,1,1,-1,-1,-1,-1)},    {(-1,-1,1,1,1,1,-1,-1,1),(-1,1,1,1,-1,1,1,1,-1,-1),(1,-1,1,1,1,-1,-1,-1,1),(1,1,-1,1,1,-1,-1,-1),(-1,-1,1,1,1,1,1,-1,-1),(1,1,1,-1,-1,-1,-1,1)},    {(-1,-1,1,1,1,1,-1,-1,1),(-1,1,1,1,-1,1,1,1,-1,-1),(1,-1,1,1,1,-1,-1,-1,1),(1,1,1,-1,1,1,-1,-1,-1),(-1,1,1,-1,-1,1,1,1,1,1),(-1,1,1,-1,1,1,-1,1,1,-1)},    {(-1,-1,1,1,1,1,-1,-1,1),(-1,1,1,1,-1,1,1,1,-1,-1),(1,-1,-1,1,1,-1,1,1,-1,-1),(-1,-1,1,1,1,1,1,-1),(1,-1,1,1,1,-1,1,1,-1,-1,-1)},    {(-1,-1,1,1,1,1,-1,-1,1),(-1,1,1,1,-1,1,1,1,-1,-1),(-1,1,1,1,1,-1,-1,1,1,-1),(-1,-1,1,1,1,1,1,-1),(1,-1,1,1,1,-1,1,1,-1,-1,-1)},    {(-1,-1,1,1,1,1,-1,-1,1),(-1,1,1,1,-1,1,1,1,-1,-1),(-1,1,1,1,1,-1,-1,1,1,1,-1),(1,1,-1,1,1,-1,-1,-1,-1),(-1,-1,-1,1,1,1,1,1,-1),(1,1,1,-1,-1,-1,-1,1)},    {(-1,-1,1,1,1,1,-1,-1,1),(-1,1,1,1,-1,1,1,1,-1,-1),(-1,1,1,1,1,-1,-1,1,1,-1),(1,1,-1,1,1,-1,-1,-1,-1),(-1,1,-1,-1,1,1,1,1,-1),(-1,1,1,-1,1,1,-1,1,1,-1)},    {(-1,-1,1,1,1,1,-1,-1,1),(-1,1,1,1,-1,1,1,1,-1,-1),(1,-1,-1,1,1,1,1,-1,-1),(1,1,-1,1,1,-1,-1,-1,-1),(1,-1,1,1,-1,-1,1,1,-1,-1,-1)},    {(-1,-1,1,1,1,1,-1,-1,1),(-1,1,1,1,-1,1,1,1,-1,-1),(1,-1,-1,1,1,1,1,-1,-1),(1,1,1,-1,1,1,-1,-1,-1),(-1,1,1,-1,-1,1,1,1,1,1),(-1,1,1,-1,1,1,-1,1,1,-1)},    {(-1,-1,1,1,1,1,-1,-1,1),(-1,1,1,1,-1,1,1,1,-1,-1),(1,-1,-1,1,1,1,1,-1,-1),(1,1,-1,-1,1,1,-1,-1,-1),(-1,-1,-1,-1,1,1,1,1,1),(1,-1,1,1,-1,1,1,-1,-1)},    {(-1,-1,1,1,1,1,-1,-1,1),(-1,1,1,1,-1,1,1,1,-1,-1),(1,-1,-1,1,1,1,1,-1,-1),(1,1,-1,-1,1,1,-1,-1,-1,1),(-1,-1,-1,-1,1,1,1,1,1,1),(1,-1,1,1,-1,-1,1,1,-1)},    {(-1,-1,1,1,1,1,-1,-1,1),(-1,1,1,1,-1,1,1,1,-1,-1),(1,-1,-1,1,1,1,1,-1,-1),(1,1,-1,-1,1,1,-1,-1,-1,1),(-1,1,-1,-1,1,1,1,1,-1),(1,-1,1,1,1,-1,1,1,-1,-1,-1)},    {(-1,-1,1,1,1,1,-1,-1,1),(1,-1,-1,1,1,-1,-1,1,1),(1,-1,1,1,1,-1,-1,-1,1,1),(1,1,-1,1,1,-1,-1,-1,-1),(-1,-1,-1,-1,1,1,1,1,1,1),(1,-1,1,1,-1,1,-1,1,1)},    {(-1,-1,1,1,1,1,-1,-1,1),(1,-1,-1,1,1,-1,-1,1,1),(1,-1,1,1,1,-1,-1,-1,1,1),(1,1,-1,1,1,-1,-1,-1,-1),(-1,1,-1,-1,1,1,1,1,-1),(1,1,1,1,1,-1,-1,-1,-1)},    {(-1,-1,1,1,1,1,-1,-1,1),(1,-1,-1,1,1,-1,-1,1,1),(1,-1,1,1,1,-1,-1,-1,1),(1,1,1,1,1,-1,-1,-1,-1),(-1,-1,-1,-1,1,1,1,1,1,1),(1,-1,1,1,-1,1,-1,1,-1,-1,-1)},    {(-1,-1,1,1,1,1,-1,-1,1),(-1,1,1,1,-1,-1,-1,1,1,1),(1,-1,-1,1,1,-1,-1,1,1),(1,1,-1,1,1,-1,-1,-1,-1),(-1,-1,-1,-1,1,1,1,1,1,1),(1,-1,1,1,-1,1,-1,1,-1,-1)},    {(-1,-1,1,1,1,1,-1,-1,1),(-1,1,1,1,-1,-1,-1,1,1,1),(1,-1,-1,1,-1,-1,1,1),(1,1,1,1,1,-1,-1,-1,-1),(-1,-1,-1,-1,1,1,1,1,1),(1,-1,1,1,1,-1,1,1,-1,-1,-1)},    {(-1,-1,1,1,1,1,-1,-1,1),(-1,1,1,1,-1,-1,-1,1,1,1),(1,-1,-1,1,1,1,1,-1,-1),(-1,-1,-1,1,1,1,1,1,1),(-1,-1,-1,-1,1,1,1,1,1),(1,-1,1,1,-1,-1,1,1,-1)},    {(-1,-1,1,1,1,1,-1,-1,1),(-1,1,1,1,-1,-1,1,1,-1,-1),(1,-1,-1,1,-1,-1,1,1),(1,1,-1,1,1,-1,-1,-1,-1),(-1,-1,-1,-1,1,1,1,1,1,1),(1,-1,1,1,1,-1,1,1,-1,-1,-1)},    {(-1,-1,1,1,1,1,-1,-1,1),(-1,1,1,1,-1,-1,1,1,-1,-1),(1,-1,-1,1,-1,-1,1,1),(1,1,-1,1,1,-1,-1,-1,-1),(-1,-1,-1,-1,1,1,1,1,1,1),(1,1,1,1,1,-1,-1,-1,-1)},    {(-1,-1,1,1,1,1,-1,-1,1),(-1,1,1,1,-1,-1,1,1,-1,-1),(1,-1,1,1,1,-1,-1,1,1),(1,1,-1,1,1,-1,-1,-1,-1),(-1,-1,-1,1,1,1,1,1,1,-1),(-1,1,1,-1,-1,1,1,-1,1,1)},    {(-1,-1,1,1,1,1,-1,-1,1),(-1,1,1,1,-1,-1,-1,1,1,1),(1,-1,-1,1,-1,-1,1,1,1),(1,1,-1,1,1,-1,-1,-1,-1),(-1,-1,-1,-1,1,1,1,1,1),(1,-1,1,1,1,-1,-1,1,-1,-1)},    {(-1,-1,1,1,1,1,-1,-1,1),(-1,1,1,1,-1,-1,1,1,-1,-1),(1,-1,-1,1,-1,-1,1,1,1),(1,1,-1,1,1,-1,-1,-1,-1),(-1,1,1,-1,-1,1,1,1,1,1),(1,1,1,-1,-1,-1,-1,1)},    {(-1,-1,1,1,1,1,-1,-1,1),(-1,1,1,1,-1,-1,1,1,-1,-1),(1,-1,-1,1,-1,-1,1,1,1),(1,1,-1,1,1,-1,-1,-1,-1),(1,-1,1,1,1,-1,1,1,-1,-1),(1,1,1,-1,-1,-1,-1,1)},    {(-1,-1,1,1,1,1,-1,-1,1),(1,-1,-1,1,1,-1,-1,1,1,1),(1,-1,-1,1,1,-1,1,1),(1,1,-1,1,1,-1,-1,-1,-1),(-1,-1,-1,-1,1,1,1,1,1),(1,-1,1,-1,1,1,-1,1)},    {(-1,-1,1,1,1,1,-1,-1,1),(1,-1,-1,1,1,-1,-1,1,1),(1,-1,-1,1,1,-1,1,1),(1,1,-1,1,1,-1,-1,-1,-1),(-1,-1,-1,1,1,1,1,1),(1,1,1,-1,-1,-1,1)},    {(-1,-1,1,1,1,1,-1,-1,1),(1,-1,-1,1,1,-1,-1,1,1),(1,-1,-1,1,-1,-1,1,1),(1,1,1,-1,1,1,-1,-1,-1),(-1,-1,-1,-1,1,1,1,1,1),(1,-1,1,1,1,-1,1,1,-1,-1,-1)},    {(-1,-1,1,1,1,1,-1,-1,1),(1,-1,-1,1,1,-1,-1,1,1),(1,-1,-1,1,-1,-1,-1,1,1),(1,1,1,1,1,-1,-1,-1,-1),(1,-1,1,1,1,-1,1,1,-1,-1,-1),(1,1,1,-1,-1,-1,-1,1)},    {(-1,-1,1,1,1,1,-1,-1,1),(1,-1,-1,1,1,-1,-1,1,1),(1,-1,-1,1,1,1,-1,-1),(1,1,-1,1,1,-1,-1,-1,-1),(-1,-1,-1,-1,1,1,1,1,1,1),(-1,1,1,-1,1,1,-1,1,1,-1)},    {(-1,-1,1,1,1,1,-1,-1,1),(1,-1,-1,1,1,-1,-1,1,1),(1,-1,-1,1,1,1,-1,-1),(1,1,-1,1,1,-1,-1,-1,-1),(-1,1,-1,-1,1,1,1,1,1),(1,-1,1,1,-1,-1,1,1,-1,-1)},    {(-1,-1,1,1,1,1,-1,-1,1),(1,-1,-1,1,-1,-1,1,1),(1,-1,-1,1,1,1,-1,-1),(1,1,-1,1,1,-1,-1,-1,-1),(-1,1,1,1,-1,1,1,-1,-1),(1,1,1,-1,-1,-1,-1,1,1)},    {(-1,-1,1,1,1,1,-1,-1,1),(1,-1,-1,1,1,-1,-1,1,1),(1,-1,-1,1,1,1,-1,-1),(1,1,-

1,-1,1,-1,-1,1),(-1,1,-1,1,1,-1,1,-1),(1,1,1,1,-1,-1,-1,-1)},    {(-1,-1,1,1,1,-1,-1,1),(1,-1,-1,1,-1,-1,1,1),(1,-1,-1,1,1,1,-1,-1),(1,1,-1,-1,1,-1,-1,1),(1,-1,1,-1,-1,1,-1,1),(1,1,1,1,-1,-1,-1,-1)},    {(-1,1,-1,-1,1,1,1,-1),(-1,1,1,-1,-1,-1,1,1),(1,1,-1,-1,1,-1,-1,1),(1,1,1,-1,-1,1,-1,-1),(-1,-1,1,-1,1,1,-1,1),(-1,1,1,1,1,1,-1,-1,-1)},    {(-1,1,1,-1,-1,1,1,1,-1),(-1,1,1,-1,-1,-1,1,1),(1,1,-1,-1,1,-1,-1,1),(1,1,1,-1,-1,1,-1,-1),(-1,-1,1,-1,1,1,-1,1),(1,-1,-1,-1,-1,1,1,1)},    {(-1,1,1,-1,-1,1,1,1,-1),(-1,1,1,-1,-1,-1,1,1),(1,1,-1,-1,1,-1,-1,1),(1,1,1,-1,-1,1,-1,-1),(-1,1,1,1,1,1,-1,-1,-1),(1,1,-1,1,-1,-1,1,-1)},    {(-1,1,1,-1,-1,1,1,1,-1),(-1,1,1,-1,-1,-1,1,1),(1,1,-1,-1,1,-1,-1,1),(1,1,1,-1,-1,1,-1,-1),(1,-1,-1,-1,-1,1,1,1,1),(1,1,-1,1,-1,-1,1,-1)},    {(-1,1,1,-1,-1,1,1,1,-1),(-1,1,1,1,1,-1,-1,1,1,-1),(1,1,-1,1,1,1,-1,-1),(1,1,1,-1,-1,1,-1,-1),(-1,-1,1,1,1,1,1,-1,-1),(-1,1,1,-1,1,1,-1,1,-1)},    {(-1,1,1,-1,-1,1,1,1,-1),(-1,1,1,1,1,-1,-1,1,1,-1),(1,1,-1,1,1,-1,-1,-1),(1,1,1,-1,-1,1,-1,-1),(-1,-1,1,1,1,1,1,-1,-1),(1,-1,-1,1,-1,1,1,1,-1)},    {(-1,1,1,-1,-1,1,1,1,-1),(-1,1,1,1,1,-1,-1,1,1,-1),(1,1,-1,1,1,1,-1,-1,-1),(1,1,1,-1,-1,1,-1,-1),(-1,1,1,1,-1,1,-1,-1,1,-1),(1,1,-1,-1,-1,-1,1,1,1)},    {(-1,1,-1,-1,1,1,1,1,-1),(-1,1,1,1,1,-1,-1,1,1,-1),(1,1,-1,1,1,1,-1,-1,-1),(1,1,1,-1,-1,1,-1,-1,-1),(1,-1,-1,1,1,-1,1,1,1,-1,-1),(1,1,-1,-1,-1,-1,1,1,1)},    {(-1,1,-1,-1,1,1,1,1,-1),(1,-1,-1,-1,1,1,1,-1,-1),(1,1,-1,1,1,1,-1,-1,-1),(1,1,1,-1,-1,1,-1,-1,-1),(-1,-1,1,1,1,1,1,1,-1,-1),(-1,1,1,1,-1,1,-1,-1,1,1)},    {(-1,1,1,-1,-1,1,1,1,-1),(1,-1,-1,-1,1,1,1,-1,-1),(1,1,-1,1,1,1,-1,-1,-1),(1,1,1,-1,-1,1,-1,-1,-1),(-1,-1,1,1,1,1,1,1,-1,-1),(1,-1,-1,1,-1,1,1,1,1,-1)},    {(-1,1,-1,-1,1,1,1,1,-1),(1,-1,-1,-1,1,1,1,-1,-1),(1,1,-1,1,1,1,-1,-1,-1),(-1,1,1,1,-1,1,-1,-1,1,-1),(1,1,-1,1,1,1,-1,-1,-1),(-1,1,1,1,-1,1,-1,-1,-1),(-1,1,1,1,-1,-1,1,1,-1),(-1,1,1,1,1,1,-1,-1,-1)},    {(-1,1,-1,-1,1,1,1,1,-1),(1,-1,-1,1,1,1,1,-1,-1),(1,1,-1,-1,1,1,-1,-1,1),(1,1,1,-1,-1,1,-1,-1),(-1,-1,1,1,-1,1,1,1,-1,-1,1),(-1,1,1,1,1,1,-1,-1,-1)},    {(-1,1,-1,-1,1,1,1,1,-1),(1,-1,-1,1,1,1,1,-1,-1),(1,1,-1,1,1,1,-1,-1,-1),(-1,1,1,1,-1,1,1,-1,-1,1),(1,1,-1,1,1,1,-1,-1,-1),(1,1,-1,-1,1,1,-1,-1,-1)},    {(-1,1,-1,-1,1,1,1,1,-1),(1,-1,-1,1,1,1,1,-1,-1),(1,1,-1,-1,1,1,-1,-1,1),(1,1,1,-1,-1,1,-1,-1,-1),(-1,-1,1,1,1,1,1,1,-1,-1),(-1,1,1,-1,1,-1,1,1,1,-1)},    {(-1,1,-1,-1,1,1,1,1,-1),(1,-1,-1,-1,1,1,1,-1,1),(1,1,-1,-1,1,1,-1,-1,1),(1,1,1,-1,-1,1,-1,-1,-1),(1,-1,-1,1,-1,1,1,1,-1),(1,1,-1,-1,-1,-1,1,1,1)},    {(-1,1,-1,-1,1,1,1,1,-1),(1,-1,1,1,1,1,1,-1,-1),(1,1,-1,-1,1,1,-1,-1,1),(1,1,1,-1,-1,1,-1,-1,-1),(-1,-1,1,1,-1,1,1,1,-1,-1,1),(-1,1,1,-1,1,1,-1,1,-1)},    {(-1,1,1,1,-1,-1,1,1,-1,-1),(1,-1,1,1,1,1,1,-1,-1),(1,1,-1,-1,1,1,-1,-1,1),(1,1,1,-1,-1,1,-1,-1,-1),(-1,-1,1,1,1,1,1,1,-1,-1),(-1,1,1,-1,-1,-1,1,1,1,-1)},    {(-1,1,1,1,-1,1,1,-1,-1),(1,-1,1,1,1,1,1,-1,-1),(1,1,-1,-1,1,1,-1,-1,1),(1,1,1,-1,-1,1,-1,-1,-1),(-1,-1,1,1,1,1,1,1,-1,-1),(1,-1,1,1,1,-1,-1,-1,-1,-1)},    {(-1,1,1,1,-1,1,1,-1,-1),(1,-1,1,1,1,1,1,-1,-1),(1,1,-1,-1,1,1,-1,-1,1),(1,1,1,-1,-1,1,-1,-1,-1),(-1,-1,1,-1,1,1,1,1,-1,-1),(-1,1,1,1,1,1,1,-1,-1,-1)},    {(-1,1,1,1,-1,1,1,-1,-1),(1,-1,1,1,1,1,1,-1,-1),(1,1,-1,-1,1,1,-1,-1,1),(1,1,1,-1,-1,1,-1,-1,-1),(-1,-1,1,-1,1,1,1,1,-1,-1),(1,-1,-1,-1,1,1,1,1,1)},    {(-1,1,1,1,-1,-1,1,1,1),(-1,1,1,1,1,-1,-1,1,1),(1,1,-1,-1,1,1,-1,-1,-1),(-1,-1,1,-1,1,1,1,1,-1,-1),(1,-1,-1,-1,1,1,1,1,1),(1,-1,1,1,-1,-1,1,-1,-1)},    {(-1,1,1,1,-1,-1,1,1,1),(-1,1,1,1,1,-1,-1,1,1),(1,1,-1,-1,1,1,-1,-1,1),(1,1,1,-1,-1,1,-1,-1,-1),(-1,1,1,1,1,-1,-1,1,1,-1),(1,1,1,1,-1,-1,-1,-1)},    {(-1,1,1,1,-1,-1,1,1,1),(-1,1,1,1,-1,1,1,-1,-1),(1,1,-1,-1,1,1,-1,-1,1),(1,1,1,-1,-1,1,-1,-1,-1),(1,-1,1,1,-1,-1,1,-1,1),(1,1,1,1,-1,-1,-1,-1,-1)},    {(-1,1,1,1,-1,-1,1,1,1),(-1,1,1,1,-1,1,1,-1,-1),(1,1,-1,-1,1,1,-1,-1,1),(1,1,1,-1,-1,1,-1,-1,-1),(1,-1,1,1,-1,-1,1,-1,1,-1),(-1,1,1,-1,1,1,-1,1,-1)},    {(-1,1,1,1,-1,-1,1,1,1),(1,-1,-1,1,-1,-1,1,-1),(1,1,1,-1,-1,-1,1,1,1),(1,1,-1,-1,1,1,-1,-1,-1),(-1,-1,1,-1,1,1,1,1,1,1),(1,-1,1,1,-1,-1,1,-1,1,-1)},    {(-1,1,1,1,-1,-1,1,1,1),(1,-1,1,1,1,-1,-1,1,1),(1,1,1,-1,-1,-1,1,1,1),(1,1,-1,-1,1,1,-1,-1,-1),(-1,-1,1,1,1,1,-1,-1,1,-1),(1,1,1,1,1,-1,-1,-1,-1)},    {(-1,1,1,1,-1,-1,1,1,1),(1,-1,-1,1,1,-1,-1,1,1),(1,1,1,-1,-1,-1,1,1,1),(1,1,-1,-1,1,1,-1,-1,-1),(1,-1,1,1,-1,-1,-1,1,1,1),(1,1,1,1,-1,-1,-1,-1,-1)},    {(-1,1,1,1,-1,-1,1,1,1),(1,-1,1,1,1,-1,-1,1,1),(1,1,1,-1,-1,-1,1,1,1),(1,1,-1,-1,1,1,-1,-1,-1),(-1,-1,1,1,1,1,-1,-1,1,-1),(-1,1,1,1,1,1,1,-1,-1,-1)},    {(-1,1,1,1,-1,-1,1,1,1),(1,-1,1,1,1,-1,-1,1,1),(1,1,1,-1,-1,-1,1,1,1),(1,1,-1,-1,1,1,-1,-1,-1),(1,-1,1,1,-1,-1,-1,1,1,1),(1,-1,-1,-1,-1,1,1,1,1)},    {(-1,1,1,1,-1,-1,1,1,1),(1,-1,-1,1,1,-1,-1,1,1),(1,1,1,-1,-1,1,-1,-1,-1),(1,1,1,-1,-1,1,1,-1,-1),(-1,-1,1,-1,1,1,1,1,-1),(1,-1,-1,-1,-1,1,1,1,1)},    {(-1,1,1,1,-1,1,1,-1,-1),(-1,1,1,1,1,-1,-1,1,1,-1),(1,1,-1,-1,1,1,-1,-1,1),(1,1,-1,1,1,1,-1,-1,-1),(-1,-1,1,1,1,1,1,1,-1),(-1,1,1,-1,-1,1,1,-1,1)},    {(-1,1,1,1,-1,1,1,-1,-1),(-1,1,1,1,1,-1,-1,1,1,-1),(1,1,-1,-1,1,1,-1,-1,1),(1,1,-1,1,1,1,-1,-1,-1),(-1,-1,1,1,1,1,1,1,-1),(1,-1,1,1,1,-1,-1,1,-1,-1)},    {(-1,1,1,1,-1,1,1,-1,-1),(-1,1,1,1,1,-1,-1,1,1,-1),(1,1,-1,-1,1,1,-1,-1,1),(1,1,-1,1,1,1,-1,-1,-1),(-1,-1,1,-1,1,1,-1,1,1),(1,1,1,-1,-1,-1,-1,-1,1)},    {(-1,1,1,1,-1,1,1,-1,-1),(-1,1,1,1,1,-1,-1,1,1,-1),(1,1,-1,-1,1,1,-1,-1,1),(1,1,-1,1,1,-1,-1,-1),(1,-1,1,1,-1,-1,1,-1,-1,1),(1,1,1,1,-1,-1,-1,-1,-1)},    {(-1,1,1,1,-1,1,1,-1,-1),(1,-1,-1,-1,1,1,1,-1,-1),(1,1,-1,-1,1,1,1,-1,-1),(1,1,-1,1,1,1,-1,-1,-1),(-1,-1,1,1,1,1,1,-1,-1),(-1,1,1,-1,-1,1,1,-1,1,1)},    {(-1,1,1,1,-1,1,1,-1,-1),(1,-1,-1,-1,1,1,1,-1,-1),(1,1,-1,-1,1,1,1,-1,-1),(1,1,-1,1,1,1,-1,-1,-1),(-1,-1,1,1,1,1,1,-1,-1),(-1,1,1,-1,-1,-1,-1,-1,1)},    {(-1,1,1,1,-1,1,1,-1,-1),(1,-1,-1,1,1,1,1,-1,-1),(1,1,-1,-1,1,1,1,-1,-1),(1,1,-1,-1,1,1,-1,-1,-1),(-1,-1,1,1,1,1,1,1,-1),(1,-1,-1,-1,1,1,1,1,1)},    {(-1,1,1,1,-1,1,1,-1,-1),(1,-1,-1,1,1,1,-1,-1),(1,1,-1,-1,1,1,-1,-1,-1),(1,1,1,-1,-1,1,1,-1,-1),(-1,-1,1,1,-1,1,1,1,-1,-1),(-1,1,1,1,1,-1,-1,1,1,-1)},    {(-1,1,1,1,-1,1,1,-1,-1),(1,-1,-1,1,1,1,-1,-1),(1,1,-1,-1,1,1,-1,-1,1),(1,1,-1,1,1,1,-1,-1,-1),(-1,-1,1,1,1,1,1,1,-1),(1,-1,1,1,1,-1,-1,1,-1)},    {(-1,1,1,1,1,-1,-1,1,-1),(1,-1,-1,1,1,-1,-1,1,1),(1,1,-1,-1,1,1,-1,-1,-1),(1,1,-1,1,1,1,-1,-1,-1),(-1,1,1,1,1,-1,-1,-1),(1,-1,1,1,1,-1,-1,-1,-1),(1,1,-1,1,1,-1,-1,-1,-1)},    {(-1,1,1,1,1,-1,-1,1,-1),(1,-1,-1,1,1,-1,-1,1,1),(1,1,-1,-1,1,1,-1,-1,-1),(1,1,-1,1,1,1,-1,-1,-1),(-1,1,1,1,1,1,-1,-1,-1),(-1,1,1,-1,-1,-1,1,1,1)},    {(-1,1,1,1,1,-1,-1,1,-1),(1,-1,-1,1,1,-1,-1,1,1),(1,1,-1,-1,1,1,-1,-1,-1),(1,1,-1,1,1,1,-1,-1,-1),(-1,1,1,1,-1,-1,-1,-1,1),(1,-1,1,1,1,-1,-1,-1,-1),(1,1,1,1,-1,-1,-1,-1,1)},    {(-1,1,1,1,-1,1,1,-1,-1),(1,-1,1,1,1,-1,-1,1,-1),(1,1,-1,-1,1,1,-1,-1,-1),(1,1,-1,1,1,-1,-1,-1),(-1,-1,1,-1,1,1,1,1,-1),(1,-1,1,1,1,-1,-1,-1,-1)},    {(-1,1,1,1,-1,1,1,-1,-1),(1,-1,-1,1,1,-1,-1,1,1),(1,1,-1,-1,1,1,-1,-1,-1),(1,1,-1,1,1,-1,-1,-1),(-1,1,1,1,1,-1,-1,1,1),(1,-1,1,1,-1,-1,1,-1,-1)},    {(-1,1,1,1,-1,1,1,-1,-1),(1,-1,1,1,1,1,-1,-1),(1,1,-1,-1,1,1,-1,-1,-1),(1,1,-1,1,1,-1,-1,-1),(-1,1,1,-1,1,1,-1,1,-1),(1,1,1,1,-1,-1,-1,-1)},    {(-1,1,1,1,-1,1,1,-1,-1),(1,-1,-1,1,1,-1,-1,1,1),(1,1,-1,-1,-1,1,1,-1),(1,1,-1,-1,1,1,-1,-1,-1),(-1,1,1,-1,-1,1,1,-1,1),(1,1,1,-1,-1,-1,1,1)},    {(-1,1,1,1,1,-1,-1,1,-1),(1,-1,1,1,1,-1,-1,1,-1),(1,1,-1,1,1,-1,-1,-1),(1,1,1,-1,-1,1,1,-1,-1),(-1,1,1,1,-1,-1,1,1,-1),(1,1,1,-1,-1,-1,1,1)},    {(-1,1,1,1,1,-1,-1,1,-1),(1,-1,1,1,1,-1,-1,1,-1),(1,1,-1,1,1,-1,-1,-1),(1,1,1,-1,-1,1,1,-1,-1),(-1,-1,1,1,1,1,1,-1,-1),(-1,1,1,1,-1,1,-1,-1,1,1)},    {(-1,1,1,1,-1,1,1,-1,-1),(1,-1,1,1,1,-1,-1,1,-1),(1,1,-1,1,1,-1,-1,-1),(1,1,1,-1,-1,-1,1,1),(-1,-1,1,1,1,1,1,-1,-1),(-1,1,1,1,-1,1,-1,-1,1,1)},    {(-1,1,1,1,-1,-1,1,1,-1),(1,-1,1,1,1,-1,-1,1,1),(1,1,-1,1,1,-1,-1,-1),(1,1,1,-1,-1,-1,1,1),(-1,1,1,1,-1,1,-1,-1,1,1)},    {(-1,1,1,1,1,-1,-1,1,-1),(1,-1,1,1,1,-1,-1,1,-1),(1,1,-1,1,1,-1,-1,-1),

1),(1,1,1,-1,-1,1,-1,-1),(-1,1,1,-1,1,-1,-1,1),(1,1,-1,-1,-1,-1,1,1)},    {(-1,1,1,1,-1,-1,1,-1),(1,-1,1,1,-1,-1,-1,-1),(1,1,-1,1,1,-1,-1,-1),(1,1,1,-1,-1,1,-1,-1),(1,-1,-1,1,-1,1,1,-1),(1,1,-1,-1,-1,-1,1,1)},    {(1,-1,-1,-1,1,1,1,-1,1),(1,-1,-1,1,-1,-1,1,1),(1,1,-1,-1,-1,1,1,1),(1,1,-1,1,1,-1,-1,-1),(-1,-1,-1,1,1,1,1,-1),(-1,1,-1,-1,1,-1,1,1)}, {(1,-1,-1,-1,1,1,-1,1),(1,-1,-1,1,-1,-1,1,1),(1,1,-1,-1,-1,1,1,1,-1),(1,1,-1,1,1,-1,-1,-1),(-1,-1,-1,1,1,1,1,-1),(1,-1,1,1,-1,1,1,-1,-1)}, {(1,-1,-1,-1,1,1,-1,1),(1,-1,-1,1,-1,-1,1,1),(1,1,-1,-1,-1,1,1,1,-1),(1,1,-1,1,1,-1,-1,-1),(-1,1,1,-1,1,-1,1,1,1),(1,1,1,-1,-1,-1,-1,1)},    {(1,-1,-1,-1,1,1,-1,1),(1,-1,-1,1,-1,-1,1,1),(1,1,-1,-1,-1,1,1,1,-1),(1,1,-1,1,1,-1,-1,-1),(1,-1,1,1,-1,-1,-1),(1,-1,1,1,1,-1,-1,-1),(1,1,1,-1,-1,-1,-1,1)},    {(1,-1,-1,-1,1,1,-1,1),(1,-1,1,1,1,-1,-1,-1),(1,1,-1,-1,-1,1,1,1,-1),(1,1,1,-1,1,1,1,-1,-1),(-1,-1,1,1,1,1,1,-1,-1),(-1,1,1,1,-1,1,1,-1,-1,1)},    {(1,-1,-1,-1,1,1,-1,1),(1,-1,1,1,1,-1,-1,-1,1),(1,1,1,-1,1,1,1,-1,-1),(1,1,1,-1,-1,1,1,-1,-1),(-1,-1,1,1,1,1,1,-1,-1),(1,-1,-1,1,1,-1,1,1,-1)}, {(1,-1,-1,1,1,1,-1,1,1),(1,-1,1,1,1,-1,-1,-1,1),(1,1,-1,1,1,1,-1,-1,-1),(1,1,1,-1,-1,1,1,-1,-1),(-1,1,1,1,-1,1,1,-1,-1,1),(1,1,-1,-1,-1,-1,1,1,1)},    {(1,-1,-1,-1,1,1,-1,1),(1,-1,1,1,1,-1,-1,-1),(1,1,-1,1,1,1,-1,-1,-1),(1,1,1,-1,-1,1,1,-1,-1),(1,-1,-1,-1,-1,1,1,1,1),(1,1,-1,-1,-1,-1,1,1,-1)},    {(1,-1,-1,1,1,-1,1,1),(1,-1,-1,1,1,1,1,-1,-1),(1,1,-1,-1,-1,1,1,1,-1),(1,1,-1,1,1,-1,-1,-1),(-1,-1,-1,-1,1,1,1,1,1),(1,-1,1,1,-1,-1,1,1,-1)},    {(1,-1,-1,1,1,-1,1,1),(1,-1,-1,1,1,1,-1,-1),(1,1,-1,-1,-1,1,1,1,-1),(1,1,-1,-1,1,1,-1,-1,-1),(-1,-1,-1,-1,1,1,1,1,1),(1,-1,1,1,-1,-1,1,1,-1)}, {(1,-1,-1,1,1,-1,-1,1,-1),(1,-1,1,1,1,-1,-1,-1,1),(1,1,-1,-1,1,1,-1,-1,-1),(1,1,1,-1,-1,1,1,-1,-1),(-1,1,1,1,1,-1,-1,-1),(1,1,1,1,-1,-1,-1,1)},    {(1,-1,-1,1,1,-1,1),(1,-1,1,1,1,-1,-1,-1),(1,1,-1,-1,1,1,-1,-1,-1),(1,1,1,-1,1,1,-1,-1,-1),(-1,-1,1,1,1,1,-1,-1),(-1,1,1,1,1,-1,-1,-1)},    {(1,-1,-1,1,1,1,-1,1,-1),(1,-1,1,1,1,-1,-1,-1,1),(1,1,-1,-1,1,1,-1,-1,-1),(1,1,1,-1,1,1,-1,-1,-1),(-1,-1,1,1,-1,1,1,-1,-1),(1,-1,-1,-1,1,1,1,1,1)}, {(1,-1,-1,1,1,1,-1,1,-1),(1,-1,1,1,1,-1,-1,-1,1),(1,1,-1,-1,1,1,-1,-1,-1),(1,1,1,-1,-1,1,1,-1,-1),(-1,1,1,1,1,-1,-1,-1,1),(1,1,-1,1,1,-1,-1,-1)},    {(1,-1,-1,1,1,1,-1,1,-1),(1,-1,1,1,1,-1,-1,-1),(1,1,-1,-1,-1,1,1,1,1),(1,1,-1,-1,1,-1,-1,1,1),(1,1,1,-1,-1,-1,-1,1),(1,1,-1,-1,-1,1,1,-1,-1)},    {(-1,-1,-1,1,1,1,1,1,1),(-1,-1,1,1,1,1,1,-1,-1),(-1,1,1,-1,1,1,-1,-1,-1),(-1,1,1,1,-1,1,1,-1,-1,-1),(-1,-1,1,1,1,-1,-1,1,1),(-1,1,1,1,-1,1,1,1,-1)}, {(-1,-1,-1,-1,1,1,1,1,1),(-1,-1,1,1,1,1,1,-1,-1),(-1,1,1,-1,1,1,-1,-1,-1),(-1,1,1,-1,1,-1,-1,1,1),(-1,-1,1,1,1,-1,-1,1,1),(1,-1,-1,1,1,1,-1,-1,1)},    {(-1,-1,-1,-1,1,1,1,1,1),(-1,-1,1,1,1,1,1,-1,-1),(-1,1,1,-1,1,1,-1,-1,-1),(-1,1,1,-1,-1,1,1,-1,-1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,-1),(-1,1,1,1,-1,1,1,-1,-1,-1),(1,-1,-1,1,1,-1,-1,1),(1,-1,-1,1,1,-1,-1,1,1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,-1),(-1,1,1,1,-1,-1,1,1,1),(-1,1,1,1,-1,-1,1,1,-1)},    {(-1,-1,-1,-1,1,1,1,1,1),(-1,-1,1,1,1,1,1,1,-1),(-1,1,1,-1,1,1,-1,-1,-1),(1,-1,-1,1,1,-1,1,1,1),(-1,-1,1,1,1,-1,-1,1,1,-1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,1,-1,-1,1,1),(-1,-1,1,1,1,-1,-1,1,1),(1,1,-1,-1,1,1,1,-1,-1)}, {(-1,-1,-1,-1,1,1,1,1,1),(-1,-1,1,1,1,1,1,-1,-1),(-1,1,1,-1,1,1,-1,-1,-1),(1,-1,-1,1,1,-1,-1,1,1),(-1,1,1,1,-1,-1,1,1,-1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,1,-1,-1,1,1),(-1,-1,1,1,1,-1,-1,1,1),(1,1,-1,-1,1,1,1,-1,-1)}, {(-1,-1,-1,-1,1,1,1,1,1),(-1,-1,1,1,1,1,1,-1,-1),(-1,1,1,-1,1,1,-1,-1,-1),(1,-1,-1,1,1,-1,-1,1,1),(-1,-1,1,1,1,-1,-1,1,1),(-1,1,1,-1,-1,1,1,1,-1)},    {(-1,-1,-1,-1,1,1,1,1,1),(-1,-1,1,1,1,1,1,-1,-1),(-1,1,1,-1,-1,1,1,1,-1),(1,-1,-1,-1,1,1,1,1,-1),(-1,1,1,1,-1,-1,1,1,-1),(1,1,-1,-1,1,1,1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,1,-1,-1,1,1),(-1,-1,1,1,1,-1,-1,1,1),(1,1,-1,-1,1,1,1,-1,-1)}, {(-1,-1,-1,-1,1,1,1,1,1),(-1,-1,1,1,1,1,1,-1,-1),(-1,1,1,-1,1,1,-1,-1,-1),(1,-1,-1,-1,1,1,1,1,-1),(-1,1,1,1,-1,-1,1,1,-1),(1,-1,-1,1,1,1,-1,-1,1)},    {(-1,-1,-1,-1,1,1,1,1,1),(-1,-1,1,1,1,1,1,-1,-1),(1,-1,1,1,-1,-1,1,1),(1,-1,-1,-1,1,1,1,1,-1),(1,1,1,-1,-1,-1,-1,1),(1,1,-1,-1,-1,1,1,-1,-1)},    {(-1,-1,-1,-1,1,1,1,1,1),(-1,-1,1,1,1,1,1,-1,-1),(-1,1,1,-1,1,1,-1,-1,-1),(1,-1,-1,1,1,-1,-1,1,1),(-1,-1,1,1,1,-1,-1,1,1),(1,1,-1,-1,1,1,1,-1,-1)},    {(-1,-1,-1,-1,1,1,1,1,1),(-1,-1,1,1,1,1,1,-1,-1),(1,-1,-1,1,1,-1,-1,1,1),(1,-1,-1,1,1,-1,-1,1,1),(-1,1,1,1,-1,-1,1,1,-1),(1,1,-1,-1,1,1,1,-1,-1)},    {(-1,-1,-1,-1,1,1,1,1,1),(-1,-1,1,1,1,1,1,-1,-1),(1,-1,-1,1,1,-1,-1,1,1),(1,-1,-1,1,-1,-1,1,1),(-1,1,1,1,-1,-1,1,1,-1),(1,1,-1,-1,1,1,1,-1,-1)},    {(-1,-1,-1,-1,1,1,1,1,1),(-1,-1,1,1,1,1,1,-1,-1),(1,-1,-1,1,1,-1,-1,1,1),(1,-1,1,1,-1,-1,-1,1,1),(-1,1,1,1,-1,-1,1,1,-1),(1,1,-1,-1,1,1,1,-1,-1)},    {(-1,-1,-1,-1,1,1,1,1,1),(-1,-1,1,1,-1,1,1,-1,-1),(1,-1,-1,1,1,-1,-1,1,1),(1,1,-1,-1,-1,-1,1,1),(1,-1,-1,1,1,-1,-1,1),(1,1,-1,-1,1,1,1,-1,-1)},    {(-1,-1,-1,-1,1,1,1,1,1),(-1,-1,1,1,-1,1,1,-1,-1),(1,-1,-1,1,1,-1,-1,1,1),(1,1,-1,-1,-1,-1,1,1),(-1,1,1,1,-1,-1,1,1,-1),(-1,1,1,1,-1,1,1,1,-1)}, {(-1,-1,-1,-1,1,1,1,1,1),(-1,-1,1,1,1,1,1,-1,-1),(1,-1,-1,1,1,-1,-1,1,1),(1,1,-1,-1,-1,-1,1,1),(-1,1,1,1,-1,-1,1,1,-1),(-1,1,1,1,-1,1,1,1,-1),(1,1,-1,-1,1,1,1,-1,-1)},    {(-1,-1,-1,-1,1,1,1,1,1),(-1,1,1,-1,1,1,-1,-1,-1),(1,-1,-1,1,1,-1,-1,1,1),(1,1,-1,-1,-1,-1,1,1),(1,-1,1,1,1,-1,-1,-1),(1,1,-1,-1,1,1,1,-1,-1)},    {(-1,-1,-1,-1,1,1,1,1,1),(-1,1,1,-1,1,1,-1,-1,-1),(1,-1,-1,1,1,-1,-1,1,1),(1,1,-1,-1,-1,-1,1,1),(1,-1,1,1,1,-1,-1,-1),(1,1,-1,-1,1,1,1,-1,-1)},    {(-1,-1,-1,-1,1,1,1,1,1),(1,-1,1,1,-1,1,1,1,-1),(1,-1,1,1,-1,-1,1,1),(1,1,-1,-1,-1,-1,1,1),(1,-1,1,1,1,-1,-1,-1),(1,1,-1,-1,1,1,1,-1,-1)}, {(-1,-1,-1,-1,1,1,1,1,1),(-1,1,1,-1,1,1,-1,-1,-1),(1,-1,1,1,-1,-1,1,1),(1,1,-1,-1,-1,-1,1,1),(-1,1,1,1,-1,-1,1,1,-1),(1,1,-1,-1,1,1,1,-1,-1)},    {(-1,-1,-1,-1,1,1,1,1,1),(1,-1,-1,1,1,-1,-1,1,1),(1,-1,1,1,-1,-1,1,1,-1),(1,1,-1,-1,-1,-1,1,1),(-1,1,1,1,-1,-1,1,1,-1),(-1,1,1,1,-1,1,1,1,-1)},    {(-1,-1,-1,-1,1,1,1,1,1),(1,-1,1,1,-1,1,1,1,-1),(1,-1,1,1,-1,-1,1,1),(1,1,-1,-1,-1,-1,1,1),(-1,1,1,1,-1,-1,1,1,-1),(1,1,-1,-1,1,1,1,-1,-1)},    {(-1,-1,-1,-1,1,1,1,1,1),(1,-1,1,1,-1,1,1,1,-1),(1,-1,1,1,-1,-1,1,1,-1),(1,1,-1,-1,-1,-1,1,1),(1,-1,-1,1,1,1,-1,-1,1),(1,-1,-1,1,1,1,-1,-1,1)},    {(-1,-1,-1,-1,1,1,1,1,1),(-1,1,1,-1,1,1,-1,-1,-1),(1,-1,1,1,-1,-1,1,1,-1),(1,1,-1,-1,-1,-1,1,1),(-1,1,1,1,-1,-1,1,1,-1),(1,1,-1,-1,1,1,1,-1,-1)},    {(-1,-1,-1,-1,1,1,1,1,1),(-1,1,1,-1,1,1,-1,-1,-1),(1,-1,1,1,-1,-1,1,1),(1,1,-1,-1,-1,-1,1,1),(-1,1,1,1,-1,-1,1,1,-1),(1,1,-1,-1,1,1,1,-1,-1)},    {(-1,-1,-1,-1,1,1,1,1,1),(-1,1,1,-1,1,1,-1,-1,-1),(1,-1,-1,1,1,-1,-1,1,1),(1,1,-1,-1,-1,-1,1,1),(1,-1,1,1,1,-1,-1,-1),(1,1,-1,-1,1,1,1,-1,-1)},    {(-1,-1,-1,-1,1,1,1,1,1),(-1,1,1,-1,1,1,-1,-1,-1),(1,-1,1,1,-1,-1,-1,1,1),(1,1,-1,-1,-1,-1,1,1),(-1,1,1,1,-1,-1,1,1,-1),(-1,1,1,1,-1,1,1,1,-1)},    {(-1,-1,-1,-1,1,1,1,1,1),(1,-1,1,1,-1,1,1,1,-1),(1,-1,1,1,-1,-1,1,1),(1,1,-1,-1,-1,-1,1,1),(-1,1,1,1,-1,-1,1,1,-1),(-1,1,1,1,-1,1,1,1,-1)},    {(-1,-1,-1,-1,1,1,1,1,1),(1,-1,1,1,-1,1,1,1,-1),(1,-1,1,1,-1,-1,-1,1,1),(1,1,-1,-1,-1,-1,1,1),(-1,1,1,1,-1,-1,1,1,-1),(1,1,-1,-1,1,1,1,-1,-1)}, {(-1,-1,-1,-1,1,1,1,1,1),(1,-1,-1,1,-1,1,1,1,-1),(1,-1,1,1,-1,-1,-1,1,1),(1,1,-1,-1,-1,-1,1,1),(-1,1,1,1,-1,-1,1,1,1),(-1,1,1,1,-1,1,1,1,-1)},    {(-1,-1,-1,-1,1,1,1,1,1),(1,-1,-1,1,1,-1,1,1,1,-1),(1,-1,1,1,-1,-1,-1,1,1),(1,1,-1,-1,-1,-1,1,1),(1,1,-1,-1,-1,-1,1,1,1),(1,1,-1,-1,1,1,1,-1,-1)},    {(-1,-1,-1,-1,1,1,1,1,1),(1,-1,1,1,-1,1,1,1,-1),(1,-1,1,1,-1,-1,1,1),(1,1,-1,-1,-1,-1,1,1),(1,1,-1,-1,1,1,1,-1,-1)},

1,1,1,1,1),(1,-1,-1,1,-1,1,1,-1),(1,-1,1,1,-1,-1,1,-1,1),(1,1,-1,-1,-1,-1,1,1,1),(-1,1,1,1,-1,-1,1,1,1,-1),(1,1,-1,-1,1,1,1,-1,-1)}, {(-1,-1,-1,-1,1,1,1,1,1),(1,-1,-1,1,1,-1,1,1,-1),(1,-1,1,1,-1,-1,1,1,-1,1),(1,1,-1,-1,-1,-1,1,1,1,1),(1,-1,-1,1,1,1,1,-1,-1,1),(1,1,-1,-1,1,1,1,-1,-1)}, {(-1,-1,-1,1,1,1,1,1,-1),(-1,-1,1,1,-1,1,1,1,-1,1),(-1,1,1,-1,-1,1,1,-1,1,1),(-1,1,1,1,1,1,-1,-1,-1,1),(-1,-1,1,1,1,-1,-1,1,1,1),(-1,1,1,1,-1,-1,1,1,1,-1)}, {(-1,-1,-1,1,1,1,1,1,-1),(-1,-1,1,1,-1,1,1,1,-1,1),(-1,1,1,-1,-1,-1,1,1,1,1),(-1,1,1,1,1,1,-1,-1,-1,-1),(-1,-1,1,1,1,-1,-1,1,1,1),(1,-1,-1,1,1,1,-1,-1,1,-1,1)}, {(-1,-1,-1,1,1,1,1,1,1,-1),(-1,-1,1,1,-1,1,1,1,-1,1),(-1,1,1,-1,-1,1,1,-1,1,1),(-1,1,1,1,1,1,-1,-1,-1,-1),(-1,1,1,1,-1,-1,1,1,1,-1),(1,1,-1,-1,1,1,1,-1,-1,1,-1)}, {(-1,-1,-1,1,1,1,1,1,1,-1),(-1,-1,1,-1,1,1,1,-1,1,1),(-1,1,1,-1,-1,1,1,-1,1,1),(-1,1,1,1,1,1,-1,-1,-1,-1),(1,-1,-1,1,1,1,-1,-1,1,1),(1,1,-1,-1,1,1,1,-1,-1,1,-1)},
{(-1,-1,-1,1,1,1,1,1,1,-1),(-1,-1,1,-1,1,1,1,1,-1,1),(-1,1,1,-1,1,1,-1,1,1,1),(1,-1,-1,-1,-1,1,1,1,1,1),(-1,-1,1,1,1,-1,1,1,1,1),(-1,1,1,1,-1,-1,1,1,1,-1)}, {(-1,-1,-1,1,1,1,1,1,1,-1),(-1,-1,1,1,-1,1,1,1,-1,1),(-1,1,1,-1,-1,1,1,-1,1,1,1),(1,-1,-1,-1,-1,1,1,1,1,1),(-1,1,1,1,-1,-1,1,1,1,-1),(1,-1,-1,1,1,1,-1,-1,1,1)}, {(-1,-1,-1,1,1,1,1,1,1,-1),(-1,-1,1,1,-1,1,1,1,-1,1),(-1,1,1,-1,-1,1,1,-1,1,1,1),(1,-1,-1,-1,-1,1,1,1,1,1),(-1,1,1,1,-1,-1,1,1,1,-1),(1,1,-1,-1,1,1,1,-1,-1,1,-1)}, {(-1,-1,-1,1,1,1,1,1,1,-1),(-1,-1,1,1,-1,1,1,1,1,-1,1),(-1,1,1,-1,-1,-1,1,1,-1,1,1),(1,-1,-1,-1,-1,1,1,1,1,1),(1,-1,-1,1,1,1,-1,-1,1,-1,1),(1,1,-1,-1,1,1,1,-1,-1,1,-1)}, {(-1,-1,-1,1,1,1,1,1,1,-1),(-1,-1,1,1,-1,1,1,1,-1,1),(-1,1,1,1,1,1,-1,-1,-1,-1),(1,-1,-1,1,1,-1,1,-1,-1,1),(-1,-1,1,1,1,-1,-1,1,1,1),(-1,1,1,1,-1,-1,1,1,1,-1)}, {(-1,-1,-1,1,1,1,1,1,1,-1),(-1,-1,1,1,-1,1,1,1,-1,1),(-1,1,1,1,1,1,-1,-1,-1,-1),(1,-1,-1,1,1,1,-1,1,-1,-1),(-1,-1,1,1,1,-1,-1,1,1,1),(1,-1,-1,1,1,1,-1,-1,1,-1,1)},
{(-1,-1,-1,1,1,1,1,1,1,-1),(-1,-1,1,1,-1,1,1,1,-1,1),(-1,1,1,1,1,1,-1,-1,-1,-1),(1,-1,1,1,1,-1,-1,1,-1,-1),(-1,-1,1,1,1,-1,-1,1,1,1),(1,1,-1,-1,1,1,1,-1,-1,1,-1)}, {(-1,-1,-1,1,1,1,1,1,1,-1),(-1,-1,1,1,-1,1,1,1,-1,1),(-1,1,1,1,1,1,-1,-1,-1,-1),(1,-1,1,1,1,-1,1,-1,-1,-1),(1,-1,-1,1,1,-1,-1,1,-1,1),(1,1,-1,-1,1,1,1,-1,-1,1,-1)}, {(-1,-1,-1,1,1,1,1,1,1,-1),(-1,-1,1,1,-1,1,1,1,-1,1),(1,-1,-1,-1,1,1,1,1,1),(1,-1,1,1,-1,1,-1,-1,1),(-1,-1,1,1,1,-1,1,1,1),(-1,1,1,1,-1,-1,1,1,1,-1)}, {(-1,-1,-1,1,1,1,1,1,1,-1),(-1,-1,1,1,-1,1,1,1,-1,1),(1,-1,-1,-1,-1,1,1,1,1,1),(1,-1,1,1,1,-1,1,-1,-1,-1),(-1,-1,1,1,1,-1,-1,1,1,1),(1,-1,-1,1,1,1,-1,-1,1,-1,1)}, {(-1,-1,-1,1,1,1,1,1,1,-1),(-1,-1,1,1,-1,1,1,1,-1,1),(1,-1,-1,-1,-1,1,1,1,1,1),(1,-1,1,1,1,-1,1,-1,-1,-1),(-1,-1,1,1,1,-1,-1,1,1,1),(1,1,-1,-1,1,1,1,-1,-1,1,-1)}, {(-1,-1,-1,1,1,1,1,1,1,-1),(-1,-1,1,1,-1,1,1,1,-1,1),(1,-1,-1,-1,-1,1,1,1,1,1),(1,-1,1,1,1,-1,1,-1,-1,1,-1),(1,-1,-1,1,1,1,-1,-1,1,-1,1),(1,1,-1,-1,1,1,1,-1,-1,1,-1)}, {(-1,-1,-1,1,1,1,1,1,-1),(-1,-1,1,1,-1,1,1,-1,1,1),(-1,1,1,1,1,1,-1,-1,-1,-1),(1,1,-1,1,1,-1,-1,1,-1,-1),(-1,-1,1,1,1,-1,-1,1,1,1),(1,-1,-1,1,1,1,-1,-1,1,-1,1)}, {(-1,-1,-1,1,1,1,1,1,-1),(-1,-1,1,-1,1,1,-1,1,1,1),(-1,1,1,1,1,1,-1,-1,-1,-1),(1,1,-1,1,1,-1,-1,1,-1,1,-1),(1,-1,-1,1,1,-1,-1,1,-1,1,1),(-1,1,1,1,-1,-1,1,1,1,-1)}, {(-1,-1,-1,1,1,1,1,1,-1),(-1,-1,1,1,-1,1,1,-1,1,1),(1,-1,-1,-1,-1,1,1,1,1,1),(1,1,-1,1,1,-1,-1,1,-1,-1),(-1,-1,1,1,1,-1,-1,1,1,1),(1,-1,-1,1,1,1,-1,-1,1,-1,1)},
{(-1,-1,-1,1,1,1,1,1,-1),(-1,-1,1,-1,1,1,-1,1,1,1),(-1,1,1,1,1,1,-1,-1,-1,-1),(1,1,-1,1,1,-1,-1,1,-1,1,-1),(-1,1,1,1,-1,-1,1,1,1,-1),(1,-1,-1,1,1,1,-1,-1,1,1)}, {(-1,-1,-1,1,1,1,1,1,-1),(-1,-1,1,-1,1,1,-1,1,1,1),(-1,1,1,1,1,1,-1,-1,-1,-1),(1,-1,1,1,1,-1,-1,1,-1,-1),(-1,-1,1,1,1,-1,-1,1,1,1),(1,1,-1,-1,1,1,1,-1,-1,1,-1)}, {(-1,-1,-1,1,1,1,1,1,-1),(-1,1,1,1,1,1,-1,-1,-1,-1),(1,-1,-1,-1,-1,1,1,1,1,1),(1,1,-1,1,1,-1,-1,1,-1,-1),(-1,1,1,1,-1,-1,1,1,1,-1),(-1,-1,1,1,1,-1,-1,1,1,1)}, {(-1,-1,-1,1,1,1,1,1,-1),(-1,1,1,1,1,1,-1,-1,-1,-1),(1,-1,-1,-1,-1,1,1,1,1,1),(1,1,-1,1,1,-1,-1,1,-1,1,-1),(1,-1,-1,1,1,-1,-1,1,-1,1,1),(1,1,-1,-1,1,1,1,-1,-1,1,-1)}, {(-1,-1,-1,1,1,1,1,1,-1),(1,-1,-1,-1,-1,1,1,1,1,1),(1,-1,1,1,-1,1,-1,-1,1),(1,1,-1,1,1,-1,-1,1,-1,-1),(-1,-1,1,1,1,-1,-1,1,1,1),(-1,1,1,1,-1,-1,1,1,1,-1)}, {(-1,-1,-1,1,1,1,1,1,-1),(1,-1,-1,-1,-1,1,1,1,1,1),(1,-1,1,1,-1,-1,1,-1,1),(1,1,-1,1,1,-1,-1,1,-1,-1),(-1,1,1,1,-1,-1,1,1,1,-1),(-1,-1,1,1,1,-1,-1,1,1,1)}, {(-1,-1,1,-1,1,1,-1,1),(-1,1,1,-1,1,1,-1,1,1),(-1,1,1,1,1,1,-1,-1,-1),(1,1,1,-1,-1,-1,-1,1,1),(1,-1,-1,1,1,1,-1,-1,1,-1,-1,1),(1,1,-1,-1,1,1,1,-1,-1)}, {(-1,-1,1,1,-1,1,1,-1,1),(-1,1,1,-1,-1,1,1,-1,1,1),(1,-1,-1,-1,-1,1,1,1,1,1),(1,1,1,-1,-1,-1,-1,1,1),(1,-1,-1,1,1,1,-1,-1,1,-1),(1,-1,-1,1,1,1,-1,-1,1,-1,1)}, {(-1,-1,1,1,-1,1,1,-1,1),(-1,1,1,1,1,1,-1,-1,-1),(1,1,1,-1,-1,-1,-1,1,1),(-1,-1,1,1,1,-1,-1,1,1,1),(1,-1,-1,1,1,1,-1,-1,1,-1,1)}, {(-1,-1,1,1,-1,1,1,-1,1),(-1,1,1,1,1,1,-1,-1,-1),(1,-1,-1,-1,-1,1,1,1,1),(1,1,1,-1,-1,-1,-1,1,1),(-1,-1,1,1,1,-1,-1,1,1,1),(1,-1,-1,1,1,1,-1,-1,1,-1,1)}, {(-1,-1,1,1,-1,1,1,-1,1),(-1,1,1,-1,-1,1,1,-1,1,1),(1,-1,-1,-1,-1,1,1,1,1,1),(1,1,1,-1,-1,-1,-1,1,1),(1,-1,-1,1,1,1,-1,-1,1,-1,1),(1,1,-1,-1,1,1,1,-1,-1,1,-1)},
{(-1,-1,1,1,-1,1,1,-1,1),(-1,1,1,1,1,1,-1,-1,-1),(1,1,1,-1,-1,-1,-1,1,1),(-1,-1,1,1,1,-1,-1,1,1,1),(1,1,-1,-1,1,1,1,-1,-1,1,-1)}, {(-1,-1,1,-1,1,1,-1,1),(-1,1,1,1,1,1,-1,-1,-1),(1,-1,-1,-1,-1,1,1,1,1,1),(1,1,1,-1,-1,-1,-1,1,1),(-1,-1,1,1,1,-1,-1,1,1,1),(1,-1,-1,1,1,1,-1,-1,1,-1,1)}, {(-1,-1,1,-1,1,1,-1,1),(-1,1,1,1,1,1,-1,-1,-1),(1,-1,1,1,-1,1,-1,-1,1),(1,1,1,-1,-1,-1,-1,1,1),(-1,-1,1,1,1,-1,-1,1,1,1),(1,-1,-1,1,1,1,-1,-1,1,-1,1)}, {(-1,-1,1,-1,1,1,-1,1),(-1,1,1,1,1,1,-1,-1,-1),(1,-1,1,1,1,-1,-1,1,-1,-1),(1,1,1,-1,-1,-1,-1,1,1),(-1,-1,1,1,1,-1,-1,1,1,1),(1,1,-1,-1,1,1,1,-1,-1,1,-1)}, {(-1,-1,1,-1,1,1,-1,1),(1,-1,-1,-1,-1,1,1,1,1),(1,-1,1,1,-1,1,-1,-1,1),(1,1,1,-1,-1,-1,-1,1,1),(-1,-1,1,1,1,-1,-1,1,1,1),(1,-1,-1,1,1,1,-1,-1,1,-1,1)}, {(-1,-1,1,-1,1,1,-1,1),(1,-1,-1,-1,-1,1,1,1,1),(1,-1,1,1,1,-1,-1,1,-1,-1),(1,1,1,-1,-1,-1,-1,1,1),(-1,-1,1,1,1,-1,-1,1,1,1),(1,1,-1,-1,1,1,1,-1,-1,1,-1)}, {(-1,-1,1,-1,1,1,-1,1),(1,-1,-1,-1,-1,1,1,1,1),(1,-1,1,1,1,-1,-1,1,-1,-1),(1,1,1,-1,-1,-1,-1,1,1),(-1,-1,1,1,1,-1,-1,1,1,1),(1,-1,-1,1,1,1,-1,-1,1,1)}, {(-1,-1,1,1,-1,1,1,-1,1),(-1,1,1,-1,-1,1,1,-1,1,1),(-1,1,1,1,1,1,-1,-1,-1),(1,1,1,-1,-1,-1,-1,1,1),(-1,-1,1,1,1,-1,-1,1,1,1),(1,-1,-1,1,1,1,-1,-1,1,1)}, {(-1,-1,1,1,-1,1,1,-1,1),(-1,1,1,-1,-1,1,1,-1,1,1),(-1,1,1,1,1,1,-1,-1,-1),(1,1,1,-1,-1,-1,-1,1,1),(-1,1,1,1,-1,-1,1,1,1,-1),(1,-1,-1,1,1,1,-1,-1,1,1)},
{(-1,-1,1,1,-1,1,1,-1,1),(-1,1,1,-1,-1,1,1,-1,1,1),(-1,1,1,1,1,1,-1,-1,-1),(1,1,1,-1,-1,-1,-1,1,1),(1,-1,-1,1,1,1,-1,-1,1,-1,1),(1,1,-1,-1,1,1,1,-1,-1,1,-1)}, {(-1,-1,1,1,-1,1,1,-1,1),(-1,1,1,-1,-1,1,1,-1,1,1),(1,-1,-1,-1,-1,1,1,1,1),(1,1,1,-1,-1,-1,-1,1,1),(-1,-1,1,1,1,-1,-1,1,1,1),(1,-1,-1,1,1,1,-1,-1,1,-1,1)}, {(-1,-1,1,1,-1,1,1,-1,1),(-1,1,1,1,1,1,-1,-1,-1),(1,-1,-1,-1,-1,1,1,1,1),(1,1,1,-1,-1,-1,-1,1,1),(-1,-1,1,1,1,-1,-1,1,1,1),(1,-1,-1,1,1,1,-1,-1,1,1)}, {(-1,-1,1,1,-1,1,1,-1,1),(-1,1,1,1,1,1,-1,-1,-1),(1,-1,-1,-1,-1,1,1,1,1),(1,1,1,-1,-1,-1,-1,1,1),(-1,-1,1,1,1,-1,-1,1,1,1),(1,1,-1,-1,1,1,1,-1,-1,1,-1)}, {(-1,-1,1,-1,1,1,1,-1,1),(1,-1,-1,-1,-1,1,1,1,1),(1,-1,1,1,1,-1,1,1,-1,-1),(1,1,1,-1,-1,-1,-1,1,1),(-1,1,1,1,1,-1,-1,1,1,1),(-1,1,1,1,-1,-1,1,1,1,-1)}, {(-1,-1,1,-1,1,1,1,-1,1),(1,-1,-1,-1,-1,1,1,1,1),(1,-1,1,1,1,-1,1,-1,-1),(1,1,1,-1,-1,-1,-1,1,1),(-1,-1,1,1,1,-1,-1,1,1,1),(1,-1,-1,1,1,1,-1,-1,1,-1,1)}, {(-1,-1,1,-1,1,1,1,-1,1),(1,-1,-1,-1,-1,1,1,1,1),(1,-1,1,1,1,-1,1,-1,-1),(1,1,1,-1,-1,-1,-1,1,1),(-1,-1,1,1,1,-1,-1,1,1,1),(1,1,-1,-1,1,1,1,-1,-1,1,-1)}, {(-1,-1,1,1,-1,1,1,-1,1),(1,-1,-1,-1,-1,1,1,1,1),(1,-1,1,1,1,-1,1,-1,-1),(1,1,1,-1,-1,-1,-1,1,1),(1,-1,-1,1,1,1,-1,-1,1,-1,1),(1,1,-1,-1,1,1,1,-1,-1,1,-1)}, {(-1,-1,1,1,-1,1,1,-1,1),(1,-1,-1,-1,-1,1,1,1,1),(1,-1,1,1,1,-1,-1,1,-1,-1),(1,1,1,-1,-1,-1,-1,1,1),(-1,-1,1,1,1,-1,-1,1,1,1),(1,-1,-1,1,1,1,-1,-1,1,1)}, {(-1,-1,1,1,1,-1,1),(1,-1,-1,-1,-1,1,1,1,1),(1,-1,1,1,1,-1,1,1,-1,-1),(1,1,1,-1,-1,-1,-1,1,1),(-1,-1,1,1,1,-1,-1,1,1,1),(-1,1,1,1,-1,-1,1,1,1,-1)}, {(-1,-1,1,1,1,-1,1),(1,-1,-1,-1,-1,1,1,1,1,1),(1,-1,1,1,1,-1,1,1,-1,-1),(1,1,1,-1,-1,-1,-1,1,1),(-1,1,1,1,1,-1,-1,1,1,1),(1,-1,-1,1,1,-1,-

1,-1,1)},    {(-1,-1,1,-1,1,1,-1,1),(1,-1,-1,-1,-1,1,1,1),(1,-1,1,1,-1,1,-1,-1),(1,1,1,-1,-1,-1,-1,1),(-1,1,1,1,-1,-1,1,1,1,-1),(1,1,-1,-1,1,1,-1,-1)},    {(-1,-1,1,-1,1,1,-1,1),(1,-1,-1,-1,-1,1,1,1),(1,-1,1,1,-1,1,-1,-1),(1,1,1,-1,-1,-1,-1,1,-1,1),(1,-1,-1,1,1,-1,-1,1),(1,1,-1,-1,1,1,-1,-1)},    {(-1,-1,1,1,1,1,-1,-1),(-1,1,-1,1,1,-1,1,-1),(-1,1,1,-1,1,-1,-1,1),(1,1,1,1,-1,-1,-1,-1),(-1,-1,1,1,-1,-1,1,1,1),(-1,1,1,-1,-1,1,1,-1)},    {(-1,-1,1,1,1,1,-1,-1),(-1,1,-1,1,1,-1,1,-1,1),(-1,1,1,-1,1,-1,-1,1),(1,1,1,1,-1,-1,-1,-1),(-1,-1,1,1,-1,-1,1,1,1),(1,-1,-1,1,1,-1,-1,1)},    {(-1,-1,1,1,1,1,-1,-1),(-1,1,-1,1,1,-1,1,-1),(-1,1,1,-1,1,-1,-1,1),(1,1,1,1,-1,-1,-1,-1),(-1,1,1,1,-1,-1,1,1,-1),(1,1,-1,-1,1,1,-1,-1)},    {(-1,-1,1,1,1,1,-1,-1),(-1,1,-1,1,1,-1,1,-1),(-1,1,1,-1,1,-1,-1,1),(1,1,1,1,-1,-1,-1,-1),(-1,-1,1,1,1,1,-1,-1,1),(1,1,-1,-1,1,1,-1,-1)},    {(-1,-1,1,1,1,1,-1,-1),(-1,1,-1,1,1,-1,1,-1),(1,-1,-1,1,-1,1,1,1,-1,-1),(1,1,1,1,-1,-1,-1,-1),(-1,-1,1,1,-1,-1,1,1),(1,-1,-1,1,1,-1,-1,1)},    {(-1,-1,1,1,1,1,-1,-1),(-1,1,-1,1,1,-1,1,-1),(1,-1,1,-1,-1,1,1,-1),(1,1,1,1,-1,-1,-1,-1),(-1,1,1,1,-1,-1,1,1,-1),(1,1,-1,-1,1,1,-1,-1)},    {(-1,-1,1,1,1,1,-1,-1),(-1,1,1,-1,1,-1,-1,1),(1,-1,-1,1,-1,1,1,1,-1,-1),(1,1,1,1,-1,-1,-1,-1),(1,-1,-1,1,1,-1,-1,1),(1,1,-1,-1,1,1,-1,-1)},    {(-1,-1,1,1,1,1,-1,-1),(-1,1,1,-1,1,-1,-1,1),(1,-1,1,-1,-1,1,1,-1),(1,1,1,1,-1,-1,-1,-1),(-1,-1,1,1,-1,-1,1,1),(-1,1,1,-1,-1,1,1,-1)},    {(-1,-1,1,1,1,1,-1,-1),(-1,1,1,-1,1,-1,-1,1),(1,-1,1,-1,-1,1,1,-1),(1,1,1,1,-1,-1,-1,-1),(-1,1,1,1,-1,-1,1,1),(1,-1,-1,1,1,-1,-1,1)},    {(-1,-1,1,1,1,1,-1,-1),(-1,1,1,-1,1,-1,-1,1),(1,-1,1,-1,-1,1,1,-1),(1,1,1,1,-1,-1,-1,-1),(-1,1,1,1,-1,-1,1,1),(1,-1,-1,1,1,-1,-1,1,1),(1,1,-1,-1,1,1,-1,-1)},    {(-1,-1,1,1,1,1,-1,-1),(-1,1,1,-1,1,-1,-1,1),(1,-1,1,-1,-1,1,1,-1),(1,1,1,1,-1,-1,-1,-1),(-1,-1,1,1,-1,-1,1,1,1),(1,1,-1,-1,1,1,-1,-1)},    {(-1,-1,1,1,1,1,-1,-1),(1,-1,1,-1,-1,1,1,-1),(1,-1,1,-1,-1,1,1,-1),(1,1,1,1,-1,-1,-1,-1),(-1,-1,1,1,-1,-1,1,1),(-1,1,1,-1,-1,1,1,-1)},    {(-1,-1,1,1,1,1,-1,-1),(1,-1,1,-1,-1,1,1,-1),(1,-1,1,-1,-1,1,1,-1),(1,1,1,1,-1,-1,-1,-1),(-1,1,1,1,-1,-1,1,1,1),(-1,1,1,-1,-1,1,1,-1)},    {(-1,-1,1,1,1,1,-1,-1),(1,-1,1,1,-1,1,1,-1),(1,-1,1,-1,-1,1,1,-1),(1,1,1,1,-1,-1,-1,-1),(-1,-1,1,1,-1,-1,1,1),(-1,1,1,-1,-1,1,1,-1)},    {(-1,-1,1,1,1,1,-1,-1),(1,-1,1,1,-1,1,1,-1),(1,-1,1,-1,-1,1,1,-1),(1,1,1,1,-1,-1,-1,-1),(-1,-1,1,1,1,1,-1,-1,1),(1,1,-1,-1,1,1,-1,-1)},    {(-1,1,1,-1,-1,1,1,1),(-1,1,1,1,1,-1,-1,-1),(1,1,-1,1,-1,-1,1,-1),(1,1,1,-1,-1,-1,-1,1),(-1,-1,1,1,1,-1,-1,1,1),(-1,1,1,1,-1,-1,1,-1)},    {(-1,1,1,-1,-1,1,1,1),(-1,1,1,1,1,-1,-1,-1),(1,1,-1,1,-1,-1,1,-1),(1,1,1,-1,-1,-1,-1,1),(-1,-1,1,1,1,-1,-1,1,1),(1,-1,-1,1,1,1,-1,-1)},    {(-1,1,1,-1,-1,1,1,1),(-1,1,1,1,1,-1,-1,-1),(1,1,-1,1,-1,-1,1,-1),(1,1,1,-1,-1,-1,-1,1),(-1,1,1,1,-1,-1,1,1,1),(1,1,-1,-1,1,1,-1,-1)},    {(-1,1,1,-1,-1,1,1,1),(-1,1,1,1,1,-1,-1,-1),(1,1,-1,1,-1,-1,1,-1),(1,1,1,-1,-1,-1,-1,1),(-1,-1,1,1,1,-1,-1,1,1),(-1,1,1,-1,-1,1,1,-1)},    {(-1,1,1,-1,-1,1,1,1),(-1,1,1,1,1,-1,-1,-1),(1,1,-1,1,-1,-1,1,-1),(1,1,1,-1,-1,-1,-1,1),(-1,1,1,1,-1,-1,1,1,1),(1,1,-1,-1,1,1,-1,-1)},    {(-1,1,1,-1,-1,1,1,1),(1,-1,1,-1,-1,1,1,1),(1,1,-1,1,-1,-1,1,-1),(1,1,1,-1,-1,-1,-1,1),(-1,-1,1,1,1,-1,-1,1,1),(-1,1,1,-1,-1,1,1,-1)},    {(-1,1,1,-1,-1,1,1,1),(1,-1,1,-1,-1,1,1,1),(1,1,-1,1,-1,-1,1,-1),(1,1,1,-1,-1,-1,-1,1),(-1,1,1,1,-1,-1,1,1,1),(1,1,-1,-1,1,1,-1,-1)},    {(-1,1,1,-1,1,1,-1,-1),(-1,1,1,-1,1,-1,-1,1),(1,1,-1,-1,-1,-1,1,1,1),(1,1,1,1,-1,-1,-1,-1),(-1,-1,1,1,1,-1,-1,1,1),(1,-1,-1,1,1,1,-1,-1)},    {(-1,1,1,-1,1,1,-1,-1),(-1,1,1,-1,1,-1,-1,1),(1,1,-1,-1,-1,-1,1,1),(1,1,1,1,-1,-1,-1,-1),(-1,1,1,1,-1,-1,1,1,1),(1,-1,-1,1,1,1,-1,-1)},    {(-1,1,1,-1,1,1,-1,-1),(-1,1,1,-1,1,-1,-1,1),(1,1,-1,-1,-1,-1,1,1),(1,1,1,1,-1,-1,-1,-1),(-1,1,1,1,-1,-1,1,1,1),(1,1,-1,-1,1,1,-1,-1)},    {(-1,1,1,-1,1,1,-1,-1),(1,-1,-1,1,-1,1,1,1),(1,1,1,1,-1,-1,-1,-1),(1,1,1,1,-1,-1,-1,-1),(-1,-1,1,1,1,-1,-1,1,1),(1,-1,-1,1,1,1,-1,-1)},    {(-1,1,1,-1,1,1,-1,-1),(1,-1,-1,-1,-1,1,1,1),(1,1,1,1,-1,-1,-1,-1),(1,1,1,1,-1,-1,-1,-1),(-1,-1,1,1,1,-1,-1,1,1),(1,-1,-1,1,1,1,-1,-1)},    {(-1,1,1,-1,1,1,-1,-1),(1,-1,1,1,-1,1,1,-1),(1,1,-1,-1,-1,-1,1,1),(1,1,1,1,-1,-1,-1,-1),(-1,1,1,1,-1,-1,1,1),(1,-1,-1,1,1,1,-1,-1)},    {(-1,1,1,-1,1,1,-1,-1),(1,-1,1,1,-1,1,1,-1),(1,1,-1,-1,-1,-1,1,1),(1,1,1,1,-1,-1,-1,-1),(-1,1,1,1,-1,-1,1,1),(1,1,-1,-1,1,1,-1,-1)},    {(-1,1,1,-1,1,1,-1,-1),(1,-1,1,1,-1,1,1,-1),(1,1,-1,-1,-1,-1,1,1),(1,1,1,1,-1,-1,-1,-1),(-1,1,1,1,-1,-1,1,1),(1,-1,-1,1,1,1,-1,-1)},    {(-1,1,1,-1,1,1,-1,-1),(1,-1,1,1,-1,1,1,-1),(1,1,-1,-1,-1,-1,1,1),(1,1,1,1,-1,-1,-1,-1),(-1,-1,1,1,1,-1,-1,1,1),(1,-1,-1,1,1,1,-1,-1)},    {(-1,1,1,-1,1,-1,-1,1),(1,-1,-1,1,-1,1,1,1),(1,1,-1,-1,-1,-1,1,1),(1,1,1,1,-1,-1,-1,-1),(-1,1,1,1,-1,-1,1,1),(-1,1,1,-1,-1,1,1,-1)},    {(-1,1,1,-1,1,-1,-1,1),(1,-1,1,1,-1,1,1,-1),(1,1,1,1,-1,-1,-1,-1),(1,1,1,1,-1,-1,-1,-1),(-1,1,1,1,-1,-1,1,1),(1,-1,-1,1,1,1,-1,-1)},    {(-1,1,1,-1,1,-1,-1,1),(1,-1,1,-1,-1,1,1,-1),(1,1,1,1,-1,-1,-1,-1),(1,1,1,1,-1,-1,-1,-1),(-1,-1,1,1,1,-1,-1,1,1),(-1,1,1,1,-1,-1,1,-1)},    {(-1,1,1,1,1,1,-1,-1,-1),(1,-1,1,1,-1,1,1,-1),(1,1,-1,-1,-1,-1,1,1),(1,1,1,1,-1,-1,-1,-1),(-1,1,1,1,-1,-1,1,1),(1,-1,-1,1,1,1,-1,-1)},    {(-1,1,1,1,1,1,-1,-1,-1),(1,-1,1,1,-1,1,1,-1),(1,1,-1,-1,-1,-1,1,1),(1,1,1,1,-1,-1,-1,-1),(-1,-1,1,1,1,-1,-1,1,1),(-1,1,1,1,-1,-1,1,-1)},    {(1,-1,-1,-1,1,1,1,1),(1,-1,1,1,-1,1,1,-1,-1),(1,1,-1,-1,-1,-1,1,1),(1,1,1,-1,-1,-1,-1,1),(-1,1,1,1,-1,-1,1,1),(-1,1,1,1,-1,-1,1,-1)},    {(1,-1,-1,-1,1,1,1,1),(1,-1,1,1,-1,1,-1,-1),(1,1,1,-1,-1,-1,-1,1),(1,1,1,-1,-1,-1,-1,1),(-1,-1,1,1,1,-1,-1,1,1),(1,-1,-1,1,1,1,-1,-1)},    {(1,-1,-1,-1,1,1,1,1),(1,-1,1,1,-1,1,-1,-1,-1),(1,1,1,-1,-1,-1,-1,1),(1,1,1,-1,-1,-1,-1,1),(-1,1,1,1,-1,-1,1,1),(1,1,-1,1,1,1,-1,-1,1),(1,1,-1,-1,1,1,-1,-1)},    {(1,-1,-1,-1,-1,1,1,1),(1,-1,1,1,-1,1,-1,-1,-1),(1,1,1,-1,-1,-1,-1,1,1),(1,1,1,-1,-1,-1,-1,1),(-1,-1,1,1,1,-1,-1,1,1),(-1,1,1,1,-1,-1,1,-1)},    {(1,-1,-1,1,-1,1,1,-1),(1,-1,1,-1,-1,1,1,-1,1),(1,1,-1,-1,-1,-1,1,1),(1,1,1,-1,-1,-1,-1,1),(-1,-1,1,1,1,-1,-1,1,1),(-1,1,1,1,-1,-1,1,-1)},    {(1,-1,1,-1,1,1,-1,-1),(1,-1,1,1,-1,1,1,-1),(1,1,-1,-1,-1,-1,1,1),(1,1,1,-1,-1,-1,-1,1),(-1,-1,1,1,1,-1,-1,1,1),(-1,1,1,1,-1,-1,1,-1)},

1,1,1),(1,1,1,1,-1,-1,-1,-1),(-1,-1,1,1,-1,-1,1,1),(1,-1,-1,1,1,-1,-1,1)},   {(1,-1,-1,1,-1,1,1,-1),(1,-1,1,-1,-1,1,-1,1),(1,1,-1,-1,-1,-1,1,1),(1,1,1,1,-1,-1,-1,-1),(-1,1,1,-1,-1,1,1,-1),(1,1,-1,-1,1,1,-1,-1)},   {(1,-1,-1,1,-1,1,1,-1),(1,-1,1,-1,-1,1,-1,1),(1,1,-1,-1,-1,-1,1,1),(1,1,1,1,-1,-1,-1,-1),(1,-1,-1,1,1,-1,-1,1),(1,1,-1,-1,1,1,-1,-1)} .

**Patentansprüche**

1. System zur Erzeugung spektral effizienter orthogonaler Codes, umfassend:

   ein Code-Erzeugungsmodul (310), das dazu konfiguriert ist, eine Kandidatencodegruppe zu erzeugen, in der die Kandidatencodegruppe $2^L$ verschiedene Codes für eine gegebene Codelänge L enthält;
   ein Frequenzgang-Berechnungsmodul (312), das dazu konfiguriert ist, einen Frequenzgang der Codes innerhalb der Kandidatencodegruppe zu berechnen;
   ein Code-Gruppierungsmodul (314), das dazu konfiguriert ist, die Codes innerhalb der Kandidatengruppe in eine Einzelfrequenz-Codegruppe und eine Mischfrequenz-Codegruppe basierend auf dem Frequenzgang der Codes innerhalb der Kandidatencodegruppe zu unterteilen;
   ein Frequenzcode-Suchmodul (316), das dazu konfiguriert ist, nach orthogonalen Codes innerhalb jeder der Einzelfrequenz-Codegruppe und der Mischfrequenz-Codegruppe zu suchen;
   **dadurch gekennzeichnet, dass** für eine Anzahl von Frequenzpositionen N die Codes, die eine gleiche Anzahl von Frequenzpositionen N und Frequenzkomponenten, die sich an gleichen Frequenzpositionen befinden, aufweisen, gruppiert werden, um die Einzelfrequenz-Codegruppe zu bilden;
   wobei für eine gegebene Codelänge L mehrere Werte von N verwendet werden und das System N iterativ erhöht, um Codes basierend auf ihrem Frequenzgang zu gruppieren,
   wobei für eine Anzahl von Frequenzpositionen N die Codes, die eine gleiche Anzahl von Frequenzpositionen N und Frequenzkomponenten, die sich an gleichen Frequenzpositionen befinden, aufweisen, zusätzlich zu den Codes, deren Anzahl von Frequenzpositionen kleiner als N ist, mit einer Bedingung, wonach die Positionen aller Frequenzkomponenten solcher Codes sich mit einigen Positionen von Frequenzkomponenten von Codes, die N Frequenzpositionen aufweisen, überschneiden, gruppiert werden, um die Mischfrequenz-Codegruppe zu bilden, wobei die Frequenzkomponenten und -positionen aus dem berechneten Frequenzgang abgeleitet werden;
   wobei ein oder mehrere Codesätze innerhalb jeder Frequenzcodegruppe gebildet werden, die Codes innerhalb von Codesätzen in ihrer Natur orthogonal sind; und
   ferner umfassend einen Speicher, der dazu konfiguriert ist, für jeden orthogonalen Codesatz, der innerhalb einer Einzelfrequenz-Codegruppe oder einer Mischfrequenz-Codegruppe gebildet wird, Kennungsinformationen und die entsprechenden orthogonalen Codes in einer Datenbank zu speichern, die eine orthogonale Codeliste bildet, wobei die orthogonale Codeliste eine Vielzahl von Einträgen umfasst, wobei jeder Eintrag einem orthogonalen Codesatz entspricht und Folgendes beinhaltet: eine Anzahl von Codesätzen in der Einzelfrequenz-Codegruppe oder Mischfrequenz-Codegruppe und eine Anzahl von Codes in einem Codesatz;
   wobei eine Frequenzposition eine Stelle in dem Frequenzgang eines Codes ist und eine Frequenzkomponente ein Spektralelement ist, das an einer bestimmten Stelle in dem Frequenzgang eines Codes vorhanden ist.

2. System nach Anspruch 1, wobei die Codes innerhalb der Codesätze eine unverschobene Kreuzkorrelation von Null aufweisen.

3. System nach Anspruch 1, wobei die Codes innerhalb der Codesätze einen minimalen Wert einer maximalen Nebenkeule aufweisen.

4. System nach Anspruch 1, wobei die Codes innerhalb der Codesätze einen minimalen Wert einer Gesamt-Nebenkeule aufweisen.

5. System nach einem der Ansprüche 1 bis 4, ferner umfassend Erzeugen eines orthogonalen Codes der Länge 2L innerhalb eines Codesatzes durch Wiederholen des orthogonalen Codes der Länge **L.**

6. System nach Anspruch 1, ferner umfassend Berechnen einer spektralen Effizienz, wobei die spektrale Effizienz ein Verhältnis der Anzahl der Codes in einem Codesatz innerhalb einer Frequenzgruppe und der Anzahl der Frequenzpositionen des Codes ist.

7. System nach Anspruch 6, wobei die spektrale Effizienz mindestens 2 beträgt.

8. Verfahren zum Erzeugen eines spektral effizienten orthogonalen Codes, umfassend:

Erzeugen einer Kandidatencodegruppe, wobei die Kandidatencodegruppe $2^L$ verschiedene Codes für eine gegebene Codelänge L enthält;
Berechnen eines Frequenzgangs der Codes innerhalb der Kandidatencodegruppe;
Aufteilen der Codes innerhalb der Kandidatengruppe in zwei Kategorien von Frequenzcodegruppen, basierend auf dem Frequenzgang der Codes innerhalb der Kandidatencodegruppe;
Suchen nach orthogonalen Codes innerhalb jeder der Einzelfrequenz-Codegruppe und der Mischfrequenz-Codegruppe;
**dadurch gekennzeichnet, dass** für eine Anzahl von Frequenzpositionen N die Codes, die eine gleiche Anzahl von Frequenzpositionen N und Frequenzkomponenten, die sich an gleichen Frequenzpositionen befinden, aufweisen, gruppiert werden, um die Einzelfrequenz-Codegruppe zu bilden;
wobei für eine Anzahl von Frequenzpositionen N die Codes, die eine gleiche Anzahl von Frequenzpositionen N und Frequenzkomponenten, die sich an gleichen Frequenzpositionen befinden, aufweisen, zusätzlich zu den Codes, deren Anzahl von Frequenzpositionen kleiner als N ist, mit einer Bedingung, wonach die Positionen aller Frequenzkomponenten solcher Codes sich mit einigen Positionen von Frequenzkomponenten von Codes, die N Frequenzpositionen aufweisen, überschneiden, gruppiert werden, um die Mischfrequenz-Codegruppe zu bilden, wobei die Frequenzkomponenten und -positionen aus dem berechneten Frequenzgang abgeleitet werden;
wobei ein oder mehrere Codesätze innerhalb jeder Frequenzcodegruppe gebildet werden, die Codes innerhalb von Codesätzen in ihrer Natur orthogonal sind; und
wobei das Verfahren ferner Speichern, für jeden orthogonalen Codesatz, der innerhalb einer Einzelfrequenz-Codegruppe oder einer Mischfrequenz-Codegruppe gebildet wird, von Kennungsinformationen und den entsprechenden orthogonalen Codes in einer Datenbank umfasst, die eine orthogonale Codeliste bildet, wobei die orthogonale Codeliste eine Vielzahl von Einträgen umfasst, wobei jeder Eintrag einem orthogonalen Codesatz entspricht und Folgendes beinhaltet: eine Anzahl von Codesätzen in der Einzelfrequenz-Codegruppe oder Mischfrequenz-Codegruppe und eine Anzahl von Codes in einem Codesatz;
wobei eine Frequenzposition eine Stelle in dem Frequenzgang eines Codes ist und eine Frequenzkomponente ein Spektralelement ist, das an einer bestimmten Stelle in dem Frequenzgang eines Codes vorhanden ist.

9. System nach Anspruch 1 oder Verfahren nach Anspruch 8, wobei die Codeliste eine der folgenden Codelisten ist:

Codeliste 1: {(-1,-1,1,1), (-1,1,1,-1)},{(-1,-1,1,1), (1,-1,-1,1)},{(-1,1,1,-1), (1,1,-1,-1)}, { (1,-1,-1,1), (1,1,-1,-1)};

```
Codeliste  2:  {(-1,-1,-1,-1,1,1,1,1),(-1,-1,1,1,1,1,-1,-1),(-
1,1,-1,1,1,-1,1,-1),(-1,1,1,-1,1,-1,-1,1)},{(-1,-1,-1,-
1,1,1,1,1),(-1,-1,1,1,1,1,-1,-1),(-1,1,-1,1,1,-1,1,-1),(1,-1,-
1,1,-1,1,1,-1)},{(-1,-1,-1,-1,1,1,1,1),(-1,-1,1,1,1,1,-1,-
```

1),(-1,1,1,-1,1,-1,-1,1),(1,-1,1,-1,-1,1,-1,1)},{(-1,-1,-1,-1,1,1,1,1),(-1,-1,1,1,1,1,-1,-1),(1,-1,-1,1,-1,1,1,-1),(1,-1,1,-1,-1,1,-1,1)},{(-1,-1,-1,-1,1,1,1,1),(-1,1,-1,1,1,-1,1,-1),(-1,1,1,-1,1,-1,-1,1),(1,1,-1,-1,-1,-1,1,1)},{(-1,-1,-1,-1,1,1,1,1),(-1,1,-1,1,1,-1,1,-1),(1,-1,-1,1,-1,1,1,-1),(1,1,-1,-1,-1,-1,1,1)},{(-1,-1,-1,-1,1,1,1,1),(-1,1,1,-1,1,-1,-1,1),(1,-1,1,-1,-1,1,-1,1),(1,1,-1,-1,-1,-1,1,1)},{(-1,-1,-1,-1,1,1,1,1),(1,-1,-1,1,-1,1,1,-1),(1,-1,1,-1,-1,1,-1,1),(1,1,-1,-1,-1,-1,1,1)},{(-1,-1,-1,1,1,1,1,-1),(-1,-1,1,-1,1,1,-1,1),(-1,1,-1,-1,1,-1,1,1),(-1,1,1,1,1,-1,-1,-1)},{(-1,-1,-1,1,1,1,1,-1),(-1,-1,1,-1,1,1,-1,1),(-1,1,-1,-1,1,-1,1,1),(1,-1,-1,-1,-1,1,1,1)},{(-1,-1,-1,1,1,1,1,-1),(-1,-1,1,-1,1,1,-1,1),(-1,1,1,1,1,-1,-1,-1),(1,-1,1,1,-1,1,-1,-1)},{(-1,-1,-1,1,1,1,1,-1),(-1,-1,1,-1,1,1,-1,1),(1,-1,-1,-1,-1,1,1,1),(1,-1,1,1,-1,1,-1,-1)},{(-1,-1,-1,1,1,1,1,-1),(-1,1,-1,-1,1,-1,1,1),(-1,1,1,1,1,-1,-1,-1),(1,1,-1,1,-1,-1,1,-1)},{(-1,-1,-1,1,1,1,1,-1),(-1,1,-1,-1,1,-1,1,1),(1,-1,-1,-1,-1,1,1,1),(1,1,-1,1,-1,-1,1,-1)},{(-1,-1,-1,1,1,1,1,-1),(-1,1,1,1,1,-1,-1,-1),(1,-1,1,1,-1,1,-1,-1),(1,1,-1,1,-1,-1,1,-1)},{(-1,-1,-1,1,1,1,1,-1),(1,-1,-1,-1,-1,1,1,1),(1,-1,1,1,-1,1,-1,-1),(1,1,-1,1,-1,-1,1,-1)},{(-1,-1,1,-1,1,1,-1,1),(-1,1,-1,-1,1,-1,1,1),(-1,1,1,1,1,-1,-1,-1),(1,1,1,-1,-1,-1,-1,1)},{(-1,-1,1,-1,1,1,-1,1),(-1,1,-1,-1,1,-1,1,1),(1,-1,-1,1,-1,1,1,-1),(1,1,1,-1,-1,-1,-1,1)},{(-1,-1,1,-1,1,1,-1,1),(-1,1,1,1,1,-1,-1,-1),(1,-1,1,1,-1,1,-1,-1),(1,1,1,-1,-1,-1,-1,1)},{(-1,-1,1,-1,1,1,-1,1),(1,-1,-1,1,-1,1,1,-1),(1,-1,1,1,-1,1,-1,-1),(1,1,1,-1,-1,-1,-1,1)},{(-1,-1,1,-1,1,1,-1,1),(1,-1,-1,-1,-1,1,1,1),(1,-1,1,1,-1,1,-1,-1),(1,1,1,-1,-1,-1,-1,1)},{(-1,-1,1,1,1,1,-1,-1),(-1,1,-1,1,1,-1,1,-1),(-1,1,1,-1,1,-1,-1,1),(1,1,1,1,-1,-1,-1,-1)},{(-1,-1,1,1,1,1,-1,-1),(-1,1,-1,1,1,-1,1,-1),(1,-1,-1,1,-1,1,1,-1),(1,1,1,1,-1,-1,-1,-1)},{(-1,-1,1,1,1,1,-1,-1),(-1,1,1,-1,1,-1,-1,1),(1,-1,-1,-1,-1,1,1,1),(1,1,1,1,-1,-1,-1,-1)},{(-1,-1,1,1,1,1,-1,-1),(1,-1,-1,1,-1,1,1,-1),(1,-1,1,-1,-1,1,-1,1),(1,1,1,1,-1,-1,-1,-1)},{(-1,1,-1,-1,1,-1,1,1),(-1,1,1,1,1,-1,-1,-1),(1,1,-1,1,-1,-1,1,-1),(1,1,1,-1,-1,-1,-

1,1)},{(-1,1,-1,-1,1,-1,1,1),(1,-1,-1,-1,-1,1,1,1),(1,1,-1,1,-1,-1,1,-1),(1,1,1,-1,-1,-1,-1,1)},{(-1,1,-1,1,1,-1,1,-1),(-1,1,1,-1,1,-1,-1,1),(1,1,-1,-1,-1,-1,1,1),(1,1,1,1,-1,-1,-1,-1)},{(-1,1,-1,1,1,-1,1,-1),(1,-1,-1,1,-1,1,1,-1),(1,1,-1,-1,-1,-1,1,1),(1,1,1,1,-1,-1,-1,-1)},{(-1,1,1,-1,1,-1,-1,1),(1,-1,1,-1,-1,1,-1,1),(1,1,-1,-1,-1,-1,1,1),(1,1,1,1,-1,-1,-1,-1)},{(-1,1,1,1,1,-1,-1,-1),(1,-1,1,1,-1,1,-1,-1),(1,1,-1,1,-1,-1,1,-1),(1,1,1,-1,-1,-1,-1,1)},{(1,-1,-1,-1,-1,1,1,1),(1,-1,1,1,-1,1,-1,-1),(1,1,-1,1,-1,-1,1,-1),(1,1,1,-1,-1,-1,-1,1)},{(1,-1,-1,1,-1,1,1,-1),(1,-1,1,-1,-1,1,-1,1),(1,1,-1,-1,-1,1,1),(1,1,1,1,-1,-1,-1,-1)}; oder

Codeliste 3: {(-1,-1,-1,1,1,-1,1,1),(-1,-1,1,-1,-1,1,1,1),(-1,1,-1,-1,1,1,1,-1),(-1,1,1,1,-1,-1,1,-1),(-1,-1,1,1,1,1,-1,-1),(-1,1,1,-1,1,-1,-1,1)}, {(-1,-1,-1,1,1,-1,1,1),(-1,-1,1,-1,-1,1,1,1),(-1,1,-1,-1,1,1,1,-1),(-1,1,1,1,-1,-1,1,-1),(-1,-1,1,1,1,1,-1,-1),(1,-1,-1,1,-1,1,1,-1)}, {(-1,-1,-1,1,1,-1,1,1),(-1,-1,1,-1,-1,1,1,1),(-1,1,-1,-1,1,1,1,-1),(-1,1,1,1,-1,-1,1,-1),(-1,1,1,-1,1,-1,-1,1),(1,1,-1,-1,-1,-1,1,1)}, {(-1,-1,-1,1,1,-1,1,1),(-1,-1,1,-1,-1,1,1,1),(-1,1,-1,-1,1,1,1,-1),(-1,1,1,1,-1,-1,1,-1),(1,-1,-1,1,-1,1,1,-1),(1,1,-1,-1,-1,-1,1,1)}, {(-1,-1,-1,1,1,-1,1,1),(-1,-1,1,-1,-1,1,1,1),(-1,1,-1,-1,1,1,1,-1),(1,-1,-1,-1,1,1,-1,1),(-1,-1,1,1,1,1,-1,-1),(-1,1,1,-1,1,-1,-1,1)}, {(-1,-1,-1,1,1,-1,1,1),(-1,-1,1,-1,-1,1,1,1),(-1,1,-1,-1,1,1,1,-1),(1,-1,-1,-1,1,1,-1,1),(-1,-1,1,1,1,1,-1,-1),(1,-1,-1,1,-1,1,1,-1)}, {(-1,-1,-1,1,1,-1,1,1),(-1,-1,1,-1,-1,1,1,1),(-1,1,-1,-1,1,1,1,-1),(1,-1,-1,-1,1,1,-1,1),(-1,1,1,-1,1,-1,-1,1),(1,1,-1,-1,-1,-1,1,1)}, {(-1,-1,-1,1,1,-1,1,1),(-1,-1,1,-1,-1,1,1,1),(-1,1,-1,-1,1,1,1,-1),(1,-1,-1,-1,1,1,-1,1),(1,-1,-1,1,-1,1,1,-1),(1,1,-1,-1,-1,-1,1,1)}, {(-1,-1,-1,1,1,-1,1,1),(-1,-1,1,-1,-1,1,1,1),(-1,1,1,1,1,-1,-1,1,-1),(1,-1,1,1,-1,-1,-1,1),(-1,-1,1,1,1,1,-1,-1),(-1,1,1,-1,1,-1,-1,1)}, {(-1,-1,-1,1,1,-1,1,1),(-1,-1,1,-1,-1,1,1,1),(-1,1,1,1,-1,-1,1,-1),(1,-1,1,1,-1,-1,-1,1),(-1,-1,1,1,1,1,-1,-1),(1,-1,-1,1,-1,1,1,-1)}, {(-1,-1,-1,1,1,-

1,1,1),(-1,-1,1,-1,-1,1,1,1),(-1,1,1,1,-1,-1,1,-1),(1,-1,1,1,-1,-1,-1,1),(-1,1,1,-1,1,-1,-1,1),(1,1,-1,-1,-1,-1,1,1)},      {(-1,-1,-1,1,1,-1,1,1),(-1,-1,1,-1,-1,1,1,1),(-1,1,1,1,-1,-1,1,-1),(1,-1,1,1,-1,-1,-1,1),(1,-1,-1,1,-1,1,1,-1),(1,1,-1,-1,-1,-1,1,1)},    {(-1,-1,-1,1,1,-1,1,1),(-1,-1,1,-1,-1,1,1,1),(1,-1,1,-1,1,1,-1,1),(1,-1,1,1,-1,-1,-1,1),(-1,-1,1,1,1,1,-1,-1),(-1,1,1,-1,1,-1,-1,1)},        {(-1,-1,-1,1,1,-1,1,1),(-1,-1,1,-1,-1,1,1,1),(1,-1,-1,-1,1,1,-1,1),(1,-1,1,1,-1,-1,-1,1),(-1,-1,1,1,1,1,-1,-1),(1,-1,-1,1,-1,1,1,-1)},          {(-1,-1,-1,1,1,-1,1,1),(-1,-1,1,-1,-1,1,1,1),(1,-1,-1,-1,1,1,-1,1),(1,-1,1,1,-1,-1,-1,1),(-1,1,1,-1,1,-1,-1,1),(1,1,-1,-1,-1,-1,1,1)},      {(-1,-1,-1,1,1,-1,1,1),(-1,-1,1,-1,-1,1,1,1),(1,-1,-1,-1,1,1,-1,1),(1,-1,1,1,-1,-1,-1,1),(1,-1,-1,1,-1,1,1,-1),(1,1,-1,-1,-1,-1,1,1)},        {(-1,-1,-1,1,1,-1,1,1),(-1,-1,1,1,-1,1,1,-1),(-1,1,-1,-1,1,1,1,-1),(-1,1,1,-1,-1,-1,1,1),(-1,-1,1,-1,1,1,-1,1),(-1,1,1,1,1,-1,-1,-1)},          {(-1,-1,-1,1,1,-1,1,1),(-1,-1,1,1,-1,1,1,-1),(-1,1,-1,-1,1,1,1,-1),(-1,1,1,-1,-1,-1,1,1),(-1,-1,1,-1,1,1,-1,1),(1,-1,-1,-1,-1,1,1,1)},    {(-1,-1,-1,1,1,-1,1,1),(-1,-1,1,1,-1,1,1,-1),(-1,1,-1,-1,1,1,1,-1),(-1,1,1,-1,-1,-1,1,1),(-1,1,1,1,1,-1,-1,-1),(1,1,-1,1,-1,-1,1,-1)},      {(-1,-1,-1,1,1,-1,1,1),(-1,-1,1,1,-1,1,1,-1),(-1,1,-1,-1,1,1,1,-1),(1,-1,-1,1,1,1,-1,-1),(-1,-1,1,-1,1,1,-1,1),(-1,1,1,1,1,-1,-1,-1)},     {(-1,-1,-1,1,1,-1,1,1),(-1,-1,1,1,-1,1,1,-1),(-1,1,-1,-1,1,1,1,-1),(1,-1,-1,1,1,1,-1,-1),(-1,1,1,1,1,-1,-1,-1),(1,1,-1,1,-1,-1,1,-1)},       {(-1,-1,-1,1,1,-1,1,1),(-1,-1,1,1,-1,1,1,-1),(-1,1,-1,-1,1,1,1,-1),(1,-1,-1,1,1,1,-1,-1),(-1,-1,1,-1,1,1,-1,1),(1,-1,-1,-1,-1,1,1,1)},         {(-1,-1,-1,1,1,-1,1,1),(-1,-1,1,1,-1,1,1,-1),(-1,1,-1,1,1,1,1,-1),(1,-1,-1,1,1,1,-1,-1),(1,-1,-1,-1,-1,1,1,1),(1,1,-1,1,-1,-1,1,-1)},      {(-1,-1,-1,1,1,-1,1,1),(-1,-1,1,1,-1,1,1,-1),(-1,1,-1,1,1,1,1,-1),(1,-1,-1,-1,-1,1,1,1),(-1,-1,1,-1,1,1,-1,1),(-1,1,1,1,1,-1,-1,-1)},       {(-1,-1,-1,1,1,-1,1,1),(-1,-1,1,1,-1,1,1,-1),(-1,1,1,-1,-1,-1,1,1),(1,-1,1,1,-1,-1,-1,1),(-1,-1,1,-1,1,1,-1,1),(-1,1,1,1,1,-1,-1,-1)},     {(-1,-1,-1,1,1,-1,1,1),(-1,-1,1,1,-1,1,1,-1),(-1,1,-1,1,1,1,1,-1),(1,-1,-1,1,1,1,-1,-1),(1,-1,-1,-1,-1,1,1,1),(1,1,-1,1,-1,-1,1,-1)},     {(-1,-1,-1,1,1,-1,1,1),(-1,-1,1,1,-1,1,1,-1),(-1,1,1,-1,-1,-1,1,1),(1,-1,1,1,-1,-1,-1,1),(-1,-1,1,-1,1,1,-1,1),(-1,1,1,1,1,-1,-1,-1)},      {(-1,-1,-1,1,1,-1,1,1),(-1,-1,1,1,-1,1,1,-1),(-1,1,-1,1,1,1,1,-1),(1,-1,-1,1,1,1,-1,-1),(1,-1,-1,-1,-1,1,1,1),(1,1,-1,1,-1,-1,1,-1)},    {(-1,-1,-1,1,1,-1,1,1),(-1,-1,1,1,-1,1,1,-1),(-1,1,1,-1,-1,-1,1,1),(1,-1,1,1,-1,-1,-1,1),(-1,-1,1,-1,1,1,-1,1),(-1,1,1,1,1,-1,-1,-1)},     {(-1,-1,-1,1,1,-1,1,1),(-

1,-1,1,1,-1,1,1,-1),(-1,1,1,-1,-1,-1,1,1),(1,-1,1,1,-1,-1,-1,1),(-1,-1,1,-1,1,1,-1,1),(1,-1,-1,-1,-1,1,1,1)},    {(-1,-1,-1,1,1,-1,1,1),(-1,-1,1,1,-1,1,1,-1),(-1,1,1,-1,-1,-1,1,1),(1,-1,1,1,-1,-1,-1,1),(-1,1,1,1,1,-1,-1,-1),(1,1,-1,1,-1,-1,1,-1)},    {(-1,-1,-1,1,1,-1,1,1),(-1,-1,1,1,-1,1,1,-1),(-1,1,1,-1,-1,-1,1,1),(1,-1,1,1,-1,-1,-1,1),(1,-1,-1,-1,-1,1,1,1),(1,1,-1,1,-1,-1,1,-1)},    {(-1,-1,-1,1,1,-1,1,1),(-1,-1,1,1,-1,1,1,-1),(1,-1,-1,1,1,1,-1,-1),(1,-1,1,1,-1,-1,-1,1),(-1,-1,1,-1,1,1,-1,1),(-1,1,1,1,1,-1,-1,-1)},    {(-1,-1,-1,1,1,-1,1,1),(-1,-1,1,1,-1,1,1,-1),(1,-1,-1,1,1,1,-1,-1),(1,-1,1,1,-1,-1,-1,1),(-1,-1,1,-1,1,1,-1,1),(1,-1,-1,-1,-1,1,1,1)},    {(-1,-1,-1,1,1,-1,1,1),(-1,-1,1,1,-1,1,1,-1),(1,-1,-1,1,1,1,-1,-1),(1,-1,1,1,-1,-1,-1,1),(-1,1,1,1,1,-1,-1,-1),(1,1,-1,1,-1,-1,1,-1)},    {(-1,-1,-1,1,1,-1,1,1),(-1,-1,1,1,-1,1,1,-1),(1,-1,-1,1,1,1,-1,-1),(1,-1,1,1,-1,-1,-1,1),(1,-1,-1,-1,-1,1,1,1),(1,1,-1,1,-1,-1,1,-1)},    {(-1,-1,-1,1,1,-1,1,1),(-1,1,-1,-1,1,1,1,-1),(-1,1,1,-1,-1,-1,1,1),(1,1,-1,-1,1,-1,-1,1),(-1,-1,1,-1,1,1,-1,1),(1,-1,-1,-1,-1,1,1,1)},    {(-1,-1,-1,1,1,-1,1,1),(-1,1,-1,-1,1,1,1,-1),(-1,1,1,-1,-1,-1,1,1),(1,1,-1,-1,1,-1,-1,1),(-1,1,1,1,1,-1,-1,-1),(1,1,-1,1,-1,-1,1,-1)},    {(-1,-1,-1,1,1,-1,1,1),(-1,1,-1,-1,1,1,1,-1),(-1,1,1,-1,-1,-1,1,1),(1,1,-1,-1,1,-1,-1,1),(1,-1,-1,-1,1,1,1),(1,1,-1,1,-1,-1,1,-1)},    {(-1,-1,-1,1,1,-1,1,1),(-1,1,-1,-1,1,1,1,-1),(-1,1,1,1,-1,-1,1,-1),(1,1,-1,1,1,-1,-1,-1),(-1,-1,1,1,1,1,-1,-1),(-1,1,1,-1,1,-1,-1,1)},    {(-1,-1,-1,1,1,-1,1,1),(-1,1,-1,-1,1,1,1,-1),(-1,1,1,1,-1,-1,1,-1),(1,1,-1,1,1,-1,-1,-1),(-1,-1,1,1,1,1,-1,-1),(1,-1,1,1,-1,1,1,-1)},    {(-1,-1,-1,1,1,-1,1,1),(-1,1,-1,-1,1,1,1,-1),(-1,1,1,1,-1,-1,1,-1),(1,1,-1,1,1,-1,-1,-1),(-1,-1,1,1,1,1,-1,-1),(1,-1,-1,1,-1,1,1,-1)},    {(-1,-1,-1,1,1,-1,1,1),(-1,1,-1,-1,1,1,1,-1),(-1,1,1,1,-1,-1,1,-1),(1,1,-1,1,1,-1,-1,-1),(1,-1,-1,1,-1,1,1,-1),(1,1,-1,-1,-1,-1,1,1)},        {(-1,-1,-

1,1,1,-1,1,1),(-1,1,-1,-1,1,1,1,-1),(1,-1,-1,-1,1,1,-1,1),(1,1,-1,1,1,-1,-1,-1),(-1,-1,1,1,1,1,-1,-1),(-1,1,1,-1,1,-1,-1,1)}, {(-1,-1,-1,1,1,-1,1,1),(-1,1,-1,-1,1,1,1,-1),(1,-1,-1,-1,1,1,-1,1),(1,1,-1,1,1,-1,-1,-1),(-1,-1,1,1,1,1,-1,-1),(1,-1,-1,1,-1,1,1,-1)}, {(-1,-1,-1,1,1,-1,1,1),(-1,1,-1,-1,1,1,1,-1),(1,-1,-1,-1,1,1,-1,1),(1,1,-1,1,1,-1,-1,-1),(-1,1,1,-1,1,-1,-1,1),(1,1,-1,-1,-1,-1,1,1)}, {(-1,-1,-1,1,1,-1,1,1),(-1,1,-1,-1,1,1,1,-1),(1,-1,-1,-1,1,1,-1,1),(1,1,-1,1,1,-1,-1,-1),(1,-1,-1,1,-1,1,1,-1),(1,1,-1,-1,-1,-1,1,1)}, {(-1,-1,-1,1,1,-1,1,1),(-1,1,-1,-1,1,1,1,-1),(1,-1,-1,1,1,1,-1,-1),(1,1,-1,-1,1,-1,-1,1),(-1,-1,1,-1,1,1,-1,1),(-1,1,1,1,1,-1,-1,-1)}, {(-1,-1,-1,1,1,-1,1,1),(-1,1,-1,-1,1,1,1,-1),(1,-1,-1,1,1,1,-1,-1),(1,1,-1,-1,1,-1,-1,1),(-1,-1,1,-1,1,1,-1,1),(1,-1,-1,-1,-1,1,1,1)}, {(-1,-1,-1,1,1,-1,1,1),(-1,1,-1,-1,1,1,1,-1),(1,-1,-1,1,1,1,-1,-1),(1,1,-1,-1,1,-1,-1,1),(-1,1,1,1,1,-1,-1,-1),(1,-1,-1,-1,-1,1,1,1)}, {(-1,-1,-1,1,1,-1,1,1),(-1,1,-1,-1,1,1,1,-1),(1,-1,-1,1,1,1,-1,-1),(1,1,-1,-1,1,-1,-1,1),(1,-1,-1,-1,-1,1,1,1),(1,1,-1,1,-1,-1,-1,1)}, {(-1,-1,-1,1,1,-1,1,1),(-1,1,1,-1,-1,-1,1,1),(1,-1,-1,1,1,1,-1,-1),(1,1,-1,-1,1,-1,-1,1),(-1,-1,1,-1,1,1,-1,1),(-1,1,1,1,1,-1,-1,-1)}, {(-1,-1,-1,1,1,-1,1,1),(-1,1,1,-1,-1,-1,1,1),(1,-1,1,1,-1,-1,-1,1),(1,1,-1,-1,1,-1,-1,1),(-1,-1,1,-1,1,1,-1,1),(1,-1,-1,-1,-1,1,1,1)}, {(-1,-1,-1,1,1,-1,1,1),(-1,1,1,-1,-1,-1,1,1),(1,-1,1,1,-1,-1,-1,1),(1,1,-1,-1,1,-1,-1,1),(-1,-1,1,1,1,1,-1,-1),(1,1,-1,1,-1,-1,-1,1)}, {(-1,-1,-1,1,1,-1,1,1),(-1,1,1,1,-1,-1,1,-1),(1,-1,1,1,-1,-1,-1,1),(1,1,-1,1,1,-1,-1,-1),(-1,-1,1,1,1,1,-1,-1),(-1,1,1,-1,1,-1,-1,1)}, {(-1,-1,-1,1,1,-1,1,1),(-1,1,1,1,-1,-1,1,-1),(1,-1,1,1,-1,-1,-1,1),(1,1,-1,1,1,-1,-1,-1),(-1,-1,1,1,1,1,-1,-1),(1,-1,-1,1,-1,1,1,-1)}, {(-1,-1,-1,1,1,-1,1,1),(-1,1,1,1,-1,-1,1,-1),(1,-1,1,1,-1,-1,-1,1),(1,1,-1,1,1,-1,-1,-1),(-1,1,1,-1,1,-1,-1,1),(1,1,-1,-1,-1,-1,1,1)},

```
{(-1,-1,-1,1,1,-1,1,1),(-1,1,1,1,-1,-1,1,-1),(1,-1,1,1,-1,-1,-
1,1),(1,1,-1,1,1,-1,-1,-1),(1,-1,-1,1,-1,1,1,-1),(1,1,-1,-1,-
1,-1,1,1)},    {(-1,-1,-1,1,1,-1,1,1),(1,-1,-1,-1,1,1,-1,1),(1,-
1,1,1,-1,-1,-1,1),(1,1,-1,1,1,-1,-1,-1),(-1,-1,1,1,1,1,-1,-
1),(-1,1,1,-1,1,-1,-1,1)},     {(-1,-1,-1,1,1,-1,1,1),(1,-1,-1,-
1,1,1,-1,1),(1,-1,1,1,-1,-1,-1,1),(1,1,-1,1,1,-1,-1,-1),(-1,-
1,1,1,1,1,-1,-1),(1,-1,-1,1,-1,1,1,-1)},          {(-1,-1,-1,1,1,-
1,1,1),(1,-1,-1,-1,1,1,-1,1),(1,-1,1,1,-1,-1,-1,1),(1,1,-
1,1,1,-1,-1,-1),(-1,1,1,-1,1,-1,-1,1),(1,1,-1,-1,-1,-1,1,1)},
{(-1,-1,-1,1,1,-1,1,1),(1,-1,-1,-1,1,1,-1,1),(1,-1,1,1,-1,-1,-
1,1),(1,1,-1,1,1,-1,-1,-1),(1,-1,-1,1,-1,1,1,-1),(1,1,-1,-1,-
1,-1,1,1)},     {(-1,-1,-1,1,1,-1,1,1),(1,-1,-1,1,1,1,-1,-1),(1,-
1,1,1,-1,-1,-1,1),(1,1,-1,-1,1,-1,-1,1),(-1,-1,1,-1,1,1,-
1,1),(-1,1,1,1,1,-1,-1,-1)},        {(-1,-1,-1,1,1,-1,1,1),(1,-1,-
1,1,1,1,-1,-1),(1,-1,1,1,-1,-1,-1,1),(1,1,-1,-1,1,-1,-1,1),(-
1,-1,1,-1,1,1,-1,1),(1,-1,-1,-1,-1,1,1,1)},     {(-1,-1,-1,1,1,-
1,1,1),(1,-1,-1,1,1,1,-1,-1),(1,-1,1,1,-1,-1,-1,1),(1,1,-1,-
1,1,-1,-1,1),(-1,1,1,1,1,-1,-1,-1),(1,1,-1,1,-1,-1,1,-1)},   {(-
1,-1,-1,1,1,-1,1,1),(1,-1,-1,1,1,1,-1,-1),(1,-1,1,1,-1,-1,-
1,1),(1,1,-1,-1,1,-1,-1,1),(1,-1,-1,-1,-1,1,1,1),(1,1,-1,1,-
1,-1,1,-1)},     {(-1,-1,1,-1,-1,1,1,1),(-1,-1,1,1,1,-1,-1,1),(-
1,1,1,-1,1,1,-1,-1),(-1,1,1,1,-1,-1,1,-1),(-1,-1,-1,1,1,1,1,-
1),(-1,1,-1,-1,1,-1,1,1)},           {(-1,-1,1,-1,-1,1,1,1),(-1,-
1,1,1,1,-1,-1,1),(-1,1,1,-1,1,1,-1,-1),(-1,1,1,1,-1,-1,1,-
1),(-1,-1,-1,1,1,1,1,-1),(1,-1,1,1,-1,1,-1,-1)},     {(-1,-1,1,-
1,-1,1,1,1),(-1,-1,1,1,1,-1,-1,1),(-1,1,1,-1,1,1,-1,-1),(-
1,1,1,1,-1,-1,1,-1),(-1,1,-1,-1,1,-1,1,1),(1,1,1,-1,-1,-1,-
1,1)},     {(-1,-1,1,-1,-1,1,1,1),(-1,-1,1,1,1,-1,-1,1),(-1,1,1,-
1,1,1,-1,-1),(-1,1,1,1,-1,-1,1,-1),(1,-1,1,1,-1,1,-1,-
1),(1,1,1,-1,-1,-1,-1,1)},          {(-1,-1,1,-1,-1,1,1,1),(-1,-
1,1,1,1,-1,-1,1),(-1,1,1,-1,1,1,-1,-1),(1,-1,-1,-1,1,1,-
1,1),(-1,-1,-1,1,1,1,1,-1),(-1,1,-1,-1,1,-1,1,1)},     {(-1,-1,1,-
1,-1,1,1,1),(-1,-1,1,1,1,-1,-1,1),(-1,1,1,-1,1,1,-1,-1),(1,-
1,-1,-1,1,1,-1,1),(-1,-1,-1,1,1,1,1,-1),(1,-1,1,1,-1,1,-1,-
```

1)}, {(-1,-1,1,-1,-1,1,1,1),(-1,-1,1,1,1,-1,-1,1),(-1,1,1,-1,1,1,-1,-1),(1,-1,-1,-1,1,1,-1,1),(-1,1,-1,-1,1,-1,1,1),(1,1,1,-1,-1,-1,-1,1)}, {(-1,-1,1,-1,-1,1,1,1),(-1,-1,1,1,1,-1,-1,1),(-1,1,1,-1,1,1,-1,-1),(1,-1,-1,-1,1,1,-1,1),(1,-1,1,1,-1,1,-1,-1),(1,1,1,-1,-1,-1,-1,1)}, {(-1,-1,1,-1,-1,1,1,1),(-1,-1,1,1,1,-1,-1,1),(-1,1,1,1,-1,-1,1,-1),(1,-1,-1,1,-1,-1,1,1),(-1,-1,-1,1,1,1,1,-1),(-1,1,-1,-1,1,-1,1,1)}, {(-1,-1,1,-1,-1,1,1,1),(-1,-1,1,1,1,-1,-1,1),(-1,1,1,1,-1,-1,1,-1),(1,-1,-1,1,-1,-1,1,1),(-1,-1,-1,1,1,1,1,-1),(1,-1,1,1,-1,1,-1,-1)}, {(-1,-1,1,-1,-1,1,1,1),(-1,-1,1,1,1,-1,-1,1),(-1,1,1,1,-1,-1,1,-1),(1,-1,-1,1,-1,-1,1,1),(-1,1,-1,-1,1,-1,1,1),(1,1,1,-1,-1,-1,-1,1)}, {(-1,-1,1,-1,-1,1,1,1),(-1,-1,1,1,1,-1,-1,1),(-1,1,1,1,-1,-1,1,-1),(1,-1,-1,1,-1,-1,1,1),(1,-1,1,1,-1,1,-1,-1),(1,1,1,-1,-1,-1,-1,1)}, {(-1,-1,1,-1,-1,1,1,1),(-1,-1,1,1,1,-1,-1,1),(1,-1,-1,-1,1,1,-1,1),(1,-1,-1,1,-1,-1,1,1),(-1,-1,-1,1,1,1,1,-1),(-1,1,-1,-1,1,-1,1,1)}, {(-1,-1,1,-1,-1,1,1,1),(-1,-1,1,1,1,-1,-1,1),(1,-1,-1,-1,1,1,-1,1),(1,-1,-1,1,-1,-1,1,1),(-1,-1,-1,1,1,1,1,-1),(1,-1,1,1,-1,1,-1,-1)}, {(-1,-1,1,-1,-1,1,1,1),(-1,-1,1,1,1,-1,-1,1),(1,-1,-1,-1,1,1,-1,1),(1,-1,-1,1,-1,-1,1,1),(-1,-1,1,1,1,1,-1,1),(1,-1,1,1,-1,1,-1,-1)}, {(-1,-1,1,-1,-1,1,1,1),(-1,-1,1,1,1,-1,-1,1),(1,-1,-1,-1,1,1,-1,1),(1,-1,-1,1,-1,-1,1,1),(1,-1,1,1,-1,1,-1,-1),(1,1,1,-1,-1,-1,-1,1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(-1,-1,1,1,1,1,-1,-1),(-1,1,1,-1,1,-1,-1,1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(-1,-1,1,1,1,1,-1,-1),(1,-1,-1,1,-1,1,1,-1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(-1,1,1,-1,1,-1,-1,1),(1,1,-1,-1,-1,-1,1,1)}, {(-1,-1,1,-1,-1,1,1,1),(-1,1,-1,-1,1,1,1,-1),(1,-1,-1,-1,1,1,-1,1),(1,1,1,-1,-1,1,-1,-1),(-1,-

1,1,1,1,1,-1,-1),(-1,1,1,-1,1,-1,-1,1)}, {(-1,-1,1,-1,-1,1,1,1),(-1,1,-1,-1,1,1,1,-1),(1,-1,-1,-1,1,1,-1,1),(1,1,1,-1,-1,1,-1,-1),(-1,-1,1,1,1,1,-1,-1),(1,-1,-1,1,-1,1,1,-1)}, {(-1,-1,1,-1,-1,1,1,1),(-1,1,-1,-1,1,1,1,-1),(1,-1,-1,-1,1,1,-1,1),(1,1,1,-1,-1,1,-1,-1),(-1,1,1,-1,1,-1,-1,1),(1,1,-1,-1,-1,-1,1,1)}, {(-1,-1,1,-1,-1,1,1,1),(-1,1,-1,-1,1,1,1,-1),(1,-1,-1,-1,1,1,-1,1),(1,1,1,-1,-1,1,-1,-1),(1,-1,-1,1,-1,1,1,-1),(1,1,-1,-1,-1,-1,1,1)}, {(-1,-1,1,-1,-1,1,1,1),(-1,1,1,-1,1,1,-1,-1),(-1,1,1,1,-1,-1,1,-1),(1,1,-1,-1,-1,1,1,-1),(-1,-1,-1,1,1,1,1,-1),(-1,1,-1,-1,1,-1,1,1)}, {(-1,-1,1,-1,-1,1,1,1),(-1,1,1,-1,1,1,-1,-1),(-1,1,1,1,-1,-1,1,-1),(1,1,-1,-1,-1,1,1,-1),(-1,-1,-1,1,1,1,1,-1),(1,-1,1,1,-1,1,-1,-1)}, {(-1,-1,1,-1,-1,1,1,1),(-1,1,1,-1,1,1,-1,-1),(-1,1,1,1,-1,-1,1,-1),(1,1,-1,-1,-1,1,1,-1),(-1,1,-1,-1,1,-1,1,1),(1,1,1,-1,-1,-1,-1,1)}, {(-1,-1,1,-1,-1,1,1,1),(-1,1,1,-1,1,1,-1,-1),(-1,1,1,1,-1,-1,1,-1),(1,1,-1,-1,-1,1,1,-1),(1,-1,1,1,-1,1,-1,-1),(1,1,1,-1,-1,-1,-1,1)}, {(-1,-1,1,-1,-1,1,1,1),(-1,1,1,-1,1,1,-1,-1),(1,-1,-1,-1,1,1,-1,1),(1,1,-1,-1,-1,1,1,-1),(-1,-1,-1,1,1,1,1,-1),(1,-1,1,1,-1,1,-1,-1)}, {(-1,-1,1,-1,-1,1,1,1),(-1,1,1,-1,1,1,-1,-1),(1,-1,-1,-1,1,1,-1,1),(1,1,-1,-1,-1,1,1,-1),(-1,-1,-1,1,1,1,1,-1),(1,-1,1,1,-1,1,-1,-1)}, {(-1,-1,1,-1,-1,1,1,1),(-1,1,1,-1,1,1,-1,-1),(1,-1,-1,-1,1,1,-1,1),(1,1,-1,-1,-1,1,1,-1),(-1,1,-1,-1,1,-1,1,1),(1,1,1,-1,-1,-1,-1,1)}, {(-1,-1,1,-1,-1,1,1,1),(-1,1,1,1,-1,-1,1,-1),(1,-1,-1,1,-1,-1,1,1),(1,1,-1,-1,-1,1,1,-1),(-1,-1,-1,1,1,1,1,-1),(1,-1,1,1,-1,1,-1,-1)}, {(-1,-1,1,-1,-1,1,1,1),(-1,1,1,1,-1,-1,1,-1),(1,-1,-1,1,-1,-1,1,1),(1,1,-1,-1,-1,1,1,-1),(-1,-1,-1,1,1,1,1,-1),(1,-1,1,1,-1,1,-1,-1)}, {(-1,-1,1,-1,-1,1,1,1),(-1,1,1,1,-1,-1,1,-1),(1,-1,-1,1,-1,-1,1,1),(1,1,-1,-1,-1,1,1,-1),(-1,1,-1,-1,1,-1,1,1),(1,1,1,-1,-1,-1,-1,1)}, {(-1,-1,1,-1,-1,1,1,1),(-1,1,1,1,-1,-1,1,-1),(1,-1,-1,1,-1,-1,1,1),(1,1,-1,-1,-1,1,1,-1),(1,-1,1,1,-1,1,-1,-

1),(1,1,1,-1,-1,-1,-1,1)},    {(-1,-1,1,-1,-1,1,1,1),(-1,1,1,1,-1,-1,1,-1),(1,-1,1,1,-1,-1,-1,1),(1,1,1,-1,-1,1,-1,-1),(-1,-1,1,1,1,1,-1,-1),(-1,1,1,-1,1,-1,-1,1)},         {(-1,-1,1,-1,-1,1,1,1),(-1,1,1,1,-1,-1,1,-1),(1,-1,1,1,-1,-1,-1,1),(1,1,1,-1,-1,1,-1,-1),(-1,-1,1,1,1,1,-1,-1),(1,-1,-1,1,-1,1,1,-1)},

{(-1,-1,1,-1,-1,1,1,1),(-1,1,1,1,-1,-1,1,-1),(1,-1,1,1,-1,-1,-1,1),(1,1,1,-1,-1,1,-1,-1),(-1,1,1,-1,1,-1,-1,1),(1,1,-1,-1,-1,-1,1,1)},    {(-1,-1,1,-1,-1,1,1,1),(-1,1,1,1,-1,-1,1,-1),(1,-1,1,1,-1,-1,-1,1),(1,1,1,-1,-1,1,-1,-1),(1,-1,-1,1,-1,1,1,-1),(1,1,-1,-1,-1,-1,1,1)},    {(-1,-1,1,-1,-1,1,1,1),(1,-1,-1,1,1,1,-1,1),(1,-1,-1,1,-1,-1,1,1),(1,1,-1,-1,-1,1,1,-1),(-1,-1,1,1,1,1,1,-1),(-1,1,-1,-1,1,-1,1,1)},         {(-1,-1,1,-1,-1,1,1,1),(1,-1,-1,-1,1,1,-1,1),(1,-1,-1,1,-1,-1,1,1),(1,1,-1,-1,1,1,-1),(-1,-1,-1,1,1,1,1,-1),(1,-1,1,1,-1,1,-1,-1)},    {(-1,-1,1,-1,-1,1,1,1),(1,-1,-1,-1,1,1,-1,1),(1,-1,-1,1,-1,-1,1,1),(1,1,-1,-1,-1,1,1,-1),(-1,1,-1,-1,1,-1,1,1),(1,1,1,-1,-1,-1,-1,1)},    {(-1,-1,1,-1,-1,1,1,1),(1,-1,-1,-1,1,1,-1,1),(1,-1,-1,1,-1,-1,1,1),(1,1,-1,-1,-1,1,1,-1),(1,-1,1,1,-1,1,-1,-1),(1,1,1,-1,-1,-1,-1,1)},     {(-1,-1,1,-1,-1,1,1,1),(1,-1,-1,-1,1,1,-1,1),(1,-1,1,1,-1,-1,-1,1),(1,1,1,-1,-1,1,-1,-1),(-1,-1,1,1,1,1,-1,-1),(-1,1,1,-1,1,-1,-1,1)},          {(-1,-1,1,-1,-1,1,1,1),(1,-1,-1,-1,1,1,-1,1),(1,-1,1,1,-1,-1,-1,1),(1,1,1,-1,-1,1,-1,-1),(-1,-1,1,1,1,1,-1,-1),(1,-1,-1,1,-1,1,1,-1)},

{(-1,-1,1,-1,-1,1,1,1),(1,-1,-1,-1,1,1,-1,1),(1,-1,1,1,-1,-1,-1,1),(1,1,1,-1,-1,1,-1,-1),(-1,1,1,-1,1,-1,-1,1),(1,1,-1,-1,-1,-1,1,1)},    {(-1,-1,1,1,-1,1,1,-1),(-1,-1,1,1,1,-1,-1,1),(-1,1,1,-1,-1,-1,1,1),(-1,1,1,-1,1,1,-1,-1),(-1,-1,-1,-1,1,1,1,1),(-1,1,-1,1,1,-1,1,-1)},   {(-1,-1,1,1,-1,1,1,-1),(-1,-1,1,1,1,-1,-1,1),(-1,1,1,-1,-1,-1,1,1),(-1,1,1,-1,1,1,-1,-1),(-1,-1,-1,-1,1,1,1,1),(1,-1,1,-1,-1,1,-1,1)},    {(-1,-1,1,1,-1,1,1,-1),(-1,-1,1,1,1,-1,-1,1),(-1,1,1,-1,-1,-1,1,1),(-1,1,1,-1,1,1,-1,-1),(-1,1,-1,1,1,-1,1,-

1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(-1,1,1,-1,1,1,-1,-1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(-1,-1,-1,-1,1,1,1,1),(-1,1,-1,1,1,-1,1,-1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(-1,-1,-1,-1,1,1,1,1),(1,-1,1,-1,-1,1,-1,1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(-1,1,-1,1,1,-1,1,-1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(-1,1,1,-1,1,1,-1,-1),(1,-1,-1,1,1,1,-1,-1),(-1,-1,-1,-1,1,1,1,1),(-1,1,-1,1,1,-1,1,-1)}, {(-1,-1,1,1,-1,1,1,-1),(-1,-1,1,1,1,-1,-1,1),(-1,1,1,-1,1,1,-1,-1),(1,-1,-1,1,1,1,-1,-1),(-1,-1,-1,-1,1,1,1,1),(1,-1,1,-1,-1,1,-1,1)}, {(-1,-1,1,1,-1,1,1,-1),(-1,-1,1,1,1,-1,-1,1),(-1,1,1,-1,1,1,-1,-1),(1,-1,-1,1,1,1,-1,-1),(-1,1,-1,1,1,-1,1,-1),(1,1,1,1,-1,-1,-1,-1)}, {(-1,-1,1,1,-1,1,1,-1),(-1,-1,1,1,1,-1,-1,1),(-1,1,1,-1,1,1,-1,-1),(1,-1,-1,1,1,1,-1,-1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(1,-1,-1,1,-1,-1,1,1),(1,-1,-1,1,1,1,-1,-1),(-1,-1,-1,-1,1,1,1,1),(-1,1,-1,1,1,-1,1,-1)}, {(-1,-1,1,1,-1,1,1,-1),(-1,-1,1,1,1,-1,-1,1),(1,-1,-1,1,-1,-1,1,1),(1,-1,-1,1,1,1,-1,-1),(-1,-1,-1,-1,1,1,1,1),(1,-1,1,-1,-1,1,-1,1)}, {(-1,-1,1,1,-1,1,1,-1),(-1,-1,1,1,1,-1,-1,1),(1,-1,-1,1,-1,-1,1,1),(1,-1,-1,1,1,1,-1,-1),(-1,1,-1,1,1,-1,1,-1),(1,1,1,1,-1,-1,-1,-1)}, {(-1,-1,1,1,-1,1,1,-1),(-1,-1,1,1,1,-1,-1,1),(1,-1,-1,1,-1,-1,1,1),(1,-1,-1,1,1,1,-1,-1),(1,-1,1,-1,-1,1,-1,1),(1,1,1,1,-1,-1,-1,-1)}, {(-1,-1,1,1,-1,1,1,-1),(-1,1,-1,-1,1,1,1,-1),(-1,1,1,-1,-1,-1,1,1),(1,1,1,-1,-1,1,-1,-1),(-1,-1,1,-1,1,1,-1,1),(-1,1,1,1,1,-1,-1,-1)}, {(-1,-1,1,1,-1,1,1,-1),(-1,1,-1,-1,1,1,1,-1),(-1,1,1,-1,-1,-1,1,1),(1,1,1,-1,-1,1,-1,-1),(-1,-

1,1,-1,1,1,-1,1),(1,-1,-1,-1,-1,1,1,1)}, {(-1,-1,1,1,-1,1,1,-1),(-1,1,-1,-1,1,1,1,-1),(-1,1,1,-1,-1,-1,1,1),(1,1,1,-1,-1,1,-1,-1),(-1,1,1,1,1,-1,-1,-1),(1,1,-1,1,-1,-1,1,-1)}, {(-1,-1,1,1,-1,1,1,-1),(-1,1,-1,-1,1,1,1,-1),(-1,1,1,-1,-1,-1,1,1),(1,1,1,-1,-1,1,-1,-1),(1,-1,-1,-1,-1,1,1,1),(1,1,-1,1,-1,-1,1,-1)}, {(-1,-1,1,1,-1,1,1,-1),(-1,1,-1,-1,1,1,1,-1),(1,-1,-1,1,1,1,-1,-1),(1,1,1,-1,-1,1,-1,-1),(-1,-1,1,-1,1,1,-1,1),(-1,1,1,1,1,-1,-1,-1)}, {(-1,-1,1,1,-1,1,1,-1),(-1,1,-1,-1,1,1,1,-1),(1,-1,-1,1,1,1,-1,-1),(1,1,1,-1,-1,1,-1,-1),(-1,1,1,-1,1,1,-1,1),(1,-1,-1,-1,-1,1,1,1)}, {(-1,-1,1,1,-1,1,1,-1),(-1,1,-1,-1,1,1,1,-1),(1,-1,-1,1,1,1,-1,-1),(1,1,1,-1,-1,1,-1,-1),(-1,1,1,1,1,-1,-1,-1),(1,1,-1,1,-1,-1,1,-1)}, {(-1,-1,1,1,-1,1,1,-1),(-1,1,-1,-1,1,1,1,-1),(1,-1,-1,1,1,1,-1,-1),(1,1,1,-1,-1,1,-1,-1),(1,-1,-1,-1,-1,1,1,1),(1,1,-1,1,-1,-1,1,-1)}, {(-1,-1,1,1,-1,1,1,-1),(-1,1,1,-1,-1,-1,1,1),(-1,1,1,-1,1,1,-1,-1),(1,1,-1,-1,-1,1,1,-1),(-1,-1,-1,-1,1,1,1,1),(-1,1,-1,1,1,-1,1,-1)}, {(-1,-1,1,1,-1,1,1,-1),(-1,1,1,-1,-1,-1,1,1),(-1,1,1,-1,1,1,-1,-1),(1,1,-1,-1,-1,1,1,-1),(-1,-1,-1,-1,1,1,1,1),(1,-1,1,-1,-1,1,-1,1)}, {(-1,-1,1,1,-1,1,1,-1),(-1,1,1,-1,-1,-1,1,1),(-1,1,1,-1,1,1,-1,-1),(1,1,-1,-1,-1,1,1,-1),(-1,1,-1,1,1,-1,1,-1),(1,1,1,1,-1,-1,-1,-1)}, {(-1,-1,1,1,-1,1,1,-1),(-1,1,1,-1,-1,-1,1,1),(1,-1,-1,1,-1,-1,1,1),(1,1,-1,-1,-1,1,1,-1),(-1,-1,-1,-1,1,1,1,1),(-1,1,-1,1,1,-1,1,-1)}, {(-1,-1,1,1,-1,1,1,-1),(-1,1,1,-1,-1,-1,1,1),(1,-1,-1,1,-1,-1,1,1),(1,1,-1,-1,-1,1,1,-1),(-1,-1,-1,-1,1,1,1,1),(1,-1,1,-1,-1,1,-1,1)}, {(-1,-1,1,1,-1,1,1,-1),(-1,1,1,-1,-1,-1,1,1),(1,-1,-1,1,-1,-1,1,1),(1,1,-1,-1,-1,1,1,-1),(-1,1,-1,1,1,-1,1,-1),(1,1,1,1,-1,-1,-1,-1)}, {(-1,-1,1,1,-1,1,1,-1),(-1,1,1,-1,-1,-1,1,1),(1,-1,-1,1,-1,-1,1,1),(1,1,1,1,-1,-1,-1,-1)}, {(-1,-1,1,1,-1,1,1,-1),(-1,1,1,-1,-1,-1,1,1),(1,-1,1,1,-1,-1,-1,1),(1,1,1,-1,-1,1,-1,-1),(-1,-1,1,-

1,1,1,-1,1),(-1,1,1,1,1,-1,-1,-1)},    {(-1,-1,1,1,-1,1,1,-1),(-1,1,1,-1,-1,-1,1,1),(1,-1,1,1,-1,-1,-1,1),(1,1,1,-1,-1,1,-1,-1),(-1,-1,1,-1,1,1,-1,1),(1,-1,-1,-1,-1,1,1,1)},    {(-1,-1,1,1,-1,1,1,-1),(-1,1,1,-1,-1,-1,1,1),(1,-1,1,1,-1,-1,-1,1),(1,1,1,-1,-1,1,-1,-1),(-1,1,1,1,1,-1,-1,-1),(1,1,-1,1,-1,-1,1,-1)},

{(-1,-1,1,1,-1,1,1,-1),(-1,1,1,-1,-1,-1,1,1),(1,-1,1,1,-1,-1,-1,1),(1,1,1,-1,-1,1,-1,-1),(1,-1,-1,-1,-1,1,1,1),(1,1,-1,1,-1,1,-1,-1)},    {(-1,-1,1,1,-1,1,1,-1),(-1,1,1,-1,1,1,-1,-1),(1,-1,-1,1,1,1,-1,-1),(1,1,-1,-1,-1,1,1,-1),(-1,-1,-1,-1,1,1,1,1),(-1,1,-1,1,1,-1,1,-1)},    {(-1,-1,1,1,-1,1,1,-1),(-1,1,1,-1,1,1,-1,-1),(1,-1,-1,1,1,1,-1,-1),(1,1,-1,-1,-1,1,1,-1),(-1,-1,-1,-1,1,1,1,1),(1,-1,1,-1,-1,1,-1,1)},    {(-1,-1,1,1,-1,1,1,-1),(-1,1,1,-1,1,1,-1,-1),(1,-1,-1,1,1,1,-1,-1),(1,1,-1,-1,-1,1,1,-1),(-1,1,-1,1,1,-1,1,-1),(1,1,1,1,-1,-1,-1,-1)},

{(-1,-1,1,1,-1,1,1,-1),(-1,1,1,-1,1,1,-1,-1),(1,-1,-1,1,1,1,-1,-1),(1,1,-1,-1,-1,1,1,-1),(1,-1,1,-1,-1,1,-1,1),(1,1,1,1,-1,-1,-1,-1)},          {(-1,-1,1,1,-1,1,1,-1),(1,-1,-1,1,-1,-1,1,1),(1,-1,-1,1,1,1,-1,-1),(1,1,-1,-1,-1,1,1,-1),(-1,-1,-1,-1,1,1,1,1),(-1,1,-1,1,1,-1,1,-1)},    {(-1,-1,1,1,-1,1,1,-1),(1,-1,-1,1,-1,-1,1,1),(1,-1,-1,1,1,1,-1,-1),(1,1,-1,-1,-1,1,1,-1),(-1,-1,-1,-1,1,1,1,1),(1,-1,1,-1,-1,1,-1,1)},    {(-1,-1,1,1,-1,1,1,-1),(1,-1,-1,1,-1,-1,1,1),(1,-1,-1,1,1,1,-1,-1),(1,1,-1,-1,-1,1,1,-1),(-1,1,-1,1,1,-1,1,-1),(1,1,1,1,-1,-1,-1,-1)},

{(-1,-1,1,1,-1,1,1,-1),(1,-1,-1,1,-1,-1,1,1),(1,-1,-1,1,1,1,-1,-1),(1,1,-1,-1,-1,1,1,-1),(1,-1,1,-1,-1,1,-1,1),(1,1,1,1,-1,-1,-1,-1)},          {(-1,-1,1,1,-1,1,1,-1),(1,-1,-1,1,1,1,-1,-1),(1,-1,1,1,-1,-1,-1,1),(1,1,1,-1,-1,1,-1,-1),(-1,-1,1,-1,1,1,-1,1),(-1,1,1,1,1,-1,-1,-1)},          {(-1,-1,1,1,-1,1,1,-1),(1,-1,-1,1,1,1,-1,-1),(1,-1,1,1,-1,-1,-1,1),(1,1,1,-1,-1,1,-1,-1),(-1,-1,1,-1,1,1,-1,1),(1,-1,-1,-1,-1,1,1,1)},      {(-1,-1,1,1,-1,1,1,-1),(1,-1,-1,1,1,1,-1,-1),(1,-1,1,1,-1,-1,-1,1),(1,1,1,-1,-1,1,-1,-1),(-1,-1,1,1,1,-1,-1,-1),(1,1,-1,1,-1,1,-1,-1)},    {(-1,-1,1,1,-1,1,1,-1),(1,-1,-1,1,1,1,-1,-1),(1,-1,1,1,-1,-1,-1,1),(1,1,1,-1,-1,1,-1,-1),(1,-1,-1,-1,-1,1,1,1),(1,1,-1,1,-1,1,-1,-1)},      {(-1,-1,1,1,-1,1,1,-1),(1,-1,-1,1,1,1,-1,-1),(1,-1,1,1,-1,-1,-1,1),(1,1,1,-1,-1,1,-1,-1),(-1,-1,1,1,1,-1,-1,-1),(1,1,-1,1,-1,1,-1,-1)},

1,1,1,1),(1,1,-1,1,-1,-1,1,-1)}, {(-1,-1,1,1,1,-1,-1,1),(-1,1,1,-1,-1,-1,1,1),(-1,1,1,-1,1,1,-1,-1),(1,1,-1,-1,1,-1,-1,1),(-1,-1,-1,-1,1,1,1,1),(-1,1,-1,1,1,-1,1,-1)}, {(-1,-1,1,1,1,-1,-1,1),(-1,1,1,-1,-1,-1,1,1),(-1,1,1,-1,1,1,-1,-1),(1,1,-1,-1,1,-1,-1,1),(-1,-1,-1,-1,1,1,1,1),(1,-1,1,-1,-1,1,-1,1)}, {(-1,-1,1,1,1,-1,-1,1),(-1,1,1,-1,-1,-1,1,1),(-1,1,1,-1,1,1,-1,-1),(1,1,-1,-1,1,-1,-1,1),(-1,1,-1,1,1,-1,1,-1),(1,1,1,1,-1,-1,-1,-1)}, {(-1,-1,1,1,1,-1,-1,1),(-1,1,1,-1,-1,-1,1,1),(-1,1,1,-1,1,1,-1,-1),(1,1,-1,-1,1,-1,-1,1),(1,-1,1,-1,-1,1,-1,1),(1,1,1,1,-1,-1,-1,-1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(-1,-1,-1,-1,1,1,1,1),(-1,1,-1,1,1,-1,1,-1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(-1,-1,-1,-1,1,1,1,1),(1,-1,1,-1,-1,1,-1,1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(-1,1,-1,1,1,-1,1,-1),(1,1,1,1,-1,-1,-1,-1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(1,-1,1,-1,-1,1,-1,1),(1,1,1,1,-1,-1,-1,-1)}, {(-1,-1,1,1,1,-1,-1,1),(-1,1,1,-1,1,1,-1,-1),(-1,1,1,1,-1,-1,1,-1),(1,1,-1,1,1,-1,-1,-1),(-1,-1,-1,1,1,1,1,-1),(-1,1,-1,-1,1,-1,1,1)}, {(-1,-1,1,1,1,-1,-1,1),(-1,1,1,-1,1,1,-1,-1),(-1,1,1,1,-1,-1,1,-1),(1,1,-1,1,1,-1,-1,-1),(-1,-1,-1,1,1,1,1,-1),(1,-1,1,1,-1,1,-1,-1)}, {(-1,-1,1,1,1,-1,-1,1),(-1,1,1,-1,1,1,-1,-1),(-1,1,1,1,-1,-1,1,-1),(1,1,-1,1,1,-1,-1,-1),(-1,-1,-1,1,1,1,1,-1),(1,1,1,-1,-1,-1,-1,1)}, {(-1,-1,1,1,1,-1,-1,1),(-1,1,1,-1,1,1,-1,-1),(-1,1,1,1,-1,-1,1,-1),(1,1,-1,1,1,-1,-1,-1),(1,-1,1,1,-1,1,-1,-1),(1,1,1,-1,-1,-1,-1,1)}, {(-1,-1,1,1,1,-1,-1,1),(-1,1,1,-1,1,1,-1,-1),(1,-1,-1,-1,1,1,-1,1),(1,1,-1,1,1,-1,-1,-1),(-1,-1,-1,1,1,1,1,-1),(-1,1,-1,-1,1,-1,1,1)}, {(-1,-1,1,1,1,-1,-1,1),(-1,1,1,-1,1,1,-1,-1),(1,-1,-1,-1,1,1,-1,1),(1,1,-1,1,1,-1,-1,-1),(-1,-1,-1,1,1,1,1,-1),(1,-1,1,1,-1,1,-1,-1)}, {(-1,-1,1,1,1,-1,-1,1),(-1,1,1,-1,1,1,-1,-1),(1,-1,-1,-1,1,1,-1,1),(1,1,-1,1,1,-1,-1,-1),(1,-1,1,1,-1,1,-1,-1),(1,1,1,-1,-1,-1,-1,1)}, {(-1,-1,1,1,1,-1,-1,1),(-1,1,1,-1,1,1,-1,-1),(1,-1,-1,-1,1,1,-1,1),(1,1,-1,1,1,-1,-1,-1),(-1,-1,-1,1,1,1,1,-1),(-1,1,-1,-1,1,-1,1,1)}, {(-1,-1,1,1,1,-1,-1,1),(-1,1,1,-1,1,1,-1,-1),(1,-1,-1,-1,1,1,-1,1),(1,1,-1,1,1,-1,-1,-1),(-1,-1,1,1,1,-1,

1,-1,-1),(-1,1,-1,-1,1,-1,1,1),(1,1,1,-1,-1,-1,-1,1)},　{(-1,-1,1,1,1,-1,-1,1),(-1,1,1,-1,1,1,-1,-1),(1,-1,-1,-1,1,1,-1,1),(1,1,-1,1,1,-1,-1,-1),(1,-1,1,1,-1,1,-1,-1),(1,1,1,-1,-1,-1,-1,1)},　{(-1,-1,1,1,1,-1,-1,1),(-1,1,1,-1,1,1,-1,-1),(1,-1,-1,1,1,1,-1,-1),(1,1,-1,-1,1,-1,-1,1),(-1,-1,-1,-1,1,1,1,1),(-1,1,-1,1,1,-1,1,-1)},　{(-1,-1,1,1,1,-1,-1,1),(-1,1,1,-1,1,1,-1,-1),(1,-1,-1,1,1,1,-1,-1),(1,1,-1,-1,1,-1,-1,1),(-1,-1,-1,-1,1,1,1,1),(1,-1,1,-1,-1,1,-1,1)},　{(-1,-1,1,1,1,-1,-1,1),(-1,1,1,-1,1,1,-1,-1),(1,-1,-1,1,1,1,-1,-1),(1,1,-1,-1,1,-1,-1,1),(-1,1,-1,1,1,-1,1,-1),(1,1,1,1,-1,-1,-1,-1)},　{(-1,-1,1,1,1,-1,-1,1),(-1,1,1,-1,1,1,-1,-1),(1,-1,-1,1,1,1,-1,-1),(1,1,-1,-1,1,-1,-1,1),(1,-1,1,-1,-1,1,-1,1),(1,1,1,1,-1,-1,-1,-1)},　{(-1,-1,1,1,1,-1,-1,1),(-1,1,1,1,-1,-1,1,-1),(1,-1,-1,1,-1,-1,1,1),(1,1,-1,1,1,-1,-1,-1),(-1,-1,-1,1,1,1,1,-1),(-1,1,-1,-1,1,-1,1,1)},　{(-1,-1,1,1,1,-1,-1,1),(-1,1,1,1,-1,-1,1,-1),(1,-1,-1,1,-1,-1,1,1),(1,1,-1,1,1,-1,-1,-1),(-1,-1,-1,1,1,1,1,-1),(1,-1,1,1,-1,1,-1,-1)},　{(-1,-1,1,1,1,-1,-1,1),(-1,1,1,1,-1,-1,1,-1),(1,-1,-1,1,-1,-1,1,1),(1,1,-1,1,1,-1,-1,-1),(-1,1,-1,-1,1,-1,1,1),(1,1,1,-1,-1,-1,-1,1)},　{(-1,-1,1,1,1,-1,-1,1),(1,-1,-1,-1,1,1,-1,1),(1,-1,-1,1,-1,-1,1,1),(1,1,-1,1,1,-1,-1,-1),(-1,-1,-1,1,1,1,1,-1),(1,-1,1,1,-1,1,-1,-1)},　{(-1,-1,1,1,1,-1,-1,1),(1,-1,-1,-1,1,1,-1,1),(1,-1,-1,1,-1,-1,1,1),(1,1,-1,1,1,-1,-1,-1),(-1,1,-1,-1,1,-1,1,1),(1,1,1,-1,-1,-1,-1,1)},　{(-1,-1,1,1,1,-1,-1,1),(1,-1,-1,-1,1,1,-1,1),(1,-1,-1,1,-1,-1,1,1),(1,1,-1,1,1,-1,-1,-1),(1,-1,1,1,-1,1,-1,-1),(1,1,1,-1,-1,-1,-1,1)},　{(-1,-1,1,1,1,-1,-1,1),(1,-1,-1,-1,1,1,-1,1),(1,-1,-1,1,-1,-1,1,1),(1,1,-1,1,1,-1,-1,-1),(-1,-1,-1,-1,1,1,1,1),(-1,1,-1,1,1,-1,1,-1)},　{(-1,-1,1,1,1,-1,-1,1),(1,-1,-1,1,-1,-1,1,1),(1,-

1,-1,1,-1,-1,1,1),(1,-1,-1,1,1,1,-1,-1),(1,1,-1,-1,1,-1,-1,1),(-1,-1,-1,-1,1,1,1,1),(1,-1,1,-1,-1,1,-1,1)},    {(-1,-1,1,1,1,-1,-1,1),(1,-1,-1,1,-1,-1,1,1),(1,-1,-1,1,1,1,-1,-1),(1,1,-1,-1,1,-1,-1,1),(-1,1,-1,1,1,-1,1,-1),(1,1,1,1,-1,-1,-1,-1)},    {(-1,-1,1,1,1,-1,-1,1),(1,-1,-1,1,-1,-1,1,1),(1,-1,-1,1,1,1,-1,-1),(1,1,-1,-1,1,-1,-1,1),(1,-1,1,-1,-1,1,-1,1),(1,1,1,1,-1,-1,-1,-1)},    {(-1,1,-1,-1,1,1,1,-1),(-1,1,1,-1,-1,1,1),(1,1,-1,-1,1,-1,-1,1),(1,1,1,-1,-1,1,-1,-1),(-1,-1,1,-1,1,1,-1,1),(-1,1,1,1,1,-1,-1,-1)},    {(-1,1,-1,-1,1,1,1,-1),(-1,1,1,-1,-1,-1,1,1),(1,1,-1,-1,1,-1,-1,1),(1,1,1,-1,-1,1,-1,-1),(-1,-1,1,-1,1,1,-1,1),(1,-1,-1,-1,-1,1,1,1)},    {(-1,1,-1,-1,1,1,1,-1),(-1,1,1,-1,-1,-1,1,1),(1,1,-1,-1,1,-1,-1,1),(1,1,1,-1,-1,1,-1,-1),(-1,1,1,1,1,-1,-1,-1),(1,1,-1,1,-1,1,-1)},            {(-1,1,-1,-1,1,1,1,-1),(-1,1,1,-1,-1,1,1,1),(1,1,-1,-1,1,-1,-1,1),(1,1,1,-1,-1,1,-1,-1),(1,-1,-1,-1,1,1,1),(1,1,-1,1,-1,-1,1,-1)},    {(-1,1,-1,-1,1,1,1,-1),(-1,1,1,1,-1,-1,1,-1),(1,1,-1,1,1,-1,-1,-1),(1,1,1,-1,-1,1,-1,-1),(-1,-1,1,1,1,1,-1,-1),(-1,1,1,-1,1,-1,-1,1)},      {(-1,1,-1,-1,1,1,1,-1),(-1,1,1,1,-1,-1,1,-1),(1,1,-1,1,1,-1,-1,-1),(1,1,1,-1,-1,1,-1,-1),(-1,-1,1,1,1,1,-1,-1),(1,-1,-1,1,-1,1,1,-1)},          {(-1,1,-1,-1,1,1,1,-1),(-1,1,1,1,-1,-1,1,-1),(1,1,-1,1,1,-1,-1,-1),(1,1,1,-1,-1,1,-1,-1),(-1,1,1,-1,1,-1,-1,1),(1,1,-1,-1,-1,-1,1,1)},          {(-1,1,-1,-1,1,1,1,-1),(-1,1,1,1,-1,-1,1,-1),(1,1,-1,1,1,-1,-1,-1),(1,1,1,-1,-1,1,-1,-1),(1,-1,-1,1,-1,1,1,-1),(-1,1,1,-1,1,-1,-1,1)},      {(-1,1,-1,-1,1,1,1,-1),(1,-1,-1,-1,1,1,-1,1),(1,1,-1,1,1,-1,-1,-1),(1,1,1,-1,-1,1,-1,-1),(-1,-1,1,1,1,1,-1,-1),(1,-1,-1,1,-1,1,1,-1)},      {(-1,1,-1,-1,1,1,1,-1),(1,-1,-1,-1,1,1,-1,1),(1,1,-1,1,1,-1,-1,-1),(1,1,1,-1,-1,1,-1,-1),(-1,-1,1,1,1,1,-1,-1),(-1,1,1,-1,1,-1,-1,1)},            {(-1,1,-1,-1,1,1,1,-1),(1,-1,-1,-1,1,1,-1,1),(1,1,-1,1,1,-1,-1,-1),(1,1,1,-1,-1,1,-1,-1),(1,-1,-1,1,-1,1,1,-1),(1,1,-1,-1,-1,-1,1,1),

1,1,1)}, {(-1,1,-1,-1,1,1,1,-1),(1,-1,-1,1,1,1,-1,-1),(1,1,-1,-1,1,-1,-1,1),(1,1,1,-1,-1,1,-1,-1),(-1,-1,1,-1,1,1,-1,1),(-1,1,1,1,1,-1,-1,-1)}, {(-1,1,-1,-1,1,1,1,-1),(1,-1,-1,1,1,1,-1,-1),(1,1,-1,-1,1,-1,-1,1),(1,1,1,-1,-1,1,-1,-1),(-1,-1,1,-1,1,1,-1,1),(1,-1,-1,-1,-1,1,1,1)}, {(-1,1,-1,-1,1,1,1,-1),(1,-1,-1,1,1,1,-1,-1),(1,1,-1,-1,1,-1,-1,1),(1,1,1,-1,-1,1,-1,-1),(-1,1,1,1,1,-1,-1,-1),(1,1,-1,1,-1,-1,1,-1)}, {(-1,1,-1,-1,1,1,1,-1),(1,-1,-1,1,1,1,-1,-1),(1,1,-1,-1,1,-1,-1,1),(1,1,1,-1,-1,1,-1,-1),(1,-1,-1,-1,-1,1,1,1),(1,1,-1,1,-1,-1,1,-1)}, {(-1,1,1,-1,-1,-1,1,1),(-1,1,1,-1,1,1,-1,-1),(1,1,-1,-1,-1,1,1,-1),(1,1,-1,-1,1,-1,-1,1),(-1,-1,-1,-1,1,1,1,1),(-1,1,-1,1,1,-1,1,-1)}, {(-1,1,1,-1,-1,-1,1,1),(-1,1,1,-1,1,1,-1,-1),(1,1,-1,-1,-1,1,1,-1),(1,1,-1,-1,1,-1,-1,1),(-1,-1,-1,-1,1,1,1,1),(1,-1,1,-1,-1,1,-1,1)}, {(-1,1,1,-1,-1,-1,1,1),(-1,1,1,-1,1,1,-1,-1),(1,1,-1,-1,-1,1,1,-1),(1,1,-1,-1,1,-1,-1,1),(-1,1,-1,1,1,-1,1,-1),(1,1,1,1,-1,-1,-1,-1)}, {(-1,1,1,-1,-1,-1,1,1),(-1,1,1,-1,1,1,-1,-1),(1,1,-1,-1,-1,1,1,-1),(1,1,-1,-1,1,-1,-1,1),(1,-1,1,-1,-1,1,-1,1),(1,1,1,1,-1,-1,-1,-1)}, {(-1,1,1,-1,-1,-1,1,1),(1,-1,-1,1,-1,-1,1,1),(1,1,-1,-1,-1,1,1,-1),(1,1,-1,-1,1,-1,-1,1),(-1,-1,-1,-1,1,1,1,1),(1,-1,1,-1,-1,1,-1,1)}, {(-1,1,1,-1,-1,-1,1,1),(1,-1,-1,1,-1,-1,1,1),(1,1,-1,-1,-1,1,1,-1),(1,1,-1,-1,1,-1,-1,1),(-1,1,-1,1,1,-1,1,-1),(1,1,1,1,-1,-1,-1,-1)}, {(-1,1,1,-1,-1,-1,1,1),(1,-1,-1,1,-1,-1,1,1),(1,1,-1,-1,1,-1,-1,1),(1,1,1,-1,-1,1,-1,-1),(-1,-1,1,-1,1,1,-1,1),(-1,1,1,1,1,-1,-1,-1)}, {(-1,1,1,-1,-1,-1,1,1),(1,-1,1,1,-1,-1,-1,1),(1,1,-1,-1,1,-1,-1,1),(1,1,1,-1,-1,1,-1,-1),(-1,-1,1,-1,1,1,-1,1),(1,-1,-1,-1,-1,1,1,1)}, {(-1,1,1,-1,-1,-1,1,1),(1,-1,1,1,-1,-1,-1,1),(1,1,-1,-1,1,-1,-1,1),(1,1,1,-1,-1,1,-1,-1),(-1,1,1,1,1,-1,-1,-1),(1,1,-1,1,-

1,-1,1,-1)}, {(-1,1,1,-1,-1,-1,1,1),(1,-1,1,1,-1,-1,-1,1),(1,1,-1,-1,1,-1,-1,1),(1,1,1,-1,-1,1,-1,-1),(1,-1,-1,-1,-1,1,1,1),(1,1,-1,1,-1,-1,1,-1)}, {(-1,1,1,-1,1,1,-1,-1),(-1,1,1,1,-1,-1,1,-1),(1,1,-1,-1,-1,1,1,-1),(1,1,-1,1,1,-1,-1,-1),(-1,-1,-1,1,1,1,1,-1),(-1,1,-1,-1,1,-1,1,1)}, {(-1,1,1,-1,1,1,-1,-1),(-1,1,1,1,-1,-1,1,-1),(1,1,-1,-1,-1,1,1,-1),(1,1,-1,1,1,-1,-1,-1),(-1,-1,-1,1,1,1,1,-1),(1,-1,1,1,-1,1,-1,-1)}, {(-1,1,1,-1,1,1,-1,-1),(-1,1,1,1,-1,-1,1,-1),(1,1,-1,-1,-1,1,1,-1),(1,1,-1,1,1,-1,-1,-1),(-1,1,-1,-1,1,-1,1,1),(1,1,1,-1,-1,-1,-1,1)}, {(-1,1,1,-1,1,1,-1,-1),(-1,1,1,1,-1,-1,1,-1),(1,1,-1,-1,-1,1,1,-1),(1,1,-1,1,1,-1,-1,-1),(1,-1,1,1,-1,1,-1,-1),(1,1,1,-1,-1,-1,-1,1)}, {(-1,1,1,-1,1,1,-1,-1),(1,-1,-1,-1,1,1,-1,1),(1,1,-1,-1,-1,1,1,-1),(1,1,-1,1,1,-1,-1,-1),(-1,-1,-1,1,1,1,1,-1),(1,-1,1,1,-1,1,-1,-1)}, {(-1,1,1,-1,1,1,-1,-1),(1,-1,-1,-1,1,1,-1,1),(1,1,-1,-1,-1,1,1,-1),(1,1,-1,1,1,-1,-1,-1),(-1,1,-1,-1,1,-1,1,1),(1,1,1,-1,-1,-1,-1,1)}, {(-1,1,1,-1,1,1,-1,-1),(1,-1,-1,-1,1,1,-1,1),(1,1,-1,-1,-1,1,1,-1),(1,1,-1,1,1,-1,-1,-1),(1,-1,1,1,-1,1,-1,-1),(1,1,1,-1,-1,-1,-1,1)}, {(-1,1,1,-1,1,1,-1,-1),(1,-1,-1,1,1,1,-1,-1),(1,1,-1,-1,-1,1,1,-1),(1,1,-1,-1,1,-1,-1,1),(-1,-1,-1,-1,1,1,1,1),(-1,1,-1,1,1,-1,1,-1)}, {(-1,1,1,-1,1,1,-1,-1),(1,-1,-1,1,1,1,-1,-1),(1,1,-1,-1,-1,1,1,-1),(1,1,-1,-1,1,-1,-1,1),(-1,-1,-1,-1,1,1,1,1),(1,-1,1,-1,-1,1,-1,1)}, {(-1,1,1,-1,1,1,-1,-1),(1,-1,-1,1,1,1,-1,-1),(1,1,-1,-1,-1,1,1,-1),(1,1,-1,-1,1,-1,-1,1),(-1,1,-1,1,1,-1,1,-1),(1,1,1,1,-1,-1,-1,-1)}, {(-1,1,1,1,-1,-1,1,-1),(1,-1,-1,1,-1,-1,1,1),(1,1,-1,-1,-1,1,1,-1),(1,1,-1,1,1,-1,-1,-1),(-1,-1,-1,1,1,1,1,-1),(-1,1,-1,-1,1,-1,1,1)}, {(-1,1,1,1,-1,-1,1,-1),(1,-1,-1,1,-1,-1,1,1),(1,1,-1,-1,-1,1,1,-1),(1,1,-1,1,1,-1,-1,-1),(-1,-1,-

1,1,1,1,1,-1),(1,-1,1,1,-1,1,-1,-1)},     {(-1,1,1,1,-1,-1,1,-1),(1,-1,-1,1,-1,-1,1,1),(1,1,-1,-1,-1,1,1,-1),(1,1,-1,1,1,-1,-1,-1),(-1,1,-1,-1,1,-1,1,1),(1,1,1,-1,-1,-1,-1,1)},     {(-1,1,1,1,-1,-1,1,-1),(1,-1,-1,1,-1,-1,1,1),(1,1,-1,-1,-1,1,1,-1),(1,1,-1,1,1,-1,-1,-1),(1,-1,1,1,-1,1,-1,-1),(1,1,1,-1,-1,-1,-1,1)},     {(-1,1,1,1,-1,-1,1,-1),(1,-1,1,1,-1,-1,-1,1),(1,1,-1,1,1,-1,-1,-1),(1,1,1,-1,-1,1,-1,-1),(-1,-1,1,1,1,1,-1,-1),(-1,1,1,-1,1,-1,-1,1)},     {(-1,1,1,1,-1,-1,1,-1),(1,-1,1,1,-1,-1,-1,1),(1,1,-1,1,1,-1,-1,-1),(1,1,1,-1,-1,1,-1,-1),(-1,-1,1,1,1,1,-1,-1),(1,-1,-1,1,-1,1,1,-1)},     {(-1,1,1,1,-1,-1,1,-1),(1,-1,1,1,-1,-1,-1,1),(1,1,-1,1,1,-1,-1,-1),(1,1,1,-1,-1,1,-1,-1),(-1,1,1,-1,1,-1,-1,1),(1,1,-1,-1,-1,-1,1,1)},     {(-1,1,1,1,-1,-1,1,-1),(1,-1,1,1,-1,-1,-1,1),(1,1,-1,1,1,-1,-1,-1),(1,1,1,-1,-1,1,-1,-1),(1,-1,-1,1,-1,1,1,-1),(1,1,-1,-1,-1,-1,1,1)},     {(1,-1,-1,-1,1,1,-1,1),(1,-1,-1,1,-1,-1,1,1),(1,1,-1,-1,-1,1,1,-1),(1,1,-1,1,1,-1,-1,-1),(-1,-1,-1,1,1,1,1,-1),(-1,1,-1,-1,1,-1,1,1)},     {(1,-1,-1,-1,1,1,-1,1),(1,-1,-1,1,-1,-1,1,1),(1,1,-1,-1,-1,1,1,-1),(1,1,-1,1,1,-1,-1,-1),(-1,-1,-1,1,1,1,1,-1),(1,-1,1,1,-1,1,-1,-1)},     {(1,-1,-1,-1,1,1,-1,1),(1,-1,-1,1,-1,-1,1,1),(1,1,-1,-1,-1,1,1,-1),(1,1,-1,1,1,-1,-1,-1),(-1,1,-1,-1,1,-1,1,1),(1,1,1,-1,-1,-1,-1,1)},     {(1,-1,-1,-1,1,1,-1,1),(1,-1,-1,1,-1,-1,1,1),(1,1,-1,-1,-1,1,1,-1),(1,1,-1,1,1,-1,-1,-1),(1,-1,1,1,-1,1,-1,-1),(1,1,1,-1,-1,-1,-1,1)},     {(1,-1,-1,-1,1,1,-1,1),(1,-1,1,1,-1,-1,-1,1),(1,1,-1,1,1,-1,-1,-1),(1,1,1,-1,-1,1,-1,-1),(-1,-1,1,1,1,1,-1,-1),(-1,1,1,-1,1,-1,-1,1)},     {(1,-1,-1,-1,1,1,-1,1),(1,-1,1,1,-1,-1,-1,1),(1,1,-1,1,1,-1,-1,-1),(1,1,1,-1,-1,1,-1,-1),(-1,-1,1,1,1,1,-1,-1),(1,-1,-1,1,-1,1,1,-1)},     {(1,-1,-1,-1,1,1,-1,1),(1,-1,1,1,-1,-1,-1,1),(1,1,-1,1,1,-1,-1,-1),(1,1,1,-1,-1,1,-1,-1),(-1,1,1,-1,1,-1,-1,1),(1,1,-1,-1,-1,-1,1,1)},     {(1,-1,-1,-1,1,1,-1,1),(1,-1,1,1,-1,-1,-1,1),(1,1,-1,1,1,-1,-1,-1),(1,1,1,-1,-1,1,-1,-1),(1,-1,-1,1,-1,1,1,-1),(1,1,-1,-1,-1,-1,1,1)},     {(1,-1,-1,1,-1,-1,1,1),(1,-1,-1,1,1,1,-1,-1),(1,1,-1,-1,-1,1,1,-1),(1,1,-1,-1,1,-1,-1,1),(-1,-1,-1,-1,1,1,1,1),(-

1,1,-1,1,1,-1,1,-1)}, {(1,-1,-1,1,-1,-1,1,1),(1,-1,-1,1,1,1,-1,-1),(1,1,-1,-1,-1,1,1,-1),(1,1,-1,-1,1,-1,-1,1),(-1,-1,-1,-1,1,1,1,1),(1,-1,1,-1,-1,1,-1,1)}, {(1,-1,-1,1,-1,-1,1,1),(1,-1,-1,1,1,1,-1,-1),(1,1,-1,-1,-1,1,1,-1),(1,1,-1,-1,1,-1,-1,1),(-1,1,-1,1,1,-1,1,-1),(1,1,1,1,-1,-1,-1,-1)}, {(1,-1,-1,1,-1,-1,1,1),(1,-1,-1,1,1,1,-1,-1),(1,1,-1,-1,-1,1,1,-1),(1,1,-1,-1,1,-1,-1,1),(1,-1,1,-1,-1,1,-1,1),(1,1,1,1,-1,-1,-1,-1)}, {(1,-1,-1,1,1,1,-1,-1),(1,-1,1,1,-1,-1,-1,1),(1,1,-1,-1,1,-1,-1,1),(1,1,1,-1,-1,1,-1,-1),(-1,-1,1,-1,1,1,-1,1),(-1,1,1,1,1,-1,-1,-1)}, {(1,-1,-1,1,1,1,-1,-1),(1,-1,1,1,-1,-1,-1,1),(1,1,-1,-1,1,-1,-1,1),(1,1,1,-1,-1,1,-1,-1),(-1,-1,1,-1,1,1,-1,1),(1,-1,-1,-1,-1,1,1,1)}, {(1,-1,-1,1,1,1,-1,-1),(1,-1,1,1,-1,-1,-1,1),(1,1,-1,-1,1,-1,-1,1),(1,1,1,-1,-1,1,-1,-1),(-1,1,1,1,1,-1,-1,-1),(1,1,-1,1,-1,-1,1,-1)}, {(1,-1,-1,1,1,1,-1,-1),(1,-1,1,1,-1,-1,-1,1),(1,1,-1,-1,1,-1,-1,1),(1,1,1,-1,-1,1,-1,-1),(1,-1,-1,-1,-1,1,1,1),(1,1,-1,1,-1,-1,1,-1)}, {(-1,-1,-1,-1,1,1,1,1),(-1,-1,1,1,1,1,-1,-1),(-1,1,-1,1,1,-1,1,-1),(-1,1,1,-1,1,-1,-1,1),(-1,-1,1,1,-1,1,1),(-1,1,1,-1,-1,1,1,-1)}, {(-1,-1,-1,-1,1,1,1,1),(-1,-1,1,1,1,1,-1,-1),(-1,1,-1,1,1,-1,1,-1),(-1,1,1,-1,1,-1,-1,1),(-1,-1,1,1,-1,-1,1,1),(1,-1,-1,1,1,-1,-1,1)}, {(-1,-1,-1,-1,1,1,1,1),(-1,-1,1,1,1,1,-1,-1),(-1,1,-1,1,1,-1,1,-1),(-1,1,1,-1,1,-1,-1,1),(-1,1,1,-1,-1,1,1,-1),(1,1,-1,-1,1,1,-1,-1)}, {(-1,-1,-1,-1,1,1,1,1),(-1,-1,1,1,1,1,-1,-1),(-1,1,-1,1,1,-1,1,-1),(-1,1,1,-1,1,-1,-1,1),(1,-1,-1,1,1,-1,-1,1),(1,1,-1,-1,1,1,-1,-1)}, {(-1,-1,-1,-1,1,1,1,1),(-1,-1,1,1,1,1,-1,-1),(-1,1,-1,1,1,-1,1,-1),(1,-1,-1,1,-1,1,1,-1),(-1,-1,1,1,-1,-1,1,1),(1,-1,-1,1,1,-1,-1,1)}, {(-1,-1,-1,-1,1,1,1,1),(-1,-1,1,1,1,1,-1,-1),(-1,1,-1,1,1,-1,1,-1),(1,-1,-1,1,-1,1,1,-1),(-1,1,1,-1,-1,1,1,-1),(1,1,-1,-1,1,1,-1,-1)}, {(-1,-1,-1,-1,1,1,1,1),(-1,-1,1,1,1,1,-1,-1),(-1,1,-1,1,1,-1,1,-1),(1,-1,-1,1,-1,1,1,-1),(-1,1,1,-1,-1,1,1,-1),(1,1,-1,-1,1,1,-1,-1)}, {(-1,-1,-1,-1,1,1,1,1),(-1,-1,1,1,1,1,-1,-1),(-1,1,-1,1,1,-1,1,-1),(1,-1,-1,1,-1,1,1,-1),(1,-1,-1,1,1,-1,-1,

1,1),(1,1,-1,-1,1,1,-1,-1)},          {(-1,-1,-1,-1,1,1,1,1),(-1,-1,1,1,1,1,-1,-1),(-1,1,1,-1,1,-1,-1,1),(1,-1,1,-1,-1,1,-1,1),(-1,-1,1,1,-1,-1,1,1),(-1,1,1,-1,-1,1,1,-1)},      {(-1,-1,-1,-1,1,1,1,1),(-1,-1,1,1,1,1,-1,-1),(-1,1,1,-1,1,-1,-1,1),(1,-1,1,-1,-1,1,-1,1),(-1,-1,1,1,-1,-1,1,1),(1,-1,-1,1,1,-1,-1,1)},    {(-1,-1,-1,-1,1,1,1,1),(-1,-1,1,1,1,1,-1,-1),(-1,1,1,-1,1,-1,-1,1),(1,-1,1,-1,-1,1,-1,1),(-1,1,1,-1,-1,1,1,-1),(1,1,-1,-1,1,1,-1,-1)},          {(-1,-1,-1,-1,1,1,1,1),(-1,-1,1,1,1,1,-1,-1),(-1,1,1,-1,1,-1,-1,1),(1,-1,1,-1,-1,1,-1,1),(1,-1,-1,1,1,-1,-1,1),(1,1,-1,-1,1,1,-1,-1)},     {(-1,-1,-1,-1,1,1,1,1),(-1,-1,1,1,1,1,-1,-1),(1,-1,-1,1,-1,1,1,-1),(1,-1,1,-1,-1,1,-1,1),(-1,-1,1,1,-1,-1,1,1),(-1,1,1,-1,-1,1,1,-1)},    {(-1,-1,-1,-1,1,1,1,1),(-1,-1,1,1,1,1,-1,-1),(1,-1,-1,1,-1,1,1,-1),(1,-1,1,-1,-1,1,-1,1),(-1,-1,1,1,-1,-1,1,1),(1,-1,-1,1,1,-1,-1,1)},       {(-1,-1,-1,-1,1,1,1,1),(-1,-1,1,1,1,1,-1,-1),(1,-1,-1,1,-1,1,1,-1),(1,-1,1,-1,-1,1,-1,1),(-1,1,1,-1,-1,1,1,-1),(1,1,-1,-1,1,1,-1,-1)},     {(-1,-1,-1,-1,1,1,1,1),(-1,-1,1,1,1,1,-1,-1),(1,-1,-1,1,-1,1,1,-1),(1,-1,1,-1,-1,1,-1,1),(1,-1,-1,1,1,-1,-1,1),(1,1,-1,-1,1,1,-1,-1)},       {(-1,-1,-1,-1,1,1,1,1),(-1,1,-1,1,1,-1,1,-1),(-1,1,1,-1,1,-1,-1,1),(1,1,-1,-1,-1,-1,1,1),(-1,-1,1,1,-1,-1,1,1),(-1,1,1,-1,-1,1,1,-1)},        {(-1,-1,-1,-1,1,1,1,1),(-1,1,-1,1,1,-1,1,-1),(-1,1,1,-1,1,-1,-1,1),(1,1,-1,-1,-1,-1,1,1),(-1,-1,1,1,-1,-1,1,1),(1,-1,-1,1,1,-1,-1,1)},      {(-1,-1,-1,-1,1,1,1,1),(-1,1,-1,1,1,-1,1,-1),(-1,1,1,-1,1,-1,-1,1),(1,1,-1,-1,-1,-1,1,1),(-1,-1,1,1,-1,-1,1,1),(-1,1,1,-1,-1,1,1,-1)},          {(-1,-1,-1,-1,1,1,1,1),(-1,1,-1,1,1,-1,1,-1),(1,-1,-1,1,-1,1,1,-1),(1,1,-1,-1,-1,-1,1,1),(-1,-1,1,1,-1,-1,1,1),(-1,1,1,-1,-1,1,1,-1)},
{(-1,-1,-1,-1,1,1,1,1),(-1,1,-1,1,1,-1,1,-1),(1,-1,-1,1,-1,1,1,-1),(1,1,-1,-1,-1,-1,1,1),(-1,-1,1,1,-1,-1,1,1),(-1,1,1,-1,-1,1,1,-1)},       {(-1,-1,-1,-1,1,1,1,1),(-1,1,-1,1,1,-1,1,-1),(1,-1,-1,1,-1,1,1,-1),(1,1,-1,-1,-1,-1,1,1),(-1,-1,1,1,-1,-1,1,1),(1,-1,-1,1,1,-1,-1,1)},                {(-1,-1,-1,-1,1,1,1,1),(-1,1,-1,1,1,-1,1,-1),(1,-1,-1,1,-1,1,1,-1),(1,1,-

1,-1,-1,-1,1,1), (-1,1,1,-1,-1,1,1,-1), (1,1,-1,-1,1,1,-1,-1) },
{ (-1,-1,-1,-1,1,1,1,1), (-1,1,-1,1,1,-1,1,-1), (1,-1,-1,1,-1,1,1,-1), (1,1,-1,-1,-1,-1,1,1), (1,-1,-1,1,1,-1,-1,1), (1,1,-1,-1,1,1,-1,-1) }, { (-1,-1,-1,-1,1,1,1,1), (-1,1,1,-1,1,-1,-1,1), (1,-1,1,-1,-1,1,-1,1), (1,1,-1,-1,-1,-1,1,1), (-1,-1,1,1,-1,-1,1,1), (-1,1,1,-1,-1,1,1,-1) }, { (-1,-1,-1,-1,1,1,1,1), (-1,1,1,-1,1,-1,-1,1), (1,-1,1,-1,-1,1,-1,1), (1,1,-1,-1,-1,-1,1,1), (-1,-1,1,1,-1,-1,1,1), (1,-1,-1,1,1,-1,-1,1) }, { (-1,-1,-1,-1,1,1,1,1), (-1,1,1,-1,1,-1,-1,1), (1,-1,1,-1,-1,1,-1,1), (1,1,-1,-1,-1,-1,1,1), (-1,1,1,-1,-1,1,1,-1), (1,1,-1,-1,1,1,-1,-1) }, { (-1,-1,-1,-1,1,1,1,1), (-1,1,1,-1,1,-1,-1,1), (1,-1,1,-1,-1,1,-1,1), (1,1,-1,-1,-1,-1,1,1), (1,-1,-1,1,1,-1,-1,1), (1,1,-1,-1,1,1,-1,-1) }, { (-1,-1,-1,-1,1,1,1,1), (1,-1,-1,1,-1,1,1,-1), (1,-1,1,-1,-1,1,-1,1), (1,1,-1,-1,-1,-1,1,1), (-1,-1,1,1,-1,-1,1,1), (-1,1,1,-1,-1,1,1,-1) }, { (-1,-1,-1,-1,1,1,1,1), (1,-1,-1,1,-1,1,1,-1), (1,-1,1,-1,-1,1,-1,1), (1,1,-1,-1,-1,-1,1,1), (-1,-1,1,1,-1,-1,1,1), (1,-1,-1,1,1,-1,-1,1) }, { (-1,-1,-1,-1,1,1,1,1), (1,-1,-1,1,-1,1,1,-1), (1,-1,1,-1,-1,1,-1,1), (1,1,-1,-1,-1,-1,1,1), (-1,1,1,-1,-1,1,1,-1), (1,1,-1,-1,1,1,-1,-1) }, { (-1,-1,-1,-1,1,1,1,1), (1,-1,-1,1,-1,1,1,-1), (1,-1,1,-1,-1,1,-1,1), (1,1,-1,-1,-1,-1,1,1), (1,-1,-1,1,1,-1,-1,1), (1,1,-1,-1,1,1,-1,-1) }, { (-1,-1,-1,1,1,1,1,-1), (-1,-1,1,-1,1,1,-1,1), (-1,1,-1,-1,1,-1,1,1), (-1,1,1,1,1,-1,-1,-1), (-1,-1,1,1,-1,-1,1,1), (-1,1,1,-1,-1,1,1,-1) }, { (-1,-1,-1,1,1,1,1,-1), (-1,-1,1,-1,1,1,-1,1), (-1,1,-1,-1,1,-1,1,1), (-1,1,1,1,1,-1,-1,-1), (-1,-1,1,1,-1,-1,1,1), (1,-1,-1,1,1,-1,-1,1) }, { (-1,-1,-1,1,1,1,1,-1), (-1,-1,1,-1,1,1,-1,1), (-1,1,-1,-1,1,-1,1,1), (-1,1,1,1,1,-1,-1,-1), (-1,1,1,-1,-1,1,1,-1), (1,1,-1,-1,1,1,-1,-1) }, { (-1,-1,-1,1,1,1,1,-1), (-1,-1,1,-1,1,1,-1,1), (-1,1,-1,-1,1,-1,1,1), (1,-1,-1,-1,1,1,1), (-1,-1,1,1,-1,-1,1,1), (-1,1,1,-1,-1,1,1,-1) }, { (-1,-1,-1,1,1,1,1,-1), (-1,-1,1,-1,1,1,-1,1), (-1,1,-1,

1,1,-1,1,1),(1,-1,-1,-1,-1,1,1,1),(-1,-1,1,1,-1,-1,1,1),(1,-1,-1,1,1,-1,-1,1)},    {(-1,-1,-1,1,1,1,1,-1),(-1,-1,1,-1,1,1,-1,1),(-1,1,-1,-1,1,-1,1,1),(1,-1,-1,-1,-1,1,1,1),(-1,1,1,-1,-1,1,1,-1),(1,1,-1,-1,1,1,-1,-1)},  {(-1,-1,-1,1,1,1,1,-1),(-1,-1,1,-1,1,1,-1,1),(-1,1,-1,-1,1,-1,1,1),(1,-1,-1,-1,-1,1,1,1),(1,-1,-1,1,1,-1,-1,1),(1,1,-1,-1,1,1,-1,-1)},    {(-1,-1,-1,1,1,1,1,-1),(-1,-1,1,-1,1,1,-1,1),(-1,1,1,1,1,-1,-1,-1),(1,-1,1,1,-1,1,-1,-1),(-1,-1,1,1,-1,-1,1,1),(-1,1,1,-1,-1,1,1,-1)},     {(-1,-1,-1,1,1,1,1,-1),(-1,-1,1,-1,1,1,-1,1),(-1,1,1,1,1,-1,-1,-1),(1,-1,1,1,-1,1,-1,-1),(-1,-1,1,1,-1,-1,1,1),(1,-1,-1,1,1,-1,-1,1)},     {(-1,-1,-1,1,1,1,1,-1),(-1,-1,1,-1,1,1,-1,1),(-1,1,1,1,1,-1,-1,-1),(1,-1,1,1,-1,1,-1,-1),(-1,1,1,-1,-1,1,1,-1),(1,1,-1,-1,1,1,-1,-1)},      {(-1,-1,-1,1,1,1,1,-1),(-1,-1,1,-1,1,1,-1,1),(-1,1,1,1,1,-1,-1,-1),(1,-1,1,1,-1,1,-1,-1),(1,-1,-1,1,1,-1,-1,1),(1,1,-1,-1,1,1,-1,-1)},     {(-1,-1,-1,1,1,1,1,-1),(-1,-1,1,-1,1,1,-1,1),(1,-1,-1,-1,-1,1,1,1),(1,-1,1,1,-1,1,-1,-1),(-1,-1,1,1,-1,-1,1,1),(-1,1,1,-1,-1,1,1,-1)},    {(-1,-1,-1,1,1,1,1,-1),(-1,-1,1,-1,1,1,-1,1),(1,-1,-1,-1,-1,1,1,1),(1,-1,1,1,-1,1,-1,-1),(-1,-1,1,1,-1,-1,1,1),(1,-1,-1,1,1,-1,-1,1)},  {(-1,-1,-1,1,1,1,1,-1),(-1,-1,1,-1,1,1,-1,1),(1,-1,-1,-1,-1,1,1,1),(1,-1,1,1,-1,1,-1,-1),(-1,1,1,-1,-1,1,1,-1),(1,1,-1,-1,1,1,-1,-1)},        {(-1,-1,-1,1,1,1,1,-1),(-1,1,-1,-1,1,-1,1,1),(-1,1,1,1,1,-1,-1,-1),(1,1,-1,1,-1,-1,1,-1),(-1,-1,1,1,-1,-1,1,1),(-1,1,1,-1,-1,1,1,-1)},    {(-1,-1,-1,1,1,1,1,-1),(-1,1,-1,-1,1,-1,1,1),(-1,1,1,1,1,-1,-1,-1),(1,1,-1,1,-1,-1,1,-1),(-1,-1,1,1,-1,-1,1,1),(1,-1,-1,1,1,-1,-1,1)},          {(-1,-1,-1,1,1,1,1,-1),(-1,1,-1,-1,1,-1,1,1),(-1,1,1,1,1,-1,-1,-1),(1,1,-1,1,-1,-1,1,-1),(-1,1,1,-1,-1,1,1,-1),(1,1,-1,-1,1,1,-1,-1)},    {(-1,-1,-1,1,1,1,1,-1),(-1,1,-1,-1,1,-1,1,1),(1,-1,-1,-1,-1,1,1,1),(1,-1,1,1,-1,1,-1,-1),(-1,-1,1,1,-1,-1,1,1),(-1,1,1,-1,-1,1,1,-1)},     {(-1,-1,-1,1,1,1,1,-1),(-1,-1,1,-1,1,1,-1,1),(-1,1,1,1,1,-1,-1,-1),(1,-1,1,1,-1,1,-1,-1),(-1,-1,1,1,-1,-1,1,1),(-1,1,1,-1,-1,1,1,-1)},    {(-1,-1,-1,1,1,1,1,-1),(-1,-1,1,-1,1,1,-1,1),(1,-1,-1,-1,-1,1,1,1),(1,-1,1,1,-1,-1,1,-1),(1,-1,-1,1,1,-1,-1,1),(1,1,-1,-1,1,1,-1,-1)},        {(-1,-1,-1,1,1,1,1,-1),(-1,1,-1,-1,1,-1,1,1),(-1,1,1,1,1,-1,-1,-1),(1,1,-1,1,-1,-1,1,-1),(-1,-1,1,1,-1,-1,1,1),(-1,1,1,-1,-1,1,1,-1)},    {(-1,-1,-1,1,1,1,1,-1),(-1,1,-1,-1,1,-1,1,1),(-1,1,1,1,1,-1,-1,-1),(1,1,-1,1,-1,-1,1,-1),(1,-1,-1,1,1,-1,-1,1),(1,1,-1,-1,1,1,-1,-1)},          {(-1,-1,-1,1,1,1,1,-1),(-1,1,-1,-1,1,-1,1,1),(-1,1,1,1,1,-1,-1,-1),(1,1,-1,1,-1,-1,1,-1),(-1,1,1,-1,-1,1,1,-1),(1,1,-1,-1,1,1,-1,-1)},  {(-1,-1,-1,1,1,1,1,-1),(-1,1,-1,-1,1,-1,1,1),(-1,1,1,1,1,-1,-1,-1),(1,1,-1,1,-1,-1,1,-1),(-1,1,1,-1,-1,1,1,-1),(1,1,-1,-1,1,1,-1,-1)},    {(-1,-1,-1,1,1,1,1,-1),(-1,1,-1,-1,1,-1,1,1),(-1,1,1,1,1,-1,-1,-1),(1,1,-1,1,-1,-1,1,-1),(1,-1,-1,1,1,-1,-1,1),(1,1,-1,-1,1,1,-1,-1)},  {(-1,-1,-1,1,1,1,1,-1),(-1,1,-1,-1,1,-1,1,1),(-1,1,1,1,1,-1,-1,-1),(1,1,-1,1,-1,-1,1,-1),(1,-1,-1,1,1,-1,-1,1),(1,1,-1,-1,1,1,-1,-1)},    {(-1,-1,-1,1,1,1,1,-1),(-1,1,-1,-1,1,-1,1,1),(-1,1,1,1,1,-1,-1,-1),(1,1,-1,1,-1,-1,1,-1),(1,-1,-1,1,1,-1,-1,1),(1,1,-1,-1,1,1,-1,-1)},    {(-1,-1,-1,1,1,1,1,-1),(-1,1,-1,-

1,1,-1,1,1),(1,-1,-1,-1,-1,1,1,1),(1,1,-1,1,-1,-1,1,-1),(-1,-1,1,1,-1,-1,1,1),(-1,1,1,-1,-1,1,1,-1)},　　{(-1,-1,-1,1,1,1,1,-1),(-1,1,-1,-1,1,-1,1,1),(1,-1,-1,-1,-1,1,1,1),(1,1,-1,1,-1,-1,1,-1),(-1,-1,1,1,-1,-1,1,1),(1,-1,-1,1,1,-1,-1,1)},　　{(-1,-1,-1,1,1,1,1,-1),(-1,1,-1,-1,1,-1,1,1),(1,-1,-1,-1,-1,1,1,1),(1,1,-1,1,-1,-1,1,-1),(-1,1,1,-1,-1,1,1,-1),(1,1,-1,-1,1,1,-1,-1)},　　　　　{(-1,-1,-1,1,1,1,1,-1),(-1,1,-1,-1,1,-1,1,1),(1,-1,-1,-1,-1,1,1,1),(1,1,-1,1,-1,-1,1,-1),(1,-1,-1,1,1,-1,-1,1),(1,1,-1,-1,1,1,-1,-1)},　　　{(-1,-1,-1,1,1,1,1,-1),(-1,1,1,1,1,-1,-1,-1),(1,-1,1,1,-1,1,-1,-1),(1,1,-1,1,-1,-1,1,-1),(-1,-1,1,1,-1,-1,1,1),(-1,1,1,-1,-1,1,1,-1)},　　　{(-1,-1,-1,1,1,1,1,-1),(-1,1,1,1,1,-1,-1,-1),(1,-1,1,1,-1,1,-1,-1),(1,1,-1,1,-1,-1,1,-1),(-1,-1,1,1,-1,-1,1,1),(1,-1,-1,1,1,-1,-1,1)},　　　{(-1,-1,-1,1,1,1,1,-1),(-1,1,1,1,1,-1,-1,-1),(1,-1,1,1,-1,1,-1,-1),(1,1,-1,1,-1,-1,1,-1),(-1,1,1,-1,-1,1,1,-1),(1,1,-1,-1,1,1,-1,-1)},　　　　　　　{(-1,-1,-1,1,1,1,1,-1),(-1,1,1,1,1,-1,-1,-1),(1,-1,1,1,-1,1,-1,-1),(1,1,-1,1,-1,-1,1,-1),(1,-1,-1,1,1,-1,-1,1),(1,1,-1,-1,1,1,-1,-1)},　　　　　{(-1,-1,-1,1,1,1,1,-1),(1,-1,-1,-1,-1,1,1,1),(1,-1,1,1,-1,1,-1,-1),(1,1,-1,1,-1,-1,1,-1),(-1,-1,1,1,-1,-1,1,1),(-1,1,1,-1,-1,1,1,-1)},　　{(-1,-1,-1,1,1,1,1,-1),(1,-1,-1,-1,-1,1,1,1),(1,-1,1,1,-1,1,-1,-1),(1,1,-1,1,-1,-1,1,-1),(-1,-1,1,1,-1,-1,1,1),(1,-1,-1,1,1,-1,-1,1)},　　{(-1,-1,-1,1,1,1,1,-1),(1,-1,-1,-1,-1,1,1,1),(1,-1,1,1,-1,1,-1,-1),(1,1,-1,1,-1,-1,1,-1),(-1,1,1,1,-1,-1,1,-1),(1,1,-1,-1,1,1,-1,-1)},　　{(-1,-1,-1,1,1,1,1,-1),(1,-1,-1,-1,-1,1,1,1),(1,-1,1,1,-1,1,-1,-1),(1,1,-1,1,-1,-1,1,-1),(1,-1,-1,1,1,-1,-1,1),(1,1,-1,-1,1,1,-1,-1)},　{(-1,-1,1,-1,1,1,-1,1),(-1,1,-1,-1,1,-1,1,1),(-1,1,1,1,1,-1,-1,-1),(1,1,1,-1,-1,-1,-1,1),(-1,-1,1,1,-1,-1,1,1),(-1,1,1,-1,-1,1,1,-1)},　　{(-1,-1,1,-1,1,1,-1,1),(-1,1,-1,-1,1,-1,1,1),(-1,1,1,1,1,-1,-1,-1),(1,1,1,-1,-1,-1,-1,1),(-1,-1,1,1,-1,-1,1,1),(1,-1,-1,1,1,-1,-1,1)},　{(-1,-1,1,-1,1,1,-1,1),(-1,1,-1,-1,1,-1,1,1),(-1,1,1,1,1,-1,-1,-1),(1,1,1,-1,-1,-1,-1,1),(-1,1,1,-1,-1,1,1,-1),(1,1,-1,-1,1,1,-1,-1)},　　　{(-

1,-1,1,-1,1,1,-1,1), (-1,1,-1,-1,1,-1,1,1), (-1,1,1,1,1,-1,-1,-1), (1,1,1,-1,-1,-1,-1,1), (1,-1,-1,1,1,-1,-1,1), (1,1,-1,-1,1,1,-1,-1)},                {(-1,-1,1,-1,1,1,-1,1), (-1,1,-1,-1,1,-1,1,1), (1,-1,-1,-1,-1,1,1,1), (1,1,1,-1,-1,-1,-1,1), (-1,-1,1,1,-1,-1,1,1), (-1,1,1,-1,-1,1,1,-1)},      {(-1,-1,1,-1,1,1,-1,1), (-1,1,-1,-1,1,-1,1,1), (1,-1,-1,-1,-1,1,1,1), (1,1,1,-1,-1,-1,-1,1), (-1,-1,1,1,-1,-1,1,1), (1,-1,-1,1,1,-1,-1,1)},      {(-1,-1,1,-1,1,1,-1,1), (-1,1,-1,-1,1,-1,1,1), (1,-1,-1,-1,-1,1,1,1), (1,1,1,-1,-1,-1,-1,1), (-1,1,1,-1,-1,1,1,-1), (1,1,-1,-1,1,1,-1,-1)},                {(-1,-1,1,-1,1,1,-1,1), (-1,1,-1,-1,1,-1,1,1), (1,-1,-1,-1,-1,1,1,1), (1,1,1,-1,-1,-1,-1,1), (1,-1,-1,1,1,-1,-1,1), (1,1,-1,-1,1,1,-1,-1)},         {(-1,-1,1,-1,1,1,-1,1), (-1,1,1,1,1,-1,-1,-1), (1,-1,1,1,-1,1,-1,-1), (1,1,1,-1,-1,-1,-1,1), (-1,-1,1,1,-1,-1,1,1), (-1,1,1,-1,-1,1,1,-1)},      {(-1,-1,1,-1,1,1,-1,1), (-1,1,1,1,1,-1,-1,-1), (1,-1,1,1,-1,1,-1,-1), (1,1,1,-1,-1,-1,-1,1), (-1,-1,1,1,-1,-1,1,1), (1,-1,-1,1,1,-1,-1,1)},         {(-1,-1,1,-1,1,1,-1,1), (-1,1,1,1,1,-1,-1,-1), (1,-1,1,1,-1,1,-1,-1), (1,1,1,-1,-1,-1,-1,1), (-1,1,1,-1,-1,1,1,-1), (1,1,-1,-1,1,1,-1,-1)},                {(-1,-1,1,-1,1,1,-1,1), (-1,1,1,1,1,-1,-1,-1), (1,-1,1,1,-1,1,-1,-1), (1,1,1,-1,-1,-1,-1,1), (1,-1,-1,1,1,-1,-1,1), (1,1,-1,-1,1,1,-1,-1)},   {(-1,-1,1,-1,1,1,-1,1), (1,-1,-1,-1,-1,1,1,1), (1,-1,1,1,-1,1,-1,-1), (1,1,1,-1,-1,-1,-1,1), (-1,-1,1,1,-1,-1,1,1), (-1,1,1,-1,-1,1,1,-1)},      {(-1,-1,1,-1,1,1,-1,1), (1,-1,-1,-1,-1,1,1,1), (1,-1,1,1,-1,1,-1,-1), (1,1,1,-1,-1,-1,-1,1), (-1,-1,1,1,-1,-1,1,1), (1,-1,-1,1,1,-1,-1,1)},    {(-1,-1,1,-1,1,1,-1,1), (1,-1,-1,-1,-1,1,1,1), (1,-1,1,1,-1,1,-1,-1), (1,1,1,-1,-1,-1,-1,1), (-1,1,1,-1,-1,1,1,-1), (1,1,-1,-1,1,1,-1,-1)},      {(-1,-1,1,-1,1,1,-1,1), (1,-1,-1,-1,-1,1,1,1), (1,-1,1,1,-1,1,-1,-1), (1,1,1,-1,-1,-1,-1,1), (1,-1,-1,1,1,-1,-1,1), (1,1,-1,-1,1,1,-1,-1)},      {(-1,-1,1,1,1,1,-1,-1), (-1,1,-1,1,1,-1,1,-1), (-1,1,1,-1,1,-1,-1,1), (1,1,1,1,-1,-1,-1,-1), (-1,-1,1,1,-1,-1,1,1), (-1,1,1,-1,-1,1,1,-1)},         {(-1,-1,1,1,1,1,-1,-1), (-1,1,-1,1,1,-1,1,-1), (-1,1,1,-1,1,-1,-1,1), (1,1,1,1,-1,-1,-1,-1), (-1,-1,1,1,-1,-

1,1,1),(1,-1,-1,1,1,-1,-1,1)}, {(-1,-1,1,1,1,1,-1,-1),(-1,1,-1,1,1,-1,1,-1),(-1,1,1,-1,1,-1,-1,1),(1,1,1,1,-1,-1,-1,-1),(-1,1,1,-1,-1,1,1,-1),(1,1,-1,-1,1,1,-1,-1)}, {(-1,-1,1,1,1,1,-1,-1),(-1,1,-1,1,1,-1,1,-1),(-1,1,1,-1,1,-1,-1,1),(1,1,1,1,-1,-1,-1,-1),(1,-1,-1,1,1,-1,-1,1),(1,1,-1,-1,1,1,-1,-1)}, {(-1,-1,1,1,1,1,-1,-1),(-1,1,-1,1,1,-1,1,-1),(1,-1,-1,1,-1,1,1,-1),(1,1,1,1,-1,-1,-1,-1),(-1,-1,1,1,-1,-1,1,1),(-1,1,1,-1,-1,1,1,-1)}, {(-1,-1,1,1,1,1,-1,-1),(-1,1,-1,1,1,-1,1,-1),(1,-1,-1,1,-1,1,1,-1),(1,1,1,1,-1,-1,-1,-1),(-1,-1,1,1,-1,-1,1,1),(1,-1,-1,1,1,-1,-1,1)}, {(-1,-1,1,1,1,1,-1,-1),(-1,1,-1,1,1,-1,1,-1),(1,-1,-1,1,-1,1,1,-1),(1,1,1,1,-1,-1,-1,-1),(-1,1,1,-1,-1,1,1,-1),(1,1,-1,-1,1,1,-1,-1)}, {(-1,-1,1,1,1,1,-1,-1),(-1,1,-1,1,1,-1,1,-1),(1,-1,-1,1,-1,1,1,-1),(1,1,1,1,-1,-1,-1,-1),(1,-1,-1,1,1,-1,-1,1),(1,1,-1,-1,1,1,-1,-1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,-1,1,1,-1,-1,1,1),(-1,1,1,-1,-1,1,1,-1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,1,1,-1,-1,1,1,-1),(1,1,-1,-1,1,1,-1,-1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(1,-1,-1,1,1,-1,-1,1),(1,1,-1,-1,1,1,-1,-1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,-1,1,1,-1,-1,1,1),(-1,1,1,-1,-1,1,1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,1,1),(-1,1,1,-1,-1,1,1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,1,1),(1,1,-1,-1,1,1,-1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,1,1),(1,1,-1,-1,1,1,-1,-1)}, {(-1,1,-1,-1,1,-1,1,1),(-1,1,1,1,1,-1,-1,-1),(1,1,-1,1,-1,-1,1,-1),(1,1,1,-1,-1,-1,-1,1),(-1,-1,1,1,-1,-

1,1,1),(-1,1,1,-1,-1,1,1,-1)}, {(-1,1,-1,-1,1,-1,1,1),(-1,1,1,1,1,-1,-1,-1),(1,1,-1,1,-1,-1,1,-1),(1,1,1,-1,-1,-1,-1,1),(-1,-1,1,1,-1,-1,1,1),(1,-1,-1,1,1,-1,-1,1)}, {(-1,1,-1,-1,1,-1,1,1),(-1,1,1,1,1,-1,-1,-1),(1,1,-1,1,-1,-1,1,-1),(1,1,1,-1,-1,-1,-1,1),(-1,1,1,-1,-1,1,1,-1),(1,1,-1,-1,1,1,-1,-1)}, {(-1,1,-1,-1,1,-1,1,1),(-1,1,1,1,1,-1,-1,-1),(1,1,-1,1,-1,-1,1,-1),(1,1,1,-1,-1,-1,-1,1),(1,-1,-1,1,1,-1,-1,1),(1,1,-1,-1,1,1,-1,-1)}, {(-1,1,-1,-1,1,-1,1,1),(1,-1,-1,-1,-1,1,1,1),(1,1,-1,1,-1,-1,1,-1),(1,1,1,-1,-1,-1,-1,1),(-1,-1,1,1,-1,-1,1,1),(-1,1,1,-1,-1,1,1,-1)}, {(-1,1,-1,-1,1,-1,1,1),(1,-1,-1,-1,-1,1,1,1),(1,1,-1,1,-1,-1,1,-1),(1,1,1,-1,-1,-1,-1,1),(-1,-1,1,1,-1,-1,1,1),(1,-1,-1,1,1,-1,-1,1)}, {(-1,1,-1,-1,1,-1,1,1),(1,-1,-1,-1,-1,1,1,1),(1,1,-1,1,-1,-1,1,-1),(1,1,1,-1,-1,-1,-1,1),(-1,1,1,-1,-1,1,1,-1),(1,1,-1,-1,1,1,-1,-1)}, {(-1,1,-1,-1,1,-1,1,1),(1,-1,-1,-1,-1,1,1,1),(1,1,-1,1,-1,-1,1,-1),(1,1,1,-1,-1,-1,-1,1),(1,-1,-1,1,1,-1,-1,1),(1,1,-1,-1,1,1,-1,-1)}, {(-1,1,-1,1,1,-1,1,-1),(-1,1,1,-1,1,-1,-1,1),(1,1,-1,-1,-1,-1,1,1),(1,1,1,1,-1,-1,-1,-1),(-1,-1,1,1,-1,-1,1,1),(-1,1,1,-1,-1,1,1,-1)}, {(-1,1,-1,1,1,-1,1,-1),(-1,1,1,-1,1,-1,-1,1),(1,1,-1,-1,-1,-1,1,1),(1,1,1,1,-1,-1,-1,-1),(-1,-1,1,1,-1,-1,1,1),(1,-1,-1,1,1,-1,-1,1)}, {(-1,1,-1,1,1,-1,1,-1),(-1,1,1,-1,1,-1,-1,1),(1,1,-1,-1,-1,-1,1,1),(1,1,1,1,-1,-1,-1,-1),(1,-1,-1,1,1,-1,-1,1),(1,1,-1,-1,1,1,-1,-1)}, {(-1,1,-1,1,1,-1,1,-1),(1,-1,-1,1,-1,1,1,-1),(1,1,-1,-1,-1,-1,1,1),(1,1,1,1,-1,-1,-1,-1),(-1,-1,1,1,-1,-1,1,1),(-1,1,1,-1,-1,1,1,-1)}, {(-1,1,-1,1,1,-1,1,-1),(1,-1,-1,1,-1,1,1,-1),(1,1,-1,-1,-1,-1,1,1),(1,1,1,1,-1,-1,-1,-1),(-1,-1,1,1,-1,-1,1,1),(1,-1,-1,1,1,-1,-1,1)}, {(-1,1,-1,1,1,-1,1,-1),(1,-1,-1,1,-1,1,1,-1),(1,1,-1,-1,-1,-1,1,1),(1,1,1,1,-1,-1,-1,-1),(-1,1,1,-1,-1,1,1,-1),(1,1,-1,-1,1,1,-1,-1)}, {(-1,1,-1,1,1,-1,1,-1),(1,-1,-1,1,-1,1,1,-1),(1,1,-1,-1,-1,-1,1,1),(1,1,1,1,-1,-1,-1,-1),(-1,-1,1,1,-1,-1,1,1),(1,-1,-1,1,1,-1,-1,1)}, {(-1,1,-1,1,1,-1,1,-1),(1,-1,-1,1,-1,1,1,-1),(1,1,-1,-1,-1,-1,1,1),(1,1,1,1,-1,-1,-1,-1),(-1,1,1,-1,-1,1,1,-1)

1,-1,-1,-1),(1,-1,-1,1,1,-1,-1,1),(1,1,-1,-1,1,1,-1,-1)}, {(-1,1,1,-1,1,-1,-1,1),(1,-1,1,-1,-1,1,-1,1),(1,1,-1,-1,-1,-1,1,1),(1,1,1,1,-1,-1,-1,-1),(-1,-1,1,1,-1,-1,1,1),(-1,1,1,-1,-1,1,1,-1)}, {(-1,1,1,-1,1,-1,-1,1),(1,-1,1,-1,-1,1,-1,1),(1,1,-1,-1,-1,-1,1,1),(1,1,1,1,-1,-1,-1,-1),(-1,-1,1,1,-1,-1,1,1),(1,-1,-1,1,1,-1,-1,1)}, {(-1,1,1,-1,1,-1,-1,1),(1,-1,1,-1,-1,1,-1,1),(1,1,-1,-1,-1,-1,1,1),(1,1,1,1,-1,-1,-1,-1),(-1,1,1,-1,-1,1,1,-1),(1,1,-1,-1,1,1,-1,-1)}, {(-1,1,1,-1,1,-1,-1,1),(1,-1,1,-1,-1,1,-1,1),(1,1,-1,-1,-1,-1,1,1),(1,1,1,1,-1,-1,-1,-1),(1,-1,-1,1,1,-1,-1,1),(1,1,-1,-1,1,1,-1,-1)}, {(-1,1,1,1,1,-1,-1,-1),(1,-1,1,1,-1,1,-1,-1),(1,1,-1,1,-1,-1,1,-1),(1,1,1,-1,-1,-1,-1,1),(-1,-1,1,1,-1,-1,1,1),(-1,1,1,-1,-1,1,1,-1)}, {(-1,1,1,1,1,-1,-1,-1),(1,-1,1,1,-1,1,-1,-1),(1,1,-1,1,-1,-1,1,-1),(1,1,1,-1,-1,-1,-1,1),(-1,-1,1,1,-1,-1,1,1),(1,-1,-1,1,1,-1,-1,1)}, {(-1,1,1,1,1,-1,-1,-1),(1,-1,1,1,-1,1,-1,-1),(1,1,-1,1,-1,-1,1,-1),(1,1,1,-1,-1,-1,-1,1),(-1,1,1,-1,-1,1,1,-1),(1,1,-1,-1,1,1,-1,-1)}, {(-1,1,1,1,1,-1,-1,-1),(1,-1,1,1,-1,1,-1,-1),(1,1,-1,1,-1,-1,1,-1),(1,1,1,-1,-1,-1,-1,1),(1,-1,-1,1,1,-1,-1,1),(1,1,-1,-1,1,1,-1,-1)}, {(1,-1,-1,-1,-1,1,1,1),(1,-1,1,1,-1,1,-1,-1),(1,1,-1,1,-1,-1,1,-1),(1,1,1,-1,-1,-1,-1,1),(-1,-1,1,1,-1,-1,1,1),(-1,1,1,-1,-1,1,1,-1)}, {(1,-1,-1,-1,-1,1,1,1),(1,-1,1,1,-1,1,-1,-1),(1,1,-1,1,-1,-1,1,-1),(1,1,1,-1,-1,-1,-1,1),(-1,-1,1,1,-1,-1,1,1),(1,-1,-1,1,1,-1,-1,1)}, {(1,-1,-1,-1,-1,1,1,1),(1,-1,1,1,-1,1,-1,-1),(1,1,-1,1,-1,-1,1,-1),(1,1,1,-1,-1,-1,-1,1),(-1,1,1,-1,-1,1,1,-1),(1,1,-1,-1,1,1,-1,-1)}, {(1,-1,-1,-1,-1,1,1,1),(1,-1,1,1,-1,1,-1,-1),(1,1,-1,1,-1,-1,1,-1),(1,1,1,-1,-1,-1,-1,1),(1,-1,-1,1,1,-1,-1,1),(1,1,-1,-1,1,1,-1,-1)}, {(1,-1,-1,1,-1,1,1,-1),(1,-1,1,-1,-1,1,-1,1),(1,1,-1,-1,-1,-1,1,1),(1,1,1,1,-1,-1,-1,-1),(-1,-1,1,1,-1,-1,1,1),(1,-1,-1,1,1,-1,-1,1)}, {(1,-1,-1,1,-1,1,1,-1),(1,-1,1,-1,-1,1,-

```
1,1),(1,1,-1,-1,-1,-1,1,1),(1,1,1,1,-1,-1,-1,-1),(-1,1,1,-1,-
1,1,1,-1),(1,1,-1,-1,1,1,-1,-1)},    {(1,-1,-1,1,-1,1,1,-1),(1,-
1,1,-1,-1,1,-1,1),(1,1,-1,-1,-1,-1,1,1),(1,1,1,1,-1,-1,-1,-
1),(1,-1,-1,1,1,-1,-1,1),(1,1,-1,-1,1,1,-1,-1)}.
```

**Revendications**

1.  Système de génération de codes orthogonaux spectralement efficaces, comprenant :

    un module de génération de codes (310) configuré pour générer un groupe de codes candidats, dans lequel le groupe de codes candidats contient $2^L$ codes différents pour une longueur de code L donnée ;
    un module de calcul de réponse en fréquence (312) configuré pour calculer une réponse en fréquence des codes au sein du groupe de codes candidats ;
    un module de regroupement de codes (314) configuré pour diviser les codes au sein du groupe candidat en un groupe de codes de fréquence unique et un groupe de codes de fréquence mixte, sur la base de la réponse en fréquence des codes au sein du groupe de codes candidat ;
    un module de recherche de codes de fréquence (316) configuré pour rechercher des codes orthogonaux dans chacun parmi le groupe de codes de fréquence unique et le groupe de codes de fréquence mixte ;
    **caractérisé en ce que** pour un nombre d'emplacements de fréquence N, les codes ayant le même nombre d'emplacements de fréquence N et des composantes de fréquence positionnées aux mêmes emplacements de fréquence sont regroupés pour former le groupe de codes de fréquence unique ;
    dans lequel, pour une longueur de code L donnée, plusieurs valeurs de N sont utilisées, et le système augmente itérativement N pour regrouper les codes sur la base de leur réponse en fréquence,
    dans lequel, pour un nombre d'emplacements de fréquence N, les codes ayant le même nombre d'emplacements de fréquence N et des composantes de fréquence positionnées aux mêmes emplacements de fréquence, en plus des codes ayant un nombre d'emplacements de fréquence inférieur à N avec la condition que les positions de toutes les composantes de fréquence de ces codes chevauchent certaines positions des composantes de fréquence des codes ayant N positions de fréquence, sont regroupés pour former le groupe de codes de fréquence mixte, dans lequel les composantes de fréquence et les emplacements sont dérivés de la réponse en fréquence calculée ;
    dans lequel un ou plusieurs ensembles de codes sont formés au sein de chaque groupe de codes de fréquence, les codes au sein des ensembles de codes étant de nature orthogonale ; et
    comprenant en outre une mémoire configurée pour stocker, pour chaque ensemble de codes orthogonaux formé au sein d'un groupe de codes de fréquence unique ou d'un groupe de codes de fréquence mixte, des informations d'identification et les codes orthogonaux correspondants dans une base de données formant une liste de codes orthogonaux, dans lequel la liste de codes orthogonaux comprend une pluralité d'entrées, chaque entrée correspondant à un ensemble de codes orthogonaux et comportant :

    un certain nombre d'ensembles de codes dans le groupe de codes de fréquence unique ou le groupe de codes de fréquence mixte, et un certain nombre de codes dans un ensemble de codes ;
    dans lequel un emplacement de fréquence est une position présente dans la réponse en fréquence d'un code, et une composante de fréquence est un élément spectral présent à une position spécifique dans la réponse en fréquence d'un code.

2.  Système selon la revendication 1, dans lequel les codes au sein des ensembles de codes ont une corrélation croisée non décalée nulle.

3.  Système selon la revendication 1, dans lequel les codes au sein des ensembles de codes ont une valeur minimale d'un lobe latéral maximal.

4.  Système selon la revendication 1, dans lequel les codes au sein des ensembles de codes ont une valeur minimale d'un lobe latéral total.

5.  Système selon l'une quelconque des revendications 1 à 4, comprenant en outre la génération d'un code orthogonal de longueur 2L au sein d'un ensemble de codes par répétition du code orthogonal de longueur L.

**6.** Système selon la revendication 1, comprenant en outre le calcul d'une efficacité spectrale, dans lequel l'efficacité spectrale est un rapport entre le nombre de codes dans un ensemble de codes au sein d'un groupe de fréquences et le nombre d'emplacements de fréquence du code.

**7.** Système selon la revendication 6, dans lequel l'efficacité spectrale est d'au moins 2.

**8.** Procédé de génération d'un code orthogonal spectralement efficace, comprenant :

la génération d'un groupe de codes candidats, dans lequel le groupe de codes candidats contient $2^L$ codes différents pour une longueur de code L donnée ;
le calcul de la réponse en fréquence des codes au sein du groupe de codes candidats ;
la division des codes au sein du groupe candidat en deux catégories de groupes de codes de fréquence, sur la base de la réponse en fréquence des codes au sein du groupe de codes candidats ;
la recherche de codes orthogonaux dans chacun parmi le groupe de codes de fréquence unique et le groupe de codes de fréquence mixte ;
**caractérisé en ce que** pour un nombre d'emplacements de fréquence N, les codes ayant le même nombre d'emplacements de fréquence N et des composantes de fréquence positionnées aux mêmes emplacements de fréquence sont regroupés pour former le groupe de codes de fréquence unique ;
dans lequel, pour un nombre d'emplacements de fréquence N, les codes ayant le même nombre d'emplacements de fréquence N et des composantes de fréquence positionnées aux mêmes emplacements de fréquence, en plus des codes ayant un nombre d'emplacements de fréquence inférieur à N avec la condition que les positions de toutes les composantes de fréquence de ces codes chevauchent certaines positions des composantes de fréquence des codes ayant N positions de fréquence, sont regroupés pour former le groupe de codes de fréquence mixte, dans lequel les composantes de fréquence et les emplacements sont dérivés de la réponse en fréquence calculée ;
dans lequel un ou plusieurs ensembles de codes sont formés au sein de chaque groupe de codes de fréquence, les codes au sein des ensembles de codes étant de nature orthogonale ; et
le procédé comprenant en outre le stockage, pour chaque ensemble de codes orthogonaux formé au sein d'un groupe de codes de fréquence unique ou d'un groupe de codes de fréquence mixte, des informations d'identification et les codes orthogonaux correspondants dans une base de données formant une liste de codes orthogonaux, dans lequel la liste de codes orthogonaux comprend une pluralité d'entrées, chaque entrée correspondant à un ensemble de codes orthogonaux et comportant : un certain nombre d'ensembles de codes dans le groupe de codes de fréquence unique ou le groupe de codes de fréquence mixte, et un certain nombre de codes dans un ensemble de codes ;
dans lequel un emplacement de fréquence est une position présente dans la réponse en fréquence d'un code, et une composante de fréquence est un élément spectral présent à une position spécifique dans la réponse en fréquence d'un code.

**9.** Système selon la revendication 1 ou procédé selon la revendication 8, dans lequel la liste de codes est l'une des listes de codes suivantes :

liste de codes 1 : {(-1,-1,1,1),(-1,1,1,-1)},{(-1,-1,1,1),(1,-1,-1,1)},{(-1,1,1,-1),(1,1,-1,-1)},{(1,-1,-1,1),(1,1,-1,-1)} ;

liste de codes 2 : {(-1,-1,-1,-1,1,1,1,1),(-1,-1,1,1,1,1,-1,-1),(-1,1,-1,1,1,-1,1,-1),(-1,1,1,-1,1,-1,-1,1)},{(-1,-1,-1,-1,1,1,1,1),(-1,-1,1,1,1,1,-1,-1),(-1,1,-1,1,1,-1,1,-1),(1,-1,-1,1,-1,1,1,-1)},{(-1,-1,-1,-1,1,1,1,1),(-1,-1,1,1,1,1,-1,-1),(-1,1,1,-1,1,-1,-1,1),(1,-1,1,-1,-1,1,-1,1)},{(-1,-1,-1,-1,1,1,1,1),(-1,-1,1,1,1,1,-1,-1),(1,-1,-1,1,-1,1,1,-1),(1,-1,1,-1,-1,1,-1,1)},{(-1,-1,-1,-1,1,1,1,1),(-1,1,-1,1,1,-1,1,-1),(-1,1,1,-1,1,-1,-1,1),(1,1,-1,-1,-1,-1,1,1)},{(-1,-1,-1,-1,1,1,1,1),(-1,1,-1,1,1,-1,1,-1),(1,-1,-1,1,-1,1,1,-1),(1,1,-1,-1,-1,-1,1,1)},{(-1,-1,-1,-1,1,1,1,1),(-1,1,1,-1,1,-1,-1,1),(1,-1,1,-1,-1,1,-1,1),(1,1,-1,-1,-1,-1,1,1)},{(-1,-1,-1,-1,1,1,1,1),(1,-1,-1,1,-1,1,1,-1),(1,-1,1,-1,-1,1,-1,1),(1,1,-1,-1,-1,-1,1,1)},{(-1,-1,-1,1,1,1,1,-1),(-1,-1,1,-1,1,1,-1,1),(-1,1,-1,-1,1,-1,1,1),(-1,1,1,1,1,-1,-1,-1)},{(-1,-1,-1,1,1,1,1,-1),(-1,-1,1,-1,1,1,-1,1),(-1,1,-1,-1,1,-1,1,1),(1,-1,-1,-1,-1,1,1,1)},{(-1,-1,-1,1,1,1,1,-1),(-1,-1,1,-1,1,1,-1,1),(-1,1,1,1,1,-1,-1,-1),(1,-1,1,1,-1,1,-1,-1)},{(-1,-1,-1,1,1,1,1,-1),(-1,-1,1,-1,1,1,-1,1),(1,-1,-1,-1,-1,1,1,1),(1,-1,1,1,-1,1,-1,-1)},{(-1,-1,-1,1,1,1,1,-1),(-1,1,-1,-1,1,-1,1,1),(-1,1,1,1,1,-1,-1,-1),(1,1,-1,1,-1,-1,1,-1)},{(-1,-1,-1,1,1,1,1,-1),(-1,1,-1,-1,1,-1,1,1),(1,-1,-1,-1,-1,1,1,1),(1,1,-1,1,-1,-1,1,-1)},{(-1,-1,-1,1,1,1,1,-1),(-1,1,1,1,1,-1,-1,-1),(1,-1,1,1,-1,1,-1,-1),(1,1,-1,1,-1,-1,1,-1)},{(-1,-1,-1,1,1,1,1,-1),(1,-1,-1,-1,-1,1,1,1),(1,-1,1,1,-1,1,-1,-1),(1,1,-1,1,-1,-1,1,-1)},{(-1,-1,1,-1,1,1,-1,1),(-1,1,-1,-1,1,-1,1,1),(-1,1,1,1,1,-1,-1,-1),(1,1,1,-1,-1,-1,-1,1)},{(-1,-1,1,-1,1,1,-1,1),(-1,1,-1,-1,1,-1,1,1),(1,-1,-1,-1,-1,1,1,1),(1,1,1,-1,-1,-1,-1,

1,1)}},{(-1,-1,1,-1,1,1,-1,1),(1,-1,-1,-1,-1,1,1,1),(1,-1,1,1,-1,1,-1,-1),(1,1,1,-1,-1,-1,-1,1)},{(-1,-1,1,1,1,1,-1,-1),(-1,1,-1,1,1,-1,1,-1),(-1,1,1,-1,1,-1,-1,1),(1,1,1,1,-1,-1,-1,-1)},{(-1,-1,1,1,1,1,-1,-1),(-1,1,-1,1,1,-1,1,-1),(1,-1,-1,1,-1,1,1,-1),(1,1,1,1,-1,-1,-1,-1)},{(-1,-1,1,1,1,1,-1,-1),(-1,1,1,-1,1,-1,-1,1),(1,-1,1,-1,-1,1,-1,1),(1,1,1,1,-1,-1,-1,-1)},{(-1,-1,1,1,1,1,-1,-1),(1,-1,-1,1,-1,1,1,-1),(1,-1,1,-1,1,-1,1,-1),(1,1,1,1,-1,-1,-1,-1)},{(-1,1,-1,-1,1,-1,1,1),(-1,1,1,1,1,-1,-1,-1),(1,1,-1,1,-1,-1,1,-1),(1,1,1,-1,-1,-1,-1,1)},{(-1,1,-1,-1,1,-1,1,1),(1,-1,-1,-1,-1,1,1,1),(1,1,-1,1,-1,-1,1,-1),(1,1,1,-1,-1,-1,-1,1)},{(-1,1,-1,1,1,-1,1,-1),(-1,1,1,-1,1,-1,-1,1),(1,1,-1,-1,-1,-1,1,1),(1,1,1,1,-1,-1,-1,-1)},{(-1,1,-1,1,1,-1,1,-1),(1,-1,-1,1,-1,1,1,-1),(1,1,-1,-1,-1,-1,1,1),(1,1,1,1,-1,-1,-1,-1)},{(-1,1,1,-1,1,-1,-1,1),(1,-1,1,-1,1,-1,1,-1),(1,1,-1,-1,-1,-1,1,1),(1,1,1,1,-1,-1,-1,-1)},{(-1,1,1,1,1,-1,-1,-1),(1,-1,1,1,-1,1,-1,-1),(1,1,-1,1,-1,-1,1,-1),(1,1,1,-1,-1,-1,-1,1)},{(1,-1,-1,-1,-1,1,1,1),(1,-1,1,1,-1,1,-1,-1),(1,1,-1,1,-1,-1,1,-1),(1,1,1,-1,-1,-1,-1,1)},{(1,-1,-1,1,-1,1,1,-1),(1,-1,1,-1,-1,1,-1,1),(1,1,-1,-1,-1,1,1),(1,1,1,1,-1,-1,-1,-1)}; ou

liste de codes 3 : {(-1,-1,-1,1,1,-1,1,1),(-1,-1,1,-1,-1,1,1,1),(-1,1,-1,-1,1,1,1,-1),(-1,1,1,1,-1,-1,1,-1),(-1,-1,1,1,1,1,-1,-1),(-1,1,1,-1,1,-1,-1,1)}, {(-1,-1,-1,1,1,-1,1,1),(-1,-1,1,-1,-1,1,1,1),(-1,1,-1,-1,1,1,1,-1),(-1,1,1,1,-1,-1,1,-1),(-1,-1,1,1,1,1,-1,-1),(1,-1,-1,1,-1,1,1,-1)}, {(-1,-1,-1,1,1,-1,1,1),(-1,-1,1,-1,-1,1,1,1),(-1,1,-1,-1,1,1,1,-1),(-1,1,1,1,-1,-1,1,-1),(-1,1,1,-1,1,-1,-1,1),(1,1,-1,-1,-1,-1,1,1)}, {(-1,-1,-1,1,1,-1,1,1),(-1,-1,1,-1,-1,1,1,1),(-1,1,-1,-1,1,1,1,-1),(-1,1,1,1,-1,-1,1,-1),(1,-1,-1,1,-1,1,1,-1),(1,1,-1,-1,-1,-1,1,1)}, {(-1,-1,-1,1,1,-1,1,1),(-1,-1,1,-1,-1,1,1,1),(-1,1,-1,-1,1,1,1,-1),(1,-1,-1,-1,1,1,-1,1),(-1,1,1,1,1,1,-1,-1),(-1,1,1,-1,1,-1,-1,1)}, {(-1,-1,-1,1,1,-1,1,1),(-1,-1,1,-1,-1,1,1,1),(-1,1,-1,-1,1,1,1,-1),(1,-1,-1,-1,1,1,-1,1),(-1,-1,1,1,1,1,-1,-1),(1,-1,-1,1,-1,1,1,-1)}, {(-

1,-1,-1,1,1,-1,1,1), (-1,-1,1,-1,-1,1,1,1), (-1,1,-1,-1,1,1,1,-1), (1,-1,-1,-1,1,1,-1,1), (-1,1,1,-1,1,-1,-1,1), (1,1,-1,-1,-1,-1,1,1) },    {(-1,-1,-1,1,1,-1,1,1), (-1,-1,1,-1,-1,1,1,1), (-1,1,-1,-1,1,1,1,-1), (1,-1,-1,-1,1,1,-1,1), (1,-1,-1,1,-1,1,1,-1), (1,1,-1,-1,-1,-1,1,1) },    {(-1,-1,-1,1,1,-1,1,1), (-1,-1,1,-1,-1,1,1,1), (-1,1,1,1,-1,-1,1,-1), (1,-1,1,1,-1,-1,-1,1), (-1,1,1,1,1,-1,-1,-1), (-1,1,1,-1,1,-1,-1,1) },       {(-1,-1,-1,1,1,-1,1,1), (-1,-1,1,-1,-1,1,1,1), (-1,1,1,1,-1,-1,1,-1), (1,-1,1,1,-1,-1,-1,1), (-1,-1,1,1,1,1,-1,-1), (1,-1,-1,1,-1,1,1,-1) },     {(-1,-1,-1,1,1,-1,1,1), (-1,-1,1,-1,-1,1,1,1), (-1,1,1,1,-1,-1,1,-1), (1,-1,1,1,-1,-1,-1,1), (-1,1,1,-1,1,-1,-1,1), (1,1,-1,-1,-1,-1,1,1) },          {(-1,-1,-1,1,1,-1,1,1), (-1,-1,1,-1,-1,1,1,1), (-1,1,1,1,-1,-1,1,-1), (1,-1,1,1,-1,-1,-1,1), (1,-1,-1,1,-1,1,1,-1), (1,1,-1,-1,-1,-1,1,1) },     {(-1,-1,-1,1,1,-1,1,1), (-1,-1,1,-1,-1,1,1,1), (1,-1,-1,-1,1,1,-1,1), (1,-1,1,1,-1,-1,-1,1), (-1,1,1,1,1,-1,-1,-1), (-1,1,1,-1,1,-1,-1,1) },          {(-1,-1,-1,1,1,-1,1,1), (-1,-1,1,-1,-1,1,1,1), (1,-1,-1,-1,1,1,-1,1), (1,-1,1,1,-1,-1,-1,1), (-1,-1,1,1,1,1,-1,-1), (1,-1,-1,1,-1,1,1,-1) },     {(-1,-1,-1,1,1,-1,1,1), (-1,-1,1,-1,-1,1,1,1), (1,-1,-1,-1,1,1,-1,1), (1,-1,1,1,-1,-1,-1,1), (-1,1,1,-1,1,-1,-1,1), (1,1,-1,-1,-1,-1,1,1) },    {(-1,-1,-1,1,1,-1,1,1), (-1,-1,1,-1,-1,1,1,1), (1,-1,-1,-1,1,1,-1,1), (1,-1,1,1,-1,-1,-1,1), (1,-1,-1,1,-1,1,1,-1), (1,1,-1,-1,-1,-1,1,1) },  {(-1,-1,-1,1,1,-1,1,1), (-1,-1,1,1,-1,1,1,-1), (-1,1,-1,-1,1,1,1,-1), (-1,1,1,-1,-1,-1,1,1), (-1,-1,1,-1,1,1,-1,1), (-1,1,1,1,1,-1,-1,-1) },          {(-1,-1,-1,1,1,-1,1,1), (-1,-1,1,1,-1,1,1,-1), (-1,1,-1,-1,1,1,1,-1), (-1,1,1,-1,-1,-1,1,1), (-1,-1,1,-1,1,1,-1,1), (1,-1,-1,-1,-1,1,1,1) },    {(-1,-1,-1,1,1,-1,1,1), (-1,-1,1,1,-1,1,1,-1), (-1,1,-1,-1,1,1,1,-1), (-1,1,1,1,1,-1,-1,-1), (1,1,-1,1,-1,-1,1,-1) },  {(-1,-1,-1,1,1,-1,1,1), (-1,-1,1,1,-1,1,1,-1), (-1,1,-1,-1,1,1,1,-1), (1,-1,-1,1,1,1,-1,-1), (-1,-1,1,-1,1,1,-1,1), (-1,1,1,1,1,-1,-1,-1) },       {(-1,-1,-1,1,1,-1,1,1), (-1,-1,

1,1,1,-1,1,1),(-1,-1,1,1,-1,1,1,-1),(-1,1,-1,-1,1,1,1,-1),(1,-1,-1,1,1,1,-1,-1),(-1,-1,1,-1,1,1,-1,1),(1,-1,-1,-1,-1,1,1,1)},       {(-1,-1,-1,1,1,-1,1,1),(-1,-1,1,1,-1,1,1,-1),(-1,1,-1,-1,1,1,1,-1),(1,-1,-1,1,1,1,-1,-1),(-1,1,1,1,1,-1,-1,-1),(1,1,-1,1,-1,-1,1,-1)},   {(-1,-1,-1,1,1,-1,1,1),(-1,-1,1,1,-1,1,1,-1),(-1,1,-1,-1,1,1,1,-1),(1,-1,-1,1,1,1,-1,-1),(1,-1,-1,-1,-1,1,1,1),(1,1,-1,1,-1,-1,1,-1)},       {(-1,-1,-1,1,1,-1,1,1),(-1,-1,1,1,-1,1,1,-1),(-1,1,1,-1,-1,-1,1,1),(1,-1,1,1,-1,-1,-1,1),(-1,-1,1,-1,1,1,-1,1),(-1,1,1,1,1,-1,-1,-1)},     {(-1,-1,-1,1,1,-1,1,1),(-1,-1,1,1,-1,1,1,-1),(-1,1,1,-1,-1,-1,1,1),(1,-1,1,1,-1,-1,-1,1),(-1,-1,1,-1,1,1,-1,1),(1,-1,-1,-1,-1,1,1,1)},    {(-1,-1,-1,1,1,-1,1,1),(-1,-1,1,1,-1,1,1,-1),(-1,1,1,-1,-1,-1,1,1),(1,-1,1,1,-1,-1,-1,1),(-1,1,1,1,1,-1,-1,-1),(1,1,-1,1,-1,-1,1,-1)},   {(-1,-1,-1,1,1,-1,1,1),(-1,-1,1,1,-1,1,1,-1),(-1,1,1,-1,-1,-1,1,1),(1,-1,1,1,-1,-1,-1,1),(1,-1,-1,-1,-1,1,1,1),(1,1,-1,1,-1,-1,1,-1)},       {(-1,-1,-1,1,1,-1,1,1),(-1,-1,1,1,-1,1,1,-1),(1,-1,-1,1,1,1,-1,-1),(1,-1,1,1,-1,-1,-1,1),(-1,-1,1,-1,1,1,-1,1),(-1,1,1,1,1,-1,-1,-1)},     {(-1,-1,-1,1,1,-1,1,1),(-1,-1,1,1,-1,1,1,-1),(1,-1,-1,1,1,1,-1,-1),(1,-1,1,1,-1,-1,-1,1),(-1,-1,1,-1,1,1,-1,1),(1,-1,-1,-1,-1,1,1,1)},     {(-1,-1,-1,1,1,-1,1,1),(-1,-1,1,1,-1,1,1,-1),(1,-1,-1,1,1,1,-1,-1),(1,-1,1,1,-1,-1,-1,1),(-1,1,1,1,1,-1,-1,-1),(1,1,-1,1,-1,-1,1,-1)},   {(-1,-1,-1,1,1,-1,1,1),(-1,1,-1,-1,1,1,1,-1),(-1,1,1,-1,-1,-1,1,1),(1,1,-1,-1,1,-1,-1,1),(-1,-1,1,-1,1,1,-1,1),(-1,1,1,1,1,-1,-1,-1)},   {(-1,-1,-1,1,1,-1,1,1),(-1,1,-1,-1,1,1,1,-1),(-1,1,1,-1,-1,-1,1,1),(1,1,-1,-1,1,-1,-1,1),(-1,-1,1,-1,1,1,-1,1),(1,-1,-1,-1,-1,1,1,1)},     {(-1,-1,-1,1,1,-1,1,1),(-1,1,-1,-1,1,1,1,-1),(-1,1,1,-1,-1,-1,1,1),(1,1,-1,-1,1,-1,-1,1),(1,-1,-1,-1,-1,1,1,1),(1,1,-1,1,-1,-1,1,-1)},       {(-1,-1,-1,1,1,-

**126**

1,1,1),(-1,1,-1,-1,1,1,1,-1),(-1,1,1,1,-1,-1,1,-1),(1,1,-1,1,1,-1,-1,-1),(-1,-1,1,1,1,1,-1,-1),(-1,1,1,-1,1,-1,-1,1)},
{(-1,-1,-1,1,1,-1,1,1),(-1,1,-1,-1,1,1,1,-1),(-1,1,1,1,-1,-1,1,-1),(1,1,-1,1,1,-1,-1,-1),(-1,-1,1,1,1,1,-1,-1),(1,-1,-1,1,-1,1,1,-1)},      {(-1,-1,-1,1,1,-1,1,1),(-1,1,-1,-1,1,1,1,-1),(-1,1,1,1,-1,-1,1,-1),(1,1,-1,1,1,-1,-1,-1),(-1,1,1,-1,1,-1,-1,1),(1,1,-1,-1,-1,-1,1,1)},  {(-1,-1,-1,1,1,-1,1,1),(-1,1,-1,-1,1,1,1,-1),(-1,1,1,1,-1,-1,1,-1),(1,1,-1,1,1,-1,-1,-1),(1,-1,-1,1,-1,1,1,-1),(1,1,-1,-1,-1,-1,1,1)},      {(-1,-1,-1,1,1,-1,1,1),(-1,1,-1,-1,1,1,1,-1),(1,-1,-1,-1,1,1,-1,1),(1,1,-1,1,1,-1,-1,-1),(-1,-1,1,1,1,1,-1,-1),(-1,1,1,-1,1,-1,-1,1)},       {(-1,-1,-1,1,1,-1,1,1),(-1,1,-1,-1,1,1,1,-1),(1,-1,-1,-1,1,1,-1,1),(1,1,-1,1,1,-1,-1,-1),(-1,1,1,1,1,-1,-1,-1),(1,-1,-1,1,-1,1,1,-1)},        {(-1,-1,-1,1,1,-1,1,1),(-1,1,-1,-1,1,1,1,-1),(1,-1,-1,-1,1,1,-1,1),(1,1,-1,1,1,-1,-1,-1),(-1,1,1,-1,1,-1,-1,1),(1,1,-1,-1,-1,-1,1,1)},
{(-1,-1,-1,1,1,-1,1,1),(-1,1,-1,-1,1,1,1,-1),(1,-1,-1,-1,1,1,-1,1),(1,1,-1,1,1,-1,-1,-1),(1,-1,-1,1,-1,1,1,-1),(1,1,-1,-1,-1,-1,1,1)},    {(-1,-1,-1,1,1,-1,1,1),(-1,1,-1,-1,1,1,1,-1),(1,-1,-1,1,1,1,-1,-1),(1,1,-1,-1,1,-1,-1,1),(-1,-1,1,-1,1,1,-1,1),(-1,1,1,1,1,-1,-1,-1)},  {(-1,-1,-1,1,1,-1,1,1),(-1,1,-1,-1,1,1,1,-1),(1,-1,-1,1,1,1,-1,-1),(1,1,-1,-1,1,-1,-1,1),(-1,-1,1,-1,1,1,-1,1),(1,-1,-1,-1,-1,1,1,1)},         {(-1,-1,-1,1,1,-1,1,1),(-1,1,-1,-1,1,1,1,-1),(1,-1,-1,1,1,1,-1,-1),(1,1,-1,1,1,-1,-1,1),(-1,1,1,1,1,-1,-1,-1),(1,1,-1,1,-1,-1,1,-1)},  {(-1,-1,-1,1,1,-1,1,1),(-1,1,-1,-1,1,1,1,-1),(1,-1,-1,1,1,1,-1,-1),(1,1,-1,-1,1,-1,-1,1),(1,-1,-1,-1,-1,1,1,1),(1,1,-1,1,-1,-1,1,-1)},  {(-1,-1,-1,1,1,-1,1,1),(-1,1,1,-1,-1,-1,1,1),(1,-1,1,1,-1,-1,-1,1),(1,1,-1,-1,1,-1,-1,1),(-1,-1,1,-1,1,1,-1,1),(-1,1,1,1,1,-1,-1,-1)},    {(-1,-1,-1,1,1,-1,1,1),(-1,1,1,-1,-1,-1,1,1),(1,-1,1,1,-1,-1,-1,1),(1,1,-1,-1,1,-1,-1,1),(-1,1,1,1,1,-1,-1,-1),(1,1,-1,1,-1,-1,1,-1)},        {(-1,-1,-1,1,1,-1,1,1),(-1,1,1,-1,-1,-1,1,1),(1,-1,1,1,-1,-1,-1,1),(1,1,-1,-1,1,-1,-1,1),(-1,1,1,1,1,-1,-1,-1),(1,1,-1,1,-1,-1,1,-1)},   {(-

1,-1,-1,1,1,-1,1,1), (-1,1,1,-1,-1,-1,1,1), (1,-1,1,1,-1,-1,-1,1,1), (1,1,-1,-1,1,-1,-1,1), (1,-1,-1,-1,-1,1,1,1), (1,1,-1,1,-1,-1,1,-1)}, {(-1,-1,-1,1,1,-1,1,1), (-1,1,1,1,-1,-1,1,-1), (1,-1,1,1,-1,-1,1,1), (1,1,-1,1,1,-1,-1,-1), (-1,-1,1,1,1,1,-1,-1), (-1,1,1,-1,1,-1,-1,1)}, {(-1,-1,-1,1,1,-1,1,1), (-1,1,1,1,-1,1,-1), (1,-1,1,1,-1,-1,-1,1), (1,1,-1,1,1,-1,-1,-1), (-1,-1,1,1,1,1,-1,-1), (1,-1,-1,1,-1,1,1,-1)}, {(-1,-1,-1,1,1,-1,1,1), (-1,1,1,1,-1,-1,1,-1), (1,-1,1,1,-1,-1,-1,1), (1,1,-1,1,1,-1,-1,-1), (-1,1,1,-1,1,-1,-1,1), (1,1,-1,-1,-1,-1,1,1)}, {(-1,-1,-1,1,1,-1,1,1), (-1,1,1,1,-1,-1,1,-1), (1,-1,1,1,-1,-1,-1,1), (1,1,-1,1,1,-1,-1,-1), (1,-1,-1,1,-1,1,1,-1), (1,1,-1,-1,-1,-1,1,1)}, {(-1,-1,-1,1,1,-1,1,1), (1,-1,-1,-1,1,1,-1,1), (1,-1,1,1,-1,-1,-1,1), (1,1,-1,1,1,-1,-1,-1), (-1,-1,1,1,1,1,-1,-1), (-1,1,1,-1,1,-1,-1,1)}, {(-1,-1,-1,1,1,-1,1,1), (1,-1,-1,-1,1,1,-1,1), (1,-1,1,1,-1,-1,-1,1), (1,1,-1,1,1,-1,-1,-1), (-1,-1,1,1,1,1,-1,-1), (1,-1,-1,1,-1,1,1,-1)}, {(-1,-1,-1,1,1,-1,1,1), (1,-1,-1,-1,1,1,-1,1), (1,-1,1,1,-1,-1,-1,1), (1,1,-1,1,1,-1,-1,-1), (-1,1,1,-1,1,-1,-1,1), (1,1,-1,-1,-1,-1,1,1)}, {(-1,-1,-1,1,1,-1,1,1), (1,-1,-1,-1,1,1,-1,1), (1,-1,1,1,-1,-1,-1,1), (1,1,-1,1,1,-1,-1,-1), (1,-1,-1,1,-1,1,1,-1), (1,1,-1,-1,-1,-1,1,1)}, {(-1,-1,-1,1,1,-1,1,1), (1,-1,-1,1,1,1,-1,-1), (1,-1,1,1,-1,-1,-1,1), (1,1,-1,-1,1,-1,-1,1), (-1,-1,1,-1,1,1,-1,1), (-1,1,1,1,1,-1,-1,-1)}, {(-1,-1,-1,1,1,-1,1,1), (1,-1,-1,1,1,1,-1,-1), (1,-1,1,1,-1,-1,-1,1), (1,1,-1,-1,1,-1,-1,1), (-1,-1,1,1,1,1,-1,-1), (1,1,-1,1,-1,-1,1,-1)}, {(-1,-1,-1,1,1,-1,1,1), (1,-1,-1,1,1,1,-1,-1), (1,-1,1,1,-1,-1,-1,1), (1,1,-1,-1,1,-1,-1,1), (1,-1,-1,-1,-1,1,1,1), (1,1,-1,1,-1,-1,1,-1)}, {(-1,-1,1,-1,-1,1,1,1), (-1,-1,1,1,1,-1,-1,1), (-1,1,1,-1,1,1,-1,-1), (-1,1,1,1,-1,-1,1,-1), (-1,-1,-1,1,1,1,1,-1), (-1,1,-1,-1,1,-1,1,1)}, {(-1,-1,1,-1,-1,1,1,1), (-1,1,1,1,1,-1,-1,1), (-1,1,1,-1,1,1,-1,-1), (-1,1,1,1,-1,-1,1,-1), (-1,-1,-1,1,1,1,1,-1), (1,-1,1,1,-1,1,-1,-1)}, {(-1,-1,1,-

1,-1,1,1,1),(-1,-1,1,1,1,-1,-1,1),(-1,1,1,-1,1,1,-1,-1),(-1,1,1,1,-1,-1,1,-1),(-1,1,-1,-1,1,-1,1,1),(1,1,1,-1,-1,-1,-1,1)},     {(-1,-1,1,-1,-1,1,1,1),(-1,-1,1,1,1,-1,-1,1),(-1,1,1,-1,1,1,-1,-1),(-1,1,1,1,-1,-1,1,-1),(1,-1,1,1,-1,1,-1,-1),(1,1,1,-1,-1,-1,-1,1)},         {(-1,-1,1,-1,-1,1,1,1),(-1,1,1,1,1,-1,-1,1),(-1,1,1,-1,1,1,-1,-1),(1,-1,-1,-1,1,1,-1,1),(-1,-1,-1,1,1,1,1,-1),(-1,1,-1,-1,1,-1,1,1)},   {(-1,-1,1,-1,-1,1,1,1),(-1,-1,1,1,1,-1,-1,1),(-1,1,1,-1,1,1,-1,-1),(1,-1,-1,-1,1,1,-1,1),(-1,-1,-1,1,1,1,1,-1),(1,-1,1,1,-1,1,-1,-1)},      {(-1,-1,1,-1,-1,1,1,1),(-1,-1,1,1,1,-1,-1,1),(-1,1,1,-1,1,1,-1,-1),(1,-1,-1,-1,1,1,-1,1),(-1,1,-1,-1,1,-1,1,1),(1,1,1,-1,-1,-1,-1,1)},       {(-1,-1,1,-1,-1,1,1,1),(-1,-1,1,1,1,-1,-1,1),(-1,1,1,-1,1,1,-1,-1),(1,-1,-1,-1,1,1,-1,1),(1,-1,1,1,-1,1,-1,-1),(1,1,1,-1,-1,-1,-1,1)},   {(-1,-1,1,-1,-1,1,1,1),(-1,-1,1,1,1,-1,-1,1),(-1,1,1,1,-1,-1,1,-1),(1,-1,-1,1,-1,-1,1,1),(-1,-1,-1,1,1,1,1,-1),(-1,1,-1,-1,1,-1,1,1)},         {(-1,-1,1,-1,-1,1,1,1),(-1,-1,1,1,1,-1,-1,1),(-1,1,1,1,-1,-1,1,-1),(1,-1,-1,1,-1,-1,1,1),(-1,-1,-1,1,1,1,1,-1),(1,-1,1,1,-1,1,-1,-1)},          {(-1,-1,1,-1,-1,1,1,1),(-1,-1,1,1,1,-1,-1,1),(-1,1,1,1,-1,-1,1,-1),(1,-1,-1,1,-1,-1,1,1),(-1,1,-1,-1,1,-1,1,1),(1,1,1,-1,-1,-1,-1,1)},        {(-1,-1,1,-1,-1,1,1,1),(-1,-1,1,1,1,-1,-1,1),(1,-1,-1,1,-1,-1,1,1),(1,-1,-1,1,-1,-1,1,1),(-1,-1,-1,1,1,1,1,-1),(1,-1,1,1,-1,1,-1,-1)},      {(-1,-1,1,-1,-1,1,1,1),(-1,-1,1,1,1,-1,-1,1),(1,-1,-1,-1,1,1,-1,1),(1,-1,-1,1,-1,-1,1,1),(-1,-1,-1,1,1,1,1,-1),(1,-1,1,1,-1,1,-1,-1)},         {(-1,-1,1,-1,-1,1,1,1),(-1,-1,1,1,1,-1,-1,1),(1,-1,-1,-1,1,1,-1,1),(1,-1,-1,1,-1,-1,1,1),(-1,-1,-1,1,1,1,1,-1),(1,1,1,-1,-1,-1,-1,1)},       {(-1,-1,1,-1,-1,1,1,1),(-1,-1,1,1,1,-1,-1,1),(1,-1,-1,-1,1,1,-1,1),(1,-1,-1,1,-1,-1,1,1),(-1,-1,-1,1,1,1,1,-1),(1,-1,1,1,-1,1,-1,-1)},      {(-1,-1,1,-1,-1,1,1,1),(-1,-1,1,1,1,-1,-1,1),(-1,1,1,1,1,-1,-1,1),(1,-1,-1,-1,1,1,-1,1),(1,-1,1,1,-1,1,-1,-1),(1,1,1,-1,-1,-1,-1,1)},                {(-1,-1,1,-1,-1,1,1,1),(-1,-1,1,1,1,-1,-1,1),(1,-1,-1,-1,1,1,-1,1),(1,-1,-1,1,-1,-1,1,1),(-1,1,-1,-1,1,-1,1,1),(1,1,1,-1,-1,-1,-1,1)},
{(-1,-1,1,-1,-1,1,1,1),(-1,-1,1,1,1,-1,-1,1),(1,-1,-1,-1,1,1,-1,1),(1,-1,-1,1,-1,-1,1,1),(1,-1,1,1,-1,1,-1,-1),(1,1,1,-1,-1,-1,-1,1)},     {(-1,-1,1,-1,-1,1,1,1),(-1,1,-1,-1,1,1,1,-1),(-1,1,1,1,-1,-1,1,-1),(1,1,1,-1,-1,1,-1,-1),(-1,-1,1,1,1,1,-1,-

1),(-1,1,1,-1,1,-1,-1,1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(-1,-1,1,1,1,1,-1,-1),(1,-1,-1,1,-1,1,1,-1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(-1,1,1,-1,1,-1,-1,1),(1,1,-1,-1,-1,-1,1,1)}, {(-1,-1,1,-1,-1,1,1,1),(-1,1,-1,-1,1,1,1,-1),(-1,1,1,1,-1,-1,1,-1),(1,1,1,-1,-1,1,-1,-1),(1,-1,-1,1,-1,1,1,-1),(1,1,-1,-1,-1,1,1)}, {(-1,-1,1,-1,-1,1,1,1),(-1,1,-1,-1,1,1,1,-1),(1,-1,-1,-1,1,1,-1,1),(1,1,1,-1,-1,1,-1,-1),(-1,-1,1,1,1,1,-1,-1),(-1,1,1,-1,1,-1,-1,1)}, {(-1,-1,1,-1,-1,1,1,1),(-1,1,-1,-1,1,1,1,-1),(1,-1,-1,-1,1,1,-1,1),(1,1,1,-1,-1,1,-1,-1),(-1,-1,1,1,1,1,-1,-1),(1,-1,-1,1,-1,1,1,-1)}, {(-1,-1,1,-1,-1,1,1,1),(-1,1,-1,-1,1,1,1,-1),(1,-1,-1,-1,1,1,-1,1),(1,1,1,-1,-1,1,-1,-1),(-1,1,1,-1,1,-1,-1,1),(1,1,-1,-1,-1,1,1)}, {(-1,-1,1,-1,-1,1,1,1),(-1,1,-1,-1,1,1,1,-1),(1,-1,-1,-1,1,1,-1,1),(1,1,1,-1,-1,1,-1,-1),(1,-1,-1,1,-1,1,1,-1),(1,1,-1,-1,-1,-1,1,1)}, {(-1,-1,1,-1,-1,1,1,1),(-1,1,1,-1,1,1,-1,-1),(-1,1,1,1,-1,-1,1,-1),(1,1,-1,-1,-1,1,1,-1),(-1,-1,1,1,1,1,1,-1),(-1,1,-1,-1,1,-1,1,1)}, {(-1,-1,1,-1,-1,1,1,1),(-1,1,1,-1,1,1,-1,-1),(-1,1,1,1,-1,-1,1,-1),(1,1,-1,-1,-1,1,1,-1),(-1,-1,-1,1,1,1,1,-1),(1,-1,1,1,-1,1,-1,-1)}, {(-1,-1,1,-1,-1,1,1,1),(-1,1,1,-1,1,1,-1,-1),(-1,1,1,1,-1,-1,1,-1),(1,1,-1,-1,-1,1,1,-1),(-1,1,-1,-1,1,-1,1,1),(1,1,1,-1,-1,-1,-1,1)}, {(-1,-1,1,-1,-1,1,1,1),(-1,1,1,-1,1,1,-1,-1),(-1,1,1,1,-1,-1,1,-1),(1,1,-1,-1,-1,1,1,-1),(1,-1,1,1,-1,1,-1,-1),(-1,-1,-1,1,1,1,1,-1)}, {(-1,-1,1,-1,-1,1,1,1),(-1,1,1,-1,1,1,-1,-1),(1,-1,-1,-1,1,1,-1,1),(1,1,-1,-1,-1,1,1,-1),(-1,1,-1,-1,1,-1,1,1),(1,1,1,-1,-1,-1,-1,1)}, {(-1,-1,1,-1,-1,1,1,1),(-1,1,1,-1,1,1,-1,-1),(1,-1,-1,-1,1,1,-1,1),(1,1,-1,-1,-1,1,1,-1),(-1,1,1,1,-1,1,-1,-1),(1,-1,1,1,-1,1,-1,-

1),(1,1,1,-1,-1,-1,-1,1)}, {(-1,-1,1,-1,-1,1,1,1),(-1,1,1,1,-1,-1,1,-1),(1,-1,-1,1,-1,-1,1,1),(1,1,-1,-1,-1,1,1,-1),(-1,-1,-1,1,1,1,1,-1),(-1,1,-1,-1,1,-1,1,1)}, {(-1,-1,1,-1,-1,1,1,1),(-1,1,1,1,-1,-1,1,-1),(1,-1,-1,1,-1,-1,1,1),(1,1,-1,-1,-1,1,1,-1),(-1,-1,-1,1,1,1,1,-1),(1,-1,1,1,-1,1,-1,-1)}, {(-1,-1,1,-1,-1,1,1,1),(-1,1,1,1,-1,-1,1,-1),(1,-1,-1,1,-1,-1,1,1),(1,1,-1,-1,-1,1,1,-1),(-1,1,-1,-1,1,-1,1,1),(1,1,1,-1,-1,-1,-1,1)}, {(-1,-1,1,-1,-1,1,1,1),(-1,1,1,1,-1,-1,1,-1),(1,-1,-1,1,-1,-1,1,1),(1,1,-1,-1,-1,1,1,-1),(1,-1,1,1,-1,1,-1,-1),(1,1,1,-1,-1,-1,-1,1)}, {(-1,-1,1,-1,-1,1,1,1),(-1,1,1,1,-1,-1,1,-1),(1,-1,1,1,-1,-1,-1,1),(1,1,1,-1,-1,1,-1,-1),(-1,-1,1,1,1,1,-1,-1),(-1,1,1,-1,1,-1,-1,1)}, {(-1,-1,1,-1,-1,1,1,1),(-1,1,1,1,-1,-1,1,-1),(1,-1,1,1,-1,-1,-1,1),(1,1,1,-1,-1,1,-1,-1),(-1,-1,1,1,1,1,-1,-1),(1,-1,-1,1,-1,1,1,-1)}, {(-1,-1,1,-1,-1,1,1,1),(-1,1,1,1,-1,-1,1,-1),(1,-1,1,1,-1,-1,-1,1),(1,1,1,-1,-1,1,-1,-1),(-1,1,1,-1,1,-1,-1,1),(1,1,-1,-1,-1,-1,1,1)}, {(-1,-1,1,-1,-1,1,1,1),(1,-1,-1,1,1,1,-1,1),(1,-1,-1,1,-1,-1,1,1),(1,1,-1,-1,-1,1,1,-1),(-1,-1,1,1,1,1,-1,-1),(-1,1,-1,-1,1,-1,1,1)}, {(-1,-1,1,-1,-1,1,1,1),(1,-1,-1,-1,1,1,-1,1),(1,-1,-1,1,-1,-1,1,1),(1,1,-1,-1,-1,1,1,-1),(-1,-1,-1,1,1,1,1,-1),(1,-1,1,1,-1,1,-1,-1)}, {(-1,-1,1,-1,-1,1,1,1),(1,-1,-1,-1,1,1,-1,1),(1,-1,-1,1,-1,1,1,-1),(1,1,-1,-1,-1,1,1,-1),(-1,1,-1,-1,1,-1,1,1),(1,1,1,-1,-1,-1,-1,1)}, {(-1,-1,1,-1,-1,1,1,1),(1,-1,-1,-1,1,1,-1,1),(1,-1,1,1,-1,-1,1,1),(1,1,-1,-1,-1,1,1,-1),(1,-1,1,1,-1,1,-1,-1),(1,1,1,-1,-1,-1,-1,1)}, {(-1,-1,1,-1,-1,1,1,1),(1,-1,-1,-1,1,1,-1,1),(1,-1,1,1,-1,-1,-1,1),(1,1,1,-1,-1,1,-1,-1),(-1,-1,1,1,1,1,-1,-1),(-1,1,1,-1,1,-1,-1,1)}, {(-1,-1,1,-1,-1,1,1,1),(1,-1,-1,-1,1,1,-1,1),(1,-1,1,1,-1,-1,-1,1),(1,1,1,-1,-1,1,-1,-1),(-1,-1,1,1,1,1,-1,-1),(1,-1,-1,1,-1,1,1,-1)}, {(-1,-1,1,-1,-1,1,1,1),(1,-1,-1,-1,1,1,-1,1),(1,-1,1,1,-1,-1,-1,1),(1,1,1,-1,-1,1,-1,-1),(-1,1,1,-1,1,-1,-1,1),(1,1,-1,-1,-

1,-1,1,1)}, {(-1,-1,1,-1,-1,1,1,1),(1,-1,-1,-1,1,1,-1,1),(1,-1,1,1,-1,-1,-1,1),(1,1,1,-1,-1,1,-1,-1),(1,-1,-1,1,-1,1,1,-1),(1,1,-1,-1,-1,-1,1,1)}, {(-1,-1,1,1,-1,1,1,-1),(-1,-1,1,1,1,-1,-1,1),(-1,1,1,-1,-1,-1,1,1),(-1,1,1,-1,1,1,-1,-1),(-1,-1,-1,-1,1,1,1,1),(-1,1,-1,1,1,-1,1,-1)}, {(-1,-1,1,1,-1,1,1,-1),(-1,-1,1,1,1,-1,-1,1),(-1,1,1,-1,-1,-1,1,1),(-1,1,1,-1,1,1,-1,-1),(-1,-1,-1,-1,1,1,1,1),(1,-1,1,-1,-1,1,-1,1)}, {(-1,-1,1,1,-1,1,1,-1),(-1,-1,1,1,1,-1,-1,1),(-1,1,1,-1,-1,1,1),(-1,1,1,-1,1,1,-1,-1),(-1,1,-1,1,1,-1,1,-1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(-1,1,1,-1,1,1,-1,-1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(-1,-1,-1,-1,1,1,1,1),(-1,1,-1,1,1,-1,1,-1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(-1,1,-1,1,1,-1,1,-1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(1,-1,-1,1,-1,-1,1,1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(-1,1,1,-1,-1,-1,1,1),(1,-1,-1,1,-1,1,1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(-1,1,1,-1,1,1,-1,-1),(1,-1,-1,1,1,1,-1,-1),(-1,-1,-1,-1,1,1,1,1),(-1,1,-1,1,1,-1,1,-1)}, {(-1,-1,1,1,-1,1,1,-1),(-1,-1,1,1,1,-1,-1,1),(-1,1,1,-1,1,1,-1,-1),(1,-1,-1,1,1,1,-1,-1),(-1,-1,-1,-1,1,1,1,1),(1,-1,1,-1,-1,1,-1,1)}, {(-1,-1,1,1,-1,1,1,-1),(-1,-1,1,1,1,-1,-1,1),(-1,1,1,-1,1,1,-1,-1),(1,-1,-1,1,1,1,-1,-1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(-1,1,1,-1,1,1,-1,-1),(1,-1,-1,1,1,1,-1,-1),(1,-1,1,-1,-1,1,-1,1),(1,1,1,1,-1,-1,-1,-1)}, {(-1,-1,1,1,-1,1,1,-1),(-1,-1,1,1,1,-1,-1,1),(1,-1,-1,1,-1,-1,1,1),(1,-1,-1,1,1,1,-1,-1),(-1,-1,-1,-1,1,1,1,1),(-1,1,-1,1,1,-1,1,-1)}, {(-1,-1,1,1,-1,1,1,-1),(-1,-1,1,1,1,-1,-1,

1,1,1,1,1),(1,-1,1,-1,-1,1,-1,1)}, {(-1,-1,1,1,-1,1,1,-1),(-1,-1,1,1,1,-1,-1,1),(1,-1,-1,1,-1,-1,1,1),(1,-1,-1,1,1,1,-1,-1),(-1,1,-1,1,1,-1,1,-1),(1,1,1,1,-1,-1,-1,-1)}, {(-1,-1,1,1,-1,1,1,-1),(-1,-1,1,1,1,-1,-1,1),(1,-1,-1,1,-1,-1,1,1),(1,-1,-1,1,1,1,-1,-1),(1,-1,1,-1,-1,1,-1,1),(1,1,1,1,-1,-1,-1,-1)}, {(-1,-1,1,1,-1,1,1,-1),(-1,1,-1,-1,1,1,1,-1),(-1,1,1,-1,-1,-1,1,1),(1,1,1,-1,-1,1,-1,-1),(-1,-1,1,-1,1,1,-1,1),(-1,1,1,1,1,-1,-1,-1)}, {(-1,-1,1,1,-1,1,1,-1),(-1,1,-1,-1,1,1,1,-1),(-1,1,1,-1,-1,-1,1,1),(1,1,1,-1,-1,1,-1,-1),(-1,-1,1,-1,1,1,-1,1),(1,-1,-1,-1,-1,1,1,1)}, {(-1,-1,1,1,-1,1,1,-1),(-1,1,-1,-1,1,1,1,-1),(-1,1,1,-1,-1,-1,1,1),(1,1,1,-1,-1,1,-1,-1),(-1,1,1,1,1,-1,-1,-1),(1,-1,-1,1,-1,-1,1,-1)}, {(-1,-1,1,1,-1,1,1,-1),(-1,1,-1,-1,1,1,1,-1),(-1,1,1,-1,-1,-1,1,1),(1,1,1,-1,-1,1,-1,-1),(1,-1,-1,-1,-1,1,1,1),(1,1,-1,1,-1,-1,1,-1)}, {(-1,-1,1,1,-1,1,1,-1),(-1,1,-1,-1,1,1,1,-1),(1,-1,-1,1,1,1,-1,-1),(1,1,1,-1,-1,1,-1,-1),(-1,-1,1,-1,1,1,-1,1),(-1,1,1,1,1,-1,-1,-1)}, {(-1,-1,1,1,-1,1,1,-1),(-1,1,-1,-1,1,1,1,-1),(1,-1,-1,1,1,1,-1,-1),(1,1,1,-1,-1,1,-1,-1),(-1,1,1,1,1,-1,-1,-1),(1,-1,-1,-1,-1,1,1,1)}, {(-1,-1,1,1,-1,1,1,-1),(-1,1,-1,-1,1,1,1,-1),(1,-1,-1,1,1,1,-1,-1),(1,1,1,-1,-1,1,-1,-1),(-1,1,1,1,1,-1,-1,-1),(1,1,-1,1,-1,-1,1,-1)}, {(-1,-1,1,1,-1,1,1,-1),(-1,1,1,-1,-1,-1,1,1),(-1,1,1,-1,1,1,-1,-1),(1,1,-1,-1,-1,1,1,-1),(-1,-1,-1,-1,1,1,1,1),(-1,1,-1,1,1,-1,1,-1)}, {(-1,-1,1,1,-1,1,1,-1),(-1,1,1,-1,-1,-1,1,1),(-1,1,1,-1,1,1,-1,-1),(1,1,-1,-1,-1,1,1,-1),(-1,-1,-1,-1,1,1,1,1),(1,-1,1,-1,-1,1,-1,1)}, {(-1,-1,1,1,-1,1,1,-1),(-1,1,1,-1,-1,-1,1,1),(-1,1,1,-1,1,1,-1,-1),(1,1,-1,-1,-1,1,1,-1),(1,-1,1,-1,-1,1,-1,1),(1,1,1,1,-1,-1,-1,-1)}, {(-1,-1,1,1,-1,1,1,-1),(-1,1,1,-1,-1,-1,1,1),(-1,1,1,-1,1,1,-1,-1),(1,1,-1,-1,-1,1,1,-1),(1,-1,-1,1,1,-1,1,-1),(1,1,1,1,-1,-1,-1,-1)}, {(-1,-1,1,1,-1,1,1,-1),(-1,1,1,-1,-1,-1,1,1),(1,-1,-1,1,-1,-1,1,1),(1,1,1,1,-1,-1,-1,-1),(-1,1,-1,1,1,-1,1,-1),(1,1,1,1,-

1,1,1,1,1),(-1,1,-1,1,1,-1,1,-1)}, {(-1,-1,1,1,-1,1,1,-1),(-1,1,1,-1,-1,-1,1,1),(1,-1,-1,1,-1,-1,1,1),(1,1,-1,-1,-1,1,1,-1),(-1,-1,-1,-1,1,1,1,1),(1,-1,1,-1,-1,1,-1,1)}, {(-1,-1,1,1,-1,1,1,-1),(-1,1,1,-1,-1,-1,1,1),(1,-1,-1,1,-1,-1,1,1),(1,1,-1,-1,-1,1,1,-1),(-1,1,-1,1,1,-1,1,-1),(1,1,1,1,-1,-1,-1,-1)}, {(-1,-1,1,1,-1,1,1,-1),(-1,1,1,-1,-1,-1,1,1),(1,-1,-1,1,-1,-1,1,1),(1,1,-1,-1,-1,1,1,-1),(1,-1,1,-1,-1,1,-1,1),(1,1,1,1,-1,-1,-1,-1)}, {(-1,-1,1,1,-1,1,1,-1),(-1,1,1,-1,-1,-1,1,1),(1,-1,1,1,-1,-1,-1,1),(1,1,1,-1,-1,1,-1,-1),(-1,-1,1,-1,1,1,-1,1),(-1,1,1,1,1,-1,-1,-1)}, {(-1,-1,1,1,-1,1,1,-1),(-1,1,1,-1,-1,-1,1,1),(1,-1,1,1,-1,-1,-1,1),(1,1,1,-1,-1,1,-1,-1),(-1,-1,1,-1,1,1,-1,1),(1,-1,-1,-1,-1,1,1,1)}, {(-1,-1,1,1,-1,1,1,-1),(-1,1,1,-1,-1,-1,1,1),(1,-1,1,1,-1,-1,-1,1),(1,1,1,-1,1,-1,-1,-1),(-1,1,1,1,1,-1,-1,-1),(1,1,-1,1,-1,-1,1,-1)}, {(-1,-1,1,1,-1,1,1,-1),(-1,1,1,-1,-1,-1,1,1),(1,-1,1,1,-1,-1,-1,1),(1,1,1,-1,-1,1,-1,-1),(1,-1,-1,-1,-1,1,1,1),(1,1,-1,1,-1,-1,1,-1)}, {(-1,-1,1,1,-1,1,1,-1),(-1,1,1,-1,1,1,-1,-1),(1,-1,-1,1,1,1,-1,-1),(1,1,-1,-1,-1,1,1,-1),(-1,-1,-1,-1,1,1,1,1),(-1,1,-1,1,1,-1,1,-1)}, {(-1,-1,1,1,-1,1,1,-1),(-1,1,1,-1,1,1,-1,-1),(1,-1,-1,1,1,1,-1,-1),(1,1,-1,-1,-1,1,1,-1),(-1,-1,-1,-1,1,1,1,1),(1,-1,1,-1,-1,1,-1,1)}, {(-1,-1,1,1,-1,1,1,-1),(-1,1,1,-1,1,1,-1,-1),(1,-1,-1,1,1,1,-1,-1),(1,1,-1,-1,-1,1,1,-1),(-1,1,-1,1,1,-1,1,-1),(1,1,1,1,-1,-1,-1,-1)}, {(-1,-1,1,1,-1,1,1,-1),(-1,1,1,-1,1,1,-1,-1),(1,-1,-1,1,1,1,-1,-1),(1,1,-1,-1,-1,1,1,-1),(-1,-1,-1,-1,1,1,1,1),(-1,1,-1,1,1,-1,1,-1)}, {(-1,-1,1,1,-1,1,1,-1),(1,-1,-1,1,-1,-1,1,1),(1,-1,-1,1,1,1,-1,-1),(1,1,-1,-1,-1,1,1,-1),(-1,-1,-1,-1,1,1,1,1),(-1,1,-1,1,1,-1,1,-1)}, {(-1,-1,1,1,-1,1,1,-1),(1,-1,-1,1,-1,-1,1,1),(1,-1,-1,1,1,1,-1,-1),(1,1,-1,-1,-1,1,1,-1),(-1,-1,-1,-1,1,1,1,1),(1,-1,1,-1,-1,1,-1,1)}, {(-1,-1,1,1,-1,1,1,-1),(1,-1,-1,1,-1,-1,1,1),(1,-1,-1,1,1,1,-1,-1),(1,1,-1,-1,-1,1,1,-1),(-1,1,-1,1,1,-1,1,-1),(1,1,1,1,-1,-1,-1,-1)}, {(-1,-1,1,1,-1,1,1,-1),(-1,1,1,-1,-1,-1,1,1),(1,-1,-1,1,1,1,-1,-1),(1,1,-1,-1,-1,1,1,-1),(1,-1,1,-1,-1,1,-1,1),(1,1,1,1,-1,-1,-1,-1)}, {(-1,-1,1,1,-1,1,1,-1),(-1,1,1,-1,1,1,-1,-1),(1,-1,-1,1,1,1,-1,-1),(1,1,-1,-1,-1,1,1,-1),(-1,-1,-1,-1,1,1,1,1),(1,-1,1,-1,-1,1,-1,1)}, {(-1,-1,1,1,-1,1,1,-1),(1,-1,-1,1,-1,-1,1,1),(1,-1,-1,1,1,1,-1,-1),(1,1,-1,-1,-1,1,1,-1),(1,-1,1,-1,-1,1,-1,1),(1,1,1,1,-1,-1,-1,-1)}, {(-1,-1,1,1,-1,1,1,-1),(1,-1,-1,1,-1,-1,1,1),(1,-1,-1,1,1,1,-1,-1),(1,1,-1,-1,-1,1,1,-1),(1,-1,1,-1,-1,1,-1,1),(1,1,1,1,-1,-1,-1,-1)}, {(-1,-1,1,1,-1,1,1,-1),(1,-1,-1,1,-1,-1,1,1),(1,-1,-1,1,1,1,-1,-1),(1,1,-1,-1,-1,1,1,-1),(1,-1,1,-1,-1,1,-1,1),(1,1,1,1,-1,-1,-1,-1)}

1,-1,-1,-1)}, {(-1,-1,1,1,-1,1,1,-1),(1,-1,-1,1,1,1,-1,-1),(1,-1,1,1,-1,-1,-1,1),(1,1,1,-1,-1,1,-1,-1),(-1,-1,1,-1,1,1,-1,1),(-1,1,1,1,1,-1,-1,-1)}, {(-1,-1,1,1,-1,1,1,-1),(1,-1,-1,1,1,1,-1,-1),(1,-1,1,1,-1,-1,-1,1),(1,1,1,-1,-1,1,-1,-1),(-1,-1,1,-1,1,1,-1,1),(1,-1,-1,-1,-1,1,1,1)}, {(-1,-1,1,1,-1,1,1,-1),(1,-1,-1,1,1,1,-1,-1),(1,-1,1,1,-1,-1,-1,1),(1,1,1,-1,-1,1,-1,-1),(-1,1,1,1,1,-1,-1,-1),(1,1,-1,1,-1,-1,1,-1)}, {(-1,-1,1,1,-1,1,1,-1),(1,-1,-1,1,1,1,-1,-1),(1,-1,1,1,-1,-1,-1,1),(1,1,1,-1,-1,1,-1,-1),(1,-1,-1,-1,-1,1,1,1),(1,1,-1,1,-1,-1,1,-1)}, {(-1,-1,1,1,1,-1,-1,1),(-1,1,1,-1,-1,-1,1,1),(-1,1,1,-1,1,1,-1,-1),(1,1,-1,-1,1,-1,-1,1),(-1,-1,-1,-1,1,1,1,1),(-1,1,-1,1,1,-1,1,-1)}, {(-1,-1,1,1,1,-1,-1,1),(-1,1,1,-1,-1,-1,1,1),(-1,1,1,-1,1,1,-1,-1),(1,1,-1,-1,1,-1,-1,1),(-1,-1,-1,-1,1,1,1,1),(1,-1,1,-1,-1,1,-1,1)}, {(-1,-1,1,1,1,-1,-1,1),(-1,1,1,-1,-1,-1,1,1),(-1,1,1,-1,1,1,-1,-1),(1,1,-1,-1,1,-1,-1,1),(-1,1,-1,1,1,-1,1,-1),(1,1,1,1,-1,-1,-1,-1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(1,-1,1,-1,1,-1,-1,1),(1,1,1,1,-1,-1,-1,-1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(-1,-1,-1,-1,1,1,1,1),(-1,1,-1,1,1,-1,1,-1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(-1,-1,-1,-1,1,1,1,1),(1,-1,1,-1,-1,1,-1,1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(-1,1,-1,1,1,-1,1,-1),(1,1,1,1,-1,-1,-1,-1)}, {(-1,-1,1,1,1,-1,-1,1),(-1,1,1,-1,-1,-1,1,1),(1,-1,-1,1,-1,-1,1,1),(1,1,-1,-1,1,-1,-1,1),(1,-1,1,-1,-1,1,-1,1),(1,1,1,1,-1,-1,-1,-1)}, {(-1,-1,1,1,1,-1,-1,1),(-1,1,1,-1,1,1,-1,-1),(-1,1,1,1,-1,-1,1,-1),(1,1,-1,1,1,-1,-1,-1),(-1,-1,-1,1,1,1,1,-1),(-1,1,-1,-1,1,-1,1,1)}, {(-1,-1,1,1,1,-1,-1,1),(-1,1,1,-1,1,1,-1,-1),(-1,1,1,1,-1,-1,1,-1),(1,1,-1,1,1,-1,-1,-1),(-1,-1,-1,1,1,1,1,-1),(1,-1,1,1,-1,1,-1,-1)}, {(-1,-1,1,1,1,-1,-1,1),(-1,1,1,-1,1,1,-1,-1),(-1,1,1,1,-1,-1,1,-1),(1,1,-1,1,1,-1,-1,-1),(-

1,1,-1,-1,1,-1,1,1),(1,1,1,-1,-1,-1,-1,1)},  {(-1,-1,1,1,1,-1,-
1,1),(-1,1,1,-1,1,1,-1,-1),(-1,1,1,1,-1,-1,1,-1),(1,1,-1,1,1,-
1,-1,-1),(1,-1,1,1,-1,1,-1,-1),(1,1,1,-1,-1,-1,-1,1)},   {(-1,-
1,1,1,1,-1,-1,1),(-1,1,1,-1,1,1,-1,-1),(1,-1,-1,-1,1,1,-
1,1),(1,1,-1,1,1,-1,-1,-1),(-1,-1,-1,1,1,1,1,-1),(-1,1,-1,-
1,1,-1,1,1)},          {(-1,-1,1,1,1,-1,-1,1),(-1,1,1,-1,1,1,-1,-
1),(1,-1,-1,-1,1,1,-1,1),(1,1,-1,1,1,-1,-1,-1),(-1,-1,-
1,1,1,1,1,-1),(1,-1,1,1,-1,1,-1,-1)},          {(-1,-1,1,1,1,-1,-
1,1),(-1,1,1,-1,1,1,-1,-1),(1,-1,-1,-1,1,1,-1,1),(1,1,-1,1,1,-
1,-1,-1),(-1,1,-1,-1,1,-1,1,1),(1,1,1,-1,-1,-1,-1,1)},   {(-1,-
1,1,1,1,-1,-1,1),(-1,1,1,-1,1,1,-1,-1),(1,-1,-1,-1,1,1,-
1,1),(1,1,-1,1,1,-1,-1,-1),(1,-1,1,1,-1,1,-1,-1),(1,1,1,-1,-
1,-1,-1,1)},   {(-1,-1,1,1,1,-1,-1,1),(-1,1,1,-1,1,1,-1,-1),(1,-
1,-1,1,1,1,-1,-1),(1,1,-1,-1,1,-1,-1,1),(-1,-1,-1,-
1,1,1,1,1),(-1,1,-1,1,1,-1,1,-1)},     {(-1,-1,1,1,1,-1,-1,1),(-
1,1,1,-1,1,1,-1,-1),(1,-1,-1,1,1,1,-1,-1),(1,1,-1,-1,1,-1,-
1,1),(-1,-1,-1,-1,1,1,1,1),(1,-1,1,-1,-1,1,-1,1)},          {(-1,-
1,1,1,1,-1,-1,1),(-1,1,1,-1,1,1,-1,-1),(1,-1,-1,1,1,1,-1,-
1),(1,1,-1,-1,1,-1,-1,1),(-1,1,-1,1,1,-1,1,-1),(1,1,1,1,-1,-
1,-1,-1)},     {(-1,-1,1,1,1,-1,-1,1),(-1,1,1,-1,1,1,-1,-1),(1,-
1,-1,1,1,1,-1,-1),(1,1,-1,-1,1,-1,-1,1),(1,-1,1,-1,-1,1,-
1,1),(1,1,1,1,-1,-1,-1,-1)},          {(-1,-1,1,1,1,-1,-1,1),(-
1,1,1,1,-1,-1,1,-1),(1,-1,-1,1,-1,-1,1,1),(1,1,-1,1,1,-1,-1,-
1),(-1,-1,-1,1,1,1,1,-1),(-1,1,-1,-1,1,-1,1,1)},          {(-1,-
1,1,1,1,-1,-1,1),(-1,1,1,1,-1,-1,1,-1),(1,-1,-1,1,-1,-1,1,1),(1,1,-1,1,1,-1,-1,-
1),(-1,-1,-1,1,1,1,1,-1),(1,-1,1,1,-1,1,-1,-1)},   {(-1,-1,1,1,1,-1,-1,1),(-1,1,1,1,-1,-1,1,-1),(1,-
1,-1,1,-1,-1,1,1),(1,1,-1,1,1,-1,-1,-1),(-1,1,-1,-1,1,-
1,1,1),(1,1,1,-1,-1,-1,-1,1)},          {(-1,-1,1,1,1,-1,-1,1),(-
1,1,1,1,-1,-1,1,-1),(1,-1,-1,1,-1,-1,1,1),(1,1,-1,1,1,-1,-1,-
1),(1,-1,1,1,-1,1,-1,-1),(1,1,1,-1,-1,-1,-1,1)},          {(-1,-
1,1,1,1,-1,-1,1),(1,-1,-1,-1,1,1,-1,1),(1,-1,-1,1,-1,-
1,1,1),(1,1,-1,1,1,-1,-1,-1),(-1,-1,-1,1,1,1,1,-1),(-1,1,-1,-
1,1,-1,1,1)},          {(-1,-1,1,1,1,-1,-1,1),(1,-1,-1,-1,1,1,-

1,1),(1,-1,-1,1,-1,-1,1,1),(1,1,-1,1,1,-1,-1,-1),(-1,-1,-1,1,1,1,1,-1),(1,-1,1,1,-1,1,-1,-1)},     {(-1,-1,1,1,1,-1,-1,1),(1,-1,-1,-1,1,1,-1,1),(1,-1,-1,1,-1,-1,1,1),(1,1,-1,1,1,-1,-1,-1),(-1,1,-1,-1,1,-1,1,1),(1,1,1,-1,-1,-1,-1,1)},     {(-1,-1,1,1,1,-1,-1,1),(1,-1,-1,-1,1,1,-1,1),(1,-1,-1,1,-1,-1,1,1),(1,1,-1,1,1,-1,-1,-1),(1,-1,1,1,-1,1,-1,-1),(1,1,1,-1,-1,-1,-1,1)},   {(-1,-1,1,1,1,-1,-1,1),(1,-1,-1,1,-1,-1,1,1),(1,-1,-1,1,1,1,-1,-1),(1,1,-1,-1,1,-1,-1,1),(-1,-1,-1,-1,1,1,1,1),(-1,1,-1,1,1,-1,1,-1)},   {(-1,-1,1,1,1,-1,-1,1),(1,-1,-1,1,-1,-1,1,1),(1,-1,-1,1,1,1,-1,-1),(1,1,-1,-1,1,-1,-1,1),(-1,-1,-1,-1,1,1,1,1),(1,-1,1,-1,-1,1,-1,1)},     {(-1,-1,1,1,1,-1,-1,1),(1,-1,-1,1,-1,-1,1,1),(1,-1,-1,1,1,1,-1,-1),(1,1,-1,-1,1,-1,-1,1),(-1,1,-1,1,1,-1,1,-1),(1,1,1,1,-1,-1,-1,-1)},     {(-1,-1,1,1,1,-1,-1,1),(1,-1,-1,1,-1,-1,1,1),(1,-1,-1,1,1,1,-1,-1),(1,1,-1,-1,1,-1,-1,1),(1,-1,1,-1,-1,1,-1,1),(1,1,1,1,-1,-1,-1,-1)},   {(-1,1,-1,-1,1,1,1,-1),(-1,1,1,-1,-1,-1,1,1),(1,1,-1,-1,1,-1,-1,1),(1,1,1,-1,-1,1,-1,-1),(-1,-1,1,-1,1,1,-1,1),(-1,1,1,1,1,-1,-1,-1)},    {(-1,1,-1,-1,1,1,1,-1),(-1,1,1,-1,-1,-1,1,1),(1,1,-1,-1,1,-1,-1,1),(1,1,1,-1,-1,1,-1,-1),(-1,-1,1,-1,1,1,-1,1),(1,-1,-1,-1,-1,1,1,1)},     {(-1,1,-1,-1,1,1,1,-1),(-1,1,1,-1,-1,-1,1,1),(1,1,-1,-1,1,-1,-1,1),(1,1,1,-1,-1,1,-1,-1),(-1,1,1,1,1,-1,-1,-1),(1,1,-1,1,-1,1,-1,-1)},              {(-1,1,-1,-1,1,1,1,-1),(-1,1,1,-1,-1,-1,1,1),(1,1,-1,-1,1,-1,-1,1),(1,1,1,-1,-1,1,-1,-1),(1,-1,-1,-1,-1,1,1,1),(1,1,-1,1,-1,1,-1,-1)},     {(-1,1,-1,-1,1,1,1,-1),(-1,1,1,1,-1,-1,1,-1),(-1,1,1,1,-1,-1,1,-1),(1,1,-1,1,1,-1,-1,-1),(1,1,1,-1,-1,1,-1,-1),(1,-1,-1,1,-1,1,1,-1),(1,1,-1,-1,-1,-1,1,1)},              {(-1,1,-1,-1,1,1,1,-1),(-1,1,1,1,-1,-1,1,-1),(1,1,-1,1,1,-1,-1,-1),(1,1,1,-1,-1,1,-1,-1),(-1,1,1,-1,1,-1,-1,1),(1,1,-1,-1,-1,-1,1,1)},        {(-1,1,-1,-1,1,1,1,-1),(-1,1,1,1,-1,-1,1,-1),(1,1,-1,1,1,-1,-1,-1),(1,1,1,-1,-1,1,-1,-1),(1,-1,-1,1,-1,1,1,-1),(1,1,-1,-1,-1,-1,1,1)},        {(-1,1,-1,-

1,1,1,1,-1),(1,-1,-1,-1,1,1,-1,1),(1,1,-1,1,1,-1,-1,-1),(1,1,1,-1,-1,1,-1,-1),(-1,-1,1,1,1,1,-1,-1),(-1,1,1,-1,1,-1,-1,1)}, {(-1,1,-1,-1,1,1,1,-1),(1,-1,-1,-1,1,1,-1,1),(1,1,-1,1,1,-1,-1,-1),(1,1,1,-1,-1,1,-1,-1),(-1,-1,1,1,1,1,-1,-1),(1,-1,-1,1,-1,1,1,-1)}, {(-1,1,-1,-1,1,1,1,-1),(1,-1,-1,-1,1,1,-1,1),(1,1,-1,1,1,-1,-1,-1),(1,1,1,-1,-1,1,-1,-1),(-1,1,1,-1,1,-1,-1,1),(1,1,-1,-1,-1,-1,1,1)}, {(-1,1,-1,-1,1,1,1,-1),(1,-1,-1,-1,1,1,-1,1),(1,1,-1,1,1,-1,-1,-1),(1,1,1,-1,-1,1,-1,-1),(1,-1,-1,1,-1,1,1,-1),(1,1,-1,-1,-1,-1,1,1)}, {(-1,1,-1,-1,1,1,1,-1),(1,-1,-1,1,1,1,-1,-1),(1,1,-1,-1,1,-1,-1,1),(1,1,1,-1,-1,1,-1,-1),(-1,-1,1,-1,1,1,-1,1),(-1,1,1,1,1,-1,-1,-1)}, {(-1,1,-1,-1,1,1,1,-1),(1,-1,-1,1,1,1,-1,-1),(1,1,-1,-1,1,-1,-1,1),(1,1,1,-1,-1,1,-1,-1),(-1,-1,1,-1,1,1,-1,1),(1,-1,-1,-1,-1,1,1,1)}, {(-1,1,-1,-1,1,1,1,-1),(1,-1,-1,1,1,1,-1,-1),(1,1,-1,-1,1,-1,-1,1),(1,1,1,-1,-1,1,-1,-1),(-1,1,1,1,1,-1,-1,-1),(1,1,-1,1,-1,-1,1,-1)}, {(-1,1,1,-1,-1,-1,1,1),(-1,1,1,-1,1,1,-1,-1),(1,1,-1,-1,-1,1,1,-1),(1,1,-1,-1,1,-1,-1,1),(-1,-1,-1,-1,1,1,1,1),(-1,1,-1,1,1,-1,1,-1)}, {(-1,1,1,-1,-1,-1,1,1),(-1,1,1,-1,1,1,-1,-1),(1,1,-1,-1,-1,1,1,-1),(1,1,-1,-1,1,-1,-1,1),(-1,-1,-1,-1,1,1,1,1),(1,-1,1,-1,-1,1,-1,1)}, {(-1,1,1,-1,-1,-1,1,1),(-1,1,1,-1,1,1,-1,-1),(1,1,-1,-1,-1,1,1,-1),(1,1,-1,-1,1,-1,-1,1),(-1,-1,-1,1,1,-1,1,-1),(1,1,1,1,-1,-1,-1,-1)}, {(-1,1,1,-1,-1,-1,1,1),(-1,1,1,-1,1,1,-1,-1),(1,1,-1,-1,-1,1,1,-1),(1,1,-1,-1,1,-1,-1,1),(1,-1,1,-1,-1,1,-1,1),(1,1,1,1,-1,-1,-1,-1)}, {(-1,1,1,-1,-1,-1,1,1),(1,-1,-1,1,-1,-1,1,1),(1,1,-1,-1,-1,1,1,-1),(1,1,-1,-1,1,-1,-1,1),(-1,-1,-1,-1,1,1,1,1),(-1,1,-1,1,1,-1,1,-1)}, {(-1,1,1,-1,-1,-1,1,1),(1,-1,-1,1,-1,-1,1,1),(1,1,-1,-1,-1,1,1,-1),(1,1,-1,-1,1,-1,-1,1),(-1,-1,-1,-1,1,1,1,1),(1,-1,1,-1,-1,1,-1,1)}, {(-1,1,1,-1,-1,-1,1,1),(1,-1,-1,1,-1,-1,1,1),(1,1,-1,-1,-1,1,1,-1),(1,1,-1,-1,1,-1,-1,1),(-1,1,-1,1,1,-1,1,-1),(1,1,1,1,-1,-

1,-1,-1) }, {(-1,1,1,-1,-1,-1,1,1),(1,-1,-1,1,-1,-1,1,1),(1,1,-1,-1,1,1,1,-1),(1,1,-1,-1,1,-1,-1,1),(1,-1,1,-1,-1,1,-1,1),(1,1,1,1,-1,-1,-1,-1)}, {(-1,1,1,-1,-1,-1,1,1),(1,-1,1,1,-1,-1,-1,1),(1,1,-1,-1,1,-1,-1,1),(1,1,1,-1,-1,1,-1,-1),(-1,-1,1,-1,1,1,-1,1),(-1,1,1,1,1,-1,-1,-1)}, {(-1,1,1,-1,-1,-1,1,1),(1,-1,1,1,-1,-1,-1,1),(1,1,-1,-1,1,-1,-1,1),(1,1,1,-1,-1,1,-1,-1),(-1,-1,1,-1,1,1,-1,1),(1,-1,-1,-1,-1,1,1,1)}, {(-1,1,1,-1,-1,-1,1,1),(1,-1,1,1,-1,-1,-1,1),(1,1,-1,-1,1,-1,-1,1),(1,1,1,-1,-1,1,-1,-1),(-1,1,1,1,1,-1,-1,-1),(1,1,-1,1,-1,-1,1,-1)}, {(-1,1,1,-1,-1,-1,1,1),(1,-1,1,1,-1,-1,-1,1),(1,1,-1,-1,1,-1,-1,1),(1,1,1,-1,-1,1,-1,-1),(1,-1,-1,-1,-1,1,1,1),(1,1,-1,1,-1,-1,1,-1)}, {(-1,1,1,-1,1,1,-1,-1),(-1,1,1,1,-1,-1,1,-1),(1,1,-1,-1,-1,1,1,-1),(1,1,-1,1,1,-1,-1,-1),(-1,-1,-1,1,1,1,1,-1),(-1,1,-1,-1,1,-1,1,1)}, {(-1,1,1,-1,1,1,-1,-1),(-1,1,1,1,-1,-1,1,-1),(1,1,-1,-1,-1,1,1,-1),(1,1,-1,1,1,-1,-1,-1),(-1,-1,-1,1,1,1,1,-1),(1,-1,1,1,-1,1,-1,-1)}, {(-1,1,1,-1,1,1,-1,-1),(-1,1,1,1,-1,-1,1,-1),(1,1,-1,-1,-1,1,1,-1),(1,1,-1,1,1,-1,-1,-1),(-1,1,-1,-1,1,-1,1,1),(1,1,1,-1,-1,-1,-1,1)}, {(-1,1,1,-1,1,1,-1,-1),(-1,1,1,1,-1,-1,1,-1),(1,1,-1,-1,-1,1,1,-1),(1,1,-1,1,1,-1,-1,-1),(1,-1,1,1,-1,1,-1,-1),(1,1,1,-1,-1,-1,-1,1)}, {(-1,1,1,-1,1,1,-1,-1),(1,-1,-1,1,1,1,-1,-1),(1,1,-1,-1,1,1,-1,-1),(1,1,-1,1,1,-1,-1,-1),(-1,-1,-1,1,1,1,1,-1),(1,-1,1,1,-1,1,-1,-1)}, {(-1,1,1,-1,1,1,-1,-1),(1,-1,-1,-1,1,1,-1,1),(1,1,-1,-1,-1,1,1,-1),(1,1,-1,1,1,-1,-1,-1),(1,-1,1,1,-1,1,-1,-1),(1,1,1,-1,-1,-1,-1,1)}, {(-1,1,1,-1,1,1,-1,-1),(1,-1,-1,1,1,1,-1,-1),(1,1,-1,-1,1,-1,-1,1),(-1,-1,-1,-1,1,1,1,1),(-1,1,-1,1,1,-1,1,-1)}, {(-1,1,1,-1,1,1,-1,-1),(1,-1,-1,1,1,1,-1,-1),(1,1,-1,-1,-1,1,1,-1),(1,1,-1,-1,1,-1,-1,1),(-1,-1,-1,-1,1,1,1,1),(-1,1,-

1,1,1,1,1),(1,-1,1,-1,-1,1,-1,1)},  {(-1,1,1,-1,1,1,-1,-1),(1,-1,-1,1,1,1,-1,-1),(1,1,-1,-1,-1,1,1,-1),(1,1,-1,-1,1,-1,-1,1),(-1,1,-1,1,1,-1,1,-1),(1,1,1,1,-1,-1,-1,-1)},  {(-1,1,1,-1,1,1,-1,-1),(1,-1,-1,1,1,1,-1,-1),(1,1,-1,-1,-1,1,1,-1),(1,1,-1,-1,1,-1,-1,1),(1,-1,1,-1,-1,1,-1,1),(1,1,1,1,-1,-1,-1,-1)},  {(-1,1,1,1,-1,-1,1,-1),(1,-1,-1,1,-1,-1,1,1),(1,1,-1,-1,1,1,-1,-1),(1,1,-1,1,1,-1,-1,-1),(-1,-1,-1,1,1,1,1,-1),(-1,1,-1,-1,1,-1,1,1)},  {(-1,1,1,1,-1,-1,1,-1),(1,-1,-1,1,-1,-1,1,1),(1,1,-1,-1,-1,1,1,-1),(1,1,-1,1,1,-1,-1,-1),(-1,-1,-1,1,1,1,1,-1),(1,-1,1,1,-1,1,-1,-1)},  {(-1,1,1,1,-1,-1,1,-1),(1,-1,-1,1,-1,-1,1,1),(1,1,-1,-1,-1,1,1,-1),(1,1,-1,1,1,-1,-1,-1),(-1,1,-1,-1,1,-1,1,1),(1,1,1,-1,-1,-1,-1,1)},  {(-1,1,1,1,-1,-1,1,-1),(1,-1,-1,1,-1,-1,1,1),(1,1,-1,-1,-1,1,1,-1),(1,1,-1,1,1,-1,-1,-1),(1,-1,1,1,-1,1,-1,-1),(1,1,1,-1,-1,-1,-1,1)},  {(-1,1,1,1,-1,-1,1,-1),(1,-1,1,1,-1,-1,-1,1),(1,1,-1,1,1,-1,-1,-1),(1,1,1,-1,-1,1,-1,-1),(-1,-1,1,1,1,1,-1,-1),(-1,1,1,-1,1,-1,-1,1)},  {(-1,1,1,1,-1,-1,1,-1),(1,-1,1,1,-1,-1,-1,1),(1,1,-1,1,1,-1,-1,-1),(1,1,1,-1,-1,1,-1,-1),(-1,-1,1,1,1,1,-1,-1),(1,-1,-1,1,-1,1,1,-1)},  {(-1,1,1,1,-1,-1,1,-1),(1,-1,1,1,-1,-1,-1,1),(1,1,-1,1,1,-1,-1,-1),(1,1,1,-1,-1,1,-1,-1),(-1,1,1,-1,1,-1,-1,1),(1,1,-1,-1,-1,-1,1,1)},  {(-1,1,1,1,-1,-1,1,-1),(1,-1,1,1,-1,-1,-1,1),(1,1,-1,1,1,-1,-1,-1),(1,1,1,-1,-1,1,-1,-1),(1,-1,-1,1,-1,1,1,-1),(1,1,-1,-1,-1,-1,1,1)},  {(1,-1,-1,-1,1,1,-1,1),(1,-1,-1,1,-1,-1,1,1),(1,1,-1,-1,1,1,-1,-1),(1,1,-1,1,1,-1,-1,-1),(-1,-1,-1,1,1,1,1,-1),(-1,1,-1,-1,1,-1,1,1)},  {(1,-1,-1,-1,1,1,-1,1),(1,-1,-1,1,-1,-1,1,1),(1,1,-1,-1,-1,1,1,-1),(1,1,-1,1,1,-1,-1,-1),(-1,-1,-1,1,1,1,1,-1),(1,-1,1,1,-1,1,-1,-1)},  {(1,-1,-1,-1,1,1,-1,1),(1,-1,-1,1,-1,-1,1,1),(1,1,-1,-1,-1,1,1,-1),(1,1,-1,1,1,-1,-1,-1),(-1,1,-1,-1,1,-1,1,1),(1,1,1,-1,-1,-1,-1,1)},  {(1,-1,-1,-1,1,1,-1,1),(1,-1,1,1,-1,-1,-1,1),(1,1,-1,1,1,-1,-1,-1),(1,1,1,-1,-1,1,-1,-1),(-1,-1,1,1,1,1,-1,-1),(-

1,1,1,-1,1,-1,-1,1)}, {(1,-1,-1,-1,1,1,-1,1),(1,-1,1,1,-1,-1,-1,1),(1,1,-1,1,1,-1,-1,-1),(1,1,1,-1,-1,1,-1,-1),(-1,-1,1,1,1,1,-1,-1),(1,-1,-1,1,-1,1,1,-1)}, {(1,-1,-1,-1,1,1,-1,1),(1,-1,1,1,-1,-1,-1,1),(1,1,-1,1,1,-1,-1,-1),(1,1,1,-1,-1,1,-1,-1),(-1,1,1,-1,1,-1,-1,1),(1,1,-1,-1,-1,-1,1,1)}, {(1,-1,-1,-1,1,1,-1,1),(1,-1,1,1,-1,-1,-1,1),(1,1,-1,1,1,-1,-1,-1),(1,1,1,-1,-1,1,-1,-1),(1,-1,-1,1,-1,1,1,-1),(1,1,-1,-1,-1,-1,1,1)}, {(1,-1,-1,1,-1,-1,1,1),(1,-1,-1,1,1,1,-1,-1),(1,1,-1,-1,-1,1,1,-1),(1,1,-1,-1,1,-1,-1,1),(-1,-1,-1,-1,1,1,1,1),(-1,1,-1,1,1,-1,1,-1)}, {(1,-1,-1,1,-1,-1,1,1),(1,-1,-1,1,1,1,-1,-1),(1,1,-1,-1,-1,1,1,-1),(1,1,-1,-1,1,-1,-1,1),(-1,-1,-1,-1,1,1,1,1),(1,-1,1,-1,-1,1,-1,1)}, {(1,-1,-1,1,-1,-1,1,1),(1,-1,-1,1,1,1,-1,-1),(1,1,-1,-1,-1,1,1,-1),(1,1,-1,-1,1,-1,-1,1),(-1,1,-1,1,1,-1,1,-1),(1,1,1,1,-1,-1,-1,-1)}, {(1,-1,-1,1,-1,-1,1,1),(1,-1,-1,1,1,1,-1,-1),(1,1,-1,-1,-1,1,1,-1),(1,1,-1,-1,1,-1,-1,1),(1,-1,1,-1,-1,1,-1,1),(1,1,1,1,-1,-1,-1,-1)}, {(1,-1,-1,1,1,1,-1,-1),(1,-1,1,1,-1,-1,-1,1),(1,1,-1,-1,1,-1,-1,1),(1,1,1,-1,-1,1,-1,-1),(-1,-1,1,-1,1,1,-1,1),(-1,1,1,1,1,-1,-1,-1)}, {(1,-1,-1,1,1,1,-1,-1),(1,-1,1,1,-1,-1,-1,1),(1,1,-1,-1,1,-1,-1,1),(1,1,1,-1,-1,1,-1,-1),(-1,-1,1,-1,1,1,-1,1),(1,-1,-1,-1,-1,1,1,1)}, {(1,-1,-1,1,1,1,-1,-1),(1,-1,1,1,-1,-1,-1,1),(1,1,-1,-1,1,-1,-1,1),(1,1,1,-1,-1,1,-1,-1),(-1,1,1,1,1,-1,-1,-1),(1,1,-1,1,-1,-1,1,-1)}, {(1,-1,-1,1,1,1,-1,-1),(1,-1,1,1,-1,-1,-1,1),(1,1,-1,-1,1,-1,-1,1),(1,1,1,-1,-1,1,-1,-1),(1,-1,-1,-1,-1,1,1,1),(1,1,-1,1,-1,-1,1,-1)}, {(-1,-1,-1,-1,1,1,1,1),(-1,-1,1,1,1,1,-1,-1),(-1,1,-1,1,1,-1,1,-1),(-1,1,1,-1,1,-1,-1,1),(-1,-1,1,1,-1,-1,1,1),(-1,1,1,-1,-1,1,1,-1)}, {(-1,-1,-1,-1,1,1,1,1),(-1,-1,1,1,1,1,-1,-1),(-1,1,-1,1,1,-1,1,-1),(-1,1,1,-1,1,-1,-1,1),(-1,-1,1,1,-1,-1,1,1),(1,-1,-1,1,1,-1,-1,1)}, {(-1,-1,-1,-1,1,1,1,1),(-1,-1,1,1,1,1,-1,-1),(-1,1,-1,1,1,-1,1,-1),(-1,1,1,-1,1,-1,-1,1),(-1,1,1,-1,-1,1,1,-1),(1,1,-1,-1,1,1,-1,-1)}, {(-1,-1,-1,-1,1,1,1,1),(-1,-1,1,1,1,1,-1,-1),(-1,1,-1,1,1,-1,1,-1),(-1,1,1,-1,1,-1,-1,1),(1,-1,-1,1,1,-1,-

1,1),(1,1,-1,-1,1,1,-1,-1)},         {(-1,-1,-1,-1,1,1,1,1),(-1,-1,1,1,1,1,-1,-1),(-1,1,-1,1,1,-1,1,-1),(1,-1,-1,1,-1,1,1,-1),(-1,-1,1,1,-1,-1,1,1),(-1,1,1,-1,-1,1,1,-1)},     {(-1,-1,-1,-1,1,1,1,1),(-1,-1,1,1,1,1,-1,-1),(-1,1,-1,1,1,-1,1,-1),(1,-1,-1,1,-1,1,1,-1),(-1,-1,1,1,-1,-1,1,1),(1,-1,-1,1,1,-1,-1,1)},    {(-1,-1,-1,-1,1,1,1,1),(-1,-1,1,1,1,1,-1,-1),(-1,1,-1,1,1,-1,1,-1),(1,-1,-1,1,-1,1,1,-1),(-1,1,1,-1,-1,1,1,-1),(1,1,-1,-1,1,1,-1,-1)},   {(-1,-1,-1,-1,1,1,1,1),(-1,-1,1,1,1,1,-1,-1),(-1,1,-1,1,1,-1,1,-1),(1,-1,-1,1,-1,1,1,-1),(1,-1,-1,1,1,-1,-1,1),(1,1,-1,-1,1,1,-1,-1)},         {(-1,-1,-1,-1,1,1,1,1),(-1,-1,1,1,1,1,-1,-1),(-1,1,1,-1,1,-1,-1,1),(1,-1,1,-1,-1,1,-1,1),(-1,-1,1,1,-1,-1,1,1),(-1,1,1,-1,-1,1,1,-1)},     {(-1,-1,-1,-1,1,1,1,1),(-1,-1,1,1,1,1,-1,-1),(-1,1,1,-1,1,-1,-1,1),(1,-1,1,-1,-1,1,-1,1),(-1,1,1,-1,-1,1,1,-1),(1,1,-1,-1,1,1,-1,-1)},         {(-1,-1,-1,-1,1,1,1,1),(-1,-1,1,1,1,1,-1,-1),(-1,1,1,-1,1,-1,-1,1),(1,-1,1,-1,-1,1,-1,1),(1,-1,-1,1,1,-1,-1,1),(1,1,-1,-1,1,1,-1,-1)},     {(-1,-1,-1,-1,1,1,1,1),(-1,-1,1,1,1,1,-1,-1),(1,-1,-1,1,-1,1,1,-1),(1,-1,1,-1,-1,1,-1,1),(-1,-1,1,1,-1,-1,1,1),(-1,1,1,-1,-1,1,1,-1)},   {(-1,-1,-1,-1,1,1,1,1),(-1,-1,1,1,1,1,-1,-1),(1,-1,-1,1,-1,1,1,-1),(1,-1,1,-1,-1,1,-1,1),(-1,-1,1,1,-1,-1,1,1),(1,-1,-1,1,1,-1,-1,1)},        {(-1,-1,-1,-1,1,1,1,1),(-1,-1,1,1,1,1,-1,-1),(1,-1,-1,1,-1,1,1,-1),(1,-1,1,-1,-1,1,-1,1),(-1,1,1,-1,-1,1,1,-1),(1,1,-1,-1,1,1,-1,-1)},    {(-1,-1,-1,-1,1,1,1,1),(-1,-1,1,1,1,1,-1,-1),(1,-1,-1,1,-1,1,1,-1),(1,-1,1,-1,-1,1,-1,1),(1,-1,-1,1,1,-1,-1,1),(1,1,-1,-1,1,1,-1,-1)},     {(-1,-1,-1,-1,1,1,1,1),(-1,1,-1,1,1,-1,1,-1),(-1,1,1,-1,1,-1,-1,1),(1,1,-1,-1,-1,-1,1,1),(-1,-1,1,1,-1,-1,1,1),(1,-1,-1,1,1,-1,-1,1)},    {(-1,-1,-1,-1,1,1,1,1),(-1,1,-1,1,1,-1,1,-1),(-1,1,1,-1,1,-1,-1,1),(1,1,-1,-1,-1,-1,1,1),(-

1,1,1,-1,-1,1,1,-1),(1,1,-1,-1,1,1,-1,-1)}, {(-1,-1,-1,-1,1,1,1,1),(-1,1,-1,1,1,-1,1,-1),(-1,1,1,-1,1,-1,-1,1),(1,1,-1,-1,-1,-1,1,1),(1,-1,-1,1,1,-1,-1,1),(1,1,-1,-1,1,1,-1,-1)}, {(-1,-1,-1,-1,1,1,1,1),(-1,1,-1,1,1,-1,1,-1),(1,-1,-1,1,-1,1,1,-1),(1,1,-1,-1,-1,-1,1,1),(-1,-1,1,1,-1,-1,1,1),(-1,1,1,-1,-1,1,1,-1)}, {(-1,-1,-1,-1,1,1,1,1),(-1,1,-1,1,1,-1,1,-1),(1,-1,-1,1,-1,1,1,-1),(1,1,-1,-1,-1,-1,1,1),(-1,-1,1,1,-1,-1,1,1),(1,-1,-1,1,1,-1,-1,1)}, {(-1,-1,-1,-1,1,1,1,1),(-1,1,-1,1,1,-1,1,-1),(1,-1,-1,1,-1,1,1,-1),(1,1,-1,-1,-1,-1,1,1),(-1,1,1,-1,-1,1,1,-1),(1,1,-1,-1,1,1,-1,-1)}, {(-1,-1,-1,-1,1,1,1,1),(-1,1,-1,1,1,-1,1,-1),(1,-1,-1,1,-1,1,1,-1),(1,1,-1,-1,-1,-1,1,1),(1,-1,-1,1,1,-1,-1,1),(1,1,-1,-1,1,1,-1,-1)}, {(-1,-1,-1,-1,1,1,1,1),(-1,1,1,-1,1,-1,-1,1),(1,-1,1,-1,-1,1,-1,1),(1,1,-1,-1,-1,-1,1,1),(-1,-1,1,1,-1,-1,1,1),(-1,1,1,-1,-1,1,1,-1)}, {(-1,-1,-1,-1,1,1,1,1),(-1,1,1,-1,1,-1,-1,1),(1,-1,1,-1,-1,1,-1,1),(1,1,-1,-1,-1,-1,1,1),(-1,-1,1,1,-1,-1,1,1),(1,-1,-1,1,1,-1,-1,1)}, {(-1,-1,-1,-1,1,1,1,1),(-1,1,1,-1,1,-1,-1,1),(1,-1,1,-1,-1,1,-1,1),(1,1,-1,-1,-1,-1,1,1),(-1,-1,1,1,-1,-1,1,1),(-1,1,1,-1,-1,1,1,-1)}, {(-1,-1,-1,-1,1,1,1,1),(-1,1,1,-1,1,-1,-1,1),(1,-1,1,-1,-1,1,-1,1),(1,1,-1,-1,-1,-1,1,1),(1,-1,-1,1,1,-1,-1,1),(1,1,-1,-1,1,1,-1,-1)}, {(-1,-1,-1,-1,1,1,1,1),(1,-1,-1,1,-1,1,1,-1),(1,-1,1,-1,-1,1,-1,1),(1,1,-1,-1,-1,-1,1,1),(-1,-1,1,1,-1,-1,1,1),(-1,1,1,-1,-1,1,1,-1)}, {(-1,-1,-1,-1,1,1,1,1),(1,-1,-1,1,-1,1,1,-1),(1,-1,1,-1,-1,1,-1,1),(1,1,-1,-1,-1,-1,1,1),(-1,-1,1,1,-1,-1,1,1),(1,-1,-1,1,1,-1,-1,1)}, {(-1,-1,-1,-1,1,1,1,1),(1,-1,-1,1,-1,1,1,-1),(1,-1,1,-1,-1,1,-1,1),(1,1,-1,-1,-1,-1,1,1),(-1,1,1,-1,-1,1,1,-1),(1,1,-1,-1,1,1,-1,-1)}, {(-1,-1,-1,1,1,1,1,-1),(-1,-1,1,-1,1,1,-1,1),(-1,1,-1,-1,1,-1,1,1),(-1,1,1,1,1,-1,-1,-1),(-1,-1,1,1,-1,-1,1,1),(-1,1,1,-1,-1,1,1,-1)}, {(-1,-1,-1,1,1,1,1,-1),(-1,-1,1,-1,1,1,-1,1),(-1,1,-1,-

1,1,-1,1,1),(-1,1,1,1,1,-1,-1,-1),(-1,-1,1,1,-1,-1,1,1),(1,-1,-1,1,1,-1,-1,1)}, {(-1,-1,-1,1,1,1,1,-1),(-1,-1,1,-1,1,1,-1,1),(-1,1,-1,-1,1,-1,1,1),(-1,1,1,1,1,-1,-1,-1),(-1,1,1,-1,-1,1,1,-1),(1,1,-1,-1,1,1,-1,-1)}, {(-1,-1,-1,1,1,1,1,-1),(-1,-1,1,-1,1,1,-1,1),(-1,1,-1,-1,1,-1,1,1),(-1,1,1,1,1,-1,-1,-1),(1,-1,-1,1,1,-1,-1,1),(1,1,-1,-1,1,1,-1,-1)}, {(-1,-1,-1,1,1,1,1,-1),(-1,-1,1,-1,1,1,-1,1),(-1,1,-1,-1,1,-1,1,1),(1,-1,-1,-1,1,1,1),(-1,-1,1,1,-1,-1,1,1),(-1,1,1,-1,-1,1,1,-1)}, {(-1,-1,-1,1,1,1,1,-1),(-1,-1,1,-1,1,1,-1,1),(-1,1,-1,-1,1,-1,1,1),(1,-1,-1,-1,-1,1,1,1),(-1,-1,1,1,-1,-1,1,1),(1,-1,-1,1,1,-1,-1,1)}, {(-1,-1,-1,1,1,1,1,-1),(-1,-1,1,-1,1,1,-1,1),(-1,1,-1,-1,1,-1,1,1),(1,-1,-1,-1,-1,1,1,1),(-1,1,1,-1,-1,1,1,-1),(1,1,-1,-1,1,1,-1,-1)}, {(-1,-1,-1,1,1,1,1,-1),(-1,-1,1,-1,1,1,-1,1),(-1,1,-1,-1,1,-1,1,1),(1,-1,-1,-1,-1,1,1,1),(1,-1,-1,1,1,-1,-1,1),(1,1,-1,-1,1,1,-1,-1)}, {(-1,-1,-1,1,1,1,1,-1),(-1,-1,1,-1,1,1,-1,1),(-1,1,1,1,1,-1,-1,-1),(1,-1,1,1,-1,1,-1,-1),(-1,-1,1,1,-1,-1,1,1),(-1,1,1,-1,-1,1,1,-1)}, {(-1,-1,-1,1,1,1,1,-1),(-1,-1,1,-1,1,1,-1,1),(-1,1,1,1,1,-1,-1,-1),(1,-1,1,1,-1,1,-1,-1),(-1,-1,1,1,-1,-1,1,1),(1,-1,-1,1,1,-1,-1,1)}, {(-1,-1,-1,1,1,1,1,-1),(-1,-1,1,-1,1,1,-1,1),(-1,1,1,1,1,-1,-1,-1),(1,-1,1,1,-1,1,-1,-1),(-1,1,1,-1,-1,1,1,-1),(1,1,-1,-1,1,1,-1,-1)}, {(-1,-1,-1,1,1,1,1,-1),(-1,-1,1,-1,1,1,-1,1),(-1,1,1,1,1,-1,-1,-1),(1,-1,-1,1,1,-1,-1,-1),(1,-1,-1,1,1,-1,-1,1),(1,1,-1,-1,1,1,-1,-1)}, {(-1,-1,-1,1,1,1,1,-1),(-1,-1,1,-1,1,1,-1,1),(1,-1,-1,-1,-1,1,1,1),(1,-1,1,1,-1,1,-1,-1),(-1,-1,1,1,-1,-1,1,1),(-1,1,1,-1,-1,1,1,-1)}, {(-1,-1,-1,1,1,1,1,-1),(-1,-1,1,-1,1,1,-1,1),(1,-1,-1,-1,-1,1,1,1),(1,-1,1,1,-1,1,-1,-1),(-1,-1,1,1,-1,-1,1,1),(1,-1,-1,1,1,-1,-1,1)}, {(-1,-1,-1,1,1,1,1,-1),(-1,-1,1,-1,1,1,-1,1),(1,-1,-1,-1,-1,1,1,1),(1,-1,1,1,-1,1,-1,-1),(-1,1,1,-1,-1,1,1,-1),(1,1,-1,-1,1,1,-1,-1)}, {(-1,-1,-1,1,1,1,1,-1),(-1,-1,1,-1,1,1,-1,1),(1,-1,-1,-1,-1,1,1,1),(1,-1,1,1,-1,1,-1,-1),(-1,-1,1,1,-1,-1,1,1),(1,1,-1,-1,1,1,-1,-1)}, {(-1,-1,-1,1,1,1,1,-1),(-1,-1,1,-1,1,1,-1,1),(1,-1,-1,-1,-1,1,1,1),(1,-1,1,1,-1,1,-1,-1),(-1,-1,1,1,-1,-1,1,1),(1,-1,-1,1,1,-1,-1,1)}, {(-1,-1,-1,1,1,1,1,-1),(-1,-1,1,-1,1,1,-1,1),(1,-1,-1,-1,-1,1,1,1),(1,-1,1,1,-1,1,-1,-1),(-1,1,1,-1,-1,1,1,-1),(1,1,-1,-1,1,1,-1,-1)}, {(-1,-1,-1,1,1,1,1,-1),(-1,1,-1,-1,1,-1,1,1),(1,-1,-1,-1,-1,1,1,1),(1,-1,1,1,-1,1,-1,-1),(1,-1,-1,1,1,-1,-1,1),(1,1,-1,-1,1,1,-1,-1)}, {(-1,-1,-1,1,1,1,1,-1),(-1,1,-1,-1,1,-1,1,1),(-

1,1,1,1,1,-1,-1,-1),(1,1,-1,1,-1,-1,1,-1),(-1,-1,1,1,-1,-1,1,1),(-1,1,1,-1,-1,1,1,-1)}, {(-1,-1,-1,1,1,1,1,-1),(-1,1,-1,-1,1,-1,1,1),(-1,1,1,1,1,-1,-1,-1),(1,1,-1,1,-1,-1,1,-1),(-1,-1,1,1,-1,-1,1,1),(1,-1,-1,1,1,-1,-1,1)}, {(-1,-1,-1,1,1,1,1,-1),(-1,1,-1,-1,1,-1,1,1),(-1,1,1,1,1,-1,-1,-1),(1,1,-1,1,-1,-1,1,-1),(-1,1,1,-1,-1,1,1,-1),(1,1,-1,-1,1,1,-1,-1)}, {(-1,-1,-1,1,1,1,1,-1),(-1,1,-1,-1,1,-1,1,1),(-1,1,1,1,1,-1,-1,-1),(1,1,-1,1,-1,-1,1,-1),(1,-1,-1,1,1,-1,-1,1),(1,1,-1,-1,1,1,-1,-1)}, {(-1,-1,-1,1,1,1,1,-1),(-1,1,-1,-1,1,-1,1,1),(1,-1,-1,-1,-1,1,1,1),(1,1,-1,1,-1,-1,1,-1),(-1,-1,1,1,-1,-1,1,1),(-1,1,1,-1,-1,1,1,-1)}, {(-1,-1,-1,1,1,1,1,-1),(-1,1,-1,-1,1,-1,1,1),(1,-1,-1,-1,-1,1,1,1),(1,1,-1,1,-1,-1,1,-1),(-1,-1,1,1,-1,-1,1,1),(1,-1,-1,1,1,-1,-1,1)}, {(-1,-1,-1,1,1,1,1,-1),(-1,1,-1,-1,1,-1,1,1),(1,-1,-1,-1,-1,1,1,1),(1,1,-1,1,-1,-1,1,-1),(-1,1,1,-1,-1,1,1,-1),(1,1,-1,-1,1,1,-1,-1)}, {(-1,-1,-1,1,1,1,1,-1),(-1,1,-1,-1,1,-1,1,1),(1,-1,-1,-1,-1,1,1,1),(1,1,-1,1,-1,-1,1,-1),(1,-1,-1,1,1,-1,-1,1),(1,1,-1,-1,1,1,-1,-1)}, {(-1,-1,-1,1,1,1,1,-1),(-1,1,1,1,1,-1,-1,-1),(1,-1,1,1,-1,1,-1,-1),(1,1,-1,1,-1,-1,1,-1),(-1,-1,1,1,-1,-1,1,1),(-1,1,1,-1,-1,1,1,-1)}, {(-1,-1,-1,1,1,1,1,-1),(-1,1,1,1,1,-1,-1,-1),(1,-1,1,1,-1,1,-1,-1),(1,1,-1,1,-1,-1,1,-1),(-1,-1,1,1,-1,-1,1,1),(1,-1,-1,1,1,-1,-1,1)}, {(-1,-1,-1,1,1,1,1,-1),(-1,1,1,1,1,-1,-1,-1),(1,-1,1,1,-1,1,-1,-1),(1,1,-1,1,-1,-1,1,-1),(-1,1,1,-1,-1,1,1,-1),(1,1,-1,-1,1,1,-1,-1)}, {(-1,-1,-1,1,1,1,1,-1),(-1,1,1,1,1,-1,-1,-1),(1,-1,1,1,-1,1,-1,-1),(1,1,-1,1,-1,-1,1,-1),(1,-1,-1,1,1,-1,-1,1),(1,1,-1,-1,1,1,-1,-1)}, {(-1,-1,-1,1,1,1,1,-1),(1,-1,-1,-1,-1,1,1,1),(1,-1,1,1,-1,1,-1,-1),(1,1,-1,1,-1,-1,1,-1),(-1,-1,1,1,-1,-1,1,1),(-1,1,1,-1,-1,1,1,-1)}, {(-1,-1,-1,1,1,1,1,-1),(1,-1,-1,-1,-1,1,1,1),(1,-1,1,1,-1,1,-1,-1),(1,1,-1,1,-1,-1,1,-1),(-1,-1,1,1,-1,-1,1,1),(1,-1,-1,1,1,-1,-1,1)}, {(-1,-1,-1,1,1,1,1,-1),(1,-1,-1,-1,-1,1,1,1),(1,-1,1,1,-1,1,-1,-1),(1,1,-1,1,-1,-1,1,-1),(-1,1,1,-1,-1,1,1,-1),(1,1,-1,-1,1,1,-1,-1)}, {(-1,-1,

1,1,1,1,1,-1),(1,-1,-1,-1,-1,1,1,1),(1,-1,1,1,-1,1,-1,-1),(1,1,-1,1,-1,-1,1,-1),(1,-1,-1,1,1,-1,-1,1),(1,1,-1,-1,1,1,-1,-1)}, {(-1,-1,1,-1,1,1,-1,1),(-1,1,-1,-1,1,-1,1,1),(-1,1,1,1,1,-1,-1,-1),(1,1,1,-1,-1,-1,-1,1),(-1,-1,1,1,-1,-1,1,1),(-1,1,1,-1,-1,1,1,-1)}, {(-1,-1,1,-1,1,1,-1,1),(-1,1,-1,-1,1,-1,1,1),(-1,1,1,1,1,-1,-1,-1),(1,1,1,-1,-1,-1,-1,1),(-1,-1,1,1,-1,-1,1,1),(1,-1,-1,1,1,-1,-1,1)}, {(-1,-1,1,-1,1,1,-1,1),(-1,1,-1,-1,1,-1,1,1),(-1,1,1,1,1,-1,-1,-1),(1,1,1,-1,-1,-1,-1,1),(-1,1,1,-1,-1,1,1,-1),(1,1,-1,-1,1,1,-1,-1)}, {(-1,-1,1,-1,1,1,-1,1),(-1,1,-1,-1,1,-1,1,1),(-1,1,1,1,1,-1,-1,-1),(1,1,1,-1,-1,-1,-1,1),(1,-1,-1,1,1,-1,-1,1),(1,1,-1,1,1,-1,-1)}, {(-1,-1,1,-1,1,1,-1,1),(-1,1,-1,-1,1,-1,1,1),(1,-1,-1,-1,-1,1,1,1),(1,1,1,-1,-1,-1,-1,1),(-1,-1,1,1,-1,-1,1,1),(-1,1,1,-1,-1,1,1,-1)}, {(-1,-1,1,-1,1,1,-1,1),(-1,1,-1,-1,1,-1,1,1),(1,-1,-1,-1,-1,1,1,1),(1,1,1,-1,-1,-1,-1,1),(-1,-1,1,1,-1,-1,1,1),(1,-1,-1,1,1,-1,-1,1)}, {(-1,-1,1,-1,1,1,-1,1),(-1,1,-1,-1,1,-1,1,1),(1,-1,-1,-1,-1,1,1,1),(1,1,1,-1,-1,-1,-1,1),(-1,1,1,-1,-1,1,1,-1),(1,1,-1,-1,1,1,-1,-1)}, {(-1,-1,1,-1,1,1,-1,1),(-1,1,-1,-1,1,-1,1,1),(1,-1,-1,-1,-1,1,1,1),(1,1,1,-1,-1,-1,-1,1),(1,-1,-1,1,1,-1,-1,1),(1,1,-1,-1,1,1,-1,-1)}, {(-1,-1,1,-1,1,1,-1,1),(-1,1,1,1,1,-1,-1,-1),(1,-1,1,1,-1,1,-1,-1),(1,1,1,-1,-1,-1,-1,1),(-1,-1,1,1,-1,-1,1,1),(-1,1,1,-1,-1,1,1,-1)}, {(-1,-1,1,-1,1,1,-1,1),(-1,1,1,1,1,-1,-1,-1),(1,-1,1,1,-1,1,-1,-1),(1,1,1,-1,-1,-1,-1,1),(1,-1,-1,1,1,-1,-1,1),(1,1,-1,-1,1,1,-1,-1)}, {(-1,-1,1,-1,1,1,-1,1),(-1,1,1,1,1,-1,-1,-1),(1,-1,1,1,-1,1,-1,-1),(1,1,1,-1,-1,-1,-1,1),(-1,1,1,-1,-1,1,1,-1),(1,1,-1,-1,1,1,-1,-1)}, {(-1,-1,1,-1,1,1,-1,1),(1,-1,1,1,-1,1,-1,-1),(1,-1,-1,-1,-1,1,1,1),(1,1,1,-1,-1,-1,-1,1),(-1,-1,1,1,-1,-1,1,1),(-1,1,1,-1,-1,1,1,-1)}, {(-1,-1,1,-1,1,1,-1,1),(1,-1,-1,-1,-1,1,1,1),(1,-1,1,1,-1,1,-1,-1),(1,1,1,-1,-1,-1,-1,1),(-1,-1,1,1,-1,

1,1,1),(1,-1,-1,1,1,-1,-1,1)}, {(-1,-1,1,-1,1,1,-1,1),(1,-1,-1,-1,1,1,1),(1,-1,1,1,-1,1,-1,-1),(1,1,1,-1,-1,-1,-1,1),(-1,1,1,-1,-1,1,1,-1),(1,1,-1,-1,1,1,-1,-1)}, {(-1,-1,1,-1,1,1,-1,1),(1,-1,-1,-1,-1,1,1,1),(1,-1,1,1,-1,1,-1,-1),(1,1,1,-1,-1,-1,-1,1),(1,-1,-1,1,1,-1,-1,1),(1,1,-1,-1,1,1,-1,-1)}, {(-1,-1,1,1,1,1,-1,-1),(-1,1,-1,1,1,-1,1,-1),(-1,1,1,-1,1,-1,-1,1),(1,1,1,1,-1,-1,-1,-1),(-1,-1,1,1,-1,-1,1,1),(-1,1,1,-1,-1,1,1,-1)}, {(-1,-1,1,1,1,1,-1,-1),(-1,1,-1,1,1,-1,1,-1),(-1,1,1,-1,1,-1,-1,1),(1,1,1,1,-1,-1,-1,-1),(-1,-1,1,1,-1,-1,1,1),(1,-1,-1,1,1,-1,-1,1)}, {(-1,-1,1,1,1,1,-1,-1),(-1,1,-1,1,1,-1,1,-1),(-1,1,1,-1,1,-1,-1,1),(1,1,1,1,-1,-1,-1,-1),(-1,-1,1,1,-1,-1,1,1),(1,1,-1,-1,1,1,-1,-1)}, {(-1,-1,1,1,1,1,-1,-1),(-1,1,-1,1,1,-1,1,-1),(-1,1,1,-1,1,-1,-1,1),(1,1,1,1,-1,-1,-1,-1),(1,-1,-1,1,1,-1,-1,1),(1,1,-1,-1,1,1,-1,-1)}, {(-1,-1,1,1,1,1,-1,-1),(-1,1,-1,1,1,-1,1,-1),(-1,1,1,-1,1,-1,-1,1),(1,1,1,1,-1,-1,-1,-1),(-1,-1,1,1,-1,-1,1,1),(-1,1,1,-1,-1,1,1,-1)}, {(-1,-1,1,1,1,1,-1,-1),(-1,1,-1,1,1,-1,1,-1),(1,-1,-1,1,-1,1,1,-1),(1,1,1,1,-1,-1,-1,-1),(-1,-1,1,1,-1,-1,1,1),(1,-1,-1,1,1,-1,-1,1)}, {(-1,-1,1,1,1,1,-1,-1),(-1,1,-1,1,1,-1,1,-1),(1,-1,-1,1,-1,1,1,-1),(1,1,1,1,-1,-1,-1,-1),(-1,1,1,1,-1,-1,1,1,-1),(1,1,-1,-1,1,1,-1,-1)}, {(-1,-1,1,1,1,1,-1,-1),(-1,1,-1,1,1,-1,1,-1),(1,-1,-1,1,-1,1,1,-1),(1,1,1,1,-1,-1,-1,-1),(1,-1,-1,1,1,-1,-1,1),(1,1,-1,-1,1,1,-1,-1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,-1,1,1,-1,-1,1,1),(-1,1,1,-1,-1,1,1,-1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,-1,1,1,-1,-1,1,1),(1,-1,-1,1,1,-1,-1,1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,1,1,-1,-1,1,1,-1),(1,1,-1,-1,1,1,-1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,1,1),(1,-1,-1,1,1,-1,-1,1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,1,1),(1,1,-1,-1,1,1,-1,-1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,-1,1,1,-1,-1,1,1),(1,-1,-1,1,1,-1,-1,1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,1,1),(-1,1,1,-1,-1,1,1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,1,1),(1,1,-1,-1,1,1,-1,-1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(1,-1,-1,1,1,-1,-1,1),(1,1,-1,-1,1,1,-1,-1)}, {(-1,-1,1,1,1,1,-1,-1),(-1,1,1,-1,1,-1,-1,1),(1,-1,1,-1,-1,1,1,-1),(1,1,1,1,-1,-1,-1,-1),(-1,-1,1,1,-1,-1,1,1),(1,-1,-1,1,1,-1,-1,1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,1,1,-1,-1,1,1,-1),(1,-1,-1,1,1,-1,-1,1)}, {(-1,-1,1,1,1,1,-1,-1),(-1,1,1,-1,1,-1,-1,1),(1,-1,1,-1,-1,1,-1,1),(1,1,1,1,-1,-1,-1,-1),(-1,1,1,-1,-1,1,1,-1),(1,1,-1,-1,1,1,-1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(1,-1,-1,1,1,-1,-1,1),(1,1,-1,-1,1,1,-1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(1,-1,-1,1,1,-1,-1,1),(1,1,-1,-1,1,1,-1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,

1,1,1),(-1,1,1,-1,-1,1,1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,-1,1,1,-1,-1,1,1),(1,-1,-1,1,1,-1,-1,1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(-1,1,1,-1,-1,1,1,-1),(1,1,-1,-1,1,1,-1,-1)}, {(-1,-1,1,1,1,1,-1,-1),(1,-1,-1,1,-1,1,1,-1),(1,-1,1,-1,-1,1,-1,1),(1,1,1,1,-1,-1,-1,-1),(1,-1,-1,1,1,-1,-1,1),(1,1,-1,-1,1,1,-1,-1)}, {(-1,1,-1,-1,1,-1,1,1),(-1,1,1,1,1,-1,-1,-1),(1,1,-1,1,-1,-1,1,-1),(1,1,1,-1,-1,-1,-1,1),(-1,-1,1,1,-1,-1,1,1),(-1,1,1,-1,-1,1,1,-1)}, {(-1,1,-1,-1,1,-1,1,1),(-1,1,1,1,1,-1,-1,-1),(1,1,-1,1,-1,-1,1,-1),(1,1,1,-1,-1,-1,-1,1),(-1,-1,1,1,-1,-1,1,1),(1,-1,-1,1,1,-1,-1,1)}, {(-1,1,-1,-1,1,-1,1,1),(-1,1,1,1,1,-1,-1,-1),(1,1,-1,1,-1,-1,1,-1),(1,1,1,-1,-1,-1,-1,1),(-1,1,1,-1,-1,1,1,-1),(1,1,-1,-1,1,1,-1,-1)}, {(-1,1,-1,-1,1,-1,1,1),(-1,1,1,1,1,-1,-1,-1),(1,1,-1,1,-1,-1,1,-1),(1,1,1,-1,-1,-1,-1,1),(1,-1,-1,1,1,-1,-1,1),(1,1,-1,-1,1,1,-1,-1)}, {(-1,1,-1,-1,1,-1,1,1),(1,-1,-1,-1,-1,1,1,1),(1,1,-1,1,-1,-1,1,-1),(1,1,1,-1,-1,-1,-1,1),(-1,-1,1,1,-1,-1,1,1),(1,-1,-1,1,1,-1,-1,1)}, {(-1,1,-1,-1,1,-1,1,1),(1,-1,-1,-1,-1,1,1,1),(1,1,-1,1,-1,-1,1,-1),(1,1,1,-1,-1,-1,-1,1),(-1,1,1,-1,-1,1,1,-1),(1,1,-1,-1,1,1,-1,-1)}, {(-1,1,-1,-1,1,-1,1,1),(1,-1,-1,-1,-1,1,1,1),(1,1,-1,1,-1,-1,1,-1),(1,1,1,-1,-1,-1,-1,1),(1,-1,-1,1,1,-1,-1,1),(1,1,-1,-1,1,1,-1,-1)}, {(-1,1,-1,1,1,-1,1,-1),(-1,1,1,-1,1,-1,-1,1),(1,1,-1,-1,-1,-1,1,1),(1,1,1,1,-1,-1,-1,-1),(-1,-1,1,1,-1,-1,1,1),(-1,1,1,-1,-1,1,1,-1)}, {(-1,1,-1,1,1,-1,1,-1),(-1,1,1,-1,1,-1,-1,1),(1,1,-1,-1,-1,-1,1,1),(1,1,1,1,-1,-1,-1,-

1),(1,-1,-1,1,1,-1,-1,1),(1,1,-1,-1,1,1,-1,-1)},          {(-1,1,-1,1,1,-1,1,-1),(1,-1,-1,1,-1,1,1,-1),(1,1,-1,-1,-1,-1,1,1),(1,1,1,1,-1,-1,-1,-1),(-1,-1,1,1,-1,-1,1,1),(-1,1,1,-1,-1,1,1,-1)},          {(-1,1,-1,1,1,-1,1,-1),(1,-1,-1,1,-1,1,1,-1),(1,1,-1,-1,-1,-1,1,1),(1,1,1,1,-1,-1,-1,-1),(-1,-1,1,1,-1,-1,1,1),(1,-1,-1,1,1,-1,-1,1)},    {(-1,1,-1,1,1,-1,1,-1),(1,-1,-1,1,1,1,1,-1),(1,1,-1,-1,-1,-1,1,1),(1,1,1,1,-1,-1,-1,-1),(-1,1,1,-1,-1,1,1,-1),(1,1,-1,-1,1,1,-1,-1)},        {(-1,1,-1,1,1,-1,1,-1),(1,-1,-1,1,-1,1,1,-1),(1,1,-1,-1,-1,-1,1,1),(1,1,1,1,-1,-1,-1,-1),(1,-1,-1,1,1,-1,-1,1),(1,1,-1,-1,1,1,-1,-1)},    {(-1,1,1,-1,1,-1,-1,1),(1,-1,1,-1,-1,1,-1,1),(1,1,-1,-1,-1,-1,1,1),(1,1,1,1,-1,-1,-1,-1),(-1,-1,1,1,-1,-1,1,1),(-1,1,1,-1,-1,1,1,-1)},          {(-1,1,1,-1,1,-1,-1,1),(1,-1,1,-1,-1,1,-1,1),(1,1,-1,-1,-1,-1,1,1),(1,1,1,1,-1,-1,-1,-1),(-1,-1,1,1,-1,-1,1,1),(1,-1,-1,1,1,-1,-1,1)},    {(-1,1,1,-1,1,-1,-1,1),(1,-1,1,-1,-1,1,-1,1),(1,1,-1,-1,-1,-1,1,1),(1,1,1,1,-1,-1,-1,-1),(-1,1,1,-1,-1,1,1,-1),(1,1,-1,-1,1,1,-1,-1)},        {(-1,1,1,-1,1,-1,-1,1),(1,-1,1,-1,-1,1,-1,1),(1,1,-1,-1,-1,-1,1,1),(1,1,1,1,-1,-1,-1,-1),(1,-1,-1,1,1,-1,-1,1),(1,1,-1,-1,1,1,-1,-1)},          {(-1,1,1,1,1,-1,-1,-1),(1,-1,1,1,-1,1,-1,-1),(1,1,-1,1,-1,-1,1,-1),(1,1,1,-1,-1,-1,-1,1),(-1,-1,1,1,-1,-1,1,1),(-1,1,1,-1,-1,1,1,-1)},        {(-1,1,1,1,1,-1,-1,-1),(1,-1,1,1,-1,1,-1,-1),(1,1,-1,1,-1,-1,1,-1),(1,1,1,-1,-1,-1,-1,1),(-1,-1,1,1,-1,-1,1,1),(1,-1,-1,1,1,-1,-1,1)},          {(-1,1,1,1,1,-1,-1,-1),(1,-1,1,1,-1,1,-1,-1),(1,1,-1,1,-1,-1,1,-1),(1,1,1,-1,-1,-1,-1,1),(-1,1,1,-1,-1,1,1,-1),(1,1,-1,-1,1,1,-1,-1)},        {(-1,1,1,1,1,-1,-1,-1),(1,-1,1,1,-1,1,-1,-1),(1,1,-1,1,-1,-1,1,-1),(1,1,1,-1,-1,-1,-1,1),(-1,1,1,-1,-1,1,1,-1),(1,1,-1,-1,1,1,-1,-1)},        {(1,-1,-1,-1,-1,1,1,1),(1,-1,1,1,-1,1,-1,-1),(1,1,-1,1,-1,-1,1,-1),(1,1,1,-1,-1,-1,-1,1),(-1,-1,1,1,-1,-1,1,1),(-1,1,1,-1,-1,1,1,-1)},    {(1,-1,-1,-1,-1,1,1,1),(1,-1,1,1,-1,1,-1,-1),(1,1,-1,1,-1,-1,1,-1),(1,1,1,-1,-1,-1,-1,1),(-1,-1,1,1,-1,-1,1,1),(1,-1,-1,1,1,-1,-1,1)},    {(1,-1,-1,-1,-1,1,1,1),(1,-1,1,1,-1,1,-1,-1),(1,1,-

1,1,-1,-1,1,-1),(1,1,1,-1,-1,-1,-1,1),(-1,1,1,-1,-1,1,1,-1),(1,1,-1,-1,1,1,-1,-1)},    {(1,-1,-1,-1,-1,1,1,1),(1,-1,1,1,-1,1,-1,-1),(1,1,-1,1,-1,-1,1,-1),(1,1,1,-1,-1,-1,-1,1),(1,-1,-1,1,1,-1,-1,1),(1,1,-1,-1,1,1,-1,-1)},    {(1,-1,-1,1,-1,1,1,-1),(1,-1,1,-1,-1,1,-1,1),(1,1,-1,-1,-1,-1,1,1),(1,1,1,1,-1,-1,-1,-1),(-1,-1,1,1,-1,-1,1,1),(-1,1,1,-1,-1,1,1,-1)},    {(1,-1,-1,1,-1,1,1,-1),(1,-1,1,-1,-1,1,-1,1),(1,1,-1,-1,-1,-1,1,1),(1,1,1,1,-1,-1,-1,-1),(-1,-1,1,1,-1,-1,1,1),(1,-1,-1,1,1,-1,-1,1)},    {(1,-1,-1,1,-1,1,1,-1),(1,-1,1,-1,-1,1,-1,1),(1,1,-1,-1,-1,-1,1,1),(1,1,1,1,-1,-1,-1,-1),(-1,1,1,-1,-1,1,1,-1),(1,1,-1,-1,1,1,-1,-1)},    {(1,-1,-1,1,-1,1,1,-1),(1,-1,1,-1,-1,1,-1,1),(1,1,-1,-1,-1,-1,1,1),(1,1,1,1,-1,-1,-1,-1),(1,-1,-1,1,1,-1,-1,1),(1,1,-1,-1,1,1,-1,-1)}.

**FIG. 1(Prior Art)**

Input Signal → Channel Encoding Module **120** → Spectrum Spreading Module **122** → Modulator Module **126** → Analog Signal → antenna **128**

Orthogonal Code Generator **124** ↕ Spectrum Spreading Module **122**

100

EP 3 921 961 B1

200

Reconstructed Input Signal

Decoding Module
220

De-Spreading Module
222

Orthogonal Code Generator
224

Demodulator Module
226

228

CDMA

Analog Signal

FIG. 2 (Prior Art)

FIG. 3A

EP 3 921 961 B1

FIG. 3B

EP 3 921 961 B1

FIG. 3C

EP 3 921 961 B1

**FIG. 3D**

Initalization: Code Length — 410

↓

Generate Full Set Binary Codes — 412

↓

Calculate Individual Code Frequency Response — 414

↓

Candidate Code Grouping According Frequency Location & Number of Frequency Locations — 416

↓

Set Target code number $N_c = 2$ — 418

↓

420 — Search All Group? — Yes → Stop (430)

No

↓

Othogonal Code Search — 422

↓

424 — Orthogonal Code? — No →

Yes

↓

Update target code number $N_c = N_c + 1$ — 426

Save Orthogonal Code and $N_c$ — 428

400

FIG. 4

500

## Code Generator Module 504

| Full-set Code Generation Module | Frequency Response Calculation Module | Code Grouping Module | Code Searching Module |
|---|---|---|---|
| 504A | 504B | 504C | 504D |

Controller

502

510

Input Interface

506

## Memory 508

| Code Identifier Database | Orthogonal Code Database |
|---|---|
| 508A | 508B |

FIG. 5

FIG. 6

EP 3 921 961 B1

FIG. 7

EP 3 921 961 B1

**FIG. 8**

FIG. 9

EP 3 921 961 B1

# EP 3 921 961 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010107717 A